(19) **Europäisches Patentamt / European Patent Office / Office européen des brevets**

(11) **EP 3 973 168 B1**

(12) **EUROPEAN PATENT SPECIFICATION**

(45) Date of publication and mention
of the grant of the patent:
**20.05.2026 Bulletin 2026/21**

(51) International Patent Classification (IPC):
**F02G 1/055** (2006.01)    **F02G 1/045** (2006.01)
**F02G 1/047** (2006.01)

(21) Application number: **20775089.4**

(22) Date of filing: **20.05.2020**

(52) Cooperative Patent Classification (CPC):
**F02G 1/055; B33Y 80/00; F02G 1/0435;
F02G 1/044; F02G 1/045; F02G 1/047; F02G 1/057;
F23K 5/20; F23L 15/02; F23L 15/04; F23R 3/005;**
F02G 2244/00; F02G 2244/08; F02G 2254/10;
F02G 2255/10;                         (Cont.)

(86) International application number:
**PCT/US2020/033674**

(87) International publication number:
**WO 2020/242843 (03.12.2020 Gazette 2020/49)**

(54) **SYSTEM FOR ENERGY CONVERSION**

SYSTEM ZUR ENERGIEUMWANDLUNG

SYSTÈME DE CONVERSION D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2019 US 201962850599 P
21.05.2019 US 201962850623 P
21.05.2019 US 201962850678 P
21.05.2019 US 201962850692 P
21.05.2019 US 201962850701 P**

(43) Date of publication of application:
**30.03.2022 Bulletin 2022/13**

(73) Proprietor: **Hyliion Holdings Corp.
Cedar Park, TX 78613 (US)**

(72) Inventors:
• **MOOK, Joshua Tyler
Cincinnati, Ohio 45215 (US)**
• **GANSLER, Michael Thomas
Cincinnati, Ohio 45215 (US)**
• **WAUN, Scott Douglas
Cincinnati, Ohio 45215 (US)**
• **VANDEVOORDE, Kevin Michael
Cincinnati, Ohio 45215 (US)**
• **AKWARA, Aigbedion
Cincinnati, Ohio 45215 (US)**
• **NOTARNICOLA, Michael Robert
Cincinnati, Ohio 45215 (US)**
• **BELLARDI, Jason Joseph
Cincinnati, Ohio 45215 (US)**
• **SENNOUN, Mohammed El Hacin
Cincinnati, Ohio 45215 (US)**
• **THOMPSON, Mary Kathryn
Cincinnati, Ohio 45215 (US)**
• **OSAMA, Mohamed
85748 Garching b. Muenchen (DE)**
• **MARRERO ORTIZ, Victor Luis
Cincinnati, Ohio 45215 (US)**
• **NAGEL, Zachary William
Cincinnati, Ohio 45215 (US)**

(74) Representative: **Hafner & Kohl PartmbB
Schleiermacherstraße 25
90491 Nürnberg (DE)**

(56) References cited:
DE-A1- 102006 056 348     US-A- 5 065 579
US-A1- 2005 028 520       US-A1- 2015 280 628
US-B1- 7 171 811

(52) Cooperative Patent Classification (CPC): (Cont.)
F02G 2255/20; F02G 2256/02; F02G 2257/00;
F02G 2275/20; F02G 2275/40; Y02E 20/34;
Y02T 10/12

**Description**

FIELD

The present subject matter relates generally to energy conversion systems.

BACKGROUND

Power generation and distribution systems are challenged to provide improved power generation efficiency and/or lowered emissions. Furthermore, power generation and distribution systems are challenged to provide improved power output with lower transmission losses. Certain power generation and distribution systems are further challenged to improve sizing, portability, or power density generally while improving power generation efficiency, power output, and emissions.

Certain engine system arrangements, such as closed cycle engines, may offer some improved efficiency over other engine system arrangements. However, closed cycle engine arrangements, such as Stirling engines, are challenged to provide relatively larger power output or power density, or improved efficiency, relative to other engine arrangements. Closed cycle engines may suffer due to inefficient combustion, inefficient heat exchangers, inefficient mass transfer, heat losses to the environment, non-ideal behavior of the working fluid(s), imperfect seals, friction, pumping losses, and/or other inefficiencies and imperfections. As such, there is a need for improved closed cycle engines and system arrangements that may provide improved power output, improved power density, or further improved efficiency. Additionally, there is a need for an improved closed cycle engine that may be provided to improve power generation and power distribution systems.

Additionally, or alternatively, there is a general need for improved heat transfer devices, such as for heat engines, or as may be applied to power generation systems, distribution systems, propulsion systems, vehicle systems, or industrial or residential facilities.

Furthermore, there is a need for improved control system and methods for operating power generation systems as may include subsystems that collectively may provide improved power generation efficiency or reduced emissions.

US 2005/028520 A1 discloses a control system for a Stirling engine including the use of a synchronous power converter which is connected to the terminals of the alternator in a linear alternator/FPSE power system.

US 2015/280628 A1 discloses a digital power plant system that includes an electronic controller, a power source, and a thermal electronic engine for converting a power source to rotational or linear motion.

DE 10 2006 056 348 A1 discloses a thermal energy transformation device for electric current production system.

US 5 065 579 A discloses a control system for Stirling engines which includes a feedback control from a sensor for detecting oxygen levels in the exhaust from the combustion system of the Stirling engine.

US 7 171 811 B1 discloses a free-piston, Stirling machine having at least three pistons series connected in an alpha Stirling configuration.

BRIEF DESCRIPTION

The invention is defined by the subject-matter of the appended claims, wherein he description and drawings shall be used to interpret the claims. Aspects and advantages of the invention will be set forth in part in the following description, or may be obvious from the description, or may be learned through practice of the invention.

The invention is directed to a system for energy conversion in accordance with claim 1.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

BRIEF DESCRIPTION OF THE DRAWINGS

A full and enabling disclosure including the best mode, directed to one of ordinary skill in the art, is set forth in the specification, which makes reference to the appended figures, in which:

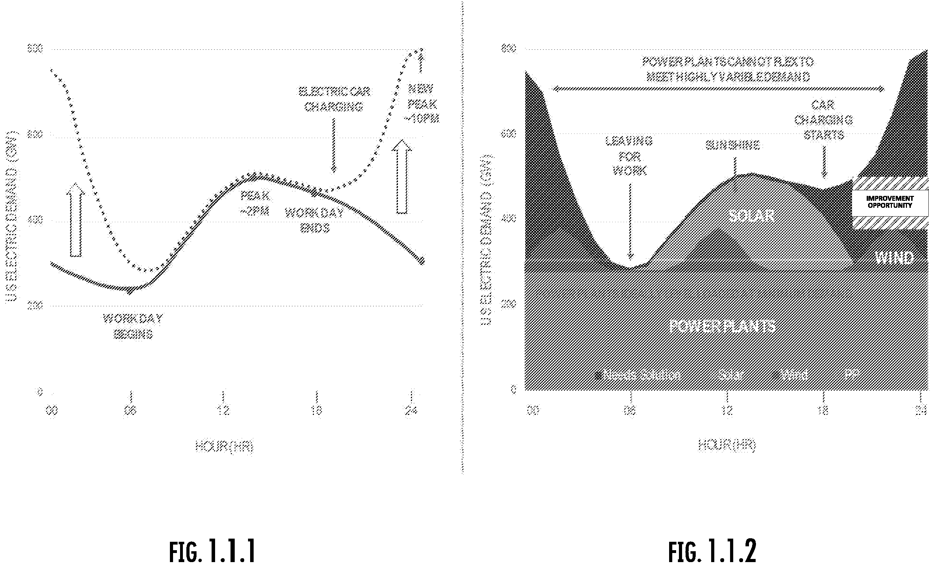

FIG. 1.1.1 is a graph depicting power demand as a function of time of day;
FIG. 1.1.2 is a graph depicting power demand versus energy supply from various power generation and distribution systems and a forecasted gap in supply and demand brought to power generation and distribution by an increase in electric load demand;

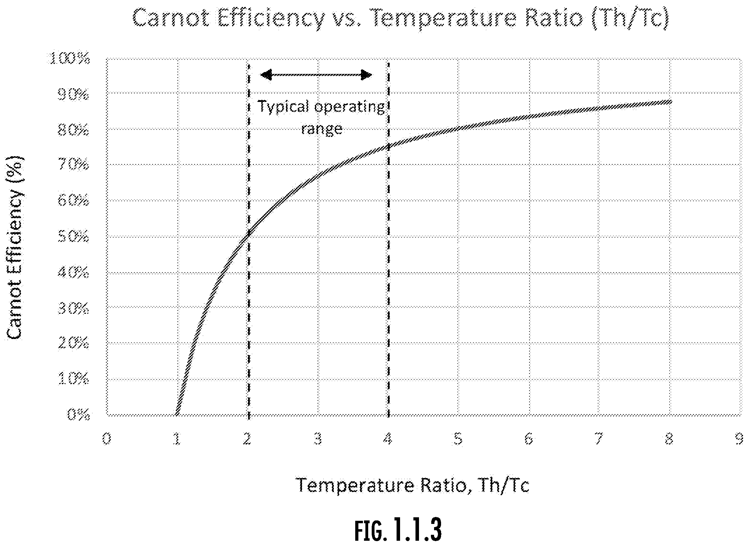

FIG. 1.1.3 is a graph depicting Carnot efficiency versus temperature ratio;

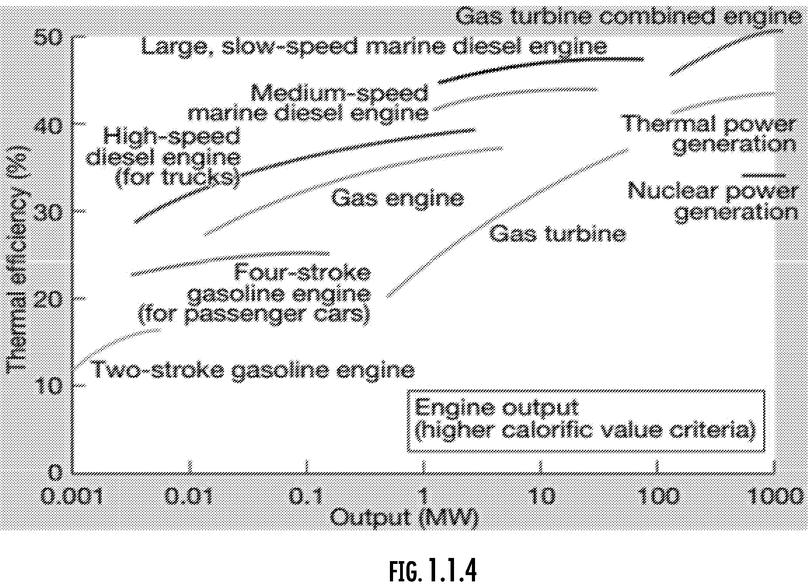

FIG. 1.1.4 is a graph depicting thermal efficiency versus power output;

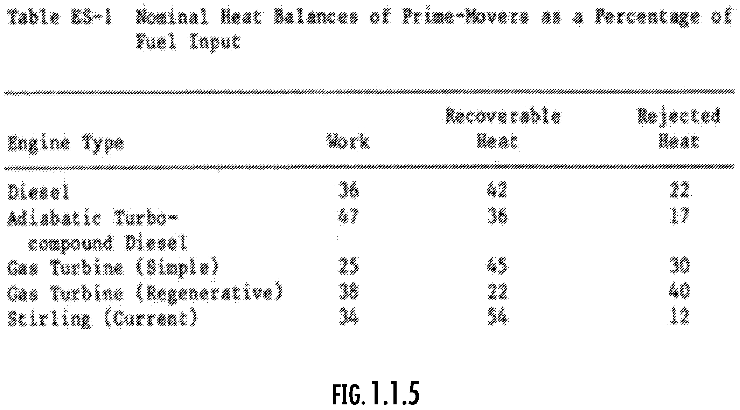

FIG. 1.1.5 is a chart depicting nominal heat balances of prime-movers as a percentage of fuel input;

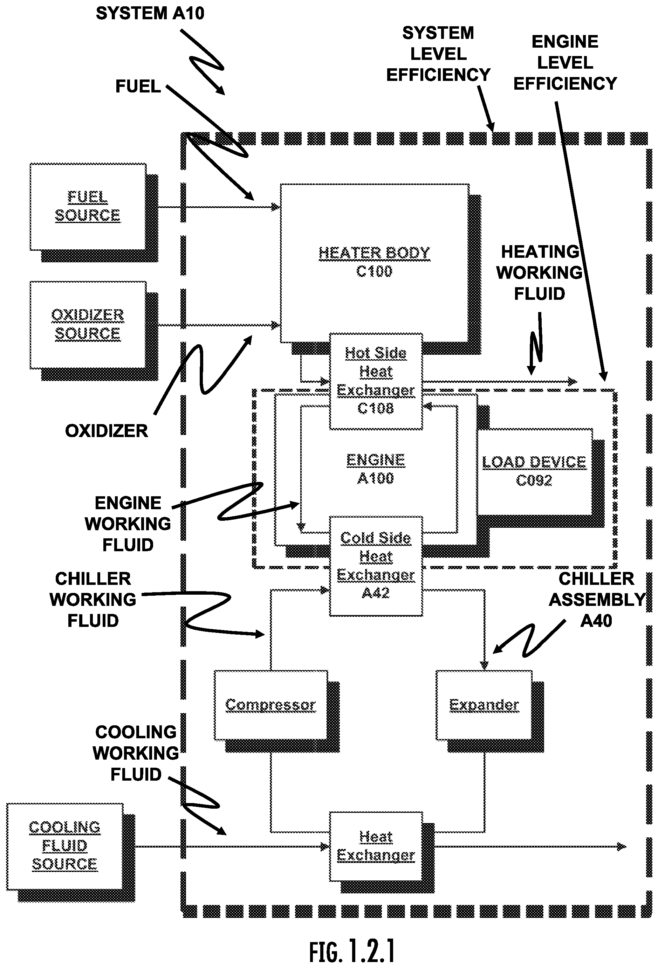

FIG. 1.2.1 is a schematic block diagram depicting a system for energy conversion according to an aspect of the present disclosure;

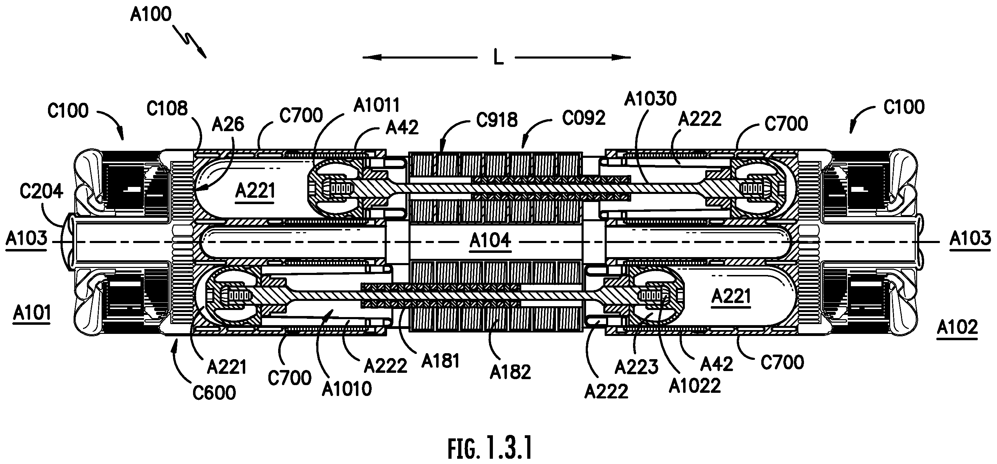

FIG. 1.3.1 is a cross sectional view of an exemplary embodiment of a closed cycle engine and load device according to an aspect of the present disclosure;

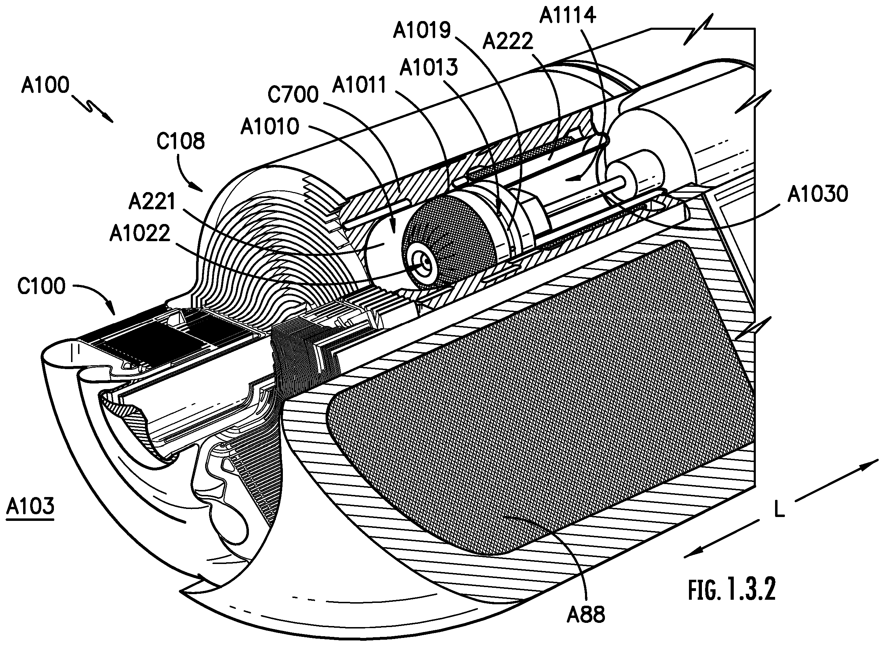

FIG. 1.3.2 is a perspective cutaway view of an exemplary portion of an exemplary embodiment of an engine according to an aspect of the present disclosure;

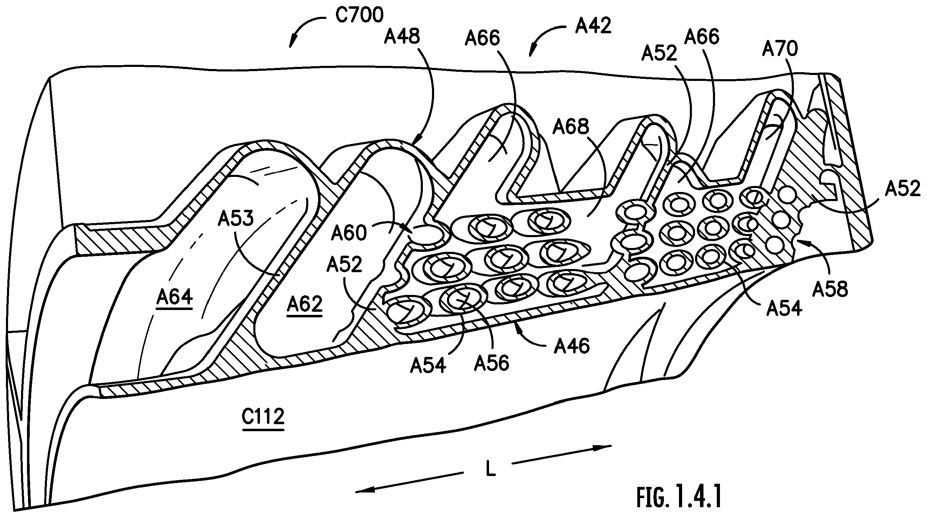

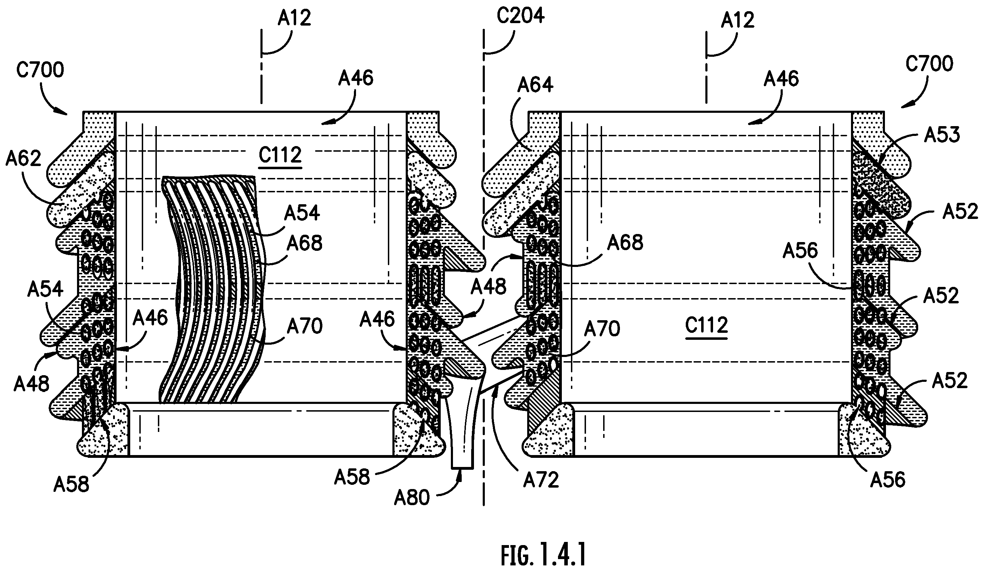

FIG. 1.4.1 is a perspective cutaway view of an exemplary portion of an engine according to an aspect of the present disclosure;

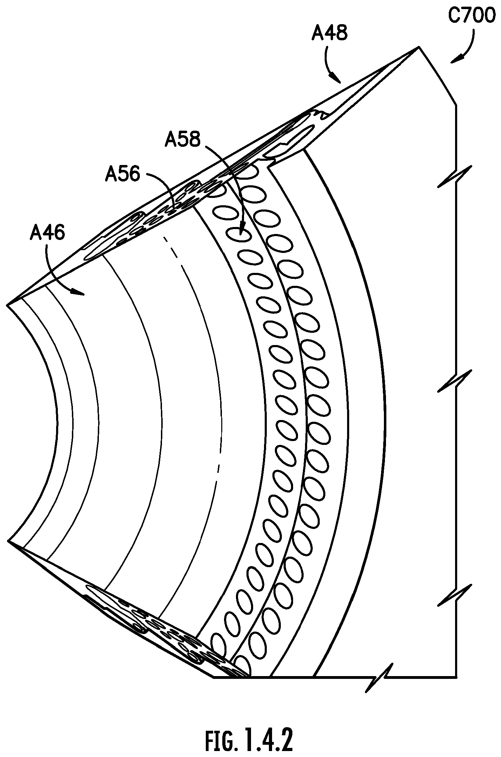

FIG. 1.4.2 is a perspective cutaway view of another exemplary portion of a an engine according to an aspect of the present disclosure;

FIG. 1.4.3 is a cutaway view of a portion of an exemplary embodiment of an engine according to an aspect of the present disclosure;

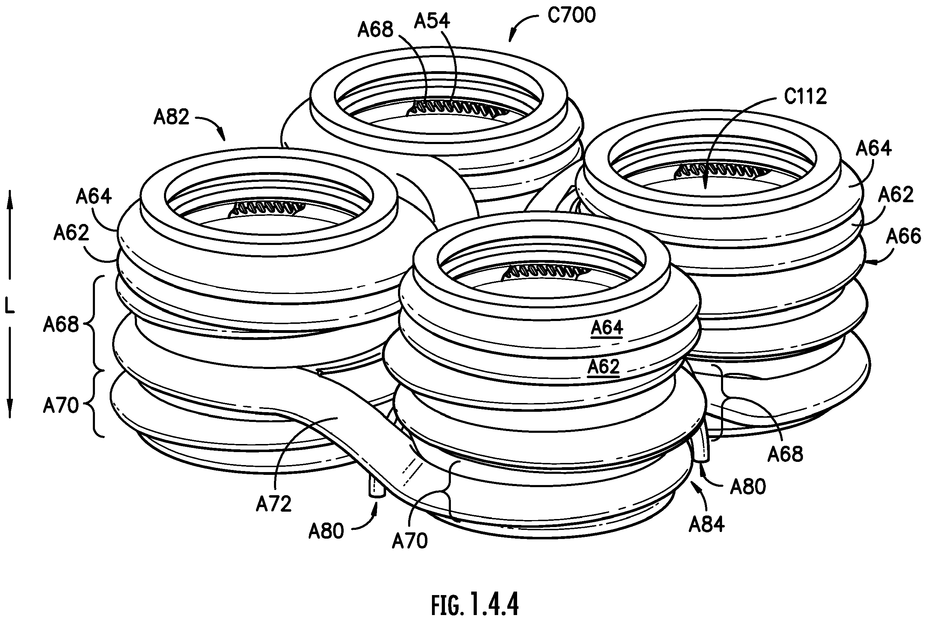

FIG. 1.4.4 is a perspective view of a portion of an exemplary embodiment of an engine according to an aspect of the present disclosure;

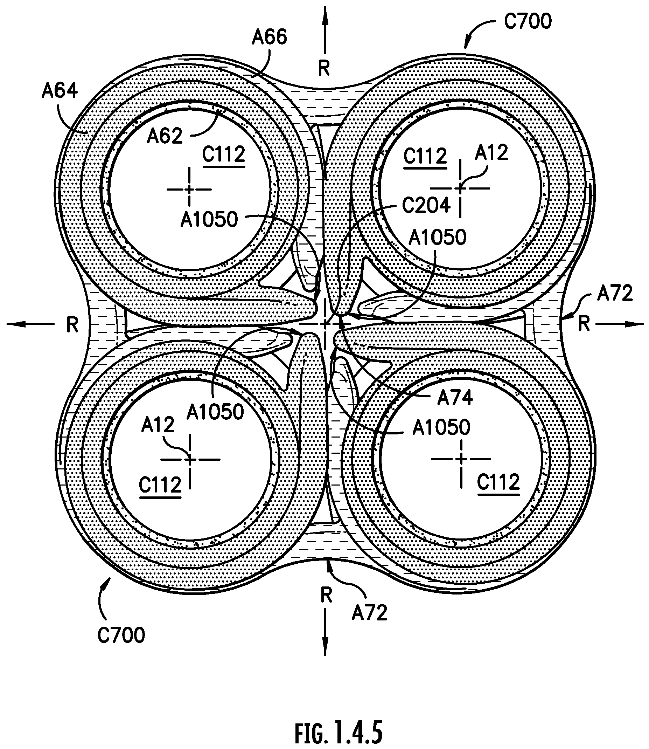

FIG. 1.4.5 is a top-down view of fluid flowpaths within a portion of an exemplary embodiment of an engine such as provided in regard to FIG. 1.4.4;

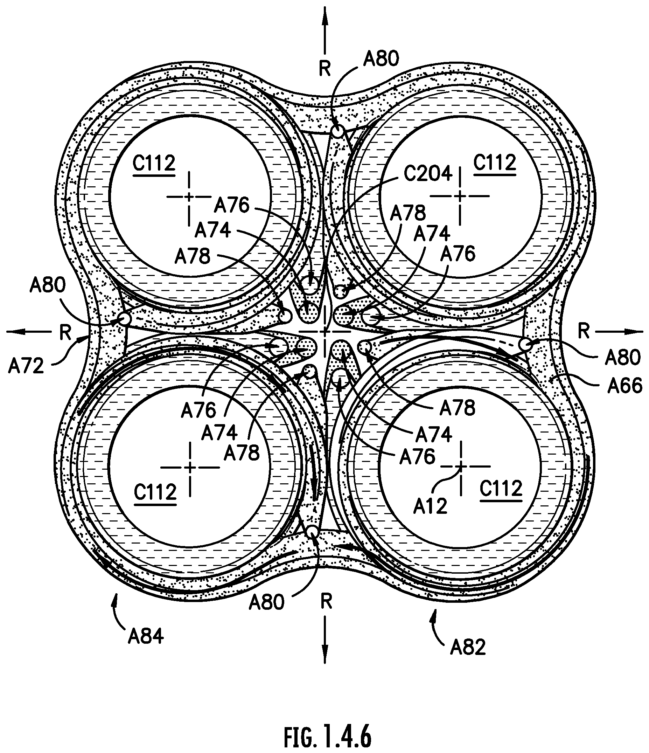

FIG. 1.4.6 is a bottom-up view of fluid flowpaths within a portion of an exemplary embodiment of an engine such as provided in regard to FIG. 1.4.4;

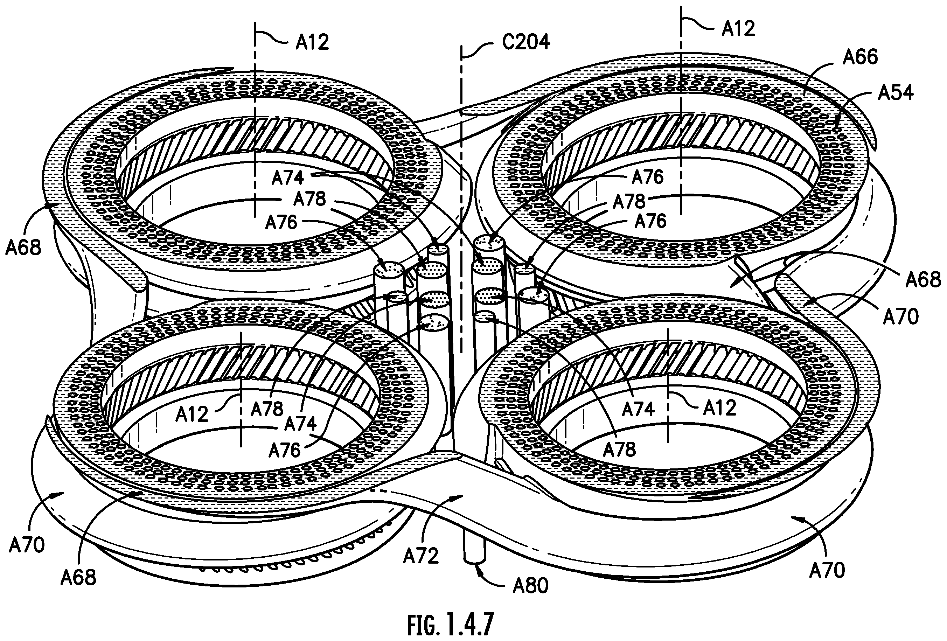

FIG. 1.4.7 is a perspective cutaway view of a portion of an exemplary embodiment of an engine such as provided in regard to FIG. 1.4.4;

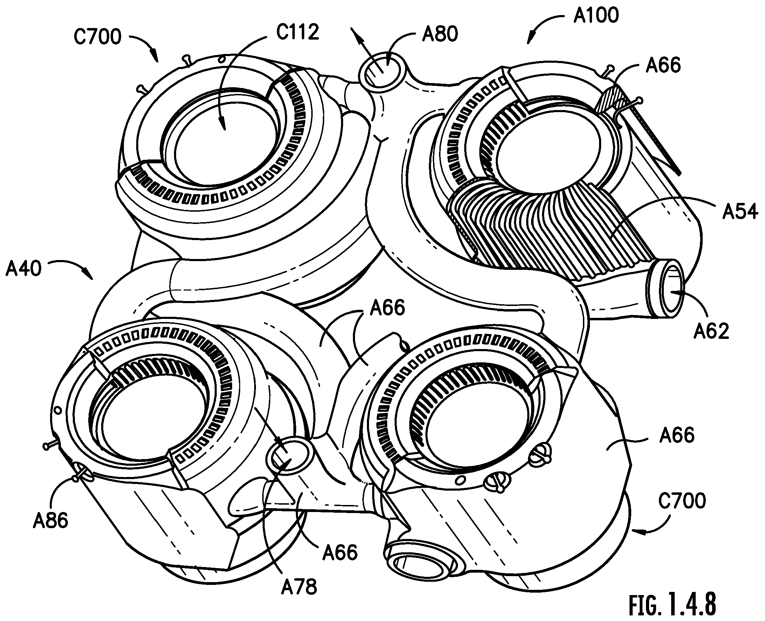

FIG. 1.4.8 is a perspective view with a partial cutaway view of a portion of an exemplary embodiment of an engine according to an aspect of the present disclosure;

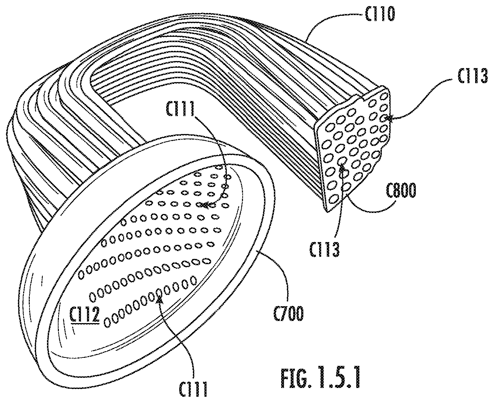

FIG. 1.5.1 is a perspective view of a portion of an exemplary embodiment of an engine such as provided according to an aspect of the present disclosure;

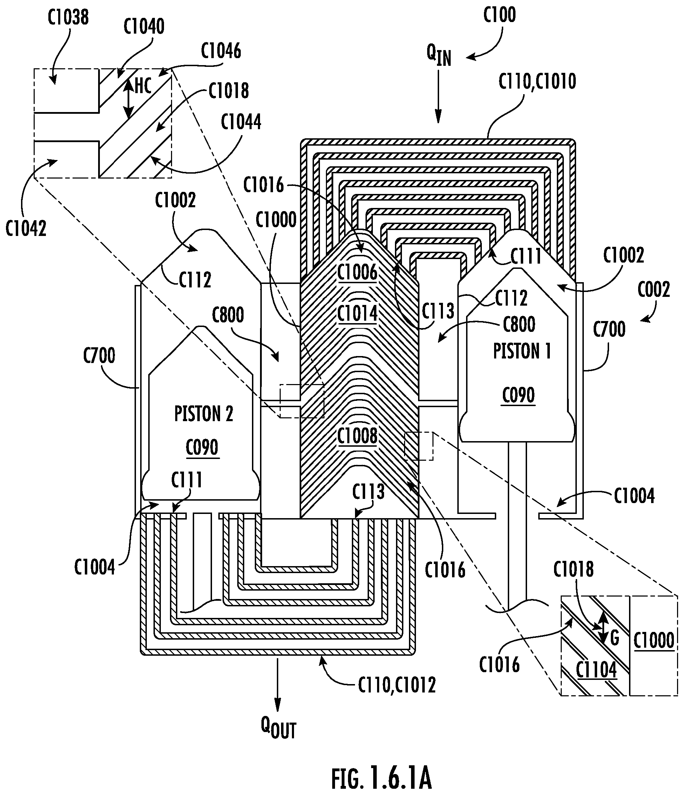

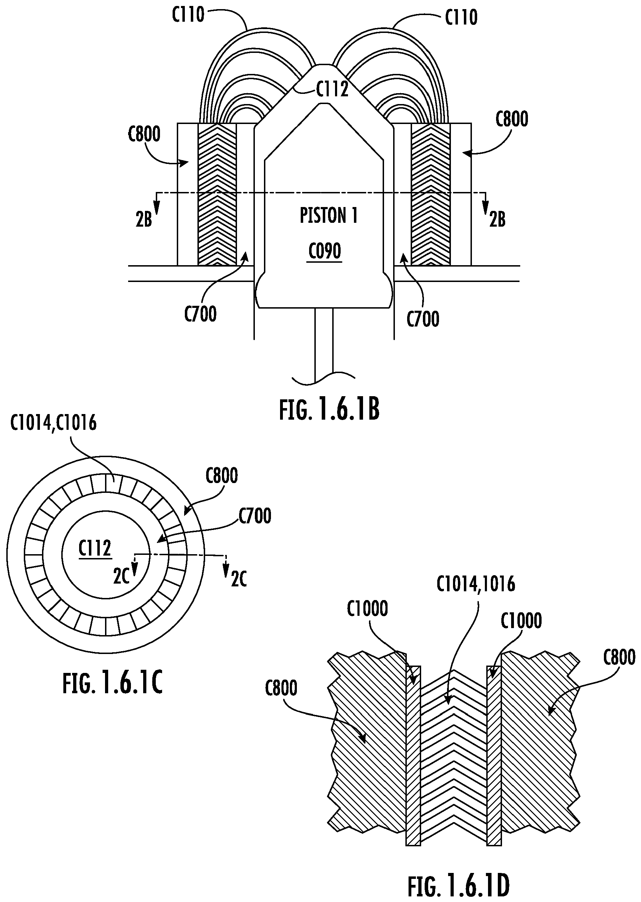

FIG. 1.6.1A schematically depicts an exemplary regenerator system of an engine according to an aspect of the present disclosure;

FIG. 1.6.1B schematically depicts a cross-sectional view of an exemplary regenerator body in relation to a portion of an engine according to an aspect of the present disclosure;

FIG. 1.6.1C schematically depicts a top cross-sectional view of the exemplary regenerator body of FIG. 1.6.1B;

FIG. 1.6.1D schematically depicts an enlarged perspective cross-sectional view of the exemplary regenerator body of FIG. 1.6.1B;

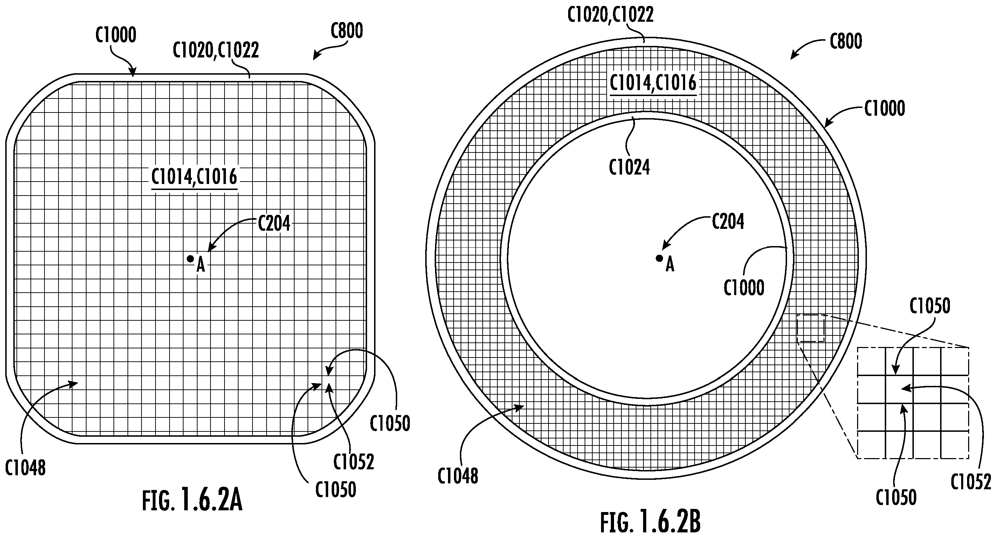

FIG. 1.6.2A schematically depicts a cross-sectional view of another exemplary regenerator body;

FIG. 1.6.2B schematically depicts a cross-sectional view of yet another exemplary regenerator body;

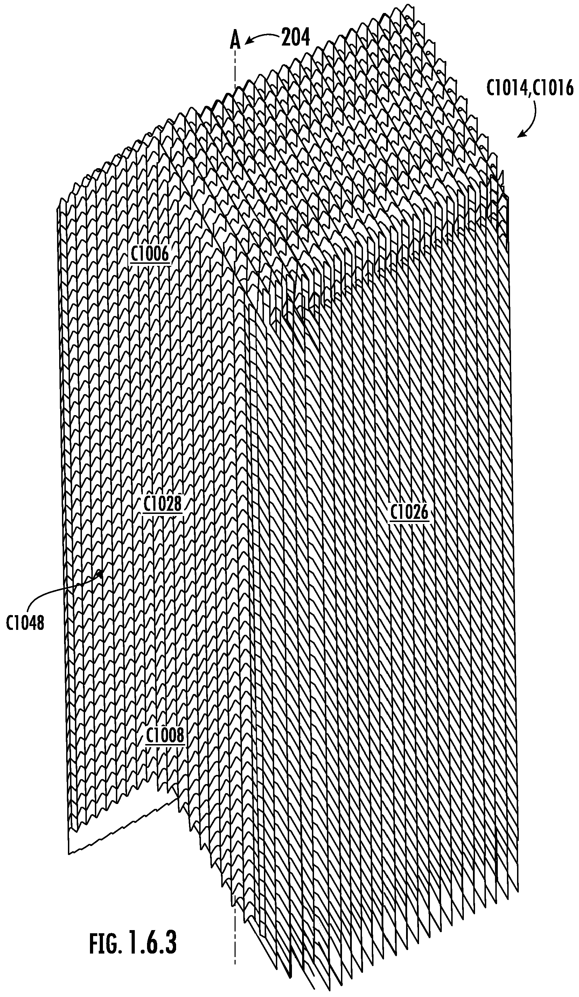

FIG. 1.6.3 schematically depicts a perspective view of a plurality of fin arrays that may be included in a regenerator body, such as the regenerator body shown in FIGs. 1.6.1A or 1.6.1B;

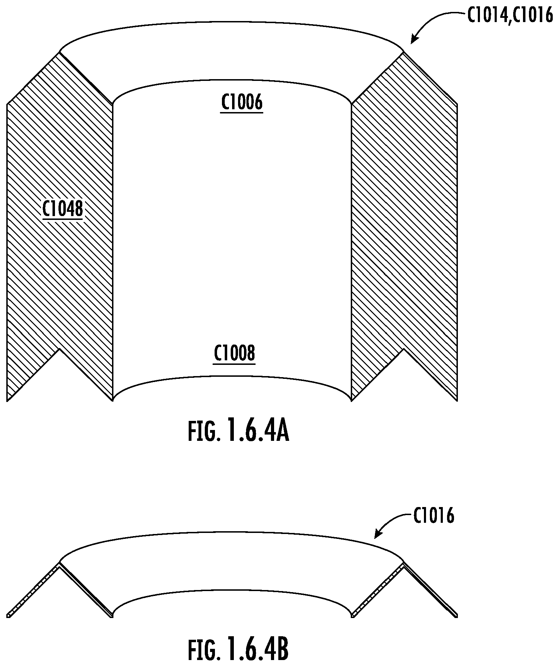

FIG. 1.6.4A schematically depicts a perspective cross-sectional view of another exemplary plurality of fin arrays that may be included in a regenerator body, such as the regenerator body shown in FIG. 1.6.2B;

FIG. 1.6.4B schematically depicts an exemplary fin array from the exemplary plurality of fin arrays shown in FIG. 1.6.4A;

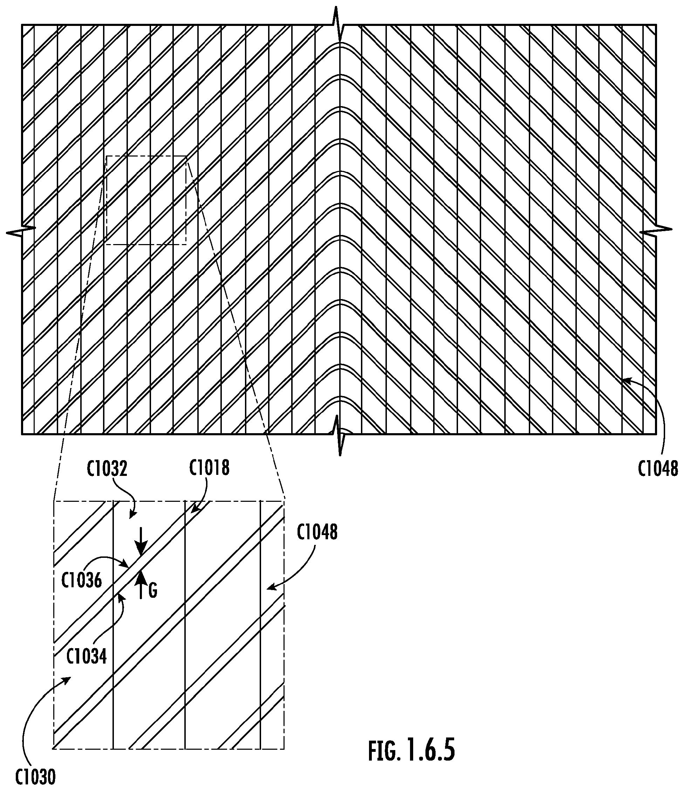

FIG. 1.6.5 schematically depicts a side view of the plurality of fin arrays shown in FIGS. 1.6.3 and/or 1.6.4A;

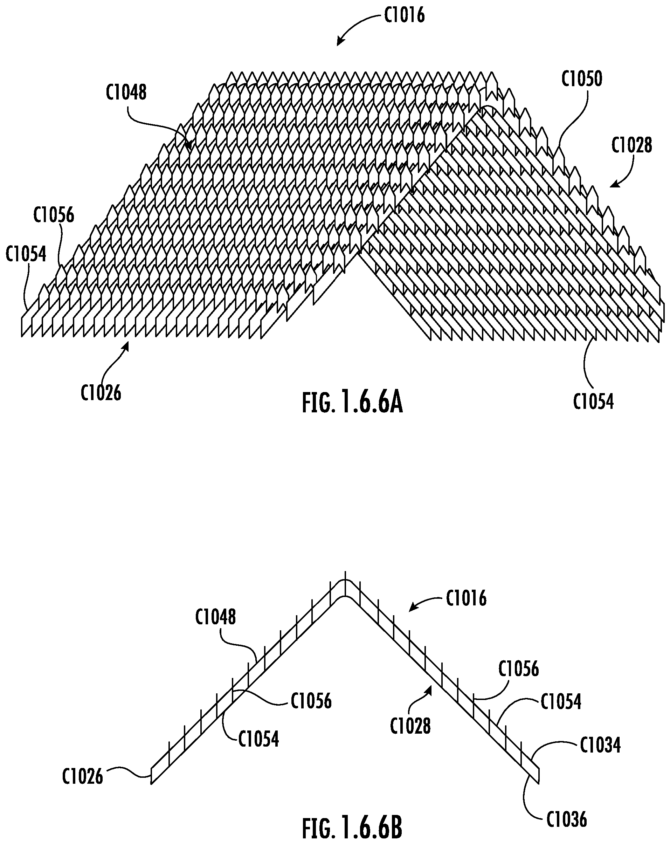

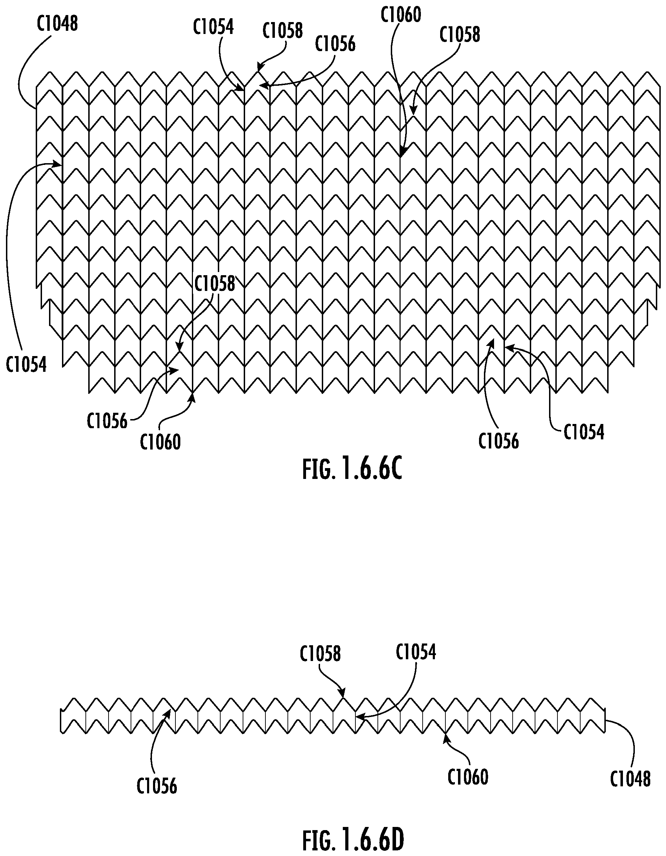

FIG. 1.6.6A schematically depicts a perspective view of a fin array from the plurality of fin arrays shown in FIG. 1.6.3;

FIG. 1.6.6B schematically depicts a right-side view of the fin array shown in FIG. 1.6.6A;

FIG. 1.6.6C schematically depicts a side view of the fin array viewing the fin array perpendicular to the perspective shown in Fig. 1.6.5A;

FIG. 1.6.6D schematically depicts a plurality of fins from the fin array shown in FIG. 1.6.6A viewed from the perspective shown in FIG. 1.6.6C; and

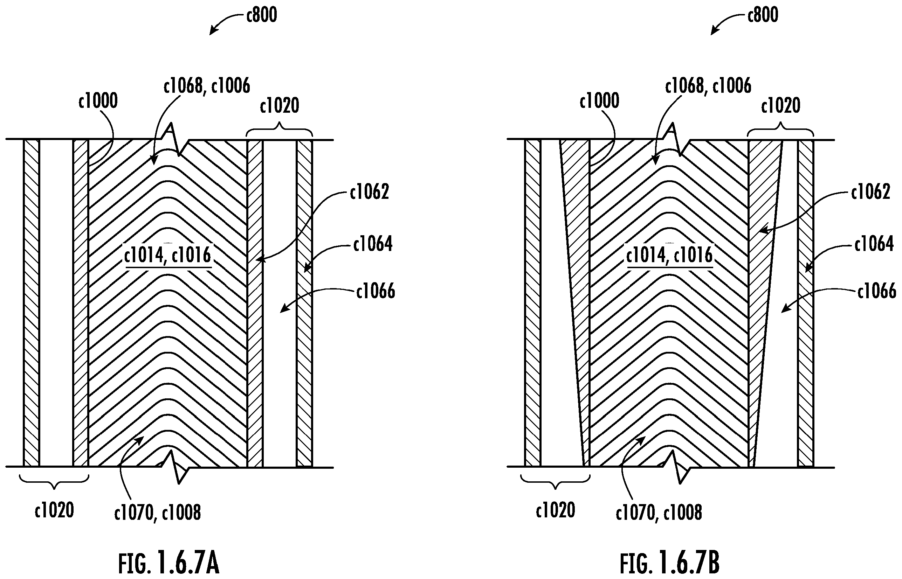

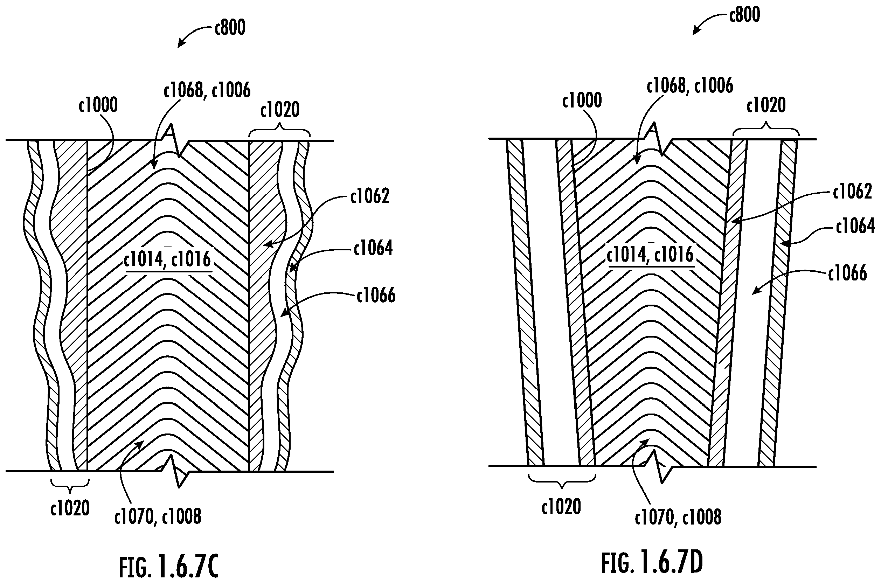

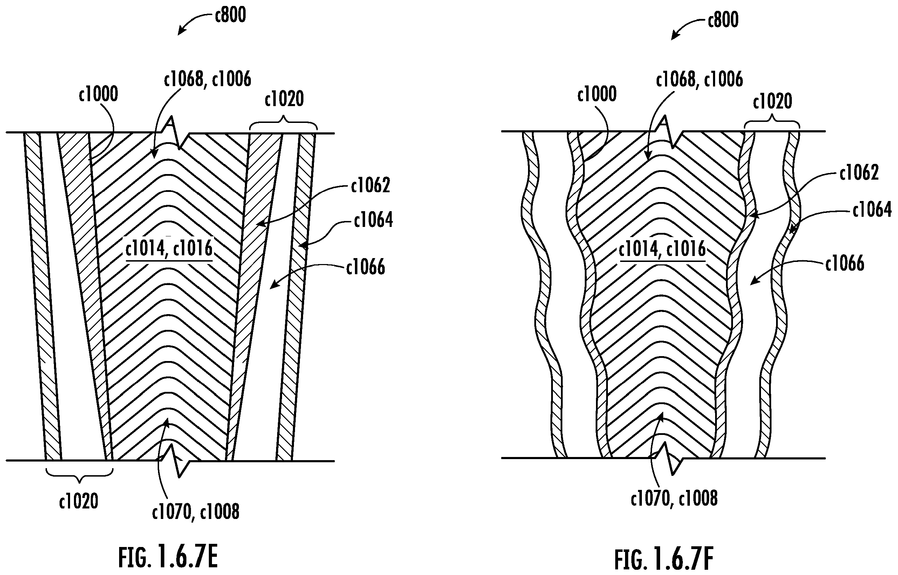

FIGs. 1.6.7A-1.6.7F schematically depict exemplary regenerator body configurations;

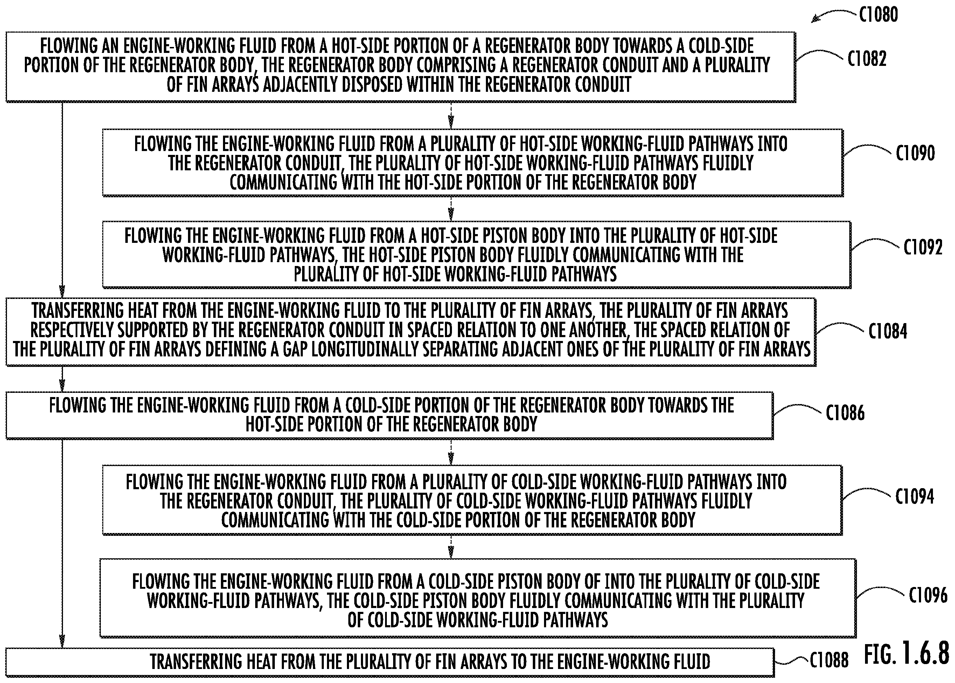

FIG. 1.6.8 shows a flowchart depicting an exemplary method of regenerating heat in an engine-working fluid;

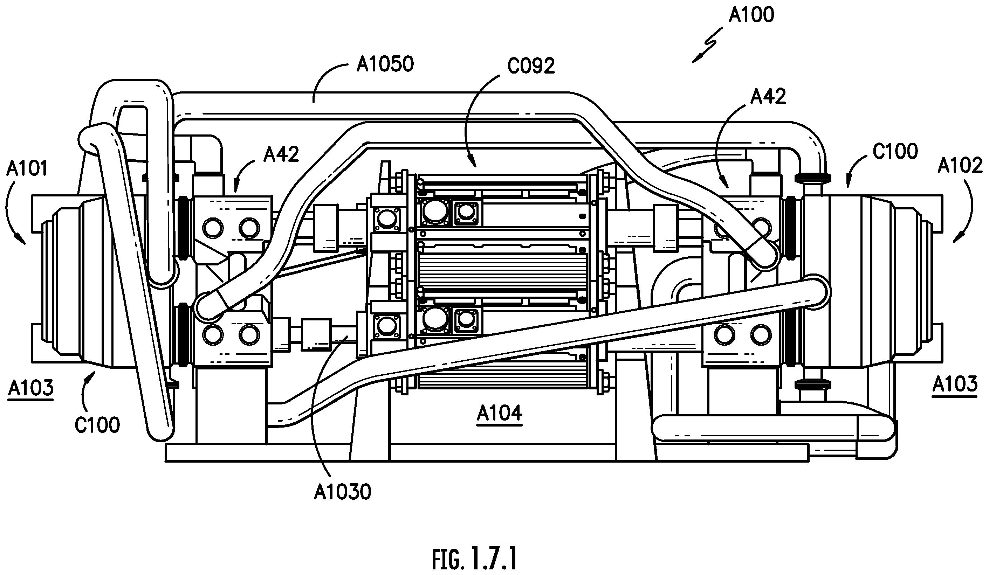

FIG. 1.7.1 is a side view of an exemplary embodiment of a portion of an engine according to an aspect of the present disclosure;

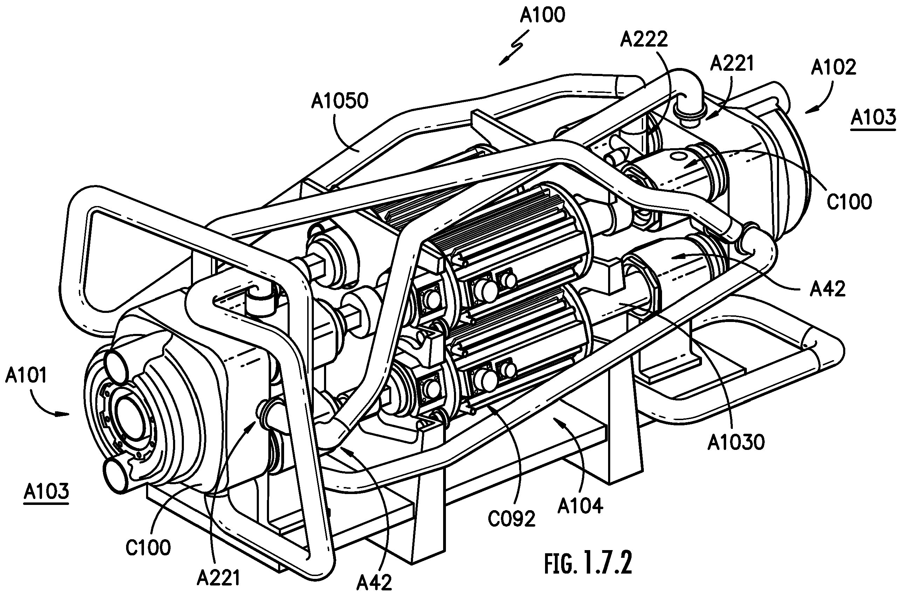

FIG. 1.7.2 is a perspective view of an exemplary embodiment of a portion of an engine such as provided in regard to FIG. 1.7.1;

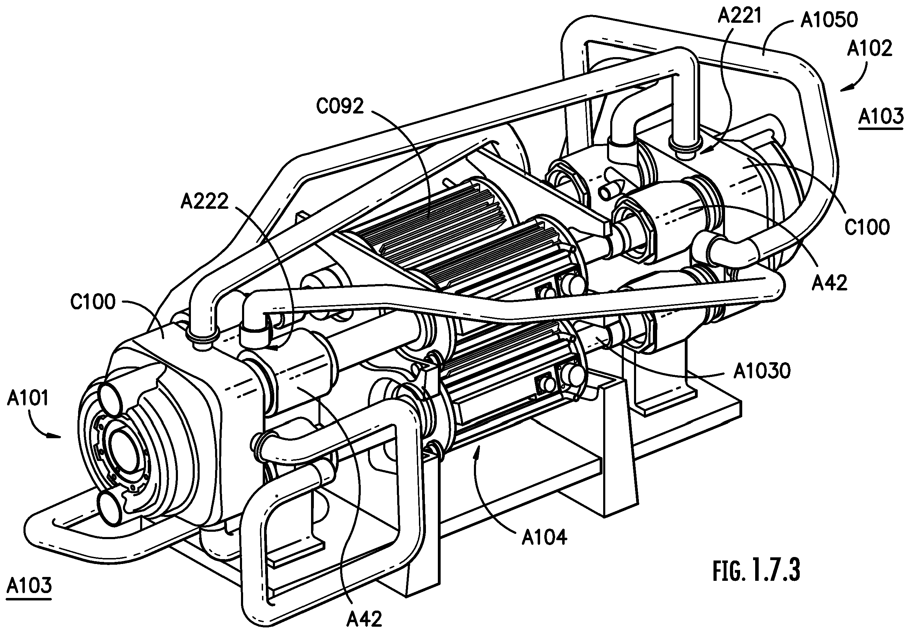

FIG. 1.7.3 is another perspective view of an exemplary embodiment of a portion of an engine such as provided in regard to FIGS. 1.7.1 through FIG. 1.7.2;

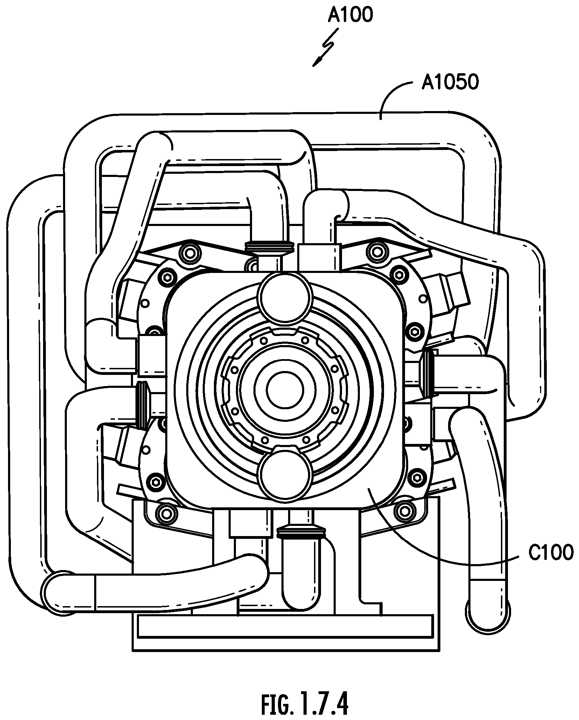

FIG. 1.7.4 is an end view of an exemplary embodiment of a portion of an engine such as provided in regard to FIGS. 1.7.1 through FIG. 1.7.2;

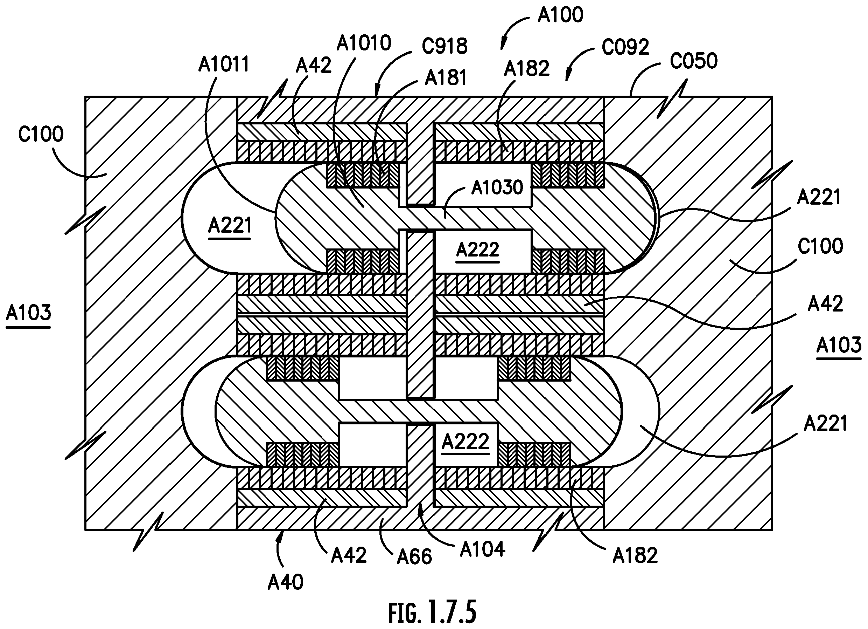

FIG. 1.7.5 is a schematic view of an embodiment of an arrangement of a portion of a system including an engine and a load device according to an aspect of the present disclosure;

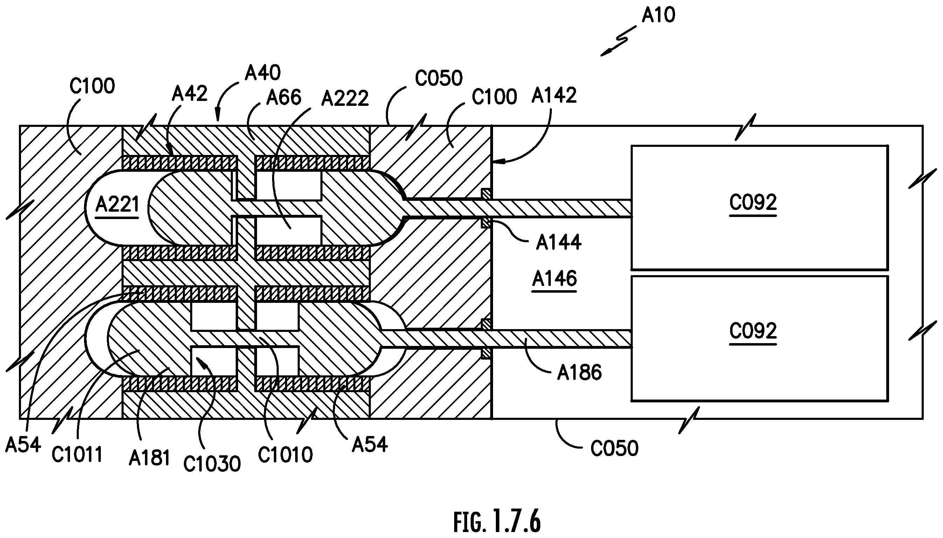

FIG. 1.7.6 is a schematic view of another embodiment of an arrangement of a portion of a system including an engine and a load device according to an aspect of the present disclosure;

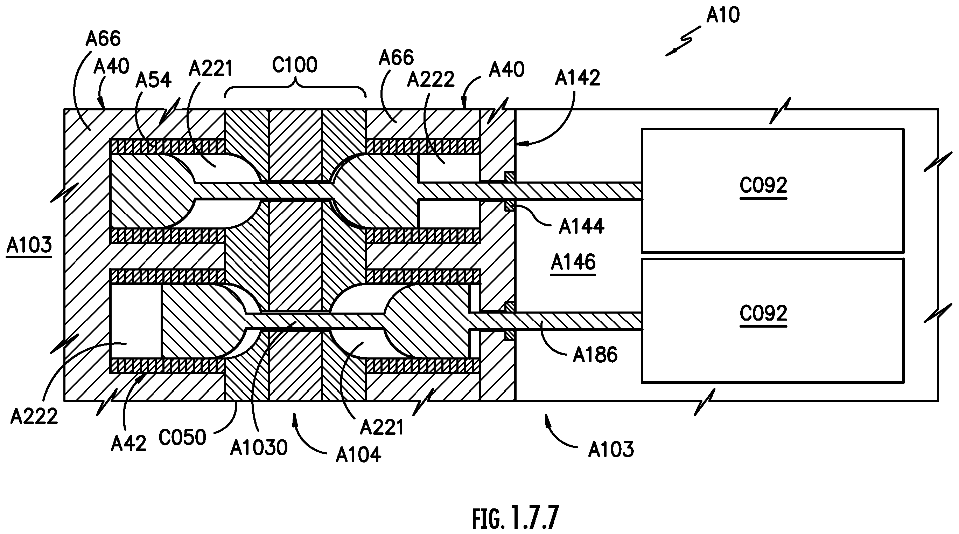

FIG. 1.7.7 is a schematic view of yet another embodiment of an arrangement of a portion of a system including an engine and a load device according to an aspect of the present disclosure;

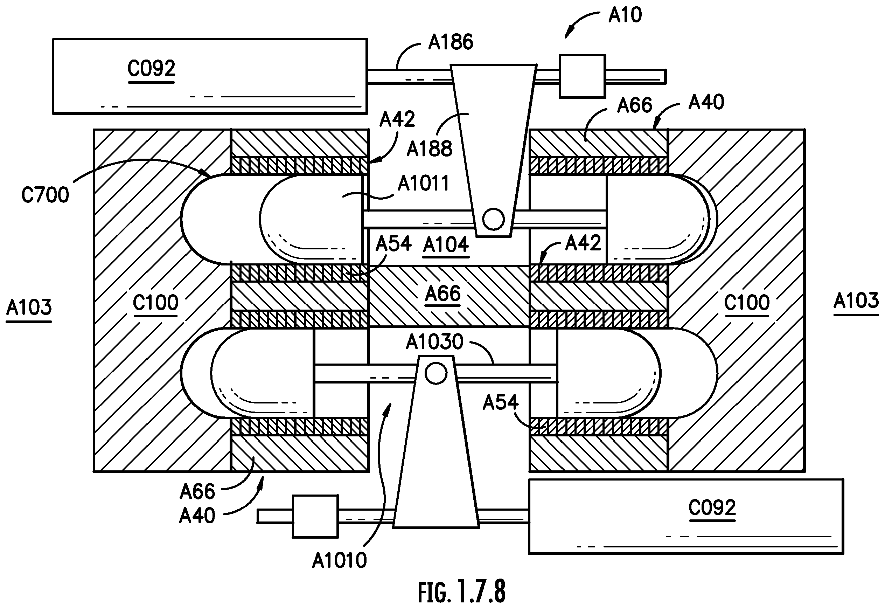

FIG. 1.7.8 is a schematic view of still another embodiment of an arrangement of a portion of a system including an engine and a load device according to an aspect of the present disclosure;

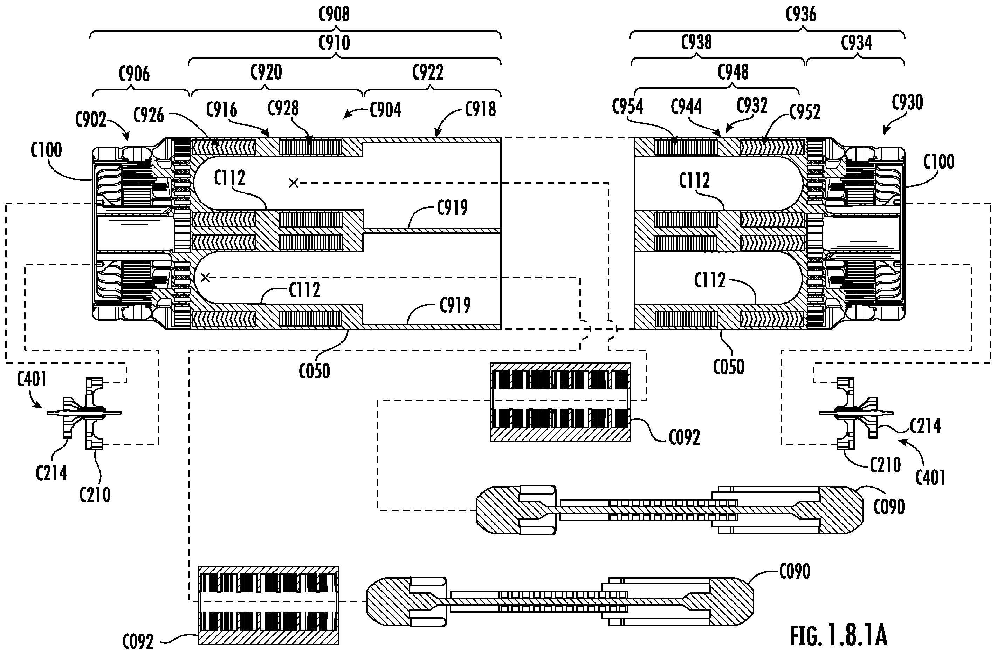

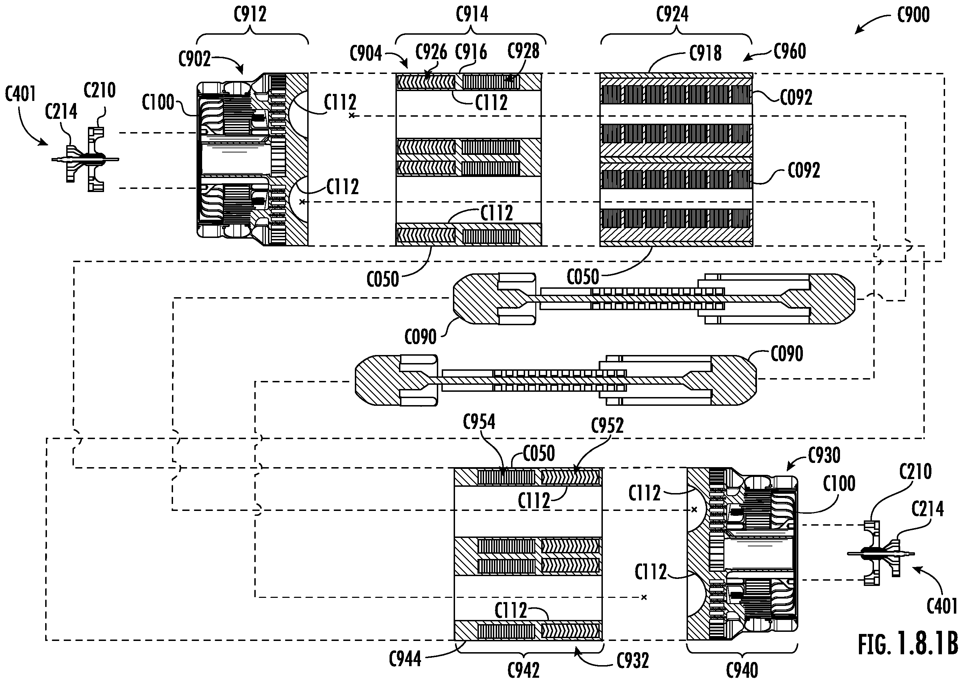

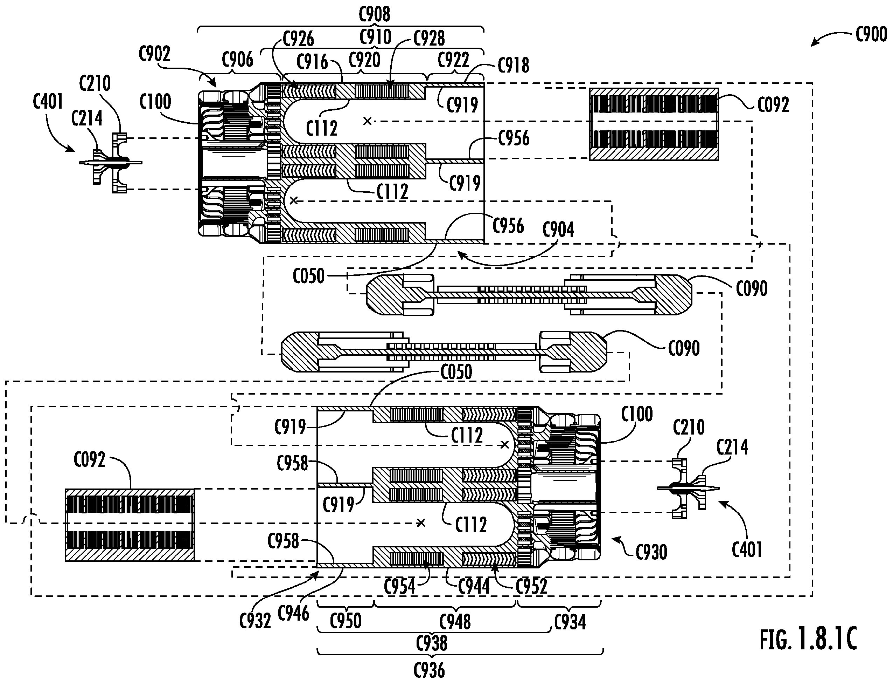

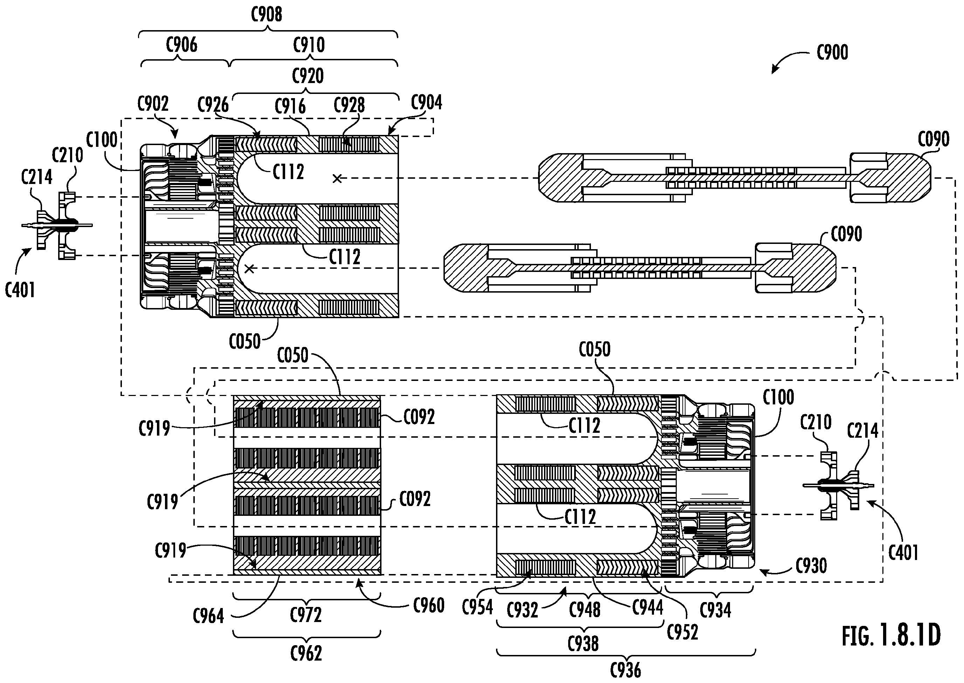

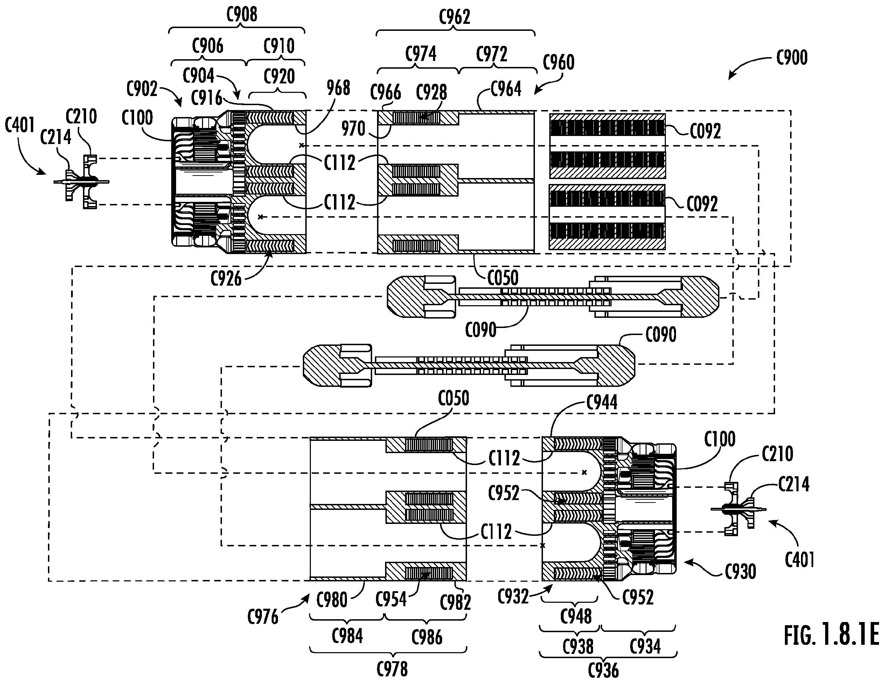

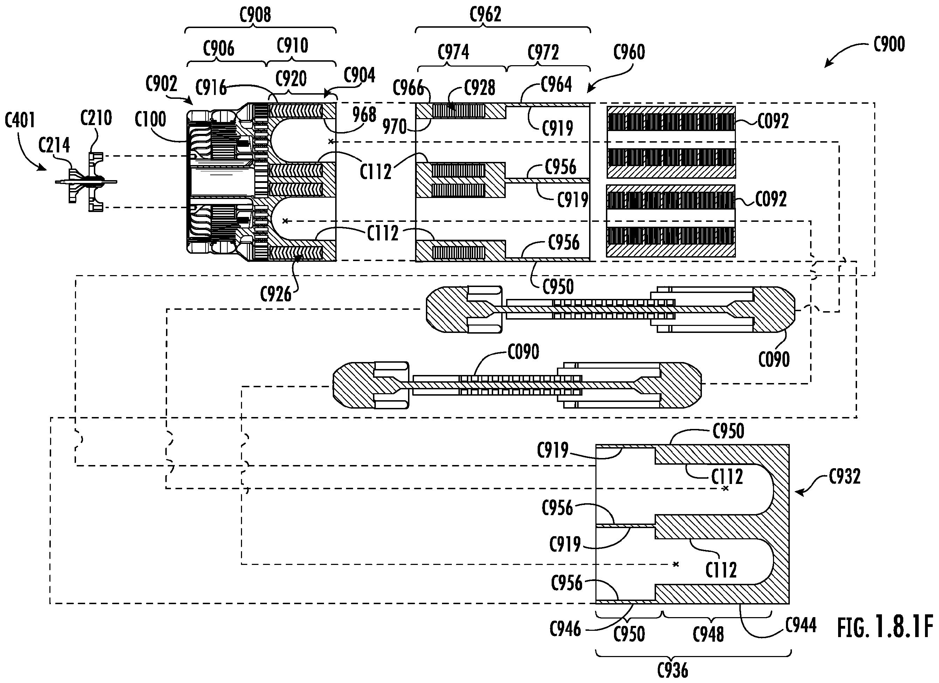

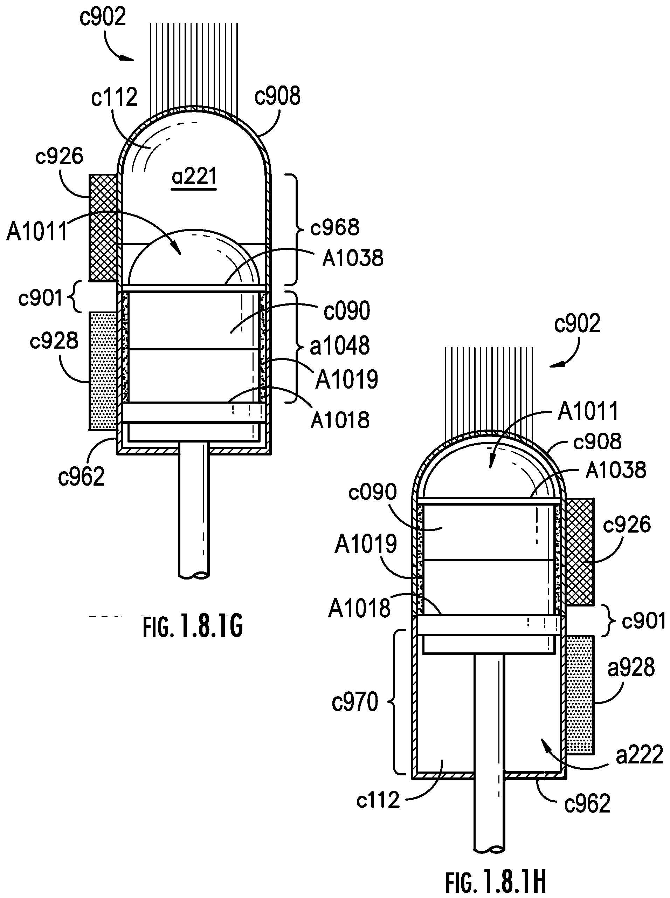

FIGs. 1.8.1A, 1.8.1B, 1.8.1C, 1.8.1D, 1.8.1E, and 1.8.1F schematically depict exploded views of exemplary engine assemblies according to aspects of the present disclosure;

FIGs. 1.8.1G and 1.8.1H schematically depict an engine assembly with a thermal break positioned between portions the engine assembly;

FIG. 1.8.2 schematically depicts an enlarged partial exploded view of another exemplary engine assembly according to aspects of the present disclosure;

FIG. 1.8.3 shows a flowchart depicting an exemplary method of building an engine assembly;

FIG. 2.1.1 provides a schematic view of a power generation system according to an example embodiment of the present disclosure;

FIG. 2.1.2 provides a schematic view of a power generation system according to an example embodiment of the present disclosure;

FIG. 2.1.3 provides a schematic view of a power generation system according to an example embodiment of the present disclosure;

FIG. 2.1.4 provides a schematic view of yet another power generation system according to an example embodiment of the present disclosure;

FIG. 2.1.5 provides a schematic view of another power generation system according to an example embodiment of the present disclosure;

FIG. 2.1.6 provides a schematic view of a further power generation system according to an example embodiment of the present disclosure;

FIG. 2.1.7 provides a schematic view of a power generation system according to an example embodiment of the present disclosure;

FIG. 2.1.8 provides a schematic view of a power generation system according to an example embodiment of the present disclosure;

FIG. 2.1.9 provides a schematic view of a power generation system according to an example embodiment of the present disclosure;

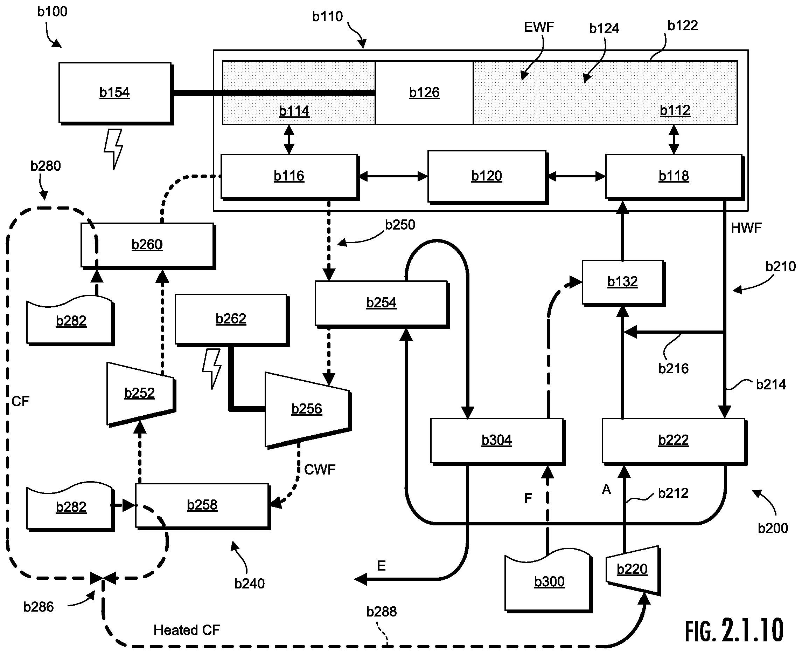

FIG. 2.1.10 provides a schematic view of a power generation system according to an example embodiment of the present disclosure;

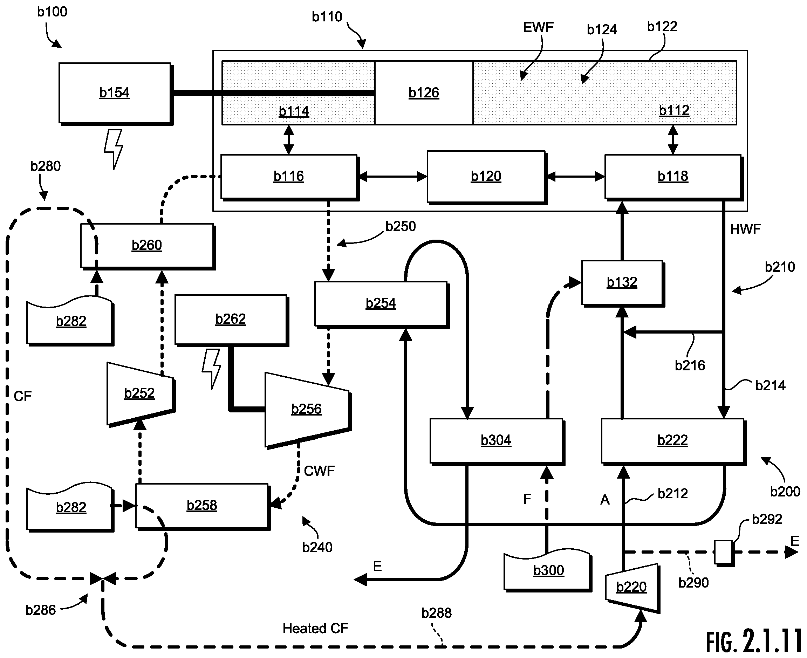

FIG. 2.1.11 provides a schematic view of a power generation system according to an example embodiment of the present disclosure;

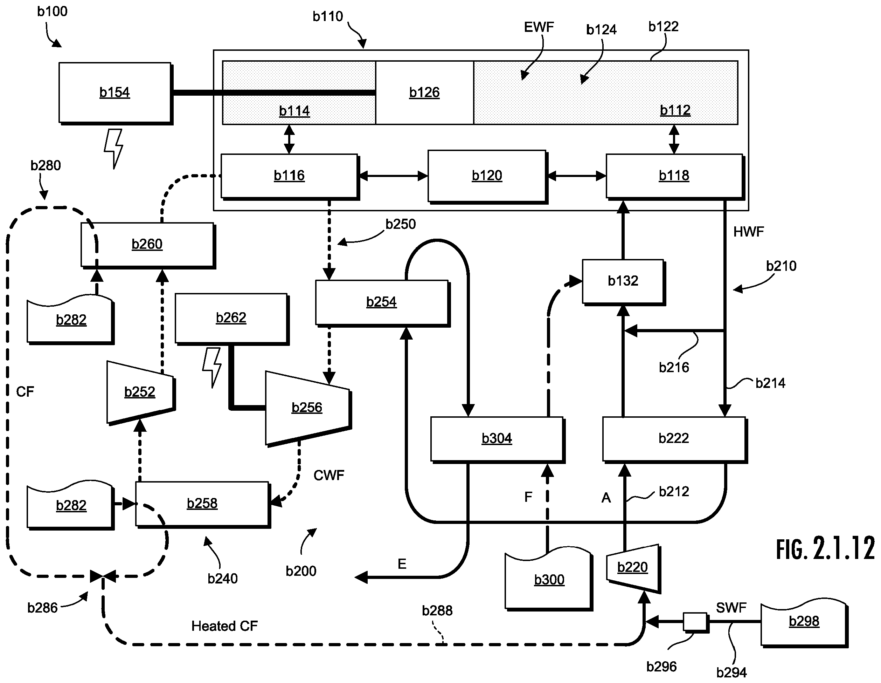

FIG. 2.1.12 provides a schematic view of a power generation system according to an example embodiment of the present disclosure;

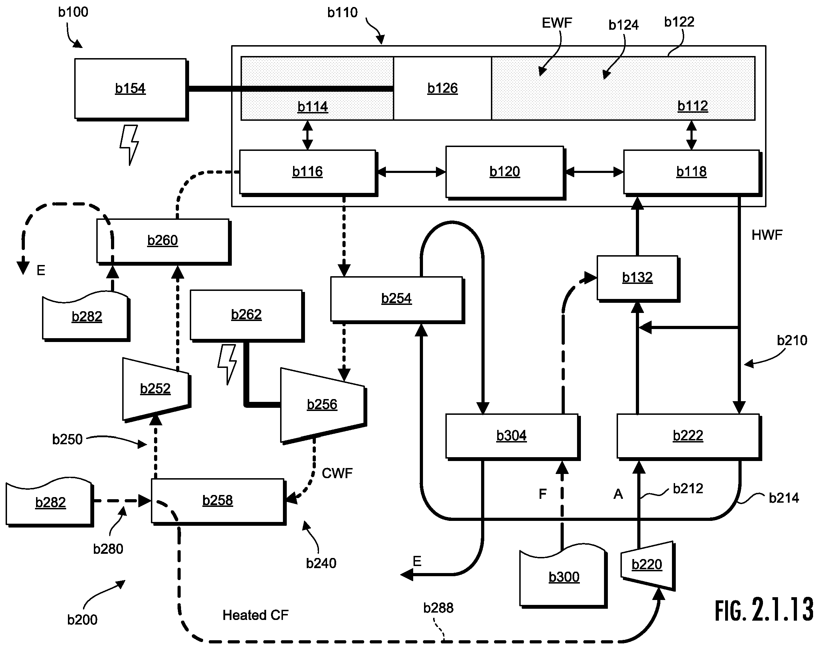

FIG. 2.1.13 provides a schematic view of a power generation system according to an example embodiment of the present disclosure;

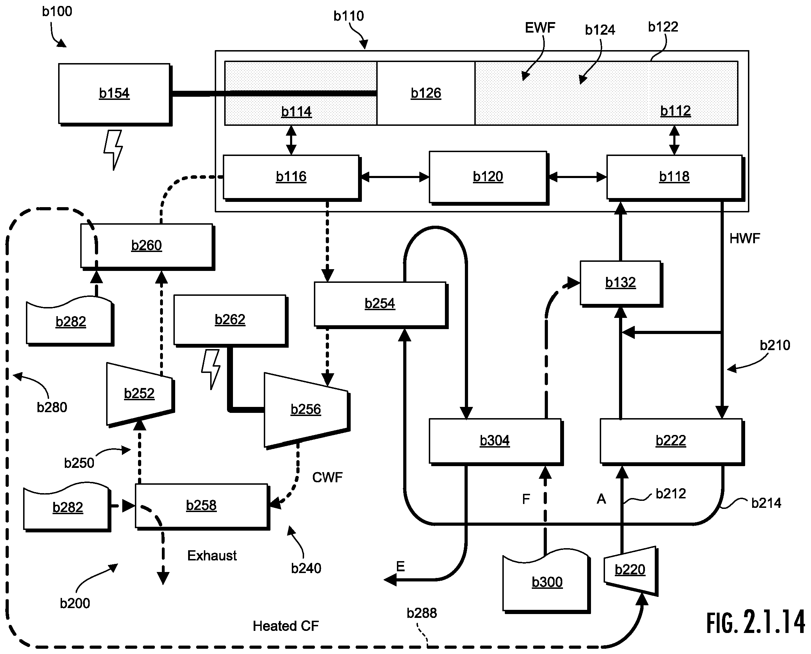

FIG. 2.1.14 provides a schematic view of a power generation system according to an example embodiment of the present disclosure;

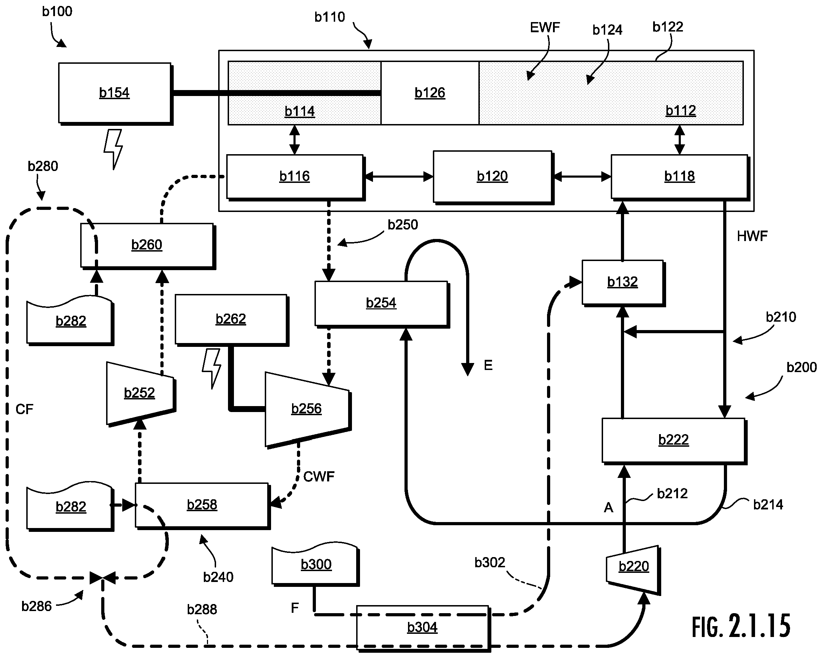

FIG. 2.1.15 provides a schematic view of a power generation system according to an example embodiment of the present disclosure;

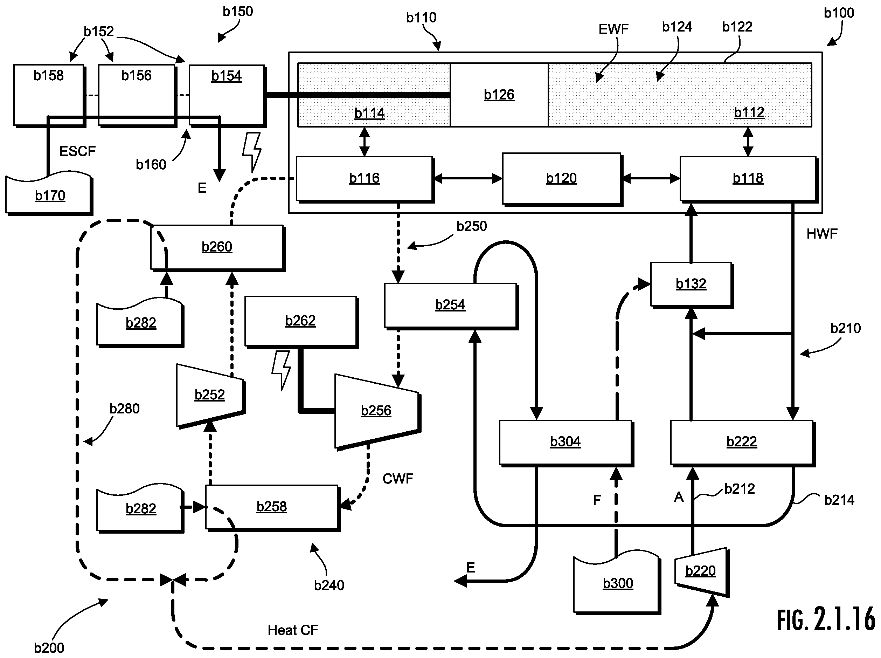

FIG. 2.1.16 provides a schematic view of a power generation system according to an example embodiment of the present disclosure;

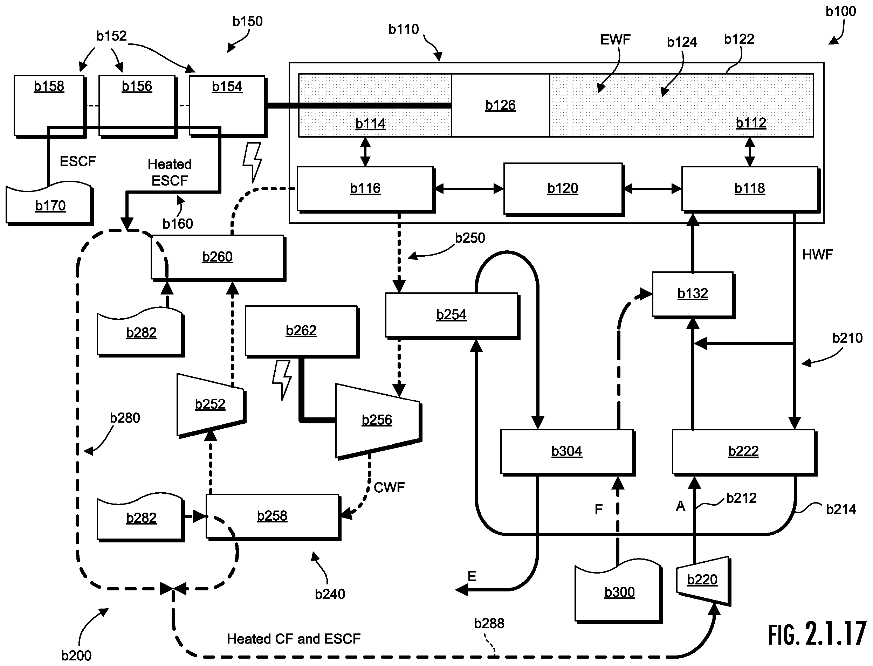

FIG. 2.1.17 provides a schematic view of a power generation system according to an example embodiment of the present disclosure;

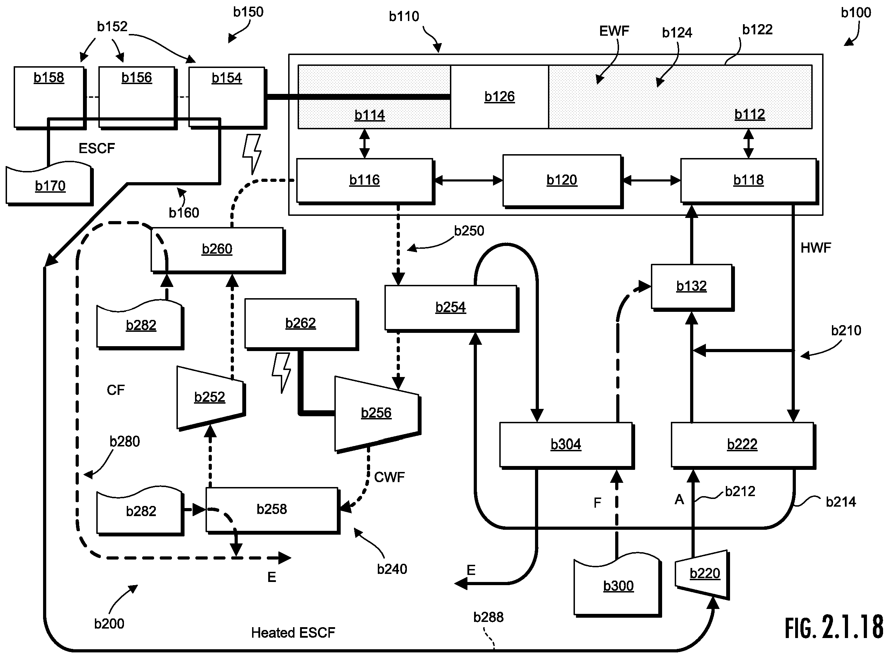

FIG. 2.1.18 provides a schematic view of a power generation system according to an example embodiment of the present disclosure;

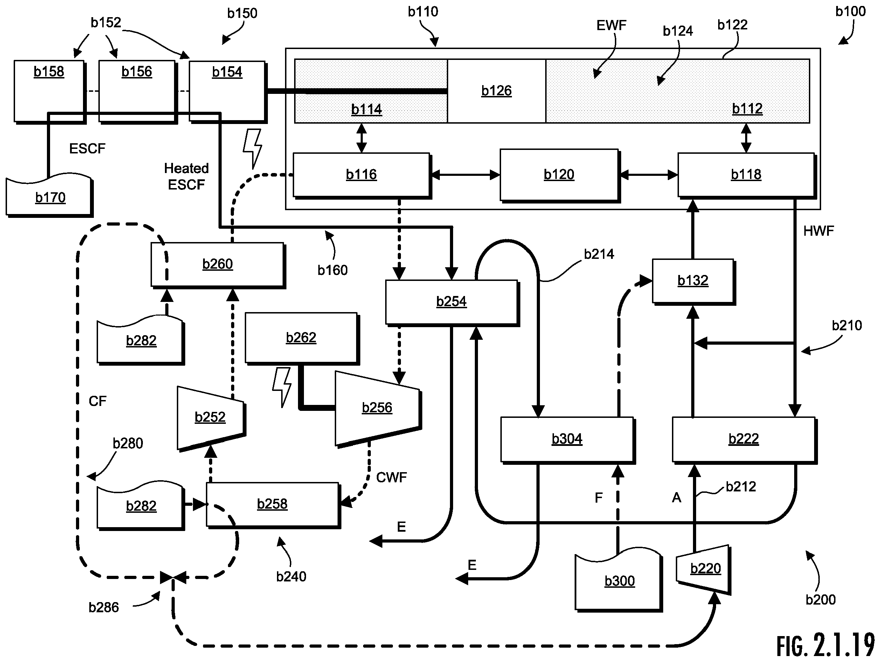

FIG. 2.1.19 provides a schematic view of a power generation system according to an example embodiment of the present disclosure;

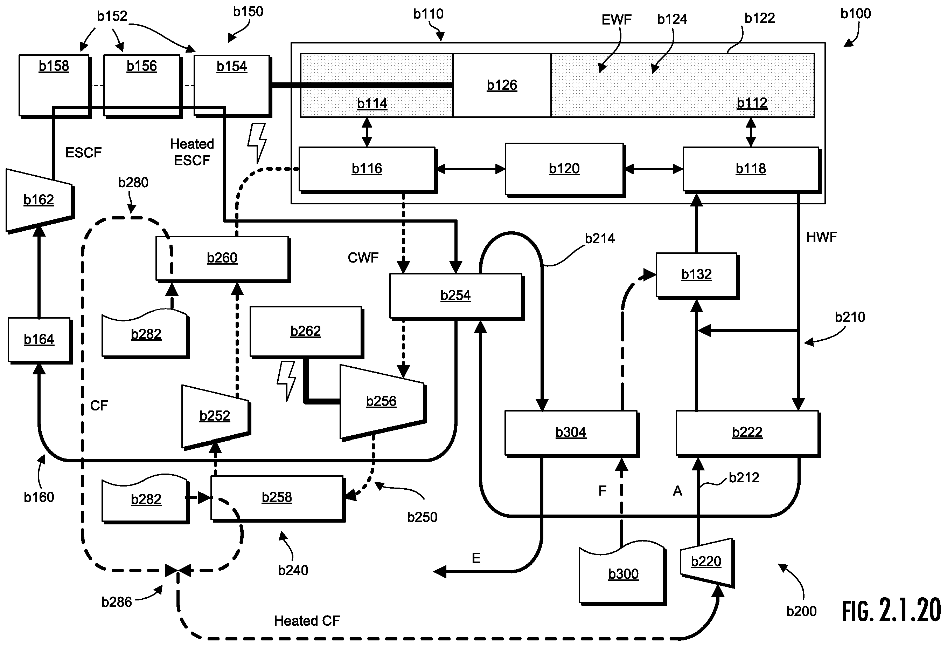

FIG. 2.1.20 provides a schematic view of a power generation system according to an example embodiment of the present disclosure;

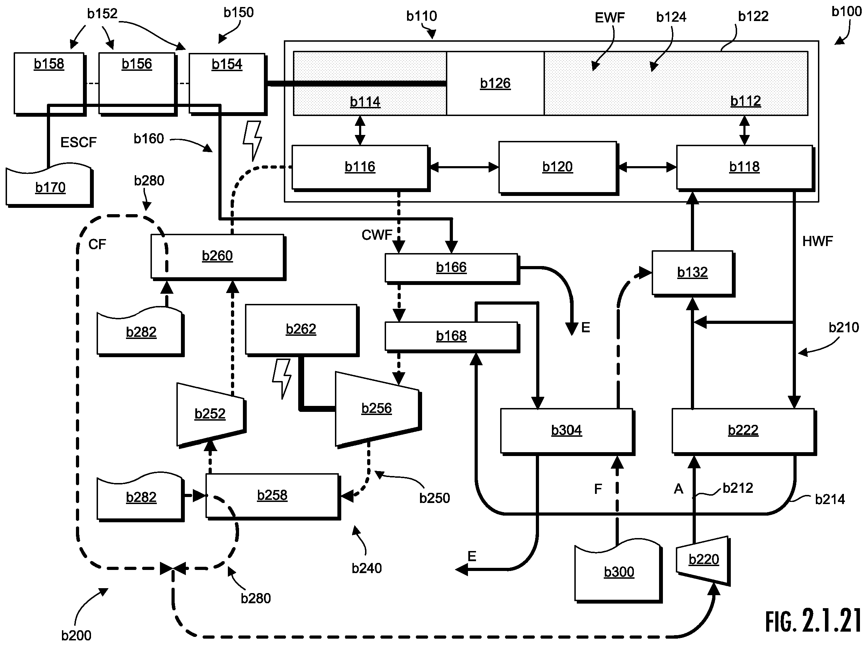

FIG. 2.1.21 provides a schematic view of a power generation system according to an example embodiment of the present disclosure;

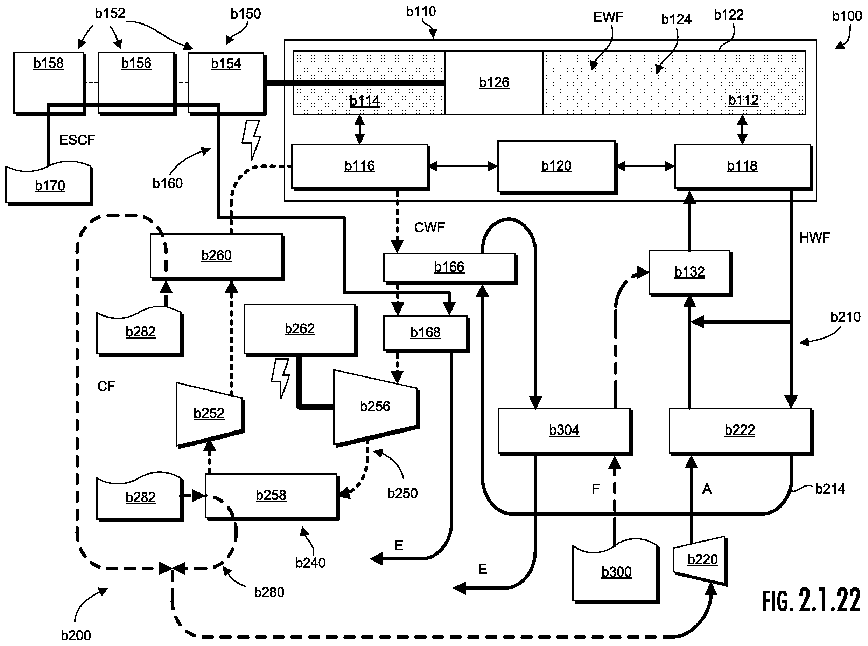

FIG. 2.1.22 provides a schematic view of a power generation system according to an example embodiment of the present disclosure;

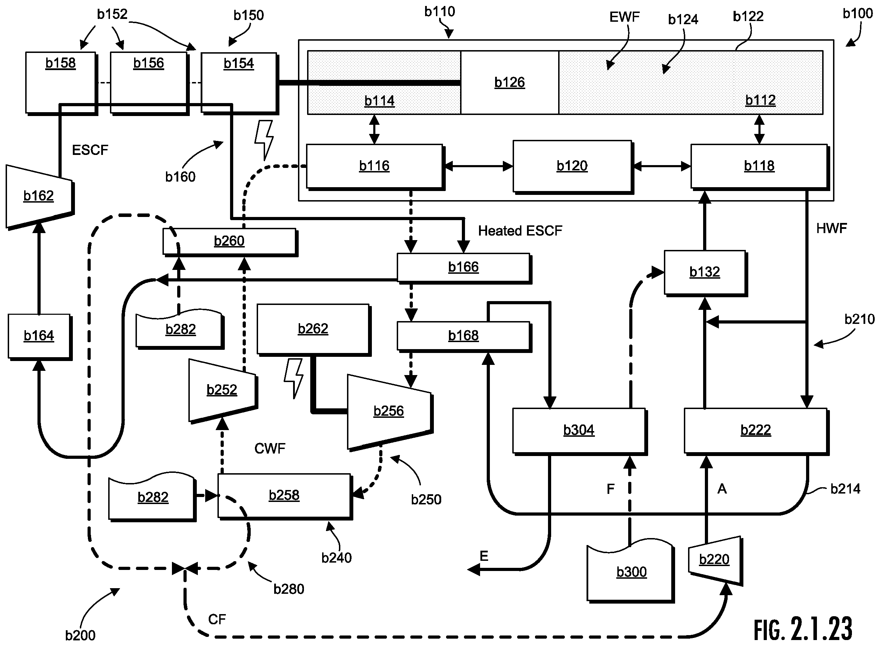

FIG. 2.1.23 provides a schematic view of a power generation system according to an example embodiment of the present disclosure;

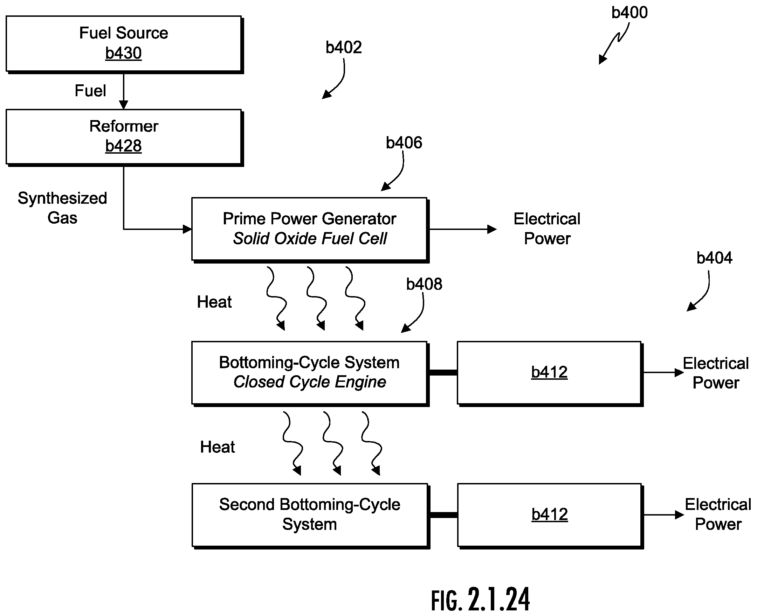

FIG. 2.1.24 provides a schematic block diagram of a power generation system according to an example embodiment of the present disclosure;

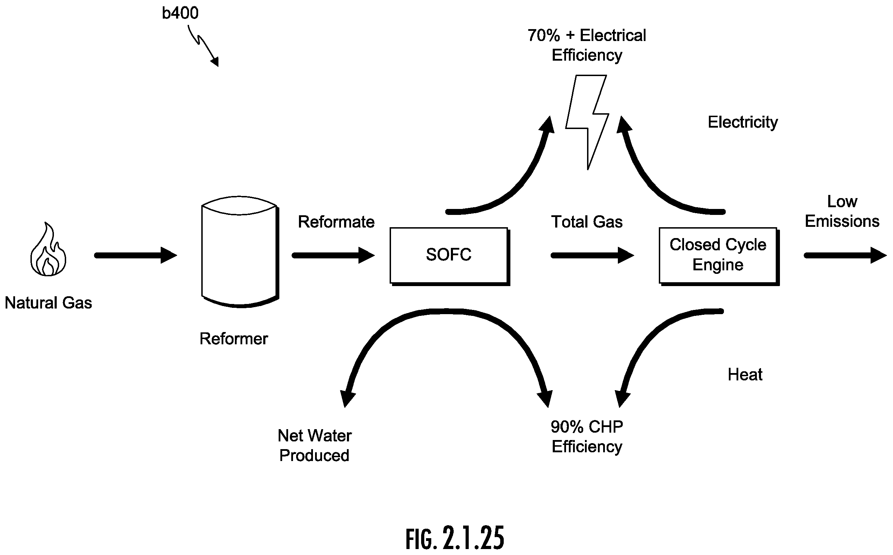

FIG. 2.1.25 provides a schematic block diagram depicting various advantages of the heat recovery system of FIG. 2.1.24 according to an aspect of the present disclosure;

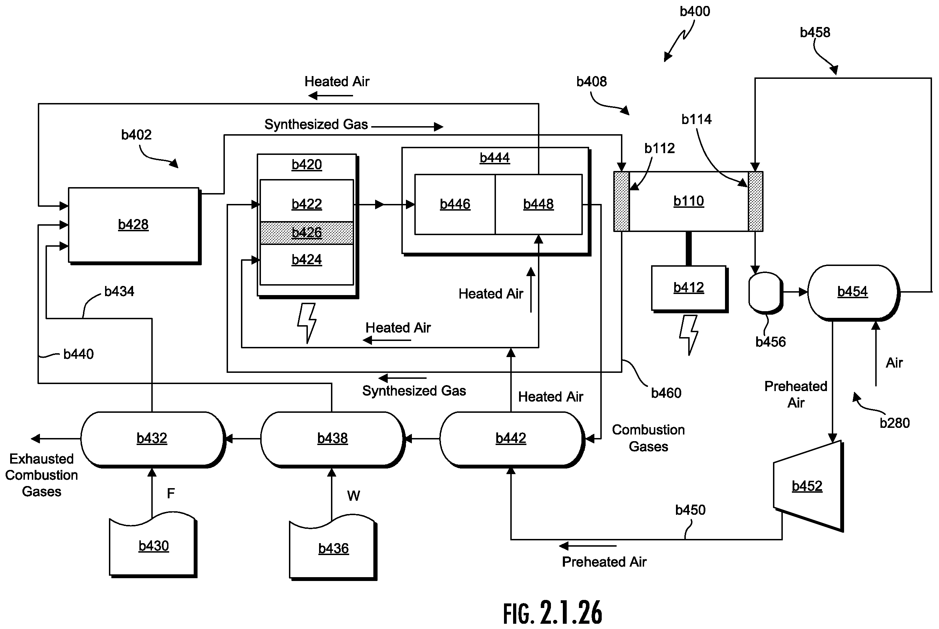

FIG. 2.1.26 provides a schematic view of a power generation system having a prime power generation system and a heat recovery or bottoming-cycle system according to an example embodiment of the present disclosure;

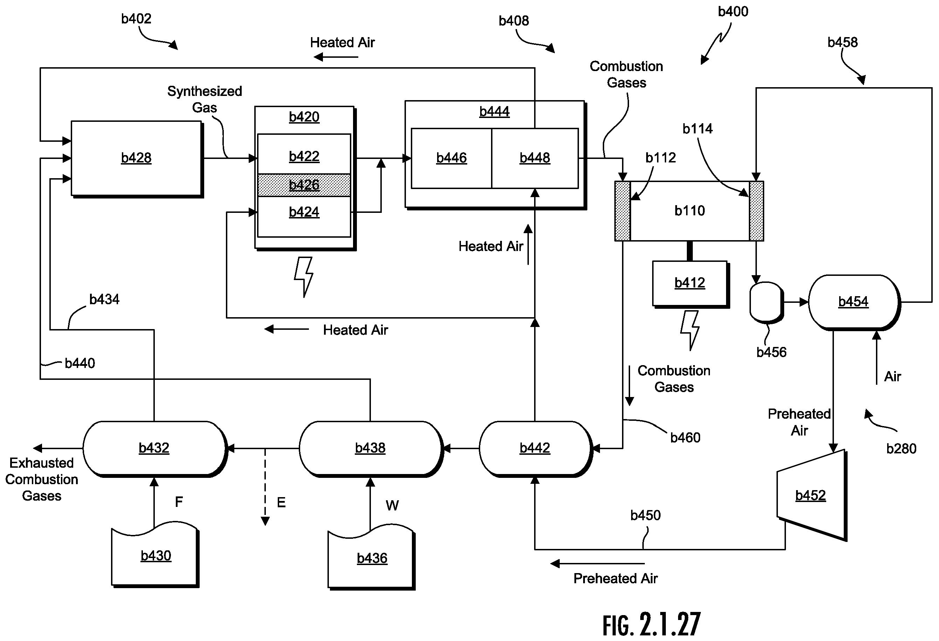

FIG. 2.1.27 provides a schematic view of another power generation system having a prime power generation system and a heat recovery or bottoming-cycle system according to an example embodiment of the present disclosure;

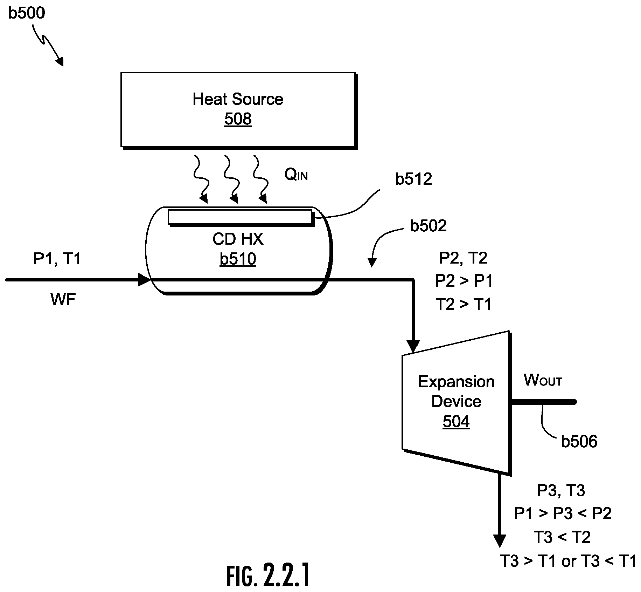

FIG. 2.2.1 provides a schematic view of a Notarnicola cycle system operable to produce useful work according to an example embodiment of the present disclosure;

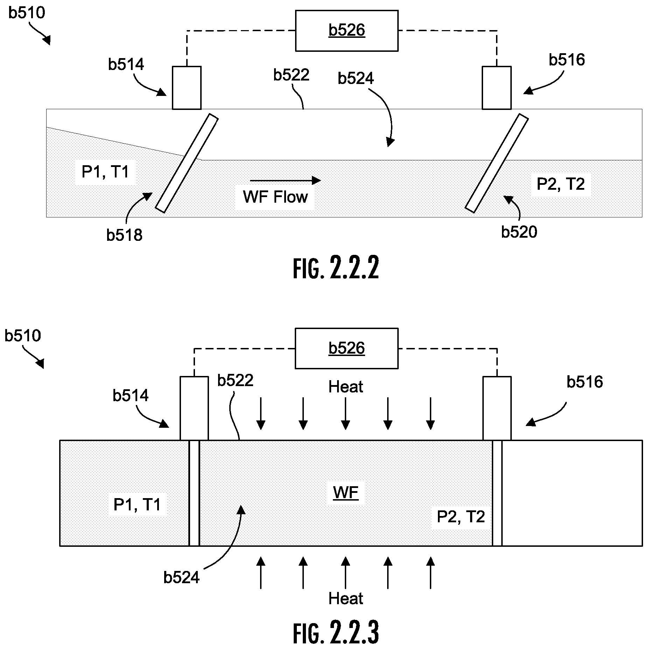

FIGS. 2.2.2 and 2.2.3 provide schematic close-up views of one embodiment of a constant density heat exchanger that can be utilized in the system of FIG. 2.2.1;

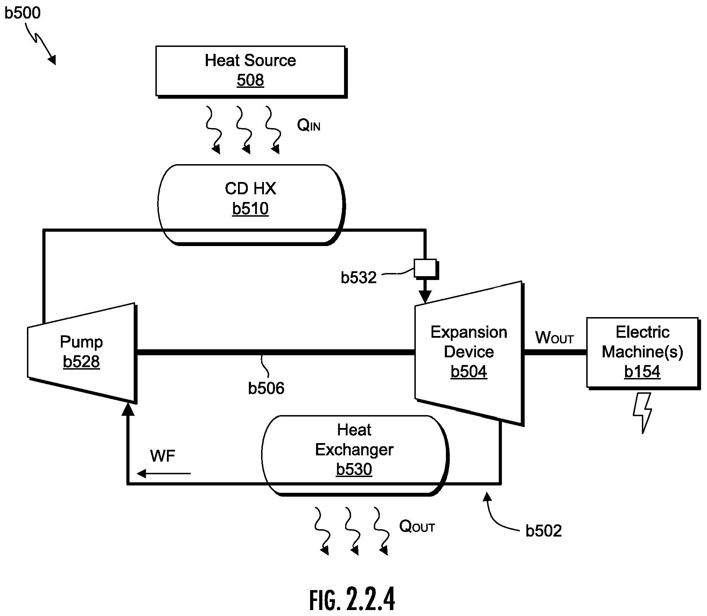

FIG. 2.2.4 provides a schematic view of another system operable to produce useful work according to an example embodiment of the present disclosure;

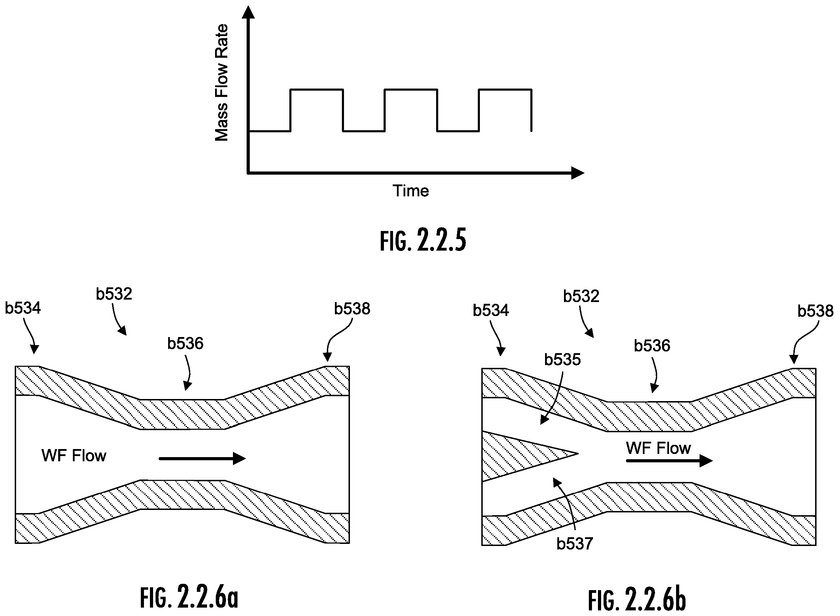

FIG. 2.2.5 graphically depicts the mass flow rate of the working fluid at the outlet of the constant density heat exchanger as a function of time;

FIGS. 2.2.6a and 2.2.6b provide cross-sectional views of example pulse converters that can be utilized with Notarnicola cycle systems of the present disclosure;

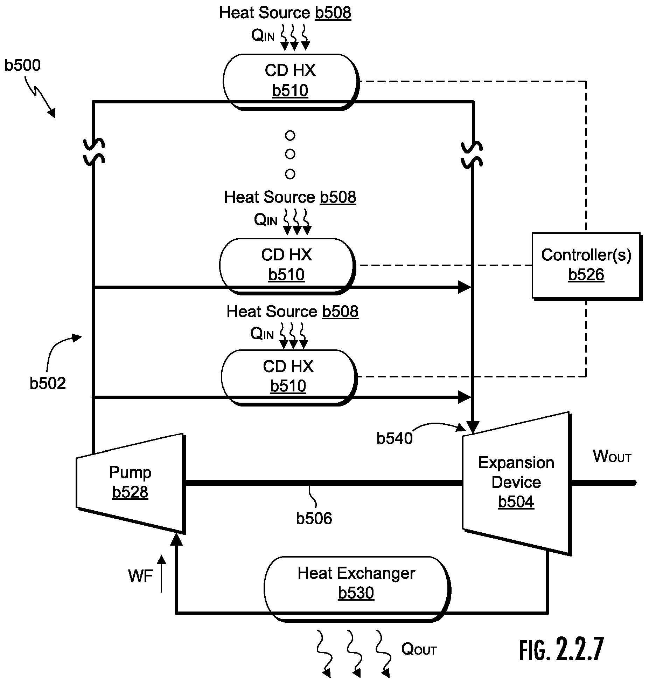

FIG. 2.2.7 provides a schematic view of yet another system operable to produce useful work according to an example embodiment of the present disclosure;

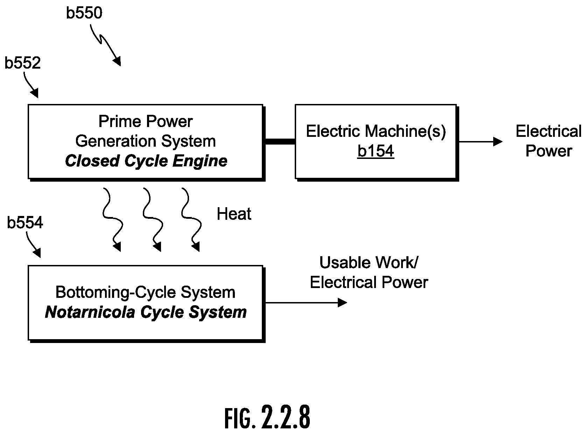

FIG. 2.2.8 provides a schematic view of a power generation system according to an example embodiment of the present disclosure;

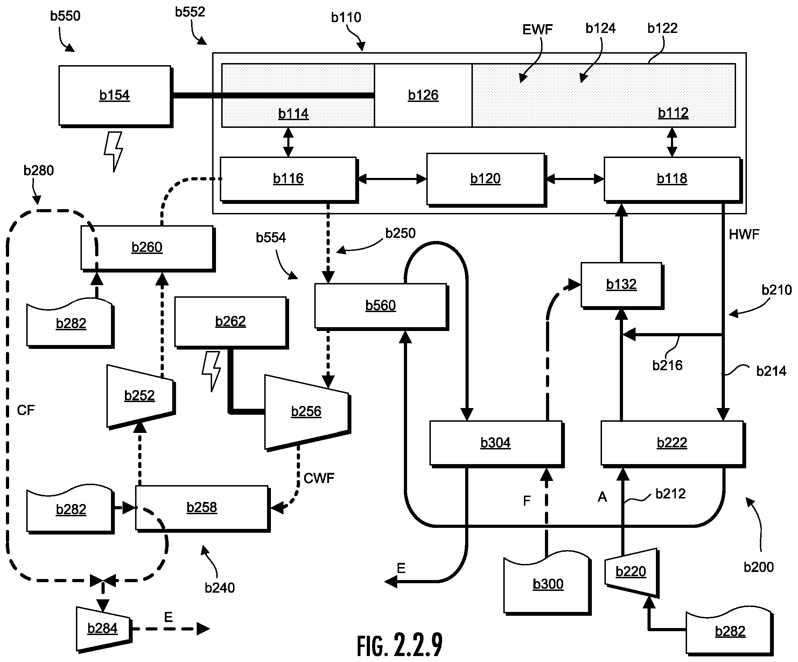

FIG. 2.2.9 provides a schematic view of a power generation system according to an example embodiment of the present disclosure;

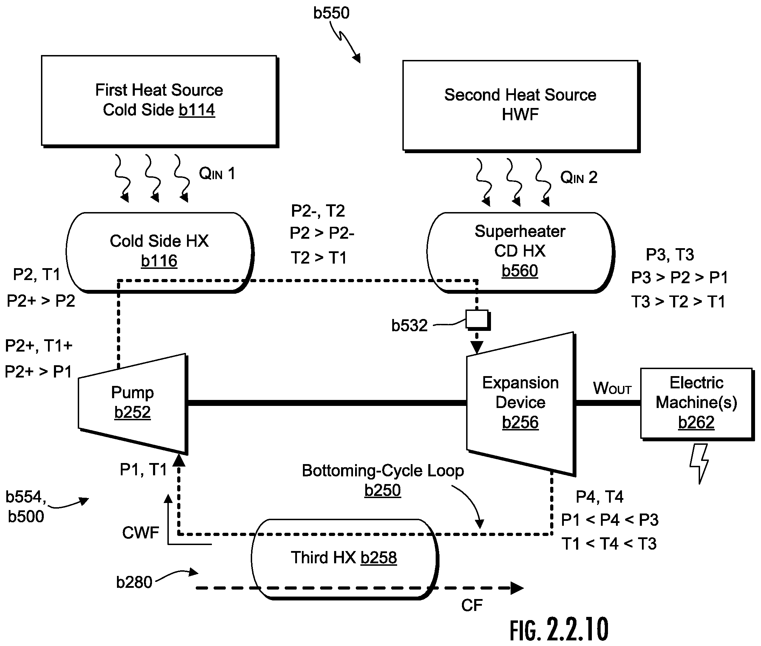

FIG. 2.2.10 provides a close-up schematic view of the bottoming-cycle system of the power generation system of FIG. 2.2.9;

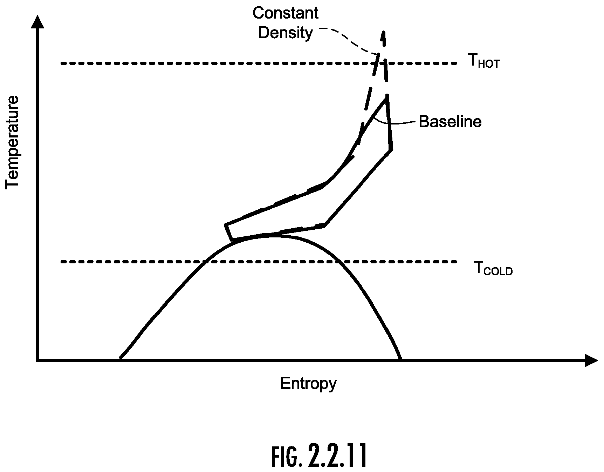

FIG. 2.2.11 graphically depicts the advantages of the constant density heat application process of a Notarnicola cycle system;

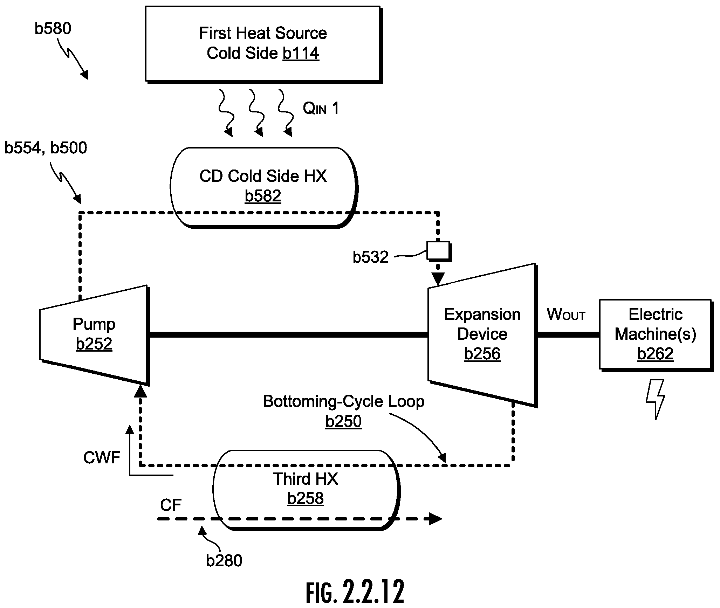

FIG. 2.2.12 provides a schematic view of another power generation system b100 according to an example embodiment of the present disclosure;

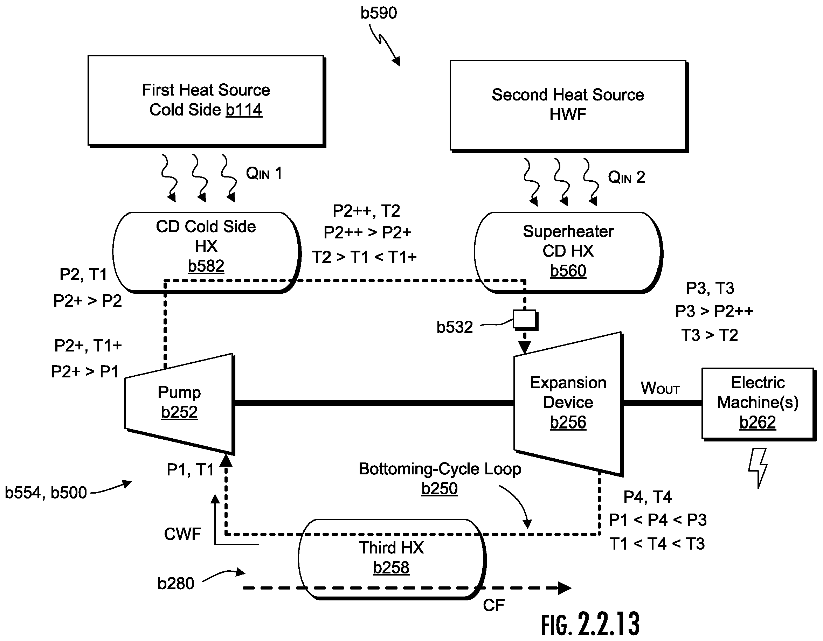

FIG. 2.2.13 provides a schematic view of another power generation system b100 according to an example embodiment of the present disclosure;

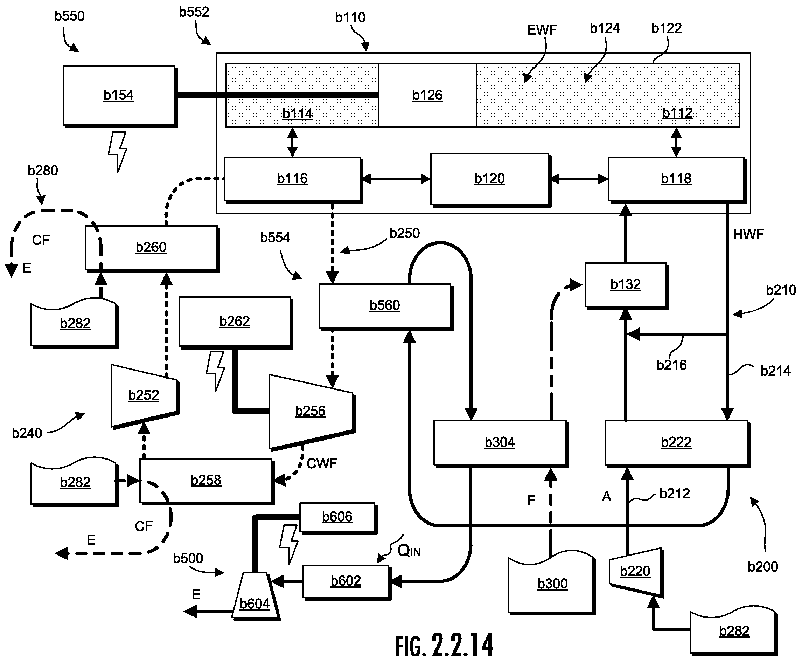

FIG. 2.2.14 provides a schematic view of a power generation system b100 according to an example embodiment of the present disclosure;

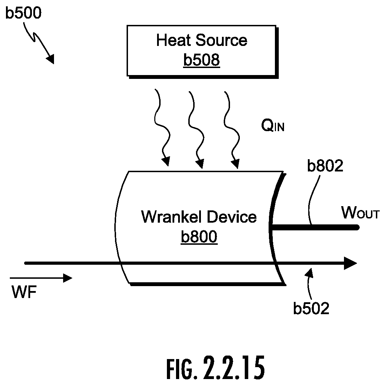

FIG. 2.2.15 provides a schematic view of another Notarnicola cycle system operable to produce useful work according to an example embodiment of the present disclosure;

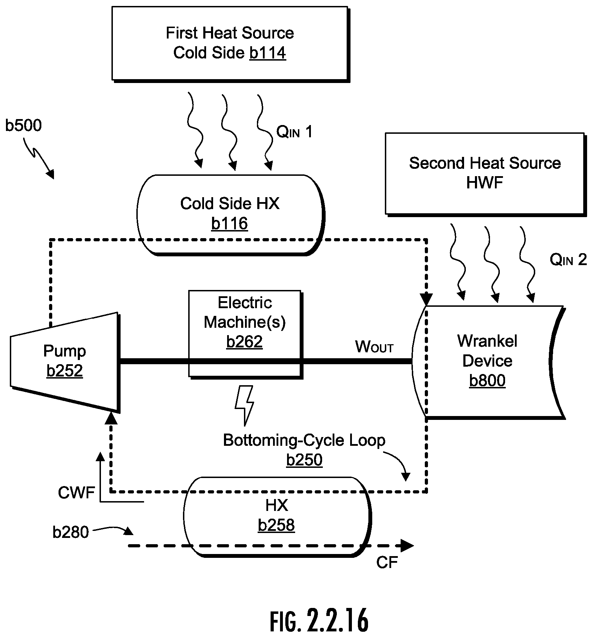

FIG. 2.2.16 provides a schematic view of another Notarnicola cycle system operable to produce useful work according to an example embodiment of the present disclosure;

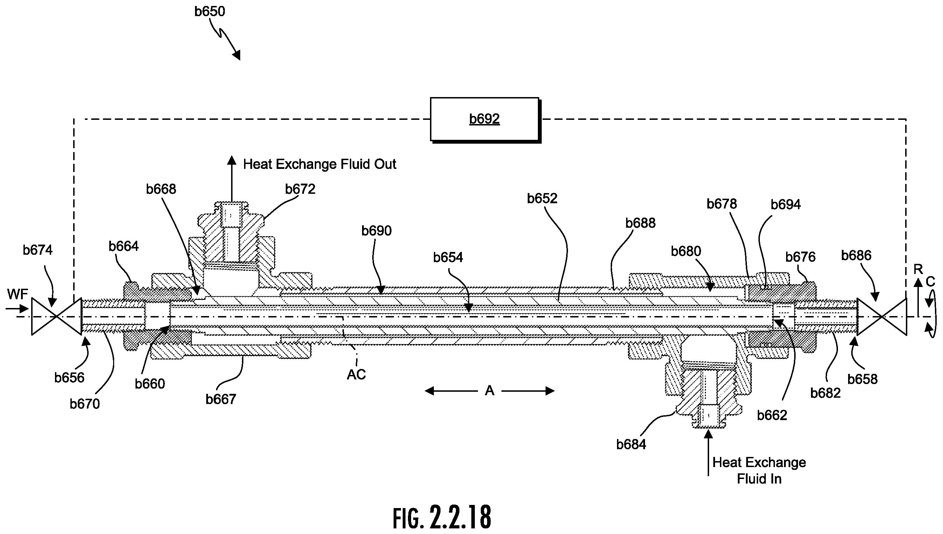

FIG. 2.2.18 provides a schematic cross-sectional view of an example linear constant density heat exchanger according to an aspect of the present disclosure;

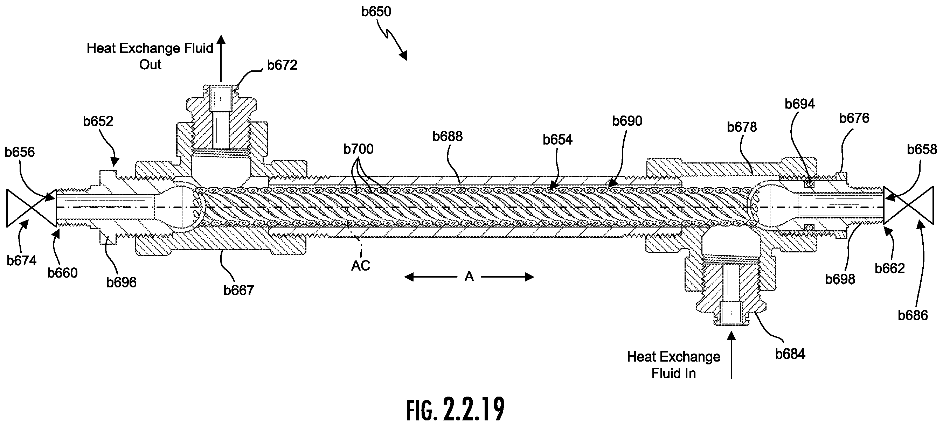

FIG. 2.2.19 provides a schematic cross sectional view of another linear constant density heat exchanger according to an example embodiment of the present disclosure;

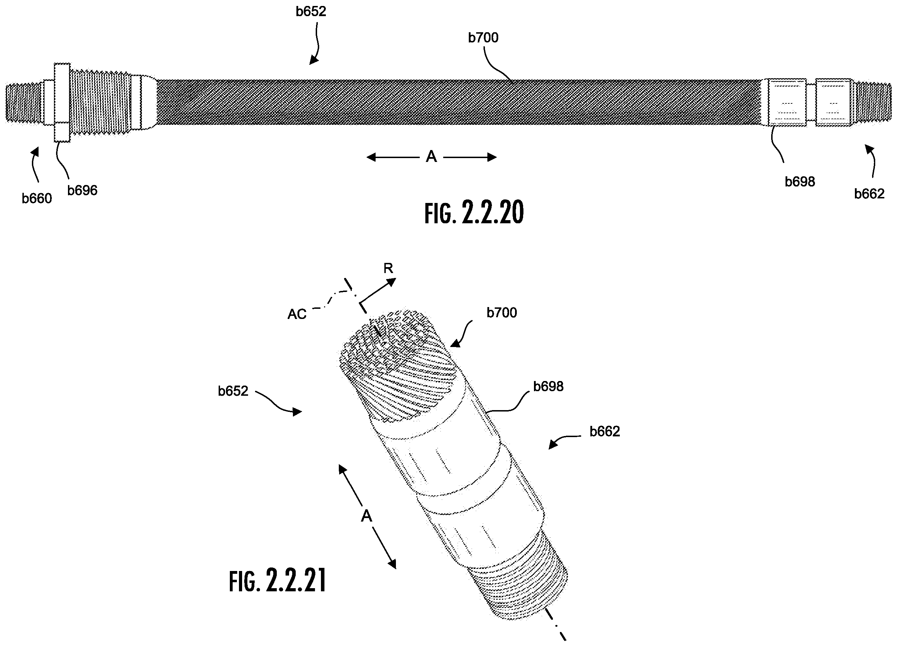

FIG. 2.2.20 provides a side view of a housing that can be implemented in a linear constant density heat exchanger according to an example embodiment of the present disclosure;

FIG. 2.2.21 provides a close-up view of a second end of the housing of FIG. 2.2.20 and depicts a plurality of heat exchange tubes with their ends cutoff for illustrative purposes;

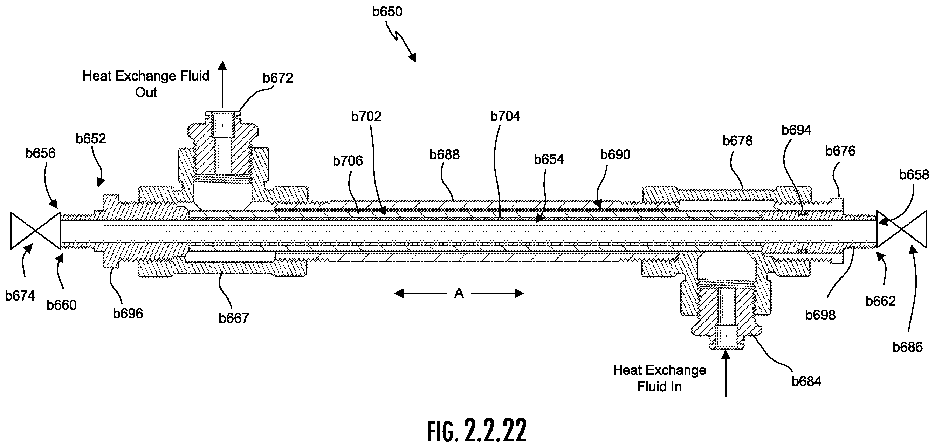

FIG. 2.2.22 provides a schematic cross sectional view of another example linear constant density heat exchanger according to an aspect of the present disclosure;

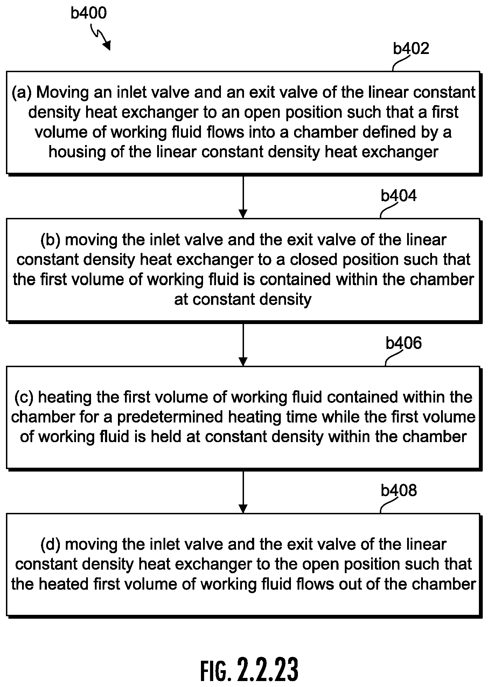

FIG. 2.2.23 provides a flow diagram for a method of controlling a linear constant density heat exchanger according to an aspect of the present disclosure;

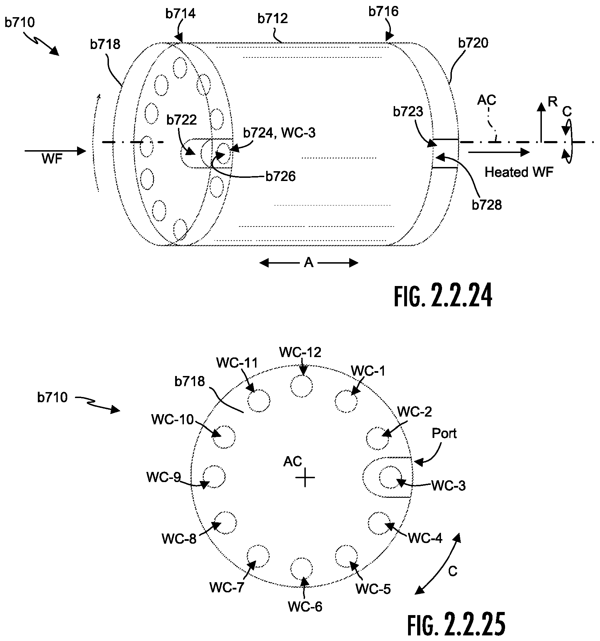

FIG. 2.2.24 provides a perspective view of a rotary constant density heat exchanger according to an example embodiment of the present disclosure;

FIG. 2.2.25 provides a front view of the rotary constant density heat exchanger of FIG. 2.2.24;

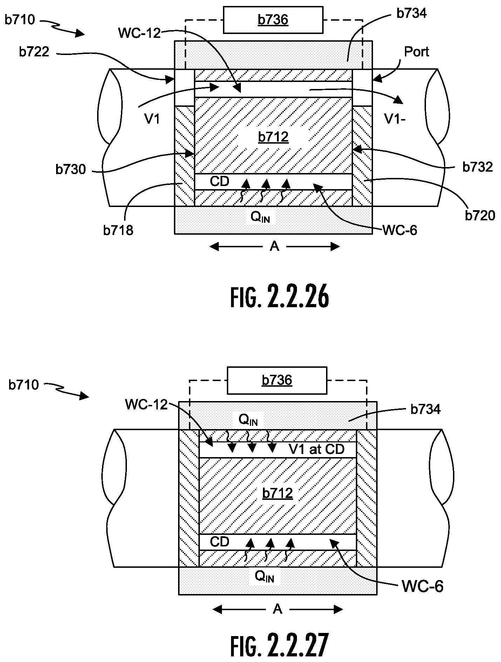

FIG. 2.2.26 provides a cross-sectional view of the rotary constant density heat exchanger of FIG. 2.2.24 and 2.2.25 with the ports of the first plate and second plate positioned at a twelve o'clock position;

FIG. 2.2.27 provides a cross-sectional view of the rotary constant density heat exchanger of FIGS. 2.2.24 and 2.2.25 with the ports of the first plate and second plate not positioned at the twelve o'clock position;

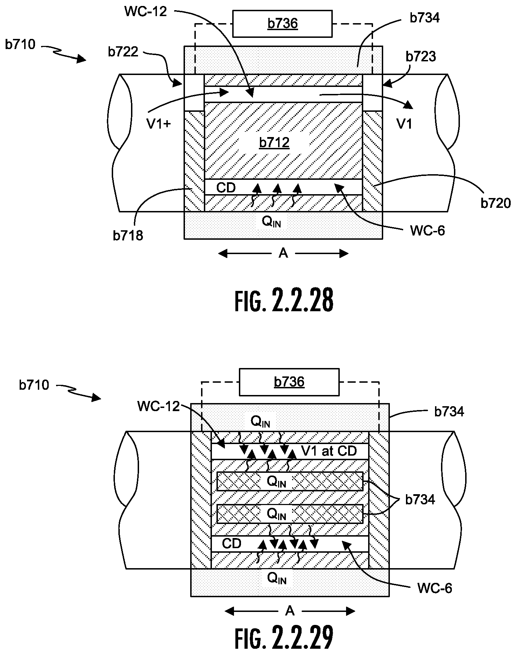

FIG. 2.2.28 provides a cross-sectional view of the rotary constant density heat exchanger of FIGS. 2.2.24 and 2.2.25 with the ports of the first plate and second plate positioned at the twelve o'clock position after one revolution of the plates;

FIG. 2.2.29 provides a cross-sectional view of another rotary constant density heat exchanger having one or more heat sources positioned radially inward of the working chambers;

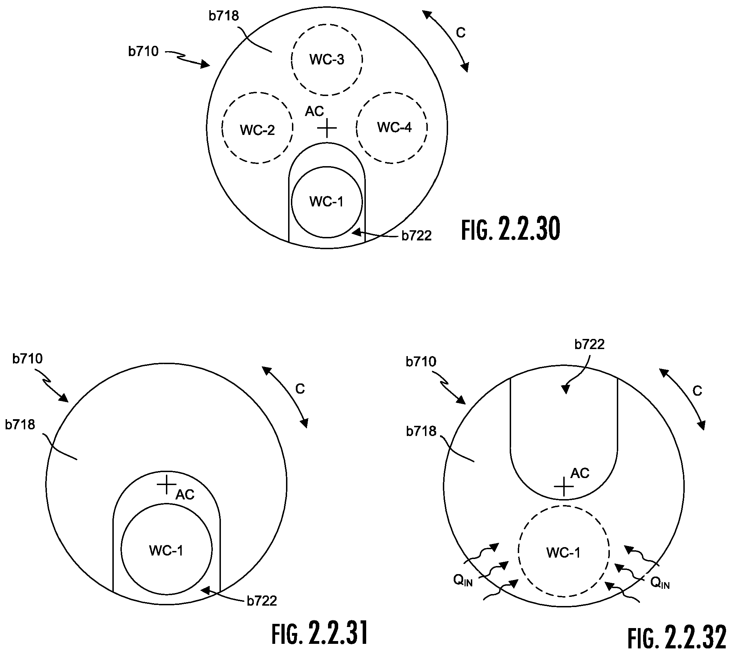

FIG. 2.2.30 provides a front view of another rotary constant density heat exchanger according to an example embodiment of the present disclosure;

FIGS. 2.2.31 and 2.2.32 provide front views of another rotary constant density heat exchanger according to an example embodiment of the present disclosure;

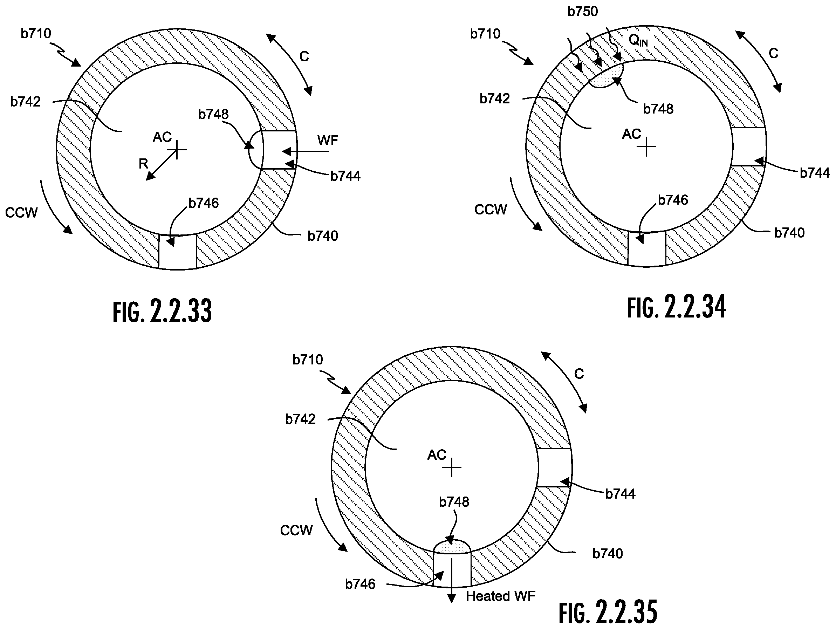

FIGS. 2.2.33, 2.2.34, and 2.2.35 provide various views of another rotary constant density heat exchanger according to an example embodiment of the present disclosure;

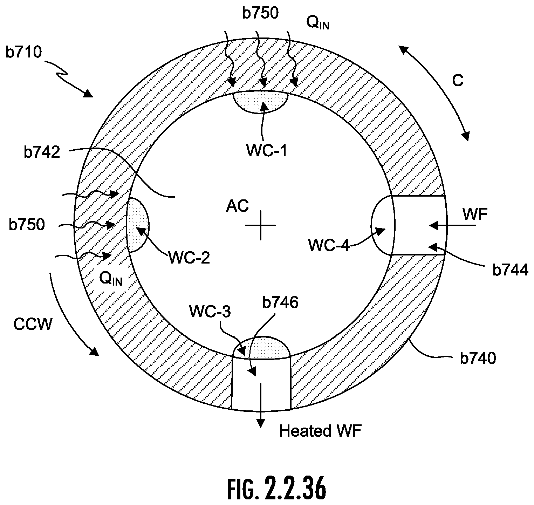

FIG. 2.2.36 provides a schematic view of another rotary constant density heat exchanger according to an example embodiment of the present disclosure;

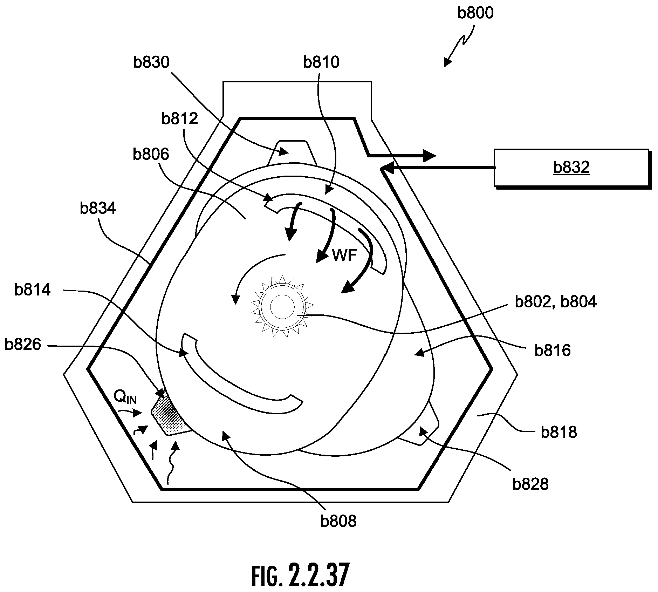

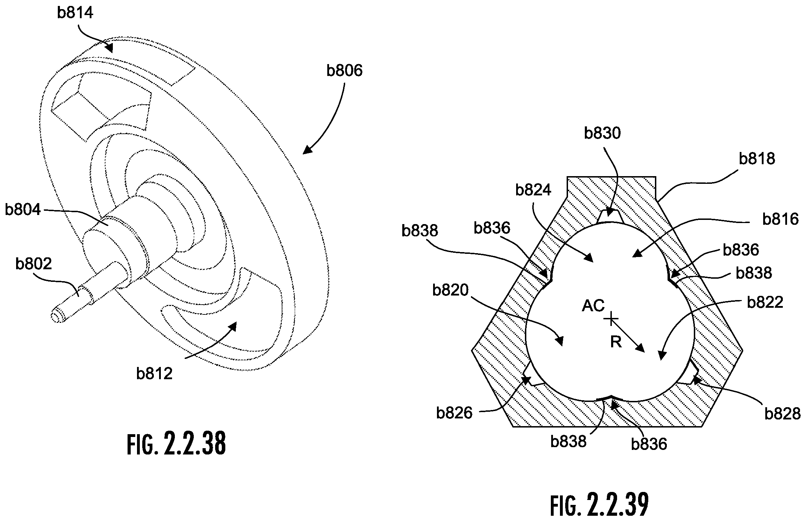

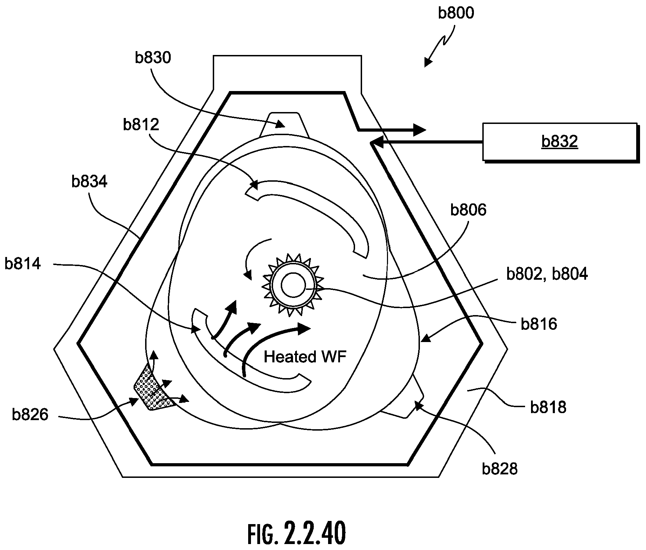

FIGS. 2.2.37, 2.2.38, 2.2.39, and 2.2.40 provide various views of an example Wrankel device and components thereof according to an aspect of the present disclosure;

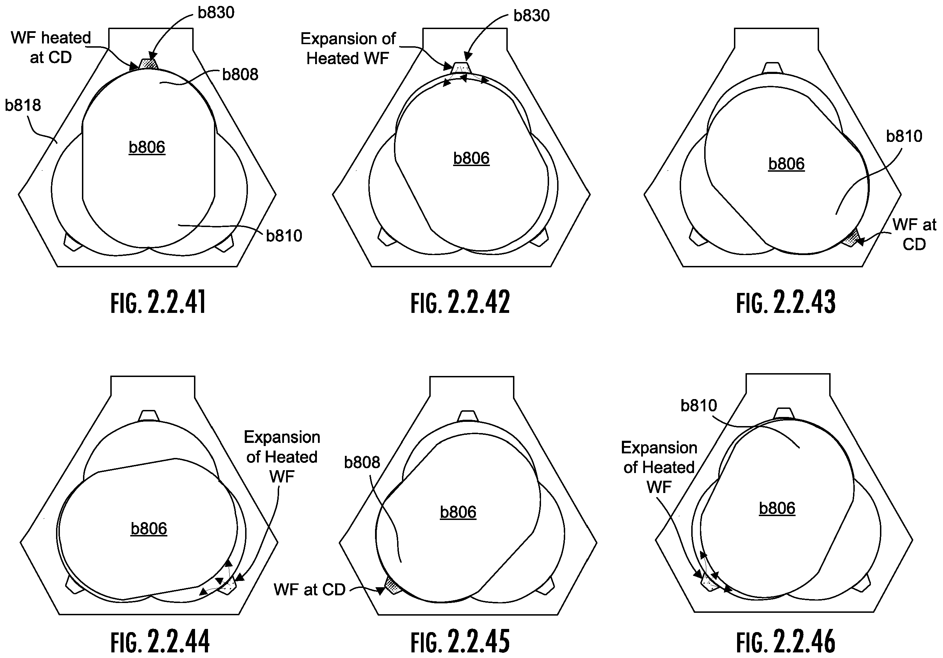

FIGS. 2.2.41 through 2.2.46 provide various schematic axial views of the Wrankel device of FIGS. 2.2.37 through 2.2.40 and show the rotor in different positions through its rotation or eccentric path; and

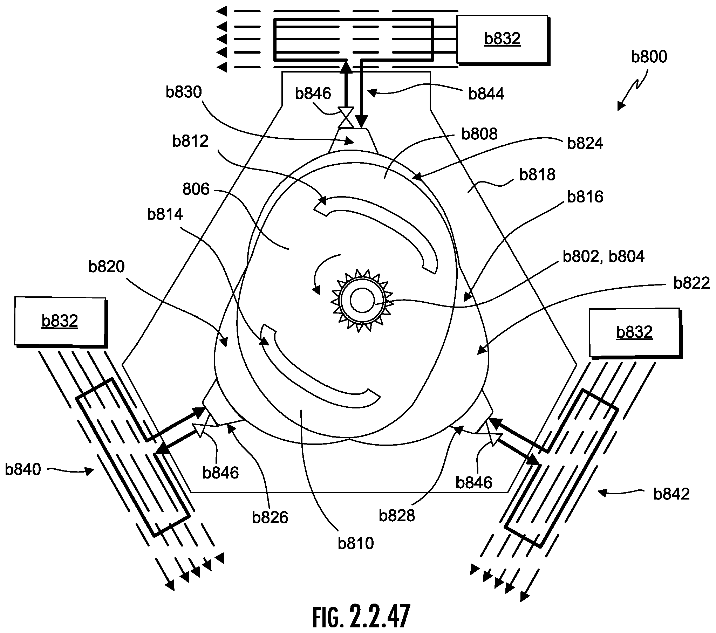

FIG. 2.2.47 provides a schematic axial view of another Wrankel device according to an example embodiment of the present disclosure.

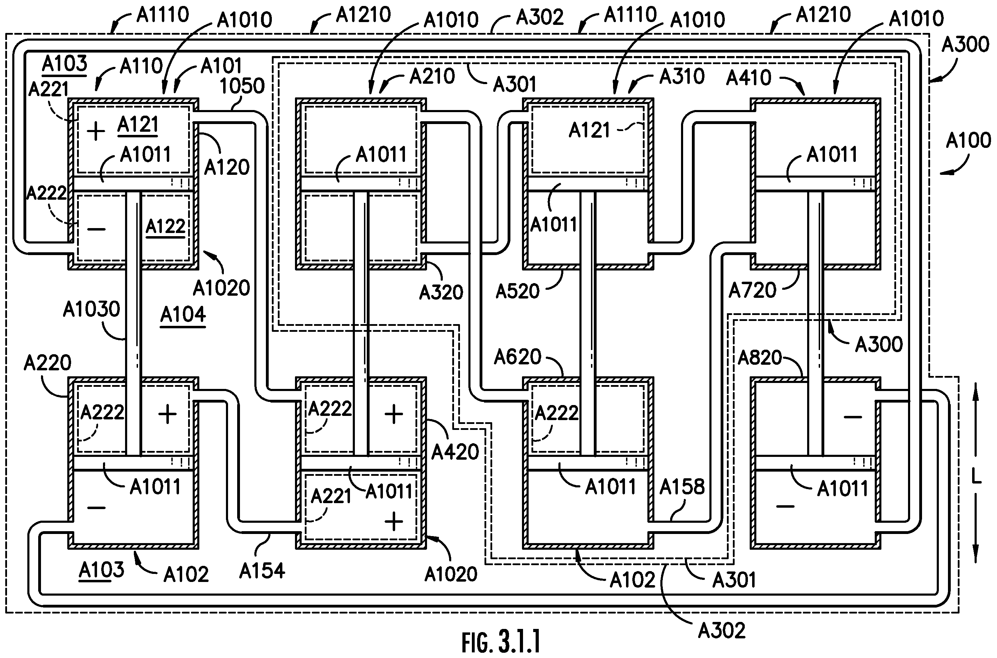

FIG. 3.1.1 is an exemplary schematic layout view of an embodiment of a piston engine apparatus according to aspects of the present disclosure;

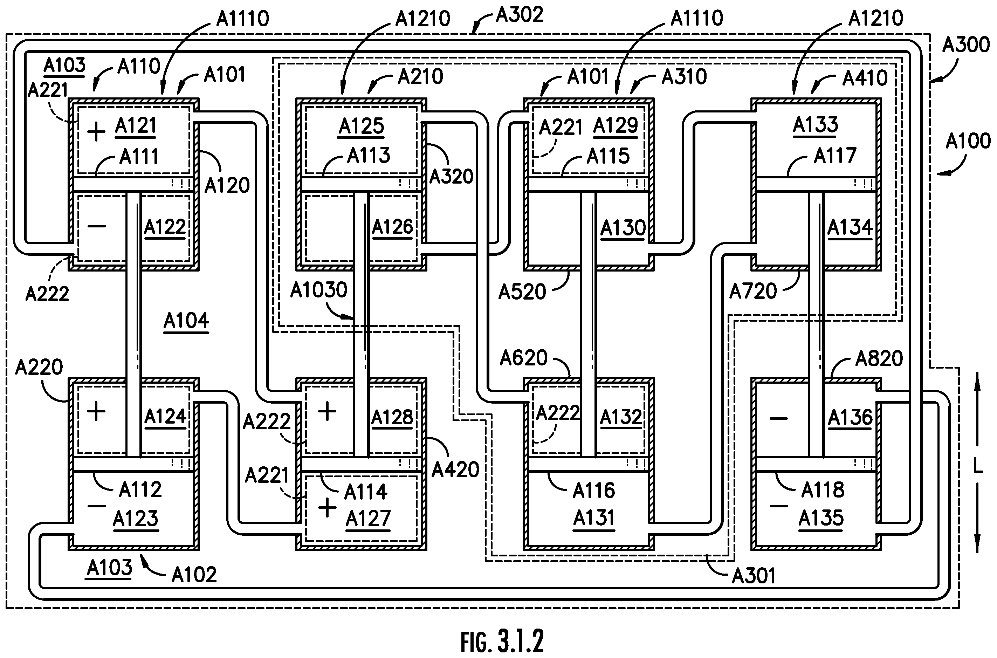

FIG. 3.1.2 is an exemplary schematic layout view of an embodiment of a piston engine apparatus according to aspects of the present disclosure;

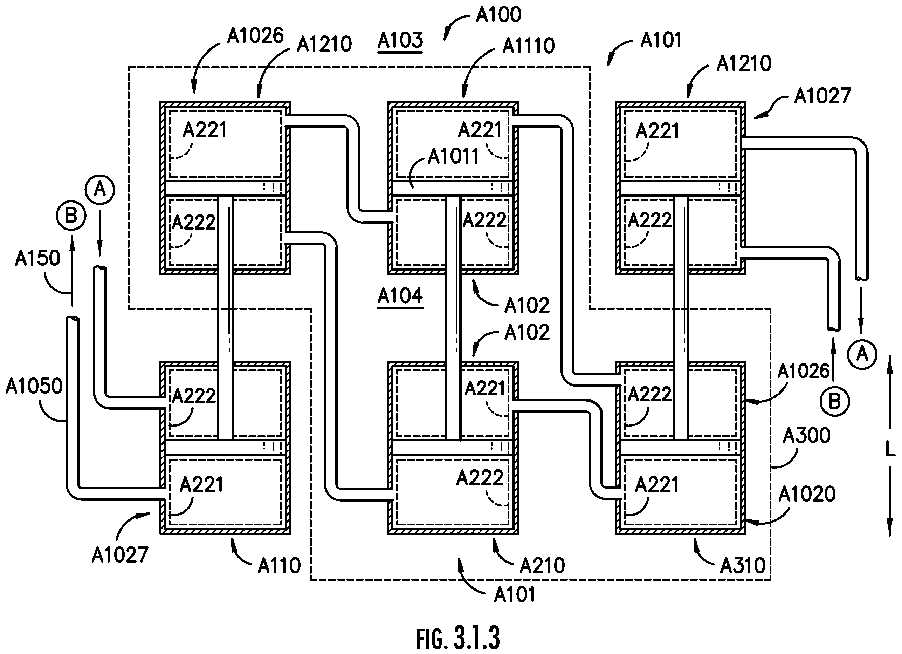

FIG. 3.1.3 is an exemplary schematic layout view of a three-piston assembly embodiment of a piston engine apparatus according to aspects of the present disclosure;

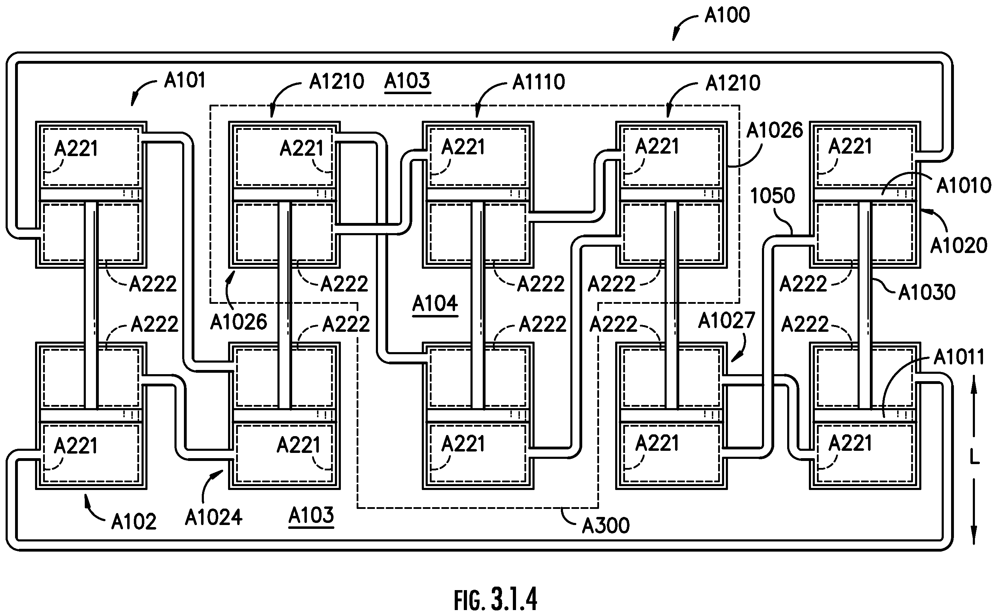

FIG. 3.1.4 is an exemplary schematic layout view of a five-piston assembly embodiment of a piston engine apparatus according to aspects of the present disclosure;

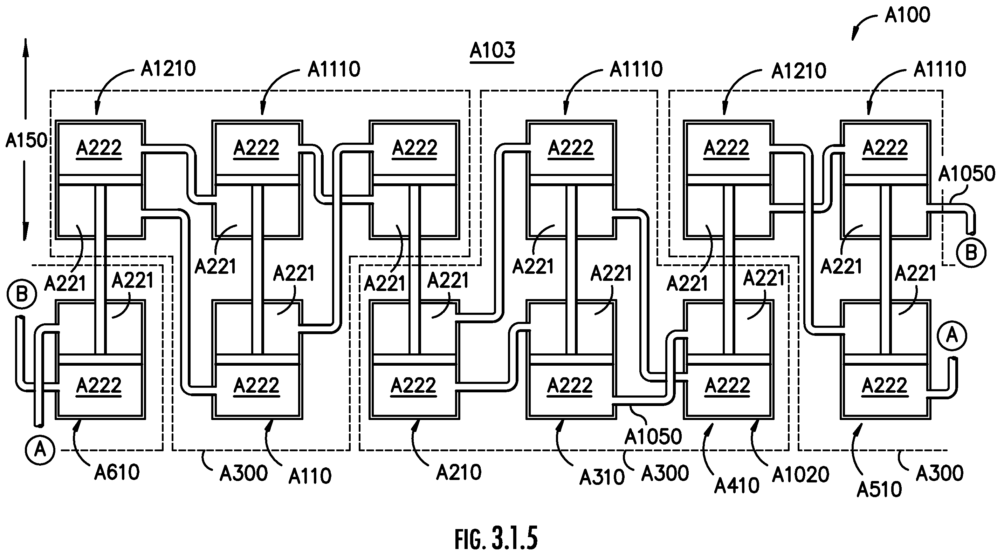

FIG. 3.1.5 is an exemplary schematic layout view of a six-piston assembly embodiment of a piston engine apparatus according to aspects of the present disclosure;

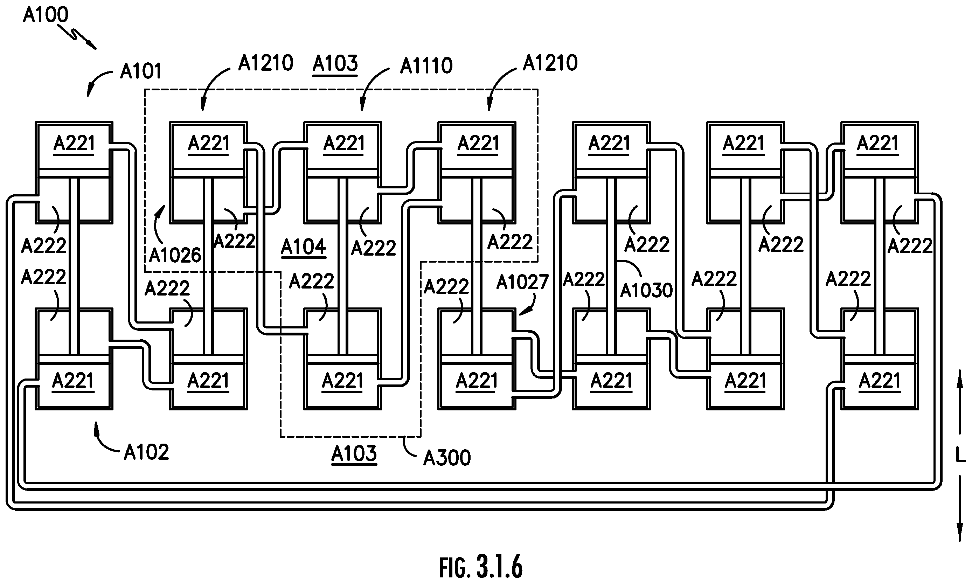

FIG. 3.1.6 is an exemplary schematic layout view of a seven-piston assembly embodiment of a piston engine apparatus according to aspects of the present disclosure;

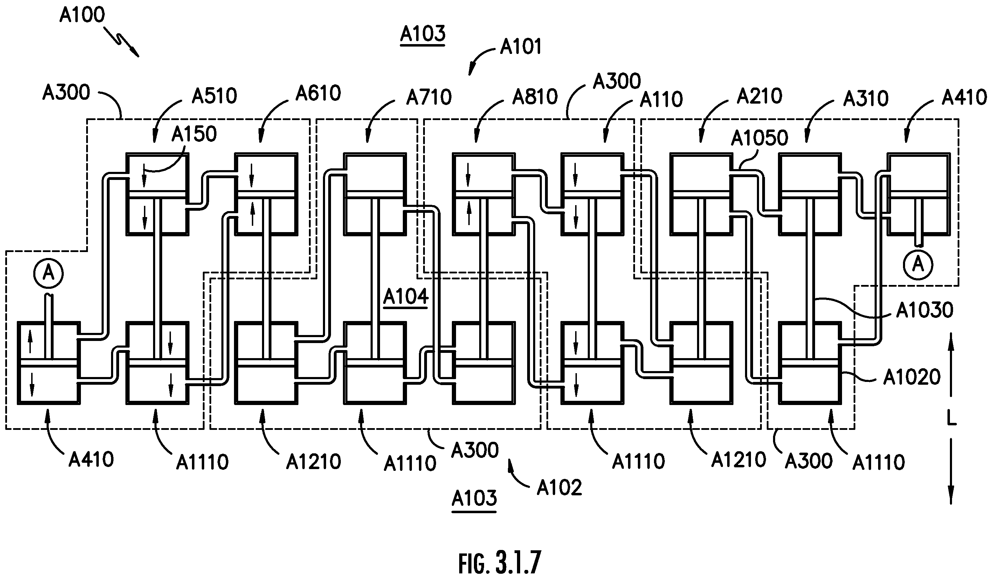

FIG. 3.1.7 is an exemplary schematic layout view of an eight-piston assembly embodiment of a piston engine apparatus according to aspects of the present disclosure;

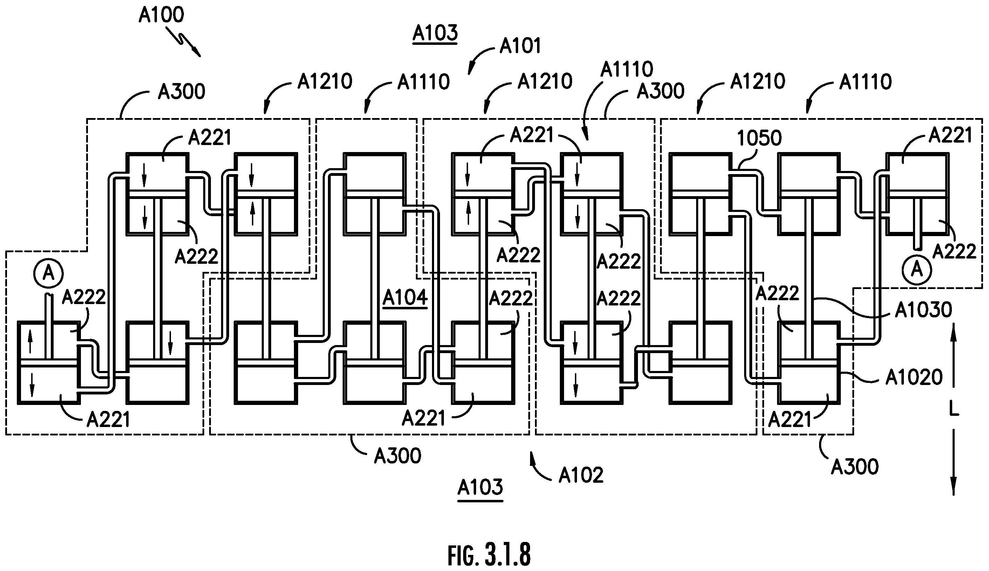

FIG. 3.1.8 is an exemplary schematic layout view of another eight-piston assembly embodiment of a piston engine apparatus according to aspects of the present disclosure;

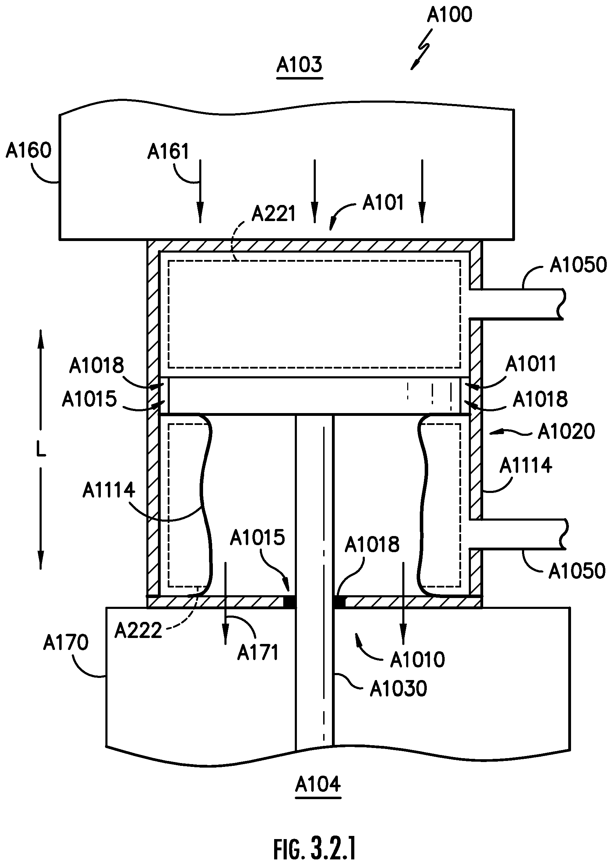

FIG. 3.2.1 is an exemplary schematic layout view of an embodiment of a portion of a piston assembly of the apparatus according to aspects of the present disclosure;

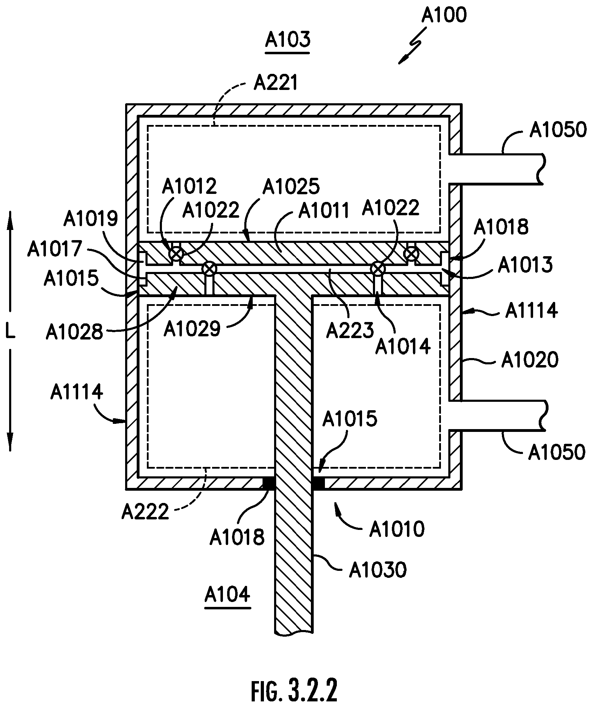

FIG. 3.2.2 is an exemplary schematic layout view of another embodiment of a portion of a piston assembly of the apparatus according to aspects of the present disclosure;

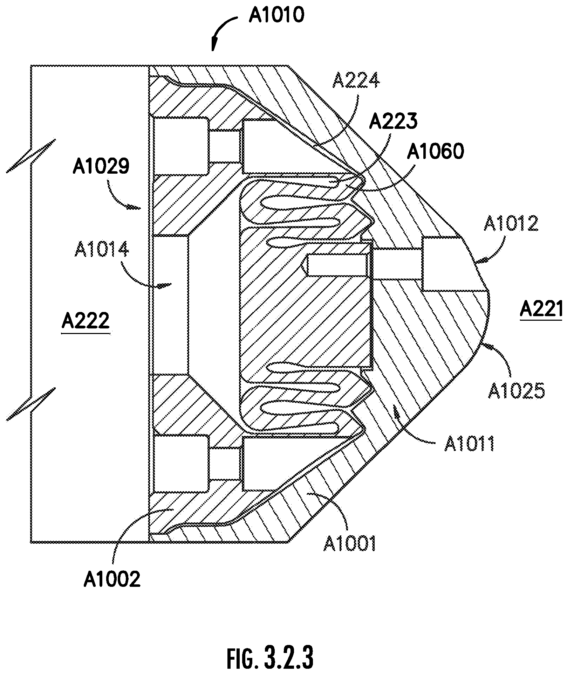

FIG. 3.2.3 is an exemplary cross-sectional view of an embodiment of a portion of a piston assembly of the apparatus according to aspects of the present disclosure;

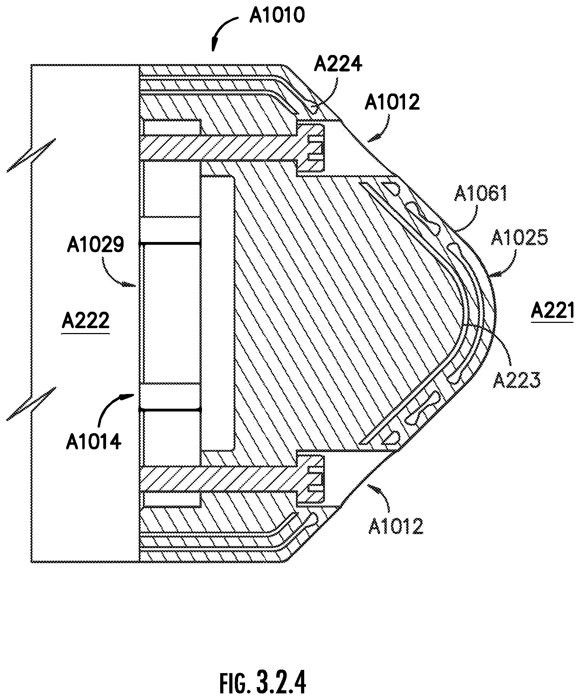

FIG. 3.2.4 is an exemplary cross-sectional view of another embodiment of a portion of a pi

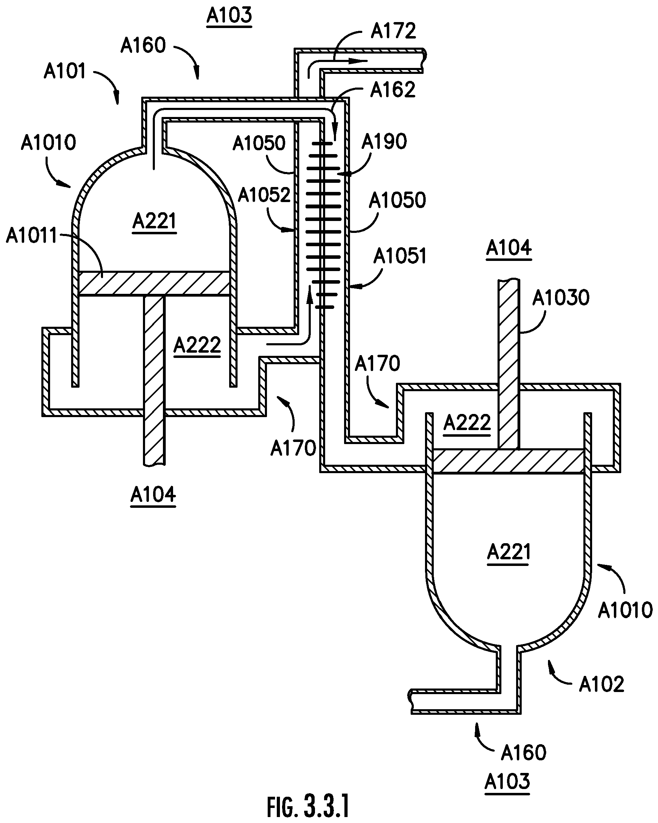

FIG. 3.3.1 depict exemplary embodiments of a heat exchanger at the apparatus according to aspects of the present disclosure;

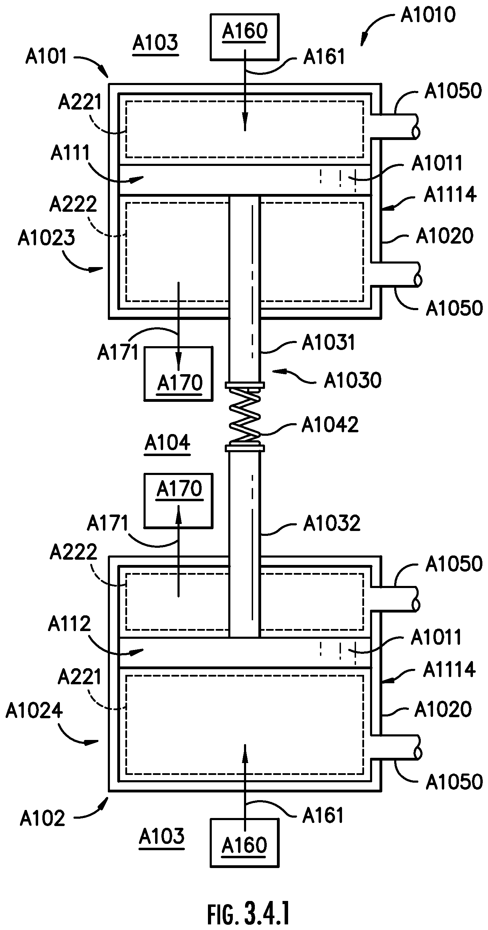

FIG. 3.4.1 is an exemplary embodiment of a piston assembly of the apparatus according to aspects of the present disclosure;

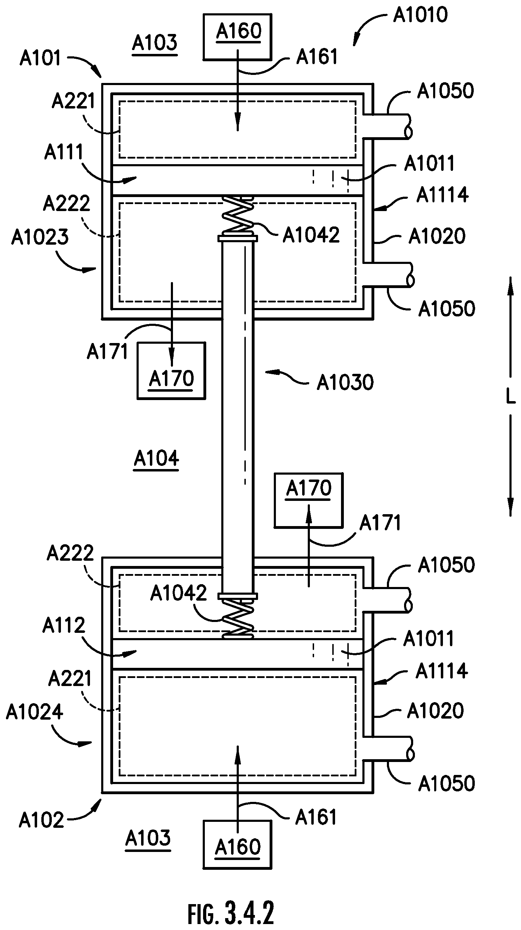

FIG. 3.4.2 is another exemplary embodiment of a piston assembly of the apparatus according to aspects of the present disclosure;

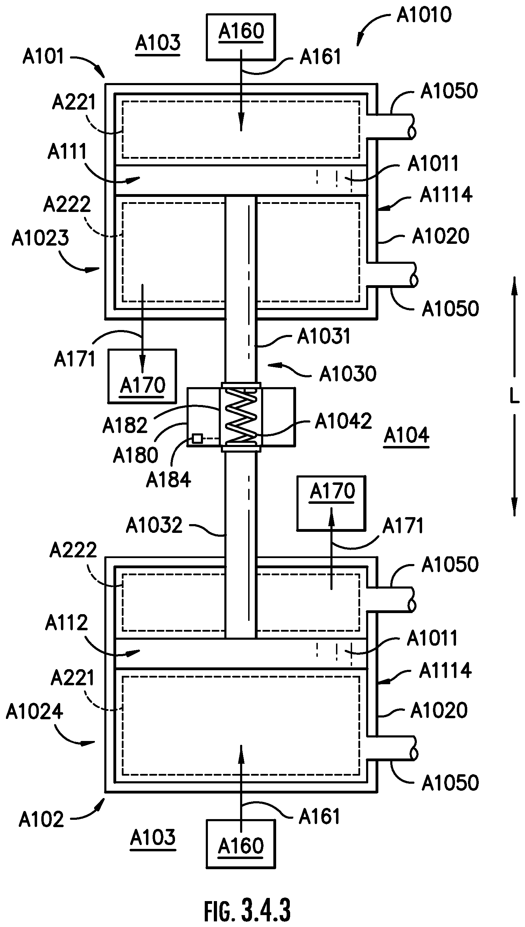

FIG. 3.4.3 is yet another exemplary embodiment of a piston assembly of the apparatus according to aspects of the present disclosure;

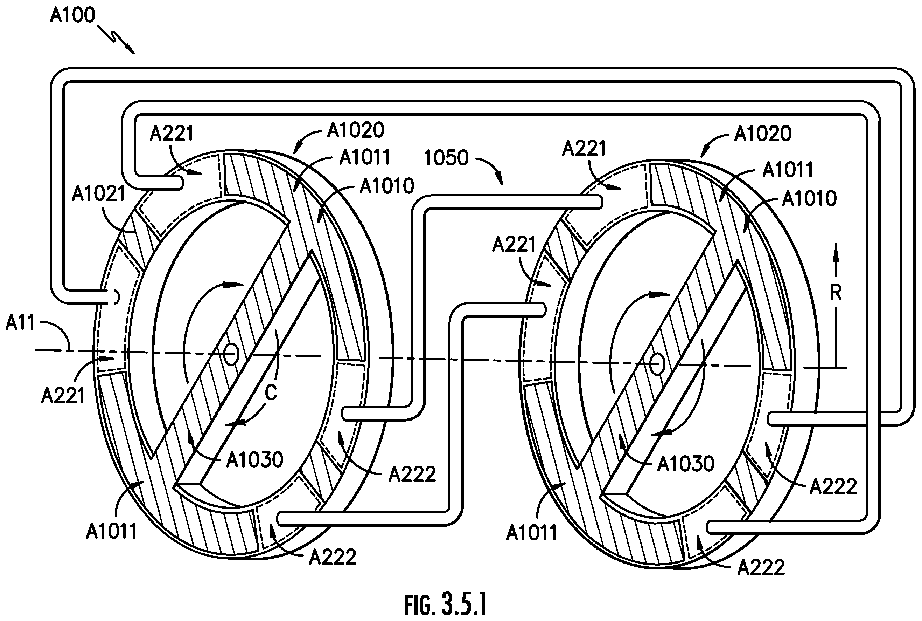

FIG. 3.5.1 is an exemplary embodiment of a piston engine apparatus according to aspects of the present disclosure;

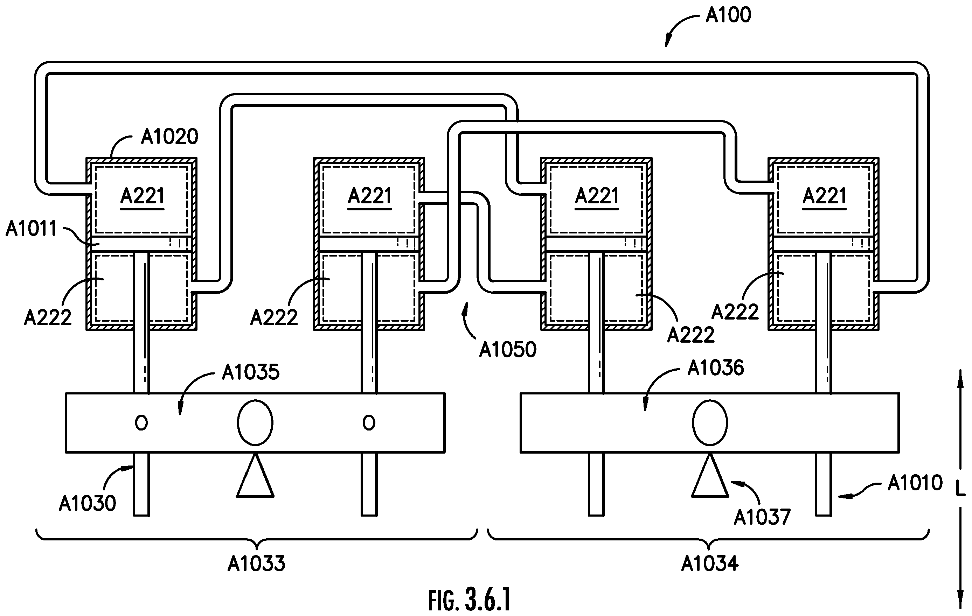

FIG. 3.6.1 is an exemplary embodiment of a piston engine apparatus according to aspects of the present disclosure;

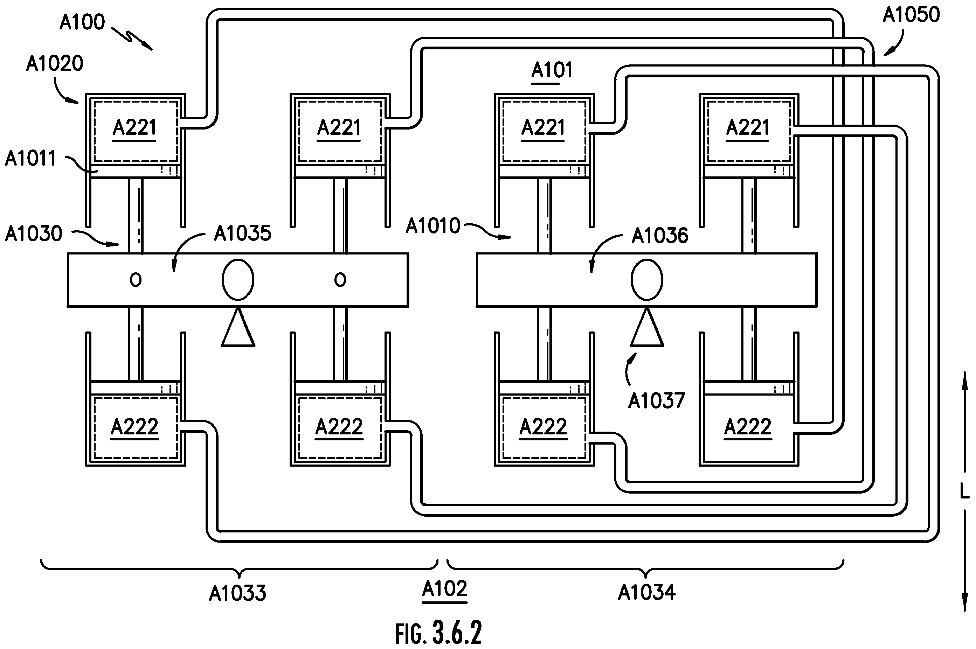

FIG. 3.6.2 is an exemplary embodiment of a piston engine apparatus according to aspects of the present disclosure; and

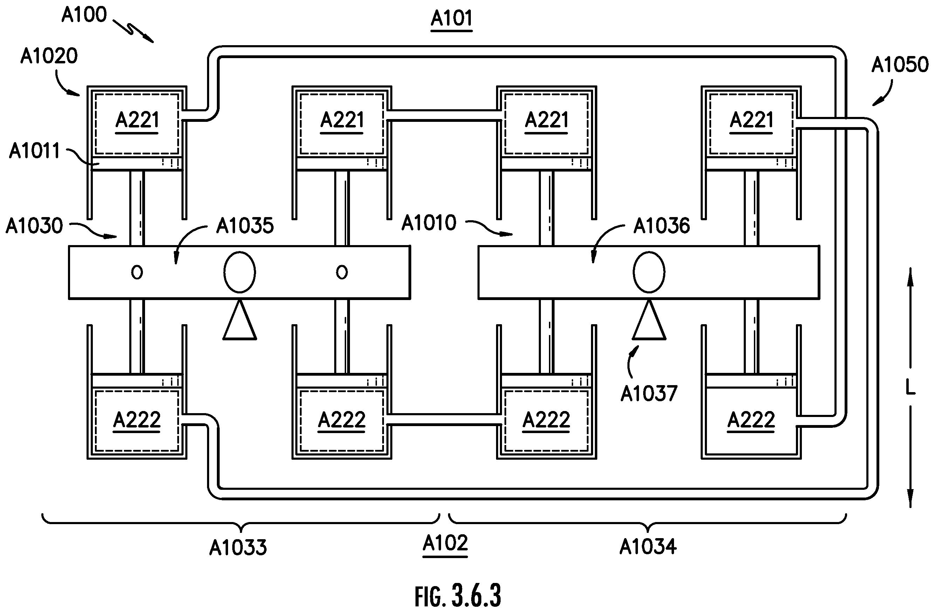

FIG. 3.6.3 is an exemplary embodiment of a piston engine apparatus according to aspects of the present disclosure.

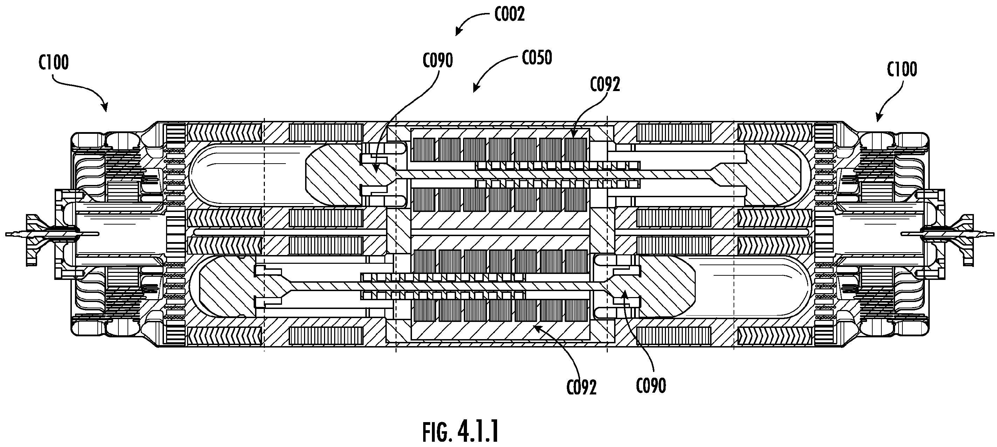

FIG. 4.1.1 schematically depicts a cross-sectional view of an exemplary closed-cycle engine, which may be a regenerative heat engine and/or a Stirling engine;

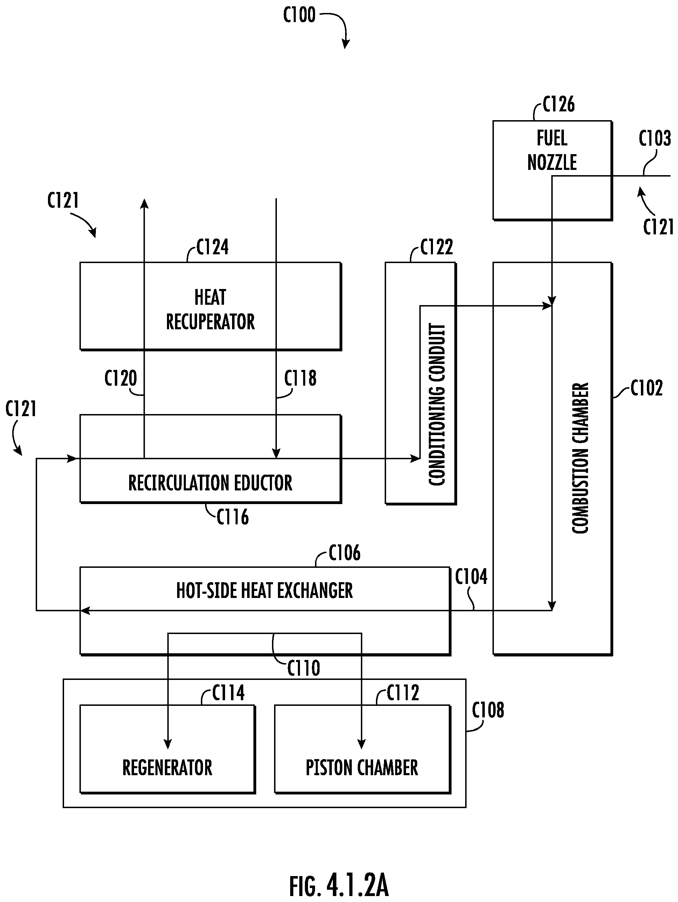

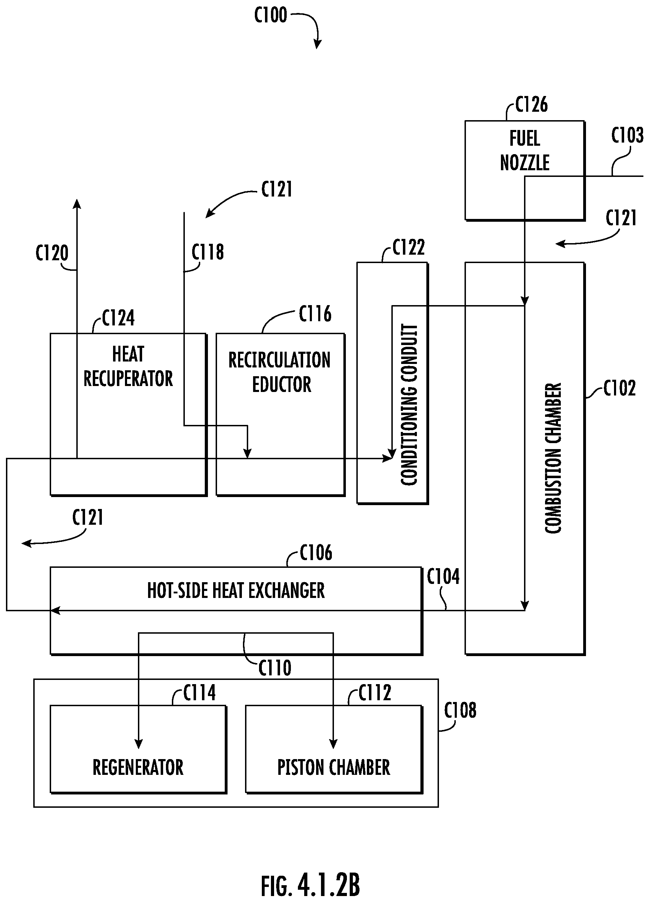

FIGs. 4.1.2A and 4.1.2B schematically depict an exemplary heater bodies, which, for example, may be included in the closed-cycle engine shown in FIG. 4.1.1;

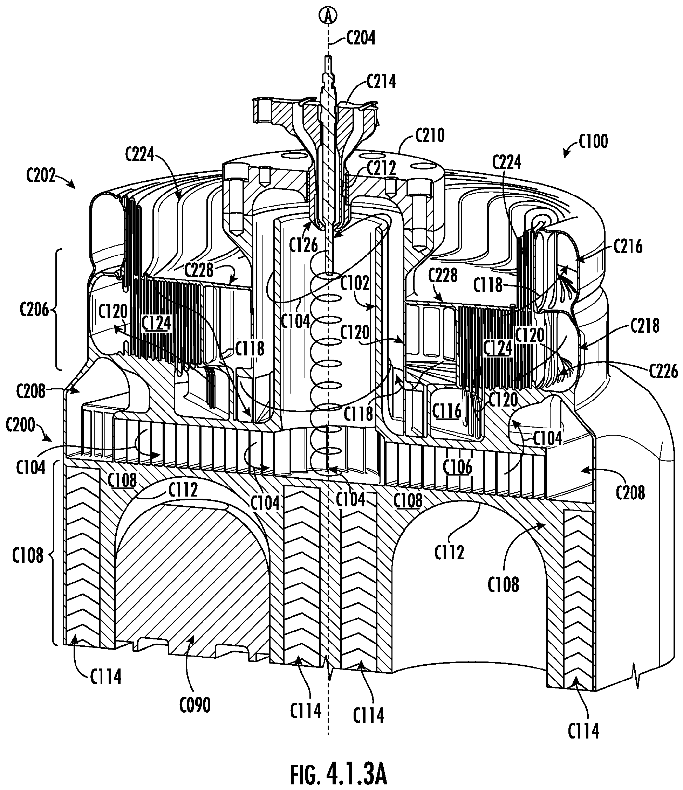

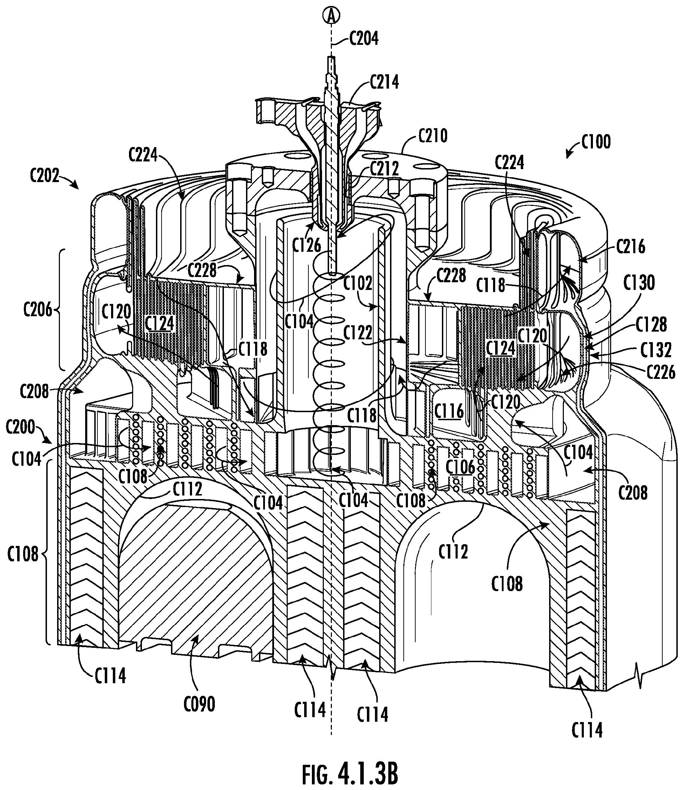

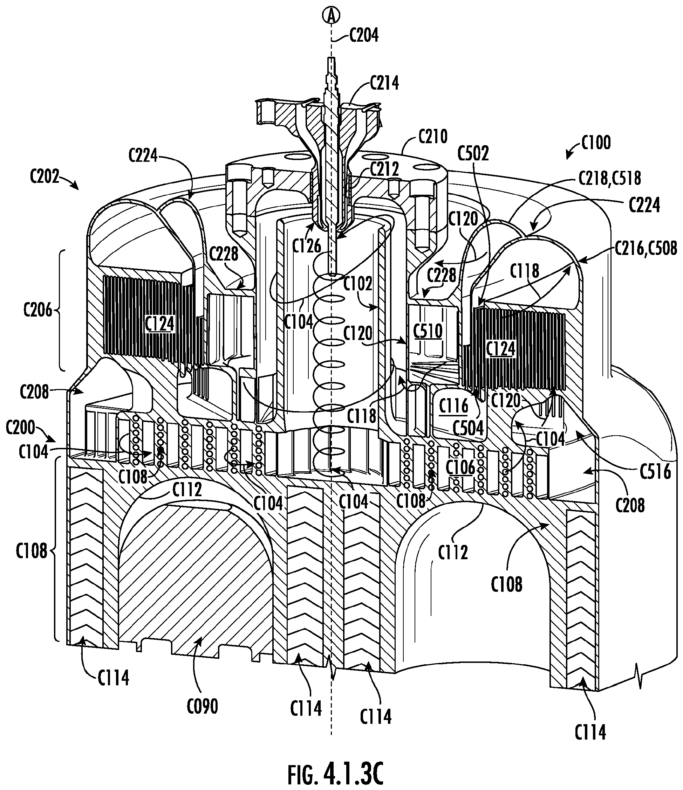

FIGs. 4.1.3A, 4.1.3B, and 4.1.3C schematically depict a cross-sectional perspective view of an exemplary heater body, which, for example, may be included in the closed-cycle engine shown in FIG. 4.1.1;

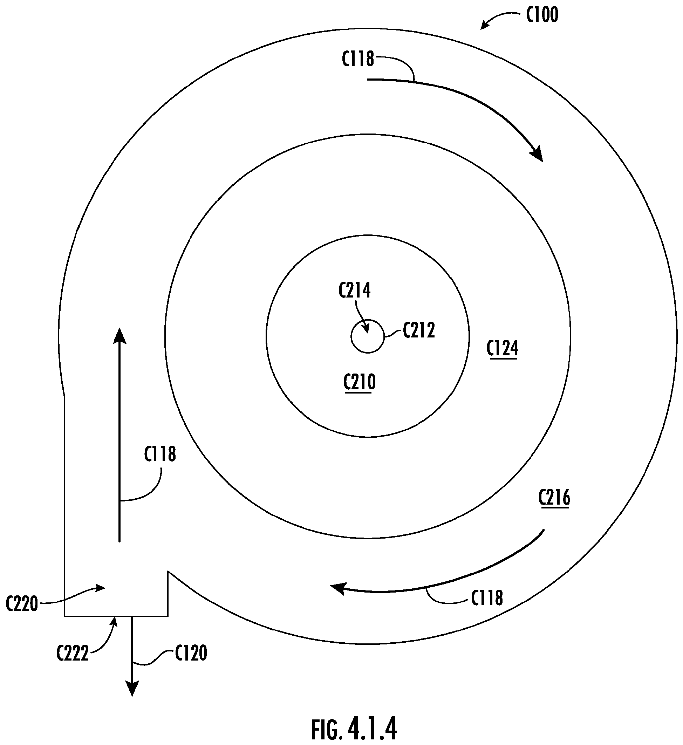

FIG. 4.1.4 schematically depicts a top view of an exemplary heater body, which, for example, may be included in the closed-cycle engine shown in FIG. 4.1.1;

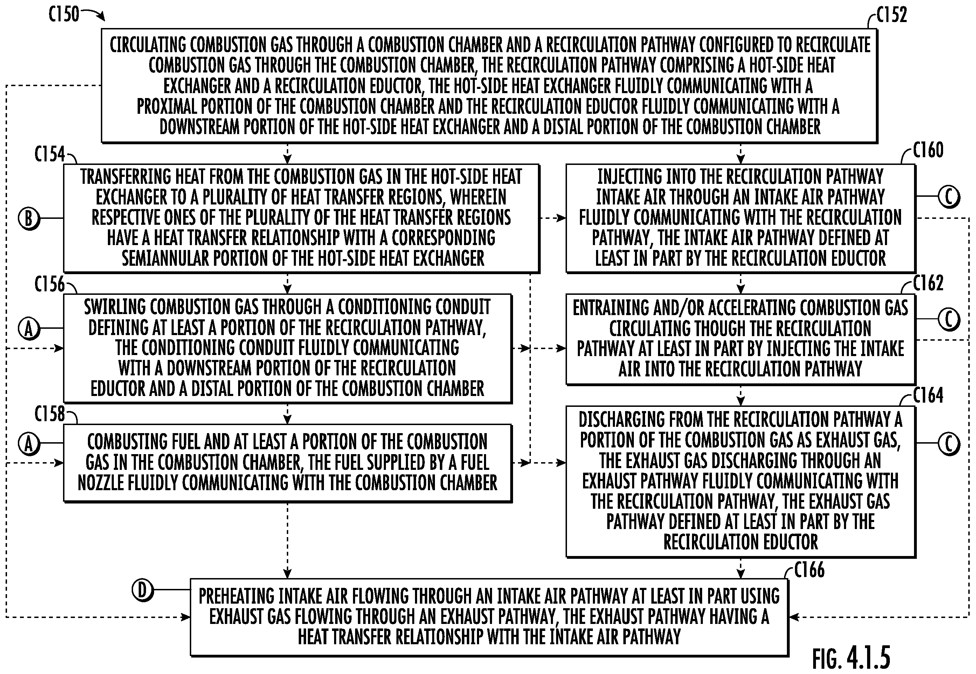

FIG. 4.1.5 shows a flowchart depicting an exemplary method of heating a closed-cycle engine, such as a regenerative heat engine;

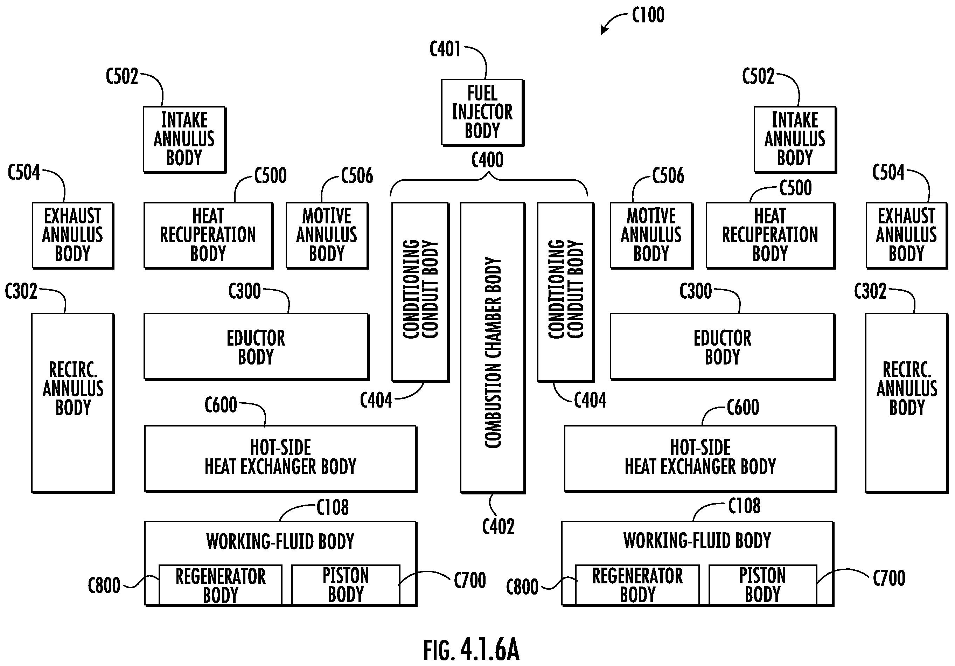

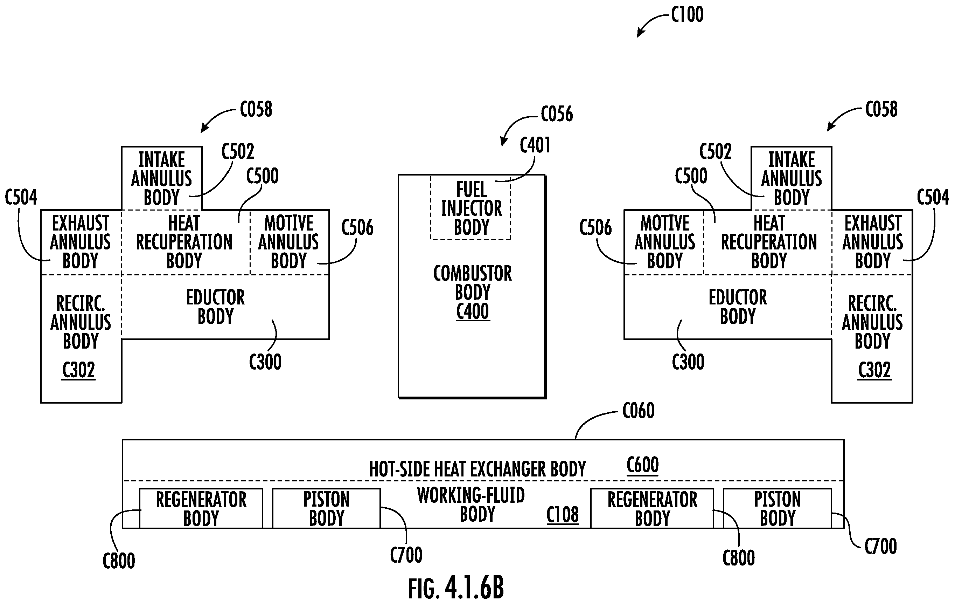

FIGs. 4.1.6A and 4.1.6B schematically depict exemplary monolithic bodies, which may include monolithic body portions and/or monolithic body-segments;

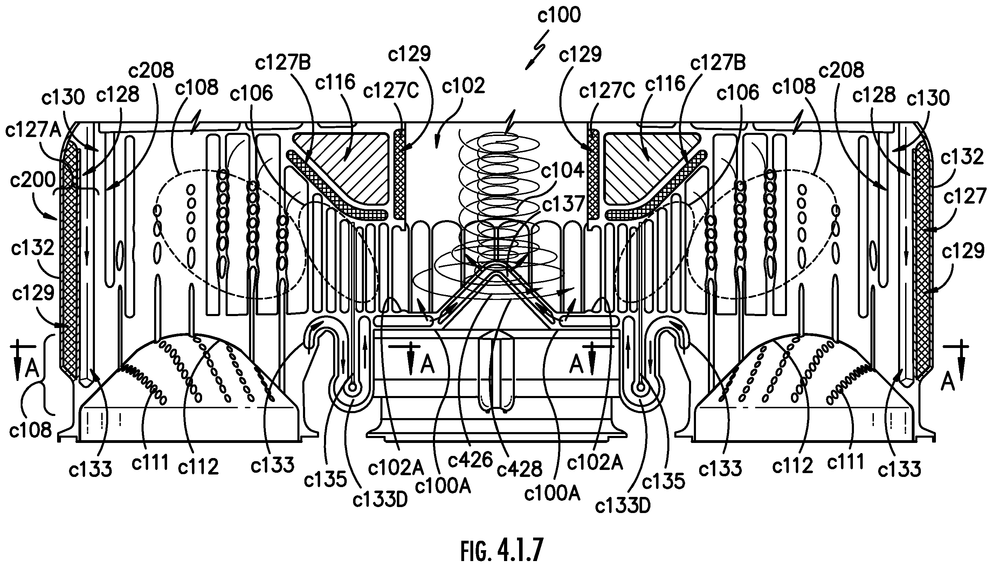

FIG. 4.1.7 schematically depicts another exemplary monolithic heater body;

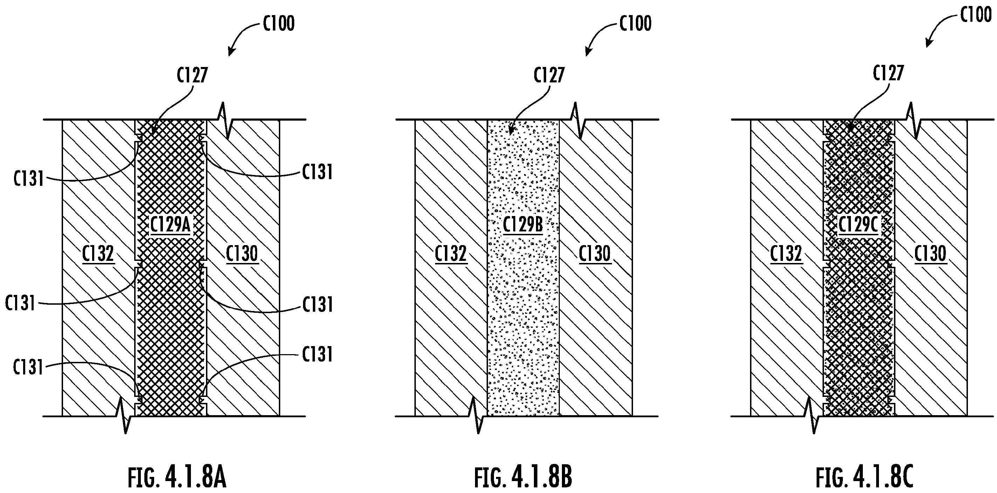

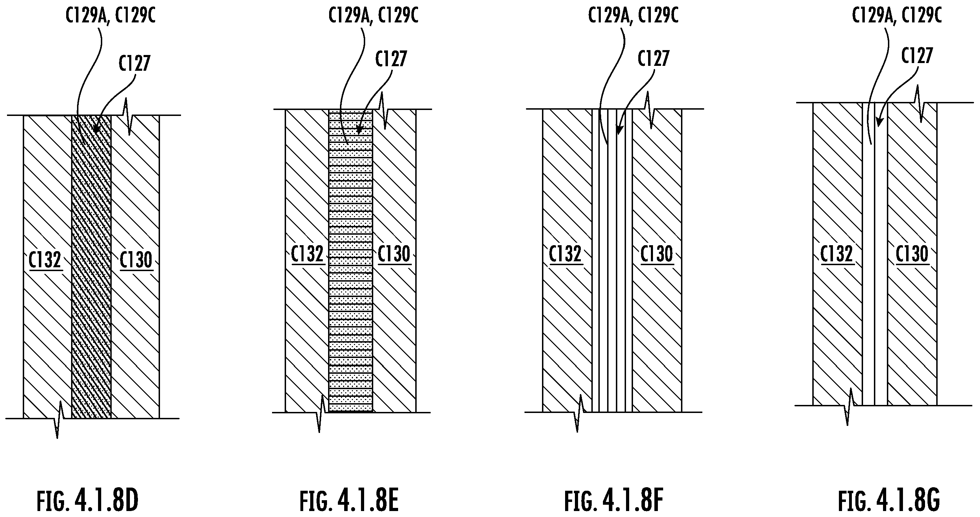

FIGs. 4.1.8A-4.1.8G schematically depict exemplary heat shields that may be included in a monolithic heater body and/or a monolithic body-segment;

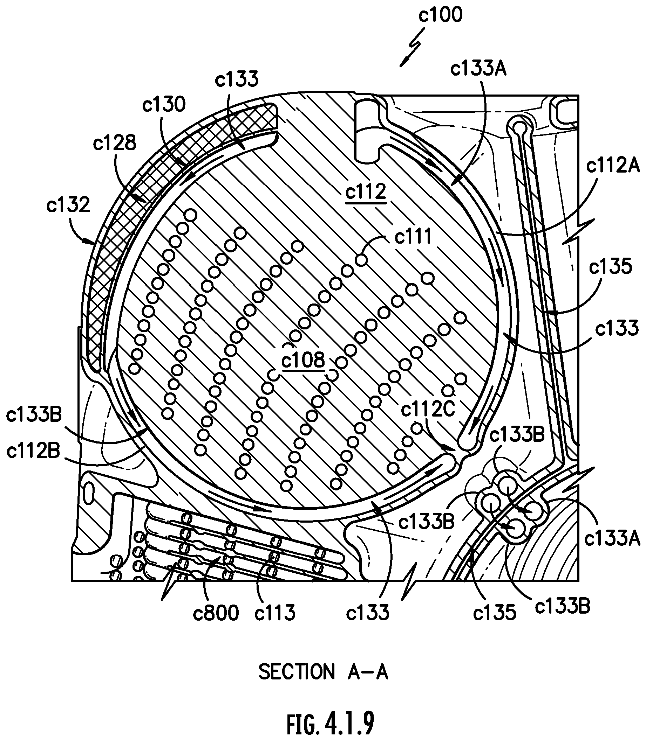

FIG. 4.1.9 schematically depicts a cross-sectional view of a portion of an exemplary heater body, illustrating portions of an exemplary piston body and an exemplary heat-capture pathway;

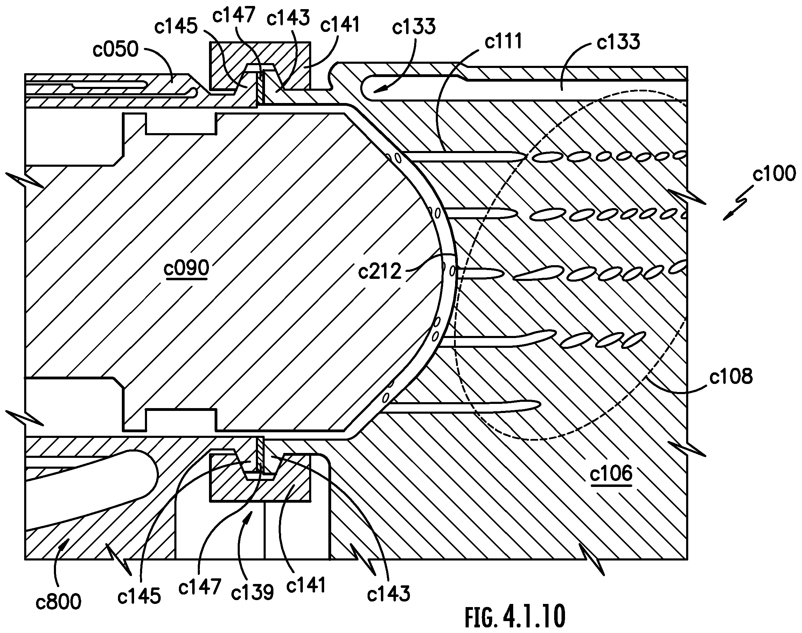

FIG. 4.1.10 schematically depicts a cross-sectional view of an exemplary an interface between a heater body and an engine body;

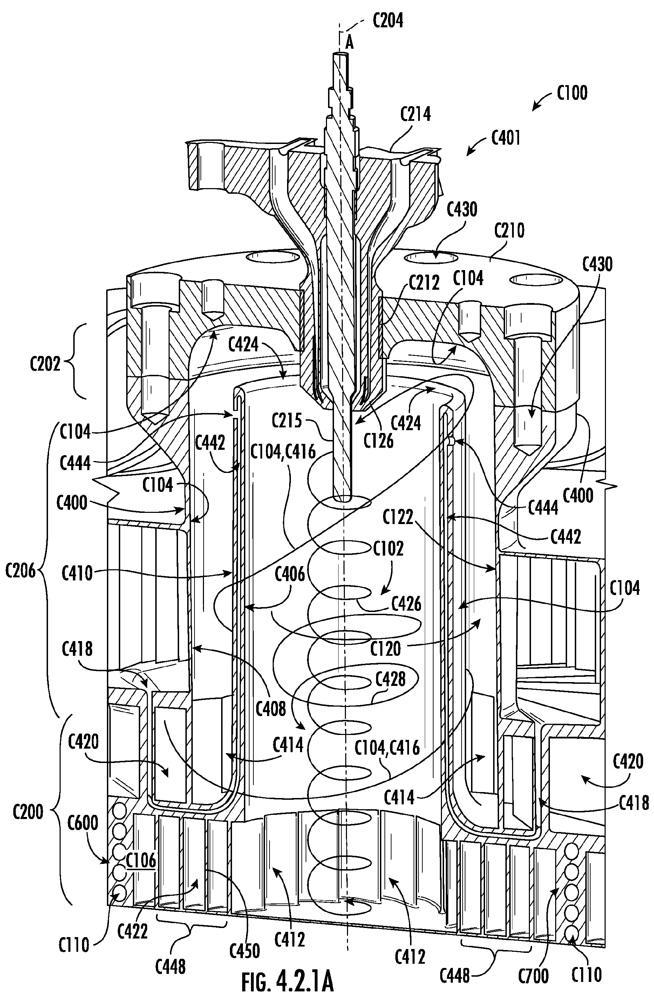

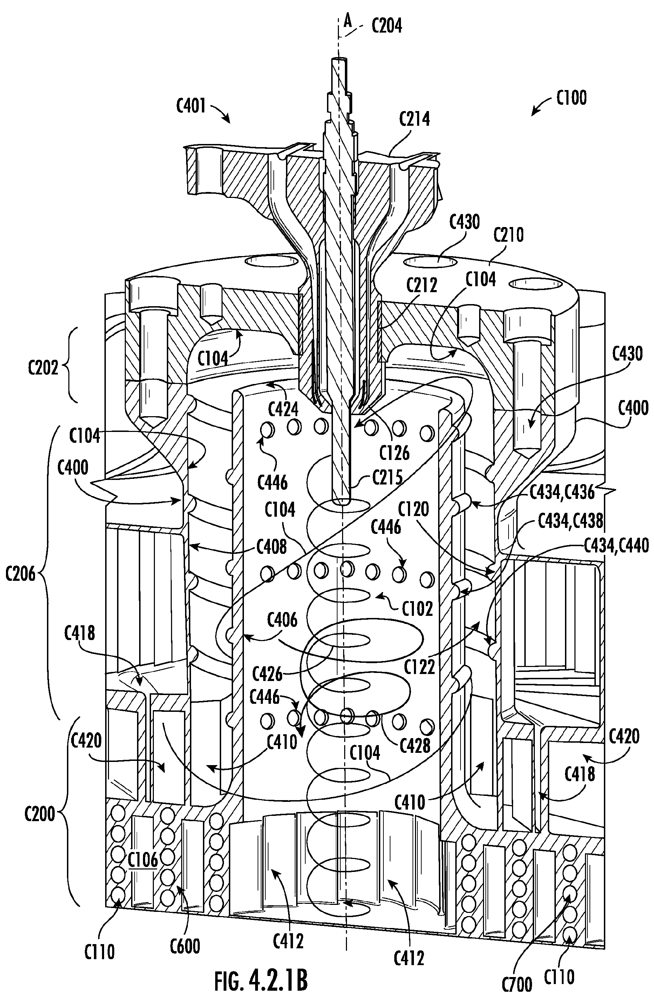

FIG. 4.2.1A shows a cross-sectional perspective view of an exemplary combustor body portion of a heater body that may be included in the heater body shown in FIG. 4.1.3B;

FIG. 4.2.1B shows a cross-sectional perspective view of another exemplary combustor body portion of a heater body that may be included in the heater body shown in FIG. 4.1.3B;

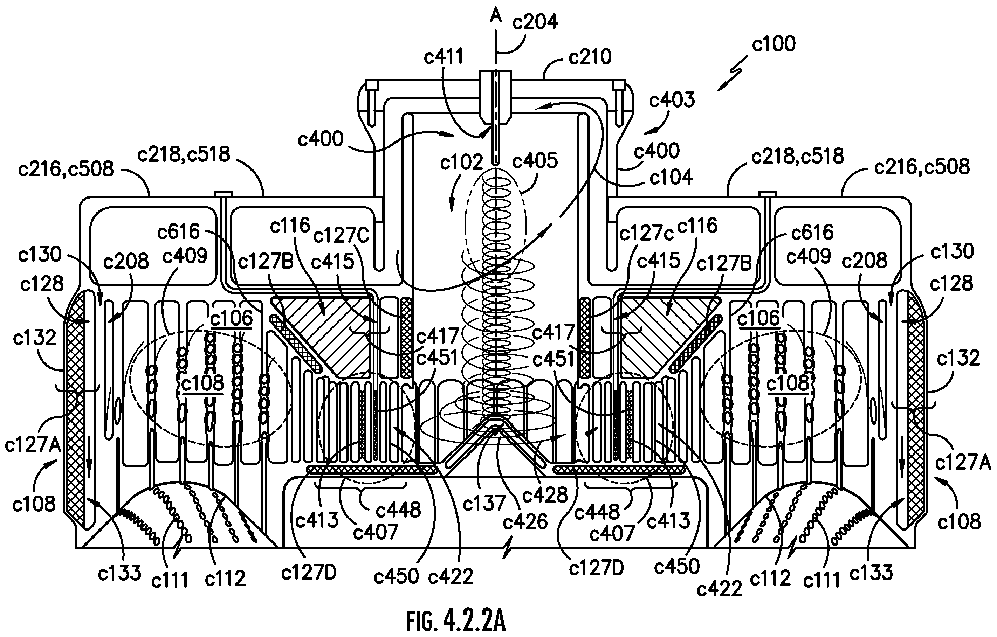

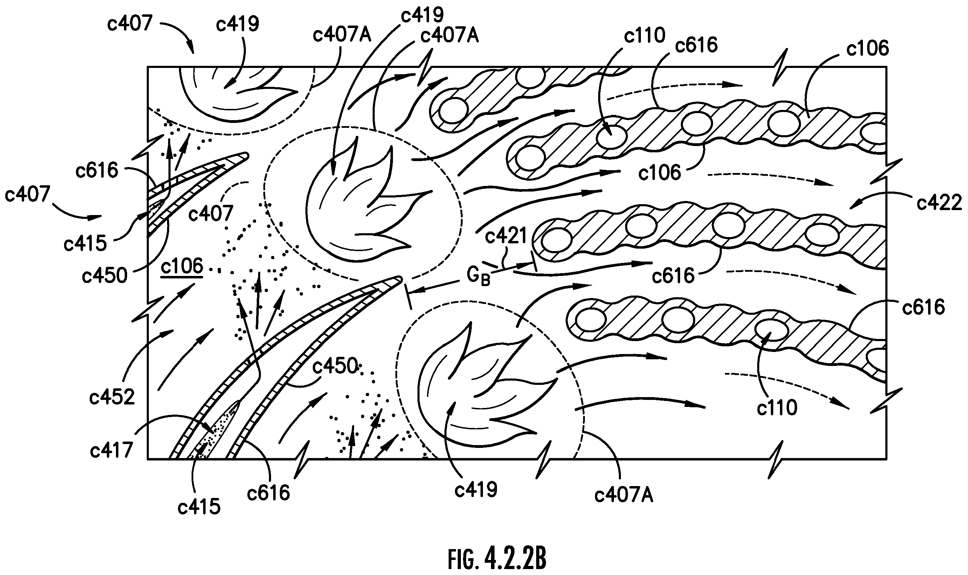

FIG. 4.2.2A schematically depicts a cross-sectional view of an perspective exemplary heater body that includes multi-stage combustion;

FIG. 4.2.2B schematically depicts a cross-sectional top-view of an exemplary combustion zone occupying a radially-inward portion of a hot-side heat exchanger;

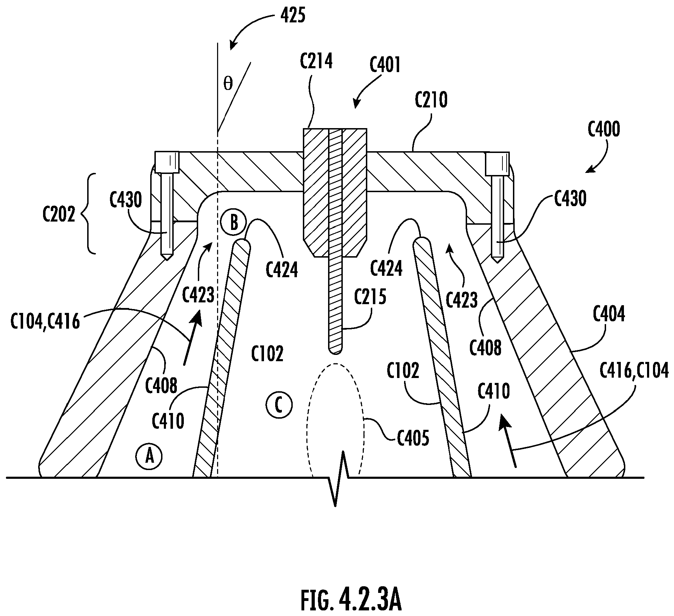

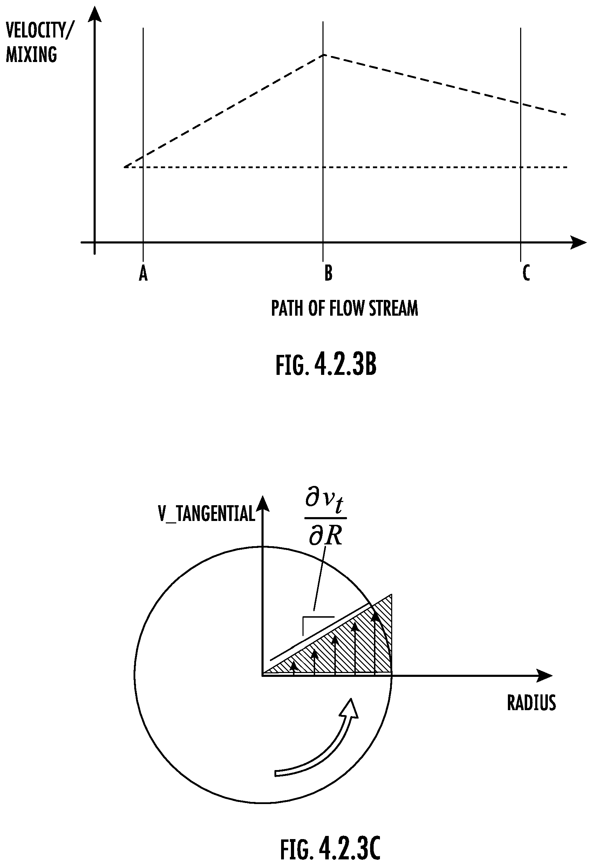

FIG. 4.2.3A schematically depicts a cross-sectional view of an exemplary combustor body that includes a venturi;

FIGs. 4.2.3B and 4.2.3C illustrate exemplary fluid velocity profiles for the combustor body shown in FIG. 4.2.3A;

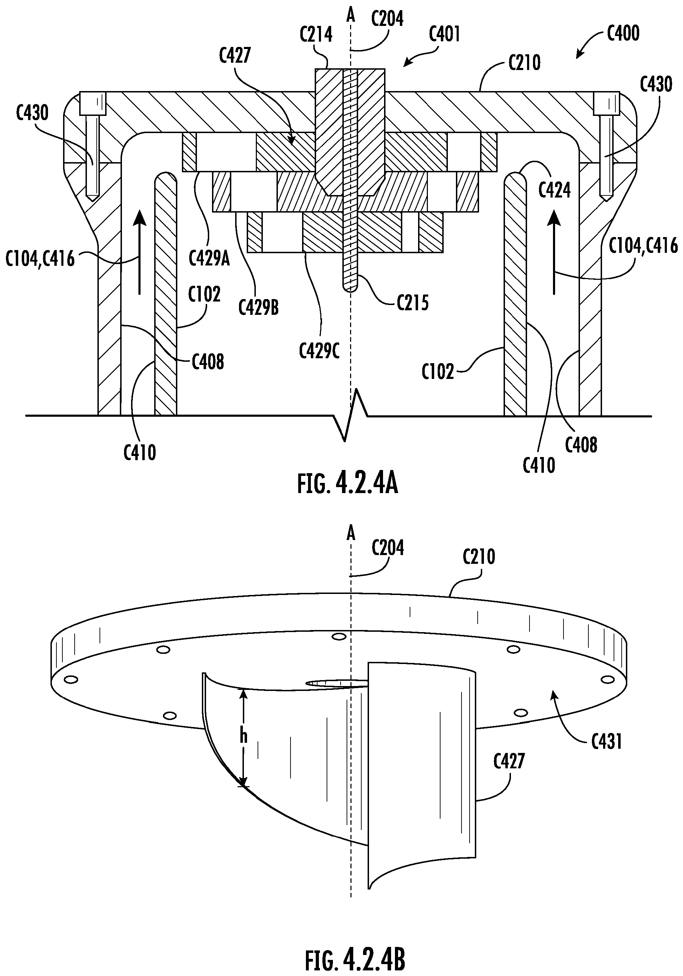

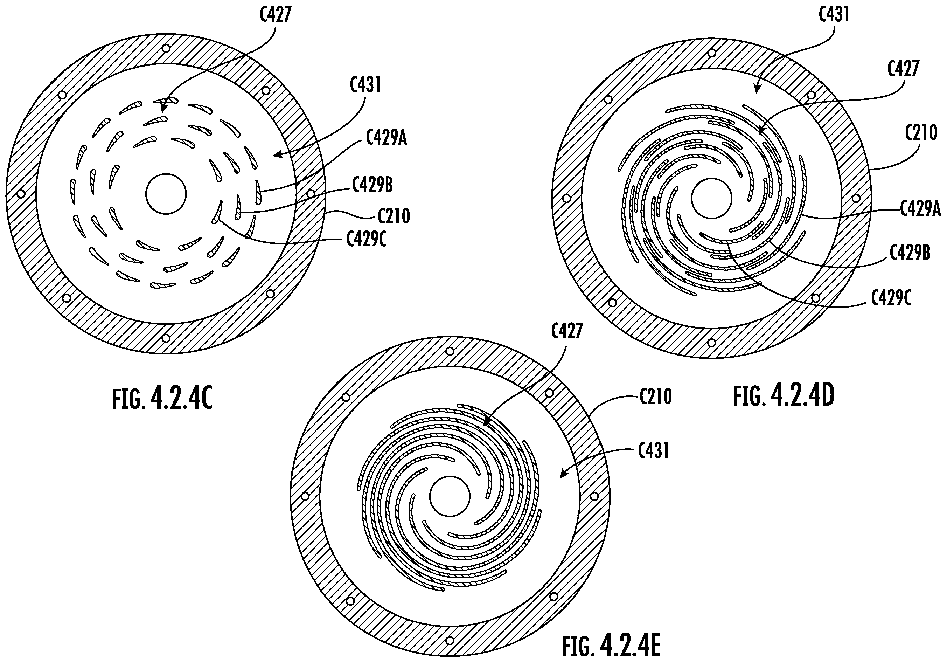

FIGs. 4.2.4A-4.2.4E schematically depict exemplary combustor vanes;

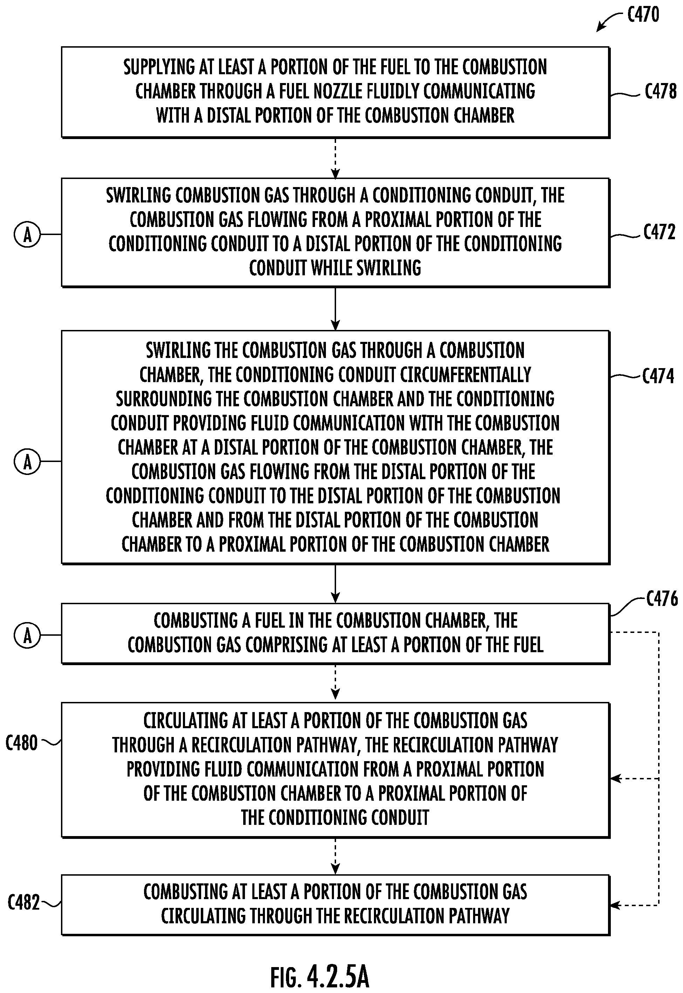

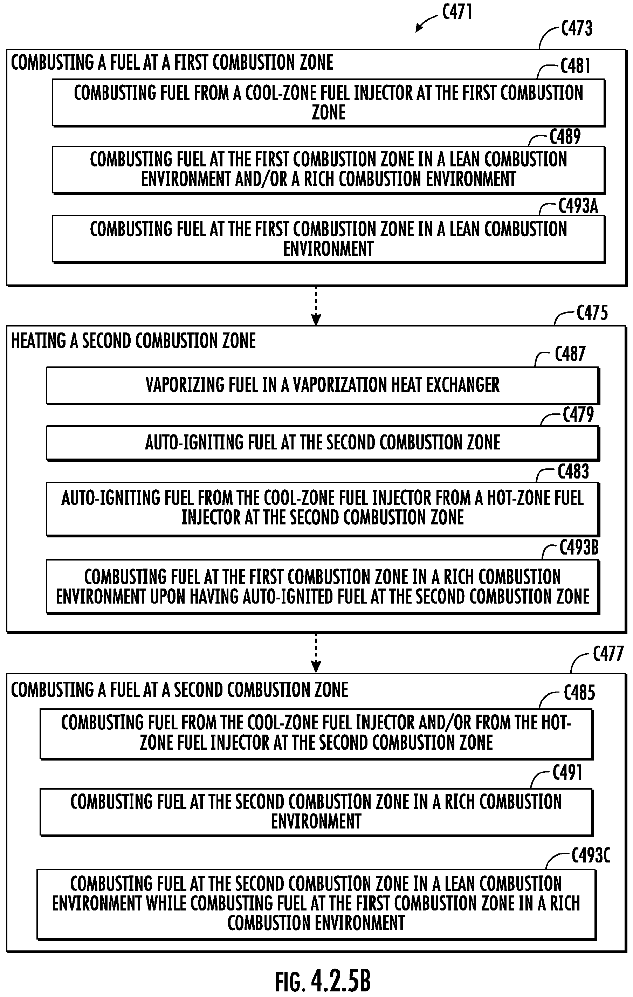

FIG. 4.2.5A shows a flowchart depicting an exemplary method of combusting a fuel;

FIG. 4.2.5B shows a flowchart depicting another exemplary method of combusting a fuel;

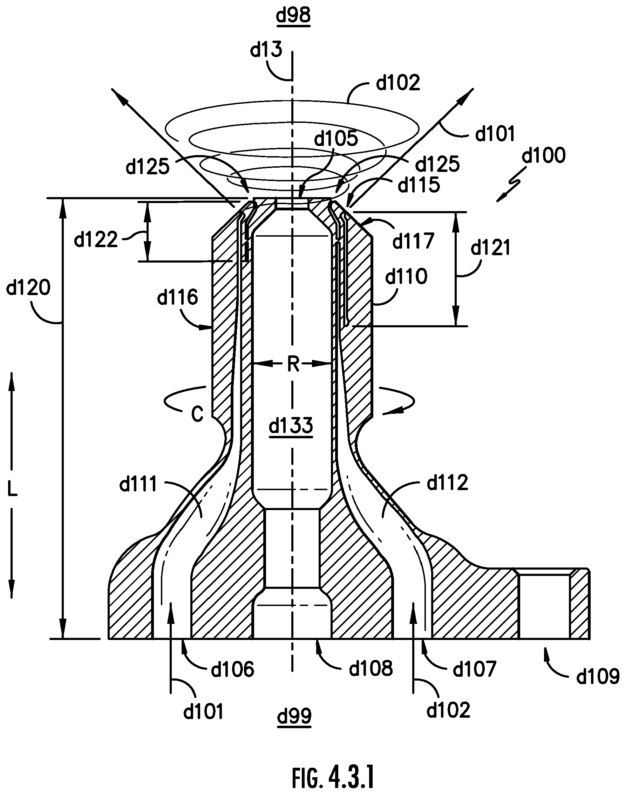

FIG. 4.3.1 schematically depicts a cross sectional view of an exemplary fuel injector assembly according to an aspect of the present disclosure;

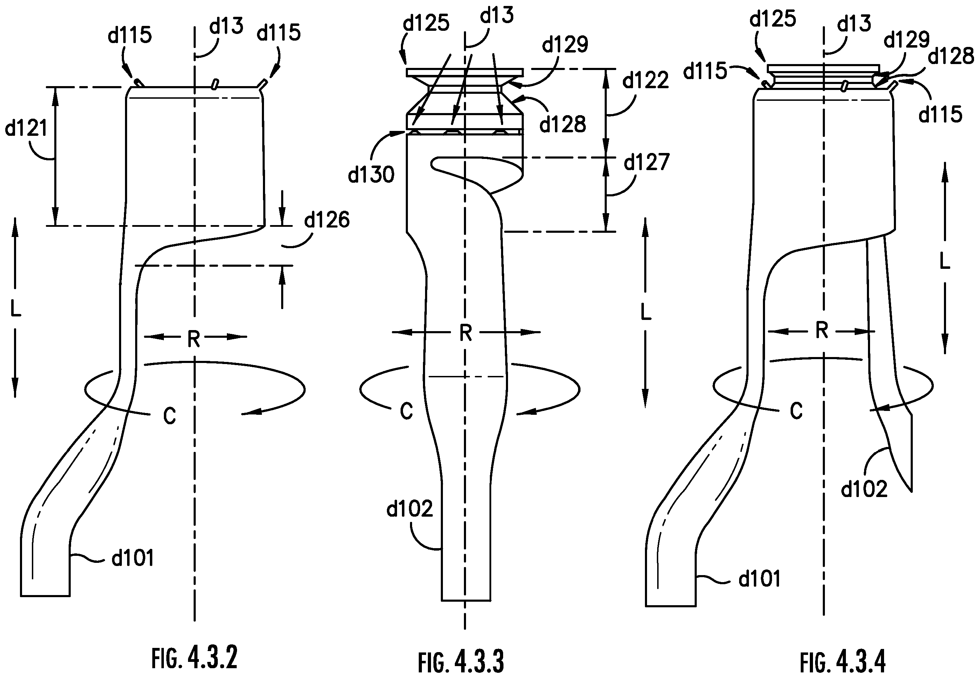

FIG. 4.3.2 schematically depicts a cutaway cross sectional view of a portion of the exemplary fuel injector assembly of FIG. 4.3.1;

FIG. 4.3.3 schematically depicts a cutaway cross sectional view of a portion of the exemplary fuel injector assembly of FIG. 4.3.1;

FIG. 4.3.4 schematically depicts a cutaway cross sectional view of a portion of the exemplary fuel injector assembly of FIG. 4.3.1;

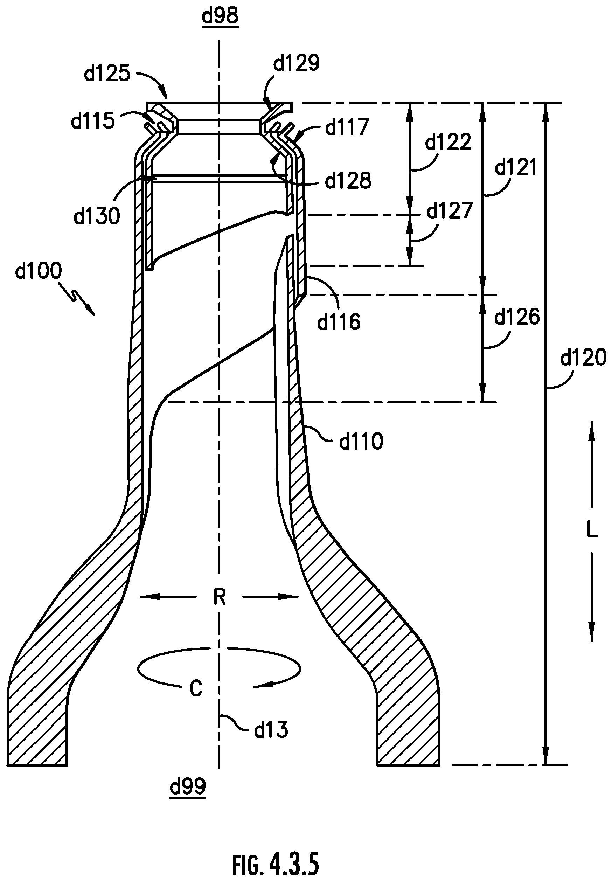

FIG. 4.3.5 schematically depicts a cutaway cross sectional view of a portion of the exemplary fuel injector assembly of FIG. 4.3.1;

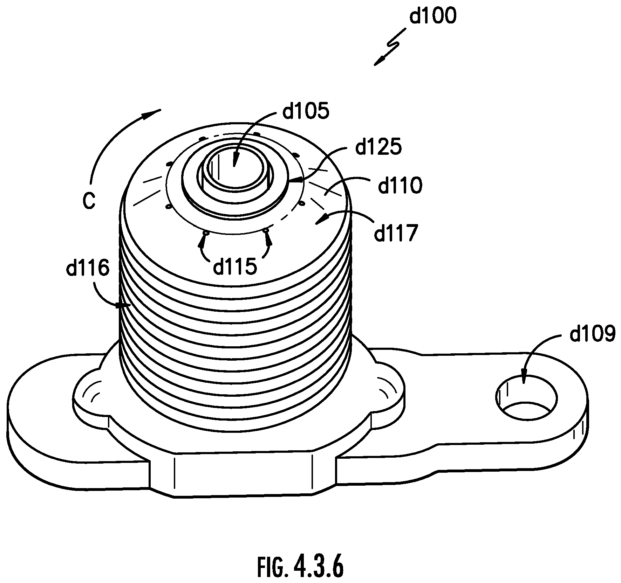

FIG. 4.3.6 schematically depicts a perspective view of the fuel injector assembly of FIG. 4.3.1, viewed upstream from a downstream end;

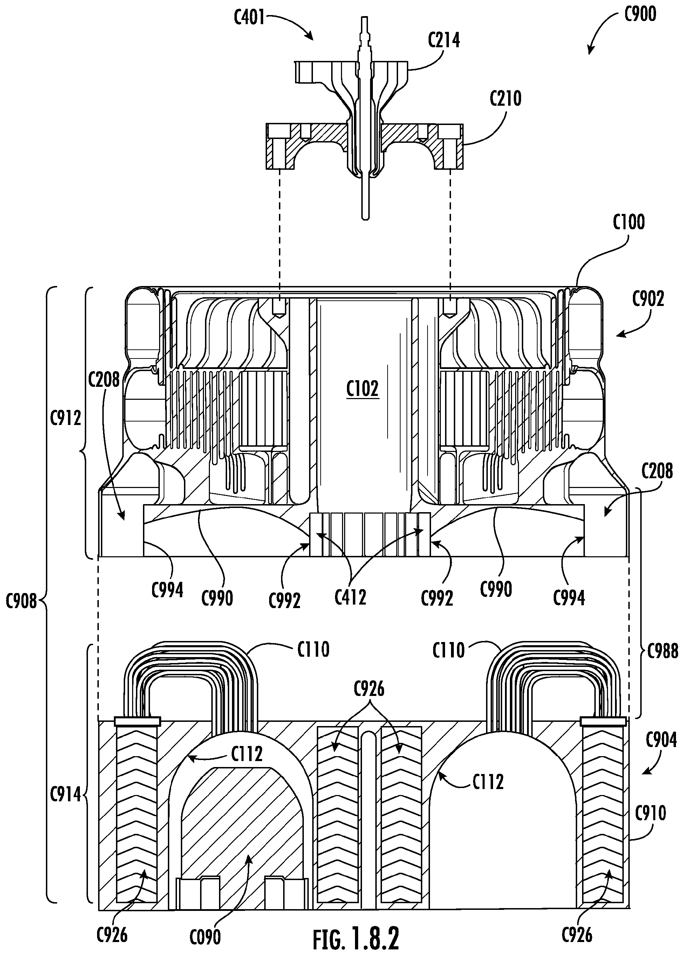

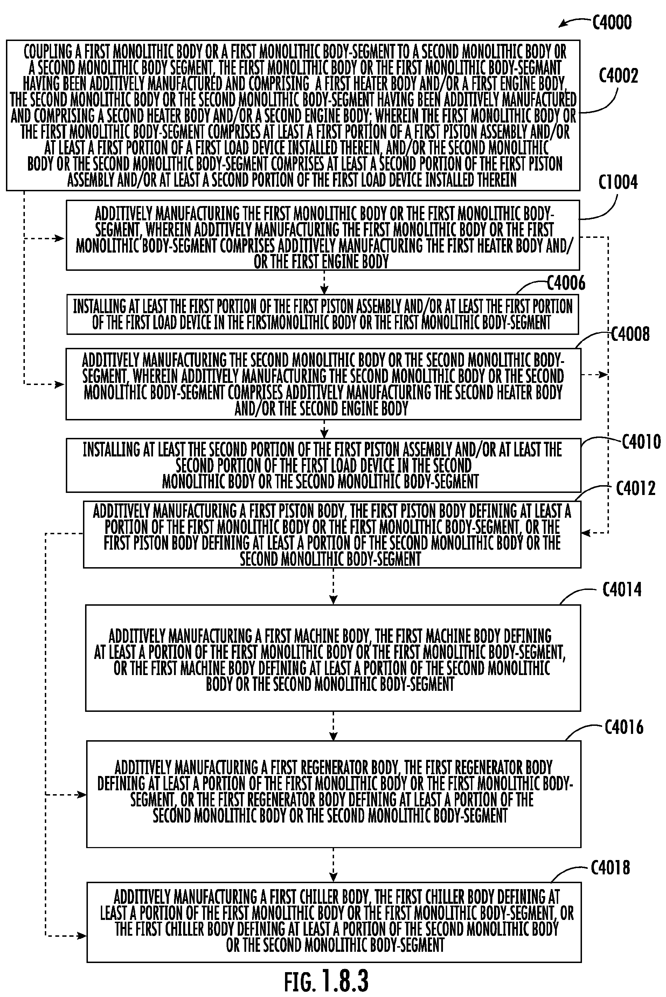

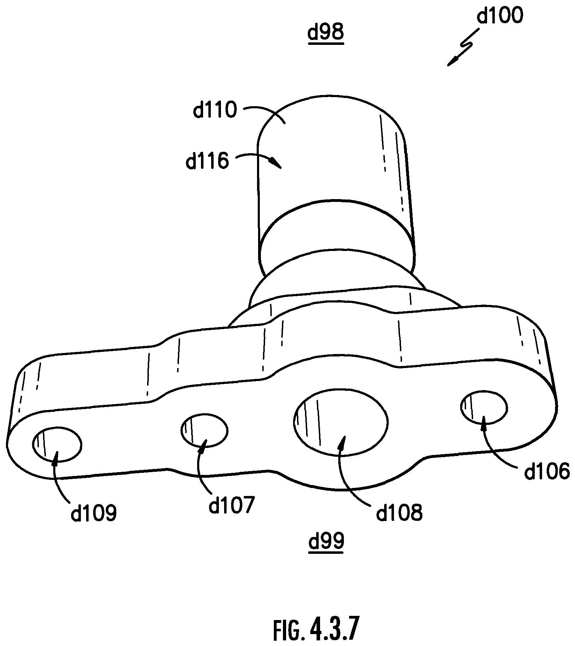

FIG. 4.3.7 schematically depicts a perspective view of the fuel injector assembly of FIG. 1, viewed downstream from an upstream end;

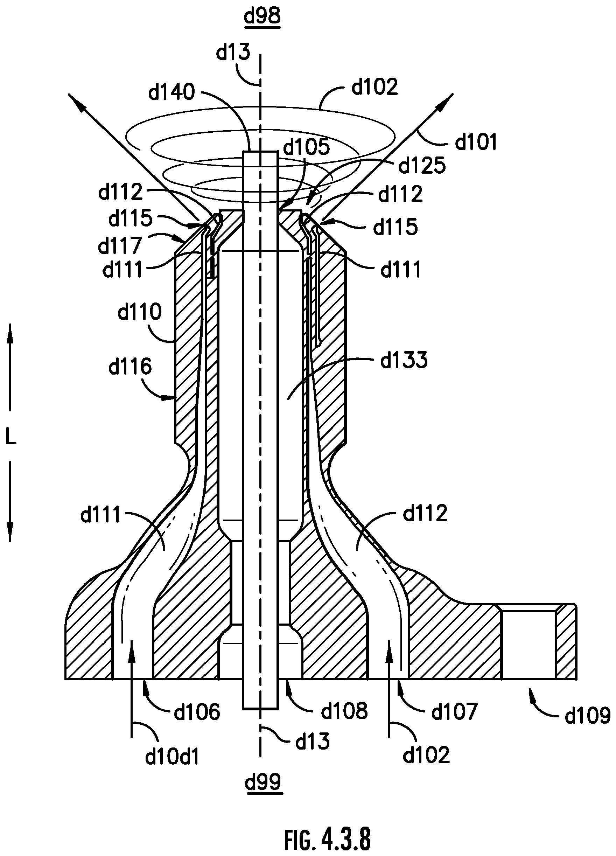

FIG. 4.3.8 schematically depicts a cross sectional view of an exemplary fuel injector assembly according to an aspect of the present disclosure;

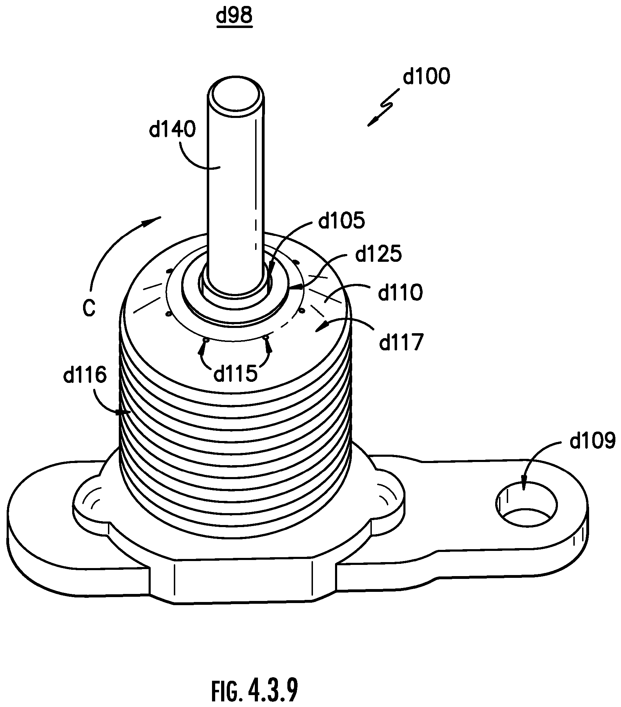

FIG. 4.3.9 schematically depicts a perspective view of the fuel injector assembly of FIG. 4.3.8, viewed upstream from a downstream end;

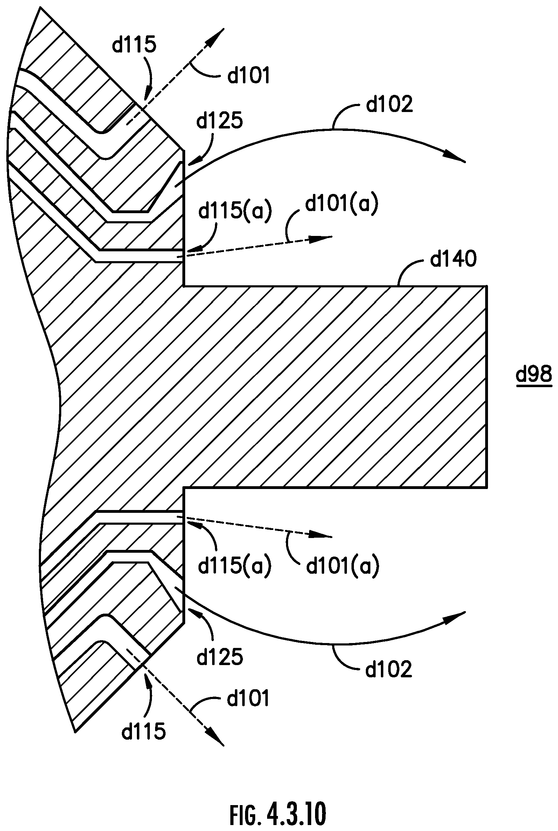

FIG. 4.3.10 schematically depicts a schematic cross sectional view of another embodiment of the fuel injector assembly according to an aspect of the present disclosure;

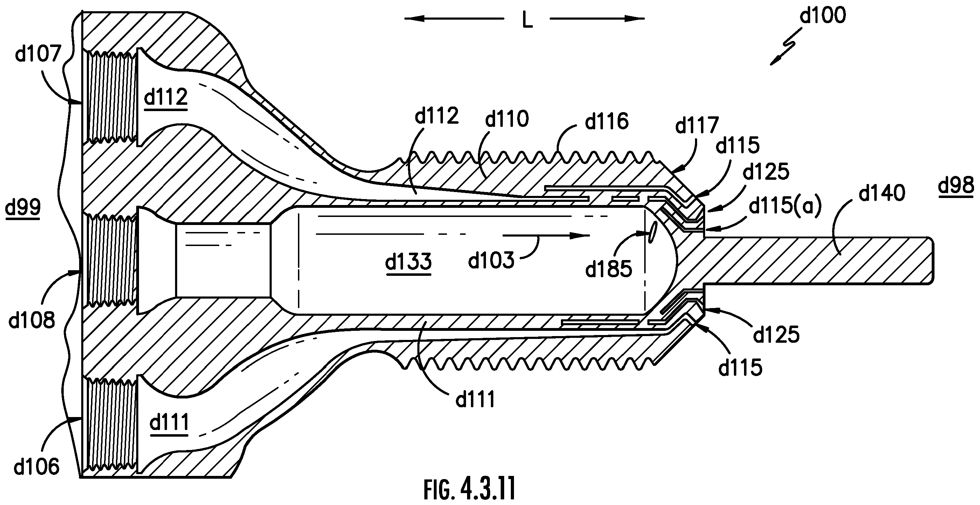

FIG. 4.3.11 schematically depicts a cross sectional view of an exemplary fuel injector assembly according to an aspect of the present disclosure;

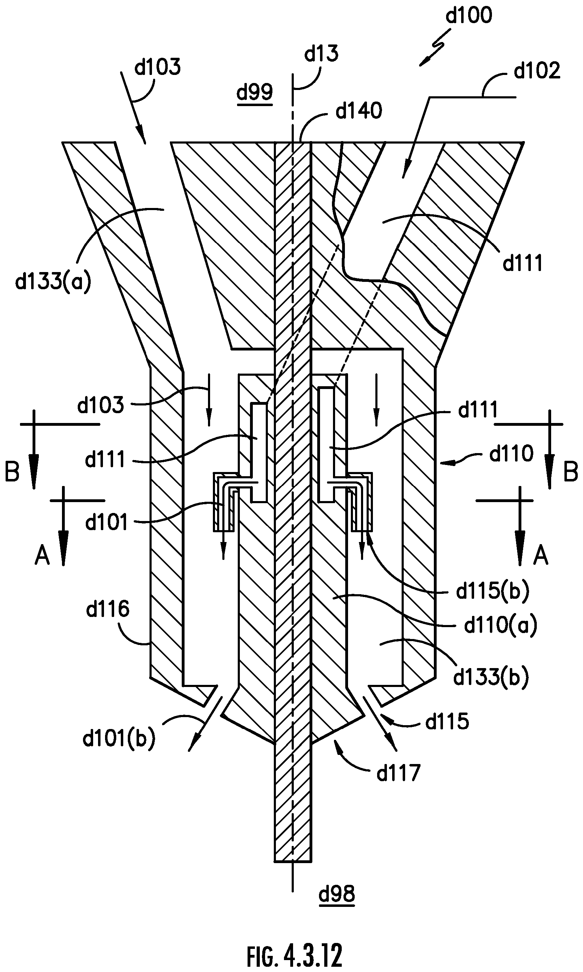

FIG. 4.3.12 schematically depicts a cross sectional view of another exemplary fuel injector assembly according to an aspect of the present disclosure;

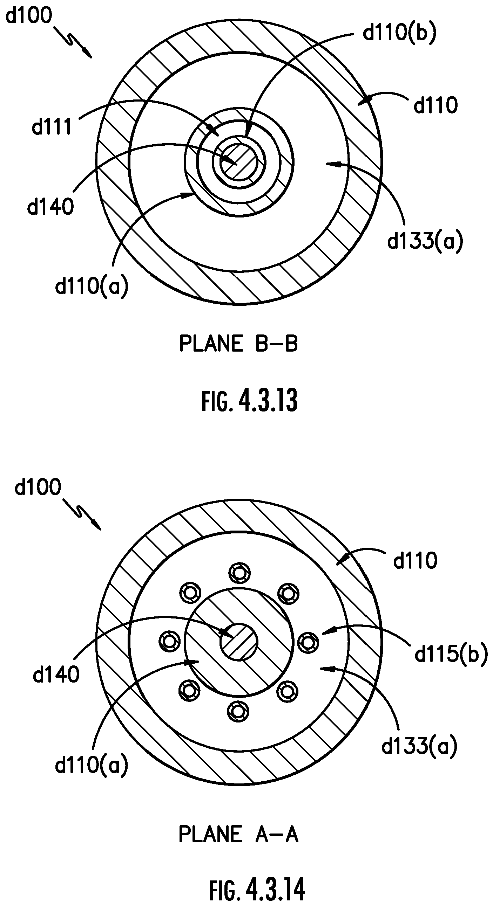

FIGs. 4.3.13 and 4.3.14 schematically depict cross sectional end-views of exemplary fuel injector assemblies according to an aspect of the present disclosure;

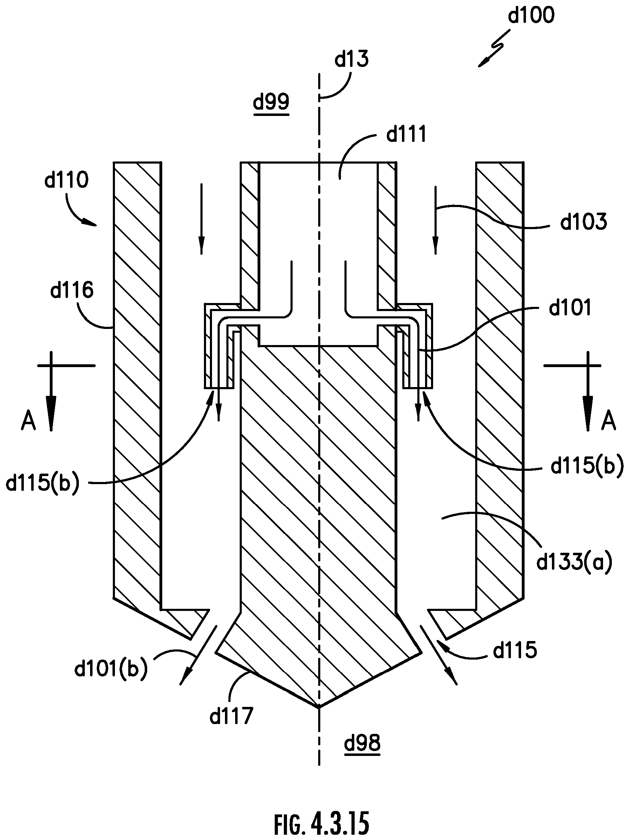

FIG. 4.3.15 schematically depicts a cross sectional view of another exemplary fuel injector assembly according to an aspect of the present disclosure;

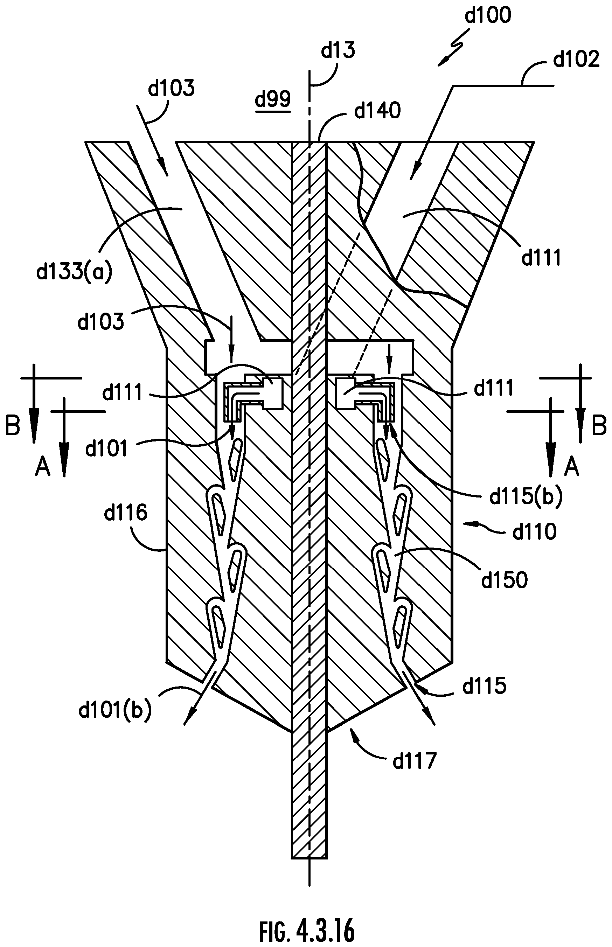

FIG. 4.3.16 schematically depicts a cross sectional view of another exemplary fuel injector assembly according to an aspect of the present disclosure;

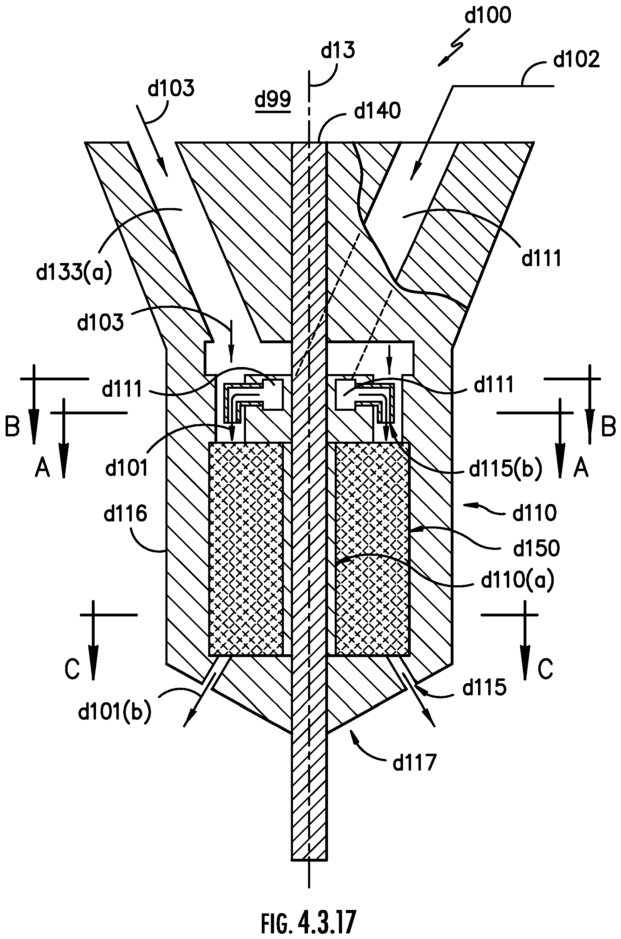

FIG. 4.3.17 schematically depicts a cross sectional view of another exemplary fuel injector assembly according to an aspect of the present disclosure;

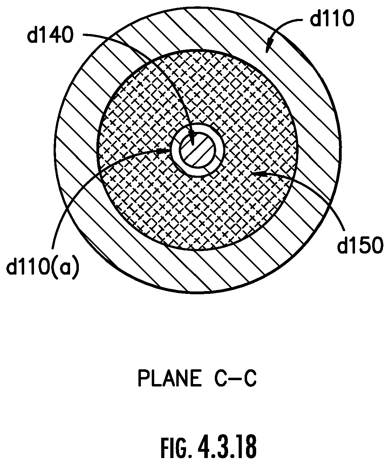

FIG. 4.3.18 schematically depicts a cross sectional end-view of an exemplary fuel injector assembly according to an aspect of the present disclosure;

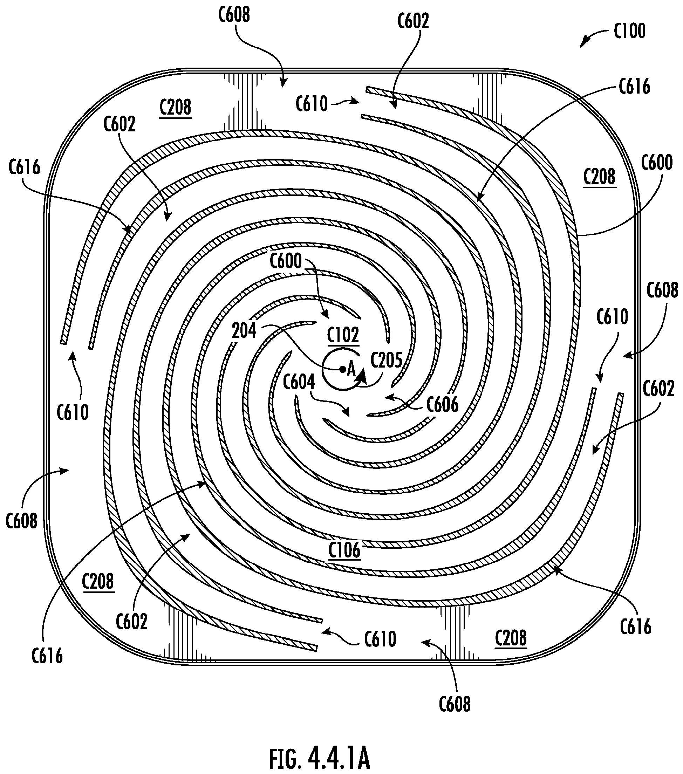

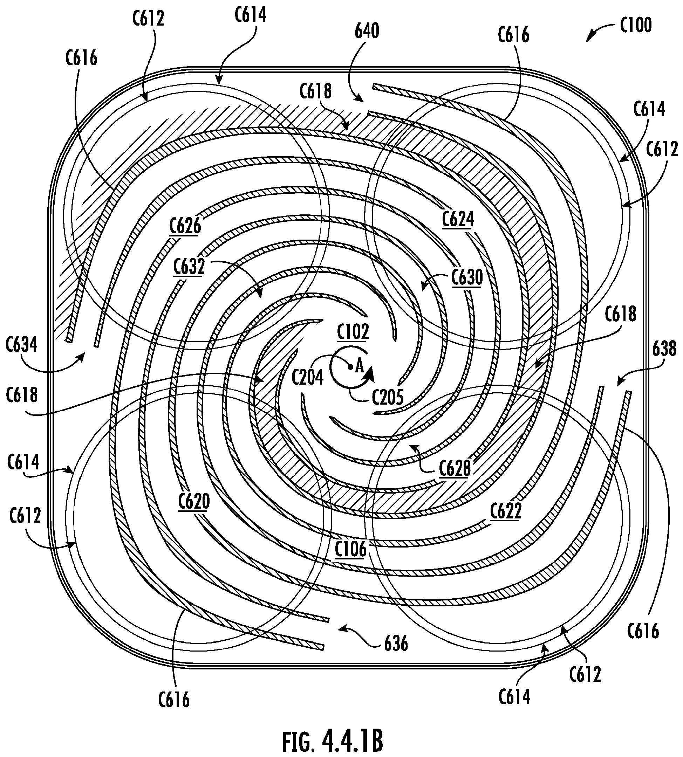

FIG. 4.4.1A shows a top cross-sectional view of an exemplary heat exchanger body portion of a heater body, such as the heater body shown in FIG. 4.1.3A;

FIG. 4.4.1B shows a top cross-sectional view of the exemplary heat exchanger body of FIG. 4.4.1A, with a plurality of heat transfer regions indicated;

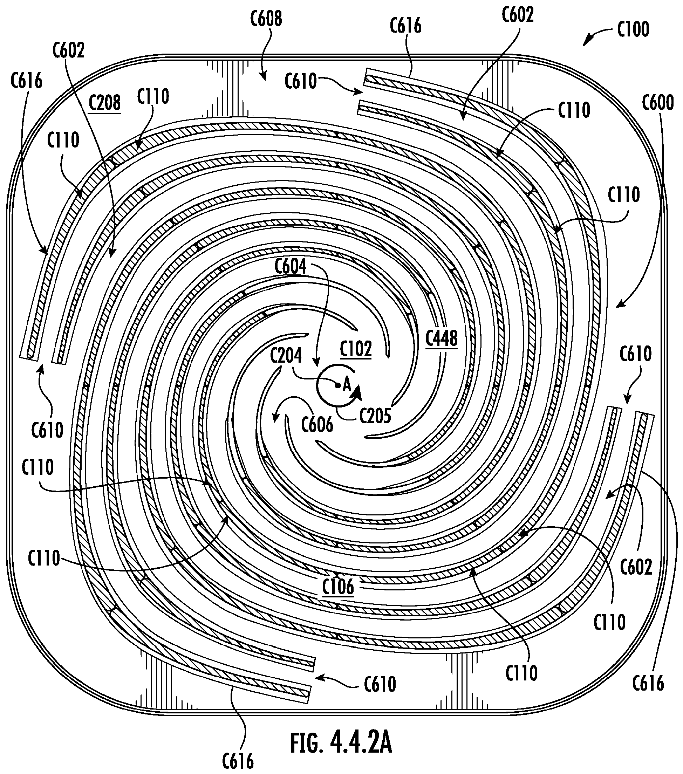

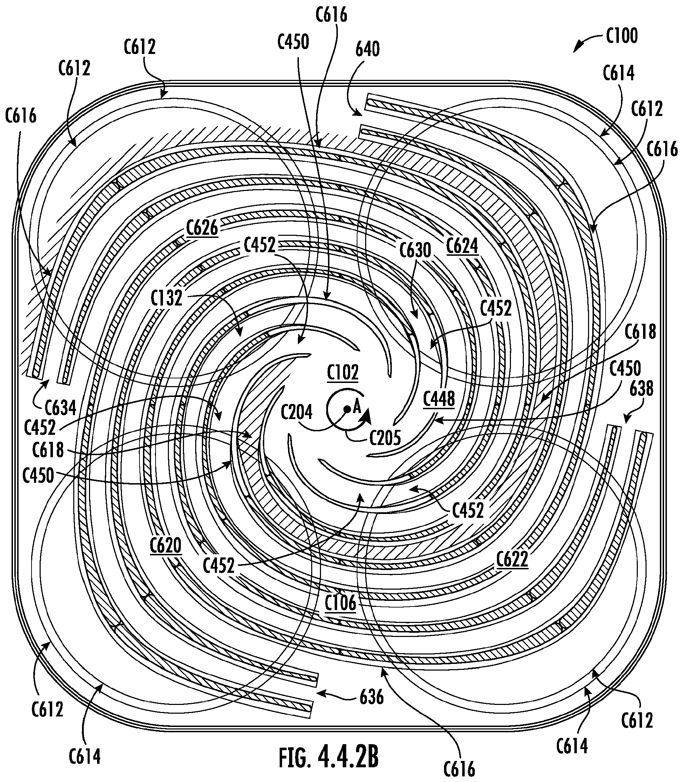

FIG. 4.4.2A shows a top cross-sectional view of an exemplary heat exchanger body portion of a heater body, such as the heater body shown in FIG. 4.1.3B;

FIG. 4.4.2B shows a top cross-sectional view of the exemplary heat exchanger body of FIG. 4.4.2A, with a plurality of heat transfer regions indicated;

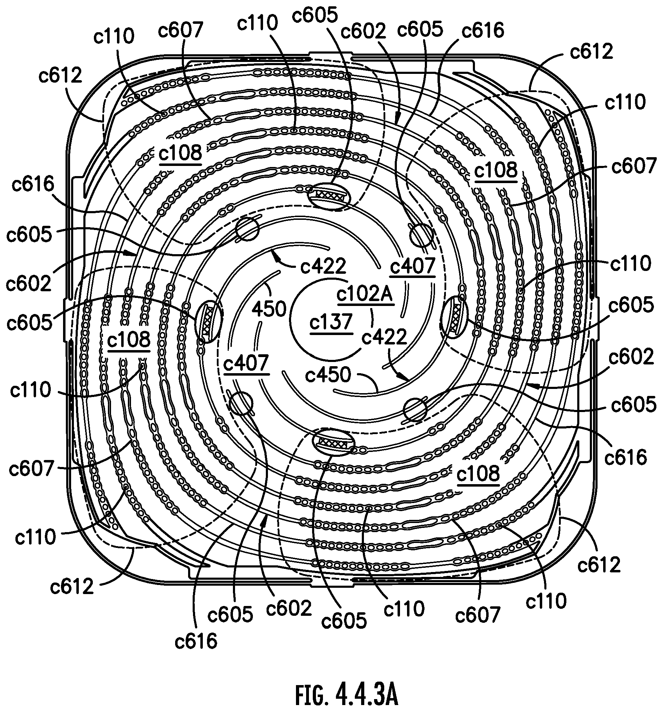

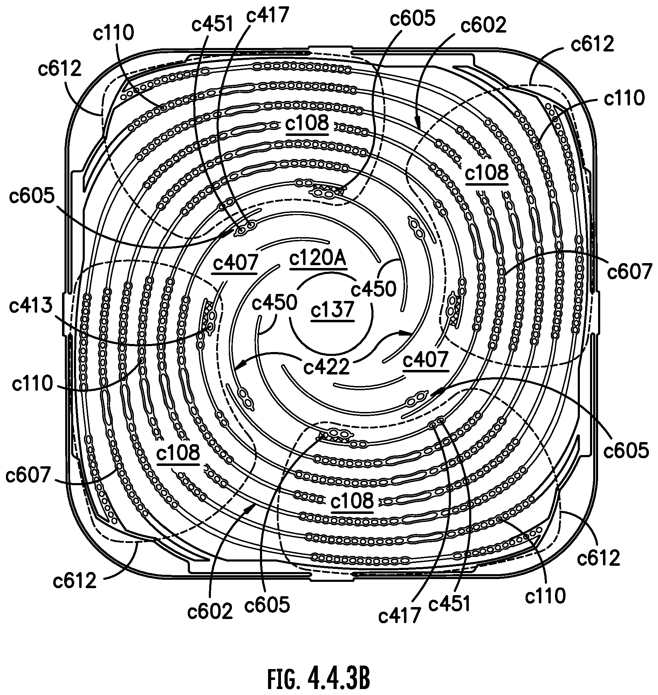

FIG. 4.4.3A and 4.4.3B show top cross-sectional views of additional exemplary embodiments of a heat exchanger body;

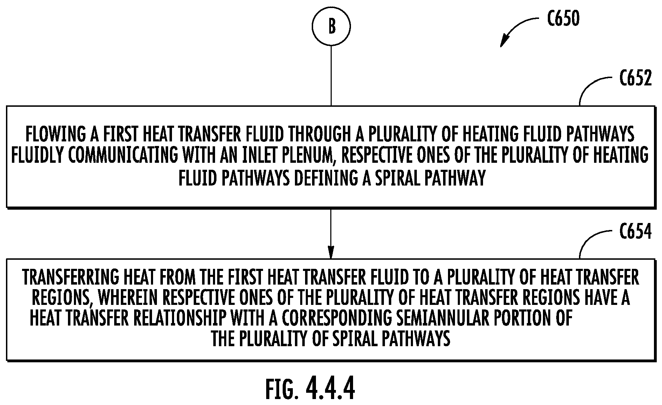

FIG. 4.4.4 shows a flowchart depicting an exemplary method of heating a plurality of heat transfer regions;

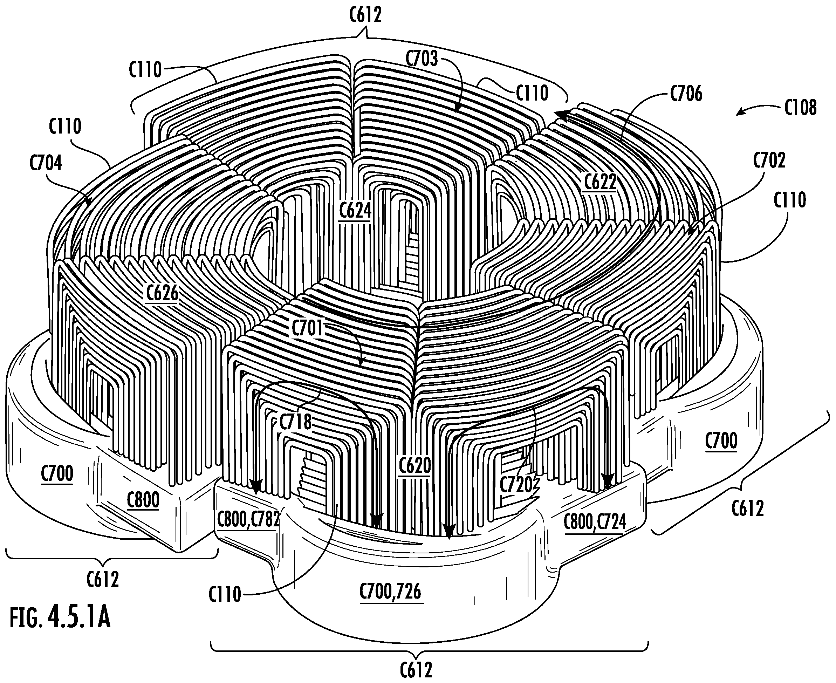

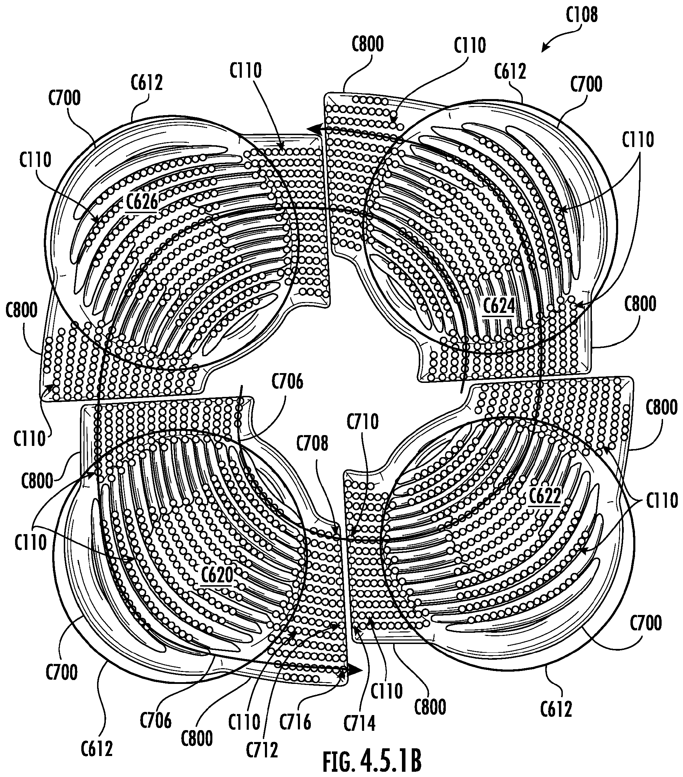

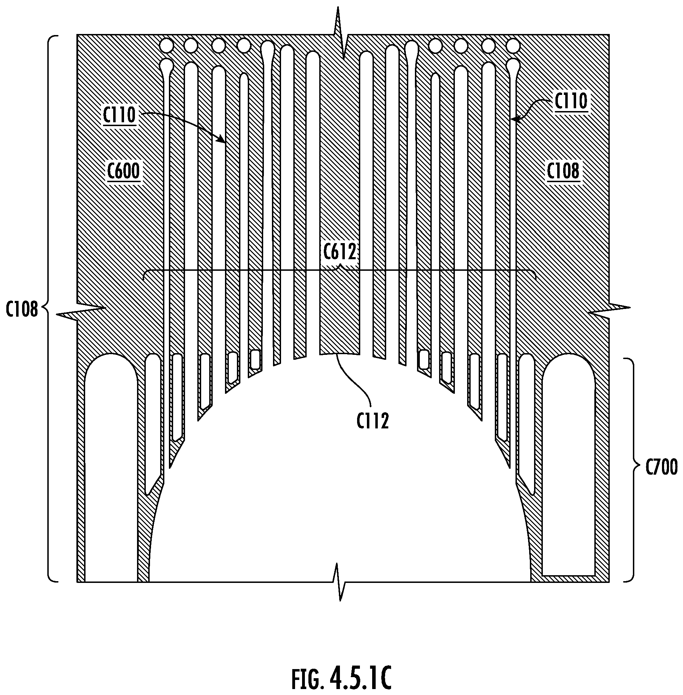

FIG. 4.5.1A schematically depicts a perspective view of an exemplary working-fluid body that may be included in a heater body, such as the heater body shown in FIG. 4.1.3B;

FIG. 4.5.1B schematically depicts a top view of the exemplary working-fluid body shown in FIG. 4.5.1A;

FIG. 4.5.1C schematically depicts a cross-sectional view of an exemplary working-fluid body that may be included in a heater body, such as the heater body shown in FIG. 4.1.3B;

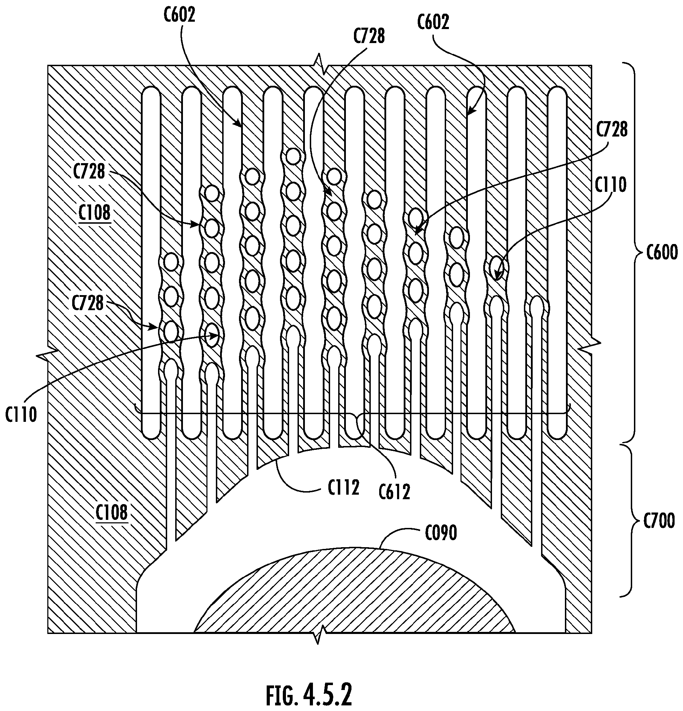

FIG. 4.5.2 schematically depicts a cross-sectional view of another exemplary working-fluid body that may be included in a heater body, such as the heater body shown in FIG. 4.1.3B;

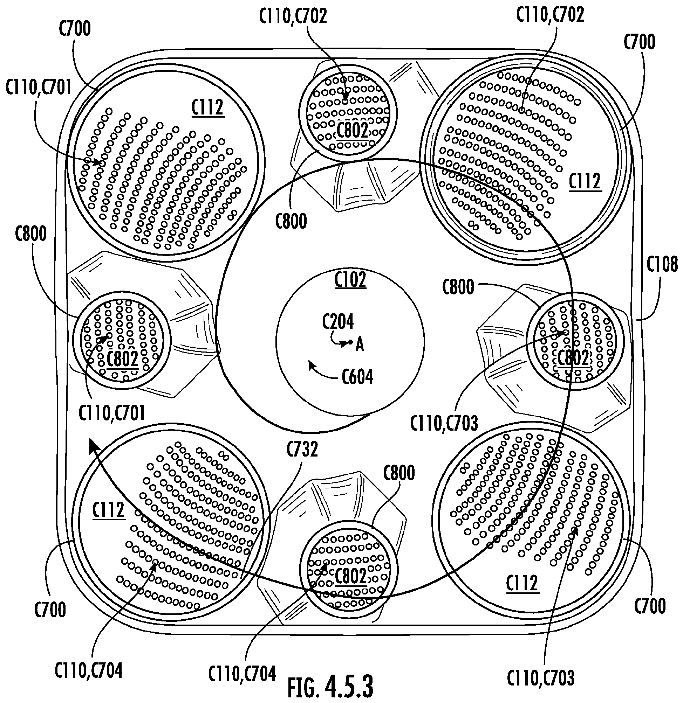

FIG. 4.5.3 schematically depicts a bottom cross-sectional view of an exemplary working-fluid body;

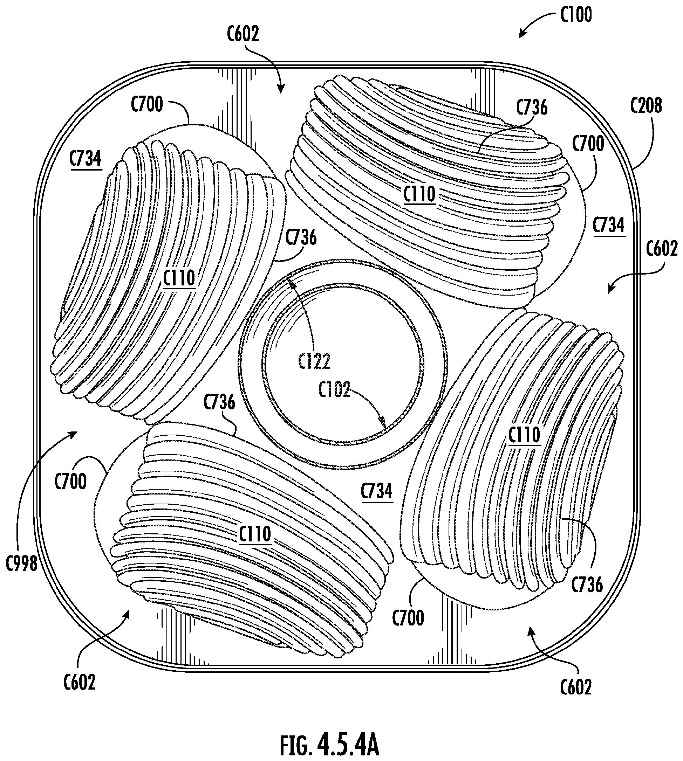

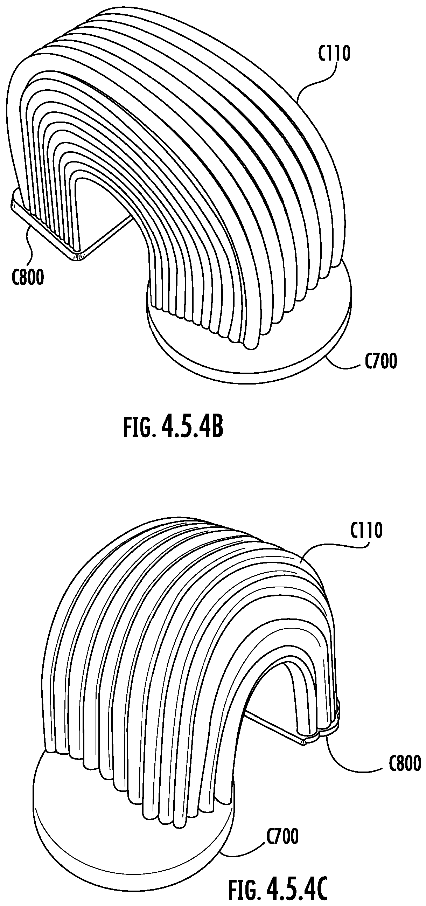

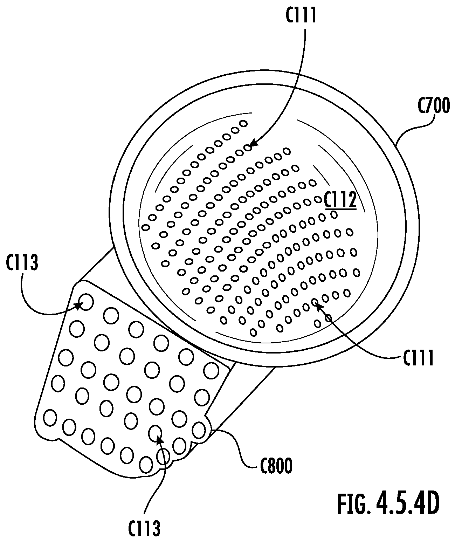

FIG. 4.5.4A schematically depicts a top perspective view of another exemplary working-fluid body;

FIGs. 4.5.4B and 4.5.4C schematically depict a front perspective view and a back perspective view, respectively, of another exemplary working-fluid body;

FIG. 4.5.4D schematically depicts a bottom perspective view of the exemplary working-fluid body shown in FIGs. 4.5.4B and 4.5.4C;

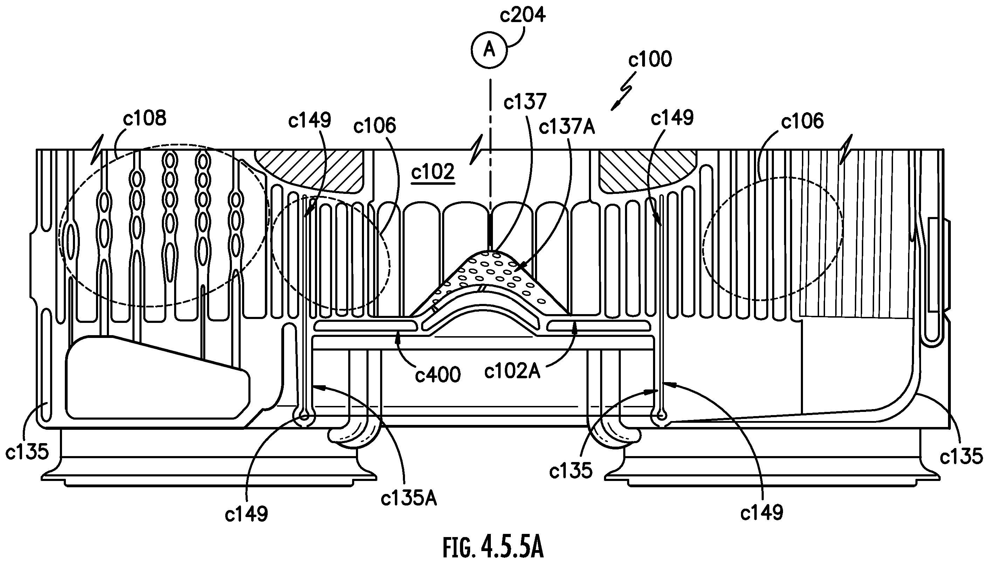

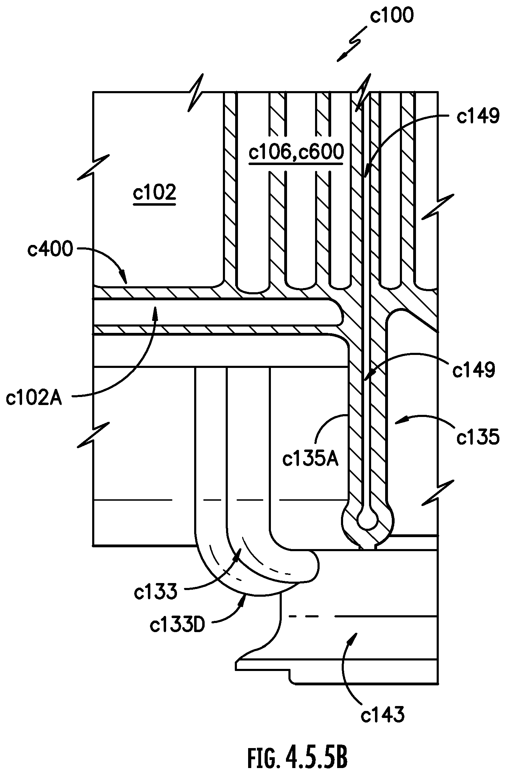

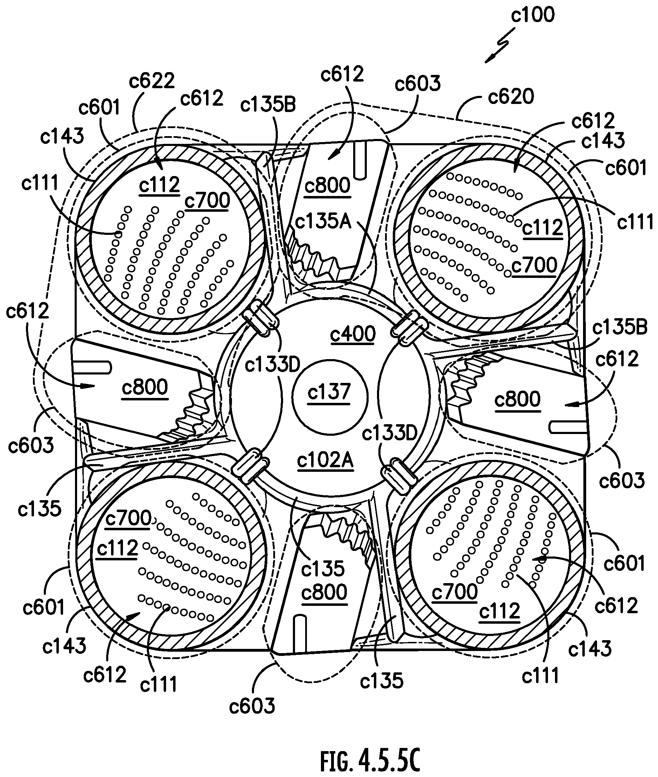

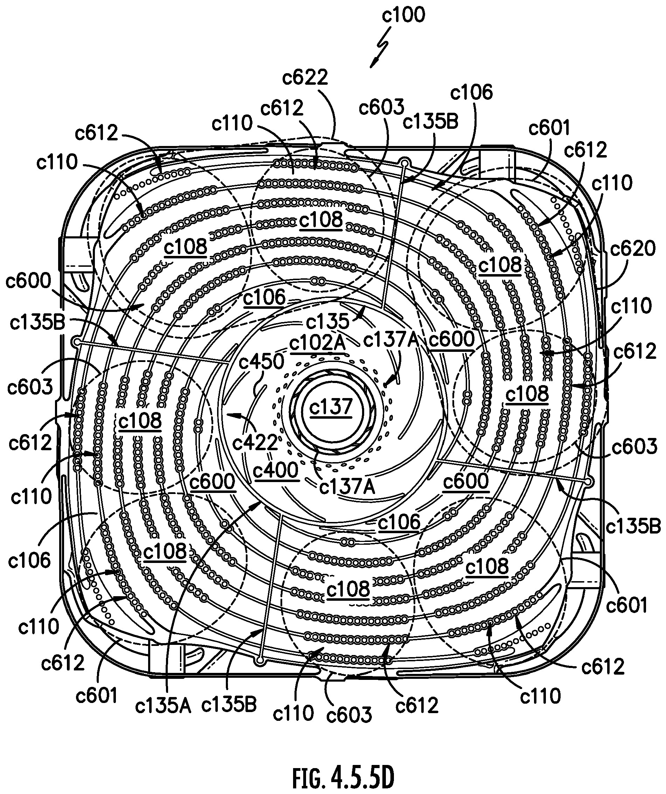

FIGs. 4.5.5A-4.5.5D schematically depict further aspects of an exemplary heater body;

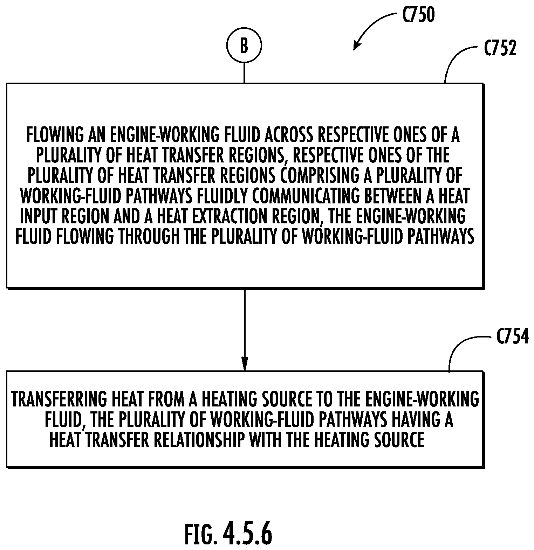

FIG. 4.5.6 shows a flowchart depicting an exemplary method of heating an engine-working fluid;

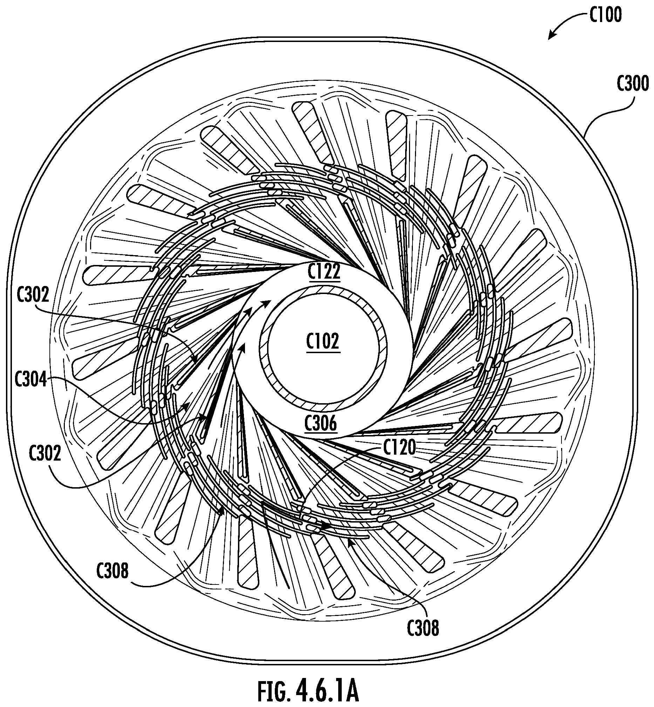

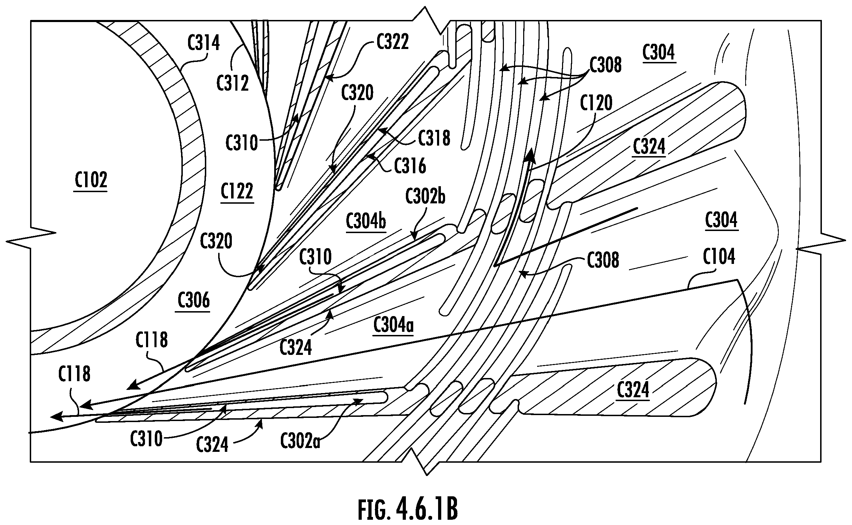

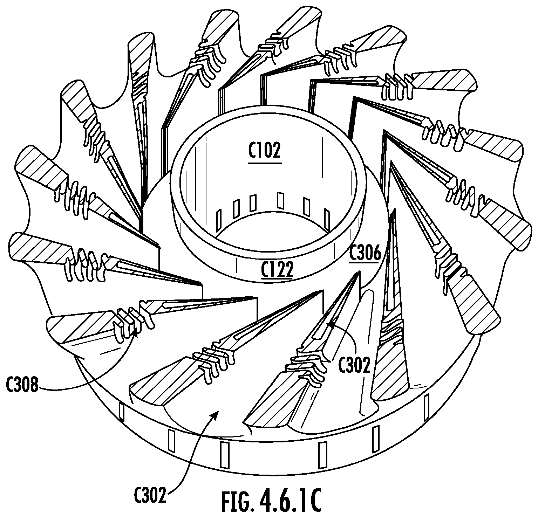

FIG. 4.6.1A schematically depicts a bottom cross-sectional view of an exemplary eductor body portion of a heater body, such as the heater body shown in FIG. 4.1.3A;

FIG. 4.6.1B shows an enlarged view of the bottom cross-sectional view shown in FIG. 4.6.1A;

FIG. 4.6.1C shows a top perspective view of the exemplary eductor body shown in FIG. 4.6.1A and 4.6.1B;

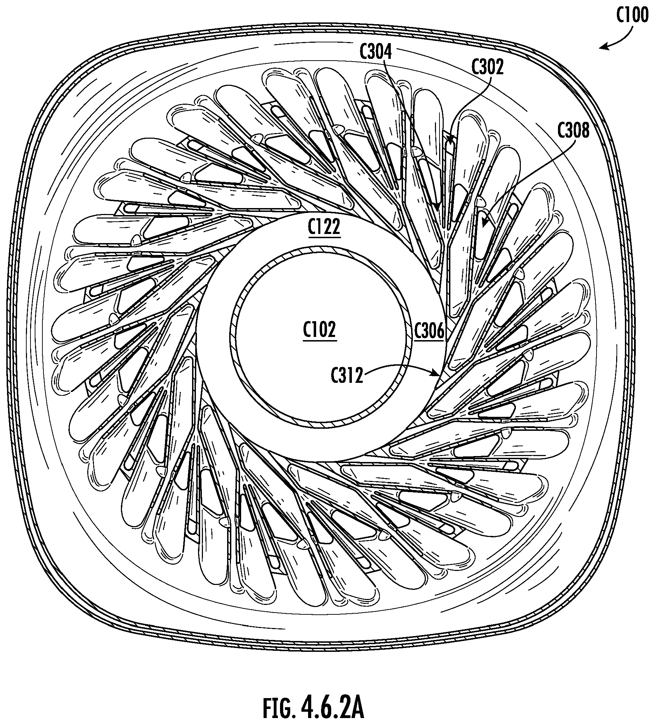

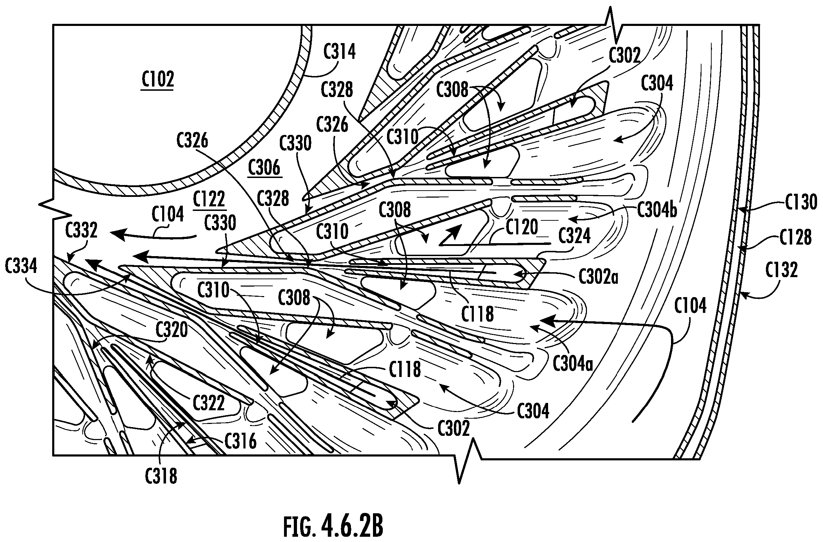

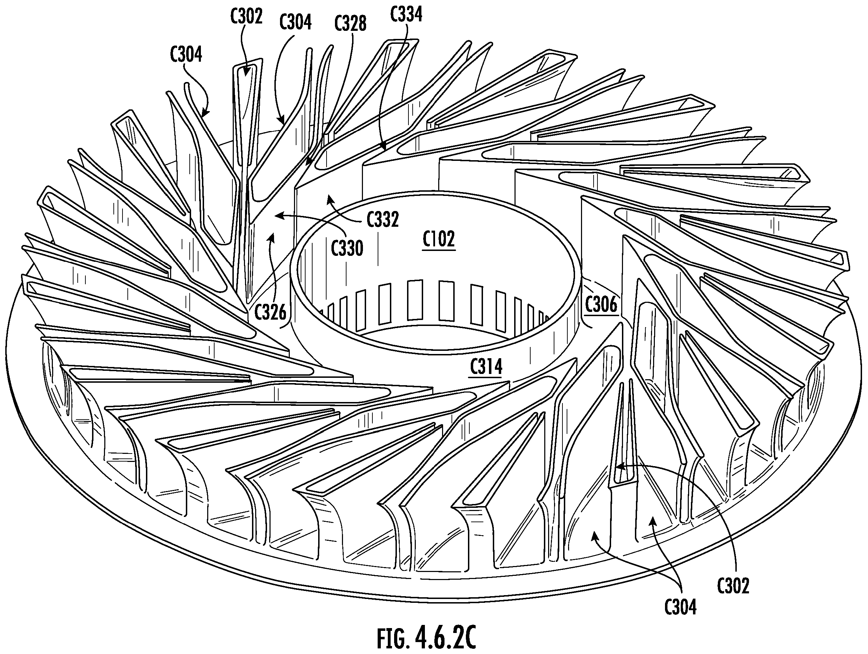

FIG. 4.6.2A schematically depicts a bottom cross-sectional view of an exemplary eductor body portion of a heater body, such as the heater body shown in FIG. 4.1.3A;

FIG. 4.6.2B shows an enlarged view of the bottom cross-sectional view shown in FIG. 4.6.2A;

FIG. 4.6.2C shows a top perspective view of the exemplary eductor body shown in FIGs. 4.6.2A and 4.6.2B;

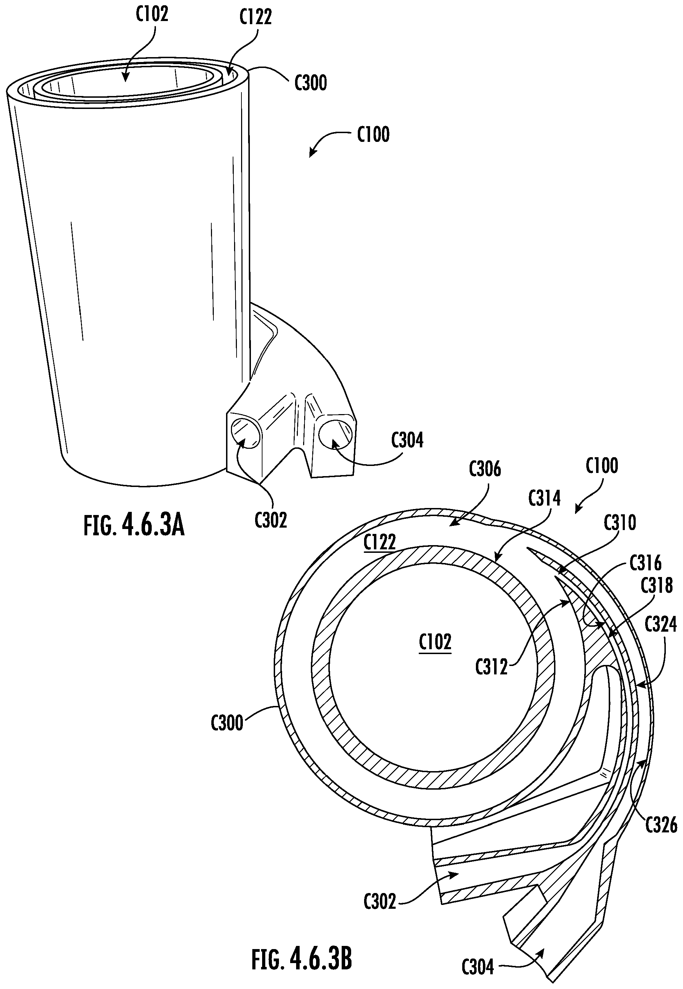

FIGs. 4.6.3A and 4.6.3B respectively show a perspective view and a top cross-sectional view of another exemplary eductor body that may be included in a heater body, such as the heater body shown in FIG. 4.1.3A;

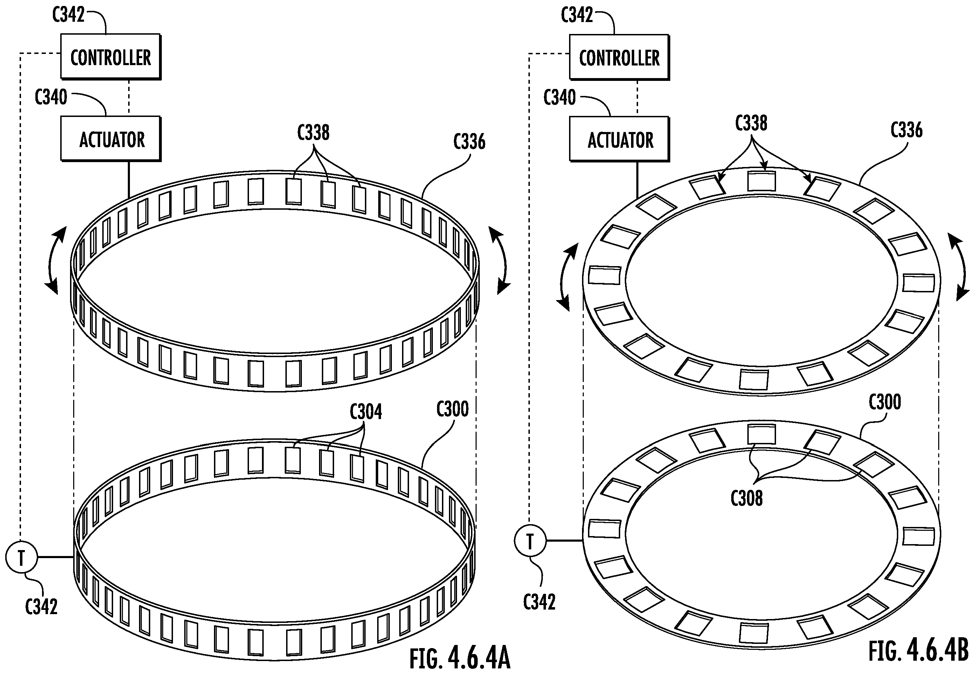

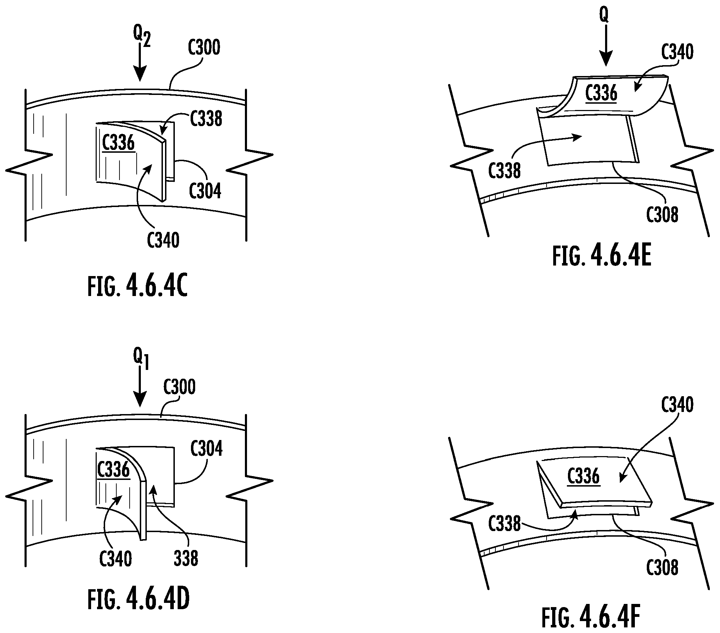

FIGs. 4.6.4A through 4.6.4F show various exemplary aperture mechanisms that may be included in an eductor body;

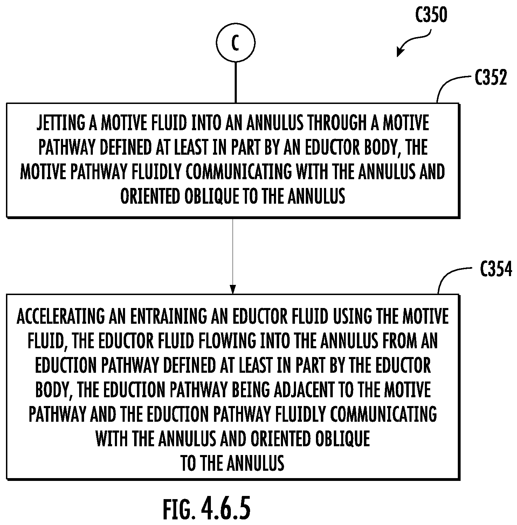

FIG. 4.6.5 shows a flowchart depicting an exemplary method of circulating fluid such as combustion gas;

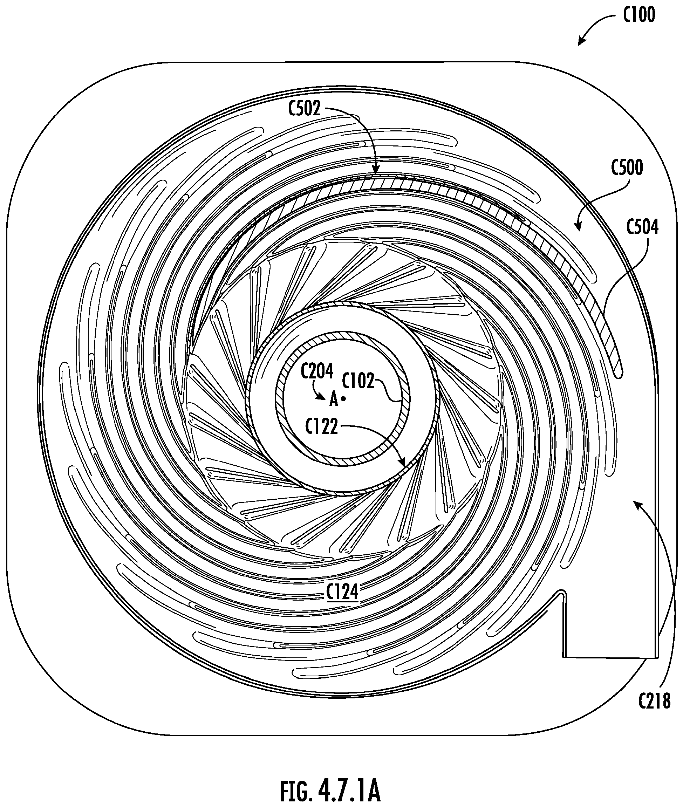

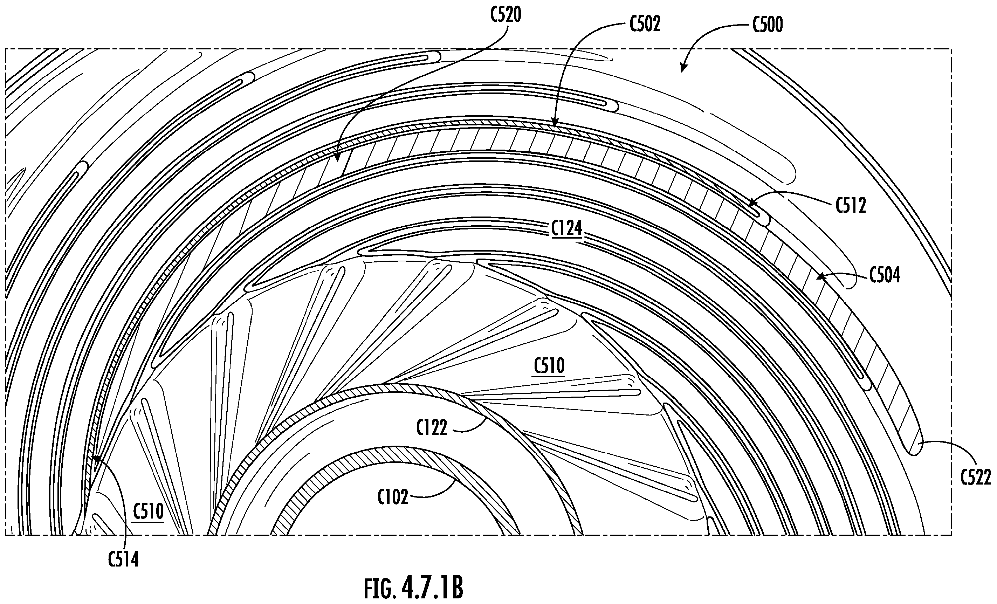

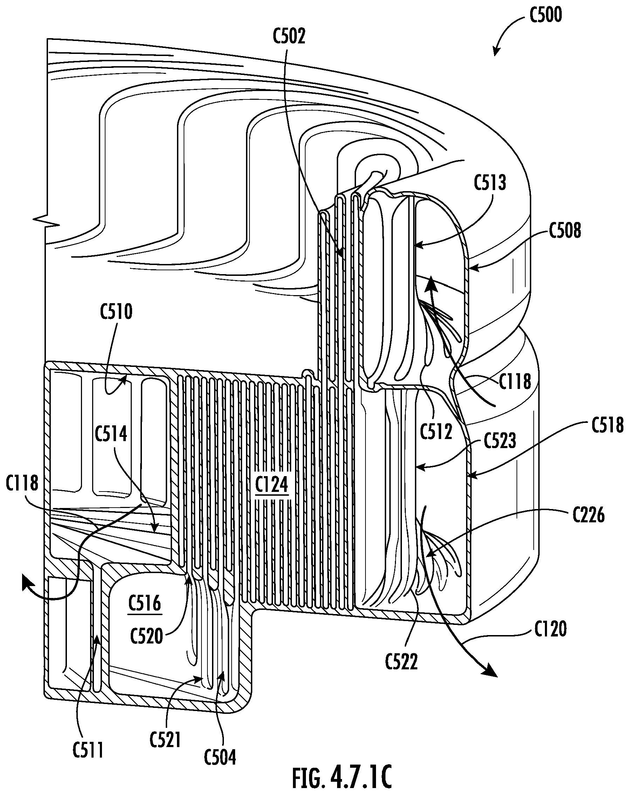

FIG. 4.7.1A shows a top cross-sectional view of an exemplary heat recuperator body portion of a heater body, such as the heater body shown in FIG. 4.1.3A;

FIG. 4.7.1B shows an enlarged view of the top cross-sectional view shown in FIG. 4.7.1A;

FIG. 4.7.1C shows a cross-sectional view of another exemplary heat recuperator body portion of a heater body, such as the heater body shown in FIG. 4.1.3A;

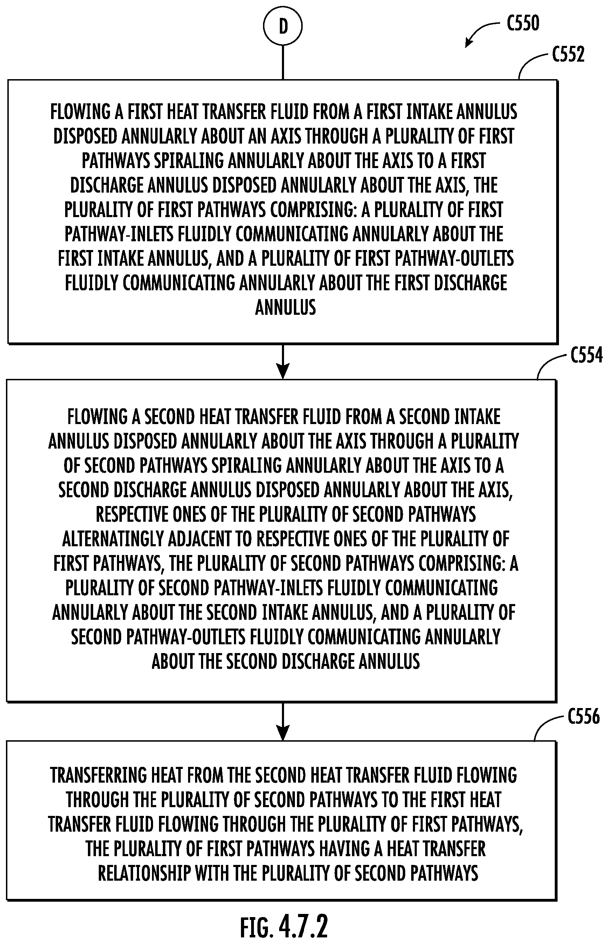

FIG. 4.7.2 shows a flowchart depicting an exemplary method of transferring heat between fluid streams, such as recuperating heat from exhaust gas by transferring the heat to intake air; and

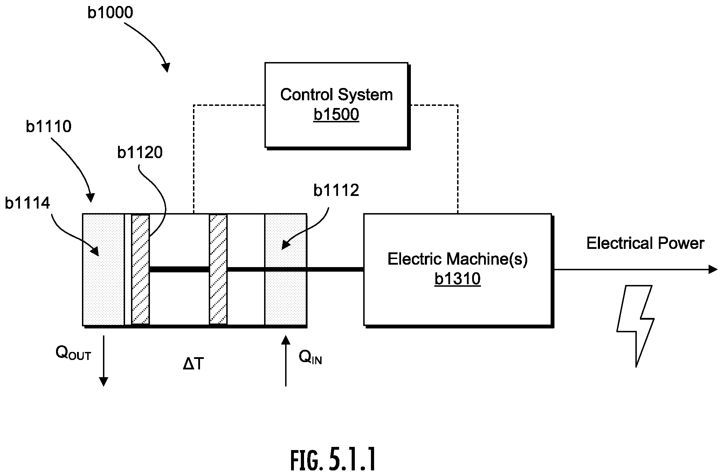

FIG. 5.1.1 provides a schematic block diagram of a power generation system according to an aspect of the present disclosure;

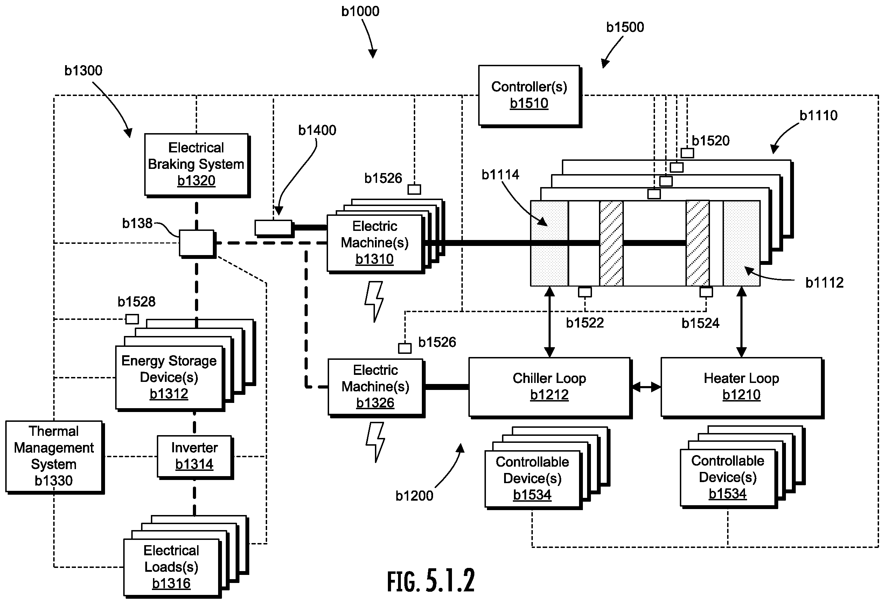

FIG. 5.1.2 provides a detailed schematic view of the power generation system of FIG. 5.1.1;

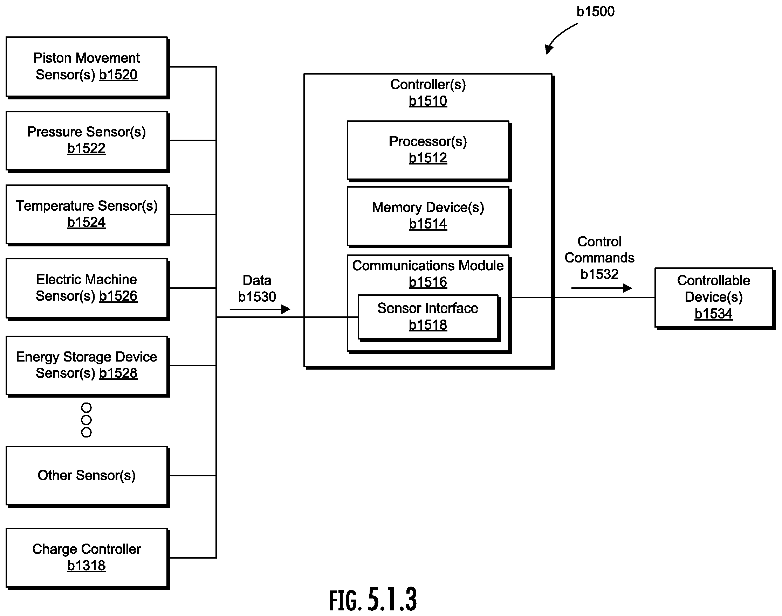

FIG. 5.1.3 provides a block diagram of a control system of the power generation system of FIGS. 5.1.1 and 5.1.2;

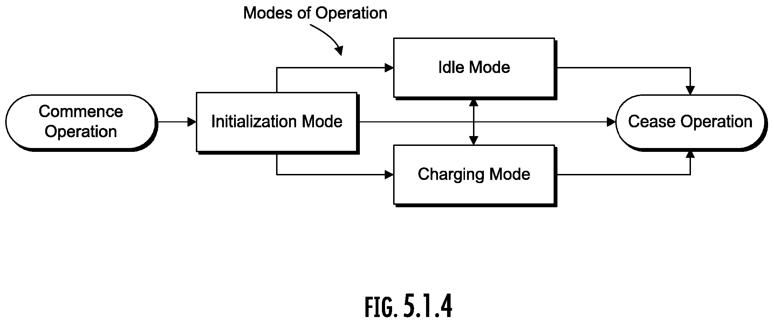

FIG. 5.1.4 provides a block diagram depicting various modes of operation of the power generation system of FIGS. 5.1.1 and 5.1.2;

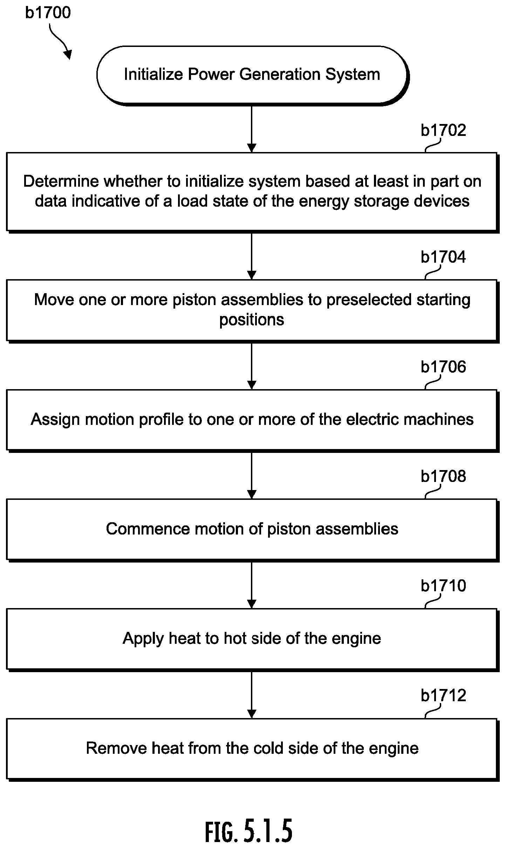

FIG. 5.1.5 provides a flow diagram depicting an example method of initializing the power generation system of FIGS. 5.1.1 and 5.1.2;

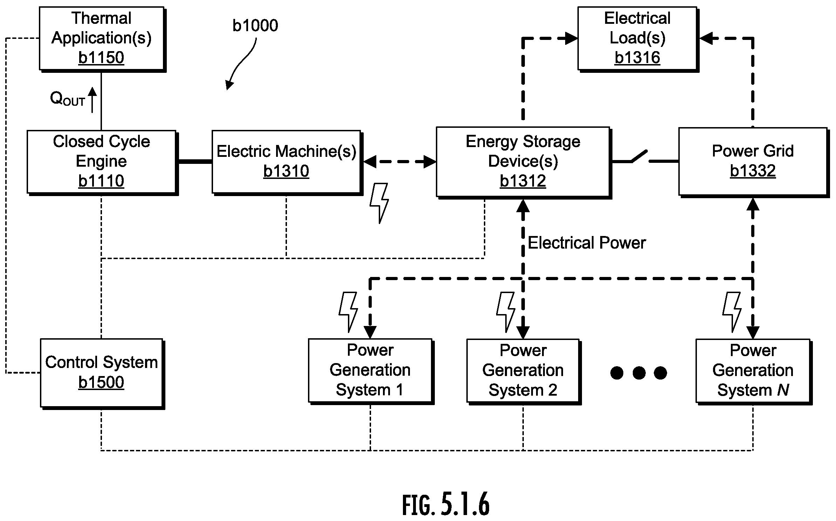

FIG. 5.1.6 provides a power generation that includes the power generation system of FIG. 5.1.2 as one of a plurality of power generation systems operable to provide electrical power to one or more energy storage devices;

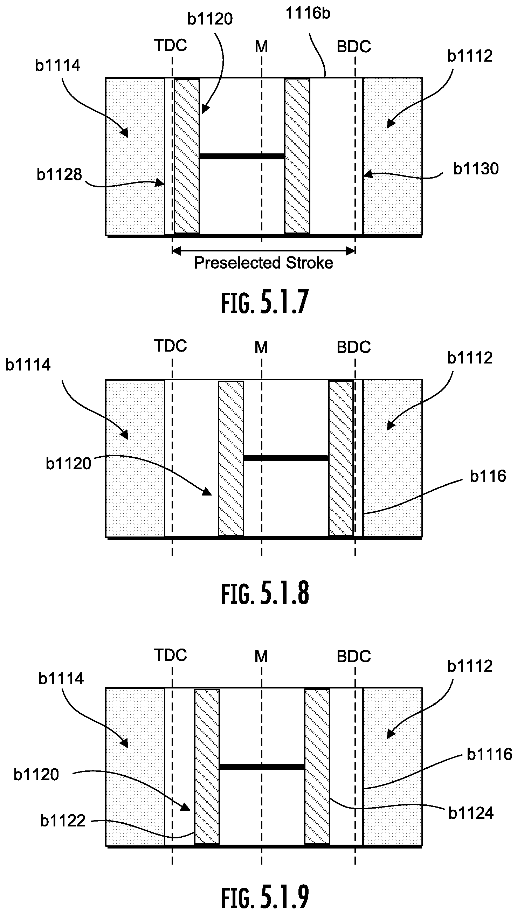

FIG. 5.1.7 provides a schematic view of an example piston assembly disposed within one of the piston bodies of a closed cycle engine of the power generation system of FIGS. 5.1.1 and 5.1.2 and depicts the piston assembly in a top dead center position;

FIG. 5.1.8 provides a schematic view of the piston assembly of FIG. 5.1.7 and depicts the piston assembly in a bottom dead center position;

FIG. 5.1.9 provides a schematic view of the piston assembly of FIG. 5.1.7 and depicts the piston assembly positioned at a midpoint of a preselected stroke of the piston assembly;

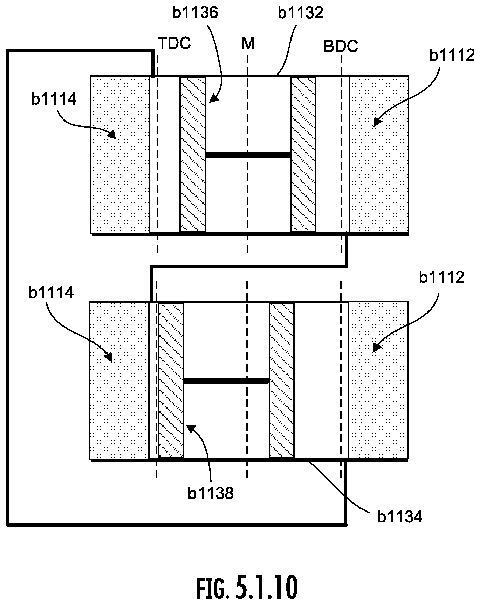

FIG. 5.1.10 provides a schematic view of two fluidly coupled piston bodies with piston assemblies disposed therein;

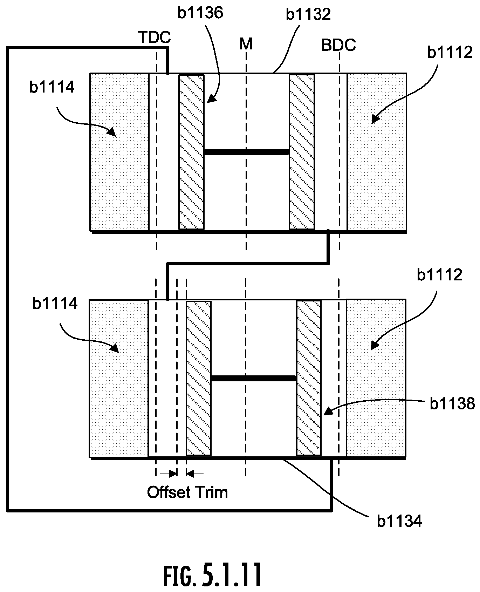

FIG. 5.1.11 provides another schematic view of two fluidly coupled piston bodies with piston assemblies disposed therein;

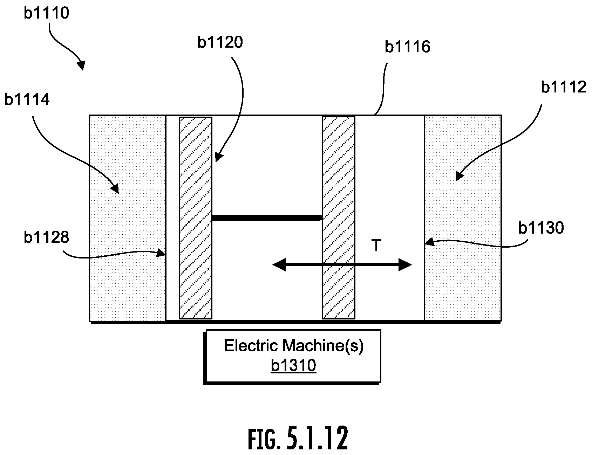

FIG. 5.1.12 provides a schematic view of a piston assembly being moved within its associated piston body;

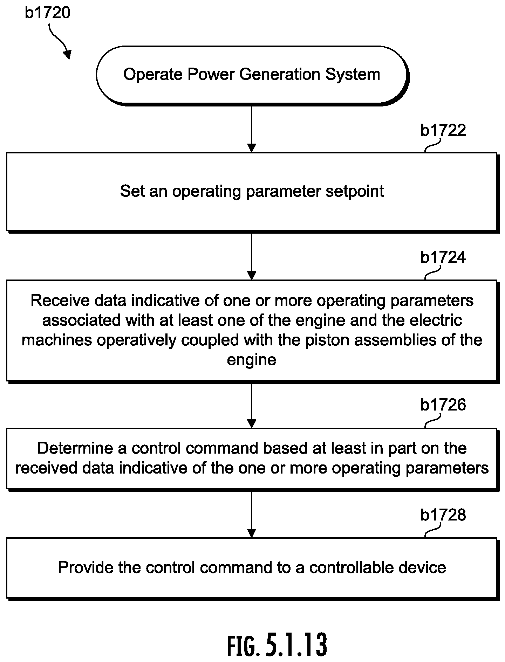

FIG. 5.1.13 provides a flow diagram depicting an example method of controlling the power generation system of FIGS. 5.1.1 and 5.1.2 in a normal mode;

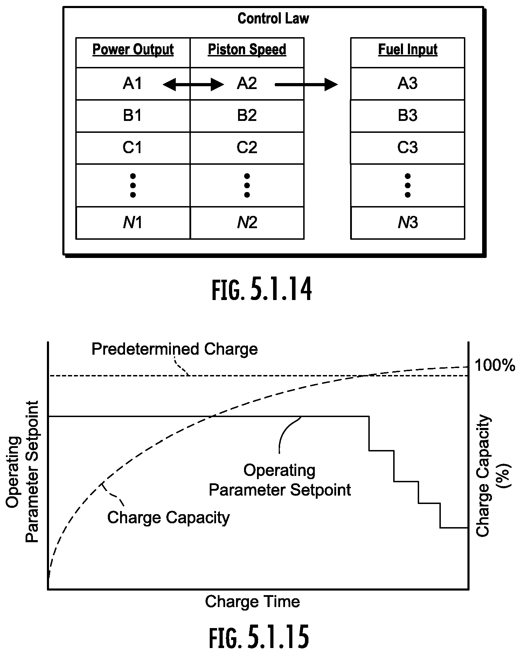

FIG. 5.1.14 provides a table of an example control law that associates piston speeds of the piston assembly with power outputs of the electric machines as well as fuel inputs to a combustor for heating a hot side of the closed cycle engine;

FIG. 5.1.15 provides a graph depicting an operating parameter setpoint as well as a charge capacity of the one or more energy storage devices as a function of charge time;

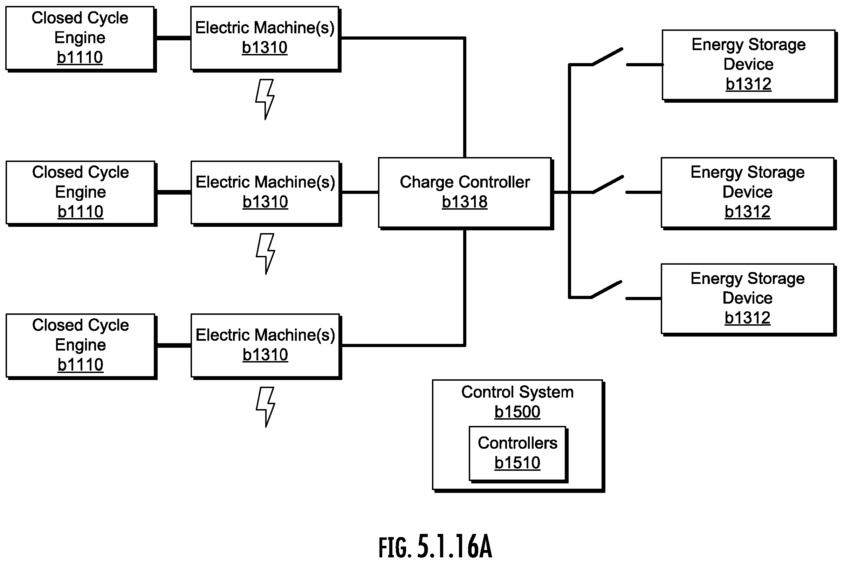

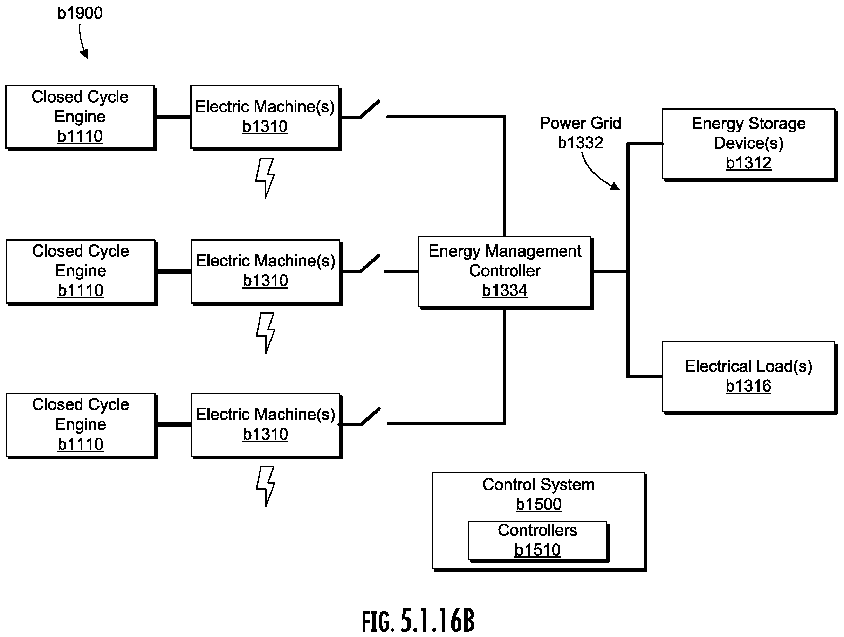

FIG. 5.1.16A provides a schematic view of a power generation system that includes a plurality of closed cycle engines each having one or more associated electric machines according to an example aspect of the present disclosure;

FIG. 5.1.16B provides a schematic view of a distributed power generation network that includes a plurality of closed cycle engines each having one or more associated electric machines according to an example aspect of the present disclosure;

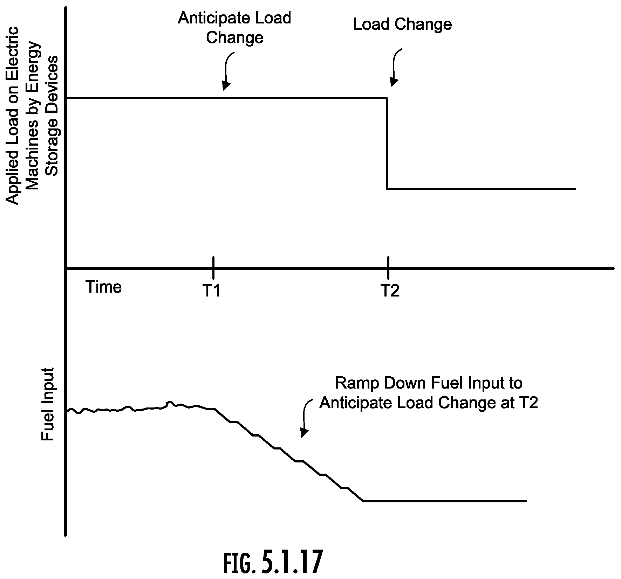

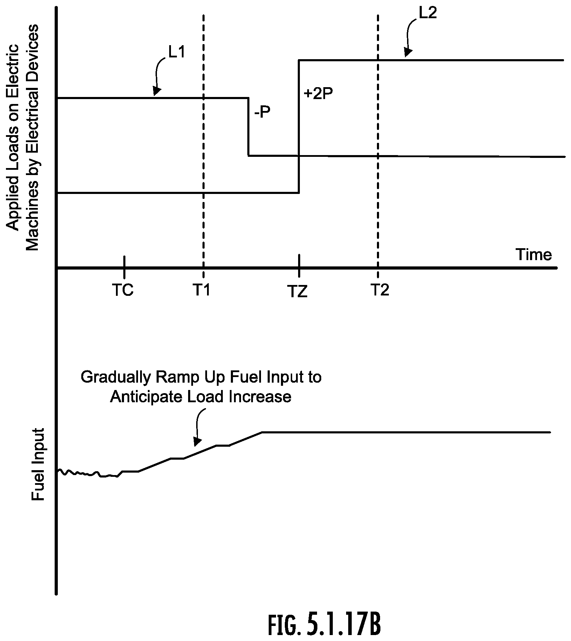

FIG. 5.1.17 provides a graph depicting an applied load on the electric machines as a function of time as well as a fuel input to the combustor of a closed cycle engine as a function of time according to an example aspect of the present disclosure;

FIG. 5.1.17B provides a graph depicting a plurality of applied loads on the electric machines as a function of time as well as a fuel input to the combustor of a closed cycle engine as a function of time according to an example aspect of the present disclosure;

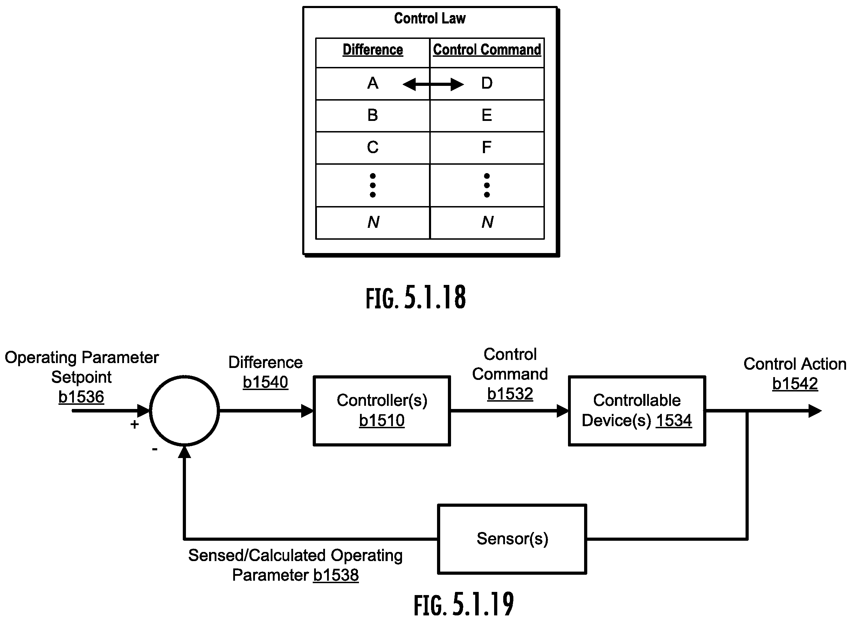

FIG. 5.1.18 provides a table of an example control law that associates various differences with various control commands;

FIG. 5.1.19 provides an example feedback control loop for controlling the power generation system in accordance with an embodiment of the present disclosure;

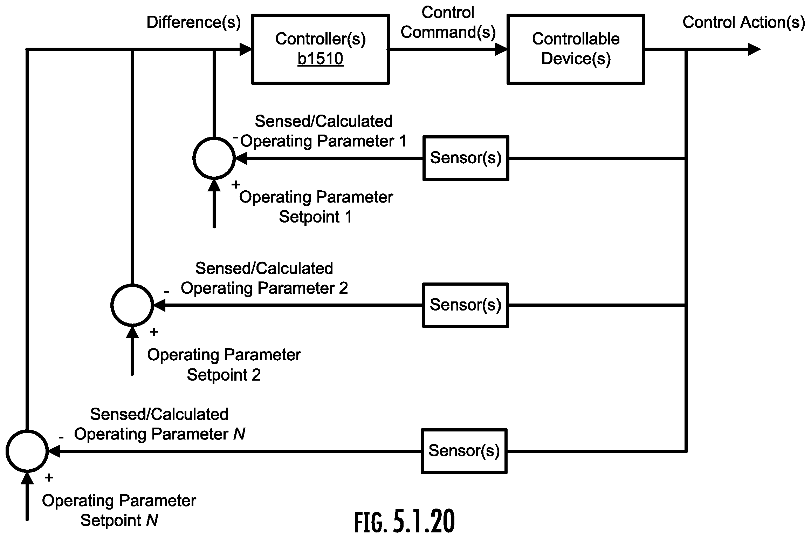

FIG. 5.1.20 provides another example feedback control loop for controlling the power generation system in accordance with an embodiment of the present disclosure;

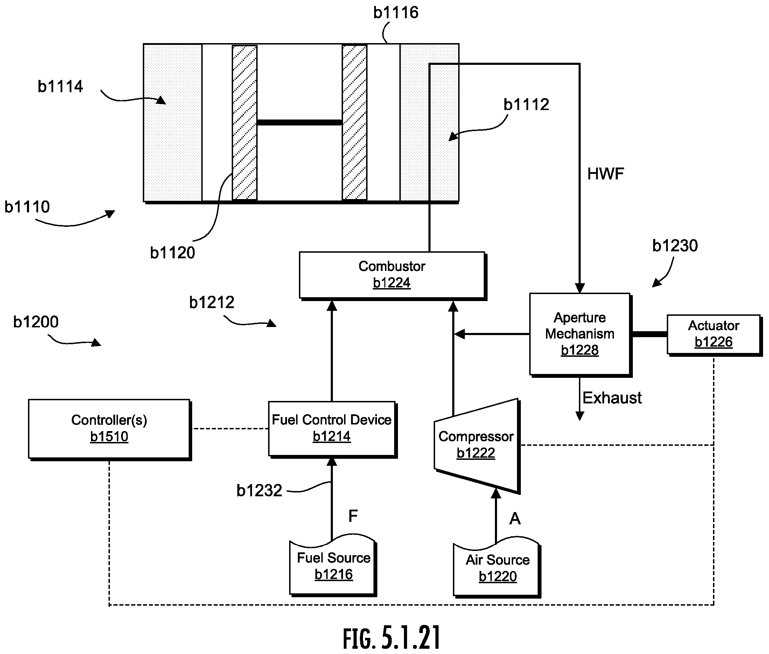

FIG. 5.1.21 provides a schematic view of an example heater loop of the balance of plant of the power generation system of FIGS. 5.1.1 and 5.1.2;

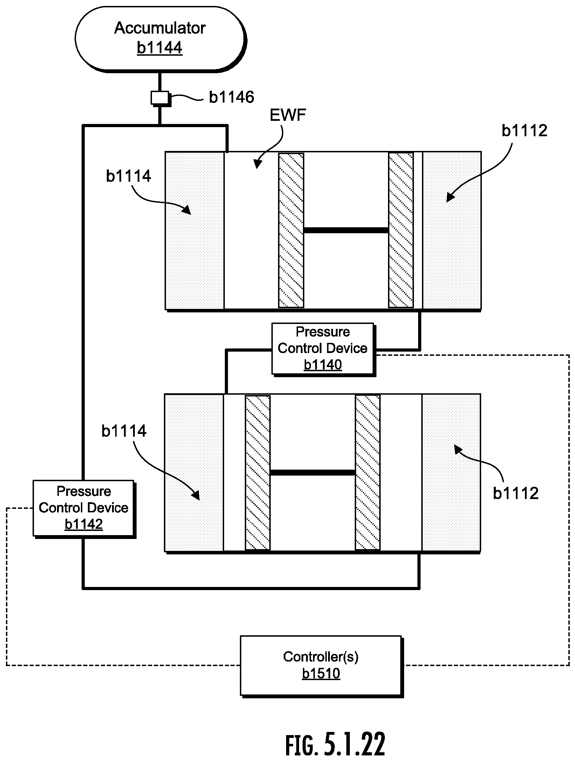

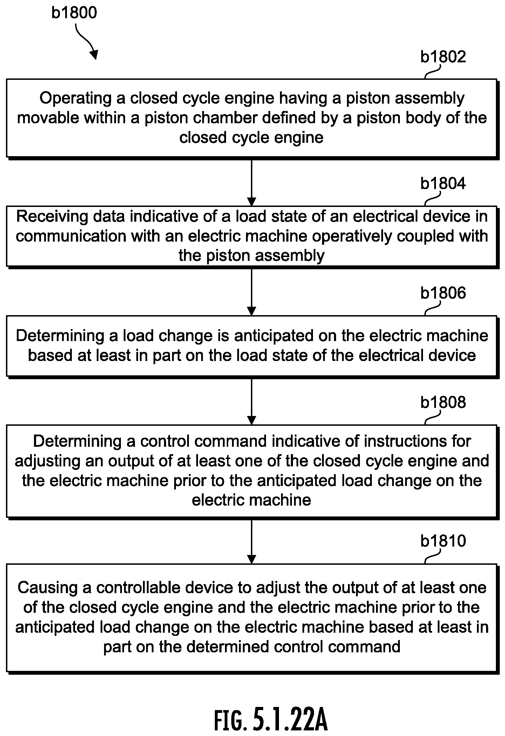

FIG. 5.1.22 provides a schematic view of two fluidly coupled piston bodies of the closed cycle engine of FIG. 5.1.2;

FIG. 5.1.22A is a flow diagram of a method for controlling a system according to an example aspect of the present disclosure;

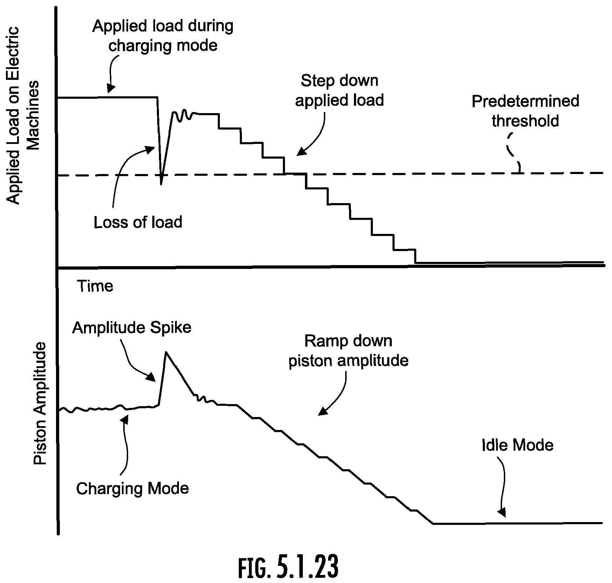

FIG. 5.1.23 provides a graph depicting an applied load on the electric machines as a function of time as well as piston speed as a function of time according to an example aspect of the present disclosure;

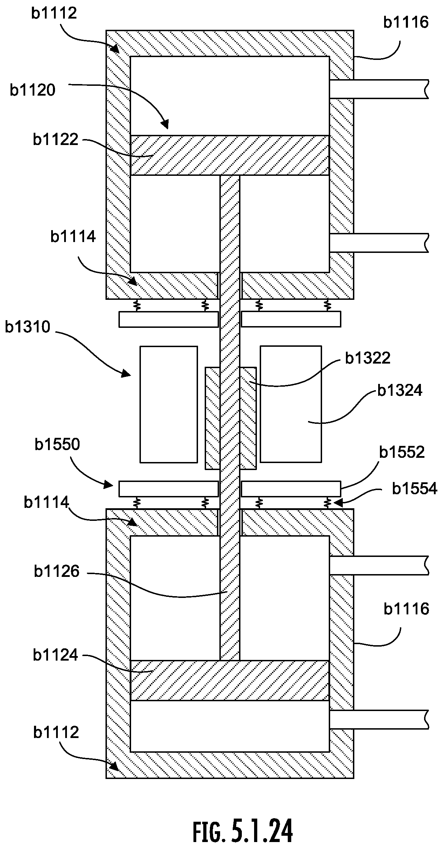

FIG. 5.1.24 provides a schematic view of an impact prevention system b1550 according to an example aspect of the present disclosure;

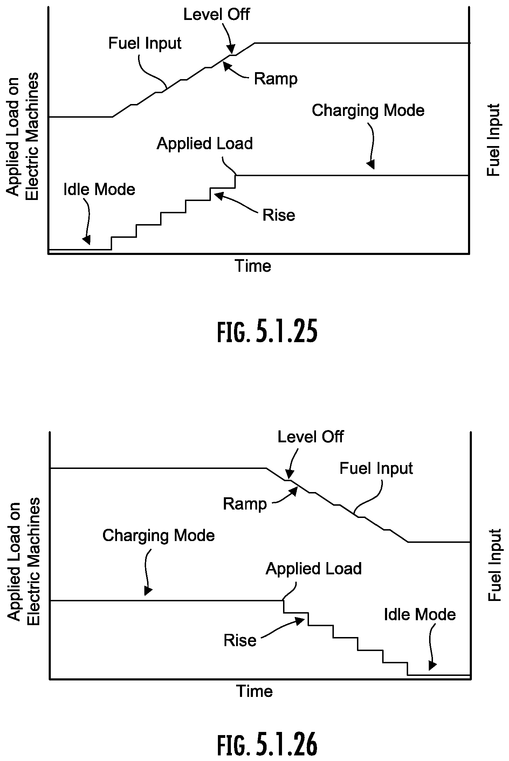

FIG. 5.1.25 provides a graph depicting an applied load on the electric machines as well as a fuel input as a function of time as the system transitions from an idle mode to a charging mode according to an example aspect of the present disclosure;

FIG. 5.1.26 provides a graph depicting an applied load on the electric machines as well as a fuel input as a function of time as the system transitions from a charging mode to an idle mode according to an example aspect of the present disclosure;

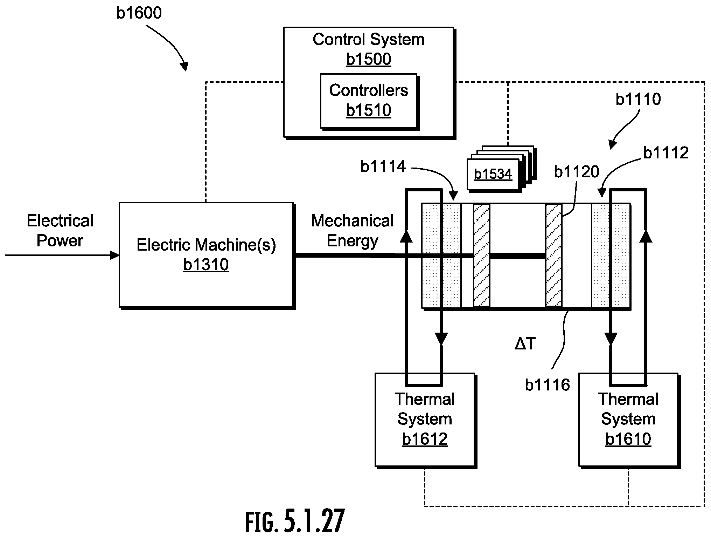

FIG. 5.1.27 provides a schematic block diagram of a heat pump system according to an aspect of the present disclosure; and

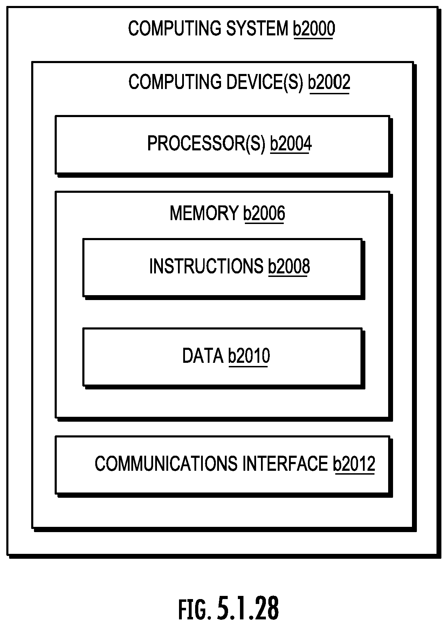

FIG. 5.1.28 provides an example computing system in accordance with an example embodiment of the present disclosure.

Repeat use of reference characters in the present specification and drawings is intended to represent the same or analogous features or elements of the present disclosure.

DETAILED DESCRIPTION

Reference now will be made in detail to embodiments of the disclosure, one or more examples of which are illustrated in the drawings. Each example is provided by way of explanation of the disclosure and not limitation. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. In another instance, ranges, ratios, or limits associated herein may be altered to provide further embodiments, and all such embodiments are within the scope of the present disclosure. Unless otherwise specified, in various embodiments in which a unit is provided relative to a ratio, range, or limit, units may be altered, and/or subsequently, ranges, ratios, or limits associated thereto are within the scope of the present disclosure. Thus, it is intended that the present disclosure covers such modifications and variations as come within the scope of the appended claims.

It is understood that terms "upstream" and "downstream" refer to the relative direction with respect to fluid flow in a fluid pathway. For example, "upstream" refers to the direction from which the fluid flows, and "downstream" refers to the direction to which the fluid flows. It is also understood that terms such as "top", "bottom", "outward", "inward", and the like are words of convenience and are not to be construed as limiting terms. The term "loop" can be any suitable fluid pathway along which fluid can flow and can be either open or closed, unless stated otherwise. As used herein, the terms "first", "second", and "third" may be used interchangeably to distinguish one component from another and are not intended to signify location or importance of the individual components. The terms "a" and "an" do not denote a limitation of quantity, but rather denote the presence of at least one of the referenced item.

Approximating language, as used herein throughout the specification and claims, may be applied to modify any quantitative representation that could permissibly vary without resulting in a change in the basic function to which it is related. Accordingly, a value modified by a term or terms, such as "about," "substantially," and "approximately," are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

## CHAPTER 1 - GENERATION, CONVERSION, AND DISTRIBUTION SYSTEMS

### Chapter 1.1 - Power Generation, Engine and Energy Conversion Systems, and Energy Distribution Systems

Power generation and distribution systems are generally challenged to reduce production inefficiencies, transmission losses, and emissions (e.g., oxides of nitrogen, sulfur, or carbon) during and post energy production. For example, the U.S. Energy Information Administration (EIA) estimates that electricity transmission and distribution (T&D) losses average about 5% annually in the United States, with other estimates of line losses of 8% or higher. With average power plant efficiencies in the United States of about 30% to 40%, overall electrical efficiency at the end user (e.g., residences, businesses, etc.) is approximately 25% to 35%. Local, distributed, or on-demand power generation may not require access to T&D networks or grids, such as to result in an at least 5% improvement in efficiency, in addition to reducing emission and adverse environmental impacts.

In the United States, power generation may account for approximately one-third of national greenhouse gas emissions. Transportation may further account for another approximately one-third of national greenhouse gas emissions, about 85% of which may be from ground transportation vehicles (e.g., cars, trucks, buses, etc.). Known systems for reducing emissions include chemical or catalytic reduction after-treatment. However, such systems may be expensive to acquire and maintain, complex, or heavy, thereby reducing overall system efficiency. Additionally, such systems may be difficult to regulate, such that emissions reduction benefits may be lost after initial acquisition. Furthermore, although known systems have resulted in reducing emissions of high reactive gases such as unburned hydrocarbons, volatile organic compounds, or oxides of sulfur or nitrogen, emissions of greenhouse gases such as carbon dioxide may generally correspond or increase with power generation and consumption.

Power generation and distribution systems may turn to renewable energy sources such as solar, wind, or tidal energy to reduce emissions. However, renewable energy sources are often periodic or unpredictable, such as depicted in FIG. 1.1.1 and FIG. 1.1.2. For example, referring to FIGS. 1.1.1 - FIG. 1.1.2, available sunlight for solar power generation is dependent on the time of day and weather. As another example, wind power generation is dependent on weather patterns and may be both unpredictable and irregular. As still another example, tidal power generation is dependent on currents and lunar phases. Additionally, renewable energy sources are difficult to incorporate to transportation systems due to size, scale, and desired power output and density.

Historically, peak power demand occurs in the mid-afternoon, such as due to high industrial usage. In contrast, power usage is historically lower during the overnight hours when residential and industrial usage is both relatively low. However, overnight power demand is expected to increase with increased electrification, such as with increased usage of electric vehicles. Additionally, daytime power demand may further increase, further increasing peak power demands. For example, full charging of electric vehicles may take 4 to 8 hours and may generally occur overnight when power usage is historically low. Additionally, or alternatively, electric vehicle charging may occur during the workday, such as after a morning commute and during business hours, which may further increase industrial power usage. Generally, current power generation and distribution systems are inflexible (e.g., due to cost and operational needs and restrictions) relative to changes in usage and demand throughout a day, such as depicted in regard to FIG. 1.1.1 - FIG. 1.1.2. Additionally, such inflexibility may be exasperated by periodic, irregular, or unpredictable power generation from renewable energy sources.

In addition, or alternatively, power generation and distribution infrastructure is costly and renders large geographic areas vulnerable to power outages based on adverse weather, natural or man-made disasters, equipment malfunctions and failures, or maintenance activities. Initial and on-going costs, such as maintenance and repair, result in barriers to further development of access to electricity in developing countries and rural areas. Expanding access to electricity may be hindered by relatively high costs to establish generation and distribution infrastructure, relatively high operational costs, and an ability for governments, corporations, or consumers to pay or invest in power generation and distribution. Such costs may also pose barriers to further maintenance and development in developed countries, as older infrastructure and natural or man-made disasters may cause maintenance or improvement to be cost-prohibitive. For example, in the United States, power lines and transformers are approximately 30 years old on average. Replacement costs for such equipment have been estimated at over $1 trillion dollars.

Such issues and barriers from power generation and distribution systems may further pose barriers to developing or expanding access to clean water, water desalination, and food security. Additionally, or alternatively, smaller scale or portable power generation systems that may overcome distribution obstacles may nonetheless be challenged to provide a necessary power density and output. Such limitations in power density and output may generally result in an inability to apply smaller scale or portable power generation systems to rural areas or developing nations. Furthermore, as clean water treatment and desalination are generally energy intensive, smaller scale or portable power generation system may generally provide inadequate power density and output for providing water to rural or less population-dense areas.

As such, there is a need for power generation systems that provide improved efficiency and reduced emissions over known power generation systems that may further be sized or scaled to provide improved power distribution without adversely affecting efficiency and emissions. The need for improved power generation systems is further, or alternatively, such that issues regarding power distribution, power generation versus changing peak power demands, emissions, barriers to infrastructure development, and challenges and limitations posed by vehicle electrification may each be addressed, improved upon, or alleviated.

Small-scale or portable power generation systems are desirable for applications including space vehicles and systems, automotive drivetrain and aerospace propulsion electrification, direct cooling sources, and portable or distributed power generation such as to address issues regarding power generation efficiency, density, and output. However, there is a need for improved thermal efficiency, electrical conversion efficiency, or both, for such systems.

Heat engines and other devices for converting thermal energy into useful work are generally inefficient relative to their maximum theoretical efficiency. Carnot's theorem states that the maximum theoretical efficiency ($\eta_{Carnot}$) for an ideal, reversible heat engine is given by:

$$\eta_{Carnot} = 1 - \left(\frac{T_{Hot,engine}}{T_{Cold,ambient}}\right)$$

where $T_{hot,engine}$ is the absolute temperature (e.g. in Rankine or Kelvin) at which heat enters the engine and $T_{cold,ambient}$ is the absolute temperature of the environment into which the engine exhausts its waste heat. Carnot efficiencies for terrestrial applications over 90% and Carnot efficiencies for space applications of over 99% are theoretically possible based at least on known fuel sources. However, in practice, $T_{Hot,engine}$ is limited by the maximum operating temperature of the materials in the engine and $T_{Cold,ambient}$ is limited by an available heat sink available (e.g., the atmosphere at ambient temperature, the temperature of a body of water, etc.). Thus, heat engines may generally operate with a temperature ratio ($T_{Hot,engine}/T_{Cold,ambient}$) between 2 and 4 and have actual Carnot efficiencies between 50% and 70% (Figure 1.1.3). In contrast, open cycle internal combustion engines, such as those that use the Otto cycle, are generally limited to a maximum theoretical efficiency between 60% and 70% based at least on a fuel type or compression ratio at the open cycle engine. Closed cycle heat engines operate through an exchange of thermal energy to and from relatively hot and cold volumes of an engine. Closed cycle heat engines, such as Stirling arrangements, or variations thereof, such as Franchot or Vuilleimier arrangements, generally have a maximum theoretical efficiency that is the Carnot efficiency. As such, closed cycle engines such as Stirling arrangements are considered to have a greater potential as high efficiency engines based at least on the difference in maximum theoretical efficiency and actual efficiency.

Achieving maximum theoretical efficiency of a system is challenged or limited based at least on inefficient combustion, inefficient heat exchange, heat losses to a surrounding environment, non-ideal behavior of one or more working fluids, friction losses, pumping losses, or other inefficiencies and imperfections, or energy required to operate the system. Actual or real thermal efficiency $\eta_{th,system}$ of a system including a heat engine, heat generation sources, heat removal systems, or other heat exchangers, is given by:

$$\eta_{th,system} \equiv \frac{W_{out}}{Q_{in} + E_{in} + W_{in}} = \frac{(Q_{in} + E_{in} + W_{in}E_{in} + Q_{in} - \Sigma Q_{out})}{Q_{in} + E_{in} + W_{in}Q_{in}}$$

Actual or real thermal efficiency $\eta_{th}$ of a heat engine is given by:

$$\eta_{th} = \frac{W_{out}}{Q_{in}} = \frac{Q_{in} - Q_{out}}{Q_{in}} = 1 - \frac{Q_{out}}{Q_{in}}$$

where $W_{out}$ is the net useful work done by the engine, $Q_{in}$ is the thermal energy received by the engine, and $Q_{out.}$ is the thermal energy lost or rejected to the environment. $E_{in}$ is the electrical energy used by the system for operation of the system (e.g., fuel and/or oxidizer pumps, cooling sources, etc.). $W_{in}$ is work input into the system. Achievable thermal efficiency tends to increase with power output. For example, motor vehicle applications are generally 20% to 35% thermally efficient, while large marine and stationary diesel systems can exceed 50% thermal efficiency (Figure 1.1.3). Stirling engines have demonstrated thermal efficiencies up to 38%.

The useful work generated by a heat engine can further be converted into electrical energy. The electrical efficiency ($\eta_{El}$) can be calculated in the same manner as the thermal efficiency:

$$\eta_{El} = \frac{E_{out}}{Q_{in}}$$

where $E_{out}$ is the net electrical energy output from an electric machine that is operatively coupled to the engine and $Q_{in}$ is the thermal energy received by the engine. $E_{out}$ may be calculated by subtracting any electricity required to operate the power generation system from the gross power generated by the system. If combustion is the source of heating working fluid for the engine, the electrical efficiency may be calculated using a lower heating value (LHV) of the fuel. Gas turbine power plants have demonstrated greater than 41% LHV electrical efficiency. Stirling engines have demonstrated LHV electrical efficiencies between 10% and 30%.

Waste heat, or an amount of heat from a heat engine that is not converted into useful work, may be recoverable to provide additional benefit before being exhausted. The amount and quality of the recoverable heat varies based on the cycle, the engine (Figure 1.1.5), and the operating conditions. High grade or otherwise high quality waste heat may be used in one or more additional heat engines or power generation cycles before being exhausted, such as in one or more bottoming cycles of a combined cycle power generation system. For example, the waste heat from a gas turbine power generation system may be used to boil water for a bottoming steam power generation cycle. The electrical efficiency $\eta_{CC}$ of a combined cycle power generation system is given by:

$$\eta_{CC} = \frac{\Sigma(E_{out,1} + E_{out,2} + \cdots E_{out,n})}{\Sigma Q_{in}}$$

where $E_{out,1}$ is the net electricity produced by a first power generation cycle, $E_{out,2}$ is the net electricity produced by a second power generation cycle, $E_{out,n}$ is the net electricity produced by an $n^{th}$ (final) power generation cycle, and $\Sigma Q_{in}$ is the net thermal energy received by the system. Generally, the net thermal energy received by the system may be nominally $Q_{in}$ of the topping cycle, or additionally or alternatively inclusive of any supplementary thermal input (e.g. supplementary firings, if applicable). Stated another way, $\eta_{CC}$ is the total net electricity generated by the entire combined cycle power generation system divided by the total energy input into the combined cycle system. Some combined cycle power generation systems may include an efficiency (i.e., LHV electrical efficiency) of up to approximately 62% for a gas turbine bottomed by a steam cycle.

Waste heat may also be used to produce hot water, process steam, or other useful products that would otherwise require additional energy input to produce in a combined heat and power (CHP) system or cogeneration system, after a combined cycle, or in lieu thereof. The overall electrical efficiency $\eta_{CHP}$ of a combined heat and power system is given by:

$$\eta_{CHP} = \frac{E_{out} + \Sigma\, Q_{th}}{Q_{in}}$$

where $E_{out}$ is the net useful power output of the system, $\Sigma\, Q_{th}$ is the sum of the net useful thermal outputs from the system, and $Q_{in}$ is the thermal energy received by the system. CHP systems may have demonstrated total efficiencies between 55% and 85%. CHP systems with Stirling engines may have total efficiencies of 88% and higher. However, higher CHP system efficiencies can come at the cost of lower thermal efficiency, lower electrical efficiency, or both. For example, $\eta_{CHP}$ can maximized by maximizing $\Sigma\, Q_{th}$, which may be achieved at the cost of electricity generation.

Known closed cycle engines, such as Stirling arrangements, are challenged to produce increasing levels of power output and power density. Such larger sizes or scales can negate other desirable qualities of the engine, such as relatively small-scale or portability. Stirling engines tend to have low power output, with power generation of 1 - 5 kW for domestic use, up to 25 kW for commercial use, or up to 75 kW for military use. At least one 75 kW engine Stirling engine is a four shaft kinematic Stirling engine for use in submarines. It is nominally 1.1m in diameter, 1.75 m long, including the generator and control system but not including the fuel or oxidizer sources, with an energy density of 175 kWh/ton.

Stirling engines may generally include two types: kinematic or free piston. Kinematic Stirling engines use mechanically-connected piston assemblies to transmit and convert linear motion of the pistons to a rotary motion for an output shaft. Although such systems may address issues regarding power transmission and stability of the engine, mechanically-connected piston assemblies introduce relatively large power losses via the mechanical members. Additionally, or alternatively, the relatively fixed relationship of mechanically-connected piston assemblies limits the mechanical stroke of the piston assembly. As such, the efficiency of mechanically-connected multi- piston assemblies in a closed cycle engine is decreased in addition to mechanical losses (e.g., friction, leakage, inertia, etc.).

Single-piston free piston closed cycle engine arrangements generally exchange improved thermal efficiency for lower total power generation and density. As such, single-piston free piston closed cycle engine arrangements are not generally suited for higher power output applications.

Multi-piston free piston closed cycle engine arrangements may provide thermal efficiencies of single-piston free piston arrangements and further increase total power generation. However, multi-piston free piston arrangements generally differ from single-piston arrangements and mechanically-connected multi-piston arrangements in that the cycle or motion of a multi-piston free piston arrangement is generally determined by thermo-mechanical interactions of the entire system including the free pistons, the thermal source(s), and a power extraction apparatus. The thermo-mechanical interactions may further include mechanical losses and their effect on balance of the entire system.

For example, multi-piston free-piston closed cycle engines are challenged to respond to time lags. As another example, if one piston assembly drifts from an intended position a subsequent oscillation can become unbalanced. An unbalanced arrangement may lead to undesired vibrations, crashing of the pistons to end walls, or other mechanical losses that may further reduce power output, induce wear and deterioration, or otherwise reduce efficient, stable, or effective use of a multi-piston free piston engine.

As such, there is a need for improved closed cycle engines such as Stirling engines that provide improved power generation efficiency and output. Additionally, there is a need for such improved closed cycle engines that may further retain or improve power density, such as to provide relatively small-scale or portability such as to provide improved application to power generation and distribution systems.

**Chapter 1.2 - System for Energy Conversion**

Referring now to FIG. 1.2.1, an exemplary schematic block diagram depicting a system for energy conversion (hereinafter, "system A10") is provided. Various embodiments of the system A10 provided herein include systems for power generation, a heat recovery system, a heat pump or cryogenic cooler, a system including and/or acting as a bottoming cycle and/or a topping cycle, or other system for producing useful work or energy, or combinations thereof. Referring additionally for FIG. 1.3.1, various embodiments of the system A10 include a closed cycle engine apparatus (hereinafter, "engine A100", apparatus "A100", or "engine assembly C900", or otherwise denoted herein) operably coupled to a load device c092. The engine A100 contains a substantially fixed mass of an engine working fluid to which and from which thermal energy is exchanged at a respective cold side heat exchanger A42 and a hot side heat exchanger C108. In one embodiment, the engine working fluid is helium. In other embodiments, the engine working fluid may include air, nitrogen, hydrogen, helium, or any appropriate compressible fluid, or combinations thereof. In still various embodiments, any suitable engine working fluid may be utilized in accordance with the present disclosure. In exemplary embodiments, the engine working fluid may include a gas, such as an inert gas. For example, a noble gas, such as helium may be utilized as the engine working fluid. Exemplary working fluids preferably are inert, such that they generally do not participate in chemical reactions such as oxidation within the environment of the engine. Exemplary noble gasses include monoatomic gases such as helium, neon, argon, krypton, or xenon, as well as combinations of these. In some embodiments, the engine working fluid may include air, oxygen, nitrogen, or carbon dioxide, as well as combinations of these. In still various embodiments, the engine working fluid may be liquid fluids of one or more elements described herein, or combinations thereof. It should further be appreciated that various embodiments of the engine working fluid may include particles or other substances as appropriate for the engine working fluid.

In various embodiments, the load device C092 is a mechanical work device or an electric machine. In one embodiment, the load device C092 is a pump, compressor, or other work device. In another embodiment, the load device C092 as an electric machine is configured as a generator producing electric energy from movement of a piston assembly A1010 at the engine. In still another embodiment, the electric machine is configured as a motor providing motive force to move or actuate the piston assembly A1010, such as to provide initial movement (e.g., a starter motor). In still various embodiments, the electric machine defines a motor and generator or other electric machine apparatus such as described further herein.

A heater body C100 is thermally coupled to the engine A100. The heater body C100 may generally define any apparatus for producing or otherwise providing a heating working fluid such as to provide thermal energy to the engine working fluid. Various embodiments of the heater body C100 are further provided herein. Exemplary heater bodies C100 may include, but are not limited to, a combustion or detonation assembly, an electric heater, a nuclear energy source, a renewable energy source such as solar power, a fuel cell, a heat recovery system, or as a bottoming cycle to another system. Exemplary heater bodies C100 at which a heat recovery system may be defined include, but are not limited to, industrial waste heat generally, gas or steam turbine waste heat, nuclear waste heat, geothermal energy, decomposition of agricultural or animal waste, molten earth or metal or steel mill gases, industrial drying systems generally or kilns, or fuel cells. The exemplary heater body C100 providing thermal energy to the engine working fluid may include all or part of a combined heat and power cycle, or cogeneration system, or power generation system generally.

In still various embodiments, the heater body C100 is configured to provide thermal energy to the engine working fluid via a heating working fluid. The heating working fluid may be based, at least in part, on heat and liquid, gaseous, or other fluid provided by one or more fuel sources and oxidizer sources providing a fuel and oxidizer. In various embodiments, the fuel includes, but is not limited to, hydrocarbons and hydrocarbon mixtures generally, "wet" gases including a portion of liquid (e.g., humid gas saturated with liquid vapor, multiphase flow with approximately 10% liquid and approximately 90% gas, natural gas mixed with oil, or other liquid and gas combinations, etc.), petroleum or oil (e.g., Arabian Extra Light Crude Oil, Arabian Super Light, Light Crude Oil, Medium Crude Oil, Heavy Crude Oil, Heavy Fuel Oil, etc.), natural gas (e.g., including sour gas), biodiesel condensate or natural gas liquids (e.g., including liquid natural gas (LNG)), dimethyl ether (DME), distillate oil #2 (DO2), ethane ($C_2$), methane, high $H_2$ fuels, fuels including hydrogen blends (e.g., propane, butane, liquefied petroleum gas, naphtha, etc.), diesel, kerosene (e.g., jet fuel, such as, but not limited to, Jet A, Jet A-1, JP1, etc.), alcohols (e.g., methanol, ethanol, etc.), synthesis gas, coke over gas, landfill gases, etc., or combinations thereof.

In various embodiments, the system A10 includes a working fluid body C108, such as further described herein. In one embodiment, the working fluid body C108 defines a hot side heat exchanger A160, such as further described herein, from which thermal energy is output to the engine working fluid at an expansion chamber A221 of the engine. The working fluid body C108 is positioned at the expansion chamber A221 of the engine in thermal communication with the heater body C100. In other embodiments, the working fluid body C108 may be separate from the heater body C100, such that the heating working fluid is provided in thermal communication, or additionally, in fluid communication with the working fluid body C108. In particular embodiments, the working fluid body C108 is positioned in direct thermal communication with the heater body C100 and the expansion chamber A221 of the engine A100 such as to receive thermal energy from the heater body C100 and provide thermal energy to the engine working fluid within the engine.

In still various embodiments, the heater body C100 may include a single thermal energy output source to a single expansion chamber A221 of the engine. As such, the system A10 may include a plurality of heater assemblies each providing thermal energy to the engine working fluid at each expansion chamber A221. In other embodiments, such as depicted in regard to FIG. 1.3.1, the heater body C100 may provide thermal energy to a plurality of expansion chambers A221 of the engine. In still other embodiments, such as depicted in regard to FIG. 8, the heater body includes a single thermal energy output source to all expansion chambers A221 of the engine.

The system A10 further includes a chiller assembly, such as chiller assembly A40 further described herein. The chiller assembly A40 is configured to receive and displace thermal energy from a compression chamber A222 of the engine. The system A10 includes a cold side heat exchanger A42 thermally coupled to the compression chamber A222 of the closed cycle engine and the chiller assembly. In one embodiment, the cold side heat exchanger A42 and the piston body C700 defining the compression chamber A222 of the engine are together defined as an integral, unitary structure, such as further shown and described in regard to FIGS. 1.4.1-1.4.7. In still various embodiments, the cold side heat exchanger A42, at least a portion of the piston body C700 defining the compression chamber A222, and at least a portion of the chiller assembly together define an integral, unitary structure.

In various embodiments, the chiller assembly A40 is a bottoming cycle to the engine A100. As such, the chiller assembly A40 is configured to receive thermal energy from the engine A100. The thermal energy received at the chiller assembly A40, such as through a cold side heat exchanger A42, or cold side heat exchanger A170 further herein, from the engine A100 is added to a chiller working fluid at the chiller assembly A40. In various embodiments, the chiller assembly A40 defines a Rankine cycle system through which the chiller working fluid flows in closed loop arrangement with a compressor. In some embodiments, the chiller working fluid is further in closed loop arrangement with an expander. In still various embodiments, the system A10 includes a heat exchanger A88 (FIG. 1.3.2). In various embodiments, the heat exchanger A188 may include a condenser or radiator. The cold side heat exchanger A40 is positioned downstream of the compressor and upstream of the expander and in thermal communication with a compression chamber A222 of the closed cycle engine, such as further depicted and described in regard to FIG. 1.3.1 - FIG. 1.3.2. In various embodiments, the cold side heat exchanger A42 may generally define an evaporator receiving thermal energy from the engine A40.

Referring still to FIG. 1.2.1, in some embodiments, the heat exchanger A188 is positioned downstream of the expander and upstream of the compressor and in thermal communication with a cooling working fluid. In the schematic block diagram provided in FIG. 1.2.1, the cooling working fluid is an air source. However, in various embodiments, the cooling fluid may define any suitable fluid in thermal communication with the heat exchanger. The heat exchanger may further define a radiator configured to emit or dispense thermal energy from the chiller assembly A40. A flow of cooling working fluid from a cooling fluid source is provided in thermal communication with the heat exchanger to further aid heat transfer from the chiller working fluid within the chiller assembly A40 to the cooling working fluid.

As further described herein, in various embodiments the chiller assembly A40 may include a substantially constant density heat exchanger. The constant density heat exchanger generally includes a chamber including an inlet and an outlet each configured to contain or trap a portion of the chiller working fluid for a period of time as heat from the closed cycle engine is transferred to the cold side heat exchanger A42. In various embodiments, the chamber may define a linear or rotary chamber at which the inlet and the outlet are periodically opened and closed via valves or ports such as to trap the chiller working fluid within the chamber for the desired amount of time. In still various embodiments, the rate at which the inlet and the outlet of the chamber defining the constant density heat exchanger is a function at least of velocity of a particle of fluid trapped within the chamber between the inlet and the outlet. The chiller assembly A40 including the constant density heat exchanger may provide efficiencies, or efficiency increases, performances, power densities, etc. at the system A10 such as further described herein.

It should be appreciated that in other embodiments, the chiller assembly A40 of the system A10 may include a thermal energy sink generally. For example, the chiller assembly A40 may include a body of water, the vacuum of space, ambient air, liquid metal, inert gas, etc. In still various embodiments, the chiller working fluid at the chiller assembly A40 may include, but is not limited to, compressed air, water or water-based solutions, oil or oil-based solutions, or refrigerants, including, but not limited to, class 1, class 2, or class 3 refrigerants. Further exemplary refrigerants may include, but are not limited to, a supercritical fluid including, but not limited to, carbon dioxide, water, methane, ethane, propane, ethylene, propylene, methanol, ethanol, acetone, or nitrous oxide, or combinations thereof. Still exemplary refrigerants may include, but are not limited to, halon, perchloroolefin, perchlorocarbon, perfluoroolefin, perfluororcarbon, hydroolefin, hydrocarbon, hydrochloroolefin, hydrochlorocarbon, hydrofluoroolefin, hydrofluorocarbon, hydrochloroolefin, hydrochlorofluorocarbon, chlorofluoroolefin, or chlorofluorocarbon type refrigerants, or combinations thereof. Still further exemplary embodiments of refrigerant may include, but are not limited to, methylamine, ethylamine, hydrogen, helium, ammonia, water, neon, nitrogen, air, oxygen, argon, sulfur dioxide, carbon dioxide, nitrous oxide, or krypton, or combinations thereof.

It should be appreciated that where combustible or flammable refrigerants are included for the chiller working fluid, various embodiments of the system A10 may beneficially couple the heater body C100, and/or the fuel source, and the chiller assembly A40 in fluid communication such that the combustible or flammable working fluid to which thermal energy is provided at the chiller assembly A40 may further be utilized as the fuel source for generating heating working fluid, and the thermal energy therewith, to output from the heater body C100 to the engine working fluid at the engine A100.

Various embodiments of the system A 10 include control systems and methods of controlling various sub-systems disclosed herein, such as, but not limited to, the fuel source, the oxidizer source, the cooling fluid source, the heater body C100, the chiller assembly C40, the engine A100, and the load device C092, including any flow rates, pressures, temperatures, loads, discharges, frequencies, amplitudes, or other suitable control properties associated with the system A10. In one aspect, a control system for the system A10 defining a power generation system is provided. The power generation system includes one or more closed cycle engines (such as engine A100), one or more load devices defining electric machines (such as load device C092) operatively coupled to the engine, and one or more energy storage devices in communication with the electric machines.

The control system can control the closed cycle engine and its associated balance of plant to generate a temperature differential, such as a temperature differential at the engine working fluid relative to the heating working fluid and the chiller working fluid. Thus, the engine defines a hot side, such as at the expansion chamber A221, and a cold side, such as at the compression chamber A222. The temperature differential causes free piston assemblies A1010 to move within their respective piston chambers defined at respective piston bodies C700. The movement of the pistons A1011 causes the electric machines to generate electrical power. The generated electrical power can be provided to the energy storage devices for charging thereof. The control system monitors one or more operating parameters associated with the closed cycle engine, such as piston movement (e.g., amplitude and position), as well as one or more operating parameters associated with the electric machine, such as voltage or electric current. Based on such parameters, the control system generates control commands that are provided to one or more controllable devices of the system A10. The controllable devices execute control actions in accordance with the control commands. Accordingly, the desired output of the system A10 can be achieved.

Furthermore, the control system can monitor and anticipate load changes on the electric machines and can control the engine A100 to anticipate such load changes to better maintain steady state operation despite dynamic and sometimes significant electrical load changes on the electric machines. A method of controlling the power generation system is also provided. In another aspect, a control system for a heat pump system is provided. The heat pump system includes one or more of the closed cycle engines described herein. A method of controlling the heat pump system is also provided. The power generation and heat pump systems as well as control methods therefore are provided in detail herein.

### Chapter 1.3 - Energy Conversion Apparatus

Referring now to FIG. 1.3.1 - FIG. 1.3.2, exemplary embodiments of the system A10 are further provided. FIG. 1.3.1 is an exemplary cross sectional view of the system A10 including the heater body C100 and the chiller assembly A40 each in thermal communication with the engine A100, or particularly the engine working fluid within the engine A100, such as shown and described according to the schematic block diagram of FIG. 1.2.1. FIG. 1.3.2 is an exemplary cutaway perspective view of a portion of the engine A100. The system A10 includes a closed cycle engine A100 including a piston assembly A1010 positioned within a volume or piston chamber C112 (FIGS. 1.8.1A - FIG. 1.8.1F) defined by a wall defining a piston body C700. The volume within the piston body C700 is separated into a first chamber, or hot chamber, or expansion chamber A221 and a second chamber, or cold chamber (relative to the hot chamber), or compression chamber A222 by a piston A1011 of the piston assembly A1010. The expansion chamber A221 is positioned thermally proximal to the heater body C100 relative to the compression chamber A222 thermally distal to the heater body C100. The compression chamber A222 is positioned thermally proximal to the chiller assembly A40 relative to the expansion chamber A221 thermally distal to the chiller assembly A40.

In various embodiments, the piston assembly A1010 defines a double-ended piston assembly A1010 in which a pair of pistons A1011 is each coupled to a connection member A1030. The connection member A1030 may generally define a rigid shaft or rod extended along a direction of motion of the piston assembly A1010. In other embodiments, the connection members A1030 includes one or more springs or spring assemblies, such as further provided herein, providing flexible or non-rigid movement of the connection member A1030. In still other embodiments, the connection member A1030 may further define substantially U- or V- connections between the pair of pistons A1011.

Each piston A1011 is positioned within the piston body C700 such as to define the expansion chamber A221 and the compression chamber A222 within the volume of the piston body C700. The load device c092 is operably coupled to the piston assembly A1010 such as to extract energy therefrom, provide energy thereto, or both. The load device c092 defining an electric machine is in magnetic communication with the closed cycle engine via the connection member A1030. In various embodiments, the piston assembly A1010 includes a dynamic member A181 positioned in operable communication with a stator assembly A182 of the electric machine. The stator assembly A182 may generally include a plurality of windings wrapped circumferentially relative to the piston assembly A1010 and extended along a lateral direction L. In one embodiment, such as depicted in regard to FIG. 1.3.1, the dynamic member A181 is connected to the connection member A1030. The electric machine may further be positioned between the pair of pistons A1011 of each piston assembly A1010. Dynamic motion of the piston assembly A1010 generates electricity at the electric machine. For example, linear motion of the dynamic member A181 between each pair of chambers defined by each piston A1011 of the piston assembly A1010 generates electricity via the magnetic communication with the stator assembly A182 surrounding the dynamic member A181.

Referring to FIG. 1.3.1 - FIG. 1.3.2, in various embodiments, the working fluid body C108 may further define at least a portion of the expansion chamber A221. In one embodiment, such as further described herein, the working fluid body C108 defines a unitary or monolithic structure with at least a portion of the piston body C700, such as to define at least a portion of the expansion chamber A221. In some embodiments, the heater body C100 further defines at least a portion of the working fluid body C108, such as to define a unitary or monolithic structure with the working fluid body C108, such as further described herein. In one embodiment, such as further shown and described in regard to FIG. 1.5.1, the system A10 includes the hot side heat exchanger or working fluid body C108 positioned between the heater body C100 and the expansion chamber A221 of the piston body C700. In various embodiments, such as further shown and described in regard to FIG. 1.5.1, the working fluid body C108 includes a plurality of heater conduits or working fluid pathways C110 extended from the expansion chamber A221.

The engine A100 defines an outer end A103 and an inner end A104 each relative to a lateral direction L. The outer ends A103 define laterally distal ends of the engine A100 and the inner ends 104 define laterally inward or central positions of the engine A100. In one embodiment, such as depicted in regard to FIG. 1.3.1 - FIG. 1.3.2, the heater body C100 is positioned at outer ends A103 of the system A10. The piston body C700 includes a dome structure A26 at the expansion chamber A221. The expansion chamber dome structure A26 s provides reduced surface area heat losses across the outer end A103 of the expansion chamber A221. In various embodiments, the pistons A1011 of the piston assembly A1010 further include domed pistons A1011 corresponding to the expansion chamber A221 dome. The dome structure A26, the domed piston A1011, or both may provide higher compressions ratios at the chambers A221, A222, such as to improve power density and output.

The chiller assembly A40 is positioned in thermal communication with each compression chamber A222. Referring to FIG. 1.3.1 - FIG. 1.3.2, the chiller assembly A40 is positioned inward along the lateral direction L relative to the heater body C100. In one embodiment, the chiller assembly A40 is positioned laterally between the heater body C100 and the load device c092 along the lateral direction L. The chiller assembly A40 provides the chiller working fluid in thermal communication with the engine working fluid at the cold side heat exchanger A42 and/or compression chamber A222. In various embodiments, the piston body C700 defines the cold side heat exchanger A42 between an inner volume wall A46 and an outer volume wall A48 surrounding at least the compression chamber A222 portion of the piston body C700.

In various embodiments, such as depicted in regard to FIG. 1.3.1 - FIG. 1.3.2, the load device c092 is positioned at the inner end A104 of the system A10 between laterally opposing pistons A1011. The load device c092 may further include a machine body c918 positioned laterally between the piston bodies C700. The machine body c918 surrounds and houses the stator assembly A182 of the load device c092 defining the electric machine. The machine body c918 further surrounds the dynamic member A181 of the electric machine attached to the connection member A1030 of the piston assembly A1010. In various embodiments, such as depicted in regard to FIG. 1.3.1 - FIG. 1.3.2, the machine body c918 further provides an inner end wall A50 at the compression chamber A222 laterally distal relative to the expansion chamber A221 dome.

**Chapter 1.4 - Cold Side Heat Exchanger, Piston Body, and Chiller Assembly**

Referring now to FIG. 1.4.1 - FIG. 1.4.7, exemplary embodiments of a portion of the piston body C700, cold side heat exchanger A42, and chiller assembly A40 are provided. In various embodiments, the system A10 includes the cold side heat exchanger A42 further including a plurality of chiller conduits A54 each defining chiller passages A56 providing fluid communication of the engine working fluid through the chiller conduit A54 and the compression chamber A222. The piston body C700 includes the outer volume wall A48 and an inner volume wall A46 each separated along a radial direction R perpendicular to the lateral direction L. Each volume wall A46, A48 may be defined at least partially circumferentially relative to a piston body centerline A12 extended through each piston body C700.

In the embodiments depicted in the perspective cutaway views of FIGS. 1.4.1-1.4.2, each volume wall A46, A48 is extended along the lateral direction L. The outer volume wall A48 surrounds the plurality of chiller conduits A54. The plurality of chiller conduits A54 is positioned between the outer volume wall A48 and the inner volume wall A46. The cold side heat exchanger A42 further includes a chamber wall A52 extended between the outer volume wall A48 and the inner volume wall A46. The chamber wall A52, the outer volume wall A48, and the inner volume wall A46 together define a chiller working fluid passage A66 surrounding the plurality of chiller conduits A54. The chiller conduits A54 define walled manifolds fluidly separating the chiller passage A56 (i.e., the passage through which the engine working fluid flows) and the chiller working fluid passage A66 (i.e., the passage through which the chiller working fluid flows). As such, the chiller working fluid flowing through the chiller working fluid passage A66 is fluidly separated from the engine working fluid flowing through the chiller conduits A54. Additionally, the chiller working fluid flowing through the chiller working fluid passage A66 is in thermal communication with the engine working fluid flowing through the chiller conduits A54.

In various embodiments, the chamber wall A52 is extended between the volume walls at an acute angle relative to the lateral direction L along which the piston assembly A1010 is extended. In one embodiment, the chamber wall A52 is extended between 0 degrees and approximately 90 degrees relative to the lateral direction L. In another embodiment, the chamber wall A52 is extended between 30 degrees and approximately 60 degrees relative to the lateral direction L along which the volume walls A46, A48 are substantially extended. In yet another embodiment, the chamber wall A52 is extended approximately 45 degrees relative to the lateral direction L. The chamber wall A52 is further connected to the outer volume wall A48, the inner volume wall A46, and the chiller conduits A54 such as to provide support to one another. The chamber walls A52 extended along an acute angle may further provide advantageous placement of the chiller conduits A54 within the chiller working fluid passage A66 such as to promote thermal energy transfer from the engine working fluid to the chiller working fluid.

During operation of the engine A100, a portion of the engine working fluid is admitted from the compression chamber A222 into the plurality of chiller conduits A54 via the plurality of chiller passage openings A58. The chiller passage opening A58 is defined at a fluid interface of the chiller conduit A54 to the compression chamber A222. In various embodiments, the chiller passage opening A58 provides direct fluid communication with the compression chamber A222. In one embodiment, a distance between the compression chamber A222 of the engine and the cold side heat exchanger A42, or particularly the plurality of chiller conduits A54 in direct thermal communication with the chiller working fluid, is substantially zero. Stated differently, the distance from the compression chamber A222 to the chiller conduits A54 in direct thermal communication with the chiller working fluid (i.e., the chiller working fluid is fluidly contacting an outer wall of the chiller conduits A54 such as to provide direct thermal communication to the engine working fluid within the chiller conduit A54) is the thickness of the chamber wall A52 through which the plurality of chiller passage openings A58 is defined. A distance between the compression chamber A222 and the cold side heat exchanger A42 beyond or greater than the thickness of the chamber wall A52 is approximately zero.

Still further, during operation of engine A100, the compression stroke of the piston assembly A1010 may generally push the engine working fluid through the chiller conduits A54. The engine working fluid within chiller passages A56 in the chiller conduits A54 is in thermal communication with the chiller working fluid surrounding the chiller conduits A54 within the chiller working fluid passage A66. The expansion stroke of the piston assembly A1010 may generally pull the engine working fluid through the chiller conduits A54 such as to egress the engine working fluid from the chiller conduits A54 through the chiller passage openings A58 and into the compression chamber A222. As further described herein, the chiller working fluid passage A66 is in fluid communication with a chiller working fluid outlet opening A78 and a chiller working fluid outlet opening A80 together providing flow of the chiller working fluid such as to remove and displace thermal energy from the engine working fluid at the chiller conduits A54. As still further described herein, the chiller working fluid passage A66, the chiller working fluid outlet opening A78, and/or the chiller working fluid output may form a circuit of the chiller assembly at which thermal energy from the engine working fluid at the compression chamber A222 is released from the closed cycle engine.

An outer chamber wall A53 and at least one chamber wall A52 may together define a chiller collection chamber A62 at which the engine working fluid may egress the plurality of chiller conduits A54 and collect into a volume. The outer chamber wall A53 defines a plurality of chiller collection chamber openings A60 each corresponding to a respective chiller conduit A54 and chillerpassage opening A58. As further described herein in regard to FIGS. 1.4.5-1.4.7 and FIGS. 1.7.1 - FIG. 1.7.4, the chiller collection chamber A62 is further in fluid communication with a walled conduit A1050 such as to provide fluid communication between the compression chamber A222 of one piston assembly A1010 and the expansion chamber A221 of another piston assembly A1010.

In various embodiments, the compression chamber A222 of one piston assembly A1010 is fluidly connected to the expansion chamber A221 of another piston assembly A1010 via the walled conduit A1050 to provide a balanced pressure and/or balanced phase fluid coupling arrangement of the plurality of chambers A221, A222. An interconnected volume of chambers including the expansion chamber A221 of one piston assembly A1010 and the compression chamber A222 of another piston assembly A1010 defines a fluid interconnection of the chambers A221, A222 at different piston assemblies A1010. The fluid interconnection of chambers A221, A222 at different piston assemblies is such that if there is any fluid communication or fluid leakage path between the expansion chamber A221 and the compression chamber A222 of the same piston assembly A1010, a single fluid loop of connected chambers A221, A222 is provided that is separated from the chambers A221, A222 outside of the interconnected volume of chambers. In one embodiment, the balanced pressure arrangement, or additionally, the balance phase arrangement, of the piston assemblies A1010 is the fluid interconnection of the walled conduits A1050 and the chambers A221, A222 such that the chambers within the interconnected volume are substantially fluidly and/or pneumatically separated from those outside of the interconnected volume to provide a substantially equal and opposite force relative to one another to at least one piston assembly A1010 when the engine working fluid within the chambers A221, A222 is at a uniform temperature. Stated differently, when one piston assembly A1010 is articulated, such as along the lateral direction L, the fluid interconnection of chambers A221, A222 via the walled conduit A1050 provides a substantially net zero force at another piston assembly A1010 when the engine working fluid is at a substantially uniform temperature. As such, when one piston assembly A1010 is articulated under such conditions, adjacent or other piston assemblies A1010 remain stationary due at least to the net zero force at the piston assembly A1010. In various embodiments, the substantially uniform temperature is defined when no heat input or thermal energy is provided from the heater body C100 or working fluids body C108 to the engine working fluid.

Referring now to FIG. 1.4.3, a side cutaway view of an embodiment of a pair of piston bodies C700 is provided. The embodiment depicted in regard to FIG. 1.4.3 is configured substantially similarly as shown and described in regard to FIGS. 1.4.1-1.4.2. FIG. 1.4.3 further provides a partial cutaway view within the piston body C700 exposing a portion of the plurality of chiller conduits A54 between the volume walls A46, A48. In various embodiments, the chiller conduit A54 extends along the lateral direction L between the chiller passage opening A58 and the chiller collection chamber A62. In one embodiment, the chiller conduit A54 extends at least partially along an oblique or orthogonal direction relative to the lateral direction L. In various embodiments, the chiller conduit A54 extends substantially circumferentially around the piston body C700. The chiller conduit A54 may extend at least partially along the oblique or orthogonal direction relative to the lateral direction L such as to desirably increase a surface area of the chiller passage A56 defined within the chiller conduit A54 at which the engine working fluid is in thermal communication with the chiller working fluid in the cold side heat exchanger A42. The desirable increase in surface area of the chiller passage A56 defined by the chiller conduit A54 provides the surrounding chiller working fluid in the first and second chiller working fluid passage A68, A70 to be in thermal communication so as to improve the opportunity for the transfer of thermal energy from the engine working fluid to the chiller working fluid. In one embodiment, the surface area over which the engine working fluid is desirably in thermal communication with the surrounding chiller working fluid is desirably adjusted by adjusting the lateral, circumferential, or orthogonal extension of the chiller conduits A54 such as to adjust the heat exchanging surface area of the chiller passage A56. In one embodiment, the chiller conduit A54 may extend at least partially in a curved or circumferential or spiral direction, such as a helix, between the chiller passage opening A58 and the chiller collection chamber A62. In another embodiment, the chiller conduit A54 may extend in a zig-zag or serpentine pattern between the chiller passage opening A58 and the chiller collection chamber A62. However, it should be appreciated that other geometries may be defined such as to produce the desired heat exchanging surface area of the chiller conduit A54 relative to the chiller working fluid passage A66.

It should be appreciated that in various embodiments the surface area of the chiller passage A56 defined within each chiller conduit A54 described herein corresponds to the chiller passage A56, such as an internal wall or surface of the chiller conduit A54 at which the engine working fluid is in direct contact. In one embodiment, the surface area defines a nominal surface area of the chiller passage A56, such as a cross section of the chiller conduit A54. In other embodiments, features may be added or altered to the chiller passage A56 within the chiller conduit A54, such as, but not limited to, surface roughness, protuberances, depressions, spikes, nodules, loops, hooks, bumps, burls, clots, lumps, knobs, projections, protrusions, swells, enlargements, outgrowths, accretions, blisters, juts, and the like, or other raised material, or combinations thereof, to desirably alter flow rate, pressure drop, heat transfer, flow profile or fluid dynamics of the engine working fluid.

Referring still to FIG. 1.4.3, various embodiments further include a connecting chiller conduit A72 extended between the first piston body C700 and the second piston body C700. The connecting chiller conduit A72 provides fluid communication of the chiller working fluid between two or more piston bodies C700. In various embodiments, the chiller working fluid passage A66 at each piston body C700 includes a first chiller working fluid passage A68 and a second chiller working fluid passage A70 each in thermal communication with the compression chamber A222. The second chiller working fluid passage A70 is positioned proximal to the chiller passage opening A58 at the compression chamber A222. The first chiller working fluid passage A68 is positioned distal to the chiller passage opening A58 at the compression chamber A222. Additionally, or alternatively, the first chiller working fluid passage A68 is positioned proximal to the chiller collection chamber A62 or the expansion chamber A221. The connecting chiller conduit A72 is configured to fluidly connect the first chiller working fluid passage A68 of one piston body C700 (e.g., the first piston body 82) to the second chiller working fluid passage A70 of another piston body C700 (e.g., the second piston body 84), such as further depicted in the embodiments in regard to FIGS. 1.4.4-1.4.7. As further shown and described in regard to FIGS. 1.4.4-1.4.7 and FIGS. 1.7.1 - FIG. 1.7.4, the chiller working fluid may enter the chiller assembly A40 and flow at the first chiller working fluid passage A68 of one piston body C700 and the second chiller working fluid passage A70 of another piston body C700. Stated differently, in various embodiments, the chiller working fluid may enter the chiller assembly A40 and flow in thermal communication with a generally hotter portion of one piston body C700 (i.e., proximate along the lateral direction L to the expansion chamber A221) and engine working fluid positioned proximal to the hot or expansion chamber A221. The chiller working fluid may then flow to another piston body C700 to a portion distal to the hot or expansion chamber A221 of the other piston body C700, such as may be generally cooler relative to first piston body C700.

Referring now to FIG. 1.4.4, a perspective view of an exemplary embodiment of a portion of the engine A100 is provided. Referring additionally to FIGS. 1.4.5-1.4.6, further embodiments of the portion of the engine A100 are provided. FIG. 1.4.4 includes a partial cutaway view within the piston body C700 exposing chiller conduits A54 between the volume walls A46, A48. FIG. 1.4.4 depicts at least a pair of the piston bodies C700 including the connecting chiller conduit A72 such as to provide fluid communication and thermal communication from the first chiller working fluid passage A68 of the first piston body C700 to the second chiller working fluid passage A70 of the second piston body C700. Additionally, the second piston body C700 includes the connecting chiller conduit A72 providing fluid communication and thermal communication from the first chiller working fluid passage A68 of the second piston body C700 to another adjacent second chiller working fluid passage A70 of another adjacent piston body C700 different from the first piston body C700 and the second piston body C700.

Referring to FIG. 1.4.5, a top-down view of an exemplary embodiment of the portion of the engine depicted in FIG. 1.4.4 is provided. Referring additionally to FIG. 1.4.6, a bottom-up view of an exemplary embodiment of the portion of the engine depicted in FIG. 1.4.4 is provided. Referring to FIGS. 1.4.5-1.4.6, the embodiments further depict the connecting chiller conduit A72 extended between pairs of the piston body C700. In one embodiment, such as depicted in regard to FIGS. 1.4.5-1.4.6, the engine includes a chiller working fluid inlet opening A78 through which chiller working fluid is provided to the chiller working fluid passage A66. The chiller working fluid inlet opening A78 may be positioned generally inward within the engine or proximal to the reference longitudinal axis C204. Referring to FIG. 1.4.6, in one embodiment, the chiller working fluid passage A66 may define a flowpath from the chiller working fluid inlet opening A78 and at least partially around one piston body C700. The flowpath may further extend across the connecting chiller conduit A72 to another or second piston body 84 adjacent or next to the first piston body 82. The flowpath of the chiller working fluid passage A66 further extends substantially circumferentially around the other piston body C700 (e.g., depicted at the second piston body C700). The flowpath is in fluid communication with a chiller working fluid outlet opening A80. In various embodiments, the chiller working fluid outlet opening A80 is positioned outward or distal from the reference longitudinal axis C204.

In various embodiments, the flowpath of the chiller working fluid passage A66 extends from the chiller working fluid inlet opening A78 at least partially circumferentially around one piston body C700 and further across the connecting chiller conduit A72 to extend at least partially circumferentially, or substantially circumferentially, around another or adjacent piston body C700. Similarly, the other or second piston body C700 includes the chiller working fluid opening and flowpath extended at least partially circumferentially to the connecting chiller conduit A72 to provide fluid communication and thermal communication to yet another piston body C700 and circumferentially around the yet another piston body C700 to the chiller working fluid outlet opening A80.

In still various embodiments, the chiller working fluid inlet opening A78, the chiller working fluid outlet opening A80, or both extend at least partially along the lateral direction L or orthogonal to the flowpath of the chiller working fluid passage A66 such as to ingress and egress the chiller working fluid through the chiller working fluid passage A66.

In one embodiment, the engine includes the chiller working fluid inlet opening A78 corresponding to each piston body C700. Additionally, or alternatively, the engine includes the chiller working fluid outlet opening A80 corresponding to each piston body C700. It should further be appreciated that in various embodiments, the flowpath of the chiller working fluid passage A66 extends at least partially along the lateral direction L such as shown and described in regard to FIG. 1.4.3. As further described in various embodiments herein, the flowpath arrangement shown and described in regard to FIGS. 1.4.3-1.4.7 provides thermal communication of the chiller working fluid with the engine working fluid, such as the engine working fluid within the chiller conduits A54 at each piston body C700. Furthermore, the flowpath arrangements shown and described in regard to FIGS. 1.4.3-1.4.7 further provide a desired amount of heat exchanging surface area for thermal energy transfer from the engine working fluid to the chiller working fluid. As such, embodiments of the chiller conduits A54, the chiller working fluid passage A66, or both, may provide an improved transfer of thermal energy from the engine working fluid to the chiller working fluid. Further still, embodiments of the chiller conduits A54, the chiller working fluid passage A66, or both, may desirably increase a temperature differential of the engine working fluid from the cold or compression chamber A222 relative to the hot or expansion chamber A221. Additionally, or alternatively, embodiments of the chiller conduits, A54, the chiller working fluid passage A66, or both, may desirably a stroke or cycle time or period of the engine A100.

Referring now to FIG. 1.4.7, a cutaway perspective view of an exemplary embodiment of the portion of the engine A100 depicted in FIG. 1.4.4 is provided. The exemplary embodiment in regard to FIG. 1.4.7 may be configured substantially similarly as shown and described in regard to FIGS. 1.4.1-1.4.6. The cutaway view further depicts the chiller conduit A54 surrounded by the chiller working fluid passage A66. The embodiment in regard to FIG. 1.4.7, and further depicted at least in part in FIGS. 1.4.5-1.4.6, a portion of the walled conduit A1050 is extended through the engine A100 inward of the plurality of piston bodies C700 relative to the radial direction R from the longitudinal axis C204. In one embodiment, such as depicted in regard to FIG. 1.4.7, the plurality of walled conduits A1050 is extended proximal to a reference longitudinal axis C204, such as inward of the piston bodies C700 along a radial direction R relative to the longitudinal axis C204. However, in other embodiments, such as depicted in regard to FIG. 1.7.1 through FIG. 1.7.4, the walled conduits A1050 may extend outward of the piston bodies C700, such as outward along the radial direction R relative to the longitudinal axis C204.

Referring now to FIG. 1.4.8, a perspective view of another exemplary embodiment of the engine A100 is provided. The perspective view in FIG. 1.4.8 further includes a partial cutaway view within the piston body C700 exposing the chiller working fluid passage A66 and chiller conduits A54. The embodiment provided in regard to FIG. 1.4.8 is configured substantially similarly as shown and described in regard to FIGS. 3-1.4.7. In FIG. 1.4.8, the chiller working fluid passage A66 depicts a single or common chiller working fluid inlet opening A78 from which the chiller working fluid passage A66 provides separate flowpaths to each piston body C700. The chiller working fluid passage A66 further depicts a single or common chiller working fluid outlet opening A80 at which the chiller working fluid passage A66 re-combines the separated chiller working fluid passages A66 before egressing the chiller working fluid through the single chiller working fluid outlet opening A80.

Referring to FIG. 1.4.8, the chiller working fluid passage A66 at the chiller working fluid inlet opening A78 separates into the shorter chiller working fluid flowpath provided to piston bodies C700 proximate to the chiller working fluid inlet opening A78. The chiller working fluid passage A66 at the chiller working fluid inlet opening A78 further separates into the longer chiller working fluid flowpath provided to piston bodies C700 distal to the chiller working fluid inlet opening A78.

In various embodiments, the piston bodies C700 distal to the chiller working fluid inlet opening A78 additionally are proximate to the chiller working fluid outlet opening A80. The shorter chiller working fluid flowpath provides the shorter flowpath from the piston body C700 proximate to the chiller working fluid outlet opening A80. The chiller working fluid flowpath A66 further provides the longer flowpath (relative to the first chiller working fluid flowpath) from the piston body C700 distal to the chiller working fluid outlet opening A80.

In one embodiment, the piston body C700, such as proximate to the chiller working fluid inlet opening A78, receives chiller working fluid via the shorter chiller working fluid flowpath and egresses chiller working fluid via the longer chiller working fluid flowpath. Alternatively, the piston body C700, such as proximate to the chiller working fluid outlet opening A80, receives chiller working fluid via the longer chiller working fluid flowpath and egresses chiller working fluid via the shorter chiller working fluid flowpath. Altogether, the chiller working fluid passage A66 may define a substantially equal volume flowpath at each piston body C700 between the chiller working fluid inlet opening A78 and the chiller working fluid outlet opening A80. The substantially equal volume arrangement may provide a substantially even thermal energy transfer from the engine working fluid at each piston body C700 to the chiller working fluid.

Referring still to FIG. 1.4.8, in one embodiment, the chiller working fluid passage A66 at least partially circumferentially surrounds each piston body C700. Still further, the chiller working fluid passage A66 is extended along the lateral direction L or otherwise co-directional to the piston body C700 such that the chiller working fluid surrounds the piston body C700.

In various embodiments, such as depicted in regard to FIG. 1.4.8, the chiller conduit A54 is extended from the compression chamber A222 along a first lateral direction and extends along a second lateral direction opposite of the first lateral direction. The chiller conduit A54 includes an approximately 180 degree turn between the chiller passage opening A58 and the chiller collection chamber A62. The chiller working fluid passage A66 further surrounds the chiller conduit A54 along the lateral direction L. In various embodiments, such as depicted in FIG. 1.4.8, the chiller working fluid passage A66 further surrounds the 180 degree turn portion of the chiller conduit A54. The chiller passage openings A58 may generally be positioned such as to prevent the piston A1011 of the piston assembly A1010 from covering or otherwise obscuring the chiller passage openings A58 during operation of the system A10.

During operation, chiller working fluid flowing through the chiller working fluid passage A66 may receive thermal energy from the engine working fluid within one or more of the chiller conduits A54. The rate or quantity of thermal energy transferring from the engine working fluid to the chiller working fluid within the chiller working fluid passage A66 may vary as between respective portions of the chiller working fluid passage A66, such as shown and described in regard to the first chiller working fluid passage A68 and the second chiller working fluid passage A70, and/or between respective piston bodies (e.g., the first piston body and the second piston body). For example, the rate or quantity of thermal energy transferring from the engine working fluid to the chiller working fluid passage A66 may depend at least in part on a temperature gradient between the chiller conduit A54 and the chiller working fluid passage A66, such as a temperature gradient between the engine working fluid and the chiller working fluid. In some embodiments, however, the engine working fluid within the plurality of chiller conduits A54 may exhibit a temperature that differs as between at least two piston bodies C700 (e.g., first piston body and second piston body) and/or as between at least two portions along the lateral extension of the chamber 222 (i.e., temperature gradient of the chamber 222 along the lateral direction L) within a given piston body. Additionally, or in the alternative, the engine working fluid within the plurality of piston bodies C700 may exhibit a temperature that differs as between at least two piston bodies. For example, the engine working fluid within the plurality of chiller conduits A54 corresponding to one piston body (e.g., the first piston body) may exhibit a temperature different from the plurality of chiller conduits A54 corresponding to another piston body (e.g., the second piston body) based at least on the phase difference of the piston assemblies A1010 within the respective piston bodies during operation of the engine.

In some embodiments, the temperature of the chiller working fluid may increase as the chiller working fluid flows through the chiller working fluid passage A66 and receives thermal energy from the engine working fluid within the chiller conduits A54. In one embodiment, as depicted in regard to FIGS. 1.4.3-1.4.7, the chiller working fluid passage A66 extending at least partially circumferentially around one piston body (e.g., the first piston body), and further extended at least partially circumferentially around one or more other piston bodies (e.g., the second piston body) includes the chiller working fluid increasing in temperature by receiving thermal energy at one piston body.

In some embodiments, engine working fluid flowing from a first piston body flowing to another or second piston body may exhibit a temperature that differs from the engine working fluid flowing in an opposite direction, from the other piston body to the first piston body.

In various embodiments, the chiller working fluid and the engine working fluid may exhibit a temperature gradient that depends at least in part on whether the engine working fluid is flowing towards one piston body or another piston body. For example, a first temperature gradient may correspond to the engine working fluid flowing towards one piston body and a second temperature gradient may correspond to the engine working fluid flowing towards another piston body. In some embodiments the first temperature gradient may be smaller than the second temperature gradient. In other embodiments the second temperature gradient may be greater than the first temperature gradient. For example, the first temperature gradient may be smaller than the second temperature gradient at least in part because of the temperature of the engine working fluid flowing towards one piston body is greater than the temperature of engine working fluid flowing towards the other piston body.

In some embodiments, the rate and/or quantity of thermal energy transfer from the engine working fluid to the chiller working fluid may depend on whether the engine working fluid defines the first temperature gradient or the second temperature gradient. For example, a first rate and/or quantity of thermal energy transfer from the engine working fluid to the chiller working fluid may correspond to engine working fluid flowing towards one piston body and a second rate and/or quantity of thermal energy transfer from the engine working fluid to the chiller working fluid may correspond to the engine working fluid flowing towards another piston body. In some embodiments the first rate and/or quantity of thermal energy transfer may be smaller than the second rate and/or quantity of thermal energy transfer. In other words, the second rate and/or quantity of thermal energy transfer may be greater than the first rate and/or quantity of thermal energy transfer. For example, the first rate and/or quantity of thermal energy transfer may be smaller than the second rate and/or quantity of thermal energy transfer at least in part because of the first temperature gradient corresponding to engine working fluid flowing towards one piston body being smaller than the second temperature gradient corresponding to engine working fluid flowing towards another piston body.

In some embodiments, the efficiency of thermal energy transfer from the engine working fluid to the chiller working fluid may be enhanced at least in part by the second rate and/or quantity of thermal energy transfer corresponding to the engine working fluid flowing towards the first piston body being greater than the first rate and/or quantity of thermal energy transfer corresponding to the engine working fluid flowing towards second piston body. For example, in this way, a relatively larger proportion of the thermal energy input from the chiller conduits A54 may be applied to the chiller working fluid as the chiller working fluid flows from one piston body to another piston body to which the chiller working fluid passage A66 is thermally coupled (i.e., via the connecting chiller conduit A72). The thermal energy input to the chiller working fluid during the cycle of the piston assembly in a first direction (e.g., downstroke portion of the stroke cycle) may contribute to the downstroke (e.g., directly) by further cooling and thereby further contracting the engine working fluid. During another portion of the engine cycle (e.g., the upstroke portion of the stroke cycle), a relatively smaller proportion of the thermal input by the engine working fluid in the chiller conduits A54 may be applied to the chiller working fluid, which may reduce or mitigate a potential for thermal energy output from the engine working fluid to counteract the upstroke by further heating and thereby contracting the engine working fluid, providing an additional or alternative efficiency enhancement. With a relatively smaller proportion of the thermal energy input by the chiller conduits A54 applied to the chiller working fluid during the upstroke, a smaller portion of the thermal energy input may be transferred to the chiller working fluid.

As the chiller working fluid flows through the chiller working fluid passage A66, thermal energy may preferentially transfer to the chiller working fluid within the chiller working fluid passage A66 where the temperature gradient is larger or largest, thereby preferentially providing thermal energy to the chiller working fluid at the walled conduit and/or first or second chiller working fluid passage A70 where there is a greater capacity to receive thermal energy from the engine working fluid. For example, the first chiller working fluid passage A68, positioned more proximate to the expansion chamber A221 than the second chiller working fluid passage A70, may exhibit a larger temperature gradient between the engine working fluid and the chiller working fluid. The second chiller working fluid passage A70, positioned distal to the expansion chamber A221 relative to the first chiller working fluid passage A68, may exhibit a lower temperature gradient between the engine working fluid and the chiller working fluid. Additionally, such as described herein, the chiller working fluid passage A66 at one piston body may exhibit a larger temperature gradient than another piston body to which the chiller working fluid passage A66 is thermally coupled (i.e., via the connecting chiller conduit A72), such as based on the cycle or stroke of the engine during operation. Still further, the temperature gradient at the first chiller working fluid passage A68 at one piston body may be different (e.g., greater or lesser) than the second chiller working fluid passage A70 at another piston body to which the chiller working fluid passage A66 is thermally coupled, such as due at least in part to the cycle or stroke of the engine. As such, thermal energy may preferentially transfer from the engine working fluid to the chiller working fluid based at least on the larger temperature gradient at any time during the cycle of the engine.

It should be appreciated that embodiments of the chiller assembly including the chiller working fluid passage A66 and the cold side heat exchanger A42 may function substantially similarly as shown and described by embodiments of the hot side heat exchanger C108 provided herein.

## Chapter 1.5 - Working Fluid Body Heater Conduits

Now referring to FIG. 1.5.1, an exemplary embodiment of the working-fluid body c108 is provided. The presently disclosed working-fluid bodies c108 may define part of the heater body c100 the piston body C700. The working fluid body C108 includes a plurality of heater conduits or working-fluid pathways C110 through which engine working fluid flows between the expansion chamber A221 and the compression chamber A222.

The plurality of working-fluid pathways c110 may extend between respective ones of a plurality of a first opening or piston chamber apertures c111 and respective ones of a plurality of a second opening or regenerator apertures c113. The piston chamber apertures c111 provide fluid communication between the working-fluid pathways c110 and the piston chamber c112, and the regenerator apertures c113 provide fluid communication between the working-fluid pathways c110 and the regenerator conduit c1000. The piston chamber apertures c111 may define a first end of the working-fluid pathways c110 and the regenerator apertures c113 may define a second end of the working-fluid pathways c110.

Operation of the engine A100 and system A10 includes the plurality of piston assemblies A1010 moving in cyclic operation, such as in back and forth movement between the piston body c700 at the first end A101 and another piston body c700 at the second end A102 (FIG. 1.3.1). Pressure increases and decreases at respective chambers A221, A222 correspond to movement of the piston assemblies A1010, such as further described herein. In exemplary embodiments such as depicted in regard to FIG. 1.3.1. or FIG. 1.7.1 through FIG. 1.7.8., the plurality of piston bodies c700 may include the expansion chamber A221 and the compression chamber A222 defined at each end A101, A102 of each piston assembly A1010, such as to provide eight each of the expansion chamber A221 and the compression chamber A222 at four piston assemblies A1010. The plurality of piston assemblies A1010 may be disposed radially relative to the longitudinal axis C204.

The plurality of working fluid pathways C110 extend in fluid communication from a expansion chamber A221 to the walled conduit A1050. In various embodiments, such as further described herein, the working fluid pathways C110 extend in fluid communication from the expansion chamber A221 to a corresponding regenerator body C800 at the walled conduit A1050. A first plurality of heater conduits or working-fluid pathways C110 may fluidly communicate between an expansion chamber A221 defined by a first piston body C700 and a first compression chamber A222 defined by another piston body C700 different from the first piston body C700 (e.g., not the first piston body). A second plurality of working-fluid pathways C110 may fluidly communicate between a second expansion chamber A221 (i.e., different from the first expansion chamber) defined by a second piston body c700 and a compression chamber A222 defined by another piston body C700 (e.g., not the second piston body).

Fluid communication between the expansion chamber A221 of one piston body C700 and the compression chamber A222 of another piston body C700 through the heater conduits or working fluid pathways C110 provides for the engine working fluid to be in thermal communication with the heating working fluid surrounding the working fluid pathways C110. For example, the heating working fluid, such as described herein, is provided in thermal and/or fluid communication around the working fluid pathways C110. The working fluid pathways C110 fluidly separate the heating working fluid and the engine working fluid while further providing heat transfer between the heating working fluid and the engine working fluid (e.g., heat transfer from the heating working fluid to the engine working fluid).

The engine working fluid is heated at least at the working fluid pathways C110 and provides for pressure change at the respective expansion chamber A221 (e.g., pressure increase at the expansion chamber A221). Based at least on the engine cycle, such as the movement of the piston assemblies A1010, pressure changes at the engine working fluid between the fluidly connected expansion chamber A221 and the compression chamber A222 via the heater conduit or working fluid pathways C110 correspond to heat transfer to the engine working fluid from the heating working fluid. As further described herein, based at least on the engine cycle, heat transfer, or an amount of heat transferred, to the engine working fluid may be based on the engine cycle. For example, the amount of heat transferred to the engine working fluid may correspond to whether the expansion chamber A221 is increasing in pressure or decreasing in pressure, or whether a corresponding fluidly connected compression chamber A222 is decreasing in pressure or increasing in pressure.

As further described herein, the plurality of heater conduits or working fluid pathways C110 beneficially provides for heat exchange, such as heat transfer to from the heating working fluid to the engine working fluid. The plurality of working fluid pathways C110 provides a desired amount of heat transfer to the engine working fluid, such as to improve operation of the engine A100. Improved operation of the engine A100 may include improved power output, improved power density, and/or improved efficiency of the engine A100.

### Chapter 1.6 - Regenerator Body

Now referring to FIGs. 1.6.1A through 1.6.7F, exemplary regenerator bodies c800 will be described. The presently disclosed regenerator bodies c800 may define part of the heater body c100 and/or an engine c002, such as shown and described in regard to system A10 and engine A100 herein, or further herein with reference to FIG. 4.1.1. For example, a regenerator body c800 may define at least a portion of a monolithic body or a monolithic body-segment. Such monolithic body or monolithic body-segment may define at least a portion of the heater body c100 and/or the engine c002. Additionally, or in the alternative, the presently disclosed regenerator bodies c800 may be provided as a separate component, whether for use in connection with a heater body c100, an engine c002, or any other setting whether related or unrelated to a heater body c100 or an engine c002. It will be appreciated that an engine c002 and/or a heater body c100 may include any desired number of regenerator bodies c800.

FIG. 1.6.1A through 1.6.1D show an exemplary regenerator body c800 implemented within an exemplary engine c002. The regenerator body c800 may fluidly communicate with one or more piston bodies c700. For example, a plurality of working-fluid pathways c110 may provide fluid communication between a regenerator body c800 and a piston body c700. The working-fluid pathways c110 may fluidly communicate between a piston chamber c112 defined by the piston body c700 and a regenerator conduit c1000 defined by the regenerator body c800.

The plurality of working-fluid pathways c110 may extend between respective ones of a plurality of piston chamber apertures c111 and respective ones of a plurality of regenerator apertures c113. The piston chamber apertures c111 provide fluid communication between the working-fluid pathways c110 and the piston chamber c112, and the regenerator apertures c113 provide fluid communication between the working-fluid pathways c110 and the regenerator conduit c1000. The piston chamber apertures c111 may define a first end of the working-fluid pathways c110 and the regenerator apertures c113 may define a second end of the working-fluid pathways c110.

A piston body c700 may define a hot-side c1002 of the piston chamber c112 and a cold side piston chamber c1004. A regenerator conduit c1000 may include a hot-side portion c1006 and a cold-side portion c1008. A plurality of hot-side working-fluid pathways c1010 may provide fluid communication between the regenerator body c800 and a first piston body c700, such as between the hot-side portion c1006 and the hot-side c1002 of the piston chamber c112. A plurality of cold-side working-fluid pathways c1010 may provide fluid communication between the regenerator body c800 and a second piston body c700, such as between the cold-side portion c1008 of the regenerator conduit c1000 and the cold-side c1004 of the piston chamber c112.

The first piston body c700 may include a first piston assembly c090 disposed therein and/or the second piston body c700 may include a second piston assembly c090 disposed therein. Heat may be input ($Q_{IN}$) to engine-working fluid disposed within the hot-side working-fluid pathways c1010, such as from a heater body c100 (e.g., FIG. 4.1.1) or any other suitable heat source. Heat may be extracted ($Q_{OUT}$) from engine-working fluid disposed within the cold-side working-fluid pathways c1012, such as from a chiller body (not shown) or any other suitable cooling source. A regenerator body c800 may be disposed adjacent to a piston body c700, such as circumferentially adjacent to a piston body c700. As shown in FIG. 1.6.1C, a regenerator body c800 may circumferentially surround a piston body c700. Alternatively, a regenerator body c800 may be disposed adjacent to a piston body c700. In some embodiments, a semiannular regenerator body c800 may be disposed circumferentially adjacent to a piston body c700.

During operation, engine-working fluid flowing from the plurality of hot-side working-fluid pathways c1010 to the regenerator body c800 enters the regenerator conduit c1000. Fluid passing through the regenerator conduit c1000 may flow out of the regenerator body c800 and into the plurality of cold-side working-fluid pathways c1012. The regenerator conduit c1000 includes a heat storage medium c1014 disposed therein. The heat storage medium c1014 may be any suitable thermal energy storage medium within which heat from the hot-side working-fluid pathways c1010 may be intermittently stored as the engine-working fluid flows from the regenerator body c800 to the cold-side working-fluid pathways c1012. In some embodiments, the heat storage medium c1014 may include a plurality of fin arrays c1016; however, other heat storage medium may additionally or alternatively be utilized, including sensible heat storage and/or latent heat storage technologies. Other suitable heat storage medium may include packed beds, include molten salts, miscibility gap alloys, silicon materials (e.g., solid or molten silicon), phase change materials, and so forth.

The plurality of fin arrays c1016 include an array of high-surface area heat transfer fins having a thermally conductive relationship with engine-working fluid in the regenerator conduit c1000. As fluid flows from the hot-side working-fluid pathways c1010 into or through the regenerator conduit c1000, heat transfers to the heat storage medium 1014 (e.g., the plurality of fin arrays c1016), preserving thermal energy from being extracted ($Q_{OUT}$) at the chiller body (not shown) or other suitable cooling source. As fluid flows from the cold-side working-fluid pathways c1012 into or through the regenerator conduit c1000, heat transfers from the heat storage medium 1014 (e.g., the plurality of fin arrays c1016) back to the engine-working fluid, thereby returning thermal energy to the engine-working fluid flowing into the hot-side working-fluid pathways c1010.

Still referring to FIG. 1.6.1A, in some embodiments, a heat storage medium c1014 may include a plurality of fin arrays c1016 adjacently disposed within a regenerator conduit c1000. The plurality of fin arrays c1016 may be respectively supported by the regenerator conduit c1000 in spaced relation to one another. The spaced relation of the plurality of fin arrays c1016 may define a gap, G c1018 longitudinally separating adjacent ones of the plurality of fin arrays c1016.

Referring now to FIGs. 1.6.2A and 1.6.2B, an exemplary regenerator conduits c1000 will be further described. As shown, an exemplary regenerator conduit c1000 may include a sidewall c1020, such as an annular sidewall c1020. The sidewall c1020 may circumferentially surround the heat storage medium c1014, such as the plurality of fin arrays c1016. As shown in FIG. 1.6.2B, in some embodiments, a regenerator conduit c1000 may define an annulus. For example, the regenerator conduit c1000 may include an outward sidewall c1022 and a radially or concentrically inward sidewall c1024. The outward sidewall c1022 may circumferentially surround the heat storage medium c1014, such as the plurality of fin arrays c1016. The heat storage medium c1014, such as the plurality of fin arrays c1016, may circumferentially surround the inward sidewall c1024. The plurality of fin arrays c1016 may extend from the regenerator conduit c1000. FIG. 1.6.3 shows an exemplary heat storage medium c1014. The heat storage medium shown in FIG. 1.6.3 includes a plurality of fin arrays c1016, which may correspond to the regenerator body c800 shown in FIG. 1.6.2A. FIG. 1.6.4A and 1.6.4B show another exemplary heat storage medium c1014, such as a plurality of fin arrays c1016, which may correspond to the regenerator body c800 shown in FIG. 1.6.2B.

As shown in FIG. 1.6.3, the regenerator conduit c100 circumferentially surrounding the heat storage medium c1014 (e.g., FIG. 1.6.2A) has been omitted from FIG. 1012a_4 to reveal details of the plurality of fin arrays c1016. As shown, a plurality of fin arrays c1016 may extend from at least a portion of the regenerator conduit c1000 obliquely towards a hot-side portion c1006 of the regenerator body c800. The regenerator conduit may be disposed about a longitudinal axis and the plurality of fin arrays c1016 may be supported by the regenerator conduit at least in part at an oblique angle relative to the longitudinal axis. For example, a first region c1026 of the plurality of fin arrays c1016 may extend obliquely from the regenerator conduit c1000 towards the hot-side portion c1006 of the regenerator body c800. Alternatively, the plurality of fin arrays c1016 may extent from at least a portion of the regenerator conduit c1000 obliquely towards a cold-side portion c1008 of the regenerator body c800. Additionally, or in the alternative, at least a portion of the plurality of fin arrays c1016 may extend perpendicularly from at least a portion of the regenerator conduit c1000. The plurality of fin arrays c1016 may be supported by the regenerator conduit c800 at least in part at a perpendicular angle relative to the longitudinal axis. For example, a second region c1028 of the plurality of fin arrays c1016 may extend perpendicularly from the regenerator conduit c1000.

FIG. 1.6.5 shows a side view of the plurality of fin arrays c1016, such as the fin arrays c1016 shown in FIG. 1.6.3 or in FIGS. 1.6.4A and 1.6.4B. As shown in FIG. 1.6.5, adjacent ones of the plurality of fin arrays c1016 may include a proximal fin array c1030 and a distal fin array c1032. The proximal fin array c1030 may have a distal surface c1034 and the distal fin array c1032 may have a proximal surface c1036. The distal surface c1034 may face the proximal surface c1036. The distal surface c1034 may be oriented towards the hot-side portion c1006 of the regenerator body c800 and the proximal surface c1036 may be oriented towards a cold-side portion c1008 of the regenerator body. The regenerator conduit c1000 may communicate with at least a portion of the distal surface c1034 and/or at least a portion of the proximal surface c1036 at an oblique angle. The oblique angle may be an acute angle or an obtuse angle. The acute angle may be from 1 degree to 89 degrees, such as from 10 degrees to 70 degrees, such as from 30 degrees to 60 degrees, such as from 40 degrees to 50 degrees. The obtuse angle may be from 91 to 179 degrees, such as from 100 to 160 degrees, such as from 120 to 150 degrees, such as from 130 to 140 degrees.

In some embodiments, at least some of the plurality of fin arrays c1016 may have a distal surface c1034 communicating with the regenerator conduit c1000 at an acute angle, with the distal surface c1034 oriented towards a hot-side portion c1006 of the regenerator body c800. The plurality of fin arrays c1016 may have a proximal surface c1036 communicating with the regenerator conduit c1000 at an obtuse angle, with the proximal surface c1036 oriented towards a cold-side portion c1008 of the regenerator body c800. Additionally, or in the alternative, at least some of the plurality of fin arrays c1016 may have a distal surface c1034 communicating with the regenerator conduit c1000 at an obtuse angle, with the distal surface c1034 oriented towards a hot-side portion c1006 of the regenerator body c800. The plurality of fin arrays c1016 may have a proximal surface c1036 communicating with the regenerator conduit c1000 at an acute angle, with the proximal surface c1036 oriented towards a cold-side portion c1008 of the regenerator body c800. Further in addition or in the alternative, at least some of the plurality of fin arrays c1016 may have a distal surface c1034 and/or a proximal surface c1036 communicating with the regenerator conduit c1000 at an angle perpendicular to the regenerator conduit c1000.

The distal surface c1034 of the proximal fin array c1030 and the proximal surface c1036 of the distal fin array c1032 may define a gap G c1018. Such a gap G c1018 may longitudinally separate the adjacent ones of the plurality of fin arrays c1016, such as the proximal fin array c1030 from the distal fin array c1032. The gap G c1018 may reduce or minimize thermally conductive heat transfer in the longitudinal direction of the regenerator body c800, for example, by separating respective ones of the plurality of fin arrays c1016 from one another. The gap G c1018 may longitudinally separate adjacent ones of the plurality of fin arrays c1016 by a longitudinal distance of from about 10 microns to about 1 millimeter, such as from about 10 microns to about 100 microns, such as from about 100 microns to about 500 microns, or such as from about 500 microns to about 1 millimeter. The gap G c1018 may be at least 10 microns, such as at least 100 microns, such as at least 500 microns, such as at least 1 millimeter. The gap G c1018 may be less than 1 millimeter, such as less than 500 microns, such as less than 100 microns, such as less than 10 microns. In some embodiments, the gap G c1018 may be selected so as to be at least a thick as a boundary layer of engine-working fluid deposed between the engine-working fluid and the surface of respective ones of the plurality of fin arrays. Such a boundary layer may isolate adjacent ones of the plurality of fin arrays c1016 from one another.

Referring again to FIG. 1.6.1A, in some embodiments, a regenerator body c800 may include a hot-side portion c1006 and a cold-side portion c1008. The hot-side portion c1006 may be operably coupled and fluidly communicate with the cold-side portion c1008. The hot-side portion c1006 of the regenerator body c800 may include a hot-side regenerator conduit c1038 and a hot-side plurality of fin arrays c1040 adjacently disposed within the hot-side regenerator conduit c1038 in spaced relation to one another. The cold-side portion c1008 of the regenerator body c800 may include a cold-side regenerator conduit c1042 and a cold-side plurality of fin arrays c1044 adjacently disposed within the cold-side regenerator conduit c1042 in spaced relation to one another.

The hot-side portion c1006 and the cold-side portion c1008 of the regenerator body c800 may be separated by a hot-to-cold gap H-C c1046. For example, in some embodiments, the spaced relation (e.g., the hot-to-cold gap H-C c1046) of the hot-side plurality of fin arrays c1040 to the cold-side plurality of fin arrays c1044 may define a hot-to-cold gap H-C c1046 longitudinally separating the hot-side plurality of fin arrays c1040 from the cold-side plurality of fin arrays c1042. Additionally, or in the alternative, the hot-side regenerator conduit c1038 and the cold-side regenerator conduit c1042 may be in the spaced relation to one another, further defining the hot-to-cold gap H-C c1046. The hot-to-cold gap H-C c1046 may reduce or minimize thermally conductive heat transfer between the hot-side portion c1006 and the cold-side portion c1008 of the regenerator body c800. In some embodiments, the hot-to-cold gap H-C c1046 may allow a regenerator body c800 to provide at least two thermally distinct thermal storage bodies within the same regenerator body c800.

In some embodiments, a fin array may define a lattice c1048. The lattice c1048 may include a plurality of lattice walls c1050 defining polyhedral passages c1052 therebetween. Such lattice walls c1050 and polyhedral passages c1052 as shown, for example, in FIGS. 1.6.2A and 1.6.2B. The regenerator conduit c1000 may be disposed about a longitudinal axis A c204, and the lattice walls c1050 may be oriented parallel to the longitudinal axis A c204. The polyhedral passages c1052 may have a polygonal cross-section. By way of example, the polyhedral passages c1050 may have a shape such as a rhombohedron, a right prism, an oblique prism, a frustum, or a cylinder, as well as combinations of these.

Now turning to FIGS. 1.6.6A through 1.6.6D, exemplary fin arrays c1016 will be further described. As shown, in some embodiments, a fin array c1016 may include a plurality of fin supports c1054 and a plurality of fins c1056 together defining an array of interconnected fins c1056 and fin supports c1054. The interconnected fins c1056 and fin supports c1054 may define a lattice c1048 as described herein. A plurality of fin supports c1054 may be disposed laterally and a plurality of fins c1056 may be disposed between adjacent ones of the laterally disposed fin supports c1054. In some embodiments, the plurality of fin supports c1054 may extend obliquely from the regenerator conduit c1000. The regenerator conduit c1000 may be disposed about a longitudinal axis A c204 and the plurality of fin supports c1054 may be supported by the regenerator conduit c1000 at least in part at an oblique angle relative to the longitudinal axis A c204. As shown, the oblique angle may be oriented towards a hot-side portion c1006 of the regenerator body c800. Alternatively, the oblique angle may be oriented towards a cold-side portion c1008 of the regenerator body c800.

The fin supports c1054 may have a distal surface c1034 communicating with the regenerator conduit c1000 at an acute angle, with the distal surface c1034 oriented towards a hot-side portion c1006 of the regenerator body c800. The fin supports c1054 may have a proximal surface c1036 communicating with the regenerator conduit c1000 at an obtuse angle, with the proximal surface c1036 oriented towards a cold-side portion c1008 of the regenerator body c800. Additionally, or in the alternative, at least some of the fin supports c1054 may have a distal surface c1034 communicating with the regenerator conduit c1000 at an obtuse angle, with the distal surface c1034 oriented towards a hot-side portion c1006 of the regenerator body c800. The fin supports c1054 may have a proximal surface c1036 communicating with the regenerator conduit c1000 at an acute angle, with the proximal surface c1036 oriented towards a cold-side portion c1008 of the regenerator body c800. Further in addition or in the alternative, at least some of the fin supports c1054 may have a distal surface c1034 and/or a proximal surface c1036 communicating with the regenerator conduit c1000 at an angle perpendicular to the regenerator conduit c1000.

The regenerator conduit c1000 may communicate with at least a portion of the fin supports c1054 (e.g., a distal surface c1034 and/or a proximal surface c1036 thereof) at an oblique angle. The oblique angle may be an acute angle or an obtuse angle. The acute angle may be from 1 degree to 89 degrees, such as from 10 degrees to 70 degrees, such as from 30 degrees to 60 degrees, such as from 40 degrees to 50 degrees. The obtuse angle may be from 91 to 179 degrees, such as from 100 to 160 degrees, such as from 120 to 150 degrees, such as from 130 to 140 degrees.

In some embodiments, at least a portion of the plurality of fins c1056 may extend perpendicularly from the regenerator conduit c1000. For example, the regenerator conduit c1000 may be disposed about a longitudinal axis A c204 and the plurality of fins c1056 may be supported at least in part by the regenerator conduit c1000 at a perpendicular angle relative to the longitudinal axis A c204. Additionally, or in the alternative, the plurality of fins c1056 may be supported at least in part by the fin supports c1054 at a perpendicular angle relative to the longitudinal axis A c204.

The plurality of fins c1056 may extend from the plurality of fin supports c1054, such as along the longitudinal axis c204. In some embodiments, the fins c1056 may have a chevron shape. The chevron shape may include a tip c1058 oriented towards a hot-side portion c1006 of the regenerator body c800 and/or a tail c1060 oriented towards a cold-side portion c1008 of the regenerator body c800.

While the fins c1056 may extend from the plurality of fin supports c1054, a gap G c1018 may longitudinally separate adjacent fins c1056 and/or fin supports c1054 respectively corresponding to adjacent fin arrays c1016. For example, the gap G 1018 may longitudinally separate the tips c1058 of a proximal fin array c1030 from the tails c1060 of a distal fin array c1032.

As described herein, at least a portion of a regenerator body c800 may define an additively manufactured monolithic body or an additively manufactured monolithic body-segment. The regenerator body c800 may define a portion of a larger monolithic body or monolithic body segment, or the regenerator body c800 may define a module insertable into a monolithic body or a monolithic body-segment. In some embodiments, the plurality of fin arrays c1016 may be monolithically integrated with the regenerator conduit c100. For example, the array of interconnected fins c1056 and fin supports c1058 may define a monolithic structure such as a portion of a monolithic body or monolithic body-segment.

A regenerator body c800 may be formed of one or more materials selected at least in part on one or more thermal storage properties. For example, one or more materials may be selected for a regenerator body c800 based at least in part on a thermal conductivity and/or a heat capacity of the material. In some embodiments, the plurality of fin arrays c1016 may include a first material and the regenerator conduit may include a second material that differs from the first material. For example, the thermal conductivity of the first material may exceed the thermal conductivity of the second material.

Additionally, or in the alternative, the heat capacity of the first material may exceed the heat capacity of the second material. In some embodiments, the plurality of fin arrays c1016 may include a material selected for thermal conductivity and/or the regenerator conduit c1000 may include a material selected for thermal resistivity. In an exemplary embodiment, the plurality of fin arrays c1016 may include a metal or metal alloy, and the regenerator conduit c1000 may include a ceramic. In other embodiments, the regenerator conduit c1000 may additionally or alternatively include a metal or metal alloy, and/or the plurality of fin arrays c1016 may include a ceramic.

Exemplary metal or metal alloys may be selected for high thermal conductivity and/or heat capacity properties. Suitable metal or metal alloys may include copper, aluminum, tin, zinc, nickel, chromium, titanium, tellurium, magnesium, and/or iron. In some embodiments, the metal or metal alloy may include a rare earth element. Exemplary copper alloys may include CuSn, CuZn, CuZnAs, CuZnP, CuZnFe, CuZnNi, CuCr, and/or CuTeSn.

Exemplary ceramics may be selected for low thermal conductivity and/or heat capacity properties. Suitable ceramics may include alumina, beryllia, ceria, and/or zirconia. In some embodiments, the ceramic may include a carbide, a boride, a nitride, and/or a silicide.

Now turning to FIGs. 1.6.7A-1.6.7F, further exemplary regenerator bodies c800 will be described. As shown, a regenerator body c800 may include a sidewall c1020, such as a sidewall c1020. The sidewall c1020 may include an internal-sidewall c1062 and an external-sidewall c1064. The internal-sidewall c10162 and the external-sidewall c1064 may be spaced apart from one another with a voidspace c1066 defined therebetween. The voidspace c1066 may provide thermal resistance to heat flow from the sidewall c1020 to structures or environment adjacent to or surrounding the sidewall c1020. The voidspace c1066 may include an open space, such as airgap or a vacuum. The voidspace c1066 may include any gas, such as ambient air, an inert gas, etc. The voidspace c1066 may additionally or alternatively include any material that provides thermal resistance to heat flow, such as unsintered or partially sintered powder material (e.g., an additive manufacturing powder material), a mesh, a three-dimensional lattice, a porous medium, or the like.

The overall thermal response of a regenerator body c800 may be configured based at least in part on the configuration of the regenerator body c800, including the geometric properties and/or the material properties of the regenerator body. For example, a regenerator body c800 may be configured to provide a high amount of heat transfer between the regenerator body and an engine-working fluid, while also exhibiting a low amount of heat loss from the hot-side to the cold-side. In some embodiments, regenerator efficiency may be improved by increasing the effective length of the regenerator conduit c1000, such as by providing a regenerator conduit c1000 with a gradient in cross-sectional area and/or by providing sidewalls c1020 with a gradient in wall thickness, and/or material density or porosity. The gradient may be oriented along a longitudinal axis and/or a radial axis of the regenerator conduit c1000. Additionally, or in the alternative, regenerator efficiency may be improved by augmenting the configuration and/or composition of the heat storage medium c1014 in the regenerator conduit c1000. For example, the heat storage medium c1014 may include material (such as fin arrays c1016) with a gradient in thickness and/or surface area and/or material porosity. Regenerator efficiency may additionally or alternatively be improved by augmenting an interface between the regenerator conduit c100 and the heat storage medium c1014.

In some embodiments, a regenerator body c800 may include a sidewall c1020, a regenerator conduit c1000, and a heat storage medium c1014 disposed within the regenerator conduit c800. The sidewall c1020 may have a gradient in gradient in cross-sectional thickness and/or material thickness oriented along a longitudinal axis of the regenerator conduit c1000. Additionally, or in the alternative, the sidewall c1020 may have a gradient in surface area, and/or material density or porosity, oriented along a longitudinal axis and/or a radial axis of the regenerator conduit c1000. The regenerator conduit c1000 may have a gradient in cross-sectional thickness and/or material thickness oriented along a longitudinal axis of the regenerator conduit c1000. Additionally, or in the alternative, the regenerator conduit c1000 may have a gradient in surface area, and/or material density or porosity, oriented along a longitudinal axis and/or a radial axis of the regenerator conduit c1000. The heat storage medium c1014 may have a gradient in cross-sectional thickness, material thickness, surface area, and/or material density or porosity, oriented along a longitudinal axis of the regenerator conduit c1000. By way of example, a heat storage medium that includes a plurality of fin arrays c1016 may include a gradient in one or more properties of respective fins and/or fin arrays in the plurality of fins arrays. Such gradient may include a gradient in dimensions (e.g., size and/or material thickness of a fin and/or fin array), material density or porosity (e.g., density or porosity of a fin and/or fin array), quantity (e.g., quantity of fins in a fin array and/or quantity of fin arrays per unit area and/or unit length of the regenerator conduit c1000). It will be appreciated that the respective gradients described herein may be oriented in any desirable direction or combination of directions. Additionally, or in the alternative, different gradients may be combined with one another, each which being oriented in any respective desired direction or combination of directions, including different directions from one another.

The transfer of heat between a regenerator body c800 and engine-working fluid flowing through the regenerator conduit c1000, such as between engine-working fluid flowing through the regenerator conduit and the heat storage medium c1014 and/or the sidewalls c1020 (and/or between the heat storage medium c1014 and the sidewalls c1020) is generally proportional to the heat flux ($q=h\Delta T$) at respective areas or points of heat transfer. While the heat flux may vary under transient conditions, the heat transfer properties of a regenerator body c800 or a portion thereof may be described by a heat transfer time-constant, $\tau$ (tau), which has units of seconds, according to the following equation: $\tau = \frac{\rho c_p V}{hA}$, where $\rho$ is density, $c_p$ is the heat capacity, $V$ is volume of the body, $h$ is the heat transfer coefficient, and $A$ is the surface area. According to the heat transfer time-constant, larger masses ($\rho V$) and larger heat capacities ($c_p$) lead to slower changes in temperature, whereas larger surface areas ($A$) and better heat transfer ($h$) lead to faster temperature changes.

One or more portions of a regenerator body c800 may be configured to provide a desired heat transfer time-constant ($\tau$). One or more portions of a regenerator body c800 may be configured with a time-constant ($\tau$) selected based at least in part on the expected heat flux ($q=h\Delta T$) as between the one or more portions of the regenerator body c800 and engine-working fluid flowing through the regenerator body c800 under given operating conditions. Additionally, or in the alternative, the one or more regions of the regenerator body c800 may be configured with a time-constant ($\tau$) selected based at least in part on the expected heat flux ($q=h\Delta T$) as between the one or more regions of the regenerator bod c800 under given operating conditions. Given a heat transfer time-constant and an initial temperature difference ($\Delta T_i$), the total energy transfer Q can be described by the equation:

$$Q = \int_0^t q\,dt = hA \int_0^t \theta\,dt = (pVc_p)\Delta T_i \left[ 1 - e^{-t/\tau} \right].$$

In some embodiments, a regenerator body c800 may include one or more geometric parameters and/or one or more material properties that differ as between one or more portions of the regenerator body c800 and/or that vary and/or change across a portion of the regenerator body c800. Such geometric parameters and/or material properties may be configured to provide a desired heat transfer time-constant ($\tau$) for one or more respective portions of the regenerator body c800. A first regenerator body-portion c1068 (such as a hot-side portion c1006) may have a first heat transfer time-constant ($\tau_1$) and a second regenerator body-portion c1070 (such as a cold-side portion c1008) may have a second heat transfer time-constant ($\tau_2$). Such geometric parameters and/or material properties may be selected at least in part to provide a first heat transfer time-constant ($\tau_1$) corresponding to the first regenerator body-portion c1068 and/or a second heat transfer time-constant ($\tau_2$) corresponding to the second regenerator body-portion c1070 that differ from one another. Additionally, and/or in the alternative, one or more portions of a regenerator body c800 may have a heat transfer time-constant gradient ($\Delta\tau$) across the respective one or more portions of the regenerator body. The heat transfer time-constant gradient ($\Delta\tau$) may be oriented along a longitudinal axis of a regenerator conduit c1000, a radial axis of the regenerator conduit c1000, and/or an axis corresponding to one or more of a plurality of fin arrays c1016 disposed within the regenerator conduit c1000.

In some embodiments, the first regenerator body-portion c1068 and the second regenerator body-portion c1070 may have congruent heat transfer time-constants ($\tau_c$) as between one another. Additionally, or in the alternative, one or more portions of a regenerator body c800 may have a congruent heat transfer time-constant gradient ($\Delta\tau_c$). Such congruent heat transfer time-constants ($\tau_c$) and/or such a congruent heat transfer time-constant gradient ($\Delta\tau_c$) may be attributable at least in part to one or more geometric parameters and/or one or more material properties that differ as between one or more portions of the regenerator body c800 and/or that vary and/or change across a respective portion of the regenerator body c800.

As described herein, respective portions of a regenerator body c800 are considered to have congruent heat transfer time-constants ($\tau_c$) when a difference in heat flux ($q_1$-$q_2$) corresponding to the respective heat transfer time-constants ($\tau$) is less than would be the case if not for one or more geometric parameters, and/or one or more material properties, that differ as between the respective portions of the regenerator body c800. For example, one or more geometric properties and/or one or more material properties may differ as between a hot-side portion c1006 and a cold-side portion c1008 of a regenerator body c800 such that the hot-side portion c1006 and the cold-side portion c1008 are considered to have congruent heat transfer time-constants ($\tau_c$), because a difference in heat flux ($q_{hot}$-$q_{cold}$) as between the hot-side portion c1006 and the cold-side portion c1008 is less than would be the case if not for one or more geometric parameters, and/or one or more material properties, being configured to differ as between the hot-side portion c1006 and the cold-side portion c1008.

In some embodiments, a regenerator body c800 may have congruent heat transfer time-constants ($\tau$) in which a difference in heat flux between the hot-side portion c1006 and the cold-side portion c1008 ($q_{hot}$-$q_{cold}$) is 30% or less, such as 20% or less, such as 10% or less, such as 5% or less, or such as 1% or less, with an engine-working fluid entering the hot-side portion c1006 at 900C and the engine-working fluid entering the cold-side portion c1008 at 90C. Helium may be utilized as the engine-working fluid. The respective heat transfer time-constants ($\tau$) of the hot-side portion c1006 and the cold-side portion c1008 may be determined at respective midpoints of the hot-side portion c1006 and the cold-side portion c1008. Additionally, or in the alternative, the respective heat transfer time-constants ($\tau$) of the hot-side portion c1006 and the cold-side portion c1008 may be determined by integrating a heat transfer time-constant ($\tau$) across a longitudinal axis of a regenerator conduit c1000, a radial axis of the regenerator conduit c1000, and/or an axis corresponding to one or more of a plurality of fin arrays c1016 disposed within the regenerator conduit c1000. The heat flux of the hot-side portion c1006 and the cold-side portion c1008 may be determined from a temperature difference ($\Delta$T) at respective midpoints of the hot-side portion c1006 and the cold-side portion c1008. Additionally, or in the alternative, respective heat flux may be determined by integrating a temperature difference ($\Delta$T) across a longitudinal axis of a regenerator conduit c1000, a radial axis of the regenerator conduit c1000, and/or an axis corresponding to one or more of a plurality of fin arrays c1016 disposed within the regenerator conduit c1000.

As described herein, a portion of a regenerator body c800 is considered to have a congruent heat transfer time-constant gradient ($\Delta\tau_c$) when a heat flux gradient ($\Delta q/l$) across the respective portion of the regenerator body c800 is less than would be the case if not for one or more geometric parameters, and/or one or more material properties, that vary and/or change across the respective portion of the regenerator body c800. For example, one or more geometric properties and/or one or more material properties may vary and/or change across a hot-side portion c1006 of a regenerator body c800 such that the hot-side portion c1006 is considered to have congruent heat transfer time-constant gradient ($\Delta\tau_c$) because a heat flux gradient ($\Delta q/l$) across the hot-side portion c1006 is less than would be the case if not for the one or more geometric parameters, and/or the one or more material properties, being configured to vary and/or change across the hot-side portion c1006. As another example, one or more geometric properties and/or one or more material properties may vary and/or change across a cold-side portion c1008 of a regenerator body c800 such that the cold-side portion c1008 is considered to have congruent heat transfer time-constant gradient ($\Delta\tau_c$) because a heat flux gradient ($\Delta q/l$) across the cold-side portion c1008 is less than would be the case if not for the one or more geometric parameters, and/or the one or more material properties, being configured to vary and/or change across the cold-side portion c1008. A congruent heat transfer time-constant gradient ($\Delta\tau_c$) may be oriented along a longitudinal axis of a regenerator conduit c1000, a radial axis of the regenerator conduit c1000, and/or an axis corresponding to one or more of a plurality of fin arrays c1016 disposed within the regenerator conduit c1000.

In some embodiments, a portion of a regenerator body c800 may have a congruent heat transfer time-constant gradient ($\Delta\tau_c$) in which a heat flux gradient ($\Delta q/l$) is 0.3 or less, such as 0.2 or less, such as 0.1 or less, such as 0.05 or less, or such as 0.01 or less, with an engine-working fluid entering the hot-side portion c1006 at 900C and the engine-working fluid entering the cold-side portion c1008 at 90C. Helium may be utilized as the engine-working fluid. The heat transfer time-constant gradient ($\Delta\tau_c$) may be determined from a plurality of points across the respective portion of the regenerator body c800. Additionally, or in the alternative, the heat transfer time-constant gradient ($\Delta\tau_c$) may be determined by integrating a heat transfer time-constant ($\tau$) across a longitudinal axis of a regenerator conduit c1000, a radial axis of the regenerator conduit c1000, and/or an axis corresponding to one or more of a plurality of fin arrays c1016 disposed within the regenerator conduit c1000. The heat flux gradient ($\Delta q/l$) may be determined from a temperature gradient ($\Delta$T/l) across the respective portion of the regenerator body c800. Additionally, or in the alternative, the heat flux gradient ($\Delta q/l$) may be determined by integrating a temperature gradient ($\Delta$T/l) across a longitudinal axis of a regenerator conduit c1000, a radial axis of the regenerator conduit c1000, and/or an axis corresponding to one or more of a plurality of fin arrays c1016 disposed within the regenerator conduit c1000.

In some embodiments, as shown, for example, in FIG. 1.6.7A, a regenerator body c800 may have substantially uniform geometry as between a first regenerator body-portion c1068 (such as a hot-side portion c1006) and a second regenerator body-portion c1070 (such as a cold-side portion c1008). The regenerator body c800 may include a sidewall c1020 a substantially uniform cross-sectional thickness as between a first regenerator body-portion c1068 (such as a hot-side portion c1006) and a second regenerator body-portion c1070 (such as a cold-side portion c1008). Additionally, or in the alternative, a regenerator body c800 may include a regenerator conduit c1000 and/or a heat storage medium c1014 that has a substantially uniform cross-sectional thickness as between the first regenerator body-portion c1068 and the second regenerator body-portion c1070. The heat storage medium c1014 may have a substantially uniform configuration, such as a substantially uniform lattice c1048, as between at least part of the first regenerator body-portion c1068 (such as a hot-side portion c1006) and at least part of the second regenerator body-portion c1070 (such as a cold-side portion c1008).

In some embodiments, as shown, for example, in FIGs. 1.6.7B-1.6.7F, a regenerator body c800 may have one or more geometric parameters that differ and/or vary as between a first regenerator body-portion c1068 (such as a hot-side portion c1006) and a second regenerator body-portion c1070 (such as a cold-side portion c1008), and/or along a longitudinal axis extending therebetween. The heat storage medium c1014 may have one or more geometric parameters that differ and/or vary, such as a lattice c1048 with one or more geometric parameters that differ and/or vary, as between at least part of the first regenerator body-portion c1068 (such as a hot-side portion c1006) and at least part of the second regenerator body-portion c1070 (such as a cold-side portion c1008). Additionally, or in the alternative, one or more portions of a generator body c800 may differ and/or vary in respect of one or more material properties, such as composition, heat capacity, density, and/or mass, as between a first regenerator body-portion c1068 (such as a hot-side portion c1006) and a second regenerator body-portion c1070 (such as a cold-side portion c1008), and/or along a longitudinal axis extending therebetween.

As shown in FIGs. 1.6.7B and 1.6.7C, a regenerator body c800 may have a sidewall c1020 with at least one aspect that differs and/or varies in respect of cross-sectional thickness as between a first regenerator body-portion c1068 (such as a hot-side portion c1006) and a second regenerator body-portion c1070 (such as a cold-side portion c1008), and/or along a longitudinal axis extending therebetween. The cross-sectional thickness of the regenerator conduit c1000 and/or the heat storage medium c1014 may remain substantially constant as between the first regenerator body-portion c1068 to the second regenerator body-portion c1070, and/or along a longitudinal axis extending therebetween, as shown, for example, in FIGs. 1.6.7A-1.6.7C.

In some embodiments, the cross-sectional thickness of a sidewall c1020 may decrease from a hot-side portion c1006 to a cold-side portion c1008. The decrease in cross-sectional thickness from the hot-side portion c1006 to the cold-side portion c1008 may compensate for differences in thermal conductivity and specific heat of the engine-working fluid at the as between the hot-side portion c1006 to the cold-side portion c1008. Additionally, or in the alternative, the cross-sectional thickness of a sidewall c1020 may vary along the longitudinal axis of the regenerator conduit c1000, while decreasing from the hot-side portion c1006 to the cold-side portion c1008. The varying cross-sectional thickness may reduce heat flux gradient between the regenerator body c800 and the engine-working fluid, along the regenerator conduit c1000 and/or as between the hot-side portion c1006 and the engine-working fluid and/or as between the cold-side portion c1008 and the engine-working fluid.

Additionally or in the alternative, as shown in FIGs. 1.6.7D-1.6.7F, a regenerator body c800 may include a regenerator conduit c1000 and/or a heat storage medium c1014 that differs and/or varies in respect of cross-sectional thickness as between a first regenerator body-portion c1068 (such as a hot-side portion c1006) and a second regenerator body-portion c1070 (such as a cold-side portion c1008), and/or along a longitudinal axis extending therebetween. A regenerator conduit c1000 and/or a heat storage medium c1014 may additionally or alternatively differ in respect of surface area and/or volume as between a first regenerator body-portion c1068 (such as a hot-side portion c1006) and a second regenerator body-portion c1070 (such as a cold-side portion c1008), and/or along a longitudinal axis extending therebetween. The cross-sectional thickness of the sidewall c1020 may remain substantially constant as between the first regenerator body-portion c1068 to the second regenerator body-portion c1070, and/or along a longitudinal axis extending therebetween, as shown, for example, in FIG. 1.6.7D. Additionally, or in the alternative, the cross-sectional thickness of the sidewall c1020 may differ and/or vary along a longitudinal axis extending from the first regenerator body-portion c1068 to the second regenerator body-portion c1070, as shown in FIGs. 1.6.7B, 1.6.7C, 1.6.7E, and 1.6.7F. A regenerator body c800 may additionally or alternatively differ and/or vary in respect of external cross-sectional thickness as between a first regenerator body-portion c1068 (such as a hot-side portion c1006) and a second regenerator body-portion c1070 (such as a cold-side portion c1008), and/or along a longitudinal axis extending therebetween, as shown in FIGs. 1.6.7C-1.6.7F.

In some embodiments, the cross-sectional thickness and/or surface area of the regenerator conduit c1000 and/or the heat storage medium c1014 may decrease from a hot-side portion c1006 to a cold-side portion c1008. The decrease in cross-sectional thickness and/or surface area from the hot-side portion c1006 to the cold-side portion c1008 may compensate for differences in thermal conductivity and specific heat of the engine-working fluid at the as between the hot-side portion c1006 to the cold-side portion c1008. Additionally, or in the alternative, the cross-sectional thickness and/or surface area of the regenerator conduit c1000 and/or the heat storage medium c1014 may vary along the longitudinal axis of the regenerator conduit c1000, while decreasing from the hot-side portion c1006 to the cold-side portion c1008. The varying cross-sectional thickness and/or surface area may reduce heat flux gradient between the regenerator body c800 and the engine-working fluid, along the regenerator conduit c1000 and/or as between the hot-side portion c1006 and the engine-working fluid and/or as between the cold-side portion c1008 and the engine-working fluid.

By way of example, as shown in FIG. 1.6.7B, a regenerator body c800 may include a sidewall c1020 that includes at least one aspect that differs in respect of cross-sectional thickness as between a first regenerator body-portion c1068 (such as a hot-side portion c1006) and a second regenerator body-portion c1070 (such as a cold-side portion c1008). For example, the internal-sidewall c1062 may differ in respect of cross-sectional thickness, as shown. Additionally, or in the alternative, the external sidewall c1064 and/or the voidspace c1066 may differ in respect of cross-sectional thickness as between a first regenerator body-portion c1068 (such as a hot-side portion c1006) and a second regenerator body-portion c1070 (such as a cold-side portion c1008). The cross-sectional thickness of at least one aspect of the sidewall c1020 may decrease along a longitudinal axis extending from the first regenerator body-portion c1068 to the second regenerator body-portion c1070, as shown. Additionally, or in the alternative, the cross-sectional thickness of at least one aspect of the sidewall c1020 may increase along a longitudinal axis extending from the first regenerator body-portion c1068 to the second regenerator body-portion c1070.

In some embodiments, the cross-sectional thickness of the sidewall c1020 may remain substantially constant along a longitudinal axis extending from the first regenerator body portion c1068 to the second regenerator body portion c1070, while the internal-sidewall c1062 differs in respect of cross-sectional thickness along the longitudinal axis. The cross-sectional thickness of the internal sidewall c1062 and the cross-sectional thickness of the voidspace c1066 may differ inversely from one another along the longitudinal axis. The cross-sectional thickness of the internal sidewall c1062 may decrease along the longitudinal axis, while the cross-sectional thickness of the voidspace c1066 may increase along the longitudinal axis. The cross-sectional thickness of the regenerator conduit c1000 and/or the heat storage medium c1014 may remain substantially constant along the longitudinal axis while at least one aspect of the sidewall c1020 varies in respect of cross-sectional thickness.

As shown in FIG. 1.6.7.C, in some embodiments a regenerator body c800 may additionally or alternatively include a sidewall c1020 with at least one aspect that varies in respect of cross-sectional thickness along a longitudinal axis extending from the first regenerator body-portion c1068 (such as a hot-side portion c1006) to the second regenerator body-portion c1070 (such as a cold-side portion c1008). For example, at least one aspect of the sidewall c1020 may include a plurality of alternating changes in cross-sectional thickness along the longitudinal axis. As shown, the internal-sidewall c1062 may vary in respect of cross-sectional thickness along the longitudinal axis, such as with a plurality of alternating changes in cross-sectional thickness along the longitudinal axis. Additionally or alternatively, the external sidewall c1064 and/or the voidspace c1066 may vary in respect of cross-sectional thickness along the longitudinal axis, such as with a plurality of alternating changes in cross-sectional thickness along the longitudinal axis. The external cross-sectional thickness of the regenerator body c800 may additionally or alternatively vary in respect of cross-sectional thickness along the longitudinal axis, such as with a plurality of alternating changes in cross-sectional thickness along the longitudinal axis, as shown in FIG. 1.6.7C. The cross-sectional thickness of the regenerator conduit c1000 and/or the heat storage medium c1014 may remain substantially constant along the longitudinal axis while at least one aspect of the sidewall c1020 varies in respect of cross-sectional thickness.

As shown in FIG. 1.6.7.D, in some embodiments a regenerator body c800 include a regenerator conduit c1000 and/or a heat storage medium c1014 with at least one aspect that differs in respect of cross-sectional thickness as between a first regenerator body-portion c1068 (such as a hot-side portion c1006) and the second regenerator body-portion c1070 (such as a cold-side portion c1008), and/or along a longitudinal axis therebetween. The cross-sectional thickness of the sidewall c1020 may remain substantially constant as between the first regenerator body-portion c1068 to the second regenerator body-portion c1070, and/or along a longitudinal axis extending therebetween.

As shown in FIG. 1.6.7.E, in some embodiments a regenerator body c800 may a regenerator conduit c1000 and/or a heat storage medium c1014 with at least one aspect that differs in respect of cross-sectional thickness, and a sidewall c1020 that includes at least one aspect that differs in respect of cross-sectional thickness, as between a first regenerator body-portion c1068 (such as a hot-side portion c1006) and the second regenerator body-portion c1070 (such as a cold-side portion c1008), and/or along a longitudinal axis therebetween. For example, as between a first regenerator body-portion c1068 and a second regenerator body-portion c1070. the internal-sidewall c1062 may differ in respect of cross-sectional thickness, and the regenerator conduit c1000 and/or the heat storage medium c1014 may differ in respect of cross-sectional thickness. Additionally, or in the alternative, the external sidewall c1064 and/or the voidspace c1066 may differ in respect of cross-sectional. The cross-sectional thickness of at least one aspect of the sidewall c1020, and the cross-sectional thickness of the regenerator conduit c1000 and/or the heat storage medium c1014, may decrease along a longitudinal axis extending from the first regenerator body-portion c1068 to the second regenerator body-portion c1070, as shown. Additionally, or in the alternative, the cross-sectional thickness of at least one aspect of the sidewall c1020, and the cross-sectional thickness of the regenerator conduit c1000 and/or the heat storage medium c1014, may increase along a longitudinal axis extending from the first regenerator body-portion c1068 to the second regenerator body-portion c1070

As shown in FIG. 1.6.7.F, in some embodiments a regenerator body c800 may include a sidewall c1020, and regenerator conduit c1000 and/or the heat storage medium c1014, a with at least one aspect that varies in respect of cross-sectional thickness along a longitudinal axis extending from the first regenerator body-portion c1068 (such as a hot-side portion c1006) to the second regenerator body-portion c1070 (such as a cold-side portion c1008). For example, at least one aspect of the sidewall c1020, and at least one aspect of the regenerator conduit c1000 and/or the heat storage medium c1014, may include a plurality of alternating changes in cross-sectional thickness along the longitudinal axis. As shown, the overall cross-sectional thickness of the sidewall c1062 may remain substantially constant in respect of cross-sectional thickness along the longitudinal axis, while the external cross-sectional thickness of the regenerator body c800 decreases and/or varies as between a first regenerator body-portion c1068 (such as a hot-side portion c1006) and a second regenerator body-portion c1070 (such as a cold-side portion c1008), and/or along a longitudinal axis extending therebetween.

These and other embodiments exhibiting differing and/or variable geometric parameters, and/or differing and/or varying material properties, may be configured to provide a desired heat transfer time-constant ($\tau$), such as a congruent heat transfer time-constant ($\tau$), as between at least part of the first regenerator body-portion c1068 (such as a hot-side portion c1006) and at least part of the second regenerator body-portion c1070 (such as a cold-side portion c1008).

Now turning to FIG. 1.6.8, exemplary methods of regenerating heat in an engine-working fluid will be described. The exemplary methods of regenerating heat in an engine-working fluid may be performed in connection with operation of a regenerator body c800, a heater body c100, and/or an engine c002 as described herein. As shown in FIG. 1.6.8, an exemplary method c1080 may include, at block c1084, flowing an engine-working fluid from a hot-side portion c1006 of a regenerator body c800 towards a cold-side portion of the regenerator body c1008. The regenerator body c800 may include a regenerator conduit c1000 and a plurality of fin arrays c1016 adjacently disposed within the regenerator conduit c1000. The exemplary method c1080 may include, at block c1084, transferring heat from the engine-working fluid to the plurality of fin arrays c1016. The plurality of fin arrays c1016 may be respectively supported by the regenerator conduit c1000 in spaced relation to one another. The spaced relation of the plurality of fin arrays c1016 may define a gap G 1018 longitudinally separating adjacent ones of the plurality of fin arrays c1016. The exemplary method c1080 may further include, at block c1086, flowing the engine-working fluid from the cold-side portion c1008 of the regenerator body c800 towards the hot-side portion c1006 of the regenerator body c800. At block c1088, the exemplary method c1080 may include transferring heat from the plurality of fin arrays c1016 to the engine-working fluid.

**In** some methods c1080, flowing the engine-working fluid from the hot-side portion c1006 of the regenerator body c800 may include, at block c1090, flowing the engine-working fluid from a plurality of hot-side working-fluid pathways c1010 into the regenerator conduit c1000. The plurality of hot-side working-fluid pathways c1010 may fluidly communicate with the hot-side portion c1006 of the regenerator body c800. Exemplary methods c1080 may additionally or alternatively include, at block c1092, flowing the engine-working fluid from a hot-side c1002 of the piston chamber c112 into the plurality of hot-side working-fluid pathways c1010. The hot-side c1002 of the piston chamber c112 may fluidly communicate with the plurality of hot-side working-fluid pathways c1010.

In some methods c1080, flowing the engine-working fluid from the cold-side portion c1008 of the regenerator body c800 may include, at block c1094, flowing the engine-working fluid from a plurality of cold-side working-fluid pathways c1012 into the regenerator conduit c1000. The plurality of cold-side working-fluid pathways c1012 may fluidly communicate with the cold-side portion c1008 of the regenerator body c800. Exemplary methods c1080 may additionally or alternatively include, at block c1096, flowing the engine-working fluid from a cold-side c1004 of the piston chamber c112 into the plurality of cold-side working-fluid pathways c1012. The cold-side c1004 of the piston chamber c112 may fluidly communicate with the plurality of cold-side working-fluid pathways c1012.

In some embodiments, an exemplary method c1080 may include transferring a first quantity of heat per unit area from the engine-working fluid to the plurality of fin arrays c1016 while transferring a second quantity of heat per unit area from the engine-working fluid to the regenerator conduit c1000. The first quantity of heat per unit area may exceed the second quantity of heat per unit area. The plurality of fin arrays c1016 may include a first material and the regenerator conduit c1000 may include a second material. The thermal conductivity and of the first material may exceed the thermal conductivity of the second material. Additionally, or in the alternative, the heat capacity of the first material may exceed the heat capacity of the second material.

Exemplary conduction-enhancing protuberances may include any one or more of a combination of protuberant features having a variety of shapes and configurations, including nodules, loops, hooks, bumps, burls, clots, lumps, knobs, projections, protrusions, swells, enlargements, outgrowths, accretions, blisters, juts, and the like. These conduction-attenuating protuberances c728 occur in an ordered, semi-ordered, random, or semi-random fashion. However, the particular configuration, arrangement, or orientation of the conduction-enhancing protuberances c728 may be selectively controlled or modified by adjusting the configuration or arrangement of at least a portion of the working-fluid body c108 and/or hot-side heat exchanger body c600, such as the configuration or arrangement of at least a portion of the working-fluid pathways c110 and/or heating fluid pathways c602.

It should be appreciated that in various embodiments the surface area within the heater conduits or working-fluid pathways C110 corresponds to an internal wall or surface of the heater conduit C110 at which the engine working fluid is in direct contact. In one embodiment, the surface area defines a nominal surface area of the working-fluid pathway C110, such as a cross sectional area within the working-fluid pathway C110. In other embodiments, features may be added or altered to the working-fluid passage C110 within the heater conduit, such as, but not limited to, surface roughness, protuberances, depressions, spikes, nodules, loops, hooks, bumps, burls, clots, lumps, knobs, projections, protrusions, swells, enlargements, outgrowths, accretions, blisters, juts, and the like, or other raised material, or combinations thereof, to desirably alter flow rate, pressure drop, heat transfer, flow profile or fluid dynamics of the engine working fluid.

### Chapter 1.7 - Engine Chamber to Chamber Conduits Arrangements

The cross sectional view provided in FIG. 1.3.1 is cut along the lateral direction L such as to depict two of four piston assemblies A1010 of the system A10. In various embodiments, the system A10 provided in regard to FIG. 1.3.1 further includes the walled conduits A1050 disposed inward of the piston bodies C700 proximate to the reference longitudinal axis C204, such as shown and described in regard to FIGS. 1.4.5-1.4.7. In other embodiments, the system A10 provided in regard to FIG. 1.3.1 further includes the walled conduits A1050 disposed outward of the piston bodies C700, such as shown and described in regard to FIG. 1.7.1 through FIG. 1.7.4.

Referring to FIG. 1.7.1 through FIG. 1.7.4, side, end, and perspective views of a portion of the system A10 are provided. The embodiments provided in regard to FIG. 1.7.1 through FIG. 1.7.4 are configured substantially similarly as shown and described in regard to FIG. 1.3.1 - FIG. 1.3.2. In regard to FIGS. 1.7.1 - FIG. 1.7.4, the portions of the system A10 depicted therein include four piston assemblies A1010 positioned within eight respective piston bodies C700. The piston bodies C700 may generally include the first volume wall and the second volume wall shown and described in regard to FIG. 1.3.1 - FIG. 1.3.2. The piston bodies C700 may generally define cylinders into which pistons A1011 of the piston assembly A1010 are each positioned such as to define the expansion chamber A221 and the compression chamber A222 within each piston body C700. However, it should be appreciated that other suitable geometries of the piston body C700 containing the piston A1011 may be utilized.

The engine A100 further includes a plurality of walled conduits A1050 connecting particular chambers A221, A222 of each piston body C700 (FIG. 1.3.1) such as to define a balanced pressure arrangement of the pistons A1011. In various embodiments, the engine A100 includes at least one interconnected volume of chambers A221, A222 such as described herein. In one embodiment, such as depicted in regard to FIGS. 1.7.1 - FIG. 1.7.4, the engine A100 includes two interconnected volumes in which each interconnected volume includes an expansion chamber A221 of a first piston body C700 of a first piston assembly A1010 connected in fluid communication of the engine working fluid with a compression chamber A222 of a second piston body C700 of a second piston assembly A1010 each connected by a conduit A1050. More particularly, the balanced pressure arrangement of piston assemblies A1010 depicted in regard to FIGS. 1.7.1 - FIG. 1.7.4 includes two interconnected volumes each substantially fluidly separated from one another and/or substantially pneumatically separated from one another. The fluidly separated and/or pneumatically separated arrangement of chambers A221, A222 into the interconnected volume, and those chambers A221, A222 outside of the interconnected volume or in another interconnected volume, is particularly provided via the arrangement of expansion chambers A221 connected to compression chambers A222 via the walled conduits A1050 such as further described herein.

In various embodiments, the interconnected volume includes pairs of the expansion chamber A221 fluidly coupled to the compression chamber A222 each defined at laterally separated ends of the piston assemblies A1010. In one embodiment, the engine A100 defines a first end 101 separated along the lateral direction L by the connection member A1030 from a second end 102, such as depicted in FIG. 1.7.2 and FIG. 1.7.3. Each end of the engine A100 defines an expansion chamber A221 and a compression chamber A222 at each piston A1011 of each piston assembly A1010. The engine A100 depicted in FIGS. 1.7.1 - FIG. 1.7.4, and further in regard to FIG. 1.3.1, includes the expansion chamber A221 at one end connected to a respective compression chamber A222 at another end via respective conduits. In one embodiment, such as depicted in FIGS. 1.7.2 and 1.7.3, the engine A100 includes two expansion chambers A221 at the first end 101 each connected to respective compression chambers A222 at the second end 102 via respective conduits A1050. The engine A100 further includes two expansion chambers A221 at the second end 102 each connected to respective compression chamber A222 at the first end 101 via respective conduits A1050. The system A10 further includes four expansion chambers A221 at one end each connected to respective compression chambers A222 at the same end via respective conduits A1050. In one embodiment, the system A10 includes two expansion chambers A221 at the first end 101 each connected to respective compression chambers A222 at the first end 101 via respective walled conduits A1050. The system A10 further includes two expansion chambers A221 at the second end 102 each connected to respective compression chambers A222 at the second end 102 via respective walled conduits A1050.

To provide a balanced pressure arrangement of piston assemblies A1010, one interconnected volume includes a pair of the expansion chamber A221 at one end (e.g., the first end 101 or the second end 102) connected to the compression chamber A222 at the other or opposite end. In one embodiment, the expansion chamber A221 at the first end 101 is fluidly connected to the compression chamber A222 at the second end 102. In another embodiment, the expansion chamber A221 at the second end 102 is fluidly connected to the compression chamber A222 at the first end 101. The interconnected volume further includes a pair of expansion chambers A221 at the first end 101 or the second end 102 connected to a respective compression chamber A222 at the same end, opposing ends, or both, relative to the expansion chamber A221. In one embodiment, the expansion chamber A221 at the first end 101 is fluidly connected to the compression chamber A222 at the same end (i.e., the first end 101). In another embodiment, the expansion chamber A221 at the second end 102 is fluid connected to the compression chamber A222 at the same end (i.e., the second end 102). In yet another embodiment, the expansion chamber A221 at the first end 101 is fluidly connected to the compression chamber A222 at the second end 102 (i.e., the opposing end). In still yet another embodiment, the expansion chamber A221 at the second end 102 is fluidly connected to the compression chamber at the first end 101 (i.e., the opposing end). It should be appreciated that the arrangement described herein includes each expansion chamber A221 of one piston body C700 of one piston assembly A1010 connected to a respective compression chamber A222 of another, different piston body C700 of another, different piston assembly A1010. It should further be appreciated that, in various embodiments, the expansion chamber A221 of one piston body C700 and one piston assembly C1010 is exclusively fluidly connected to the compression chamber A222 of another piston body C700 of another piston assembly C1010 (i.e., each walled conduit A1050 fluidly connects only one expansion chamber A221 to only one compression chamber A222).

The balanced pressure arrangement of piston assemblies A1010 described herein is such that a uniform temperature applied at the expansion chambers A221 and the compression chambers A222 provides an equal pressure at the expansion chamber A221 of one piston body C700 counteracted by an equal and opposite pressure at the same piston body C700 relative to the expansion chamber A221. Stated alternatively, when a uniform temperature is applied to the expansion chambers A221 and the compression chambers A222, movement of one piston assembly A1010 defining a free piston assembly A1010 results in pressure cancellation at adjacent piston assemblies A1010 such that pressure waves will not propagate to induce movement of the adjacent piston assembly A1010.

It should be appreciated that each interconnected volume described herein includes one or more passages, chambers, openings, or other flowpaths between the arrangements of the compression chamber A222 and the expansion chamber A221 described above. For example, the particular arrangements of walled conduits A1050 providing fluid communication of the engine working fluid between the compression chamber A222 and the expansion chamber A221 such as described in regardto FIGS. 1.7.1 through 1.7.4 further includes the chiller conduits A54, collection chambers A62, A64, heater conduits C110, etc. such as shown and described in regard to FIG. 1.4.1 through FIG. 1.5.1. Additionally, or alternatively, the particular arrangements of walled conduits A1050 providing fluid communication between the compression chamber A222 and the expansion chamber A221 such as described in regard to FIG. 1.7.1 through FIG. 1.7.2 may further include a heat exchanger or regenerator, or features thereof, such as shown and described in regard to FIG. 1.6.1.

Although depicted as a balanced pressure arrangement of four piston assemblies A1010 at eight piston bodies C700 defining eight fluidly connected pairs of expansion chambers A221 and compression chambers A222, it should be appreciated that the engine A100 generally includes an interconnected volume such as described above. As such, other embodiments of the engine A100 may include a quantity of two or more piston assemblies A1010 in which the arrangements of the piston assembly A1010 are scaled accordingly based on the arrangement described above such as to provide at least one interconnected volume of chambers A221, A222 and conduits 1050.

In various embodiments, the system A10 defines the reference longitudinal axis C204 extended co-directional to the lateral direction L or generally along a direction along which the pistons A1011 articulate within the chambers A221, A222. The chambers A221, A222 are positioned in circumferential arrangement relative to the reference longitudinal axis C204. Each chamber 221, 222 is extended along the lateral direction L or otherwise co-directional to the reference longitudinal axis C204.

In one embodiment, the engine includes four piston assemblies A1010 extended along the lateral direction L and in circumferential arrangement relative to the reference longitudinal axis C204. The piston assemblies A1010 may be positioned equidistant to one another around the reference longitudinal axis C204. In one embodiment, a pair of the heater body is positioned at outer ends A103 of the engine. The heater body is positioned proximate to the expansion chamber A221 and distal to the compression chamber A222. Each heater body may be positioned and configured to provide a substantially even flow of thermal energy to four hot side heat exchangers 160 or expansion chambers A221 at a time.

In other embodiments, the engine A100 includes two or more piston assemblies A1010 in side-by-side arrangement. The piston assemblies A1010 may be positioned equidistant relative to one another. In still various embodiments, a single heater body C100 may be positioned relative to each hot side heat exchanger or working fluid body C108. It should be appreciated that various embodiments of the system A10 provided herein may include any quantity of heater bodies positioned at any quantity of expansion chambers A221 as desired. Further embodiments of the system A10 provided herein in regard to FIG. 1.7.5 through 1.7.8 further illustrate positioning of the heater body C100 relative to the expansion chamber A221. However, it should be appreciated that other arrangements may be utilized as desired such as to provide thermal energy to the expansion chambers A221. In still various embodiments, other arrangements may be utilized such as to provide selective or independent operability of a plurality of heater bodies C100. For example, selective or independent operability of the plurality of heater bodies C100 may desirably control a temperature, flow rate, or other property of thermal energy, or particularly the heating working fluid, provided in thermal communication to the working fluid body C108. Selective operability may further include selective on/off operation of one or more heater bodies C100 independent of one another.

It should further be appreciated that although the piston assemblies A1010 of the engine A100 are depicted in straight, flat, inline, or horizontally opposed arrangements, the piston assemblies A1010 and heater bodies C100 may alternatively be arranged in V-, W-, radial, or circumferential arrangements, or other suitable piston assembly A1010 arrangements. For example, one or more embodiments of the system A10 may include a center and/or outer heater body C100 around which the plurality of piston assemblies A1010 is positioned.

Referring now to FIG. 1.7.5 through FIG. 1.7.8, further exemplary embodiments of the system A10 are provided. The embodiments provided in regard to FIG. 1.7.5 through FIG. 1.7.8 are configured substantially similarly as shown and described in regard to FIG. 1.2.1 through FIG. 1.7.2. Referring to FIG. 1.7.5 through 1.7.8, positioning the load device c092 outside of the inner ends 104 of the piston assembly A1010 provides the connection member A1030 to be shorter between pistons A1011. The shorter connection member A1030 provides the pistons A1011 to be positioned more closely together in contrast to a longer connection member A1030 based at least on the load device c092 being positioned at the inner ends 104 of the piston assembly A1010. In regard to FIG. 1.7.5, the load device c092 is formed at least in part by the piston A1011 and the surrounding piston body C700. In regard to FIGS. 1.7.6 - FIG. 1.7.7, the load device c092 is positioned at one or more outer ends A103 of the engine. Positioning the load device c092 outside of the inner ends 104 provides dimensions and sizing of the load device c092 to be substantially de-coupled from dimensions and sizing of the closed cycle engine. For example, positioning the load device c092 outside of the inner end A104 of the engine de-couples the length and thickness of the dynamic member A181 from the connection member A1030. As another example, positioning the load device c092 outside of the inner end A104 of the engine de-couples a desired power density of the engine from the sizing and dimensions of the load device c092, such as an electric machine. As such, the shorter connection member A1030 between the pistons A1011 provides a smaller packaging of the engine while substantially maintaining the power generation and output relative to other arrangements.

In FIG. 1.7.5, the dynamic member A181 of the load device c092 defining the electric machine is positioned at the pistons A1011 of the piston assembly A1010. The stator assembly A182 of the electric machine is positioned at the piston body C700, such as at the second volume wall. Lateral movement of the pistons A1011 relative to the surrounding stator assembly A182 at the piston body C700 generates electricity at the electric machine. The system A10 further includes the chiller assembly surrounding the electric machine. In more particular embodiments, the chiller assembly surrounds the stator assembly A182 of the load device c092 defining an electric machine. The chiller assembly may further provide working fluid in thermal communication with inner ends 104 of the system A10, such as to provide thermal communication to the compression chamber A222 via the inner end wall A50.

Referring now to FIG. 1.7.5 through FIG. 1.7.6, in various embodiments the chiller assembly includes a chiller casing in which a chiller flowpath is defined next to the compression chamber A222 of the volume. The chiller flowpath may particularly be defined immediately next to or adjacent to the second volume wall defined by the chiller assembly, or particularly the chiller casing, such as depicted in regard to FIG. 1.7.5. The chiller assembly includes the second volume wall and further includes the inner end wall A50 such as described in regard to FIG. 1.3.1 - FIG. 1.3.2. The second volume wall and the inner end wall A50 may together define a single monolithic structure. Furthermore, the chiller casing may include the second volume wall and the inner end wall A50 and define the chiller flowpath as a single monolithic structure. As such, the structure and method for assembly and improved thermal efficiency may include positioning pistons A1011 and the connection member A1030 through the chiller assembly, operably coupling the pistons A1011 and the connection member A1030 together as the piston assembly A1010, and closing or sealing the expansion chamber A221 and compression chamber A222 via the heater body at the outer ends A103 of the closed cycle engine.

Referring now to FIG. 1.7.6 through FIG. 1.7.7,, in various embodiments the load device c092 is positioned at one or more outer ends A103 of the closed cycle engine in operative communication with the piston assembly A1010. The system A10 may further include an extension member A186 connected to one or more pistons A1011 of the piston assembly A1010. The extension member A186 is connected to the piston A1011 and extended laterally outward toward one or more outer ends A103. The extension member A186 is operatively connected to the load device c092 such that lateral movement of the piston assembly A1010 including the extension member A186 generates electric energy at the electric machine. Although not further depicted in regard to FIGS. 8-9, the extension member A186 further includes the dynamic member A181 at the load device c092 defining the electric machine operatively coupled to the electric machine in magnetic communication with the stator assembly A182, such as depicted and described in regard to FIG. 1.3.1 - FIG. 1.3.2.

Referring still to FIG. 1.7.6 through FIG. 1.7.7, the machine body c918 surrounding the load device c092 includes an interface wall A142 in contact with the outer end A103 of the load device c092. Within the machine body c918 and around the load device c092 is a cavity A146. The interface wall A142 includes a seal A144, such as a gap seal, at an interface of the extension member A186 and the interface wall A142. The cavity A146 may particularly define a pressurized cavity such that pressurization at the volume within the piston body C700, such as at the expansion chamber A221, is substantially maintained or mitigated from pressure loss within the expansion chamber A221 along the extension member A186. It should be appreciated that any suitable type of seal may be incorporated at the interface wall A142 such as to substantially maintain pressure at the expansion chamber A221, or provide an acceptably low rate of leakage over time from the expansion chamber A221.

Regarding FIG. 1.7.6, and similarly as shown and described in regard to FIG. 1.3.1 through **FIG.** 1.7.5, the heater body is positioned at outer ends A103 of the closed cycle engine. **In** regard to the embodiment depicted in FIG. 1.7.7, the heater body is positioned at the inner end A104 of the closed cycle engine between each pair of piston bodies C700 at which each respective piston A1011 of the piston assembly A1010 is contained. The heater body may particularly define a single common heater body such as to provide a single thermal energy output source to each expansion chamber A221 of the closed cycle engine.

Referring to FIG. 1.7.7 and further in regard to the embodiment and description regarding FIG. 1.7.1 through FIG. 1.7.2, the single common heater body may be positioned to provide a substantially uniform thermal energy output to all eight expansion chambers A221 of the closed cycle engine. The single common heater body positioned between the expansion chambers A221 may alleviate or obviate issues that may arise from uneven thermal input to the expansion chambers A221. For example, the single common heater body may mitigate phase drifting of the piston assemblies A1010 relative to one another. As such, the single common heater body may promote balanced pressure operation of the closed cycle engine, mitigate unbalanced operation, reduce vibrations or mitigate promulgation of vibrations, improve efficiency of the system A10, or promote improved operability of the system A10.

It should be appreciated that various embodiments of the system A10 provided in regard to FIGS. 1.2.1 through FIG. 1.7.7 are further configured to provide a desired thermal energy output from the heater body to the expansion chambers A221. For example, the embodiments shown and described herein may be configured to output a substantially uniform thermal energy profile from each heater body to all expansion chambers A221. In still various embodiments, the chiller assembly includes the chiller working fluid input and the chiller working fluid output such as depicted and described in regard to FIG. 1.7.1 through FIG. 1.7.2, such as to provide a substantially uniform thermal energy output from the compression chamber A222 to the chiller assembly.

Referring now to FIG. 1.7.8, the schematic embodiment provided is configured substantially similarly as shown and described in regard to FIGS. 1.2.1 through FIG. 1.7.7. In the embodiment depicted in FIG. 1.7.8, the system A10 further includes an adapter A188 attaching the connection member A1030 to the extension member A186. In various embodiments, the adapter A188 is extended along a transverse direction generally acute to the lateral direction L. In one embodiment, the adapter A188 is extended substantially perpendicular to the lateral direction L. The adapter A188 provides substantially parallel arrangement of the connection member A1030 relative to the extension member A186 such as to translate lateral movement of the connection member A1030 at a first plane to lateral movement of the extension member A186 at a second plane different from the first plane. In various embodiments, the adapter A188 includes a mechanical connection, such as, for example, a rocker arm, to extend from the connection member A1030 to the load device c092. The adapter A188 further provides a diameter, length, or other dimension of the load device c092 to be decoupled from dimensions of the closed cycle engine. In various embodiments, the adapter A188 provides the dynamic member A181 and/or extension member A186 of the load device c092 to have a stroke or length different from the connection member A1030. The adapter A188 may further provide the load device c092 to include a gearing system, a frequency converter, or other devices to alter or scale the output of the load device c092 from the size or speed of the piston assembly A1010. As such, the closed cycle engine and the load device c092 may each be sized substantially separately for improved performance of each.

In general, the exemplary embodiments of system A10 and engine, or portions thereof, described herein may be manufactured or formed using any suitable process. However, in accordance with several aspects of the present subject matter, some or all of system A10 may be formed using an additive manufacturing process, such as a 3-D printing process. The use of such a process may allow portions of the system A10 to be formed integrally, as a single monolithic component, or as any suitable number of sub-components. In various embodiments, the manufacturing process may allow the all or part of the heater body, the chiller assembly, the load device c092, or the engine to be integrally formed and include a variety of features not possible when using prior manufacturing methods. For example, the additive manufacturing methods described herein provide the manufacture of the system A10 having unique features, configurations, thicknesses, materials, densities, and structures not possible using prior manufacturing methods. Some of these novel features can, for example, improve thermal energy transfer between two or more components, improve thermal energy transfer to the engine working fluid, improve thermal energy transfer from the engine working fluid to the chiller working fluid, reduce leakages, or facilitate assembly, or generally improve thermal efficiency, power generation and output, or power density of the system A10 using an additive manufacturing process as described herein.

## Chapter 1.8 - Monolithic Engine Assembly

Now referring to FIGs. 1.8.1A through 1.8.1F, exemplary engine assemblies c900 will be described. The engine assemblies c900 described herein may include an engine c002, such as described in regard to the system A10 and engine A100 shown and depicted in regard to FIGs. 1.2.1 through 1.7.8, or further herein with reference to FIG. 4.1.1. The engine assembly c900 may include one or more monolithic bodies or monolithic body-segments as described herein. A monolithic body and/or a monolithic body-segment may be fabricated using an additive manufacturing technology and may be void of any seams, joints, or the like characteristic of separately fabricated components.

An engine c002 may include one or more heater bodies c100 and one or more engine bodies c050 that together define an engine assembly c900. An exemplary engine assembly c900 may include at least one heater body c100 and at least one engine body c050. However, it will be appreciated that any number of heater bodies c100 and/or any number of engine bodies c050 may be provided. In some embodiments, a first heater body c100 may be disposed at a first side of an engine assembly c900 and a second heater body c100 may be disposed at a second side of an engine assembly c900. One or more engine bodies c050 may be disposed adjacent to the first heater body c100 and/or adjacent to the second heater body c100. One or more heater bodies c100 and/or one or more engine bodies c050 may be operably coupled or operably couplable to one another such as via welding, fusing, or the like, so as to provide an integrally formed engine assembly c900. Additionally, or in the alternative, one or more heater bodies c100 and/or one or more engine bodies c050 may be operably coupled or operably couplable to one another such as via bolts, fasteners, or the like, so as to provide an assembled engine assembly c900.

The engine assembly c900 may include one or more piston assemblies c090 and one or more generator assemblies c092. The one or more piston assemblies c090 and the one or more generator assemblies c092 may be operably insertable within an engine body c050 and/or a heater body c100. The one or more generator assemblies c092 may receive a mid-ward portion of the one or more piston assemblies 092. The one or more piston assemblies c090 and/or the one or more generator assemblies c092 may be inserted into an engine body c050 and/or a heater body c100 prior to operably coupling at least one engine body c050 to another engine body c050 or to a heater body c100. Additionally, or in the alternative, one or more piston assemblies c090 and/or the one or more generator assemblies c092 may be inserted into an engine body c050 and/or a heater body c100 prior to operably coupling at least one heater body c100 to an engine body c050. In this way, an engine assembly c900 may be integrally formed and/or assembled at least in part by installing one or more piston assemblies c090 and/or the one or more generator assemblies c092 into one or more monolithic bodies and/or monolithic body-segments that make up the engine assembly c900. The one or more monolithic bodies and/or monolithic body-segments may be operably coupled to one another after having installed the one or more piston assemblies c090 and/or the one or more generator assemblies c092 therein. However, it will be appreciated that in some embodiments some of the more monolithic bodies and/or monolithic body-segments that make up an engine assembly c900 may be operably coupled to one another prior to installing the one or more piston assemblies c090 and/or the one or more generator assemblies c092 therein.

FIGs. 1.8.1A through 1.8.1F show exploded views of exemplary engine assemblies c900. An engine assembly c900 may include at least two monolithic bodies or monolithic body-segments, within which one or more piston assemblies c090 and one or more generator assemblies c092 may be enclosed. For example, an engine assembly c900 may include a first monolithic body that includes a first heater body c100 and a first portion of an engine body c050, and a second monolithic body that includes a second heater body c100 and a second portion of an engine body c050. In some embodiments, an engine assembly c900 may include only two monolithic bodies or monolithic body-segments, while in other embodiments an engine assembly c900 may include more than two (e.g., multiple) monolithic bodies or monolithic body-segments.

One or more of the monolithic bodies and/or monolithic body-segments that make up an engine assembly may include one or more regenerator bodies and/or one or more chiller bodies. The one or more regenerator bodies may define a portion of another monolithic body or a portion of a monolithic body-segment. Alternatively, the one or more regenerator bodies may represent a monolithic body or monolithic body-segment, such as a monolithic body or monolithic body-segment insertable, inserted, operably couplable, or operably coupled to another monolithic body or monolithic body-segment. The one or more chiller bodies may define a portion of another monolithic body or a portion of a monolithic body-segment. Alternatively, the one or more chiller bodies may represent a monolithic body or monolithic body-segment, such as a monolithic body or monolithic body-segment insertable, inserted, operably couplable, or operably coupled to another monolithic body or monolithic body-segment.

The engine assemblies c900 shown in FIGS. 1.8.1A and 1.8.1C include two monolithic bodies or monolithic body-segments within which one or more piston assemblies c090 and one or more generator assemblies c092 may be enclosed. The embodiments shown in FIGS. 1.8.1A and 1.8.1C allow for the one or more piston assemblies c090 and one or more generator assemblies c092 to be enclosed within an engine assembly c900 upon operably coupling the first monolithic body to the second monolithic body, which may advantageously minimize assembly steps.

As shown in FIG. 1.8.1A, the first monolithic body may be separated from the second monolithic body at or about an axial location corresponding to an axial end of the one or more generator assemblies c092. The first portion of the engine body c050 (e.g., on the left-hand side as shown) may define one or more generator housings respectively configured to receive the one or more generator assemblies c092. The one or more generator assemblies c092 may be respectively installed in the one or more generator housings defined by the first portion of the engine body c050. The first portion of the engine body c050 may define a first set of one or more piston chambers c112 respectively configured to receive a first portion of the one or more piston assemblies c090. The first portion of the one or more piston assemblies c090 may be respectively installed in the one or more piston chambers c112 defined by the first portion of the engine body c050.

Additionally, or in the alternative, the second portion of the engine body c050 may define a second set of one or more piston chambers c112 respectively configured to receive a second portion of the one or more piston assemblies c090. The second portion of the one or more piston assemblies c090 may be respectively installed in the second set of the one or more piston chambers c112 defined by the second portion of the engine body c050. The second portion of the engine body c050 and the first portion of the engine body c050 may be operably coupled to one another, enclosing the one or more generator assemblies c092 and the one or more piston assemblies c090 therein.

As another example, as shown in FIG. 1.8.1C, the first monolithic body may be separated from the second monolithic body at or about a mid-point of the engine assembly c900. The first monolithic body (e.g., on the left-hand side as shown) may include a first portion of the engine body c050 configured to receive a first portion of the one or more generator assemblies c092, and the second monolithic body may include a second portion of the engine body c050 configured to receive a second portion of the one or more generator assemblies c092. One or more piston assemblies c090 and/or one or more generator assemblies c092 may be installed in the first and/or second portion of the engine body c050, and the two monolithic bodies or monolithic body-segments may be operably coupled to one another, enclosing the one or more generator assemblies c092 and the one or more piston assemblies c090 therein.

As shown in FIG. 1.8.1B, an engine assembly c900 may include a plurality of monolithic bodies or monolithic body-segments separated at or about locations corresponding to respective components of the engine assembly. Engine assemblies c900 configured in accordance with FIG. 1.8.1B may include separate monolithic bodies or monolithic body-segments respectively corresponding to respective elements of the engine assembly c900. For example, an engine assembly c900 may include a first monolithic body-segment (e.g., on the top left-hand side as shown) that includes a first heater body c100, a second monolithic body-segment that includes a first portion of an engine body c050 corresponding to a left-hand side of one or more piston assemblies c090, a third monolithic body-segment that includes a second portion of the engine body c050 corresponding to one or more generator assemblies c092, a fourth monolithic body-segment that includes a third portion of the engine body c050 corresponding to a right-hand side of the one or more piston assemblies c090, and a fifth monolithic body-segment that includes a second heater body c100. The first monolithic body-segment that includes the first heater body c100 may additionally include a portion of the engine body c050. Additionally, or in the alternative, the second monolithic body-segment that includes the second heater body c100 may include a portion of the engine body c050.

The second monolithic body-segment may define one or more regenerator bodies and/or one or more chiller bodies corresponding to the first heater body c100. Additionally, or in the alternative, one or more regenerator bodies and/or one or more chiller bodies corresponding to the first heater body c100 may be operably coupled or operably couplable to the second monolithic body-segment. The fourth monolithic body-segment may define one or more regenerator bodies and/or one or more chiller bodies corresponding to the second heater body c100. Additionally, or in the alternative, one or more regenerator bodies and/or one or more chiller bodies corresponding to the second heater body c100 may be operably coupled or operably couplable to the fourth monolithic body-segment.

The one or more generator assemblies c092 may be installed in one or more generator housing defined by the second portion of the engine body c050. A first portion of one or more piston assemblies c090 may be installed in a corresponding one or more piston chambers c112 defined by the first portion of the engine body c050 and/or a second portion of the one or more piston assemblies c090 may be installed in a corresponding one or more piston chambers c112 defined by the second portion of the engine body c050. The respective portions of the engine assembly c900 may be operably coupled to one another, enclosing the one or more generator assemblies c092 and the one or more piston assemblies c090 therein.

As shown in FIG. 1.8.1D, an engine assembly c900 may include a first monolithic body or monolithic body-segment that includes a first heater body c100 and a first portion of an engine body c050, a second monolithic body or monolithic body-segment that includes a second portion of an engine body c050, and a third monolithic body or monolithic body-segment that includes a second heater body c100 and a third portion of an engine body c050. The second portion of the engine body c050 may define one or more generator housings configured to receive one or more generator assemblies c092, and the first and second portions of the engine body c050 may respectively define one or more piston chambers c112 respectively configured to receive respective portions of the one or more piston assemblies c090. The one or more generator assemblies c092 may be installed in the one or more generator housings defined by the second portion of the engine body c050. A first portion of the one or more piston assemblies c090 may be installed in the one or more piston chambers c112 defined by first portion of the engine body c050 and/or a second portion of the one or more piston assemblies c090 may be installed in the one or more piston chambers defined by the third portion of the engine body c050. The respective monolithic bodies and/or monolithic body-segments may be operably coupled to one another, enclosing the one or more generator assemblies c092 and the one or more piston assemblies c090 therein.

The second monolithic body or monolithic body-segment may define one or more regenerator bodies and/or one or more chiller bodies corresponding to the first heater body c100. Additionally, or in the alternative, one or more regenerator bodies and/or one or more chiller bodies corresponding to the first heater body c100 may be operably coupled or operably couplable to the second monolithic body or monolithic body-segment.

The third monolithic body or monolithic body-segment may define one or more regenerator bodies and/or one or more chiller bodies corresponding to the second heater body c100. Additionally, or in the alternative, one or more regenerator bodies and/or one or more chiller bodies corresponding to the second heater body c100 may be operably coupled or operably couplable to the third monolithic body or monolithic body-segment.

As shown in FIG. 1.8.1E, an engine assembly c900 may include a first monolithic body or monolithic body-segment that includes a first heater body c100 and a first portion of an engine body c050, a second monolithic body or monolithic body-segment that includes a second portion of an engine body c050, a third monolithic body or monolithic body-segment that includes a third portion of an engine body c050, and a fourth monolithic body or monolithic body-segment that includes a second heater body c100 and a fourth portion of an engine body c050. The second portion of the engine body c050 may define one or more generator housings respectively configured to receive a first portion one or more generator assemblies c092. Additionally, or in the alternative, the third portion of the engine body c050 may define one or more generator housings respectively configured to receive a second portion of one or more generator assemblies c092. The second and third portions of the engine body c050 may additionally define at least a portion of one or more piston chambers c112 respectively configured to receive respective portions of the one or more piston assemblies c090. Additionally, or in the alternative, the first portion of the engine body c050 and/or the fourth portion of the engine body c050 may define at least a portion of one or more piston chambers c112 respectively configured to receive respective portions of the one or more piston assemblies c090. A first portion of the one or more generator assemblies c092 may be respectively installed in the one or more generator housings defined by the second portion of the engine body c050 and/or a second portion of the one or more generator assemblies c092 may be respectively installed in the one or more generator housings defined by the third portion of the engine body c050. A first portion of one or more piston assemblies c090 may be respectively installed in the one or more piston chambers c112 defined by the second portion of the engine body c050 and/or a second portion of the one or more piston assemblies c090 may be respectively installed in the one or more piston chambers c112 defined by the third portion of the engine body c050. A third portion of the one or more piston assemblies c090 may be respectively installed in the one or more piston chambers c112 defined by the first portion of the engine body c050 and/or a fourth portion of the one or more piston assemblies c090 may be respectively installed in the one or more piston chambers c112 defined by the fourth portion of the engine body c050. The respective monolithic bodies and/or monolithic body-segments may be operably coupled to one another, enclosing the one or more generator assemblies c092 and the one or more piston assemblies c090 therein.

As shown in FIG. 1.8.1F, an engine assembly c900 may include only one heater body c100. For example, an engine assembly c900 may include a first monolithic body or monolithic body-segment that includes a heater body c100 and a first portion of an engine body c050, a second monolithic body or monolithic body-segment that includes a second portion of an engine body c050, and a third monolithic body or monolithic body-segment that includes a third portion of an engine body c050. The second portion of the engine body c050 may define one or more generator housings respectively configured to receive one or more generator assemblies c092, and the first and second portions of the engine body c050 may respectively define one or more piston chambers c112 configured to receive respective portions of the one or more piston assemblies c090. The one or more generator assemblies c092 may be respectively installed in the one or more generator assemblies defined by the second portion of the engine body c050. A first portion of one or more piston assemblies c090 may be respectively installed in the one or more piston chambers c112 defined by the first portion of the engine body c050 and/or a second portion of the one or more piston assemblies c090 may be respectively installed in the one or more piston chambers c112 defined by the third portion of the engine body c050. The respective monolithic bodies and/or monolithic body-segments may be operably coupled to one another, enclosing the one or more generator assemblies c092 and the one or more piston assemblies c090 therein.

**In** some embodiments, it may be advantageous for the monolithic body or monolithic body-segment that defines a heater body c100 to also define the one or more regenerator bodies corresponding to the heater body. When the heater body c100 and corresponding one or more regenerator bodies respectively define a portion of the same monolithic body or monolithic body-segment, working-fluid pathways c110 defined by the heater body c110 may fluidly communicate with the corresponding one or more regenerator bodies while minimizing fluid couplings.

**In** some embodiments, it may be advantageous for a monolithic body or monolithic body-segment that defines one or more generator housing to also define one or more chiller bodies corresponding to the one or more generator assemblies c092 respectively corresponding to the one or more generator housings. For example, this may allow for cooling fluid pathways to be defined by such monolithic body or monolithic body-segment while minimizing fluid couplings associated with the one or more chiller bodies.

The monolithic bodies and/or monolithic body-segments depicted in FIGs. 1.8.1A through 1.8.1F may respectively reflect one or more additively manufactured monolithic bodies or additively manufactured monolithic body-segments. **In** some embodiments a monolithic body or a monolithic body-segment may be additively manufactured in a continuous process, such as to provide a single monolithic structure void of any seams, joints, or the like characteristic of separately fabricated components. Additionally, or in the alternative, a monolithic body or a monolithic body-segment may include a plurality of separately fabricated components, which may be formed using an additive manufacturing technology or other suitable fabrication technologies. For example, a heater body c100 and/or an engine c002 may additionally or alternatively include a plurality of components formed using a fabrication technology other than additive manufacturing, and such separately components may be operably coupled or operably couplable to one another and/or to one or more monolithic bodies and/or a monolithic body-segments. Other suitable fabrication technologies that may be used to manufacture various components of the presently disclosed heater bodies c100 and closed-cycle engines c002 include, without limitation, forming (e.g., rolling, stamping, joining, etc.), extruding (e.g., sheet extruding), subtractive manufacturing (e.g., machining, drilling, laser cutting, etc.), forging or casting, as well as a combination thereof, or any other manufacturing technology.

Still referring to FIGs. 1.8.1A through 1.8.1F, an exemplary engine assembly c900 may include a first heater body c902 and a first engine body c904. As shown, for example, in FIG. 1.8.1A a first monolithic body c908 may include a first heater body c902, a first engine body c904, a first piston body c916, and a first machine body c918. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 and a first machine body c918. The first piston body c916 may define at least a portion of a piston chamber c112. The piston chamber c112 may be configured to receive at least a portion of a piston assembly c090. The first machine body c918 may define at least a portion of a generator housing c919. The generator housing c919 may be configured to receive at least a portion of a load device c092. The first piston body c916 may define a third portion c920 of the first monolithic body c908 and/or a third portion c920 of the first engine body c904. The first machine body c918 may define a fourth portion c922 of the first monolithic body c908 and/or a fourth portion c922 of the first engine body c904.

The first heater body c902 and/or the first engine body c904 may include a first regenerator body c926 and/or a first chiller body c928. For example, the first piston body c916 may include a first regenerator body c926. The first heater body c902 and/or the first engine body c904 may additionally or alternatively include a first chiller body c928. The first regenerator body c926 may define a portion of the first piston body c916 or at least a portion of a monolithic body-segment operably coupled or operably couplable to the first piston body c916. Additionally, or in the alternative, the first chiller body c928 may define a portion of the first piston body c916 or at least a portion of a monolithic body-segment operably coupled or operably couplable to the first piston body c916. As shown, for example, in FIG. 1.8.1A, the first regenerator body c926 may define a fifth portion of the first monolithic body c908 and/or the first chiller body c928 may define a sixth portion of the first monolithic body c908.

Still referring to FIGS. 1.8.1A through 1.8.1F, an exemplary engine assembly c900 may additionally or alternatively include a second heater body c930 and/or a second engine body c932. As shown, for example, in FIG. 1.8.1A, the second heater body c930 may define a first portion c934 of a second monolithic body c936. The second engine body c932 may define a second portion c938 of the second monolithic body c936. The second monolithic body c936 may be operably coupled or operably couplable to the first monolithic body c908 and/or the first engine body c904.

As shown in FIG. 1.8.1A, the second engine body c932 may include a second piston body c944. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090. The second piston body c944 may be operably coupled or operably couplable to the first monolithic body c908 and/or the first the first engine body c904.

In some embodiments, the second piston body c944 may include a second regenerator body c952 and/or a second chiller body c954. For example, the second heater body c930 and/or the second engine body c932 may include a second regenerator body c952. The second heater body c930 and/or the second engine body c932 may additionally or alternatively include a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944. As shown, for example, in FIG. 1.8.1A, the second regenerator body c952 may define a fifth portion of the second monolithic body c936 and/or the second chiller body c928 may define a sixth portion of the second monolithic body c936. Additionally, or in the alternative, the second regenerator body c952 and/or the second chiller body c954 may define a monolithic body-segment operably coupled or operably couplable to the second monolithic body c936.

Now referring to FIG. 1.8.1B, in some embodiments, an engine assembly c900 may include a plurality of monolithic body-segments. For example, as shown in FIG. 1.8.1B, an engine assembly may include a first heater body c902, a first engine body c904, a second heater body c940, a second engine body c942, and a third engine body c960. As shown, a first heater body c902 may define at least a portion of a first monolithic body-segment c912. The first engine body c904 may define at least a portion of a second monolithic body-segment c914. The first engine body c904 may include a first piston body c916, and the first piston body c916 may define at least a portion of the second monolithic body-segment c914. The first piston body c916 may define at least a portion of a piston chamber c112. The piston chamber c112 may be configured to receive at least a portion of a piston assembly c090. The second monolithic body-segment c914 (e.g., the first piston body c916) may be operably coupled or operably couplable to the first monolithic body-segment c912 (e.g., the first heater body c902). For example, the second monolithic body-segment c914 (e.g., the first engine body c904) may be operably coupled or operably couplable to the first heater body c902.

The first engine body c904 may include a first regenerator body c926 and/or a first chiller body c928. The first regenerator body c926 and/or the first chiller body c928 may define at least a portion of the second monolithic body-segment c914. Additionally, or in the alternative, the first regenerator body c926 and/or the first chiller body c928 may define a monolithic body-segment operably coupled or operably couplable to the first monolithic body c908 or the second monolithic body-segment c914.

Still referring to FIG. 1.8.1B, an exemplary engine assembly c900 may additionally or alternatively include a second heater body c930 and/or a second engine body c932. As shown, a second heater body c930 may define at least a portion of a fourth monolithic body-segment c940. Additionally, or in the alternative, a second engine body c932 may define at least a portion of a fifth monolithic body-segment c942. A second piston body c944 may define at least a portion of the fifth monolithic body-segment c942. The fifth monolithic body-segment c942 may be operably coupled or operably couplable to the fourth monolithic body-segment c940. For example, the fifth monolithic body-segment c942 (e.g., the second engine body c932 or the second piston body c944) may be operably coupled or operably couplable to the second heater body c930.

The second engine body c932 may include a second regenerator body c952 and/or a second chiller body c954.

The second regenerator body c952 and/or the second chiller body c954 may define at least a portion of the fifth monolithic body-segment c942. Additionally, or in the alternative, the second regenerator body c952 and/or the second chiller body c954 may define a monolithic body-segment operably coupled or operably couplable to the second monolithic body c936 or the fifth monolithic body-segment c942. **In** some embodiments, the second piston body c944 may include a second regenerator body c952 and/or a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944.

An exemplary engine assembly c900 may additionally or alternatively include a third engine body c960. The third engine body c960 may include a first machine body c918, and the first machine body c918 may define at least a portion of a third monolithic body-segment c924. The first machine body c918 may define at least a portion of a generator housing c919. The generator housing c919 may be configured to receive at least a portion of a load device c092. The third monolithic body-segment c924 (e.g., the first machine body c918) may be operably coupled or operably couplable to the second monolithic body-segment c914 (e.g., the first piston body c916).

Now referring to FIG. 1.8.1C, in some embodiments, an engine assembly c900 may include a plurality of monolithic bodies or monolithic body-segments, such as a first monolithic body or monolithic body-segment c908 defining a first heater body c902 and a first engine body c904, and a second monolithic body or monolithic body-segment c936 defining a second heater body c930 and a second engine body c932. A first monolithic body c908 may include a first heater body c902, a first engine body c904, a first piston body c916, and a first machine body c918. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 and a first machine body c918. The first piston body c916 may define a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090. The first machine body c918 may define a fourth portion c922 of the first monolithic body c908 and/or a fourth portion c922 of the first engine body c904. The first machine body c918 may define at least a portion of a generator housing c919. The generator housing c919 may be configured to receive at least a portion of a load device c092.

The first heater body c902 and/or the first engine body c904 may include a first regenerator body c926 and/or a first chiller body c928. For example, the first piston body c916 may include a first regenerator body c926. The first heater body c902 and/or the first engine body c904 may additionally or alternatively include a first chiller body c928. The first regenerator body c926 may define a portion of the first piston body c916 or at least a portion of a monolithic body-segment operably coupled or operably couplable to the first piston body c916. Additionally, or in the alternative, the first chiller body c928 may define a portion of the first piston body c916 or at least a portion of a monolithic body-segment operably coupled or operably couplable to the first piston body c916. The first regenerator body c926 may define a fifth portion of the first monolithic body c908 and/or the first chiller body c928 may define a sixth portion of the first monolithic body c908.

Still referring to FIG. 1.8.1C, an exemplary engine assembly c900 may additionally or alternatively include a second heater body c930 and/or a second engine body c932. The second heater body c930 may define a first portion c934 of a second monolithic body c936. The second engine body c932 may define a second portion c938 of the second monolithic body c936. The second monolithic body c936 may be operably coupled or operably couplable to the first monolithic body c908 and/or the first engine body c904.

The second engine body c932 may include a second piston body c944 and/or a second machine body c946. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090. The second machine body c946 may define a fourth portion c950 of the second monolithic body c936 and/or a fourth portion c950 of the second engine body c932. The second machine body c946 may define at least a portion of a generator housing c919. The generator housing c919 may be configured to receive at least a portion of a load device c092. **In** some embodiments, the first machine body c918 may define a first portion c956 of a generator housing c919 and the second machine body c946 may define a second portion c958 of the generator housing c919. The first portion c956 of the generator housing c919 may be operably coupled or operably couplable to the second portion c958 of the generator housing c919.

In some embodiments, the second piston body c944 may include a second regenerator body c952 and/or a second chiller body c954. For example, the second heater body c930 and/or the second engine body c932 may include a second regenerator body c952. The second heater body c930 and/or the second engine body c932 may additionally or alternatively include a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944. The second regenerator body c952 may define a fifth portion of the second monolithic body c936 and/or the second chiller body c928 may define a sixth portion of the second monolithic body c936. Additionally, or in the alternative, the second regenerator body c952 and/or the second chiller body c954 may define a monolithic body-segment operably coupled or operably couplable to the second monolithic body c936.

Now referring to FIG. 1.8.1D, in some embodiments, an engine assembly c900 may include a plurality of monolithic bodies or monolithic body-segments, such as a first monolithic body or monolithic body-segment c908 defining a first heater body c902 and a first engine body c904, a second monolithic body or monolithic body-segment c936 defining a second heater body c930 and a second engine body c932, and a third monolithic body or monolithic body-segment c962 defining a third engine body c960.

A first monolithic body c908 may include a first heater body c902, a first engine body c904, and a first piston body c916. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 defining a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090.

The first heater body c902 and/or the first engine body c904 may include a first regenerator body c926. For example, the first piston body c916 may include a first regenerator body c926 and/or a first chiller body c928. The first heater body c902 and/or the first engine body c904 may additionally or alternatively include a first chiller body c928. The first regenerator body c926 may define a portion of the first piston body c916 or at least a portion of a monolithic body-segment operably coupled or operably couplable to the first piston body c916. Additionally, or in the alternative, the first chiller body c928 may define a portion of the first piston body c916 or at least a portion of a monolithic body-segment operably coupled or operably couplable to the first piston body c916. The first regenerator body c926 may define a fifth portion of the first monolithic body c908 and/or the first chiller body c928 may define a sixth portion of the first monolithic body c908.

Still referring to FIGS. 1.8.1D, an exemplary engine assembly c900 may additionally or alternatively include a second heater body c930 and/or a second engine body c932. The second heater body c930 may define a first portion c934 of a second monolithic body c936. The second engine body c932 may define a second portion c938 of the second monolithic body c936.

The second engine body c932 may include a second piston body c944. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090.

In some embodiments, the second piston body c944 may include a second regenerator body c952 and/or a second chiller body c954. For example, the second heater body c930 and/or the second engine body c932 may include a second regenerator body c952. The second heater body c930 and/or the second engine body c932 may additionally or alternatively include a second chiller body c954. The second regenerator body c952 may define a portion of the second piston body c944 or at least a portion of a monolithic body-segment operably coupled or operably couplable to the second piston body c944. Additionally, or in the alternative, the second chiller body c954 may define a portion of the second piston body c944 or at least a portion of a monolithic body-segment operably coupled or operably couplable to the second piston body c944. The second regenerator body c952 may define a fifth portion of the second monolithic body c936 and/or the second chiller body c928 may define a sixth portion of the second monolithic body c936. Additionally, or in the alternative, the second regenerator body c952 and/or the second chiller body c954 may define a monolithic body-segment operably coupled or operably couplable to the second monolithic body c936.

As shown, for example, in FIGS. 1.8.1D, in some embodiments, an engine assembly c900 may include a third engine body c960. The third engine body c960 may define at least a portion of a third monolithic body or monolithic body-segment c962. As shown in FIGS. 1.8.1D, the third engine body c960 may be operably couplable to the first engine body c904 and/or the second engine body c932. The third engine body c960 may include a third machine body c964. The third machine body c964 may define a first portion c972 of the third monolithic body c962 or at least a portion of a monolithic body-segment. The third machine body c964 may define at least a portion of a generator housing c919. The generator housing c919 may be configured to receive at least a portion of a load device c092. The third machine body c964 may be operably coupled or operably couplable to the first engine body c904 and/or the second engine body c932.

Now referring to FIG. 1.8.1E, in some embodiments, an engine assembly c900 may include a plurality of monolithic bodies or monolithic body-segments, such as a first monolithic body or monolithic body-segment c908 defining a first heater body c902 and a first engine body c904, a second monolithic body or monolithic body-segment c936 defining a second heater body c930 and a second engine body c932, a third monolithic body or monolithic body-segment c962 defining a third engine body c960, and a fourth monolithic body or monolithic body-segment c978 defining a fourth engine body c976.

A first monolithic body c908 may include a first heater body c902, a first engine body c904, and a first piston body c916. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 defining a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090.

The first heater body c902 and/or the first engine body c904 may include a first regenerator body c926. For example, the first piston body c916 may include a first regenerator body c926. The first regenerator body c926 may define a portion of the first piston body c916 or at least a portion of a monolithic body-segment operably coupled or operably couplable to the first piston body c916. The first regenerator body c926 may define a fifth portion of the first monolithic body c908.

Still referring to FIG. 1.8.1E, an exemplary engine assembly c900 may additionally or alternatively include a second heater body c930 and/or a second engine body c932. The second heater body c930 may define a first portion c934 of a second monolithic body c936. The second engine body c932 may define a second portion c938 of the second monolithic body c936.

The second engine body c932 may include a second piston body c944. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090.

In some embodiments, the second piston body c944 may include a second regenerator body c952. For example, the second heater body c930 and/or the second engine body c932 may include a second regenerator body c952. The second regenerator body c952 may define a portion of the second piston body c944 or at least a portion of a monolithic body-segment operably coupled or operably couplable to the second piston body c944. The second regenerator body c952 may define a fifth portion of the second monolithic body c936 and/or. Additionally, or in the alternative, the second regenerator body c952 may define a monolithic body-segment operably coupled or operably couplable to the second monolithic body c936.

As shown in FIG. 1.8.1E, in some embodiments, an engine assembly c900 may include a third engine body c960 and a fourth engine body c976. The third engine body c960 may define at least a portion of a third monolithic body or monolithic body-segment c962. The third engine body c960 may be operably coupled or operably couplable to the first engine body c904 and/or the fourth engine body c976. The third engine body c960 may include a third machine body c964 and/or a third piston body c966. The third machine body c964 may define a first portion c972 of the third monolithic body c962 or at least a portion of a monolithic body-segment. The third piston body c966 may define a second portion c974 of the third monolithic body c962 or at least a portion of a monolithic body-segment. The third machine body c964 may be operably coupled or operably couplable to the fourth engine body c976 and/or the third piston body c966 may be operably coupled or operably couplable to the first engine body c904 (e.g., the first piston body c916).

The fourth engine body c976 may define at least a portion of a fourth monolithic body c978 or at least a portion of a monolithic body-segment operably coupled or operably couplable to the third engine body c960 and/or the second engine body c932. The fourth engine body c976 may include a fourth machine body c980 and/or a fourth piston body c982. The fourth machine body c980 may define a first portion c984 of the fourth monolithic body c978 or at least a portion of a monolithic body-segment. The fourth piston body c982 may define a second portion c986 of the fourth monolithic body c978 or at least a portion of a monolithic body-segment. The fourth machine body c980 may be operably coupled or operably couplable to the third engine body c960 (e.g., the third machine body c964) and/or the fourth piston body c982 may be operably coupled or operably couplable to the second engine body c932 (e.g., the second piston body c944). The third machine body c960 may define a first portion of a generator housing c919 and the fourth machine body c980 may define a second portion of the generator housing c919.

The first piston body c916 may be operably coupled or operably couplable to the third piston body c966. The first piston body c916 may define a first portion c968 of a first piston chamber c112 and the third piston body c966 may define a second portion c970 of the first piston chamber c112. The second piston body c944 may be operably coupled or operably couplable to the fourth piston body c982. The second piston body c944 may define a first portion c968 of a second piston chamber c112 and the fourth piston body c982 may define a second portion c970 of the second piston chamber c112.

The third piston body c966 may include the first chiller body c928 and/or the fourth piston body c982 may include the second chiller body c954. The first chiller body c928 may define at least a portion of the third monolithic body c962 or at least a portion of a monolithic body-segment operably coupled or operably couplable to the third piston body c966. The second chiller body c954 may define at least a portion of the fourth monolithic body c978 or at least a portion of a monolithic body-segment operably coupled or operably couplable to the fourth piston body c982.

Now referring to FIG. 1.8.1F, in some embodiments, an engine assembly c900 may include a plurality of monolithic bodies or monolithic body-segments, such as a first monolithic body or monolithic body-segment c908 defining a first heater body c902 and a first engine body c904, a second monolithic body or monolithic body-segment c936 defining a second engine body c932, and a third monolithic body or monolithic body-segment c962 defining a third engine body c960.

A first monolithic body c908 may include a first heater body c902, a first engine body c904, and a first piston body c916. The first heater body c902 may define a first portion c906 of a first monolithic body c908. The first engine body c904 may define a second portion c910 of the first monolithic body c908. Alternatively, the first heater body c902 may define at least a portion of the first monolithic body c908 and/or the first engine body c904 may define at least a portion c910 of a second monolithic body c936.

The first engine body c904 may include a first piston body c916 defining a third portion c920 of the first monolithic body c908 and/or a third portion c920 of the first engine body c904. The first piston body c916 may define at least a portion of a piston chamber c112. The piston chamber c112 may be configured to receive at least a portion of a piston assembly c090.

The first heater body c902 and/or the first engine body c904 may include a first regenerator body c926. For example, the first piston body c916 may include a first regenerator body c926. The first regenerator body c926 may define a portion of the first piston body c916 or at least a portion of a monolithic body-segment operably coupled or operably couplable to the first piston body c916. The first regenerator body c926 may define a fifth portion of the first monolithic body c908.

The second engine body c932 may define a second portion c938 of the second monolithic body c936. The second monolithic body c936 may be operably coupled or operably couplable to the third engine body c960.

The second engine body c932 may include a second piston body c944 and/or a second machine body c946. The second piston body c944 may define a third portion c948 of the second monolithic body c936 and/or a third portion c948 of the second engine body c932. The second piston body c944 may define at least a portion of a piston chamber c112. The piston chamber c112 may be configured to receive at least a portion of a piston assembly c090. The second machine body c946 may define a fourth portion c950 of the second monolithic body c936 and/or a fourth portion c950 of the second engine body c932. The second machine body c946 may define at least a portion of a generator housing c919. The generator housing c919 may be configured to receive at least a portion of a load device c092. In some embodiments, the first machine body c918 may define a first portion c956 of a generator housing c919 and the second machine body c946 may define a second portion c958 of the generator housing c919. The first portion c956 of the generator housing c919 may be operably coupled or operably couplable to the second portion c958 of the generator housing c919.

The third engine body c960 and a fourth engine body c976. The third engine body c960 may define at least a portion of a third monolithic body or monolithic body-segment c962. The third engine body c960 may be operably coupled or operably couplable to the first engine body c904 and/or the fourth engine body c976. The third engine body c960 may include a third machine body c964 and/or a third piston body c966. The third machine body c964 may define a first portion c972 of the third monolithic body c962 or at least a portion of a monolithic body-segment. The third piston body c966 may define a second portion c974 of the third monolithic body c962 or at least a portion of a monolithic body-segment. The third machine body c964 may be operably coupled or operably couplable to the fourth engine body c976 and/or the third piston body c966 may be operably coupled or operably couplable to the first engine body c904 (e.g., the first piston body c916). The first piston body c916 may be operably coupled or operably couplable to the third piston body c966. The first piston body c916 may define a first portion c968 of a first piston chamber c112 and the third piston body c966 may define a second portion c970 of the first piston chamber c112. The third piston body c966 may include the first chiller body c928. The first chiller body c928 may define at least a portion of the third monolithic body c962 or at least a portion of a monolithic body-segment operably coupled or operably couplable to the third piston body c966.

Referring back to FIG. 1.8.1E and FIG. 1.8.1F, in addition to FIG. 1.8.1G and FIG. 1.8.1H, in certain embodiments, the engine assembly c900 defines a thermal break c901 positioned between the first regenerator body c926 and the first chiller body c928. In various embodiments such as provided herein, the thermal break c901 may be positioned at an interface of the first monolithic body c908 and monolithic body-segment c962. The thermal break c901 defines a region of the piston chamber c112 relative to a seal assembly A1018 at the piston assembly c090 configured to mitigate heat transfer between the expansion and compression spaces as the piston assembly c090 moves between extreme positions.

In various embodiments, the thermal break c901 is a space between the relatively hot regenerator body c926 and the relatively cold chiller body c928. In certain embodiments, the thermal break c901, or particularly a lateral dimension between the regenerator body c926 and the chiller body c928, corresponds to a thickness or lateral dimension (i.e., along the direction of articulation of the piston assembly c090 during operation) of the seal assembly a1018.

Referring particularly to FIGS. 1.8.1G and 1.8.1H, exemplary views of a piston a1011 of the piston assembly c090 at a bottom dead center (BDC, e.g., in FIGS. 1.8.1G) and a top dead center (TDC, e.g., in 1.8.1H) are provided. In certain embodiments, the seal assembly A1018 is positioned at the piston a1011 of the piston assembly c090 such as to not extend past the thermal break c901 when the piston a1011 extends to one extreme position. For instance, in an embodiment in which the seal assembly a1018 is positioned distal to the first monolithic body c908 or the regenerator body c926, the seal assembly a1018 is positioned at the piston a1011 such as to not extend past the thermal break c901 when the piston assembly c090 is articulated to the TDC position. In some embodiments, the seal assembly a1018 is configured to not extend completely past the thermal break c901. It should be appreciated that in other embodiments, the seal assembly a1018 may be positioned proximate to the first monolithic body c908 or the regenerator body c926 such as to configure the seal assembly a1018 to not extend past the thermal break c901 when the piston assembly c090 is articulated to the BDC position.

Referring still to FIGS. 1.8.1G and FIG. 1.8.1H, in certain embodiments, the piston assembly c090 may include a second seal a1038 positioned proximate to the first monolithic body c908 or the regenerator body c926 relative to the seal assembly a1018. The second seal a1038 may generally define a discourager seal configured to mitigate fluid flow to or from a cavity a1019 positioned between the seal assembly a1018 and second seal a1038. The cavity a1019 is further defined between the piston a1011 and the surrounding walls of the piston chamber a112, such as walls defined by the first monolithic body c908 and the monolithic body-segment c962. The cavity a1019 may define an inter-seal dimension A1048 defined between the seal assembly a1018 and the second seal a1038. In particular embodiments, the inter-seal dimension a1048 is at least a dimension corresponding to a maximum stroke length of the piston assembly c090. As such, the second seal a1038 is configured to not extend past the thermal break c901 when the piston assembly c090 is articulated to the BDC position, such as depicted in FIG. 1.8.1G. Additionally, the seal assembly a1018 is configured to not extend past the thermal break c901 when the piston assembly c090 is articulated to the TDC position, such as depicted in FIG. 1.8.1H. In other embodiments, it should be appreciated that the second seal a1038 and the seal assembly a1018 may be reversed, such that the second seal a1038 is positioned proximate to the monolithic body-segment c962 and the seal assembly a1018 is positioned proximate to the monolithic body c908.

Various embodiments of the piston assembly c090 may position one or both of the seal assembly a1018 and the second seal a1038 such as to define the first portion c968 of the chamber as a region exposed to relatively hot working fluid, such as an expansion chamber a221. The piston assembly c090 may position one or both of the seal assembly a1018 and the second seal a1038 such as to define the second portion c970 of the chamber as a region exposed to relatively cold working fluid, such as a compression chamber a222. Particular positioning of the seal assembly a1018 and/or the second seal a1038 may allow for a separate or non-overlapping hot and cold region, such as depicted at first portion c968 (FIG. 1.8.1G) relative to the second portion c970 (FIG. 1.8.1H). The non-overlapping regions may allow for improved heat transfer, engine efficiency, power output, and/or component life by limiting heat transfer to and from the expansion chamber a221 and the compression chamber a222 as the piston assembly c090 moves between BDC and TDC positions.

Now referring to FIG. 1.8.2, an exemplary engine assembly c900 may include a one or more engine-working fluid heat exchanger bodies c988. The one or more engine-working fluid heat exchanger bodies c988 may define at least a portion of the first heater body c902 and/or at least a portion of the first engine body c904. A working-fluid heat exchanger body c988 may include a plurality of working-fluid pathways c110 fluidly communicating between a piston body and a regenerator body (e.g., between a first piston body c916 and a first regenerator body c926, or between a second piston body c944 and a second regenerator body c952). For example, an engine body c904 may include a first piston body c916, a first regenerator body c926, and a working-fluid heat exchanger body c988 that includes a plurality of working-fluid pathways c110 fluidly communicating between the first piston body c916 and the first regenerator body c926. The working-fluid heat exchanger body c988 may define at least a portion of the first heater body c902 and/or at least a portion of the first engine body c904. The working-fluid heat exchanger body c988 may additionally or alternatively include a heating chamber body c990.

In some embodiments, the first heater body c902 may define at least a portion of a first monolithic-body segment c912 and/or the first engine body c904 may define at least a portion of a second monolithic-body segment c914. The first heater body c902 may include at least a portion of the heating chamber body c990. The heating chamber body c990 may define at least a portion of the first monolithic body-segment c912. The second monolithic body-segment c914 may include at least a portion of the working-fluid heat exchanger body c988, at least a portion of the first piston body c916, and/or at least a portion of the first regenerator body c926. The working-fluid heat exchanger body c988 may define at least a portion of the second monolithic body-segment c914. The heating chamber body c990 may surround at least a portion of the working-fluid heat exchanger body c988. For example, the heating chamber body c990 may define at least a portion of a recirculation pathway c104 surrounding at least a portion of the working-fluid heat exchanger body c988. The heating chamber body c990 may fluidly communicate at an upstream portion (e.g., at a radially or concentrically inward portion) with a heating fluid inlet c992. For example, the heating chamber body c990 may fluidly communicate with a combustion chamber c102, such as with a combustion chamber outlet c412. The heating chamber body c990 may fluidly communicate at a downstream portion (e.g., at a radially or concentrically outward portion) with a heating fluid outlet c994. For example, the heating chamber body c990 may fluidly communicate with a recirculation annulus c208.

Referring again to FIGS. 1.8.1A through 1.8.1F, exemplary engine assemblies c900 may include one or more fuel injector bodies c401. An exemplary fuel injector body c401 may include one or more combustor caps c210. For example, an engine assembly c900 may include a first fuel injector body c401. The first fuel injector body c401 may include a first combustor cap c210 monolithically integrated with the first heater body c902. Alternatively, the first fuel injector body c401 may include a first combustor cap c210 operably coupled or operably couplable to the first heater body c902. Additionally, or in the alternative, an engine assembly c900 may include a second fuel injector body c401. The second fuel injector body may include a second combustor cap c210 monolithically integrated with the second heater body c930. Alternatively, the second fuel injector body c401 may include a second combustor cap c210 operably coupled or operably couplable to the second heater body c930. A first fuel nozzle c214 may be monolithically integrated with first combustor cap c210. Alternatively, a first fuel nozzle c214 may be operably coupled or operably couplable to the first combustor cap c210. Additionally, or in the alternative, a second fuel nozzle c214 may be monolithically integrated with second combustor cap c210. Alternatively, a second fuel nozzle c214 may be operably coupled or operably couplable to the second combustor cap c210. A first piston assembly c090 may be operably inserted or operably insertable into a first piston chamber c112 and/or a second piston assembly c090 may be operably inserted or operably insertable into a second piston chamber c112. A first load device c092 may be operably inserted or operably insertable into a first generator housing c919 and/or a second load device c092 may be operably inserted or operably insertable into a second generator housing c919.

Now turning to FIG. 1.8.3, exemplary methods of building an engine assembly c900 will be described. As shown in FIG. 1.8.3, an exemplary method c4000 may include, at block c4002, coupling a first monolithic body c908 or a first monolithic body-segment c912 to a second monolithic body c936 or a second monolithic body segment c914. The first monolithic body c908 or the first monolithic body-segment c914 may have been additively manufactured and/or the second monolithic body c936 or the second monolithic body-segment c914 may have been additively manufactured. The first monolithic body c908 or the first monolithic body-segment c912 may include a first heater body c902 and/or a first engine body c904. The second monolithic body c936 or the second monolithic body-segment c914 may include a second heater body c930 and/or a second engine body c932. The first monolithic body c908 or the first monolithic body-segment c912 may include a first piston assembly c090 and/or a first load device c092 installed therein. Additionally, or in the alternative, the second monolithic body c936 or the second monolithic body-segment c914 may include the first piston assembly c090 and/or the first load device c092 installed therein.

An exemplary method 1000 may include, at block c4004, additively manufacturing the first monolithic body c908 or the first monolithic body-segment c912. Additively manufacturing the first monolithic body c908 or the first monolithic body-segment c912 may include additively manufacturing the first heater body c902 and/or the first engine body c904. An exemplary method 1000 may include, at block c4006, installing the first piston assembly c090 and/or the first load device c092 in the first monolithic body c908 or the first monolithic body-segment c912. For example, the method 1000 may include installing the first piston assembly c090 in the first heater body c902 and/or in the first engine body c904. Additionally, or in the alternative, the method 1000 may include installing the first load device c092 in the first heater body c902 and/or in the first engine body c904.

An exemplary method 1000 may include, at block c4008, additively manufacturing the second monolithic body c936 or the second monolithic body-segment c914. Additively manufacturing the second monolithic body c936 or the second monolithic body-segment c914 may include additively manufacturing the second heater body c930 and/or the second engine body c932. An exemplary method 1000 may include, at block c4010, installing the first piston assembly c090 and/or the first load device c092 in the second monolithic body c936 or the second monolithic body-segment c914. For example, the method 1000 may include installing the first piston assembly c090 in the second heater body c930 and/or the second engine body c932. Additionally, or in the alternative, the method 1000 may include installing the first load device c092 in the second heater body c930 and/or the second engine body c932.

An exemplary method 1000 may include, at block c4012, additively manufacturing a first piston body c916. The first piston body c916 may define at least a portion of the first monolithic body c908 or at least a portion of the first monolithic body-segment c912. Additionally, or in the alternative, the first piston body c916 may define at least a portion of the second monolithic body c936 or at least a portion of the second monolithic body-segment c914. The exemplary method c4000 may additionally or alternatively include installing the first piston assembly c090 in the first piston body c916.

The exemplary method 1000 may additionally or alternatively include, at block c4014, additively manufacturing a first machine body c922. The first machine body c922 may define at least a portion of the first monolithic body c908 or at least a portion of the first monolithic body-segment c912. Additionally, or in the alternative, the first machine body c922 may define at least a portion of the second monolithic body c936 or at least a portion of the second monolithic body-segment c912. The exemplary method c4000 may additionally or alternatively include installing the first load device c092 in the first machine body c922.

The exemplary method 1000 may additionally or alternatively include, at block c4016, additively manufacturing a first regenerator body c926. The first regenerator body c926 may define at least a portion of the first monolithic body c908 or at least a portion of the first monolithic body-segment c912. Additionally, or in the alternative, the first regenerator body c926 may define at least a portion of the second monolithic body c936 or at least a portion of the second monolithic body-segment c912. The exemplary method c4000 may additionally or alternatively include installing the first regenerator body c926 in the first monolithic body c908 or at least a portion of the first monolithic body-segment c912.

The exemplary method 1000 may additionally or alternatively include, at block c4018, additively manufacturing a first chiller body c928. The first chiller body c928 may define at least a portion of the first monolithic body c908 or at least a portion of the first monolithic body-segment c912. Additionally, or in the alternative, the first chiller body c928 may define at least a portion of the second monolithic body c936 or at least a portion of the second monolithic body-segment c912. The exemplary method c4000 may additionally or alternatively include installing the first chiller body c928 in the first monolithic body c908 or at least a portion of the first monolithic body-segment c912.

As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components.

Although additive manufacturing technology is described herein as providing fabrication of complex objects by building objects point-by-point, layer-by-layer, typically in a vertical direction, other methods of fabrication are possible and are within the scope of the present subject matter. For example, although the discussion herein refers to the addition of material to form successive layers, one skilled in the art will appreciate that the methods and structures disclosed herein may be practiced with any additive manufacturing technique or manufacturing technology. For example, embodiments of the present disclosure may use layer-additive processes, layer-subtractive processes, or hybrid processes. As another example, embodiments of the present disclosure may include selectively depositing a binder material to chemically bind portions of the layers of powder together to form a green body article. After curing, the green body article may be presintered to form a brown body article having substantially all of the binder removed, and fully sintered to form a consolidated article.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Laser Sintering (DLS), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Laser Melting (DLM), Direct Selective Laser Melting (DSLM), Selective Laser Melting (SLM), Direct Metal Laser Melting (DMLM), Binder Jetting (BJ), and other known processes.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form or combinations thereof. More specifically, according to exemplary embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, and nickel or cobalt based superalloys (e.g., those available under the name Inconel® available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" or "binding" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process, or additionally with a binder process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed which have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An exemplary additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one exemplary embodiment, the three-dimensional design model is converted into a plurality of slices or segments, e.g., along a central (e.g., vertical) axis of the component or any other suitable axis. Each slice may define a thin cross section of the component for a predetermined height of the slice. The plurality of successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 $\mu$m and 200 $\mu$m, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 $\mu$m, utilized during the additive formation process.

In addition, utilizing an additive process, the surface finish and features of the components may vary as need depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer which corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

After fabrication of the component is complete, various post-processing procedures may be applied to the component. For example, post processing procedures may include removal of excess powder by, for example, blowing or vacuuming. Other post processing procedures may include a stress relief process. Additionally, thermal, mechanical, and/or chemical post processing procedures can be used to finish the part to achieve a desired strength, surface finish, a decreased porosity decreasing and/or an increased density (e.g., via hot isostatic pressing), and other component properties or features.

It should be appreciated that one skilled in the art may add or modify features shown and described herein to facilitate manufacture of the system A10 provided herein without undue experimentation. For example, build features, such as trusses, grids, build surfaces, or other supporting features, or material or fluid ingress or egress ports, may be added or modified from the present geometries to facilitate manufacture of embodiments of the system A10 based at least on a desired manufacturing process or a desired particular additive manufacturing process.

Notably, in exemplary embodiments, several features of the components described herein were previously not possible due to manufacturing restraints. However, the present inventors have advantageously utilized current advances in additive manufacturing techniques to develop exemplary embodiments of such components generally in accordance with the present disclosure. While certain embodiments of the present disclosure may not be limited to the use of additive manufacturing to form these components generally, additive manufacturing does provide a variety of manufacturing advantages, including ease of manufacturing, reduced cost, greater accuracy, etc.

In this regard, utilizing additive manufacturing methods, even multi-part components may be formed as a single piece of continuous metal, and may thus include fewer sub-components and/or joints compared to prior designs. The integral formation of these multi-part components through additive manufacturing may advantageously improve the overall assembly process, reduce potential leakage, reduce thermodynamic losses, improve thermal energy transfer, or provide higher power densities. For example, the integral formation reduces the number of separate parts that must be assembled, thus reducing associated time, overall assembly costs, reduces potential leakage pathways, or reduces potential thermodynamic losses. Additionally, existing issues with, for example, leakage, may advantageously be reduced. Still further, joint quality between separate parts may be addressed or obviated by the processes described herein, such as to desirably reduce leakage, assembly, and improve overall performance.

Also, the additive manufacturing methods described above provide much more complex and intricate shapes and contours of the components described herein to be formed with a very high level of precision. For example, such components may include thin additively manufactured layers, cross sectional features, and component contours. As another example, additive manufacturing may provide heat exchanger surface areas, volumes, passages, conduits, or other features that may desirably improve heat exchanger efficiency or performance, or overall engine or system performance. In addition, the additive manufacturing process provides the manufacture of a single component having different materials such that different portions of the component may exhibit different performance characteristics. The successive, additive steps of the manufacturing process provide the construction of these novel features. As a result, the components described herein may exhibit improved functionality and reliability.

### Chapter 1.9 -Exemplary Embodiments of the System and Engine

Closed-cycle engine arrangements, such as Stirling engines, generally define a ratio of power output in Watts to a product of mean average engine working fluid pressure in Pascals, swept volume of the engine working fluid in cubic meters, and engine cycle frequency in Hertz (i.e., operating frequency of a piston assembly), otherwise referred to as a Beale number. A maximum operating Beale number for Stirling engines, depending on operating temperature and engine performance, generally ranges between 0.05 and 0.15. Referring to embodiments of the system A10 shown and described herein, features, arrangements, ratios, or methods of manufacture and assembly shown and described herein as embodiments of the invention provide the engine A100 to define a first operating parameter in which the first operating parameter defines a maximum operational Beale number greater than or equal to 0.10. In another embodiment, the engine A100 defines a maximum operational Beale number greater than 0.15. In still another embodiment, the engine A100 defines a maximum operational Beale number greater than 0.20. In yet another embodiment, the engine A100 defines a maximum operational Beale number greater than 0.23. In various embodiments, the engine A100 defines a maximum operational Beale number less than or equal to 0.35. In still various embodiments, the engine A100 defines a maximum operational Beale number less than 0.30. In one embodiment, embodiments of the engine A100 shown and described herein define a maximum operational Beale number between 0.10 and 0.35, inclusive. In still various embodiments, the engine A100 defines a maximum operational Beale number between 0.15 and 0.30.

Embodiments of the system A10 and engine A100 provided herein provide greater Beale numbers via one or more of the features, arrangements, ratios, or methods of manufacture and assembly provided herein. Greater Beale numbers are provided at least in part via lower average engine working fluid pressure, lower engine cycle frequency of the piston assemblies A1010, or lower swept volume of the engine working fluid between fluidly connected chambers A221, A222, or combinations thereof, relative to the power output from the piston assembly A1010. Exemplary embodiments of the system A10 and engine A100 provided herein may produce a mechanical power output from the piston assembly A1010 up to 100 kilowatts (kW) or more.

Embodiments of the engine A100 provided herein may provide greater Beale numbers based at least in part on the plurality of heater conduits C110 collectively defining a desired heat transferability of thermal energy from the hot side heat exchanger C108 to the engine working fluid within the plurality of heater conduits C110. In various embodiments, the system A10 defines a ratio of maximum cycle volume of the engine working fluid to a collective volume of the plurality of heater conduits. The maximum cycle volume is the maximum volume of the engine working fluid within the expansion chamber A221, the compression chamber A222, and the fluid volume connected therebetween (e.g., the expansion chamber A221 of one piston body and the compression chamber A222 of another piston body connected by the walled conduit A1050). The minimum cycle volume is the minimum volume of the engine working fluid within the expansion chamber A221, the compression chamber A222, and the fluid volume connected therebetween (e.g., the expansion chamber A221 of one piston body and the compression chamber A222 of another piston body connected by the walled conduit A1050). The difference between the maximum cycle volume and the minimum cycle volume is the swept volume. In one embodiment, the ratio of maximum cycle volume of the engine working fluid to the volume of the passages within the plurality of heater conduits is between 2.5 and 25. For example, in various embodiments, the plurality of heater conduits together contain between two-fifths and one-twenty-fifth of the volume of the total volume of engine working fluid based on the maximum cycle volume. Stated differently, between two-fifths and one-twenty-fifth of the maximum cycle volume of the engine working fluid is receiving thermal energy from the hot side heat exchanger C108 during operation of the system A10.

In still various embodiments, embodiments of the engine A100 provided herein may provide greater Beale numbers based at least in part on a ratio of surface area of the plurality of heater conduits C110 versus volume of the working fluid within the plurality of heater conduits C110. For instance, the plurality of heater conduits may provide a range of surface area collectively within the plurality of heater conduits C110 relative to the volume of the engine working fluid within the plurality of heater conduits C110. The surface area may generally define the internal area of the heater conduits in direct fluid contact with the engine working fluid. In various embodiments, the ratio of surface area of the plurality of heater conduits to volume of the working fluid within the plurality of heater conduits is between 8 and 40. For example, in various embodiments, the plurality of heater conduits together defines a unit surface area within the conduits (i.e., surface area in fluid contact with the engine working fluid) between 8 and 40 times greater than a unit volume of the plurality of heater conduits.

In various embodiments, the internal surface area of the plurality of heater conduits is defined between a first opening and a second opening of the heater conduits C110. The first opening is in direct fluid communication with the expansion chamber A221, such as depicted at the piston chamber aperture C111 in FIG. 1.5.1. The second opening is in direct fluid communication with the walled conduit C1050, such as depicted at the opening C113 in FIG. 1.5.1. In one embodiment, the second opening is in direct fluid communication with the walled conduit C1050 including the regenerator body C800 defined therewithin. In another embodiment, the surface area of the plurality of heater conduits C110 defines an internal area of the heater conduits C110 corresponding to portions of the heater conduits C110 receiving thermal energy from the heater body C100. In another embodiment, the surface area of the plurality of heater conduits C110 defines an internal area of the heater conduits C110 extending from a first opening, such as defined at the plurality of piston apertures C111 in FIG. 1.5.1, to a first or proximal fin, tab, wall, or other feature of the fin array C1016 of the regenerator body C800 at the walled conduit C1050. In still another embodiment, such as an embodiment providing direct fluid communication of the heater conduits C110 to the chiller conduits A54, the second opening, such as depicted at opening C113 in FIG. 1.5.1., is in direct fluid communication with chiller collection chamber A62 or the chiller conduits A54. In various embodiments, the second opening, such as depicted at opening C113 in FIG. 1.5.1., is in direct fluid communication with the chiller collection chamber opening A60.

Embodiments of the engine A100 provided herein may provide greater Beale numbers based at least in part on the plurality of chiller conduits A54 collectively defining a desired heat transferability of thermal energy from the engine working fluid within the plurality of chiller conduits A54 to the cold side heat exchanger A42. In various embodiments, the system A10 defines a ratio of maximum cycle volume of the engine working fluid to a collective volume of the plurality of chiller conduits A54. In one embodiment, the ratio of maximum cycle volume of the engine working fluid to the volume of the plurality of chiller conduits A54 is between 10 and 100. For example, in various embodiments, the plurality of chiller conduits A54 together contain between one-tenth and one-hundredth of the volume of the total volume of engine working fluid based on the maximum cycle volume. Stated differently, between one-tenth and one-hundredth of the maximum cycle volume of the engine working fluid is transferring thermal energy to the cold side heat exchanger A42 during operation of the system A10.

**In** still various embodiments, embodiments of the engine provided herein may provide greater Beale numbers based at least in part on a ratio of surface area of the plurality of chiller conduits A54 versus volume of the working fluid within the plurality of chiller conduits A54. For instance, the plurality of chiller conduits A54 may particularly provide a range of surface area collectively within the plurality of chiller conduits A54 relative to the volume of the engine working fluid within the plurality of chiller conduits A54. **In** various embodiments, the ratio of surface area of the plurality of chiller conduits A54 to volume of the working fluid within the plurality of chiller conduits A54 is between 7 and 40. For example, in various embodiments, the plurality of chiller conduits A54 together defines a unit surface area within the conduits (i.e., surface area in fluid contact with the engine working fluid) between 7 and 40 times greater than a unit volume of the plurality of chiller conduits A54.

In various embodiments, the surface area of the chiller conduits A54 is defined from the chiller passage opening A58 to the chiller collection chamber opening A60. In one embodiment, the surface area of the chiller conduits A54 is the internal area within the chiller conduits A54 corresponding to the portion of the chiller conduits A54 at least partially surrounded by the chiller working fluid within the chiller working fluid passage A66 in thermal communication with the engine working fluid.

Various embodiments of the system A10 and engine A100 shown and described herein provide desired power outputs, power densities, or efficiencies, or combinations thereof, based on one or more elements, arrangements, flowpaths, conduits, surface areas, volumes, or assemblies, or methods thereof, provided herein. Efficiencies described herein may include $T_{Hot,engine}$ corresponding to temperature input to the engine working fluid at the heater conduits or working fluid pathways C110 from the hot side heat exchanger C108. Still various embodiments include $T_{Cold,ambient}$ corresponding to temperature removed from the engine working fluid at the chiller conduits A54 to the cold side heat exchanger A42. In other instances, the temperature input may alternatively correspond to heat or thermal energy input to the engine working fluid, such as from the heating working fluid. Still further, the temperature removed may alternatively correspond to heat or thermal energy output from the engine working fluid, such as to the chiller working fluid. In still various embodiments, the environment is the chiller working fluid into which the engine A100 rejects, exhausts, or otherwise releases heat or thermal energy from the engine working fluid at the chiller conduits A54.

In still yet various embodiments, efficiencies described herein may include $Q_{Out}$ corresponding to thermal energy received by the engine working fluid at the heater conduits or working fluid pathways C110 from the hot side heat exchanger C108. Still various embodiments include $Q_{In}$ corresponding to thermal energy received at the chiller working fluid at the chiller working fluid passage A56 at the cold side heat exchanger A42 from the engine working fluid at the chiller conduits A54.

In still another embodiment, $E_{out}$ is the net electrical energy output from the load device C092 that is operatively coupled to the engine A100 via the piston assembly C1010.

In various embodiments, the features, arrangements, surface areas, volumes, or ratios thereof provide the engine A100 to operate at higher efficiencies over known closed cycle engines, or Stirling engines particularly. Various embodiments of the system A10 provided herein may be configured to produce mechanical power output from the piston assembly A1010 at a Carnot efficiency $\eta_{Carnot}$ of up to approximately 80%. In some embodiments, the system A10 provided herein may be configured to produce mechanical power output from the piston assembly A1010 at an efficiency of up to approximately 80% in certain cold environments (e.g., space). In one embodiment, the Carnot efficiency corresponds to the thermal efficiency of the engine A100 receiving thermal energy or heat at the heater conduits C110 and expelling thermal energy or heat from the engine working fluid at the chiller conduits A54. In one embodiment, the Carnot efficiency corresponds at least to the engine A100 including the hot side heat exchanger C108 and the cold side heat exchanger A42, such as depicted at the engine level efficiency (FIG. 1.2.1).

Various embodiments of the system A10 provided herein may be configured to produce mechanical power output from the piston assembly A1010 at electrical efficiency of up to approximately 80%. In one embodiment, the electrical efficiency corresponds to the useful work generated by the engine A100 receiving heat or thermal energy from the heating working fluid and releasing heat or thermal energy to the chiller working fluid and converted into electrical energy via the load device C092, such as depicted within area A106 in FIG. 1.2.1. In one embodiment, the electrical efficiency corresponds at least to the system A10 including the engine A100, the heater body C100, and the chiller assembly A40, such as depicted at the system level efficiency (FIG. 1.2.1).

In one embodiment, the system A10 provides a temperature differential via the heater body C100 and the chiller assembly C40 in which the engine A100 generates mechanical power output between 1 kW and 100 kW relative to the piston assembly A1010. In another embodiment, the system A10 is configured to generate between 10 kW and 100 kW. In yet another embodiment, the system A10 is configured to generate between 25 kW and 100 kW. In yet another embodiment, the system A10 may be configured to produce greater than 100 kW. For example, the system A10 may include a plurality of the engine A100 operably coupled at two or more piston assemblies A1010 and the load device c092 to produce greater than 100 kW. In various embodiments, a plurality of the engine A100 may be operably coupled to produce up to 5 megawatts.

In still various embodiments, the engine A100 further defines a second operating parameter defining a ratio of mechanical power output from the piston assembly A1010 to maximum cycle volume of the working fluid between 0.0005 and 0.0040 kW per cubic centimeter (cc) for a given efficiency. In various embodiments, the ratio of mechanical power output from the piston assembly A1010 to maximum cycle volume of the working fluid is a range of maximum ratio at which the mechanical power output from the piston assembly A1010 to maximum cycle volume of the working fluid is defined. In some embodiments, the engine A100 defines a maximum ratio of mechanical power output from the piston assembly A1010 to maximum cycle volume of the working fluid between 0.0005 and 0.0040 kW generated from the piston assembly A1010 for one cubic centimeter of engine working fluid at an engine efficiency of at least 50%. Stated differently, between 0.0005 and 0.0040 kW is generated from the piston assembly A1010 for one cubic centimeter of engine working fluid at an engine efficiency of at least 50%. In various embodiments, the engine A100 defines a ratio of mechanical power output from the piston assembly A1010 to the maximum cycle volume of the working fluid between 0.0010 and 0.0030 kW/cc at an engine efficiency of at least 50%. In another embodiment, the engine A100 defines a ratio of mechanical power output from the piston assembly A1010 to the maximum cycle volume of the working fluid between 0.0015 and 0.0025 kW/cc at an engine efficiency of at least 50%. In one embodiment, the system A10 defines the ratio of mechanical power output from the piston assembly A1010 to maximum cycle volume of the working fluid between 0.0005 kW/cc and 0.0040 kW/cc at a Carnot efficiency of the engine of up to 80%. In another embodiment, the engine A100 defines the ratio of mechanical power output from the piston assembly A1010 to maximum cycle volume of the working fluid between 0.0005 kW/cc and 0.0040 kW/cc with an efficiency of the engine A100 of up to 60%.

Various embodiments of the system A10 shown and described herein provide a power density by efficiency that may be advantageous over certain power generation or energy conversion systems including engine and heat exchanger systems. In certain embodiments, the system A10 includes a third operating parameter defining a multiplication product of power density ($kW/m^3$) and system level efficiency greater than 51. For example, the power density is power output at the load device c092 over volume of the engine working fluid at the engine A100. In particular embodiments, the system A10 includes the power density over maximum cycle volume of the engine working fluid at the engine A100. In some embodiments, the system A10 includes a power density ($kW/m^3$) by efficiency greater than 100. In still other embodiments, the system A10 includes a power density ($kW/m^3$) by efficiency greater than 255. In various embodiments, the system A10 includes a power density ($kW/m^3$) by efficiency less than 400. In other embodiments, the system A10 includes a power density ($kW/m^3$) by efficiency less than 125. In still various embodiments, the system A10 includes a power density ($kW/m^3$) by efficiency between 51 and 400.

In still various embodiments, the engine A100 includes a fourth operating parameter at which one or more of the efficiencies and ratio of mechanical power output from the piston assembly A1010 to maximum cycle volume of the engine working fluid relative to a temperature differential of the engine working fluid at the expansion chamber A221 and the compression chamber A222. In one embodiment, the fourth operating parameter defines the temperature differential of the engine working fluid at the expansion chamber A221 ant he compression chamber A222 of at least 630 degrees Celsius. In one embodiment, the cold side heat exchanger A42 is configured to reduce the temperature of the engine working fluid at the chiller conduits A54 and/or compression chamber A222 less than 120 degrees Celsius. In another embodiment, the cold side heat exchanger A42 is configured to reduce the temperature of the engine working fluid at the chiller conduits A54 or compression chamber A222 to between approximately -20 degrees Celsius and approximately 120 degrees Celsius on average during steady-state full power operation. In still another embodiment, the cold side heat exchanger A42 is configured to reduce the temperature of the engine working fluid at the chiller conduits A54 or compression chamber A222 to between 20 degrees Celsius and approximately 120 degrees Celsius on average during steady-state full power operation. **In** yet another embodiment, the hot side heat exchanger C 108 is configured to heat the engine working fluid at the heater conduits C110 or expansion chamber A221 to at least 750 degrees Celsius. However, it should be appreciated that an upper limit of the heat provided to the hot side heat exchanger C108 or the expansion chamber A221 is based at least on materials limits, such as one or materials listed or described herein, or another suitable material for constructing the engine and/or system. Material limits may include, but are not limited to, a melting point, tensile stress, yield stress, deformation or deflection limits, or desired life or durability of the engine.

It should be appreciated that performances, power outputs, efficiencies, or temperature differentials at the system A10, the engine A100, or both, provided herein may be based on a "Sea Level Static" or "Standard Day" input air condition such as defined by the United States National Aeronautics and Space Administration, unless otherwise specified. For example, unless otherwise specified, conditions provided to the heater body, the chiller assembly, or both, or any subsystems, components, etc. therein, or any other portions of the system A10 receiving an input fluid, such as air, are based on Standard Day conditions.

The heat transfer relationships described herein may include thermal communication by conduction and/or convection. A heat transfer relationship may include a thermally conductive relationship that provides heat transfer through conduction (e.g., heat diffusion) between solid bodies and/or between a solid body and a fluid. Additionally, or in the alternative, a heat transfer relationship may include a thermally convective relationship that provides heat transfer through convection (e.g., heat transfer by bulk fluid flow) between a fluid and a solid body. It will be appreciated that convection generally includes a combination of a conduction (e.g., heat diffusion) and advection (e.g., heat transfer by bulk fluid flow). As used herein, reference to a thermally conductive relationship may include conduction and/or convection; whereas reference to a thermally convective relationship includes at least some convection.

A thermally conductive relationship may include thermal communication by conduction between a first solid body and a second solid body, between a first fluid and a first solid body, between the first solid body and a second fluid, and/or between the second solid body and a second fluid. For example, such conduction may provide heat transfer from a first fluid to a first solid body and/or from the first solid body to a second fluid. Additionally, or in the alternative, such conduction may provide heat transfer from a first fluid to a first solid body and/or through a first solid body (e.g., from one surface to another) and/or from the first solid body to a second solid body and/or through a second solid body (e.g., from one surface to another) and/or from the second solid body to a second fluid.

A thermally convective relationship may include thermal communication by convection (e.g., heat transfer by bulk fluid flow) between a first fluid and a first solid body, between the first solid body and a second fluid, and/or between a second solid body and a second fluid. For example, such convection may provide heat transfer from a first fluid to a first solid body and/or from the first solid body to a second fluid. Additionally, or in the alternative, such convection may provide heat transfer from a second solid body to a second fluid.

It will be appreciated that the terms "clockwise" and "counter-clockwise" are terms of convenience and are not to be limiting. Generally, the terms "clock-wise" and "counter-clockwise" have their ordinary meaning, and unless otherwise indicated refer to a direction with reference to a top-down or upright view. Clockwise and counter-clockwise elements may be interchanged without departing from the scope of the present disclosure.

Where temperatures, pressures, loads, phases, etc. are said to be substantially similar or uniform, it should be appreciated that it is understood that variations, leakages, or other minor differences in inputs or outputs may exist such that the differences may be considered negligible by one skilled in the art. Additionally, or alternatively, where temperatures or pressures are said to be uniform, i.e., a substantially uniform unit (e.g., a substantially uniform temperature at the plurality of chambers A221), it should be appreciated that in one embodiment, the substantially uniform unit is relative to an average operating condition, such as a phase of operation of the engine, or thermal energy flow from one fluid to another fluid, or from one surface to a fluid, or from one surface to another surface, or from one fluid to another surface, etc. For example, where a substantially uniform temperature is provided or removed to/from the plurality of chambers A221, A222, the temperature is relative to an average temperature over a phase of operation of the engine. As another example, where a substantially uniform thermal energy unit is provided or removed to/from the plurality of chambers A221, A222, the uniform thermal energy unit is relative to an average thermal energy supply from one fluid to another fluid relative to the structure, or plurality of structures, through which thermal energy transferred.

Various interfaces, such as mating surfaces, interfaces, points, flanges, etc. at which one or more monolithic bodies, or portions thereof, attach, couple, connect, or otherwise mate, may define or include seal interfaces, such as, but not limited to, labyrinth seals, grooves into which a seal is placed, crush seals, gaskets, vulcanizing silicone, etc., or other appropriate seal or sealing substance. Additionally, or alternatively, one or more of such interfaces may be coupled together via mechanical fasteners, such as, but not limited to, nuts, bolts, screws, tie rods, clamps, etc. **In** still additional or alternative embodiments, one or more of such interfaces may be coupled together via a joining or bonding processes, such as, but not limited to, welding, soldering, brazing, etc., or other appropriate joining process.

It should be appreciated that ratios, ranges, minimums, maximums, or limits generally, or combinations thereof, may provide structure with benefits not previously known in the art. As such, values below certain minimums described herein, or values above certain maximums described herein, may alter the function and/or structure of one or more components, features, or elements described herein. For example, ratios of volumes, surface area to volume, power output to volume, etc. below the ranges described herein may be insufficient for desired thermal energy transfer, such as to undesirably limit power output, efficiency, or Beale number. As another example, limits greater than those described herein may undesirably increase the size, dimensions, weight, or overall packaging of the system or engine, such as to undesirably limit the applications, apparatuses, vehicles, usability, utility, etc. in which the system or engine may be applied or operated. Still further, or alternatively, undesired increases in overall packaging may undesirably decrease efficiency of an overall system, application, apparatus, vehicle, etc. into which the engine may be installed, utilized, or otherwise operated. For example, although an engine may be constructed defining a similar or greater efficiency as described herein, such an engine may be of undesirable size, dimension, weight, or overall packaging such as to reduce an efficiency of the system into which the engine is installed. As such, obviation or transgression of one or more limits described herein, such as one or limits relative to features such as, but not limited to, heater conduits, chiller conduits A54, chamber volumes, walled conduit volumes, or operational temperatures, or combinations thereof, may undesirably alter such structures such as to change the function of the system or engine.

## CHAPTER 2 - **BALANCE OF PLANT**

In one aspect, example embodiments of a balance of plant for a prime power generator are provided. A balance of plant for a power generation system can be described as the supporting components and systems of the prime power generator of the system. In some embodiments, the prime power generator of the system can be any of the closed cycle engines provided herein. For instance, any of the embodiments of the balance of plant described herein can be employed with any of the Stirling engines provided herein. In other embodiments, the prime power generator can a solid oxide fuel cell. In further embodiments, the balance of plant embodiments described herein can be employed with any suitable prime power generator.

The balance of plant embodiments of the various power generation systems described herein can include various features for recovering heat generated by the prime power generator and utilizing the recovered heat in some useful way. For example, heat recovered from the prime power generator can be used to produce useful work. The useful work can be utilized to drive components of the balance of plant, such as compressors, pumps, blowers, etc. The recovered heat can also be recirculated to the prime power generator, e.g., to improve the efficiency thereof. Furthermore, in some embodiments, the useful work can cause one or more electric machines to generate electrical power. In addition, recovered heat can be provided to one or more thermal applications in thermal communication with components of the balance of plant. The one or more thermal applications can utilize the recovered heat in any suitable fashion. The provided heat can improve the efficiency of the one or more thermal applications.

In another aspect, various embodiments of Notarniocla cycle systems and components therefore are provided. Generally, the Notarnicola cycle systems described herein are operable to produce useful work. The so-called Notarnicola cycle systems operate on a Notarnicola cycle, or stated differently, on a constant density heat addition principle. For instance, the Notarnicola cycle systems described herein can include a constant density heat exchanger operable to hold a volume of working fluid at constant density during heat application. By applying heat to a working fluid held at constant density, the temperature and pressure of the working fluid can be increased and thus its potential energy can be increased as well. Advantageously, the increased potential energy of the working fluid can allow for an expansion device or the like to extract more useful work therefrom. In some embodiments, the Notarnicola cycle can include a Wrankel device, or constant density heat exchanger/expansion device, for producing and extracting useful work. The Notarnicola cycle system can be a bottoming-cycle for a closed cycle engine, such as any one of the engines described herein or as a standalone system for producing useful work and/or electrical power.

## Chapter 2.1 - Balance of Plant for Closed Cycle Engine

## Chapter 2.1.1 - Closed Cycle Engine in Thermal Balance of Plant with Topping-Cycle CHP

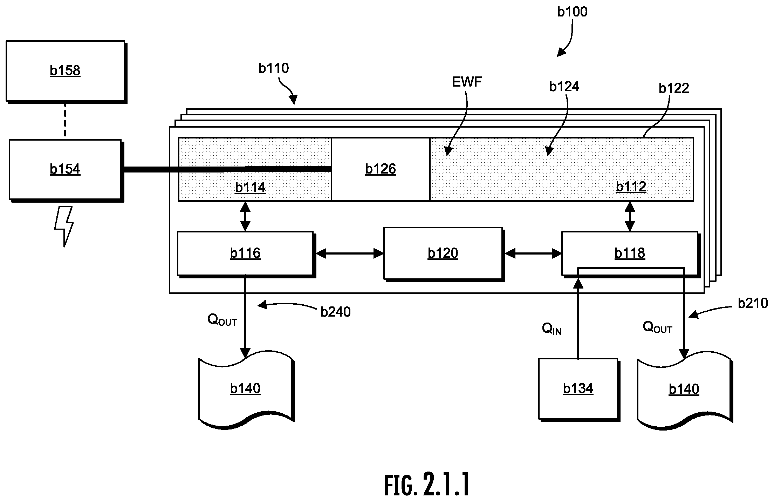

FIG. 2.1.1 provides a schematic view of a power generation system b100 according to an example embodiment of the present disclosure. More specifically, FIG. 2.1.1 provides a schematic view of a combined heat and power (CHP) or power generation system b100. The power generation system b100 is operatively configured to generate electrical power and thermal energy from a single fuel source or multiple fuel sources. Particularly, the power generation system b100 is operable to capture heat that would otherwise be emitted into an ambient environment during the electrical power generation process and redirect the captured heat for a useful purpose. Thus, the power generation system b100 of FIG. 2.1.1 is configured as a topping-cycle cogeneration system. The captured heat can be used for any suitable application, such as e.g., space heating, process steam, and/or other applications.

As depicted in FIG. 2.1.1, the power generation system b100 includes a closed cycle engine b110. The closed cycle engine b110 can be any of the closed cycle engines described herein. For instance, the closed cycle engine b110 can be one of the Stirling engines described herein. For this embodiment, the closed cycle engine b110 includes one or more piston assemblies b126 each movable within their respective piston bodies b122. Particularly, each piston assembly b126 is movable within a piston chamber b124 defined by their respective piston bodies b122. Additionally, the closed cycle engine b110 includes a regenerator b120, a hot side heat exchanger b118 operable to heat or impart thermal energy to the engine working fluid EWF within the piston bodies b122, and a cold side heat exchanger b116 operable to remove heat from the engine working fluid EWF within the piston bodies b122. Consequently, the closed cycle engine b110 generally defines a hot side b112 and a cold side b114. A heat source b134, such as e.g., solar, geothermal, a combustor b132, some combination thereof, etc., is operable to generate heat that can be provided to the hot side heat exchanger b118, e.g., via a heater loop b210. The heat generated by the heat source b134 can be imparted to the hot side b112 and ultimately to the engine working fluid EWF as denoted by $Q_{IN}$ in FIG. 2.1.1.

One or more electric machines b154 are operatively coupled with the closed cycle engine b110. For instance, each piston assembly b126 of the closed cycle engine b110 can have an electric machine b154 operatively coupled thereto. When the piston assemblies b126 are moved within their respective piston bodies b122, the one or more electric machines b154 can generate electrical power. The electric power generated by the one or more electric machines b154 can be provided to one or more electrical loads 158 in communication with the electric machines b154. For instance, the one or more electrical loads 158 can be a battery system, an electrical system connected thereto via the grid, or some other electrical load. Although the electric machine b154 is shown schematically in FIG. 2.1.1 and generally throughout Chapter 2 as being outside of or external to the closed cycle engine b110, it will be appreciated that the electric machine b154 provided in Chapter 2 can be configured in any suitable manner described herein. For instance, the electric machine b154 can be configured as shown in any of FIGS. 1.7.5, 1.7.6, 1.7.7, 1.7.8, etc. of Chapter 1.

As further depicted in FIG. 2.1.1, heat generated by the closed cycle engine b110 during electrical power generation is captured and provided to one or more thermal applications b140 of the power generation system b100. As one example, heat removed by the cold side heat exchanger b116 can be captured and provided to one or more thermal applications b140 in thermal communication with the cold side heat exchanger b116, as denoted by $Q_{OUT}$ in FIG. 2.1.1. For instance, relatively hot air or water can be removed from the cold side heat exchanger b116 and provided to the one or more thermal applications b140, e.g., via a chiller loop b240. Thus, in some embodiments, the cold side b114 of the closed cycle engine b110, and more particularly, the cold side heat exchanger b116, is in fluid communication with the one or more thermal applications b140. The captured heat can increase the efficiency of the thermal applications b140. As another example, heat generated by the heat source b134 and provided to the hot side heat exchanger b118 can be captured after being utilized to heat the hot side b112 of the closed cycle engine b110. The captured heat can be provided to one or more thermal applications b140 in thermal communication with the hot side heat exchanger b118, as denoted by $Q_{OUT}$ in FIG. 2.1.1. In some embodiments, the hot side b112 of the closed cycle engine b110, and more particularly, the hot side heat exchanger b118, is in fluid communication with the one or more thermal applications b140. The one or more thermal applications b140 in thermal communication with the cold side heat exchanger b116 and/or the hot side heat exchanger b118 can be any suitable thermal applications b140. For instance, the one or more thermal applications b140 can include a fluid heating device operable to heat air and/or water, such as e.g., a water heater appliance or a heating ventilation and air conditioning appliance. The thermal applications b140 can be residential and/or industrial thermal applications b140, for example.

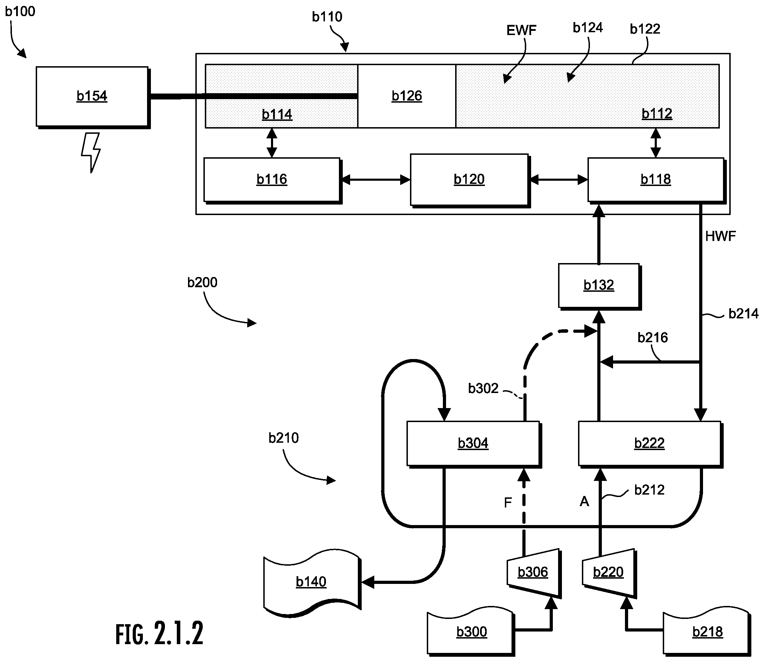

FIG. 2.1.2 provides a schematic view of a power generation system b100 according to an example embodiment of the present disclosure. As depicted in FIG. 2.1.2, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

For this embodiment, the closed cycle engine b110 includes a balance of plant b200 (i.e., supporting components and auxiliary systems of the closed cycle engine b110). The balance of plant b200 includes a heater loop b210 operable to impart thermal energy to the hot side heat exchanger b118. In turn, the hot side heat exchanger b118 can heat or impart thermal energy to the engine working fluid EWF within the piston bodies b122, thereby causing the engine working fluid EWF to expand and do work on the piston assembly b126, which causes the piston assembly b126 to move within the piston body b122.

As illustrated in FIG. 2.1.2, the heater loop b210 includes a compressor b220. The compressor b220 is positioned along an intake line b212 of the heater loop b210. The compressor b220 moves air (denoted by the "A" in FIG. 2.1.2) into the heater loop b210 from an air source b218 (e.g., an ambient environment) and pressurizes the air. That is, the compressor b220 compresses the incoming air, which causes the pressure of the incoming air to increase. In some embodiments, the compressor b220 is optional. Furthermore, in some embodiments, the compressor b220 moves a gas other than ambient air to the combustor b132, such as oxygen or an oxidizing gas. A recuperator b222 is positioned downstream of the compressor b220 along the intake line b212 of the heater loop b210 as well as along a heat recovery loop b214 of the heater loop b210. The air pressurized by the compressor b220 flows downstream to the recuperator b222 along the intake line b212 where the pressurized air is pre-heated by heating working fluid HWF (e.g., hot combustion gases) recovered from the closed cycle engine b110, or more particularly, from the hot side heat exchanger b118 of the closed cycle engine b110. As the pressurized and now pre-heated air flows downstream, the pressurized/pre-heated air combines or mixes with the heating working fluid HWF recirculated from the hot side heat exchanger b118, e.g., via a recirculation loop b216 of the heat recovery loop b214. In FIG. 2.1.2, the recirculation loop b216 is shown schematically, and it will be appreciated that the recirculation loop b216 can have many suitable configurations. For instance, the recirculation loop b216 can be configured as the eductor c116 described in Chapter 4.

The heated air mixes with fuel (denoted by the "F" in FIG. 2.1.2) and the fuel/air mixture is combusted in a combustor b132 or burner of the closed cycle engine b110. The combustion gases generated by the combustion process are provided to the hot side heat exchanger b118 via the intake line b212. The hot side heat exchanger b118 facilitates heat exchange between the heating working fluid HWF (e.g., hot combustion gases) and the working fluid within the piston body b122. The heat imparted to the working fluid creates a temperature differential between the hot side b112 and the cold side b114 of the closed cycle engine b110. The expansion and compression of the working fluid causes the piston assemblies b126 to move within their respective piston bodies b122, thereby producing useful work. The useful mechanical work can be converted into electrical power, e.g., by the one or more electric machines b154 operatively coupled with the piston assemblies b126.

After the heating working fluid HWF imparts thermal energy to the engine working fluid EWF within the piston body b122, the heating working fluid HWF is captured and directed downstream along the heat recovery loop b214 for further useful purposes. For instance, a portion of the heating working fluid HWF is recirculated via the recirculation loop b216 back to the combustor b132 and a portion of the heating working fluid HWF is used to impart thermal energy to the pressurized air passing through the recuperator b222. That is, a portion of the heating working fluid HWF is used to preheat the incoming pressurized air at the recuperator b222.

After flowing through the recuperator b222, in some embodiments, the heating working fluid HWF recovered from the hot side heat exchanger b118 continues downstream along the heat recovery loop b214 to a fuel preheater b304. The heating working fluid HWF can impart thermal energy to fuel flowing downstream along a fuel line 302 from a fuel source b300 (e.g., a fuel tank). For this embodiment, a fuel pump b306 is positioned along the fuel line 302 for moving the fuel (e.g., liquid fuel) from the fuel source b300 downstream along the fuel line 302. In this way, the fuel can be preheated prior to being mixed with the heated/pressurized air. Preheating the fuel prior to mixing with the heated/pressurized air can reduce the amount of fuel required for the same work output. After heat exchange at the fuel preheater b304, the heating working fluid HWF flows downstream along the heat recovery loop b214 of the heater loop b210 to one or more thermal applications b140 in fluid communication therewith. As noted above, the one or more thermal applications b140 in fluid communication with the hot side heat exchanger b118 can be any suitable thermal applications b140. For instance, the one or more thermal applications b140 can include a fluid heating device operable to heat air and/or water for building or other industrial use.

Notably, for this embodiment, the heat recovered from the hot side heat exchanger b118 is exchanged with the various elements along the heater loop b210 and the one or more thermal applications b140 noted above in an ordered manner to achieve high efficiency of the power generation system b100. For instance, for the depicted embodiment of FIG. 2.1.2, the heat or thermal energy generated by the combustor b132 is first used by the hot side heat exchanger b118 to heat the engine working fluid EWF within the piston body b122. Thereafter, the heating working fluid HWF can continue downstream. Some of the recovered combustion gases or heated working fluid HWF are directed back to the combustor b132 via the recirculation loop b216 (e.g., via the eductor c116 described in Chapter 4) and some of the combustion gases are directed to the recuperator b222 for pre-heating the compressed air, which also returns heat to the engine. Next, the hot combustion gases are used to pre-heat the fuel at the fuel preheater b304, thereby returning heat to the engine. Finally, the remaining useable heat is directed to the one or more thermal applications b140 positioned downstream of the fuel preheater b304.

In some embodiments, however, the heat generated by the combustor b132 can be used to heat all or only some of the elements described above. For instance, in some embodiments, the hot combustion gases generated by the combustor b132 can be passed through the hot side heat exchanger b118 to exchange heat with the engine working fluid EWF and then can be passed directly downstream to the one or more thermal applications b140. In other embodiments, the hot combustion gases generated by the combustor b132 can be passed through the hot side heat exchanger b118 to exchange heat with the engine working fluid EWF, a portion of the combustion gases can be recirculated to the combustor b132 via the recirculation loop b216, and the remaining portion of the combustion gases can be passed directly downstream to the one or more thermal applications b140. In further embodiments, the hot combustion gases generated by the combustor b132 can be passed through the hot side heat exchanger b118 to exchange heat with the engine working fluid EWF, a portion of the combustion gases can be recirculated to the combustor b132 via the recirculation loop b216, and the remaining portion of the combustion gases can be passed through the recuperator b222 to exchange heat with the incoming pressurized air and then can be passed directly downstream to the one or more thermal applications b140.

In yet other embodiments, the hot combustion gases generated by the combustor b132 can be passed through the hot side heat exchanger b118 to exchange heat with the engine working fluid EWF, a portion of the combustion gases can be recirculated to the combustor b132 via the recirculation loop b216, and the remaining portion of the combustion gases can be passed through the recuperator b222 to exchange heat with the incoming pressurized air, passed through the fuel preheater b304 to exchange heat with the incoming fuel, and then can be passed directly downstream to the one or more thermal applications b140. In some embodiments, additionally or alternatively to the heater loop b210 of FIG. 2.1.2, the hot side heat exchanger b118 can be in direct fluid communication with the one or thermal applications b140. A valve can be positioned along the direct line and can be controlled to selectively allow hot combustion gases to flow directly from the exit of the hot side heat exchanger b118 to the one or more thermal applications b140. In this way, if the thermal applications b140 require a preselected amount of thermal energy, the hot combustion gases can be directed directly thereto, e.g., for a predetermined time. In some embodiments, some or all of the heat exchange elements of the heater loop b210 and closed cycle engine b110 can be additively manufactured.

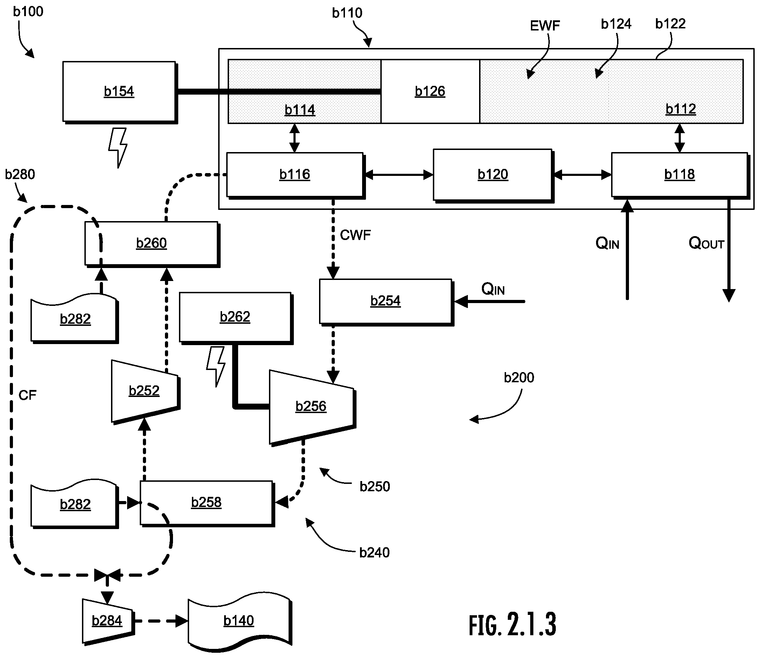

FIG. 2.1.3 provides a schematic view of another power generation system b100 according to an example embodiment of the present disclosure. As depicted in FIG. 2.1.3, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

For this embodiment, the closed cycle engine b110 includes a balance of plant b200. The balance of plant b200 includes a chiller loop b240 operable to remove heat or thermal energy from the cold side b114 of the closed cycle engine b110. Particularly, a chiller working fluid CWF can be passed through the cold side heat exchanger b116. The engine working fluid EWF can exchange heat with the relatively cool chiller working fluid CWF flowing through the cold side heat exchanger b116, and thus, the chiller working fluid CWF removes heat from the closed cycle engine b110 to provide cooling thereto, e.g., at the cold side b114. The cooled engine working fluid EWF facilitates compression thereof when the piston assembly b126 is moved toward the compression space by the expansion of the engine working fluid EWF at the other end of the piston assembly b126.

As illustrated in FIG. 2.1.3, the chiller loop b240 includes two linked loops, including a bottoming-cycle loop b250 and a cooling loop b280. The bottoming-cycle loop b250 or system is a recovered heat to power system. Particularly, a chiller working fluid CWF, such as e.g., a supercritical carbon dioxide or some other suitable low temperature working fluid, is moved through the bottoming-cycle loop b250 to remove heat from the compression space or cold side b114 of the engine (e.g., to increase the temperature differential between the expansion and compression spaces of the engine). Components of the bottoming-cycle loop b250 utilize the captured heat to generate electrical power. The cooling loop b280 is operable to cool certain components positioned along the bottoming-cycle loop b250. Specifically, a cooling fluid CF, such as e.g., ambient air or some other suitable heat-sink fluid, is moved through the cooling loop b280 and exchanges heat with the various components of the bottoming-cycle loop b250 to provide cooling thereto. The chiller loop b240 will be described in detail below.

For this embodiment, the bottoming-cycle loop b250 of the chiller loop b240 includes a pump b252 operable to move the chiller working fluid CWF along or through the bottoming-cycle loop b250. As noted above, the chiller working fluid CWF can be a supercritical carbon dioxide fluid or some other suitable low temperature working fluid. A fourth heat exchanger or precooler b260 is positioned downstream of the pump b252 along the bottoming-cycle loop b250. The precooler b260 is optional in some embodiments. The precooler b260 cools the chiller working fluid CWF as the chiller working fluid CWF flows therethrough. The cold side heat exchanger b116 (e.g., an evaporator) is positioned downstream of the precooler b260 along the bottoming-cycle loop b250. The cold side heat exchanger b116 is positioned in a heat exchange relationship with the compression space or cold side b114 of the closed cycle engine b110 as shown in FIG. 2.1.3. During operation of the closed cycle engine b110, the chiller working fluid CWF flowing through the cold side heat exchanger b116 picks up or removes heat from the engine working fluid EWF and walls of the piston body b122 at or proximate the compression space of the engine. That is, the engine working fluid EWF and walls at or proximate the compression space of the engine impart thermal energy to the chiller working fluid CWF flowing through the cold side heat exchanger b116. Accordingly, the compression space or cold side b114 of the engine acts as a first heat source and heat recovered therefrom can be utilized to generate electrical power, among other possible uses.

In some embodiments, optionally, the relatively hot chiller working fluid CWF flows downstream from the cold side heat exchanger b116 to a superheater b254 or second heat exchanger positioned along the bottoming-cycle loop b250. A second heat source b134, denoted by the $Q_{IN}$ in FIG. 2.1.3, can impart additional thermal energy to the chiller working fluid CWF flowing through the superheater b254. The second heat source b134 can be any suitable heat source b134, such as e.g., another working fluid, electric resistance or induction heating, heat from solar energy, some combination thereof, etc. In some embodiments, as will be explained in greater detail herein, the superheater b254 holds or contains the chiller working fluid CWF at constant density during heat application. In this way, in addition to increasing the temperature at the superheater b254, the pressure of the chiller working fluid CWF can be increased as well. This can increase the potential energy of the chiller working fluid CWF. In yet other embodiments, the superheater b254 is operatively configured to hold the chiller working fluid CWF at constant specific volume during heat application. In some other embodiments, the superheater b254 is operable to heat the chiller working fluid CWF flowing therethrough in any suitable manner.

An expansion device b256 is positioned downstream of the cold side heat exchanger b116 along the bottoming-cycle loop b250. In some embodiments, the expansion device b256 is immediately downstream of the cold side heat exchanger b116. In yet other embodiments, as noted above, the expansion device b256 is downstream of the cold side heat exchanger b116 but directly downstream of the superheater b254. The expansion device b256 can be a turbine, for example. The expansion device b256 can be operatively coupled with one or more elements of the chiller loop b240 and/or the heater loop b210. For instance, the expansion device b256 can be mechanically coupled with the pump b252 of the bottoming-cycle loop b250, the compressor b220 of the heater loop b210 (e.g., the compressor b220 of FIG. 2.1.2), and/or a fan b284 of the chiller loop b240, among other components. The expansion device b256 can be mechanically coupled with such components via one or more shafts or a shaft system. The expansion device b256 is operable to extract thermal energy from the chiller working fluid CWF to produce useful work such that electrical power can be generated and/or saved. Particularly, the expansion of the chiller working fluid CWF can drivingly rotate the expansion device b256 about its axis of rotation, which in turn drives one or more shafts and the components operatively coupled thereto. Moreover, when the shaft is driven by rotation of the expansion device b256, the useful work produced can be utilized by one or more electric machines b262 operatively coupled to the expansion device b256. In some embodiments, the one or more electric machines b262 are electric generators. In this way, the one or more electric machines b262 can generate electrical power when driven by the expansion device b256. The electrical power generated can be used to operate the various devices or components of the power generation system b100, such as e.g., fans, pumps, outside air conditioning units, onboard vehicle systems, among other potential uses, thereby increasing overall system electrical efficiency. In some embodiments, the one or more electric machines b262 are electric motors.

After expanding at the expansion device b256 to produce useful work such that electrical power can ultimately be generated, the chiller working fluid CWF flows downstream from the expansion device b256 to a third heat exchanger b258 positioned along the bottoming-cycle loop b250. The third heat exchanger b258 is positioned between the expansion device b256 and the pump b252 along the bottoming-cycle loop b250. The third heat exchanger b258 cools the chiller working fluid CWF before the chiller working fluid CWF flows downstream to the pump b252 where the chiller working fluid CWF is pumped or moved along the bottoming-cycle loop b250 once again.

As noted above, the chiller loop b240 includes the cooling loop b280 linked to the bottoming-cycle loop b250. As depicted in FIG. 2.1.3, the cooling fluid CF is introduced into the cooling loop b280 at the precooler b260 via a pressure differential. The cooling fluid CF can be moved from a fluid source b282 through the precooler b260. The relatively cool cooling fluid CF can pick up or remove heat from the chiller working fluid CWF flowing through the bottoming-cycle loop b250 at the precooler b260. That is, the chiller working fluid CWF of the bottoming-cycle loop b250 can impart thermal energy to the cooling fluid CF of the cooling loop b280 at the precooler b260. In addition, cooling fluid CF is introduced into the cooling loop b280 at the third heat exchanger b258 via a pressure differential. The cooling fluid CF can be moved from a fluid source b282 through the third heat exchanger b258. The relatively cool cooling fluid CF can pick up heat from the chiller working fluid CWF flowing through the bottoming-cycle loop b250 at the third heat exchanger b258. That is, the chiller working fluid CWF flowing along the bottoming-cycle loop b250 can impart thermal energy to the cooling fluid CF of the cooling loop b280 at the third heat exchanger b258. As illustrated in FIG. 2.1.3, the cooling fluid CF can flow downstream from the precooler b260 and downstream from the third heat exchanger b258 to a fan b284 positioned along the cooling loop b280. The fan b284 moves the relatively warm cooling fluid CF to one or more thermal applications b140 of the power generation system b100. The fan b284 can cause the pressure differential at the inlet of the precooler b260 and the inlet of the third heat exchanger b258 such that the cooling fluid CF is moved into the cooling loop b280 of the chiller loop b240. Thus, for the depicted embodiment of FIG. 2.1.3, the heat extracted from the cold side b114 of the closed cycle engine b110 is used by the bottoming-cycle loop b250 to generate electrical power and the remainder of the heat is directed to a thermal application of the power generation system b100 via the cooling loop b280, e.g., for hot water or air generation.

Moreover, in some embodiments, the fan b284 can be controlled by one or more controllers to control the mass flow through the cooling loop b280. In this way, the heat removed from the chiller working fluid CWF and the heat provided to the one or more thermal applications b140 can be controlled. The fan b284 can be modulated between an on and off position and/or modulated to various speeds for controlling the mass flow through the cooling loop b280. In addition, in some embodiments, the precooler b260 and the third heat exchanger b258 each have dedicated fans that can be controlled independently of one another.

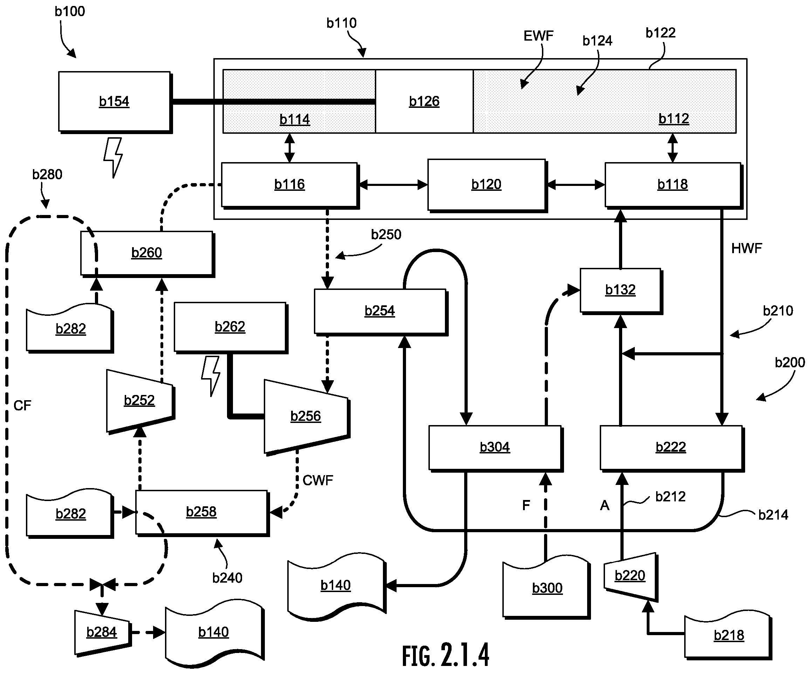

FIG. 2.1.4 provides a schematic view of yet another power generation system b100 according to an example embodiment of the present disclosure. As depicted in FIG. 2.1.4, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

Generally, the power generation system b100 of FIG. 2.1.4 combines the balance of plant b200 features of the embodiment of FIG. 2.1.2 and the embodiment of FIG. 2.1.3. Moreover, notably for this embodiment, the heater loop b210 is positioned at least in part in a heat exchange relationship with the chiller loop b240. Accordingly, as will be explained below, heat captured from the hot side b112 of the engine can be used as a heat source b134 for increasing the temperature of the chiller working fluid CWF flowing along the bottoming-cycle loop b250 to increase the potential energy thereof. In this way, more electrical power can be generated by the one or more electric machines b262 operatively coupled with the expansion device b256 of the chiller loop b240. The remainder of the recovered heat can be directed to one or more thermal applications b140. In addition, heat captured by the cooling cycle of the chiller loop b240 can be directed to the same or different one or more thermal applications b140. In some embodiments, the thermal applications b140 can be bottoming-cycles, e.g., having one or more components operable to produce further electrical power and/or useful work.

For this embodiment, the heater loop b210 includes a compressor b220 positioned along an intake line b212 of the heater loop b210. The compressor b220 moves air into the heater loop b210 from an air source b218 (e.g., an ambient environment) and pressurizes the air. A recuperator b222 is positioned downstream of the compressor b220 along the intake line b212 of the heater loop b210 as well as along a heat recovery loop b214 of the heater loop b210. The air pressurized by the compressor b220 flows downstream to the recuperator b222 along the intake line b212 where the pressurized air is pre-heated by hot combustion gases recovered from the closed cycle engine b110, or more particularly, from the hot side heat exchanger b118 of the closed cycle engine b110. As the pressurized and now pre-heated air flows downstream, the pressurized/pre-heated air combines or mixes with hot combustion gases recirculated from the hot side heat exchanger b118, e.g., via a recirculation loop b216 of the heat recovery loop b214.

The heated air mixes with fuel and the fuel/air mixture is combusted in a combustor b132 or burner of the closed cycle engine b110. The combustion gases generated by the combustion process are provided to the hot side heat exchanger b118 via the intake line b212. The hot side heat exchanger b118 facilitates heat exchange between the hot combustion gases and the working fluid within the piston body b122. The heat imparted to the engine working fluid EWF creates a temperature differential between the hot side b112 and the compression space (e.g., the cold side b114) of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases impart thermal energy to the working fluid within the piston body b122, the combustion gases are captured and directed downstream along the heat recovery loop b214 for further useful purposes. For instance, a portion of the combustion gases are recirculated via the recirculation loop b216 back to the combustor b132 and a portion of the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to the superheater b254 of the chiller loop b240. Thus, as noted above, the heater loop b210 is at least in part in a heat exchange relationship with the chiller loop b240. Particularly, for this embodiment, the heater loop b210 is at least in part in a heat exchange relationship with the chiller loop b240 at the superheater b254. The hot combustion gases heat or impart thermal energy to the chiller working fluid CWF flowing through the bottoming-cycle loop b250 at the superheater b254. In this way, the temperature of the chiller working fluid CWF is increased even further prior to expanding at the expansion device b256 downstream of the superheater b254. The increased potential energy of the chiller working fluid CWF allows the expansion device b256 to extract more useful work therefrom. Accordingly, more electrical power can be generated by the one or more electric machines b262 operatively coupled thereto.

After imparting thermal energy to the chiller working fluid CWF at the superheater b254, the combustion gases flow downstream along the heat recovery loop b214 to the fuel preheater b304. The combustion gases can impart thermal energy to fuel flowing downstream along a fuel line 302 from a fuel source b300 (e.g., a fuel tank) the fuel preheater b304. In this way, the fuel can be preheated prior to being mixed with the heated/pressurized air. Preheating the fuel prior to mixing with the heated/pressurized air can reduce the amount of fuel required for the same work output. After heat exchange at the fuel preheater b304, the combustion gases flow downstream along the heat recovery loop b214 of the heater loop b210 to one or more thermal applications b140 in fluid communication therewith. As noted above, the one or more thermal applications b140 in fluid communication with the hot side heat exchanger b118 can be any suitable thermal applications b140. For instance, the one or more thermal applications b140 can include a fluid heating device operable to heat air and/or water for building or other industrial use.

Notably, for this embodiment, the heat recovered from the hot side heat exchanger b118 is exchanged with the various elements along the heater loop b210 and the one or more thermal applications b140 noted above in an ordered manner to achieve high efficiency of the power generation system b100. For instance, for the depicted embodiment of FIG. 2.1.4, the thermal energy generated by the combustor b132 is first used by the hot side heat exchanger b118 to heat the working fluid within the piston body b122. Thereafter, the hot combustion gases continue downstream. Some of the recovered combustion gases are directed back to the combustor b132 via the recirculation loop b216 and some of the combustion gases are directed to the recuperator b222 for pre-heating the compressed air, which also returns heat to the engine. Next, the hot combustion gases are used to heat the chiller working fluid CWF flowing along the bottoming-cycle loop b250 at the superheater b254. The hot combustion gases are then used to pre-heat the fuel at the fuel preheater b304, thereby returning heat to the engine. Finally, the remaining useable heat is directed to the one or more thermal applications b140 positioned downstream of the fuel preheater b304.

The chiller loop b240 is similarly configured as described with reference to the embodiment of FIG. 2.1.3. Notably, as noted above, the heat source b134 that imparts thermal energy to the chiller working fluid CWF flowing through the bottoming-cycle loop b250 at the superheater b254 is the hot combustion gases flowing along the heat recovery loop b214 of the heater loop b210. Accordingly, heat recovered from the hot side b112 of the engine is utilized for electrical power generation. Furthermore, it will be appreciated that the various loops of the balance of plant b200 can be controlled by one or more controllers. Particularly, components of the heater loop b210, the chiller loop b240, including the bottoming-cycle loop b250 and the cooling loop b280, can be controlled in accordance with the desired output of the closed cycle engine b110, the electric machines b154, and the electric machines b262, as well as the thermal requirements of the thermal applications b140.

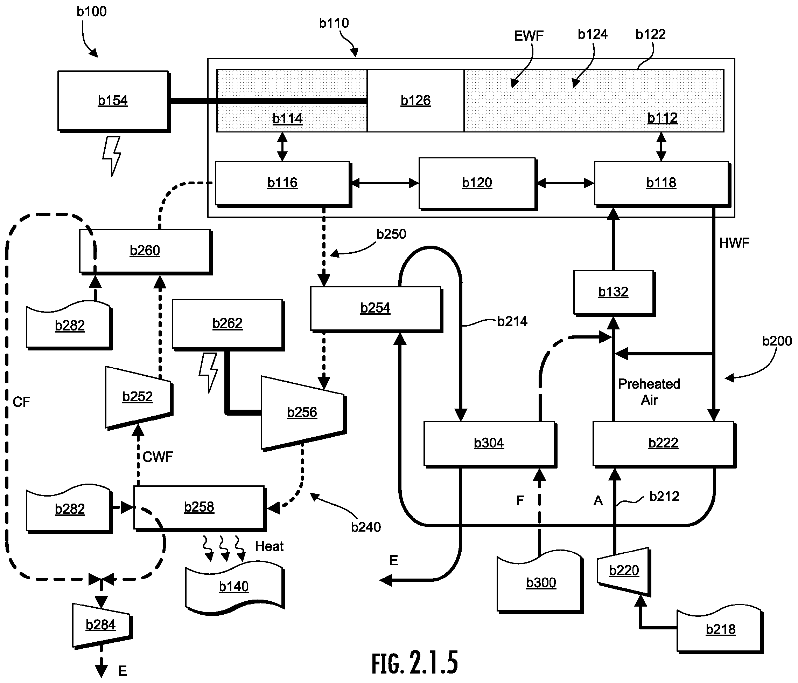

FIG. 2.1.5 provides a schematic view of another power generation system b100 according to an example embodiment of the present disclosure. The power generation system b100 of FIG. 2.1.5 is configured in a similar manner as the power generation system b100 of FIG. 2.1.4, except as provided below. For this embodiment, heat provided to the one or more thermal applications b140 is captured directly from the third heat exchanger b258 positioned along the bottoming-cycle loop b250 rather than from the cooling fluid CF used to cool the third heat exchanger b258. Accordingly, the one or more thermal applications b140 are in thermal communication with the third heat exchanger b258.

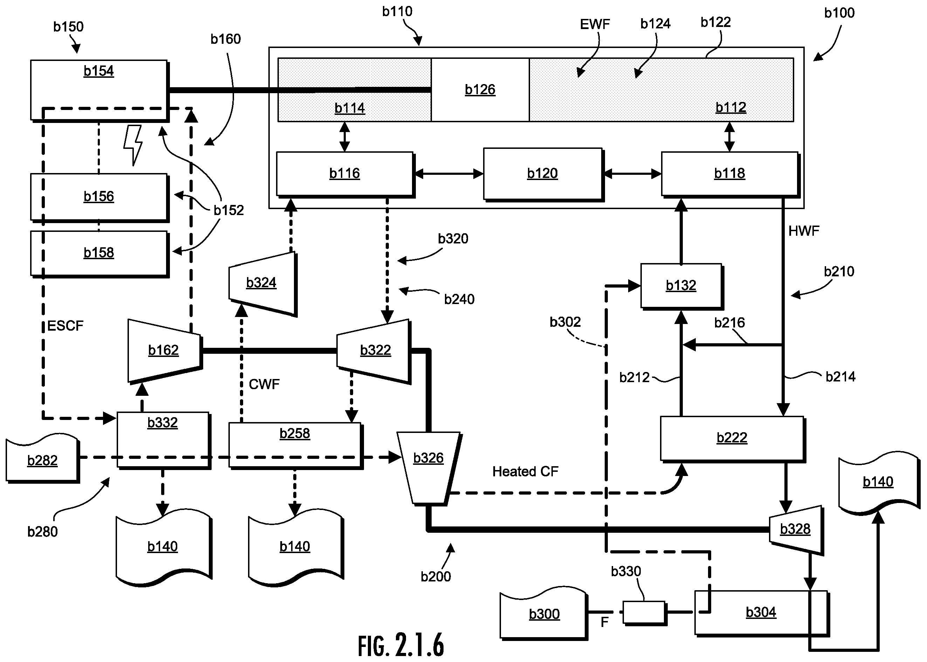

FIG. 2.1.6 provides a schematic view of a further example power generation system b100 according to an example embodiment of the present disclosure. For the illustrated embodiment of FIG. 2.1.6, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114.

Furthermore, as shown, the power generation system b100 includes one or more electric machines b154 operatively coupled with the piston assemblies b126. When the piston assemblies b126 are moved within their respective piston bodies b122, the electric machines b154 are operable to generate electrical power. One or more energy storage devices b156 are in communication with the electric machines b154. The one or more energy storages devices can be any suitable type of energy storage devices b156, such as e.g., batteries, super capacitors, etc. In some embodiments, the one or more energy storage devices b156 are configured to receive electrical power from the one or more electric machines b154. That is, power generated by the electric machines b154, e.g., during operation of the closed cycle engine b110, can be provided to the one or more energy storage devices b156. In some embodiments, additionally or alternatively, the one or more energy storage devices b156 are configured to provide electrical power to the one or more electric machines b154, e.g., during initialization of the closed cycle engine b110. As further depicted in FIG. 2.1.6, one or more electrical loads 158 are electrically connectable with the one or more energy storage devices b156. In some embodiments, additionally or alternatively, the one or more electrical loads 158 are directly electrically connectable with the one or more electric machines b154. The one or more electrical loads 158 are configured to receive electrical power from the one or more energy storage devices b156 and/or the electric machines b154. The one or more electrical loads 158 can be any suitable type or application of electrical load. For example, the electrical loads 158 can be one or more building electrical loads 158, the electrical systems of a vehicle, and/or a power grid.

As further depicted in FIG. 2.1.6, the power generation system b100 includes a balance of plant b200. The balance of plant b200 includes a heater loop b210 that includes various components for imparting thermal energy to the hot side b112 of the closed cycle engine b110. Moreover, for this embodiment, the balance of plant b200 includes a refrigeration loop b320 for cooling the cold side b114 of the closed cycle engine b110. That is, various components positioned along the refrigeration loop b320 are configured to actively cool the cold side b114 of the closed cycle engine b110. The balance of plant b200 also includes an electrical system cooling loop b160 positioned at least in part in a heat exchange relationship with the electrical components b152 of the power generation system b100 for removing heat therefrom. Heat captured from the electrical system cooling loop b160 can be provided to one or more thermal applications b140 and/or the heater loop b210, for example. The balance of plant b200 further includes a cooling loop b280 for cooling various components positioned along the refrigeration loop b320 and the electrical system cooling loop b160. The refrigeration loop b320, the electrical system cooling loop b160, the cooling loop b280, and the heater loop b210 will be described in detail below.

The refrigeration loop b320 is positioned at least in part in a heat exchange relationship with the cold side b114 of the closed cycle engine b110 for removing heat therefrom. The refrigeration loop b320 includes a compressor b322 operable to move a chiller working fluid CWF through or along the refrigeration loop b320. The chiller working fluid CWF can be any suitable type of cooling fluid, such as e.g., a suitable refrigerant. A heat exchanger b258 is positioned downstream of the compressor b322 along the refrigeration loop b320. Notably, the heat exchanger b258 is in a heat exchange relationship with a cooling loop b280. The working fluid flowing through the cooling loop b280 removes heat from the chiller working fluid CWF flowing through the refrigeration loop b320 at the heat exchanger b258. In this way, heat is removed from the chiller working fluid CWF. In addition, for this embodiment, the heat expelled from the heat exchanger b258 is directed to one or more thermal applications b140 of the power generation system b100.

An expander b324 or expansion device b256 is positioned along the refrigeration loop b320 downstream of the heat exchanger b258 and between the cold side heat exchanger b116 and the heat exchanger b258. The expander b324 is operable to expand the chiller working fluid CWF. Consequently, the expander b324 decreases the temperature and pressure of the chiller working fluid CWF. In some embodiments, the chiller working fluid CWF is cooled below a temperature of an ambient environment along at least a portion of the refrigeration loop b320, and particularly, the chiller working fluid CWF is cooled below an ambient temperature downstream of the expander b324 and upstream of the cold side heat exchanger b116 positioned along the refrigeration loop b320 downstream of the expander b324 and upstream of the compressor b322. The cold side heat exchanger b116 and the heat exchanger b258 are positioned on opposing sides of the refrigeration loop b320.

The cold side heat exchanger b116 is in a heat exchange relationship with the cold side b114 of the closed cycle engine b110 for removing heat therefrom. Particularly, as the chiller working fluid CWF flows through the cold side heat exchanger b116, heat from the closed cycle engine b110 imparts thermal energy to the chiller working fluid CWF. In this way, the cold side b114 of the closed cycle engine b110 is cooled. After removing heat from the closed cycle engine b110 at the cold side heat exchanger b116, the chiller working fluid CWF flows downstream to the compressor b322 where the chiller working fluid CWF is moved around the refrigeration loop b320 once again. Thus, for this embodiment, the refrigeration loop b320 is a closed cycle loop.

The electrical system cooling loop b160 is positioned at least in part in a heat exchange relationship with the one or more electrical components b152 of the power generation system b100 for removing heat therefrom. Particularly, for this example embodiment, the electrical system cooling loop b160 is in a heat exchange relationship with the electric machines b154, the energy storage devices b156, and the electrical loads 158. However, in other embodiments, the electrical system cooling loop b160 can be in a heat exchange relationship with one, some, or all of the electric machines b154, the energy storage devices b156, and the electrical loads 158. A pump b162 is positioned along the electrical system cooling loop b160 and is operable to move an electrical system cooling fluid ESCF through the electrical system cooling loop b160. The electrical system cooling fluid ESCF can be any suitable type of cooling fluid. The pump b162 is operatively coupled with the compressor b322, e.g., via one or more shafts or a shaft system.

As depicted, the pump b162 moves the electrical system cooling fluid ESCF downstream through the electrical system cooling loop b160. Particularly, as the electrical system cooling fluid ESCF is moved through the electrical system cooling loop b160, the electrical system cooling fluid ESCF picks up or removes heat from the electric machines b154, from the energy storage devices b156, and finally from the electrical loads 158 in communication with the energy storage devices b156. A heat exchange device or radiator b332 is positioned along the electrical system cooling loop b160 downstream of the electrical components b152 of the electric system and upstream of the pump b162. The radiator b332 is operable to expel heat from the electrical system cooling fluid ESCF. Moreover, for this embodiment, the heat expelled from the radiator b332 is directed to one or more thermal applications b140 of the power generation system b100. After heat is expelled from the electrical system cooling fluid ESCF at the radiator b332, the electrical system cooling fluid ESCF flows downstream to the pump b162 and is recirculated through the electrical system cooling loop b160.

The cooling loop b280 is positioned at least in part in a heat exchange relationship with the heat exchanger b258 for removing heat from the chiller working fluid CWF flowing through the refrigeration loop b320 and at least in part in a heat exchange relationship with the radiator b332 for removing heat from the electrical system cooling fluid ESCF flowing through the electrical system cooling loop b160. Particularly, as shown in FIG. 2.1.6, a blower b326 is positioned along the cooling loop b280. The blower b326 is operable to move a working fluid through the cooling loop b280. For instance, the blower b326 can move working fluid (e.g., ambient air) received from a fluid source b282 into and through the cooling loop b280. The blower b326 is operatively coupled with the compressor b322, which is in turn operatively coupled with the pump b162. For instance, the blower b326 can be operatively coupled with the compressor b322 via one or more shafts or a shaft system.

When the working fluid is moved through the cooling loop b280, the working fluid is moved through the radiator b332 positioned along the electrical system cooling loop b160. The relatively hot electrical system cooling fluid ESCF flowing along the electrical system cooling loop b160 imparts thermal energy to the relatively cool working fluid flowing through the cooling loop b280 at the radiator b332. Accordingly, the temperature of the working fluid flowing along the cooling loop b280 is increased by the relatively hot electrical system cooling fluid ESCF at the radiator b332.

The heat exchanger b258 of the refrigeration loop b320 is positioned downstream of the radiator b332 along the cooling loop b280. Thus, conversely, the radiator b332 is positioned along the cooling loop b280 upstream of the heat exchanger b258. After exchanging heat with the electrical system cooling fluid ESCF flowing along the electrical system cooling loop b160 at the radiator b332, the working fluid flows downstream to the heat exchanger b258 along the cooling loop b280. The relatively hot chiller working fluid CWF flowing along the refrigeration loop b320 imparts thermal energy to the relatively cool working fluid flowing through the cooling loop b280 at the heat exchanger b258. Accordingly, the temperature of the working fluid flowing along the cooling loop b280 is increased by the relatively hot chiller working fluid CWF at the heat exchanger b258. Moreover, for this embodiment, the blower b326 is positioned downstream of the radiator b332 and the heat exchanger b258 along the cooling loop b280. However, in other embodiments, the blower b326 can be positioned upstream of the radiator b332 and/or the heat exchanger b258 along the cooling loop b280.

After flowing through the heat exchanger b258, the heated working fluid flows downstream to the blower b326. The blower b326 compresses the heated working fluid and moves the heated working fluid to the heater loop b210 of the balance of plant b200. Particularly, the blower b326 increases the pressure of the heated working fluid and moves the heated and pressurized working fluid downstream to a recuperator b222 positioned along an intake line b212 of the heater loop b210. The recuperator b222 is positioned along a heat recovery loop b214 of the heater loop b210 as well. At the recuperator b222, the pressurized and heated working fluid is heated by hot combustion gases recovered from the closed cycle engine b110, or more particularly, from the hot side heat exchanger b118 of the closed cycle engine b110. Accordingly, the temperature of the pressurized working fluid is increased at the recuperator b222.

After passing through the recuperator b222, the working fluid flows downstream along the intake line b212 of the heater loop b210. As the working fluid flows downstream, the working fluid combines or mixes with hot combustion gases recirculated from the hot side heat exchanger b118, e.g., via a recirculation loop b216 of the heat recovery loop b214. In this manner, the temperature of the working fluid is increased once again prior to flowing to a combustor b132.

The heated working fluid mixes with fuel and the fuel/air mixture is combusted in the combustor b132. The combustion gases generated by the combustion process are provided to the hot side heat exchanger b118 via the intake line b212. The hot side heat exchanger b118 facilitates heat exchange between the hot combustion gases and engine working fluid EWF disposed within the piston bodies b122 of the closed cycle engine b110. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases impart thermal energy to the engine working fluid EWF within the piston bodies b122, the combustion gases are captured and directed downstream along the heat recovery loop b214 of the heater loop b210 for further useful purposes. For instance, a portion of the combustion gases are recirculated via the recirculation loop b216 back to the combustor b132 and a portion of the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to an expansion device, such as e.g., a turbine b328. The turbine b328 expands the hot combustion gases and extracts work therefrom. Particularly, the expanding hot combustion gases do work on the turbine b328 thus causing the turbine b328 to rotate about its axis of rotation. For this embodiment, the turbine b328 is operatively coupled with the blower b326 positioned along the cooling loop b280/heater loop b210, which is operatively coupled with the compressor b322 positioned along the refrigeration loop b320, which is in turn operatively coupled with the pump b162 positioned along the electrical system cooling loop b160. The turbine b328 is operatively coupled with the blower b326, compressor b322, and pump b162 via a shaft system as depicted in FIG. 2.1.6. Accordingly, when the turbine b328 is driven about its axis of rotation, the turbine b328 in turn drivingly rotates the blower b326, compressor b322, and the pump b162.

After expansion at the turbine b328, the combustion gases flow downstream along the heat recovery loop b214 of the heater loop b210 to a fuel preheater b304 The combustion gases can impart thermal energy to fuel flowing along a fuel line 302 from a fuel source b300 (e.g., a fuel tank). In this way, the fuel can be preheated prior to being mixed with the working fluid, e.g., prior to or at the combustor b132. Preheating the fuel prior to mixing with the working fluid can reduce the amount of fuel required for the same work output of the closed cycle engine b110. A fuel control device b330 is positioned along the fuel line 302 for regulating or controlling the amount or mass flow of the fuel to the combustor b132.

After heat exchange at the fuel preheater b304, the combustion gases flow downstream along the heat recovery loop b214 of the heater loop b210 to one or more thermal applications b140 in fluid communication therewith. As noted above, the one or more thermal applications b140 in fluid communication with the hot side heat exchanger b118 can be any suitable thermal applications b140. For instance, the one or more thermal applications b140 can include a fluid heating device operable to heat air and/or water for building or other industrial use. The one or more thermal applications b140 in fluid communication with the heat recovery loop b214 can be the same or different thermal applications b140 as the thermal applications b140 in fluid communication with the electrical system cooling loop b160 via the radiator b332 and/or the thermal applications b140 in fluid communication with the refrigeration loop b320 via the heat exchanger b258.

## Chapter 2.1.2 - Closed Cycle Engine with Refrigerated Chiller loop

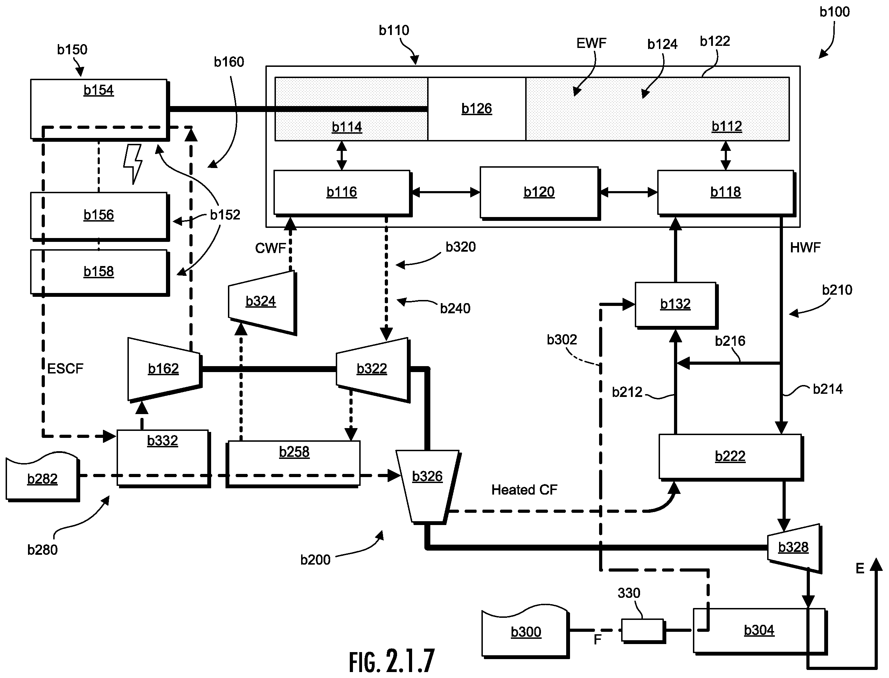

FIG. 2.1.7 provides a schematic view of a power generation system b100 according to an example embodiment of the present disclosure. The power generation system b100 of FIG. 2.1.7 is configured in a similar manner as the power generation system b100 of FIG. 2.1.6, except as provided below. For this embodiment, there are no thermal applications b140 in thermal communication with the radiator b332 or the heat exchanger b258. Furthermore, there is no one or more thermal applications b140 in thermal communication with the heat recovery loop b214 downstream of the fuel preheater b304. Rather, as depicted in FIG. 2.1.7, the hot combustion gases are exhausted downstream of the fuel preheater b304, e.g., to an ambient environment.

## Chapter 2.1.3 - Closed Cycle Engine BOP with WHR Electricity Generation

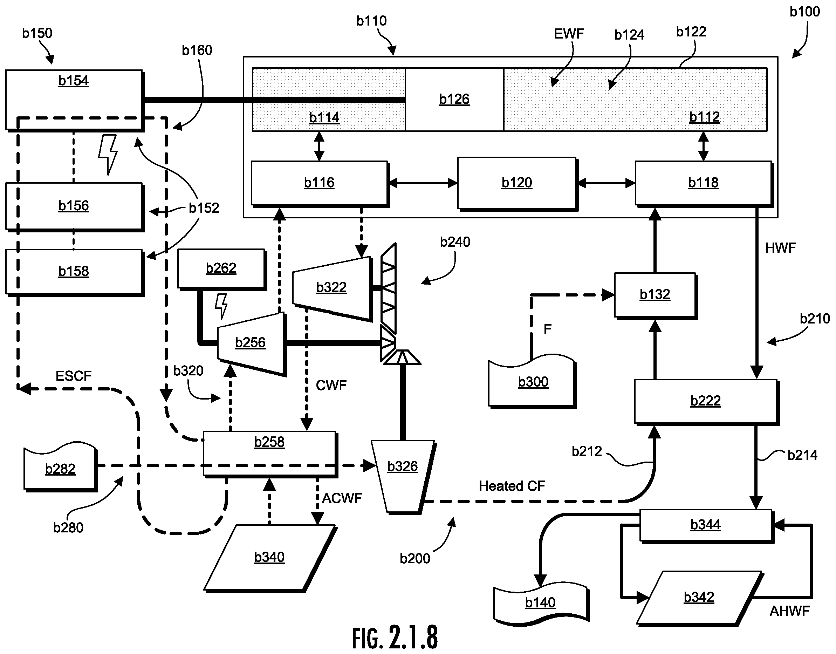

FIG. 2.1.8 provides a schematic view of a power generation system b100 according to an example embodiment of the present disclosure. For the illustrated embodiment of FIG. 2.1.8, the power generation system b100 includes a closed cycle engine b110. The closed cycle engine b110 can be the closed cycle engine b110 described above with reference to FIG. 2.1.1. Particularly, the closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114.

Furthermore, as shown, the power generation system b100 includes one or more electric machines b154 operatively coupled with the piston assemblies b126. When the piston assemblies b126 are moved within their respective piston bodies b122, the electric machines b154 are operable to generate electrical power. One or more energy storage devices b156 are in communication with the electric machines b154. The one or more energy storages devices can be any suitable type of energy storage devices b156, such as e.g., batteries, super capacitors, etc. In some embodiments, the one or more energy storage devices b156 are configured to receive electrical power from the one or more electric machines b154. That is, power generated by the electric machines b154, e.g., during operation of the closed cycle engine b110, can be provided to the one or more energy storage devices b156. In some embodiments, additionally or alternatively, the one or more energy storage devices b156 are configured to provide electrical power to the one or more electric machines b154, e.g., during initialization of the closed cycle engine b110. As further shown in FIG. 2.1.8, one or more electrical loads 158 are electrically connectable with the one or more energy storage devices b156. In some embodiments, additionally or alternatively, the one or more electrical loads 158 are directly electrically connectable with the one or more electric machines b154. The one or more electrical loads 158 are configured to receive electrical power from the one or more energy storage devices b156 and/or the electric machines b154. The one or more electrical loads 158 can be any suitable type or application of electrical load. For example, the electrical loads 158 can be one or more building electrical loads 158, the electrical systems of a vehicle, and/or a power grid.

As further depicted in FIG. 2.1.8, the power generation system b100 includes a balance of plant b200. The balance of plant b200 includes a heater loop b210 that includes various components for imparting thermal energy to the hot side b112 of the closed cycle engine b110. Moreover, for this embodiment, the balance of plant b200 includes a refrigeration loop b320 for cooling the cold side b114 of the closed cycle engine b110. That is, various components positioned along the refrigeration loop b320 are configured to actively cool the cold side b114 of the closed cycle engine b110. The balance of plant b200 also includes an electrical system cooling loop b160 positioned at least in part in a heat exchange relationship with the electrical components b152 of the power generation system b100 for removing heat therefrom. Heat captured from the electrical system cooling loop b160 can be provided to one or more thermal applications b140 and/or the heater loop b210, for example. The balance of plant b200 further includes a cooling loop b280 for cooling various components positioned along the refrigeration loop b320 and the electrical system cooling loop b160. The balance of plant b200 can also include an auxiliary cooling loop b340 for providing additional cooling to components positioned along the refrigeration loop b320 and an auxiliary heating loop b342 for providing additional heating to recovered heat being exhausted to one or more thermal applications b140 in thermal communication with the heat recovery loop b214 of the heater loop b210. The noted loops will be described in detail below.

The refrigeration loop b320 is positioned at least in part in a heat exchange relationship with the cold side b114 of the closed cycle engine b110 for removing heat therefrom. The refrigeration loop b320 includes a compressor b322 operable to move a chiller working fluid CWF through or along the refrigeration loop b320. The chiller working fluid CWF can be any suitable cooling fluid, such as e.g., a suitable refrigerant. A heat exchanger b258 is positioned downstream of the compressor b322 along the refrigeration loop b320. Notably, the heat exchanger b258 is in a heat exchange relationship with a cooling loop b280. The working fluid (e.g., ambient air) flowing through the cooling loop b280 removes heat from the chiller working fluid CWF flowing through the refrigeration loop b320 at the heat exchanger b258. In this way, heat is removed from the chiller working fluid CWF.

In addition, for this embodiment, the auxiliary cooling loop b340 is positioned at least in part in a heat exchange relationship with the heat exchanger b258. That is, the auxiliary cooling loop b340 is in thermal communication with the heat exchanger b258. The auxiliary cooling loop b340 is operable to cool the chiller working fluid CWF flowing along the refrigeration loop b320. For instance, for this embodiment, the relatively warm chiller working fluid CWF imparts thermal energy to an auxiliary cooling working fluid ACWF flowing along the auxiliary cooling loop b340. In this way, heat can be removed from the chiller working fluid CWF by both the auxiliary cooling working fluid ACWF flowing through the auxiliary cooling loop b340 and the cooling fluid CF flowing through the cooling loop b280 at the heat exchanger b258. The auxiliary cooling working fluid ACWF can be any suitable cooling fluid, such as e.g., ambient air, a refrigerant, etc.

An expansion device b256 is positioned along the refrigeration loop b320 downstream of the heat exchanger b258 and between the cold side heat exchanger b116 and the heat exchanger b258. For this embodiment, the expansion device b256 is a turbine. The expansion device b256 is operable to expand the chiller working fluid CWF. Consequently, the expansion device b256 decreases the temperature and pressure of the chiller working fluid CWF. In some embodiments, the chiller working fluid CWF is cooled below a temperature of an ambient environment along at least a portion of the refrigeration loop b320, and particularly, the chiller working fluid CWF is cooled below an ambient temperature downstream of the expansion device b256 and upstream of the cold side heat exchanger b116 positioned along the refrigeration loop b320 downstream of the expansion device b256 and upstream of the compressor b322. The cold side heat exchanger b116 and the third heat exchanger b258 are positioned on opposing sides of the refrigeration loop b320.

As depicted in FIG. 2.1.8, one or more electric machines b262 are operatively coupled with the expansion device b256 or turbine positioned along the refrigeration loop b320. When the chiller working fluid CWF is expanded by the expansion device b256, the expansion device b256 extracts work therefrom. Particularly, the expanding chiller working fluid CWF does work on the expansion device b256 thereby causing the expansion device b256 to rotate about its axis of rotation. When the expansion device b256 is rotated about its axis of rotation, the electric machines b262, operable as electric generators, generate electrical power. In this way, supplemental electrical power can be regenerated from heat extracted from the cold side b114 of the closed cycle engine b110. Moreover, for this embodiment, the turbine is operatively coupled with the compressor b322 positioned along the refrigeration loop b320 and a blower b326 positioned along the cooling loop b280/heater loop b210. The turbine is operatively coupled with the compressor b322 and blower b326 via a geared-shaft system as depicted in FIG. 2.1.8. Accordingly, when the turbine is driven about its axis of rotation, the turbine in turn drivingly rotates the compressor b322 and the blower b326. In some embodiments, however, the turbine is only operatively coupled with the one or more electric machines b262 for generating supplemental electrical power from the heat extracted from the cold side b114 of the closed cycle engine b110.

The cold side heat exchanger b116 is in a heat exchange relationship with the cold side b114 of the closed cycle engine b110 for removing heat therefrom. Particularly, as the chiller working fluid CWF flows through the cold side heat exchanger b116, heat from the closed cycle engine b110 imparts thermal energy to the chiller working fluid CWF. In this way, the cold side b114 of the closed cycle engine b110 is cooled. After removing heat from the closed cycle engine b110 at the cold side heat exchanger b116, the chiller working fluid CWF flows downstream to the compressor b322 where the chiller working fluid CWF is moved around the refrigeration loop b320 once again. Thus, for this embodiment, the refrigeration loop b320 is a closed cycle loop.

The electrical system cooling loop b160 is positioned at least in part in a heat exchange relationship with the one or more electrical components b152 of the power generation system b100 for removing heat therefrom. Particularly, for this example embodiment, the electrical system cooling loop b160 is in a heat exchange relationship with the electric machines b154, the energy storage devices b156, and the electrical loads 158. However, in other embodiments, the electrical system cooling loop b160 can be in a heat exchange relationship with one, some, or all of the electric machines b154, the energy storage devices b156, and the electrical loads 158. The electrical system cooling fluid ESCF can be any suitable type of cooling fluid.

When the electrical system cooling fluid ESCF is moved through the electrical system cooling loop b160, the electrical system cooling fluid ESCF picks up or removes heat from the electric loads b158, the energy storage devices b156, and the electric machines b154. The cooling fluid then flows downstream to the heat exchanger b258 such that heat is removed from the electrical system cooling fluid ESCF, e.g., by cooling fluid CF flowing through the cooling loop b280 and/or the auxiliary cooling fluid ACWF. Notably, for this embodiment, the electrical system cooling loop b160 is in a heat exchange relationship with the cooling loop b280 and the auxiliary cooling loop b340 at the heat exchanger b258. Similarly, the refrigeration loop b320 is in a heat exchange relationship with the cooling loop b280 and the auxiliary cooling loop b340 at the heat exchanger b258.

The cooling loop b280 is operatively configured to pick up or remove heat from the electrical system cooling loop b160 and the refrigeration loop b320. A blower b326 is positioned along the cooling loop b280 as shown in FIG. 2.1.8. The blower b326 is operable to move a cooling fluid CF through the cooling loop b280. For instance, the blower b326 can move the cooling fluid CF (e.g., ambient air) received from an fluid source b282 into and through the cooling loop b280. Particularly, the blower b326 can move the cooling fluid CF over or across the heat exchanger b258, e.g., for removing heat from the chiller working fluid CWF flowing along the refrigeration loop b320 and/or the electrical system cooling fluid ESCF flowing along the electrical system cooling loop b160. Particularly, the relatively hot chiller working fluid CWF flowing along the refrigeration loop b320 imparts thermal energy to the relatively cool cooling fluid CF flowing through the cooling loop b280 at the heat exchanger b258. Accordingly, the temperature of the cooling fluid CF flowing along the cooling loop b280 is increased by the relatively hot chiller working fluid CWF at the third heat exchanger b258. In addition, the relatively hot electrical system cooling fluid ESCF flowing along the electrical system cooling loop b160 imparts thermal energy to the relatively cool cooling fluid CF flowing through the cooling loop b280 at the heat exchanger b258. Consequently, the temperature of the cooling fluid CF flowing along the cooling loop b280 is increased by the relatively hot electrical system cooling fluid ESCF at the heat exchanger b258. The auxiliary cooling working fluid ACWF flowing through the auxiliary cooling loop b340 can also receive heat from the relatively hot chiller working fluid CWF flowing along the refrigeration loop b320 and the electrical system cooling fluid ESCF flowing along the electrical system cooling loop b160. As noted above, the blower b326 is operatively coupled with the turbine b256. Thus, the blower b326 is driven by the turbine b256, e.g., when the chiller working fluid CWF undergoes expansion.

After flowing through the heat exchanger b258, the now heated cooling fluid CF flows downstream to the blower b326. The blower b326 compresses the heated cooling fluid CF and moves the heated cooling fluid CF to the heater loop b210 of the balance of plant b200. Particularly, the blower b326 increases the pressure of the heated cooling fluid CF and moves the heated and pressurized cooling fluid CF downstream to a recuperator b222 positioned along an intake line b212 of the heater loop b210. The recuperator b222 is positioned along a heat recovery loop b214 of the heater loop b210 as well. At the recuperator b222, the pressurized and heated cooling fluid CF is heated by heating working fluid HWF (e.g., hot combustion gases) recovered from the closed cycle engine b110, or more particularly, from the hot side heat exchanger b118 of the closed cycle engine b110. Accordingly, the temperature of the pressurized cooling fluid CF is increased at the recuperator b222. In this embodiment, the cooling fluid CF flowing through the cooling loop b280 and into the intake line b212 of the heater loop b210 is air.

After passing through the recuperator b222, the cooling fluid CF flows downstream along the intake line b212 of the heater loop b210 to a combustor b132. The heated cooling fluid CF mixes with fuel and the fuel/air mixture is combusted in the combustor b132. The combustion gases generated by the combustion process are provided to the hot side heat exchanger b118 via the intake line b212. The hot side heat exchanger b118 facilitates heat exchange between the hot combustion gases and engine working fluid EWF disposed within the piston bodies b122 of the closed cycle engine b110.

The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases or heating working fluid HWF impart thermal energy to the engine working fluid EWF within the piston bodies b122, the combustion gases are captured and directed downstream along the heat recovery loop b214 of the heater loop b210 for further useful purposes. For instance, the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to a recovery heat exchanger b344. The auxiliary heating loop b342 is positioned at least in part in a heat exchange relationship with the recovery heat exchanger b344. That is, the auxiliary heating loop b342 is in thermal communication with the recovery heat exchanger b344. The auxiliary heating loop b342 is operable to heat the combustion gases or heating working fluid HWF flowing downstream along the heat recovery loop b214 of the heater loop b210. For instance, for this embodiment, the relatively hot auxiliary working fluid AHWF flowing along the auxiliary heating loop b342 imparts thermal energy to the combustion gases at the recovery heat exchanger b344. In this way, heat can be imparted to the combustion gases at the recovery heat exchanger b344. Particularly, heat can be imparted to the combustion gases at the recovery heat exchanger b344 prior to flowing downstream to one or more thermal applications b140 in fluid communication with the heat recovery loop b214. In this way, if the thermal application b140 positioned downstream along the heater loop b210 requires more heat than currently being provided by the combustion gases, the auxiliary heating loop b342 can be activated to provide additional heat to the combustion gases. Thus, the auxiliary heating loop b342 can be selectively controlled to heat the combustion gases, e.g., depending on the thermal requirements of the thermal applications b140 positioned downstream along the heater loop b210. The auxiliary working fluid AHWF flowing along the auxiliary heating loop b342 can be any suitable working fluid. In other embodiments, the combustion gases can be heated by any suitable heat source b134 prior to flowing downstream to the one or more thermal applications b140 of the power generation system b100.

Chapter 2.1.4 - Closed Cycle Engine with **WHR** Bottoming Cycle

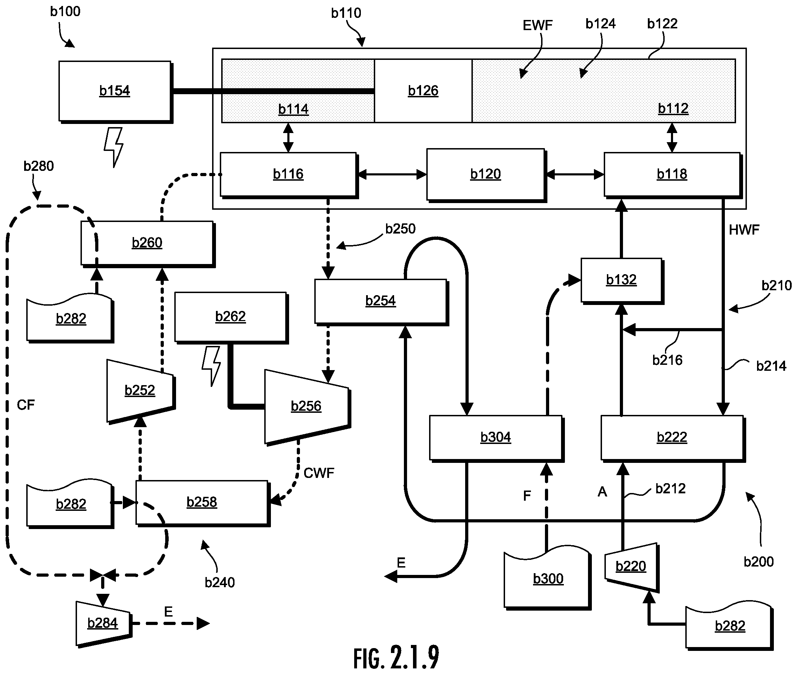

FIG. 2.1.9 provides a schematic view of a power generation system b100 according to an example embodiment of the present disclosure. Generally, the power generation system b100 of FIG. 2.1.9 includes a prime power generation system b100 and a balance of plant b200. The balance of plant b200 includes a heat recovery system to recover heat from the prime power generation system b100. Particularly, the heat recovery system operates a Rankine-based bottoming cycle to recover heat (e.g., engine exhaust) generated by the prime power generation system b100. The recovered heat can then be used in a useful way. For instance, the energy recovered by the heat recovery system can be used to "pay" for pumps and other accessories associated with the balance of plant b200 so such components do not rob the closed cycle engine b110 of efficiency. Further, in some embodiments, some or all of the balance of plant b200 components can be additively manufactured, e.g., by one or more of the additive manufacturing techniques described herein. In this way, the costs associated with manufacturing such components can minimized, particularly for relatively smaller mobile applications.

As depicted in FIG. 2.1.9, the prime power generation system b100 of the power generation system b100 is a closed cycle engine b110. The closed cycle engine b110 can be any of the closed cycle engines described herein. For instance, the closed cycle engine b110 can be one of the Stirling engines described herein. The closed cycle engine b110 includes one or more piston assemblies b126 each movable within their respective piston bodies b122. Additionally, the closed cycle engine b110 includes a regenerator b120, a hot side heat exchanger b118 operable to heat or impart thermal energy to the working fluid within the piston bodies b122, and a cold side heat exchanger b116 operable to remove heat from the working fluid within the piston bodies b122. Consequently, the closed cycle engine b110 generally defines a hot side b112 and a cold side b114. Furthermore, as shown, one or more electric machines b154 are operatively coupled with the piston assemblies b126. When the piston assemblies b126 are moved within their respective piston bodies b122, the electric machines b154 are operable to generate electrical power.

Generally, the power generation system b100 of FIG. 2.1.9 combines the balance of plant b200 features of the embodiment of FIG. 2.1.2 and the embodiment of FIG. 2.1.3, and thus, the power generation system b100 is configured in the same or similar manner as the embodiment of FIG. 2.1.4, except as provided below. Notably for this embodiment, the heater loop b210 of the balance of plant b200 is positioned at least in part in a heat exchange relationship with the chiller loop b240 of the balance of plant b200. Accordingly, as will be explained below, heat captured from the hot side b112 of the engine can be used as a heat source b134 for increasing the temperature of the chiller working fluid CWF flowing along the bottoming-cycle loop b250 to ultimately increase the potential energy thereof. In this way, more or supplemental electrical power can be generated by the one or more electric machines b262 operatively coupled with the expansion device b256 of the chiller loop b240. Additionally, heat can be captured from the hot side b112 of the engine and fed directly back to the engine or to one or more components for increasing the temperature of fuel and/or air flowing to the combustor b132.

For this embodiment, the heater loop b210 includes a compressor b220 positioned along an intake line b212 of the heater loop b210. The compressor b220 moves air into the heater loop b210 from an air source b218 (e.g., an ambient environment) and pressurizes the air. A recuperator b222 is positioned downstream of the compressor b220 along the intake line b212 of the heater loop b210 as well as along a heat recovery loop b214 of the heater loop b210. The air pressurized by the compressor b220 flows downstream to the recuperator b222 along the intake line b212 where the pressurized air is pre-heated by hot combustion gases recovered from the closed cycle engine b110, or more particularly, from the hot side heat exchanger b118 of the closed cycle engine b110. As the pressurized and now pre-heated air flows downstream, the pressurized/pre-heated air combines or mixes with hot combustion gases recirculated from the hot side heat exchanger b118, e.g., via a recirculation loop b216 of the heat recovery loop b214.

The heated air mixes with fuel and the fuel/air mixture is combusted in a combustor b132 or burner of the closed cycle engine b110. The combustion gases generated by the combustion process are provided to the hot side heat exchanger b118 via the intake line b212. The hot side heat exchanger b118 facilitates heat exchange between the hot combustion gases and the engine working fluid EWF within the piston body b122. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b154 operatively coupled with the piston assemblies b126.

After the relatively hot combustion gases impart thermal energy to the engine working fluid EWF within the piston body b122, the combustion gases are captured and directed downstream along the heat recovery loop b214 for further useful purposes. For instance, a portion of the combustion gases are recirculated via the recirculation loop b216 back to the combustor b132 and a portion of the combustion gases are used to impart thermal energy to the pressurized air passing through the recuperator b222. That is, a portion of the combustion gases are used to preheat the incoming pressurized air at the recuperator b222.

After flowing through the recuperator b222, the hot combustion gases recovered from the hot side heat exchanger b118 of the closed cycle engine b110 continue downstream along the heat recovery loop b214 to the superheater b254 of the chiller loop b240. Thus, as noted above, the heater loop b210 is at least in part in a heat exchange relationship with the chiller loop b240. Particularly, for this embodiment, the heater loop b210 is at least in part in a heat exchange relationship with the chiller loop b240 at the superheater b254. The hot combustion gases heat or impart thermal energy to the chiller working fluid CWF flowing through the bottoming-cycle loop b250 at the superheater b254. In this way, the temperature of the chiller working fluid CWF is increased even further prior to expanding at the expansion device b256 downstream of the superheater b254. The increased potential energy of the chiller working fluid CWF allows the expansion device b256 to extract more useful work therefrom. Accordingly, more electrical power can be generated by the one or more electric machines b262 operatively coupled with the expansion device b256.

After imparting thermal energy to the chiller working fluid CWF at the superheater b254, the combustion gases flow downstream along the heat recovery loop b214 to the fuel preheater b304. The combustion gases impart thermal energy to fuel flowing downstream along a fuel line 302 from a fuel source b300 (e.g., a fuel tank) at the fuel preheater b304. In this way, the fuel can be preheated prior to being mixed with the heated/pressurized air. Preheating the fuel prior to mixing with the heated/pressurized air can reduce the amount of fuel required for the same work output. After heat exchange at the fuel preheater b304, the combustion gases flow downstream along the heat recovery loop b214 of the heater loop b210 and are exhausted from the system.

Notably, for this embodiment, the heat recovered from the hot side heat exchanger b118 is exchanged with the various elements along the heater loop b210 in an ordered manner to achieve high efficiency of the power generation system b100. For instance, for the depicted embodiment of FIG. 2.1.9, the thermal energy generated by the combustor b132 is first used by the hot side heat exchanger b118 to heat the engine working fluid EWF within the piston body b122. Thereafter, the hot combustion gases continue downstream. Some of the recovered combustion gases are directed back to the combustor b132 via the recirculation loop b216 and some of the combustion gases are directed to the recuperator b222 for pre-heating the compressed air, which also returns heat to the engine. Next, the hot combustion gases are used to heat the chiller working fluid CWF flowing along the bottoming-cycle loop b250 at the superheater b254. The hot combustion gases are then used to pre-heat the fuel at the fuel preheater b304, thereby returning heat to the engine. Finally, the combustion gases are exhausted from the system.

The chiller loop b240 of the balance of plant b200 is operable to remove heat or thermal energy from the cold side b114 of the closed cycle engine b110. Particularly, a working fluid can be passed through the cold side heat exchanger b116. The engine working fluid EWF can exchange heat with the relatively cool working fluid flowing through the cold side heat exchanger b116, and thus, the working fluid removes heat from the closed cycle engine b110 to provide cooling thereto, e.g., at the cold side b114. The cooled engine working fluid EWF facilitates compression thereof when the piston assembly b126 is moved toward the compression space by the expansion of the working fluid at the other end of the regenerative engine.

As illustrated in FIG. 2.1.9, the chiller loop b240 includes two linked loops, including a bottoming-cycle loop b250 and a cooling loop b280. The bottoming-cycle loop b250 or system is a recovered heat to power system. Particularly, a chiller working fluid CWF, such as e.g., a supercritical carbon dioxide or some other suitable low temperature working fluid, is moved through the bottoming-cycle loop b250 to remove heat from the cold side b114 of the engine (e.g., to increase the temperature differential between the hot and cold sides of the engine). Components of the bottoming-cycle loop b250 utilize the captured heat to generate electrical power. The cooling loop b280 is operable to cool certain components positioned along the bottoming-cycle loop b250. Specifically, a cooling fluid CF, such as e.g., ambient air or some other suitable heat-sink fluid, is moved through the cooling loop b280 and exchanges heat with the various components of the bottoming-cycle loop b250 to provide cooling thereto. The chiller loop b240 will be described in detail below.

For this embodiment, the bottoming-cycle loop b250 of the chiller loop b240 includes a pump b252 operable to move the chiller working fluid CWF along or through the bottoming-cycle loop b250. As noted above, the chiller working fluid CWF can be a supercritical carbon dioxide fluid or some other suitable low temperature working fluid. A precooler b260 is optionally positioned downstream of the pump b252 along the bottoming-cycle loop b250. The precooler b260 cools the chiller working fluid CWF as the chiller working fluid CWF flows therethrough. The cold side heat exchanger b116 (e.g., an evaporator) is positioned downstream of the precooler b260 along the bottoming-cycle loop b250. The cold side heat exchanger b116 is positioned in a heat exchange relationship with the cold side b114 of the closed cycle engine b110 as shown in FIG. 2.1.9. During operation of the closed cycle engine b110, the chiller working fluid CWF flowing through the cold side heat exchanger b116 picks up or removes heat from the engine working fluid EWF and walls of the piston body b122 at or proximate the cold side b114 of the engine b110. That is, the engine working fluid EWF and walls at or proximate the cold side b114 of the engine b110 impart thermal energy to the chiller working fluid CWF flowing through the cold side heat exchanger b116. Accordingly, the heat captured from the cold side b114 of the engine b110 can be utilized to generate electrical power and/or produce useful work.

In some embodiments, optionally, the relatively hot chiller working fluid CWF flows downstream from the cold side heat exchanger b116 to a superheater b254 or second heat exchanger positioned along the bottoming-cycle loop b250. For this embodiment, the heat source b134 that imparts thermal energy to the chiller working fluid CWF flowing through the bottoming-cycle loop b250 at the superheater b254 is the hot combustion gases flowing along the heat recovery loop b214 of the heater loop b210. Accordingly, heat recovered from the hot side b112 of the engine is utilized for electrical power generation.

An expansion device b256 is positioned downstream of the cold side heat exchanger b116 along the bottoming-cycle loop b250. In some embodiments, the expansion device b256 is immediately downstream of the cold side heat exchanger b116. In yet other embodiments, as noted above, the expansion device b256 is downstream of the cold side heat exchanger b116 but directly downstream of the superheater b254. The expansion device b256 can be a turbine, for example. The expansion device b256 can be operatively coupled with one or more elements of the chiller loop b240 and/or the heater loop b210. For instance, the expansion device b256 can be mechanically coupled with the pump b252 of the bottoming-cycle loop b250, the compressor b220 of the heater loop b210, and/or a fan b284 of the cooling loop b280 of the chiller loop b240, among other components. The expansion device b256 can be mechanically coupled with such components via one or more shafts or a shaft system. The expansion device b256 is operable to extract thermal energy from the chiller working fluid CWF to produce useful work such that electrical power can be generated. Particularly, the expansion of the chiller working fluid CWF can drivingly rotate the expansion device b256 about its axis of rotation, which in turn drives the one or more shafts and the components operatively coupled thereto. Moreover, when the shaft system is driven by rotation of the expansion device b256, the useful work produced can be utilized to drive one or more electric machines b262 operatively coupled to the expansion device b256. In this way, the electric machines b262 can generate electrical power. The electrical power generated can be used to pay or operate the various devices or components of the power generation system b100, such as e.g., fans, pumps, outside air conditioning units, onboard vehicle systems, among other potential uses.

After expanding at the expansion device b256 to produce useful work such that electrical power can ultimately be generated, the chiller working fluid CWF flows downstream from the expansion device b256 to a third heat exchanger b258 or third heat exchanger positioned along the bottoming-cycle loop b250. The third heat exchanger b258 is positioned between the expansion device b256 and the pump b252 along the bottoming-cycle loop b250. The third heat exchanger b258 cools the chiller working fluid CWF before the chiller working fluid CWF flows downstream to the pump b252 where the chiller working fluid CWF is pumped or moved along the bottoming-cycle loop b250 once again.

As noted above, the chiller loop b240 includes the cooling loop b280 linked to the bottoming-cycle loop b250. As depicted in FIG. 2.1.9, the cooling fluid CF is introduced into the cooling loop b280 at the precooler b260 via a pressure differential. The relatively cool cooling fluid CF can pick up or remove heat from the chiller working fluid CWF flowing through the bottoming-cycle loop b250 at the precooler b260. That is, the chiller working fluid CWF of the bottoming-cycle loop b250 can impart thermal energy to the cooling fluid CF of the cooling loop b280 at the precooler b260. In addition, cooling fluid CF is introduced into the cooling loop b280 at the third heat exchanger b258 via a pressure differential. The relatively cool cooling fluid CF can pick up heat from the chiller working fluid CWF flowing through the bottoming-cycle loop b250 at the third heat exchanger b258. That is, the chiller working fluid CWF flowing along the bottoming-cycle loop b250 can impart thermal energy to the cooling fluid CF of the cooling loop b280 at the third heat exchanger b258. As illustrated in FIG. 2.1.9, the cooling fluid CF can flow downstream from the precooler b260 and downstream from the third heat exchanger b258 to a fan b284 positioned along the cooling loop b280. The fan b284 moves the cooling fluid CF through the cooling loop b280. Particularly, the fan b284 can cause the pressure differential at the inlet of the precooler b260 and the inlet of the third heat exchanger b258 such that the cooling fluid CF is moved into and through the cooling loop b280 of the chiller loop b240. After removing heat from the chiller working fluid CWF flowing through the bottoming-cycle loop b250 at the precooler b260 and the third heat exchanger b258, the cooling fluid CF is exhausted from the system.

Chapter 2.1.5 - Closed Cycle Engine with WHR Bottoming Cycle - Variants

FIG. 2.1.10 provides a schematic view of a power generation system b100 according to an example embodiment of the present disclosure. The power generation system b100 of FIG. 2.1.10 is configured in a similar manner as the power generation system b100 of FIG. 2.1.9, except as provided below.

As noted above, the power generation system b100 includes a closed cycle engine b110 defining a hot side b112 and a cold side b114. The closed cycle engine b110 also includes a balance of plant b200. Particularly, the balance of plant b200 includes a heater loop b210 positioned at least in part in a heat exchange relationship with the hot side b112 of the closed cycle engine b110 for imparting thermal energy thereto. The heater loop b210 has an intake line b212. Further, as shown, the balance of plant b200 includes a chiller loop b240 having a bottoming-cycle loop b250 and a cooling loop b280. The bottoming-cycle loop b250 is positioned at least in part in a heat exchange relationship with the cold side b114 of the closed cycle engine b110 for extracting or removing thermal energy therefrom. The cooling loop b280 is positioned at least in part in a heat exchange relationship with the bottoming-cycle loop b250 for extracting or removing thermal energy therefrom.

Notably, for this embodiment, the cooling loop b280 is in fluid communication with the intake line b212 of the heater loop b210. More specifically, instead of a fan b284 moving air through the cooling loop b280 as shown in the embodiment depicted in FIG. 2.1.9, a compressor b220 positioned along the intake line b212 of the heater loop b210 moves a working fluid into and through the cooling loop b280 and ultimately to the heater loop b210. As depicted in FIG. 2.1.10, cooling fluid CF (e.g., ambient air) is introduced into the cooling loop b280 at the precooler b260 via a pressure differential. The relatively cool working fluid can pick up or remove heat from the chiller working fluid CWF flowing through the bottoming-cycle loop b250 at the precooler b260. That is, the chiller working fluid CWF of the bottoming-cycle loop b250 can impart thermal energy to the cooling fluid CF of the cooling loop b280 at the precooler b260. In addition, cooling fluid CF is introduced into the cooling loop b280 at the third heat exchanger b258 via a pressure differential. The relatively cool cooling fluid CF can pick up heat from the chiller working fluid CWF flowing through the bottoming-cycle loop b250 at the third heat exchanger b258. That is, the chiller working fluid CWF flowing along the bottoming-cycle loop b250 can impart thermal energy to the cooling fluid CF of the cooling loop b280 at the third heat exchanger b258.

After picking up heat from the chiller working fluid CWF flowing through the bottoming-cycle loop b250 at the precooler b260 and the third heat exchanger b258, the cooling fluid CF flows downstream to an inlet of the compressor b220 of the heater loop b210. Thus, the compressor b220 moves the cooling fluid CF through the cooling loop b280 and to the heater loop b210. The compressor b220 can cause the pressure differential at the inlet of the precooler b260 and the inlet of the third heat exchanger b258 such that the cooling fluid CF is moved into and through the cooling loop b280 of the chiller loop b240. As the cooling fluid CF is heated by the chiller working fluid CWF at the precooler b260 and at the third heat exchanger b258, the cooling fluid CF delivered to the heater loop b210 is heated by heat recovered from the bottoming-cycle loop b250. By heating the cooling fluid CF, the efficiency of the power generation can be improved, among other benefits.

FIG. 2.1.11 provides a schematic view of a power generation system b100 according to an example embodiment of the present disclosure. The power generation system b100 of FIG. 2.1.11 is configured in a similar manner as the power generation system b100 of FIG. 2.1.10, except as provided below. In some embodiments, the airflow required to cool the chiller working fluid CWF at the precooler b260 and the chiller working fluid CWF at the third heat exchanger b258 is greater than the airflow needed for the combustor b132. Accordingly, in order to balance the required airflows, a portion of cooling fluid CF can be exhausted downstream of the compressor b220 of the heater loop b210. Particularly, for the depicted embodiment of FIG. 2.1.11, a portion of cooling fluid CF is exhausted downstream of the compressor b220third heat exchanger b258. That is, the cooling fluid CF heated at the precooler b260 combines with the cooling fluid CF heated at the third heat exchanger b258 at a junction 286, and after combining, the combined flow of cooling fluid CF travels downstream along an intake delivery line b288 to the compressor b220 positioned along the intake line b212 of the heater loop b210. As shown, a portion of the combined flow of cooling fluid CF is exhausted from the intake line b212 downstream of the compressor b220.

**In** some embodiments, the amount or volume of cooling fluid CF exhausted from the system downstream of the compressor b220 can be controlled. For instance, as shown in FIG. 2.1.11, an exhaust regulator b292 can be positioned along an exhaust line b290 in fluid communication with the intake line b212. The exhaust regulator b292 is operable to regulate an exhaust flow rate of the cooling fluid CF flowing to the combustor b132. For instance, when the exhaust flow rate of the cooling fluid CF reaches a predetermined threshold, the exhaust regulator b292 can selectively allow a portion of the cooling fluid CF to exhaust from the system, e.g., to balance the airflow required to cool the precooler b260 and third heat exchanger b258 and the airflow required for the combustor b132. **In** some embodiments, one or more controllers can control the exhaust regulator b292 to selectively control the mass flow of exhaust to the combustor b132. **In** this way, the exhaust regulator b292 can be a controllable device. **In** other embodiments, the exhaust regulator b292 can be a self-regulating control device.

FIG. 2.1.12 provides a schematic view of a power generation system b100 according to an example embodiment of the present disclosure. The power generation system b100 of FIG. 2.1.12 is configured in a similar manner as the power generation system b100 of FIG. 2.1.10, except as provided below. **In** some embodiments, the airflow needed for the combustor b132 is greater than the airflow needed to cool the chiller working fluid CWF at the precooler b260 and the chiller working fluid CWF at the third heat exchanger b258. Accordingly, in order to balance the required airflows, in addition to the cooling fluid CF from the cooling loop b280, additional working fluid can be moved into and along the intake line b212.

For instance, as shown in FIG. 2.1.12, a supplemental intake line b294 is in fluid communication with the intake line b212 upstream of the compressor b220. **In** other embodiments, the supplemental intake line b294 is in fluid communication with the intake delivery line b288. The compressor b220 is operable to move a supplemental working fluid SWF (e.g., ambient air) from an air source b298 (e.g., an ambient environment) through the supplemental intake line b294 and to the inlet of the compressor b220. Accordingly, the supplemental working fluid SWF received from the air source b298 via the supplemental intake line b294 is mixed with the cooling fluid CF flowing along the intake delivery line b288. Particularly, the supplemental working fluid SWF received from the air source b298 via the supplemental intake line b294 is mixed or combined with the cooling fluid CF flowing along the intake delivery line b288 upstream of the compressor b220. **In** this manner, the mass flow or volume of total working fluid (e.g., a combination of cooling fluid CF from the cooling loop b280 and the supplemental working fluid SWF) flowing to the combustor b132 can be increased.

**In** some embodiments, the amount or volume of total working fluid delivered to the combustor b132 can be controlled. For instance, as shown in FIG. 2.1.12, an airflow regulator 296 can be positioned along the supplemental intake line b294 in fluid communication with the intake delivery line b288. The airflow regulator 296 is operable to regulate an amount of supplemental working fluid SWF provided to the combustor b132. For instance, to control the total working fluid flow rate to the combustor b132, the airflow regulator 296 can selectively allow an amount of supplemental working fluid SWF to flow into the intake line b212. In this way, the total working fluid flowing to the combustor b132 can be controlled and the airflow required to cool the precooler b260 and third heat exchanger b258 can be balanced with the airflow required for the combustor b132. In some embodiments, one or more controllers can control the airflow regulator 296 to selectively control the mass flow of total working fluid flowing to the combustor b132. In this way, the airflow regulator 296 can be a controllable device.

FIG. 2.1.13 provides a schematic view of a power generation system b100 according to an example embodiment of the present disclosure. The power generation system b100 of FIG. 2.1.13 is configured in a similar manner as the power generation system b100 of FIG. 2.1.10, except as provided below. In some embodiments, the airflow required to cool the chiller working fluid CWF at the precooler b260 and the chiller working fluid CWF at the third heat exchanger b258 is greater than the airflow needed for the combustor b132. Thus, in order to balance the required airflows, the cooling fluid CF flowing through the precooler b260 is exhausted to the ambient environment downstream of the precooler b260 and is not directed to the intake line b212 of the heater loop b210. As shown, the cooling fluid CF heated at the precooler b260 does not mix with the cooling fluid CF flowing through the third heat exchanger b258 in this embodiment (e.g., at a junction 286). Accordingly, only the cooling fluid CF flowing through the third heat exchanger b258 is moved to the inlet of the compressor b220 positioned along the intake line b212 of the heater loop b210. Particularly, the cooling fluid CF heated at the third heat exchanger b258 can flow downstream to the inlet of the compressor b220 along an intake delivery line b288 fluidly connecting an outlet of the third heat exchanger b258 and the inlet of the compressor b220.

FIG. 2.1.14 provides a schematic view of a power generation system b100 according to an example embodiment of the present disclosure. The power generation system b100 of FIG. 2.1.14 is configured in a similar manner as the power generation system b100 of FIG. 2.1.10, except as provided below. In some embodiments, as noted above, the airflow required to cool the chiller working fluid CWF at the precooler b260 and the chiller working fluid CWF at the third heat exchanger b258 is greater than the airflow needed for the combustor b132. Thus, in order to balance the required airflows, the cooling fluid CF flowing through the third heat exchanger b258 is exhausted to the ambient environment downstream of the third heat exchanger b258 and is not directed to the intake line b212 of the heater loop b210. As shown, the cooling fluid CF heated at the third heat exchanger b258 does not mix with the cooling fluid CF flowing through the precooler b260 in this embodiment (e.g., at a junction 286). Accordingly, only the cooling fluid CF flowing through the precooler b260 is moved to the inlet of the compressor b220 positioned along the intake line b212 of the heater loop b210. Particularly, the cooling fluid CF heated at the precooler b260 can flow downstream to the inlet of the compressor b220 along an intake delivery line b288 fluidly connecting an outlet of the precooler b260 and the inlet of the compressor b220.

FIG. 2.1.15 provides a schematic view of a power generation system b100 according to an example embodiment of the present disclosure. The power generation system b100 of FIG. 2.1.15 is configured in a similar manner as the power generation system b100 of FIG. 2.1.10, except as provided below. For this embodiment, cooling fluid CF heated at the third heat exchanger b258 and/or at the precooler b260 flows into an intake delivery line b288 that provides fluid communication between the cooling loop b280 and the inlet of the compressor b220 positioned along the intake line b212 of the heater loop b210. The balance of plant b200 of the closed cycle engine b110 includes a fuel source b300 and a fuel line 302 that provides fluid communication between the fuel source b300 and at least one of the intake line b212 and a combustor b132 positioned along the intake line b212 of the heater loop b210. Moreover, notably, a fuel preheater b304 is positioned along the intake delivery line b288 that provides fluid communication between the cooling loop b280 and the heater loop b210. In addition, the fuel preheater b304 is positioned along the fuel line 302. Accordingly, the heated cooling fluid CF flowing through the intake delivery line b288 from the cooling loop b280 to the compressor b220 can heat or impart thermal energy to fuel flowing through the fuel line 302 at the fuel preheater b304. Thus, heat recovered from the chiller loop b240 can be utilized to preheat fuel flowing to the combustor b132.

Chapter 2.1.6 - Closed Cycle Engine with **WHR** Bottoming Cycle with Electrical system

FIG. 2.1.16 provides a schematic view of a power generation system b100 according to an example embodiment of the present disclosure. The power generation system b100 of FIG. 2.1.16 is configured in a similar manner as the power generation system b100 of FIG. 2.1.10, except as provided below. For this embodiment, the power generation system b100 includes a closed cycle engine b110 defining a hot side b112 and a cold side b114. The closed cycle engine b110 also includes a balance of plant b200. Particularly, the balance of plant b200 includes a heater loop b210 positioned at least in part in a heat exchange relationship with the hot side b112 of the closed cycle engine b110 for imparting thermal energy thereto. The heater loop b210 has an intake line b212. Further, as shown, the balance of plant b200 includes a chiller loop b240 having a bottoming-cycle loop b250 and a cooling loop b280. The bottoming-cycle loop b250 is positioned at least in part in a heat exchange relationship with the cold side b114 of the closed cycle engine b110 for extracting or removing thermal energy therefrom. The cooling loop b280 is positioned at least in part in a heat exchange relationship with the bottoming-cycle loop b250 for extracting or removing thermal energy therefrom.

The power generation system b100 also includes an electrical system b150. The electrical system b150 includes one or more electrical components b152, such as one or more electric machines b154 operatively coupled with at least one of the piston assemblies b126 of the closed cycle engine b110, one or more energy storage devices b156 in communication with the electric machines b154, and one or more electrical loads 158 in communication with the energy storage devices b156. In some embodiments, the electric machines b154 are operable as either electric generators or electric motors. The one or more energy storage devices b156 can include any suitable type of energy storage device, such as batteries, super capacitors, etc. The electrical loads 158 can include electric motors, the grid, vehicle electrical systems, household electrical systems, or any other suitable electrical component requiring electrical power.

For the depicted embodiment of FIG. 2.1.16, the system includes an electrical system cooling loop b160 positioned at least in part in a heat exchange relationship with the one or more electrical components b152 of the electrical system b150 for removing heat therefrom. The electrical system cooling loop b160 can be an open loop, e.g., as shown in FIG. 2.1.16, or can be a closed loop. An electrical system cooling fluid ESCF can be moved through the electrical system cooling loop b160 to remove heat from the electrical components b152. In some embodiments, the electrical system cooling fluid ESCF is ambient air. In yet other embodiments, the electrical system cooling fluid ESCF is a liquid, such as water. As shown, the electrical system cooling fluid ESCF can be moved into an inlet of the electrical system cooling loop b160 from a fluid source b170 (e.g., an ambient air environment or liquid cooling sink). The electrical system cooling fluid ESCF can be moved through the electrical system cooling loop b160 to cool the electrical components b152. Particularly, the relatively cool electrical system cooling fluid ESCF flowing through the electrical system cooling loop b160 can pick up heat or thermal energy given off by the electrical components b152. The heated electrical system cooling fluid ESCF can then flow out of or exit the electrical system cooling loop b160 through an outlet of the electrical system cooling loop b160, e.g., to an ambient environment. In some embodiments, electrical system cooling fluid ESCF can flow passively through the electrical system cooling loop b160, e.g., as shown in FIG. 2.1.16. In yet other embodiments, an air handler (e.g., a fan or blower) can move the electrical system cooling fluid ESCF through the electrical system cooling loop b160. In such embodiments, the electrical system b150 can include a thermal management system for monitoring the temperature of the electrical components 152 and communicating with one or more controllers of the system b100 that cooling for the electrical components 152 is required. At such time, the one or more controllers and/or the thermal management system can activate the air handler to move electrical system cooling fluid ESCF through the electrical system cooling loop 160. Each embodiment depicted herein (e.g., the embodiments of FIGS. 2.1.16 through 2.1.23, the embodiments of FIGS. 2.1.6 through 2.1.8, etc.) that includes electrical components can include a thermal management system therefore.

FIG. 2.1.17 provides a schematic view of another power generation system b100 according to an example embodiment of the present disclosure. The power generation system b100 of FIG. 2.1.17 is configured in a similar manner as the power generation system b100 of FIG. 2.1.16, except as provided below. For this embodiment, the balance of plant b200 of the closed cycle engine b110 includes a heater loop b210 positioned at least in part in a heat exchange relationship with the hot side b112 of the closed cycle engine b110 for imparting thermal energy thereto. The heater loop b210 has an intake line b212. The balance of plant b200 also has a chiller loop b240 having a bottoming-cycle loop b250 and a cooling loop b280. The bottoming-cycle loop b250 is positioned at least in part in a heat exchange relationship with the cold side b114 of the closed cycle engine b110 for extracting thermal energy therefrom. The cooling loop b280 is positioned at least in part in a heat exchange relationship with the bottoming-cycle loop b250 for extracting thermal energy therefrom. Further, as depicted, the cooling loop b280 is in fluid communication with the intake line b212 of the heater loop b210. Particularly, an intake delivery line b288 provides fluid communication between the cooling loop b280 and the intake line b212 of the heater loop b210.

In addition, for this embodiment, the electrical system cooling loop b160 is in fluid communication with the cooling loop b280, and thus, the electrical system cooling loop b160 is in fluid communication with the heater loop b210. In this way, heat given off by the electrical components b152 of the electrical system b150 can be captured and used in useful ways. For instance, in this example embodiment, the captured heat is utilized to preheat the air flowing downstream to the combustor b132.

Particularly, a compressor b220 is positioned along the intake line b212 of the heater loop b210. The compressor b220 moves the cooling fluid CF through the cooling loop b280 such that the cooling fluid CF removes heat from a chiller working fluid CWF flowing through the bottoming-cycle loop b250 (e.g., at the precooler b260 and/or the third heat exchanger b258). The compressor b220 also moves the electrical system cooling fluid ESCF along the electrical system cooling loop b160 such that the electrical system cooling fluid ESCF removes heat from the electrical components b152 of the electrical system b150. Thus, the compressor b220 is operable to move a combined flow of electrical system cooling fluid ESCF heated at the electrical system cooling loop b160 and cooling fluid CF heated at the precooler b260 and/or third heat exchanger b258 along the cooling loop b280 to the inlet of the compressor b220. Further, the compressor b220 is operable to move the combined flow downstream to the combustor b132.

FIG. 2.1.18 provides a schematic view of another power generation system b100 according to an example embodiment of the present disclosure. The power generation system b100 of FIG. 2.1.18 is configured in a similar manner as the power generation system b100 of FIG. 2.1.16, except as provided below. For this embodiment, the electrical system cooling loop b160 is in direct fluid communication with the intake line b212 of the heater loop b210 and the cooling fluid CF flowing through the cooling loop b280 is exhausted from the system as shown in FIG. 2.1.18.

More specifically, a compressor b220 is positioned along the intake line b212 of the heater loop b210 and an intake delivery line b288 provides direct fluid communication between the electrical system cooling loop b160 and the inlet of the compressor b220. Accordingly, electrical system cooling fluid ESCF moved through the electrical system cooling loop b160 picks up or extracts heat or thermal energy given off by the electrical components b152 and then flows downstream to the intake line b212 of the heater loop b210. The heated electrical system cooling fluid ESCF is then compressed at the compressor b220 and moved downstream to the recuperator b222 where the heated electrical system cooling fluid ESCF is further heated. The electrical system cooling fluid ESCF continues downstream to the combustor b132. The heated electrical system cooling fluid ESCF is mixed with fuel and the fuel/heated cooling fluid (e.g., heated air) mixture is combusted. The combustion gases generated by the combustor b132 flow downstream to the hot side heat exchanger b118 to ultimately heat the engine working fluid EWF within the piston bodies b122 of the closed cycle engine b110. The compressor b220 can be controlled to balance the mass flow of heated electrical system cooling fluid ESCF flowing downstream to the combustor b132. For instance, one or more controllers can control the speed of the compressor b220 to ultimately achieve a desired fuel/heated cooling fluid ratio or equivalence ratio.

Moreover, for this embodiment, the cooling fluid CF flowing through the cooling loop b280 is exhausted from the system, e.g., to an ambient environment. Specifically, in this example embodiment, all of the cooling fluid CF flowing through the cooling loop b280 is exhausted from the system, e.g., to an ambient environment. In alternative embodiments, the heat from the cooling fluid CF can be directed to one or more thermal applications b140 or systems.

FIG. 2.1.19 provides a schematic view of yet another power generation system b100 according to an example embodiment of the present disclosure. The power generation system b100 of FIG. 2.1.19 is configured in a similar manner as the power generation system b100 of FIG. 2.1.16, except as provided below. For this embodiment, the balance of plant b200 of the closed cycle engine b110 includes a heater loop b210, a chiller loop b240, and an electrical system cooling loop b160. The chiller loop b240 has a bottoming-cycle loop b250 and a cooling loop b280. As shown, a superheater b254 is positioned along the bottoming-cycle loop b250 and along the electrical system cooling loop b160. Notably, the electrical system cooling loop b160 is positioned at least in part in a heat exchange relationship with the bottoming-cycle loop b250 at the superheater b254. In this way, the relatively hot electrical system cooling fluid ESCF flowing through the superheater b254 can impart thermal energy to the chiller working fluid CWF flowing along the bottoming-cycle loop b250 at the superheater b254. As noted herein, the electrical system cooling fluid ESCF can be heated as the electrical system cooling fluid ESCF passes through the electrical system cooling loop b160 by heat given off by the electrical components b152 of the electrical system b150. In some embodiments, the heat imparted to the chiller working fluid CWF by the heated electrical system cooling fluid ESCF can cause the chiller working fluid CWF to superheat.

As further shown in FIG. 2.1.19, the heater loop b210 has a heat recovery loop b214 positioned at least in part in a heat exchange relationship with the bottoming-cycle loop b250 for imparting thermal energy thereto. Particularly, the heat recovery loop b214 of the heater loop b210 is positioned in a heat exchange relationship with the bottoming-cycle loop b250 at the superheater b254. Thus, the superheater b254 is positioned along the heat recovery loop b214 in addition to the bottoming-cycle loop b250. Accordingly, in addition to the relatively hot electrical system cooling fluid ESCF imparting thermal energy to the chiller working fluid CWF flowing through the bottoming-cycle loop b250 at the superheater b254, the hot combustion gases or heating working fluid HWF flowing along the heat recovery loop b214 can likewise impart thermal energy to the chiller working fluid CWF at the superheater b254. In this way, the potential energy of the chiller working fluid CWF can be increased. As such, an expansion device b256 positioned along the bottoming-cycle loop b250 downstream of the superheater b254 can extract more energy from the chiller working fluid CWF to produce useful work, e.g., that can be used to generate electrical power by the one or more electric machines b262 operatively coupled thereto.

After imparting thermal energy to the chiller working fluid CWF flowing along the bottoming-cycle loop b250 at the superheater b254. the electrical system cooling fluid ESCF can continue flowing downstream of the superheater b254. As shown, the electrical system cooling fluid ESCF can be exhausted from the electrical system cooling loop b160 downstream of the superheater b254. Particularly, the electrical system cooling fluid ESCF is exhausted from the electrical system cooling loop b160 directly downstream of the superheater b254. **In** other embodiments, the electrical system cooling fluid ESCF flowing downstream along the electrical system cooling loop b160 can be directed to one or more thermal applications b140.

FIG. 2.1.20 provides a schematic view of yet another power generation system b100 according to an example embodiment of the present disclosure. The power generation system b100 of FIG. 2.1.20 is configured in a similar manner as the power generation system b100 of FIG. 2.1.19, except as provided below.

For this embodiment, the electrical system cooling loop b160 is a closed loop. The electrical system cooling fluid ESCF is heated by heat given off by the electrical components b152 as it passes through the electrical system b150. The heated electrical system cooling fluid ESCF then flows downstream to the superheater b254. At the superheater b254, the heated electrical system cooling fluid ESCF imparts thermal energy to the chiller working fluid CWF flowing along the bottoming-cycle loop b250, e.g., as described above with reference to the embodiment of FIG. 2.1.19. Thereafter, however, instead of exhausting from the system, the electrical system cooling fluid ESCF flows downstream to a radiator b164 positioned the electrical system cooling loop b160. The radiator b164 is operable to remove heat from the electrical system cooling fluid ESCF, e.g., such that the electrical system cooling fluid ESCF can better cool the electrical components b152 of the electrical system b150. A pump b162 is positioned between the radiator b164 and the electrical system b150 along the electrical system cooling loop b160. Particularly, the pump b162 is positioned directly downstream of the radiator b164 and directly upstream of the electrical system b150. **In** other embodiments, the pump b162 is positioned upstream of the radiator b164 and downstream of the superheater b254. Generally, the pump b162 is operable to move the electrical system cooling fluid ESCF through the electrical system cooling loop b160. Further, in some embodiments, the pump b162 is operatively coupled with the turbine, e.g., so that the turbine can drivingly rotate the pump b162 positioned along the electrical system cooling loop b160.

FIG. 2.1.21 provides a schematic view of another power generation system b100 according to an example embodiment of the present disclosure. The power generation system b100 of FIG. 2.1.21 is configured in a similar manner as the power generation system b100 of FIG. 2.1.19, except as provided below.

For this embodiment, a first superheater b166 is positioned along the bottoming-cycle loop b250 and a second superheater b168 is positioned along the bottoming-cycle loop b250 downstream of the first superheater b166 and between the first superheater b166 and an expansion device b256. Particularly, the first superheater b166 is positioned downstream of and in direct fluid communication with the outlet of the cold side heat exchanger b116. Further, the first superheater b166 is positioned along the electrical system cooling loop b160 such that the heated electrical system cooling fluid ESCF flowing through the electrical system cooling loop b160 imparts thermal energy to the chiller working fluid CWF flowing through the bottoming-cycle loop b250 at the first superheater b166. Thus, the bottoming-cycle loop b250 and the electrical system cooling loop b160 are in a heat exchange relationship at the first superheater b166. After the electrical system cooling fluid ESCF flowing along the electrical system cooling loop b160 heats or imparts thermal energy to the chiller working fluid CWF at the first superheater b166, the electrical system electrical system cooling fluid ESCF is exhausted from the system. In other embodiments, however, the electrical system cooling fluid ESCF is directed downstream to one or more thermal applications b140.

As further depicted in FIG. 2.1.21, the heater loop b210 has a heat recovery loop b214 positioned at least in part in a heat exchange relationship with the bottoming-cycle loop b250 for imparting thermal energy thereto. More particularly, the second superheater b168 is positioned along the heat recovery loop b214 in addition to the bottoming-cycle loop b250. In this manner, the hot combustion gases flowing through the heat recovery loop b214 can heat or impart thermal energy to the chiller working fluid CWF flowing through the bottoming-cycle loop b250. As noted previously, this can increase the temperature of the chiller working fluid CWF and consequently increase the potential energy of the chiller working fluid CWF. As such, the expansion device b256 positioned along the bottoming-cycle loop b250 downstream of the second superheater b168 and between the second superheater b168 and the third heat exchanger b258 can extract more energy from the chiller working fluid CWF to produce useful work, e.g., that can be used to generate electrical power by the one or more electric machines b262 operatively coupled with the turbine.

FIG. 2.1.22 provides a schematic view of yet another power generation system b100 according to an example embodiment of the present disclosure. The power generation system b100 of FIG. 2.1.22 is configured in a similar manner as the power generation system b100 of FIG. 2.1.19, except as provided below.

For this embodiment, a first superheater b166 is positioned along the bottoming-cycle loop b250 and a second superheater b168 is positioned along the bottoming-cycle loop b250 downstream of the first superheater b166 and between the first superheater b166 and an expansion device b256. Particularly, the first superheater b166 is positioned downstream of and in direct fluid communication with the outlet of the cold side heat exchanger b116. The heater loop b210 of the balance of plant b200 of the closed cycle engine b110 has a heat recovery loop b214 positioned at least in part in a heat exchange relationship with the bottoming-cycle loop b250 for imparting thermal energy thereto. More particularly, the first superheater b166 is positioned along the heat recovery loop b214 in addition to the bottoming-cycle loop b250. In this manner, the hot combustion gases flowing through the heat recovery loop b214 can heat or impart thermal energy to the chiller working fluid CWF flowing through the bottoming-cycle loop b250 at the first superheater b166. As noted previously, this can increase the temperature of the chiller working fluid CWF and consequently increase the potential energy of the chiller working fluid CWF.

As further depicted in FIG. 2.1.22, the second superheater b168 is positioned along the electrical system cooling loop b160 such that the heated electrical system cooling fluid ESCF flowing through the electrical system cooling loop b160 imparts thermal energy to the chiller working fluid CWF flowing through the bottoming-cycle loop b250 at the second superheater b168. Thus, the bottoming-cycle loop b250 and the electrical system cooling loop b160 are in a heat exchange relationship at the second superheater b168. After the electrical system cooling fluid ESCF flowing along the electrical system cooling loop b160 heats or imparts thermal energy to the chiller working fluid CWF at the second superheater b168, the electrical system cooling fluid ESCF is exhausted from the system. In other embodiments, however, the electrical system cooling fluid ESCF is directed downstream to one or more thermal applications b140.

FIG. 2.1.23 provides a schematic view of yet another power generation system b100 according to an example embodiment of the present disclosure. The power generation system b100 of FIG. 2.1.23 is configured in a similar manner as the power generation system b100 of FIG. 2.1.21, except as provided below. For this embodiment, a first superheater b166 (denoted as "Superheater b254 1" in FIG. 2.1.23) is positioned along the bottoming-cycle loop b250 and a second superheater b168 (denoted as "Superheater b254 2" in FIG. 2.1.23) is positioned along the bottoming-cycle loop b250 downstream of the first superheater b166 and between the first superheater b166 and an expansion device b256. Particularly, the first superheater b166 is positioned downstream of and in direct fluid communication with the outlet of the cold side heat exchanger b116.

Further, the first superheater b166 is positioned along the electrical system cooling loop b160 such that the heated electrical system cooling fluid ESCF flowing through the electrical system cooling loop b160 imparts thermal energy to the chiller working fluid CWF flowing through the bottoming-cycle loop b250 at the first superheater b166. Thus, the bottoming-cycle loop b250 and the electrical system cooling loop b160 are in a heat exchange relationship at the first superheater b166. Notably, for this embodiment, the electrical system cooling loop b160 is a closed loop. As shown, after the electrical system cooling fluid ESCF flowing along the electrical system cooling loop b160 heats or imparts thermal energy to the chiller working fluid CWF at the first superheater b166, the electrical system cooling fluid ESCF flows downstream to a radiator b164 positioned along the electrical system cooling loop b160. The radiator b164 is operable to remove heat from the electrical system cooling fluid ESCF, e.g., such that the electrical system cooling fluid ESCF can better cool the electrical components b152 of the electrical system b150. A pump b162 is positioned between the radiator b164 and the electrical system b150 along the electrical system cooling loop b160. Particularly, the pump b162 is positioned directly downstream of the radiator b164 and directly upstream of the electrical system b150. In other embodiments, the pump b162 is positioned upstream of the radiator b164 and downstream of the superheater b254. The pump b162 is operable to move the electrical system cooling fluid ESCF through the electrical system cooling loop b160. Further, in some embodiments, the pump b162 is operatively coupled with the turbine, e.g., so that the turbine can drivingly rotate the pump b162 positioned along the electrical system cooling loop b160.

As further depicted in FIG. 2.1.23, the heater loop b210 has a heat recovery loop b214 positioned at least in part in a heat exchange relationship with the bottoming-cycle loop b250 for imparting thermal energy thereto. More particularly, the second superheater b168 is positioned along the heat recovery loop b214 in addition to the bottoming-cycle loop b250. In this manner, the hot combustion gases flowing through the heat recovery loop b214 can heat or impart thermal energy to the chiller working fluid CWF flowing through the bottoming-cycle loop b250 at the second superheater b168. Accordingly, for this embodiment, the chiller working fluid CWF flowing through the bottoming-cycle loop b250 is first heated at the cold side heat exchanger b116. That is, the chiller working fluid CWF picks up heat from the cold side b114 of the closed cycle engine b110 to provide cooling thereto. Next, the chiller working fluid CWF is heated at the first superheater b166 by the hot electrical system cooling fluid ESCF flowing along the electrical system cooling loop b160. Thereafter, the chiller working fluid CWF is heated at the second superheater b168 by the hot combustion gases flowing along the heat recovery loop b214 of the heater loop b210. Heating the chiller working fluid CWF can increase the temperature of the chiller working fluid CWF, which increases the potential energy of the chiller working fluid CWF. In some embodiments, the first superheater b166 and/or the second superheater b168 can superheat the chiller working fluid CWF. As such, the expansion device b256 positioned along the bottoming-cycle loop b250 downstream of the second superheater b168 and between the second superheater b168 and the third heat exchanger b258 can extract more energy from the chiller working fluid CWF to produce useful work, e.g., that can be used to generate electrical power by the one or more electric machines b262 operatively coupled with the turbine.

Chapter 2.1.7 - SOFC as Bottoming Cycle to A Closed Cycle Engine

FIG. 2.1.24 provides a schematic block diagram of a power generation system b400 according to an example embodiment of the present disclosure. For this embodiment, the power generation system b400 includes a prime power generation system b402 and a heat recovery system b404. The power generation system b400 includes a prime power generator b406 operable to generate electrical power. The heat recovery system b404 includes a bottoming-cycle system b408 operable to recover heat from the prime power generation system 402. The bottoming-cycle system b408 can use the recovered heat to generate additional electrical power.

As depicted, in this example embodiment, the prime power generator b406 is a Solid Oxide Fuel cell (SOFC) b420 operable to generate electrical power by oxidizing a fuel via an electrochemical process. SOFC b420 are flexible with respect to fuels. For instance, in some embodiments, a SOFC b420 can operate with pure methane. Other suitable fuels may be used as well (e.g., alternatively to or in addition to methane). Further, in some embodiments, SOFC b420 can operate around 800°C. As will be explained further below, at least some of the heat generated by the SOFC b420, or the heat source in this example, can be used by the bottoming-cycle system b408 to generate electricity and/or to produce mechanical work.

The bottoming-cycle system b408 can be any suitable system described herein. For this example embodiment, the bottoming-cycle system b408 includes a closed cycle engine b110, such as e.g., any of the closed cycle engines described herein. For instance, the bottoming-cycle system b408 can include any of the Stirling engines provided herein. Generally, the closed cycle engine b110 can utilize heat recovered from the heat source, or the SOFC b420 in this example embodiment, to generate electrical power via one or more electric machines b412 operatively coupled thereto. In some embodiments, the closed cycle engine b110 can utilize the recovered heat to produce mechanical work.

Moreover, in some embodiments, the bottoming-cycle system b408 can also be operatively coupled with one or more further bottoming-cycle systems. For instance, as shown in FIG. 2.1.24, the bottoming-cycle system b408 can be operatively coupled with a second bottoming-cycle system b410, such as e.g., another closed cycle engine b110 or one of the other bottoming-cycle systems described herein. The second bottoming-cycle system b410 can be operatively coupled with one or more electric machines b412 operable to generate electrical power. Notably, the prime power generation system b402 can be operatively coupled with any suitable number of bottoming-cycle systems. The prime power generation system b402 can be operatively coupled with any suitable number of bottoming-cycle systems in series, e.g., as shown in FIG. 2.1.24, or additionally or alternatively, the prime power generation system b402 can be operatively coupled with any suitable number of bottoming-cycle systems in parallel.

FIG. 2.1.25 provides a schematic block diagram depicting various advantages of the heat recovery system b404 of FIG. 2.1.24 according to an aspect of the present disclosure. Advantageously, the SOFC b420 prime power generation system b402 and the operatively coupled Stirling engine bottoming-cycle system b408 can generate electrical power at an electrical efficiency of about 70% or greater while achieving a Combined Heat and Power (CHP) efficiency of 90% or better. Furthermore, the heat recovery system b404 of FIG. 2.1.24 and 2.1.25 can produce ultra-low emissions relative to other conventional systems.

FIG. 2.1.26 provides a schematic view of a power generation system b400 having a prime power generation system b402 and a heat recovery or bottoming-cycle system b408 according to an example embodiment of the present disclosure. The prime power generation system b402 includes a prime power generator b406. For this embodiment, the prime power generator b406 is a fuel cell b420. The fuel cell b420 can be a SOFC b420, for example. Generally, the fuel cell b420 is operable to generate electrical power. The heat recovery system b404 includes a bottoming-cycle system b408. The bottoming-cycle system b408 includes a closed cycle engine b110. The bottoming-cycle system b408 can recover heat generated by the fuel cell b420 and can direct the heat to a hot side b112 of the closed cycle engine b110. Particularly, the recovered heat can be used to increase the temperature of engine working fluid EWF within the piston bodies b122 of the closed cycle engine b110 at the hot side b112. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b412 operatively coupled with the piston assemblies b126.

Furthermore, the prime power generation system b402 includes a reformer b428 operable to receive a fuel from a fuel source b430 and yield a synthesized gas based at least in part on the fuel received. For instance, as noted above, the fuel can be methane and/or some other suitable fuel. The reformer b428 also receives water, and thus, the reformer b428 yields the synthesized gas based at least in part on received water. In some embodiments, the synthesized gas includes reformate, carbon monoxide, carbon dioxide, water, and/or nitrogen. The reformer b428 can be an auto thermal reformer b428, for example.

The system b400 also includes a water source b436, such as e.g., a water tank, a municipal water line, a natural body of water, a filtered water source b436, etc. A water supply conduit b440 provides fluid communication between the water source b436 and the reformer b428 as shown in FIG. 2.1.26. For depicted embodiment, the system includes a water heat exchanger b438 positioned downstream of the water source b436 and upstream of the reformer b428. Notably, the water heat exchanger b438 is positioned in a heat exchange relationship with the water supply conduit b440 for imparting thermal energy to water W flowing from the water source b436 to the reformer b428. Accordingly, the reformer b428 yields the synthesized gas based at least in part on received heated water W. In some embodiments, the water heat exchanger b438 is operable to vaporize the water flowing therethrough.

As further depicted in FIG. 2.1.26, the system includes a fuel source b430. A fuel supply conduit b434 provides fluid communication between the fuel source b430 and the reformer b428. A fuel heat exchanger b432 is positioned downstream of the fuel source b430 and upstream of the reformer b428. Specifically, the fuel heat exchanger b432 is positioned in a heat exchange relationship with the fuel supply conduit b434 for imparting thermal energy to the fuel F flowing from the fuel source b430 to the reformer b428. In this way, the reformer b428 can receive heated fuel F. In addition, as shown in FIG. 2.1.26, the reformer b428 also receives a volume of heated air from a combustor heat exchanger b448 of the system. Thus, the reformer b428 receives heated water, heated fuel, and heated air and yields a synthesized gas.

After the reformer b428 converts or yields the synthesized gas, the synthesized gas is routed to the closed cycle engine b110. Particularly, as noted above, the closed cycle engine b110 defines or has a hot side b112 in fluid communication with the reformer b428. The hot side b112 of the closed cycle engine b110 is operable to receive the synthesized gas as shown in FIG. 2.1.26. The synthesized gas imparts thermal energy to the hot side b112 and particularly to the engine working fluid EWF such that piston assemblies b126 of the closed cycle engine b110 are moved. The fuel cell b420 is in fluid communication with the hot side b112 of the closed cycle engine b110 and is operable to receive the synthesized gas after the synthesized gas has passed through the hot side b112 of the closed cycle engine b110. Specifically, the fuel cell b420 has an anode b422 and a cathode b424 spaced from one another by an electrolyte. As shown, the anode b422 of the fuel cell b420 receives the synthesized gas from the hot side b112 of the closed cycle engine b110. As will be appreciated, the hydrogen atoms of the synthesized gas interact with the anode b422 and chemical reactions strip the hydrogen atoms of their electrons, thereby ionizing the hydrogen atoms. Oxygen enters the fuel cell b420 via heated air at the cathode b424 and eventually combines with the hydrogen ions. The hydrogen ions and oxygen form water, which is drained from the fuel cell b420. The electrons stripped from the hydrogen atoms provide electric current that can be used to do work. Accordingly, the fuel cell b420 generates electrical power. Furthermore, as noted above, the fuel cell b420 generates heat that can be harnessed and ultimately used to generate further electrical power.

The combustor b446 of a heater body b444 (e.g., such as one of the heater bodies described herein) is positioned downstream of and is in fluid communication with the fuel cell b420. The combustor b446 can be the combustor b446 of the closed cycle engine b110, and more specifically, any one of the Stirling engines described herein. **In** some embodiments, the combustor b446 is a catalytic combustor. Generally, the combustor b446 is operable to receive air and excess fuel from the fuel cell b420 and combust the excess fuel/air mixture to generate heat. As the hot stream mixture of excess fuel and air exits the fuel cell b420 at a relatively high temperature, the combustor b446 can readily combust the mixture efficiently. As further depicted in FIG. 2.1.26, the system b400 includes a combustor heat exchanger b448 positioned in a heat exchange relationship with the combustor b446. The hot combustion gases generated by the combustor b446 impart thermal energy to air flowing through the combustor heat exchanger b448.

Once heated by the combustor heat exchanger b448, the heated air is routed to the reformer b428. Specifically, as depicted, the combustor heat exchanger b448 is in fluid communication with the reformer b428 such that the heated air can be directed to and mixed with at least one of the fuel and the water therein. By heating the air input into the reformer b428, the temperature of the synthesized gas output by the reformer b428 is increased, which ultimately can increase the temperature of the hot side b112 of the closed cycle engine b110, thereby improving the efficiency of the closed cycle engine b110 and overall system.

The combustion gases generated by the combustor b446 are routed along a heater supply conduit b460 to ultimately provide a heat source b134 for various heat exchangers, such as the water heat exchanger b438, the fuel heat exchanger b432, and a recovery heat exchanger b442. As shown, the heater supply conduit b460 provides fluid communication between the combustor heat exchanger b448 and the recovery heat exchanger b442, the water heat exchanger b438, and the fuel heat exchanger b432. **In** this way, the combustion gases can act as a heat source b134 and impart thermal energy to the air flowing through the recovery heat exchanger b442, the water flowing through the water heat exchanger b438, and the fuel flowing through the fuel heat exchanger b432. **In** this example embodiment, the recovery heat exchanger b442 is positioned upstream of the water heat exchanger b438 and fuel heat exchanger b432. The water heat exchanger b438 is positioned upstream of the fuel heat exchanger b432 along the heater supply conduit b460. However, in alternative embodiments, the water heat exchanger b438 is positioned downstream of the fuel heat exchanger b432 along the heater supply conduit b460.

As further shown in FIG. 2.1.26, the closed cycle engine b110 has or defines a cold side b114, as noted previously, and the system further includes a chiller loop b240 operable to remove heat from the cold side b114 of the closed cycle engine b110. A chiller pump b456 is positioned along the chiller loop b240 and is operable to move a chiller working fluid through the chiller loop b240, including through the cold side b114 of the closed cycle engine b110 as depicted. The chiller working fluid can be any suitable working fluid, such a refrigerant, water, a supercritical fluid (e.g., supercritical carbon dioxide). A chiller heat exchanger b454 is positioned along the chiller loop b240. Notably, a cooling loop b458 is positioned in a heat exchange relationship with the chiller loop b240 for removing heat from the chiller working fluid flowing through the chiller heat exchanger b454. A fluid mover b452 is positioned along the cooling loop b458 and is operable to move air through the chiller heat exchanger b454. In this way, the air moved through the chiller heat exchanger b454 picks up heat from the chiller working fluid. Thus, the air becomes preheated air. Accordingly, the air flowing through the cooling loop b458 cools the chiller working fluid and recovers heat therefrom.

A recovery supply loop b450 provides fluid communication between the fluid mover b452 and the recovery heat exchanger b442 and ultimately to the cathode b424 of the fuel cell b420 and the combustor heat exchanger b448 as depicted in FIG. 2.1.26. Accordingly, after air is moved through the chiller heat exchanger b454 along the cooling loop b458, the preheated air is moved downstream to the recovery heat exchanger b442 along the recovery supply loop b450. The preheated air is heated once again at the recovery heat exchanger b442. As noted above, the recovery heat exchanger b442 is also in fluid communication with the heater supply conduit b460. In this manner, the combustion gases flowing downstream from the combustor heat exchanger b448 can impart thermal energy (e.g., heat) to the preheated air flowing through the recovery heat exchanger b442 along the recovery supply loop b450.

Once heated at the recovery heat exchanger b442, a first portion of the heated air flows to the cathode b424 of the fuel cell b420 along the recovery supply loop b450. In this manner, oxygen can be provided to the cathode b424 so that chemical reactions can take place. Moreover, a second portion of the heated air flows through the combustor heat exchanger b448 where the heated air is heated by the hot combustion gases generated by the combustor b446. Thereafter, the heated air, now at an even higher temperature, is routed to the reformer b428. In some embodiments, the recovery heat exchanger b442 is operable to superheat the air flowing from the fluid mover b452 to the combustor heat exchanger b448 and/or the cathode b424 of the fuel cell b420. In some embodiments, the air is superheated at the combustor heat exchanger b448.

The system also includes one or more electric machines b412. The one or more electric machines b412 are operatively coupled with at least one of the piston assemblies b126 of the closed cycle engine b110. The one or more electric machines b412 are operable to generate electrical power when driven by the piston assemblies b126 of the closed cycle engine b110. In some embodiments, the fuel cell b420 is operable to generate about 25 kWe and the one or more electric machines b412 are operable to produce about 25 kWe.

FIG. 2.1.27 provides a schematic block diagram depicting a power generation system b400 having a prime power generation system b402 and a heat recovery system b404 according to an example embodiment of the present disclosure. The prime power generation system b402 includes a prime power generator b406, which is a fuel cell b420 in this example embodiment. The fuel cell b420 can be a SOFC b420, for example. Generally, the fuel cell b420 is operable to generate electrical power. The heat recovery system b404 includes a bottoming-cycle system b408. The bottoming-cycle system b408 includes a closed cycle engine b110. The bottoming-cycle system b408 can recover heat generated by the fuel cell b420 and can direct the heat to a hot side b112 of the closed cycle engine b110. Particularly, the recovered heat can be used to increase the temperature of engine working fluid EWF within the piston bodies b122 of the closed cycle engine b110 at the hot side b112. The heat imparted to the engine working fluid EWF creates a temperature differential between the hot side b112 and the cold side b114 of the closed cycle engine b110. The expansion and compression of the engine working fluid EWF causes the piston assemblies b126 to move within their respective piston bodies b122, thereby producing useful work. The useful mechanical work can be converted into electrical power, e.g., by the one or more electric machines b412 operatively coupled with the piston assemblies b126.

The embodiment depicted in FIG. 2.1.27 has a similar configuration to the system of FIG. 2.1.26 except as provided below. For this embodiment, the synthesized gas yielded by the reformer b428 exits the reformer b428 and flows directly to the anode b422 of the fuel cell b420 (as opposed to flowing to the hot side b112 of the closed cycle engine b110 as shown in FIG. 2.1.26). Further, for the depicted embodiment of FIG. 2.1.27, the combustion gases exiting the combustor heat exchanger b448 flow downstream directly to the hot side b112 of the closed cycle engine b110 (as opposed to flowing to the reformer b428 or the recovery heat exchanger b442 as shown in FIG. 2.1.26) and then to the recovery heat exchanger b442. Accordingly, the hot side b112 of the closed cycle engine b110 is the first primary heat exchange element that the combustion gases exchange heat with after exiting the combustor heat exchanger b448. Moreover, in some embodiments, the combustion gases flowing downstream along the heater supply conduit b460 can exchange heat with the water flowing along the water supply conduit b440 at the water heat exchanger b438 and then may be exhausted downstream of the water heat exchanger b438 and upstream of the fuel heat exchanger b432. However, in other embodiments, the combustion gases flowing downstream along the heater supply conduit b460 can exchange heat first with the air flowing along the recovery supply loop b450 at the recovery heat exchanger b442, with the water flowing along the water supply conduit b440 at the water heat exchanger b438, and then with the fuel at the fuel heat exchanger b432. Thereafter, the hot combustion gases can be exhausted from the system. In some embodiments, the hot combustion gases can be directed to one or more thermal applications 140 for providing heat thereto.

Chapter 2.2 - Notarnicola Cycle and Constant Density Heat Exchangers

Chapter 2.2.1 - Notarnicola Cycle System

FIG. 2.2.1 provides a schematic view of a Notarnicola cycle system b500 operable to produce useful work according to an example embodiment of the present disclosure. For this embodiment, the system is a so-called Notarnicola cycle system b500 that operates on a Notarnicola cycle, or stated differently, on a constant density heat addition principle as will be explained further below.

The system b500 includes a loop b502. For this embodiment, the loop b502 is an open loop. In other embodiments, however, the loop b502 can be a closed loop. The system b500 includes various elements positioned along the loop b502. Particularly, a constant density heat exchanger b510 and an expansion device b504 are positioned along the loop b502. The expansion device b504 is positioned downstream of the constant density heat exchanger b510. The expansion device b504 can be any suitable type of expansion device b504, such as a turbine rotatable about an axis of rotation. A working fluid WF is movable through or along the loop b502. Specifically, the working fluid WF is movable through the constant density heat exchanger b510 and the expansion device b504 and then can be exhausted from the system or directed to one or more thermal applications b140 positioned downstream of the expansion device b504 along the loop b502. The working fluid WF can be supercritical fluid, such as e.g., supercritical carbon dioxide. In other embodiments, the working fluid WF can be any suitable working fluid. A pump can be positioned along the loop b502 for moving the working fluid WF through the loop b502. For instance, the pump can be positioned upstream of the constant density heat exchanger b510. Alternatively, the working fluid WF can be moved through the loop b502 passively as shown in FIG. 2.2.1.

The constant density heat exchanger b510 is positioned in thermal communication with a heat source b508. That is, the constant density heat exchanger b510 is positioned in a heat exchange relationship with the heat source b508. The heat source b508 can be any suitable type of heat source b508, such as the cold side b114 and/or hot side b112 of a closed cycle engine b110 (e.g., one of the Stirling engines described herein), solar energy, geothermal energy, wind energy, a turbine engine, an internal combustion engine, a battery or battery system, a braking system, some combination thereof, etc. In some embodiments, the heat source b508 in thermal communication with the constant density heat exchanger b510 can be switched or otherwise changed. For instance, the heat source b508 in thermal communication with the constant density heat exchanger b510 can be switched between a closed cycle engine b110 and solar energy. As shown, the heat source b508 gives off heat and the heat is captured by a heat sink b512 of the constant density heat exchanger b510, denoted by $Q_{IN}$ in FIG. 2.2.1. The captured heat imparts thermal energy to the working fluid WF flowing through the constant density heat exchanger b510 while the density of the working is held constant or fixed for a predetermined heating time, as will be explained more fully below.

The constant density heat exchanger b510 is operatively configured to hold a volume of the working fluid WF at constant density during heat application. Stated another way, the constant density heat exchanger b510 is operable to hold a volume of working fluid WF at a fixed density while increasing, via the heat source b508, the temperature and pressure of the working fluid WF. For instance, as depicted in FIG. 2.2.1, the constant density heat exchanger b510 is operable to hold the volume of working fluid WF at a fixed density while increasing, via the heat source b508, i) the temperature of the working fluid WF such that an outlet temperature T2 of the working fluid WF is greater than the inlet temperature T1 of the working fluid WF; and ii) the pressure of the working fluid WF such that an outlet pressure P2 of the working fluid WF is greater than the inlet pressure P1 of the working fluid WF. In some embodiments, the constant density heat exchanger b510 can superheat the working fluid WF. Furthermore, by increasing the pressure of the working fluid WF in addition to increasing the temperature of the working fluid WF, the potential energy of the working fluid WF can be increased, e.g., beyond what is achievable by only heating the working fluid WF, and thus, more useful work can be extracted, e.g., by the expansion device b504. Further, as will be explained below, a working chamber of the constant density heat exchanger b510 is configured to iteratively receive volumes of working fluid. In some embodiments, at least one of the volumes of working fluid received within the working chamber is held at constant density during heat application. In yet other embodiments, each volume of working fluid received within the working chamber is held at constant density during heat application.

FIGS. 2.2.2 and 2.2.3 provide schematic close-up views of one embodiment of a constant density heat exchanger b510 that can be utilized in the system of FIG. 2.2.1. In some embodiments, the system b500 (FIG. 2.2.1) includes one or more flow control devices. For instance, as depicted, the one or more flow control devices can include an inlet flow control device b514 and an outlet control device b516. The inlet flow control device b514 is positioned at an inlet b518 of a working chamber b524 defined by a housing b522 of the constant density heat exchanger b510. The outlet flow control device b516 is positioned at an outlet b520 of the working chamber b524. The one or more flow control devices b514, b516 are communicatively coupled with one or more controllers b526. The one or more flow control devices b514, b516 can be communicatively coupled with the one or more controllers b526 in any suitable manner, such as e.g., by one or more suitable wireless or wired communication links. The one or more controllers b526 are operatively configured to control the one or more flow control devices b514, b516. For instance, the one or more controllers b526 can send one or more command signals to the flow control devices, e.g., to move them to respective open positions or to respective closed positions. For instance, in FIG. 2.2.2, the flow control devices are shown in an open position in which the working fluid WF can flow into an out of the working chamber b524, and in contrast, in FIG. 2.2.3, the flow control devices are shown in a closed position in which the working fluid WF can neither flow into nor out of the working chamber b524.

An example heating cycle at constant or fixed density will now be described. As shown in FIG. 2.2.2, the one or more controllers b526 cause the inlet flow control device b514 and the outlet flow control device b516 to move to their respective open positions such that a volume of working fluid WF can flow out of the working chamber b524 (e.g., from a previous cycle) and a new volume of working fluid WF can flow into the working chamber b524. The one or more controllers b526 can cause the inlet flow control device b514 and the outlet flow control device b516 to move to their respective open positions substantially simultaneously. In yet other embodiments, the one or more controllers b526 can cause the outlet flow control device b516 and the inlet flow control device b514 to move to their respective open positions in such a way that one flow control device is opened a predetermined lag time behind the other. For instance, the one or more controllers b526 can cause the outlet flow control device b516 to move to the open position a predetermined lag time prior to causing the inlet flow control device b514 to move to the open position, or vice versa.

After the inlet flow control device b514 and outlet flow control device b516 are open for a predetermined open time or upon the working chamber b524 reaching a preselected volume of working fluid WF, the one or more controllers b526 cause the inlet flow control device b514 and the outlet flow control device b516 to move to their respective closed positions, e.g., as shown in FIG. 2.2.3. Notably, with the inlet flow control device b514 and the outlet flow control device b516 moved to their respective closed positions, the density of the working fluid WF within the working chamber b524 is held constant or fixed. That is, the working fluid WF is held at a constant density. As the working fluid WF is held at constant density, the heat source b508 (e.g., the heat source b508 of FIG. 2.2.1) applies heat to the working fluid WF within the working chamber b524. As noted above, the application of heat to the working fluid WF held at constant density increases the temperature and pressure of the working fluid WF, thereby increasing its potential energy.

After heating the working fluid WF at constant density for a predetermined heating time, the one or more controllers b526 cause the inlet flow control device b514 and the outlet flow control device b516 to move to their respective open positions. As will be appreciated with reference to FIG. 2.2.2, when the flow control devices are moved to their respective open positions, the working fluid WF heated at constant density exits the working chamber b524 and flows downstream, e.g., to the expansion device b504 of FIG. 2.2.1, and a new volume of working fluid WF flows into the working chamber such that it may be subjected to applied heat at constant density. The heating cycle continues or iterates during operation of the system.

Returning to FIG. 2.2.1, as shown, the expansion device b504 is in fluid communication with the constant density heat exchanger b510 and is operable to receive heated and pressurized working fluid WF therefrom. The expansion device b504 is operable to extract thermal energy from the working fluid WF to generate useful work, as denoted by $W_{OUT}$. The extraction of thermal energy from the working fluid WF causes the pressure and temperature of the working fluid WF to decrease. For instance, as shown in FIG. 2.2.1, the temperature T3 and pressure P3 of the working fluid WF downstream of the expansion device b504 is less than the temperature T2 and pressure P2 upstream of the expansion device b504 and downstream of the constant density heat exchanger b510. The expansion of the working fluid WF can drivingly rotate the expansion device b504 about its axis of rotation. In this way, one or more elements operatively coupled with the expansion device b504, e.g., via a shaft b506, can be driven as well. In some embodiments, for example, one or more electric machines b154 can be operatively coupled with the expansion device b504, and when driven by the expansion device b504, the one or more electric machines b154 can generate electrical power. Additionally or alternatively, in some embodiments, one or more pumps, compressors, blowers, gearboxes, and/or the like can be operatively coupled with the expansion device b504 and can be driven by the expansion device b504.

FIG. 2.2.4 provides a schematic view of another system operable to produce useful work according to an example embodiment of the present disclosure. For this embodiment, like the system of FIG. 2.2.1, the system is a so-called Notarnicola cycle system b500 that operates on a Notarnicola Cycle or a constant density heat addition principle.

The system includes a loop b502. For this embodiment, the loop b502 is a closed loop. The system includes various elements positioned along the loop b502. Particularly, a constant density heat exchanger b510, an expansion device b504, and a pump b528 are positioned along the loop b502. The constant density heat exchanger b510 is positioned between the expansion device b504 and the pump b528. For this embodiment, the constant density heat exchanger b510 is positioned downstream of the pump b528 and upstream of the expansion device b504. The expansion device b504 can be any suitable type of expansion device b504, such as a turbine rotatable about an axis of rotation. A working fluid WF is movable through the loop b502. The working fluid WF can be supercritical fluid, such as e.g., supercritical carbon dioxide. In other embodiments, the working fluid WF can be any suitable working fluid WF.

For this embodiment, the constant density heat exchanger b510 applies heat to a volume of working fluid WF held at constant density in the same manner as noted above with respect to the embodiment of FIG. 2.2.1. As the working fluid WF is held at constant density for a predetermined heating time during heat application, the flow of working fluid WF exiting the constant density heat exchanger b510 is effectively pulsed out of the constant density heat exchanger b510. For instance, FIG. 2.2.5 graphically depicts the mass flow rate of the working fluid WF at the outlet of the constant density heat exchanger b510 as a function of time. As noted above, the working fluid WF exiting the second heat exchanger exhibits pulse-like characteristics, which is embodied by the step wave shown in FIG. 2.2.5.

In some embodiments, as depicted in FIG. 2.2.4, the system includes one or more pulse converters b532. The one or more pulse converters b532 are positioned along the loop b502 upstream of the expansion device b504 and downstream of the constant density heat exchanger b510. Generally, the one or more pulse converters b532 are operable to smooth out or dampen the pulsed flow of working fluid WF flowing downstream from the constant density heat exchanger b510. Particularly, the one or more pulse converters b532 are operable to dampen the pulsed flow to substantially a steady-state flow. In this way, the downstream expansion device b504 can receive a substantially steady-state flow of working fluid WF. This can create a more steady useful workout by the expansion device b504 and can reduce undesirable vibration of the expansion device b504, among other benefits.

Furthermore, in some embodiments, a heat exchanger b530 is positioned along the loop b502. For this embodiment, the heat exchanger b530 is positioned downstream of the expansion device b504 and upstream of the pump b528. As shown, the heat exchanger b530 expels heat from the working fluid WF flowing along the loop b502, denoted by $Q_{OUT}$ in FIG. 2.2.4. In this way, the working fluid WF is better able to pick up or extract heat from the heat source b508 downstream thereof.

FIGS. 2.2.6a and 2.2.6b provide example pulse converters b532 that can be utilized with the system b500 of FIG. 2.2.4 and/or the system b500 of FIG. 2.2.1. As depicted in FIG. 2.2.6a, in some embodiments, the one or more pulse converters b532 can be configured as a Venturi-style nozzle having a converging nozzle b534, a throat b536, and a diverging diffuser b538. **In** the depicted embodiment of FIG. 2.2.6a, the ejector nozzle b534 converges the working fluid WF, thereby increasing the static pressure of the working fluid WF. The working fluid WF then flows through the throat b536 of the pulse converter b532 and accelerates into the diffuser b538. The working fluid WF slows as it flows along the diffuser b538 and downstream to the expansion device b504 (FIG. 2.2.4). Consequently, the pulsed flow exiting the constant density heat exchanger b510 can be smoothed out. That is, the working fluid WF exhibits a more steady state flow downstream of the pulse converter b532. Further, as depicted in FIG. 2.2.6b, in some embodiments, the working fluid WF can enter the pulse converter b532 through multiple inlet conduits, such as the first inlet conduit b535 and a second inlet conduit b537. Although two inlet conduits are shown in FIG. 2.2.6b, it will be appreciated that the working fluid WF can enter the pulse converter b532 through more than two inlet conduits. The multiple inlet conduits can facilitate smoothing of the working fluid WF by the pulse converter b532.

In some embodiments, at least two of the plurality of pulse converters b532 can be placed in series. In yet other embodiments, at least two of the plurality of pulse converters b532 can be placed in parallel. In some other embodiments, at least two pulse converters b532 can be placed in parallel with respect to one another and at least two pulse converters b532 can be placed in series. As noted above, such pulse converters b532 can dampen the pulsed flow of the working fluid WF exiting the constant density heat exchanger b510.

Returning to FIG. 2.2.4, as noted above, the system b500 also includes an expansion device b504 positioned downstream of the constant density heat exchanger b510. The expansion device b504 is operatively coupled with the pump b528 in this example embodiment. More specifically, the expansion device b504 is mechanically coupled with the pump b528 via a shaft b506 or shaft system. Furthermore, the expansion device b504 is in fluid communication with the constant density heat exchanger b510. The expansion device b504 is operable to extract thermal energy from the working fluid WF to generate useful work, as denoted by $W_{OUT}$. The extraction of thermal energy from the working fluid WF causes the pressure and temperature of the working fluid WF to decrease. The expansion of the working fluid WF can drivingly rotate the turbine about its axis of rotation, which in turn drives the shaft b506 and the pump b528 operatively coupled thereto. Moreover, when the shaft b506 is driven by rotation of the turbine, the useful work produced can be utilized to drive other components. In some embodiments, one or more electric machines b154 can be operatively coupled with the expansion device b504, and when driven by the expansion device b504, the one or more electric machines b154 can generate electrical power. Additionally or alternatively, in some embodiments, one or more pumps, compressors, blowers, gearboxes, electric motors, and/or the like can be operatively coupled with the expansion device b504 and can be driven by the expansion device b504. After the working fluid WF undergoes expansion at the expansion device b504, the working fluid WF flows downstream to the pump b528, where the working fluid WF is moved through the loop b502 once again.

FIG. 2.2.7 provides a schematic view of yet another system operable to produce useful work according to an example embodiment of the present disclosure. The system of FIG. 2.2.7 is configured in a similar manner as the system of FIG. 2.2.4 except as provided below. For this embodiment, the system includes more than one constant density heat exchangers b510. Particularly, the system includes a plurality of constant density heat exchangers b510 arranged in parallel. The system can include any suitable number of constant density heat exchangers b510. A single heat source b508 can give off heat to the constant density heat exchangers b510, or alternatively, a plurality of heat sources b134 can give off heat to the constant density heat exchangers b510. For instance, in some embodiments, each constant density heat exchanger b510 has an associated heat source b508.

Moreover, for this embodiment, each constant density heat exchanger b510 is operable to hold a volume of working fluid WF at constant density during heat application, e.g. in a manner described above. Each constant density heat exchanger b510 can each include an inlet flow control device b514 and an outlet flow control device b516, e.g., as depicted in FIGS. 2.2.2 and 2.2.3. Notably, one or more controllers b526 of the system can control the timing of the constant density heat exchangers b510 such that an inlet b540 of the expansion device b504 receives substantially a steady state flow of working fluid WF. More particularly, the one or more controllers b526 can cause the opening and closing of the inlet and outlet flow control devices b514, b516 such that the flow of working fluid WF flowing downstream to the inlet of the expansion device b504 is substantially steady state. In this way, the expansion device b504 can generate a more constant work output and undesirable vibration associated with a pulsed flow can be eliminated or reduced. The timing of the inlet and outlet flow control devices b514, b516 can be set based at least in part on the number of constant density heat exchangers b510, the distance from the outlet of the working chamber b524 of the constant density heat exchangers b510 to the inlet of the turbine, and the mass flow of the working fluid WF through the conduits of the loop b502, among other parameters.

## Chapter 2.2.2 - Notarnicola Cycle as Bottoming Cycle to Stirling Engine

FIG. 2.2.8 provides a schematic view of a power generation system b550 according to an example embodiment of the present disclosure. The power generation system b550 includes a prime power generation system b552 and a heat recovery or bottoming-cycle system b554 operable to recover heat from the prime power generation system b552 and use the recovered waste heat to produce useful mechanical work. The mechanical work can be used for various applications, such as generating electrical power and/or driving various elements operatively coupled thereto.

As depicted in FIG. 2.2.8, for this embodiment, the prime power generation system b552 includes a closed cycle engine operable to produce useful work. In other embodiments, the prime power generation system b552 can include other suitable types of power generators, including for example, a gas or steam turbine engine, solar panels, etc. The useful work produced by the closed cycle engine can be used for any suitable purpose, such as for causing one or more electric machines b154 operatively coupled thereto to generate electrical power. The closed cycle engine can be any of the closed cycle engines described herein, including for example, any of the Stirling engines described herein. As will be explained further below, heat from the closed cycle engine, or the waste heat source in this example, can be recovered/extracted and used by the bottoming-cycle system b554 to produce useful mechanical work. For instance, heat can be recovered from the cold side and/or the hot side of the closed cycle engine and used by the bottoming-cycle system b554 to produce useful mechanical work. The useful work produced by the bottoming-cycle system b554 can be used in turn to drive one or more elements, such as e.g., a compressor. Moreover, in some embodiments, one or more electric machines can be operatively coupled with components of the bottoming-cycle system b554. In this way, the mechanical work can be used for generating electrical power. Furthermore, notably, the bottoming-cycle system b554 of FIG. 2.2.8 is a Notarnicola cycle system that operates on a Notarnicola Cycle, or stated another way, on a constant density heat addition principle as explained above.

FIG. 2.2.9 provides a schematic view of a power generation system b550 according to an example embodiment of the present disclosure. FIG. 2.2.9 is configured in a similar manner as the power generation system b550 of FIG. 2.1.9, except for this embodiment, the superheater positioned along the bottoming-cycle loop b250 of the chiller loop b240 and the heat recovery loop b214 of the heater loop b210 is a constant density heat exchanger b560. As such, the chiller working fluid CWF flowing through the bottoming-cycle loop b250 at the superheater b560 can be held at constant density during heat application to increase the temperature and pressure of the chiller working fluid CWF. The hot combustion gases or heating working fluid HWF flowing through the heat recovery loop b214 apply heat to the chiller working fluid CWF held at constant density at the superheater b560.

FIG. 2.2.10 provides a close-up schematic view of the bottoming-cycle system b554 of the power generation system b550 of FIG. 2.2.9. As noted above, the bottoming-cycle system b554 is a Notarnicola cycle system b500 that operates on a constant density heat addition principle, or more concisely stated, on a Notarnicola Cycle. Generally, the bottoming-cycle Notarnicola cycle system b554 includes a bottoming-cycle loop b250 along which a working fluid may flow, such as e.g., the chiller working fluid CWF. The chiller working fluid CWF can be supercritical fluid, such as e.g., supercritical carbon dioxide. In other embodiments, the chiller working fluid CWF can be another suitable working fluid.

The Notarnicola cycle system b500 includes various elements positioned along the bottoming-cycle loop b250. For the depicted embodiment of FIG. 2.2.10, the system includes a pump b252 operable to move the chiller working fluid CWF through the bottoming-cycle loop b250. The chiller working fluid CWF has a pressure P1 and a temperature T1 upstream of the pump b252 and downstream of the third heat exchanger b258. The chiller working fluid CWF has a pressure P2+ and a temperature T1 at the outlet of the pump b252. Notably, the pressure P2+ is greater than the pressure P1. Stated differently, the pressure P2+ of the chiller working fluid CWF exiting the pump b252 is greater than the pressure P1 of the chiller working fluid CWF entering the pump b252.

A cold side heat exchanger b116 is positioned downstream of and is in fluid communication with the pump b252. The cold side heat exchanger b116 receives the chiller working fluid CWF from the pump b252. The chiller working fluid CWF has a pressure P2 and a temperature T1 at the inlet of the cold side heat exchanger b116. The pressure P2 of the chiller working fluid CWF at the inlet of the cold side heat exchanger b116 is less than the pressure P2+ of the chiller working fluid CWF immediately downstream of the pump b252. Accordingly, the chiller working fluid CWF can suffer pressure losses while traveling from the pump b252 to the cold side heat exchanger b116. Notably, the cold side heat exchanger b116 is positioned in a heat exchange relationship with a first heat source b508, which in this embodiment is the cold side b114 of the closed cycle engine b110. In this way, heat can be extracted from the cold side b114 and used to heat the chiller working fluid CWF flowing through the bottoming-cycle loop b250. As shown in FIG. 2.2.10, heat captured from the cold side b114 of the closed cycle engine b110 and routed to the cold side heat exchanger b116 is denoted by $Q_{IN}1$. The captured heat imparts thermal energy to the chiller working fluid CWF flowing through the cold side heat exchanger b116, and accordingly, the temperature of the chiller working fluid CWF increases. Particularly, the chiller working fluid CWF exits the cold side heat exchanger b116 at a temperature T2 and a pressure P2-. Accordingly, the pressure of the chiller working fluid CWF flowing across the cold side heat exchanger b116 decreases while the temperature increases. That is, the pressure P2- is less than the pressure P2 and the temperature T2 is greater than the temperature T1.

A second heat exchanger or constant density superheater b560 is positioned along the bottoming-cycle loop b250 downstream of the cold side heat exchanger b116. Accordingly, the constant density superheater b560 receives the chiller working fluid CWF from the cold side heat exchanger b116. The constant density superheater b560 is in a heat exchange relationship with a second heat source, which is the heating working fluid HWF (e.g., hot combustion gases) flowing along the heat recovery loop b214 of the heater loop b210 in this embodiment. As depicted in FIG. 2.2.10, waste heat denoted by $Q_{IN}2$ is captured and routed to the constant density superheater b560. The captured heat imparts thermal energy to the chiller working fluid CWF flowing through the constant density superheater b560 while the volume of the working is held at constant density for a predetermined heating time.

As noted above, the constant density superheater b560 is a constant density heat exchanger in this embodiment. Particularly, the constant density superheater b560 is configured to hold a volume of chiller working fluid CWF at a constant density during heat application. Stated another way, the constant density superheater b560 is a constant density heat exchanger operable to hold a volume of chiller working fluid CWF flowing therethrough constant or fixed while increasing, via a heat source b508 (e.g., by the combustion gases passing through the superheater), the chiller working fluid CWF to a temperature T3 greater than the temperature T2 and the temperature T1. Furthermore, as the volume of the chiller working fluid CWF is held at constant density for a predetermined heating time, the constant density superheater b560 is operable to increase, via the heat source b508, the chiller working fluid CWF to a pressure P3 that is greater than the pressure P2 and pressure P1. In some embodiments, the second heat exchanger can superheat the chiller working fluid CWF. The increased pressure and temperature of the chiller working fluid CWF increases the potential energy of the chiller working fluid CWF, and thus, more useful work can be extracted, e.g., by an expansion device b256. The constant density superheater b560 can operate in the same or similar manner as described above with reference to FIGS. 2.2.2 and 2.2.3 and thus will not be repeated here.

As the chiller working fluid CWF is held at constant density for a predetermined heating time during heat application, the flow of chiller working fluid CWF exiting the constant density superheater b560 is effectively pulsed out of the constant density superheater b560. For instance, FIG. 2.2.5 graphically depicts the mass flow rate as a function of time of the chiller working fluid CWF exiting the constant density superheater b560. As noted above, the chiller working fluid CWF exiting the constant density superheater b560 exhibits pulse characteristics, which is embodied by the step wave shown in FIG. 2.2.5. As depicted in FIG. 2.2.10, one or more pulse converters b532 can be positioned along the bottoming-cycle loop b250 between the constant density superheater b560 and the expansion device b256. The one or more pulse converters b532 are operable to smooth out or dampen the pulsed flow of chiller working fluid CWF flowing downstream from the constant density superheater b560. Particularly, the one or more pulse converters b532 are operable to dampen the pulsed flow to substantially a steady-state flow. In this way, the downstream expansion device b256 can receive a substantially steady-state flow of chiller working fluid CWF. The pulse converters b532 can be configured in the same or similar manner as the pulse converters b532 shown in FIGS. 2.2.6a and/or 2.2.6b.

Returning to FIG. 2.2.10, as noted above, the bottoming-cycle system b554 embodied as a Notarnicola cycle system b500 also includes an expansion device b256 positioned downstream of the constant density superheater b560. The expansion device b256 can be a turbine, for example. The expansion device b256 is operatively coupled with the pump b252 in this example embodiment. More specifically, the expansion device b256 is mechanically coupled with the pump b252 via a shaft or shaft system. Furthermore, the expansion device b256 is in fluid communication with the constant density superheater b560. The expansion device b256 is operable to extract thermal energy from the chiller working fluid CWF to generate useful work. as denoted by $W_{OUT}$. Particularly, the expansion of the chiller working fluid CWF can drivingly rotate the expansion device b256 about its axis of rotation, which in turn drives the shaft and the pump b252 operatively coupled thereto. Moreover, when the shaft is driven by rotation of the expansion device b256, the useful work produced can be utilized to drive other components. For example, the useful work produced can drive a compressor of the closed cycle engine b110 operatively coupled with the expansion device b256 via a shaft. Consequently, waste heat from the closed cycle engine b110 can be utilized to produce work that can ultimately be utilized for driving one or more components of the closed cycle engine b110, such as e.g., compressors, fans, pumps, etc. Furthermore, for this embodiment, one or more electric machines b262 are operatively coupled with the expansion device b256. Accordingly, when the expansion device b256 is driven about its axis of rotation by expansion of the chiller working fluid CWF, the electric machines b262 operatively coupled with the expansion device b256 can generate electrical power.

When the working fluid exits the expansion device b256, the working fluid has a pressure P4 and a temperature T4. As depicted in FIG. 2.2.10, the pressure P4 is greater than the pressure P1 but less than the pressure P3. The pressure P4 is less than the pressure P3 due to the extraction of the energy from the working fluid by the expansion device b256. The temperature T4 is greater than the temperature T1 but less than the temperature T3. The temperature T4 is less than the temperature T3 due to the extraction of energy from the working fluid by the expansion device b256.

The system b554 also includes a third heat exchanger or third heat exchanger b258 positioned along the bottoming-cycle loop b250. The third heat exchanger b258 has an inlet and an outlet. The inlet of the third heat exchanger b258 is in fluid communication with the expansion device b256 and the outlet of the third heat exchanger b258 is in fluid communication with the pump b252. Accordingly, the third heat exchanger b258 is positioned downstream of and is in fluid communication with the expansion device b256 and the third heat exchanger b258 is positioned upstream of and is in fluid communication with the pump b252. Thus, the third heat exchanger b258 receives the working fluid from the expansion device b256 and the pump b252 receives the working fluid from the third heat exchanger b258. The third heat exchanger b258 is operable to decrease the temperature of the working fluid. In this way, the working fluid is better able to extract heat from the cold side b114 of the engine. As depicted, the third heat exchanger b258 is operable to decrease the temperature of the working fluid to a temperature T1, which is less than the temperature T4, the temperature T3, and the temperature T2. As the temperature decreases, the pressure of the working fluid decreases as well. As depicted, the pressure of the working fluid decreases to P1, which is less than the pressure P4, the pressure P3, and the pressure P2. A cooling fluid CF (e.g., air) flowing along the cooling loop b280 can be passed through the third heat exchanger b258 to remove heat from the chiller working fluid CWF flowing therethrough.

FIG. 2.2.11 depicts the advantages of the constant density heat application process described above. Particularly, FIG. 2.2.11 depicts a T-s diagram (i.e., a temperature-entropy diagram) of the closed cycle engine b110 utilizing the advantages of the constant density heat application process described above. As shown, using the constant density heat exchange process during super heating or reheating of the working fluid leads to a higher turbine inlet temperature, and therefore, more work out. This can be seen particularly on the T-s diagram where the constant density super heating causes the working fluid to increase isobars in temperature compared to a baseline system without constant density heat application. One benefit of the constant density heat exchange process is an increase of nearly twice the temperature difference across the expansion device b256 (FIG. 2.2.10) or turbine.

FIG. 2.2.12 provides a schematic view of another power generation system b580 according to an example embodiment of the present disclosure. The power generation system b580 depicted in FIG. 2.2.12 has a similar configuration to the system b550 of FIG. 2.2.10 except as provided below. Notably, for this embodiment, the cold side heat exchanger is a constant density heat exchanger b582. The cold side constant density heat exchanger b582 can be configured and can operate in the same or similar manner as described above. As depicted, the heat source can be the heat extracted from the cold side b114 of the closed cycle engine b110.

FIG. 2.2.13 provides a schematic view of another power generation system b590 according to an example embodiment of the present disclosure. The power generation system b590 depicted in FIG. 2.2.13 has a similar configuration to the system b550 of FIG. 2.2.10, except as provided below. Notably, for this embodiment, the cold side heat exchanger and the superheater are both constant density heat exchangers. Thus, the cold side heat exchanger is a constant density cold side heat exchanger b582 and the superheater is a constant density superheater b560. The cold side constant density heat exchanger b582 and the constant density superheater b560 can be configured and can operate in the same or similar manner as the constant density heat exchangers described above.

As shown in FIG. 2.2.13, for instance, the constant density cold side heat exchanger b582 is operable to hold a volume of working fluid (e.g., chiller working fluid CWF) at fixed density while increasing, via the heat source b508, the temperature and pressure of the working fluid. Particularly, the constant density cold side heat exchanger b582 is operable to hold the volume of working fluid at a fixed density while increasing, via the heat source (e.g., the heat extracted from the cold side b114 of the engine), i) the temperature of the working fluid such that an outlet temperature T2 of the working fluid is greater than the inlet temperature T1 of the working fluid; and ii) the pressure of the working fluid such that an outlet pressure P2++ of the working fluid is greater than the inlet pressure P2 of the working fluid. Thus, instead of a pressure drop across the cold side heat exchanger b116 (e.g., as occurs in the depicted embodiment of FIG. 2.2.10), the pressure of the working fluid is increased, e.g., from P2 to P2++).

Furthermore, the constant density superheater b560 is operable to hold a volume of working fluid at fixed density while increasing, via the heat source b508, the temperature and pressure of the working fluid flowing along the bottoming-cycle loop b250. Particularly, the constant density superheater b560 is operable to hold the volume of working fluid at a fixed density while increasing, via the heat source b508 (e.g., waste heat from the hot side b112 of the closed cycle engine b110 and/or some other source), i) the temperature of the working fluid such that an outlet temperature T3 of the working fluid is greater than the inlet temperature T2 of the working fluid; and ii) the pressure of the working fluid such that an outlet pressure P3 of the working fluid is greater than the inlet pressure P2++ of the working fluid. By increasing the pressure of the working fluid at the constant density cold side heat exchanger b582 and at the constant density superheater b560, the potential energy of the working fluid can be increased beyond what is achievable simply by heating the working fluid or by increasing its pressure by a single constant density heat exchanger, and thus, more useful work can be extracted, e.g., by the expansion device b256.

FIG. 2.2.14 provides a schematic view of a power generation system b100 according to an example embodiment of the present disclosure. FIG. 2.2.14 is configured in a similar manner as the power generation system b100 of FIG. 2.2.9, except as provided below.

For this embodiment, a Notarnicola cycle system b500 is positioned along the heater loop b210. Particularly, the Notarnicola cycle system b500 is positioned along the heat recovery loop b214 of the heater loop b210. As depicted, a constant density heat exchanger b602 is positioned downstream of the fuel preheater b304 along the heat recovery loop b214. A turbine b604 or expansion device is positioned downstream of the constant density heat exchanger b602 along the heat recovery loop b214. In some embodiments, a pulse converter b532 can be positioned between the constant density heat exchanger b602 and the turbine b604, e.g., for smoothing out or dampening the pulses of working fluid. Combustion gases or heating working fluid HWF flowing along the heat recovery loop b214 can flow through the constant density heat exchanger b602. In some embodiments, the constant density heat exchanger b602 can hold a volume of combustion gases at constant density during heat application, e.g., by a heat source as denoted by $Q_{IN}$ in FIG. 2.2.14. The working chamber of the constant density heat exchanger b602 can iteratively receive volumes of combustion gases and hold or trap them at constant density during heat application. After a volume of combustion gases is heated at constant density, the volume of combustion gases can then flow downstream to the turbine b604 such that the turbine b604 can extract thermal energy therefrom to produce useful work. One or more electric machines b154 operatively coupled with the turbine b604 can then generate electrical power. After expansion of the combustion gases at the turbine b604, the combustion gases can be exhausted from the system, e.g., to an ambient environment, and/or can flow downstream to one or more thermal applications b140.

In other embodiments, the combustion gases can be used as the heat source b508 for applying heat to a working fluid flowing through the constant density heat exchanger b602. For instance, a working fluid (e.g., ambient air) can be passed through the constant density heat exchanger b602 and held at constant density while the heat from the heating working fluid HWF (e.g., combustion gases) heats or imparts thermal energy to the working fluid. In this way, the temperature and pressure of the working fluid can be increased and thus its potential energy can be increased as well. The working fluid can then flow downstream to an expansion device. The expansion device can extract thermal energy from the working fluid to produce useful work. One or more electric machines b154 operatively coupled with the turbine b604 can then generate electrical power. After expansion of the working fluid at the turbine b604, the working fluid can be exhausted from the system, e.g., to an ambient environment, and/or can flow downstream to one or more thermal applications b140. Similarly, the combustion gases can be exhausted from the system, e.g., to an ambient environment, and/or can flow downstream to one or more thermal applications b140.

FIG. 2.2.15 provides a schematic view of another system operable to produce useful work according to an example embodiment of the present disclosure. For this embodiment, the system is a Notarnicola cycle system b500 that operates on a Notarnicola cycle, or stated another way, on a constant density heat addition principle.

The system includes a loop b502. For this embodiment, the loop b502 is an open loop. In other embodiments, however, the loop b502 can be a closed loop. A working fluid WF is movable through the loop b502. The working fluid WF can be supercritical fluid, such as e.g., supercritical carbon dioxide. In other embodiments, the working fluid WF can be any suitable working fluid WF, such as air. Notably, for this embodiment, the functions of the constant density heat exchanger and the expansion device are combined into a single device positioned along the loop b502, referred to herein as a constant density heat exchanger expansion device, or more concisely stated, a "Wrankel device b800."

The Wrankel device b800 is positioned in thermal communication with a heat source b508. That is, the Wrankel device b800 is positioned in a heat exchange relationship with the heat source b508. The heat source b508 can be any suitable type of heat source b508, such as the cold side b114 and/or hot side b112 of a closed cycle engine b110 (e.g., one of the Stirling engines described herein), solar energy, geothermal energy, wind energy, a turbine engine, an internal combustion engine, a battery or battery system, a braking system, some combination thereof, etc. In some embodiments, the heat source b508 in thermal communication with the Wrankel device b800 can be switched or otherwise changed. For instance, the heat source b508 in thermal communication with the Wrankel device b800 can be switched between a closed cycle engine b110 and solar energy. As shown, the heat source b508 gives off heat and the heat is captured by the Wrankel device b800, denoted by $Q_{IN}$ in FIG. 2.2.15. The captured heat imparts thermal energy to the working fluid WF flowing through the Wrankel device b800 while the density of the working is held constant or fixed for a predetermined heating time. That is, the Wrankel device b800 is operable to hold a volume of working fluid WF moving through the loop b502 at constant density during heat application. In this way, the pressure and temperature of the working fluid WF is increased, which ultimately increases the potential energy of the working fluid WF.

The Wrankel device b800 then facilitates expansion of the volume of working fluid WF held at constant density during heat application. In this manner, the Wrankel device b800 can produce useful work. For instance, the expansion of the working fluid WF can drive a shaft b802 of the Wrankel device b800 about its axis of rotation. In some embodiments, one or more components can be operatively coupled to the shaft b802 such that they are driven by the Wrankel device b800. After the Wrankel device b800 extracts energy from the working fluid WF during expansion to produce useful work, the working fluid WF is exhausted downstream of the Wrankel device b800. In some embodiments, the working fluid WF can be used to provide a heat source b508 to one or more thermal applications b140 downstream of the Wrankel device b800.

FIG. 2.2.16 provides a schematic view of another system operable to produce useful work according to an example embodiment of the present disclosure. For this embodiment, the system is a Notarnicola cycle system b500 that operates on a Notarnicola cycle or a constant density heat addition principle. FIG. 2.2.16 is configured in a similar manner as the power generation system b100 of FIG. 2.2.10, except as provided below.

For this embodiment, the Notarnicola cycle system b500 is a bottoming-cycle system b250 of a closed cycle engine b110, such as any of the closed cycle engines described herein. Further, notably, the superheater and the expansion device are combined into a Wrankel device b800 in this embodiment. That is, the superheater and the expansion device are combined into a single device that functions as a constant density heat exchanger and expansion device.

The Wrankel device b800 is positioned in thermal communication with a heat source, which is the heating working fluid HWF (e.g., hot combustion gases) flowing along the heat recovery loop b214 of the heater loop b210. That is, the Wrankel device b800 is positioned in a heat exchange relationship with the hot combustion gases flowing along the heat recovery loop b214. As shown, the hot combustion gases give off heat and the heat is captured by the Wrankel device b800, denoted by $Q_{IN}2$ in FIG. 2.2.16. The captured heat imparts thermal energy to the chiller working fluid CWF flowing through the Wrankel device b800 while the density of the working is held constant or fixed for a predetermined heating time. That is, the Wrankel device b800 is operable to hold a volume of chiller working fluid CWF moving through the loop b250 at constant density during heat application. In this way, the pressure and temperature of the chiller working fluid CWF is increased, which ultimately increases the potential energy of the chiller working fluid CWF. In some embodiments, the Wrankel device b800 is operable to superheat the chiller working fluid CWF held at constant density.

The Wrankel device b800 then facilitates expansion of the volume of chiller working fluid CWF held at constant density during heat application. In this manner, the Wrankel device b800 can produce useful work. For instance, the expansion of the chiller working fluid CWF can drive a shaft of the Wrankel device b800 about its axis of rotation. In some embodiments, one or more components can be operatively coupled to the shaft such that they are driven by the Wrankel device b800. For instance, for this embodiment, one or more electric machines b262 are operatively coupled with the Wrankel device b800 via the shaft or shaft system. Accordingly, when the shaft is driven about its axis of rotation, the one or more electric machines b262 operatively coupled thereto are configured to generate electrical power. After the Wrankel device b800 extracts energy from the chiller working fluid CWF during expansion to produce useful work and ultimately electrical power, the chiller working fluid CWF is moved downstream to the third heat exchanger b258 where the chiller working fluid CWF is cooled, e.g., by cooling fluid CF flowing through the cooling loop b280. Next, the cooled chiller working fluid CWF flows downstream to the pump b252. The pump b252 moves the chiller working fluid CWF through the bottoming-cycle loop b250. After flowing through the pump b252, the chiller working fluid CWF picks up or extracts heat from the cold side b114 of the closed cycle engine b110, e.g., to provide cooling thereto. Thereafter, as noted above, the chiller working fluid CWF flows downstream to the Wrankel device b800.

## Chapter 2.2.4 - Linear Constant Density HX

FIG. 2.2.18 provides a schematic cross-sectional view of a linear constant density heat exchanger b650 according to an aspect of the present disclosure. Generally, the linear constant density heat exchanger b650 is operable to hold a volume of working fluid at constant density for a predetermined heating time while heat is applied to the working fluid. The linear constant density heat exchanger b650 can be implemented in any of the embodiments of the Notarnicola cycle system b500 and/or any of the systems described herein. For reference, the linear constant density heat exchanger b650 defines an axial direction A, a radial direction R, a circumferential direction C, and an axial centerline AC extending along the axial direction A. The radial direction R extends to and from the axial centerline AC in a direction orthogonal to the actual direction A. The circumferential direction C extends 360° around the axial centerline AC.

The linear constant density heat exchanger b650 includes a housing b652 defining at least a portion of a working chamber b654 operable to receive a working fluid therein. The working fluid is denoted in FIG. 2.2.18 as "WF" and can be any suitable fluid. For instance, in some embodiments, the working fluid WF is a supercritical fluid. For example, in some embodiments, the working fluid WF is a supercritical carbon dioxide. For the depicted embodiment of FIG. 2.2.18, the housing b652 is tubular. The tubular housing b652 is elongated and extends between a first end b660 and a second end b662 along the axial direction A. The first end b660 of the tubular housing b652 is connected to (e.g., threadingly engaged with) an inlet port b664. The inlet port b664 is in turn connected to (e.g., threadingly engaged with) an inlet housing b667. The inlet port b664 is also connected to (e.g., threadingly engaged with) an inlet conduit b670 that provides a means for the working fluid to flow into the linear constant density heat exchanger b650. In addition, the inlet housing b667 is connected to (e.g., threadingly engaged with) a first heat exchanger port b672, which in this embodiment is an outlet heat exchanger port in this embodiment. As will be explained further below, a heat exchange fluid HXF flowing through the linear constant density heat exchanger b650 can exit the constant density heat exchanger via the first heat exchanger port b672. The heat exchange fluid HXF can be any suitable type of fluid. For instance, as one example, the heat exchange fluid HXF can be combustion gases flowing along a heat recovery loop b214. The inlet housing b667 defines an inlet chamber b668 operable to receive the tubular housing b652, as well as a portion of the inlet port b664 and a portion of the first heat exchanger port b672. Furthermore, a heater housing b688 is also connected to (e.g., threadingly engaged with) the inlet housing b667.

The linear constant density heat exchanger b650 also includes an outlet housing b678 spaced from the inlet housing b667 along the axial direction A. The outlet housing b678 defines an outlet chamber b680 operable to receive at least portion of the tubular housing b652 therein. The second end b662 of the tubular housing b652 is connected to (e.g., threadingly engaged with) an outlet port b676. The outlet port b676 is in turn connected to an outlet housing b678. The outlet port b676 is also connected to (e.g., threadingly engaged with) an outlet conduit b682 that provides a means for the working fluid to flow out of or exit the linear constant density heat exchanger b650. **In** addition, the outlet housing b678 is connected to (e.g., threadingly engaged with) a second heat exchanger port b684, which in this embodiment is an inlet heat exchanger port, labeled as the second heat exchanger port b684 in FIG. 2.2.18. As will be explained further below, a heat exchange fluid **HXF** flowing through the linear constant density heat exchanger b650 can enter the heat exchanger via the second heat exchanger port b684. The outlet housing b678 defines an outlet chamber b680 operable to receive at least a portion of the tubular housing b652, as well as a portion of the outlet port b676 and a portion of the second heat exchanger port b684. The heater housing b688 is also connected to (e.g., threadingly engaged with) the outlet housing b678.

The heater housing b688 extends between the inlet housing b667 and the outlet housing b678 along the axial direction A, and as noted above, the heater housing b688 is connected to (e.g., threadingly engaged with) the inlet housing b667 at one end and the outlet housing b678 at its opposite end. Notably, the heater housing b688 annularly surrounds the tubular housing b652 between the inlet housing b667 and the outlet housing b678. That is, the heater housing b688 extends annularly around the tubular housing b652 at least between the inlet housing b667 and the outlet housing b678 along the axial direction A. An annular or ring-shaped heat exchange chamber b690 is defined between the heater housing b688 and the tubular housing b652. However, in some embodiments, the heat exchange chamber b690 need not be annular. The heat exchange chamber b690 provides fluid communication between the inlet chamber b668 defined by the inlet housing b667 and the outlet chamber b680 defined by the outlet housing b678. In this way, heat exchange fluid HXF can flow therebetween and impart heat or thermal energy to the working fluid contained within the working chamber b654. Stated another way, heat exchange fluid HXF can enter the linear constant density heat exchanger b650 through second heat exchanger port b684 and can flow downstream into the outlet chamber b680 defined by the outlet housing b678. The heat exchange fluid HXF can then flow further downstream into the heat exchange chamber b690 defined between the radially outer surface of the tubular housing b652 and the inner radial surface of the heater housing b688. The heat exchange fluid HXF can flow along the axial direction A through the heat exchange chamber b690 of the tubular housing b652. In this example embodiment, the heat exchange fluid HXF flows from right to left in FIG. 2.2.18. The heat exchange fluid HXF eventually flows downstream into the inlet chamber b668 defined by the inlet housing b667. The heat exchange fluid HXF then exits the linear constant density heat exchanger b650 via the first heat exchanger port b672. In alternative embodiments, the linear constant density heat exchanger b650 can be configured such that the heat exchange fluid HXF flows from left to right in the depicted embodiment of FIG. 2.2.18.

The linear constant density heat exchanger b650 also includes one or more flow control devices operable to selectively allow a volume of working fluid to enter and exit the working chamber b654. In this example embodiment, the flow control devices are valves. The one or more valves include a first valve b674 or first flow control device and a second valve b686 or second flow control device. The first valve b674 is positioned along the inlet conduit b670 at or proximate the inlet of the constant density heat exchanger and the second valve b686 is positioned along the outlet conduit b682 at the outlet of the constant density heat exchanger. In some embodiments, the first valve b674 and the second valve b686 are both solenoid valves. However, in other embodiments, the first and second valve b674, b686 can be other suitable types of valves.

Moreover, as depicted, the working chamber b654 has an inlet and an outlet. In some embodiments, the inlet and the outlet of the working chamber b654 are defined by the tubular housing b652, e.g., at the first end b660 and the second end b662, respectively. In yet other embodiments, the inlet and the outlet of the working chamber b654 are defined by other components of the linear constant density heat exchanger b650. For instance, for the depicted embodiment of FIG. 2.2.18, the inlet of the working chamber b654 is defined by the inlet conduit b670 immediately downstream of the first valve b674 and the outlet of the working chamber b654 is defined by the outlet conduit b682 immediately upstream of the second valve b686. The first valve b674 is movable between an open position and a closed position. Likewise, the second valve b686 is movable between an open position and a closed position. In some embodiments, the one or more valves are communicatively coupled with one or more controllers b692. The one or more controllers b692 can be configured in a manner as described in Chapter 5. The one or more controllers b692 can cause the valves to move between their respective open and closed positions. The one or more controllers b692 can cause the valves to open and/or close simultaneously or at offset times from one another.

An example manner in which the linear constant density heat exchanger b650 can heat working fluid held at constant density will now be described. That is, an example heating cycle will now be described. In some embodiments, the one or more controllers b692 are configured to cause the first valve b674 and the second valve b686 to move to their respective open positions such that a first volume of working fluid flows into the working chamber b654. As this occurs, a volume of working fluid heated while held at constant density during a previous heating cycle exits the working chamber b654. That is, in causing the first valve b674 and the second valve b686 to move to their respective open positions, a new or unheated volume of working fluid flows into the working chamber b654 while the volume of working fluid heated at constant density during a previous heating cycle flows out of the working chamber b654. Thus, when the valves are moved to their respective open positions, a volume of working fluid heated at constant density exits the working chamber b654 and a non-heated volume of working fluid enters the working chamber b654.

After a predetermined open time has elapsed, the one or more controllers b692 cause the first valve b674 and the second valve b686 to move to their respective closed positions such that a volume of working fluid is contained within the working chamber b654 at constant density. The first and second valves b674, b686 can be closed simultaneously. With the density of the working fluid held constant within the working chamber b654, the heat exchange fluid HXF flowing through the heat exchange chamber b690 heats or imparts thermal energy to the working fluid held at constant density for a predetermined heating time (e.g., about five seconds, about one second, about 250 milliseconds, etc.). For instance, the heat exchange fluid HXF can flow serially through the outlet chamber b680, the heat exchange chamber b690, and the inlet chamber b668 as described above (e.g., in a direction generally to the left in FIG. 2.2.18). As this occurs, the heat exchange fluid HXF heats the working fluid held at constant density within the working chamber b654. As the working fluid is held at constant density within the working chamber b654 during heat application, the temperature and pressure of the working fluid increases. The increased temperature and pressure of the working fluid increases the potential energy of the working fluid, and consequently, more useful work can be produced from the working fluid, by an expansion device positioned downstream of the linear constant density heat exchanger b650.

After the predetermined heating time has elapsed and the working fluid is heated at constant density to increase the temperature and pressure of the working fluid, the one or more controllers b692 can cause the first valve b674 and the second valve b686 to move to their respective open positions such that the heated volume of working fluid flows out of the working chamber b654. As this occurs, a non-heated volume of working fluid flows into the working chamber b654. That is, in causing the first valve b674 and the second valve b686 to move to their respective open positions, the heated volume of working fluid flows out of the working chamber b654 and another or second volume of working fluid is permitted to flow into the working chamber b654, e.g., to start the heating cycle once again. The first and second valves b674, b686 can be opened simultaneously. Alternatively, the first and second valves b674, b686 can be controlled by the one or more controllers b692 to open at offset times.

FIG. 2.2.19 provides a schematic cross sectional view of another linear constant density heat exchanger b650 according to an example embodiment of the present disclosure. Generally, the linear constant density heat exchanger b650 of FIG. 2.2.19 is configured in a similar manner as the linear constant density heat exchanger b650 of FIG. 2.2.18, except as provided below.

For this embodiment, the housing extends between a first end b660 and a second end b662 along the axial direction A. The housing has a housing inlet port b696 at the first end b660 defining an inlet b656 of the working chamber b654 and a housing outlet port b698 at the second end b662 defining an outlet b658 of the working chamber b654. The housing inlet port b696 of the housing is connected to (e.g., threadingly engaged with) the inlet housing b667, which is connected to (e.g., threadingly engaged with) the first heat exchanger port b672. An outlet port b676 is disposed around the housing outlet port b698 and is connected to (e.g., threadingly engaged with) the outlet housing b678. The housing outlet port b698 is received within the outlet port b676 as shown in FIG. 2.2.19. A sealing member b694 extends annularly around the housing outlet port b698 and provides a seal between the housing outlet port b698 and the outlet port b676. The sealing member b694 prevents heat exchange fluid HXF from exiting the outlet housing b678. The heater housing b688 is connected to (e.g., threadingly engaged with) the inlet housing b667 at one end and the outlet housing b678 at its other end.

Notably, for this embodiment, the housing has a plurality of heat exchange tubes b700 extending between the housing inlet port b696 and the housing outlet port b698 of the housing. In some embodiments, the plurality of heat exchange tubes b700 include at least two (2) heat exchange tubes b700 extending between the inlet port b664 and the outlet port b676. In other embodiments, the plurality of heat exchange tubes b700 include at least eight (8) heat exchange tubes b700 extending between the inlet port b664 and the outlet port b676. In yet other embodiments, the plurality of heat exchange tubes b700 include at least twenty (20) heat exchange tubes b700 extending between the inlet port b664 and the outlet port b676 (e.g., as shown in FIGS. 2.2.20 and 2.2.21). In some further embodiments, the plurality of heat exchange tubes b700 include at least fifty (50) heat exchange tubes b700 extending between the inlet port b664 and the outlet port b676 (e.g., as shown in FIGS. 2.2.20 and 2.2.21). The plurality of heat exchange tubes b700 spiral about a center axis (e.g., the axial centerline) defined by the housing. Further, the heat exchange tubes b700 provide fluid communication between the housing inlet port b696 and the housing outlet port b698. Accordingly, working fluid can flow from the housing inlet port b696, through the plurality of heat exchange tubes b700, and into the housing outlet port b698 (e.g., in a left to right direction in FIG. 2.2.19). The outlet housing b678, the heater housing b688, and the inlet housing b667 define a heat exchange chamber b690, denoted as the HX chamber in FIG. 2.2.19. The heat exchange tubes b700 are received within the HX chamber. A heat exchange fluid HXF (e.g., exhaust gases from a closed cycle engine b110 disclosed herein) can flow into the linear constant density heat exchanger b650 through the second heat exchanger port b684 and into the HX chamber. The heat exchange fluid HXF can then flow in a right to left direction in FIG. 2.2.19 along the axial direction A and can impart thermal energy to the working fluid flowing through the working chamber b654, or more specifically, through the plurality of heat exchange tubes b700. The heat exchange fluid HXF eventually flows into the inlet housing b667 and exits the linear constant density heat exchanger b650 through the first heat exchanger port b672. Advantageously, the heat exchange tubes b700 increase the surface area in which heat exchange fluid HXF can flow along or against. Thus, heat transfer exchange between the heat exchange fluid HXF and the working fluid flowing through the working chamber b654 (e.g., through the heat exchange tubes b700) can be made more efficient with the spiraling heat exchange tubes b700. In some embodiments, the housing is additively manufactured, e.g., by one or more of the methods described herein.

Referring now to FIGS. 2.2.20 and 2.2.21, FIGS. 2.2.20 provides a side view of a housing that can be implemented in a linear constant density heat exchanger b650 and FIG. 2.2.21 provides a close-up view of a second end b662 of the housing of FIGS. 2.2.20 and depicts a plurality of heat exchange tubes b700 with their ends cutoff for illustrative purposes. In some embodiments, for example, the housing can be implemented in the linear constant density heat exchanger b650 of FIG. 2.2.19. As shown, the housing includes a plurality of heat exchange tubes b700 extending between the housing inlet port b696 and the housing outlet port b698 of the housing. The plurality of heat exchange tubes b700 spiral about a center axis (e.g., the axial centerline) defined by the housing. Specifically, the heat exchange tubes b700 are helically wound about the axial centerline as they extend between the housing inlet port b696 and the housing outlet port b698 of the housing. Further, for this embodiment, the plurality of tubes are arranged in radially spaced rows. Stated another way, the heat exchange tubes b700 are arranged in circular arrays with adjacent arrays being radially spaced from one another as viewed from an axial cross section of the housing. In some embodiments, the circular arrays are concentrically arranged. Further, in some embodiments, the heat exchange tubes b700 are capillary or micro capillary tubes.

When the housing depicted in FIGS. 2.2.20 and 2.2.21 is implemented in a linear constant density heat exchanger b650, the heat exchange tubes b700 provide fluid communication between the housing inlet port b696 and the housing outlet port b698. Accordingly, working fluid can flow from the housing inlet port b696, through the plurality of heat exchange tubes b700, and into the housing outlet port b698. The outlet housing b678, the heater housing b688, and the inlet housing b667 can define a heat exchange chamber b690, e.g., as noted above. The heat exchange tubes b700 are received within the HX chamber. A heat exchange fluid HXF (e.g., exhaust gases from a closed cycle engine b110 disclosed herein) can flow into the linear constant density heat exchanger b650 through the second heat exchanger port b684 and into the HX chamber. The heat exchange fluid HXF can then flow along the axial direction A and can impart thermal energy to the working fluid flowing through the working chamber b654, or more specifically, through the plurality of heat exchange tubes b700. The heat exchange fluid HXF eventually flows into the inlet housing b667 and exits the linear constant density heat exchanger b650 through the first heat exchanger port b672. Advantageously, the heat exchange tubes b700 increase the surface area in which heat exchange fluid HXF can flow along or against. Thus, heat transfer exchange between the heat exchange fluid HXF and the working fluid flowing through the working chamber b654 (e.g., through the heat exchange tubes b700) can be made more efficient with the spiraling heat exchange tubes b700 arranged in radially spaced rows. In some embodiments, the housing is additively manufactured, e.g., by one or more of the methods described herein.

FIG. 2.2.22 provides a schematic cross sectional view of another example linear constant density heat exchanger b650 according to an aspect of the present disclosure. Generally, the linear constant density heat exchanger b650 of FIG. 2.2.22 is configured in a similar manner as the linear constant density heat exchanger b650 of FIG. 2.2.18, except as provided below.

For this embodiment, the housing extends between a first end b660 and a second end b662 along the axial direction A. The housing has a housing inlet port b696 at the first end b660 and a housing outlet port b698 at the second end b662. The housing inlet port b696 defines an inlet of the working chamber b654 and the housing outlet port b698 defines an outlet of the working chamber b654. The housing has a main body b702 extending between the housing inlet port b696 and the housing outlet port b698 along the axial direction A. The main body b702 is generally tubular in this example embodiment. The housing inlet port b696 of the housing is connected to (e.g., threadingly engaged with) the inlet housing b667, which is connected to (e.g., threadingly engaged with) the first heat exchanger port b672. The outlet port b676 is disposed around the housing outlet port b698. The outlet port b676 is connected to (e.g., threadingly engaged with) the outlet housing b678. The housing outlet port b698 is received within the outlet port b676 as shown in FIG. 2.2.22. A sealing member b694 extends annularly around the housing outlet port b698 and provides a seal between the housing outlet port b698 and the outlet port b676. The sealing member b694 prevents heat exchange fluid HXF from exiting the outlet housing b678. The heater housing b688 is connected to (e.g., threadingly engaged with) the inlet housing b667 at one end and the outlet housing b678 at its other end. The heater housing b688 annularly surrounds the main body b702 of the housing.

In addition, for this embodiment, the tubular housing b652 defines or has a mesh or mesh portion b706 that extends annularly around a wall b704 of the tubular housing b652. The mesh portion b706 also extends along the entire main body b702 of the housing b652 along the axial direction A. In some embodiments, the mesh portion b706 is a lattice structure. The lattice structure can be generally porous. The mesh portion b706 allows for heat exchange fluid HXF to flow radially closer to the working fluid and also provides additional surface area in which heat exchange fluid HXF can flow along or against. Thus, heat transfer exchange between the heat exchange fluid HXF and the working fluid flowing through the working chamber b654 can be made more efficient with the mesh portion b706. In some embodiments, the housing b652 is additively manufactured, e.g., by one or more of the methods described herein.

FIG. 2.2.23 provides a flow diagram for a method (400) of controlling a linear constant density heat exchanger b650 according to an aspect of the present disclosure. For instance, the method (400) can be implemented to control any of the linear constant density heat exchangers b650 described herein. However, the scope of method (400) is not limited to the linear constant density heat exchangers b650 provided herein. Some or all of the method (400) can be implemented by the one or more controllers b692 and flow control devices described herein. In addition, it will be appreciated that exemplary method (400) can be modified, adapted, expanded, rearranged and/or omitted in various ways without deviating from the scope of the present subject matter.

At (402), the method (400) includes (a) moving an inlet valve and an exit valve of the linear constant density heat exchanger b650 to an open position such that a first volume of working fluid flows into a chamber defined by a housing of the linear constant density heat exchanger b650. In some implementations, in moving the inlet valve and the exit valve of the linear constant density heat exchanger b650 to the open position at (a), a second volume of working fluid flows out of the chamber as the first volume of working fluid flows into the chamber. Furthermore, in some implementations, in moving the inlet valve and the exit valve of the linear constant density heat exchanger b650 to the open position such that the first volume of working fluid flows into the chamber at (a), the inlet valve and the exit valve are moved to their respective open positions simultaneously.

At (404), the method (400) includes (b) moving the inlet valve and the exit valve of the linear constant density heat exchanger b650 to a closed position such that the first volume of working fluid is contained within the chamber at constant density. In some implementations, when the inlet valve and the exit valve of the linear constant density heat exchanger b650 are moved to their respective closed positions at (b), the second volume of working fluid is substantially removed from the chamber. Moreover, in some implementations, in moving the inlet valve and the exit valve of the linear constant density heat exchanger b650 to the closed position such that the first volume of working fluid is contained within the chamber at (b), the inlet valve and the exit valve are moved to the closed position simultaneously.

At (406), the method (400) includes (c) heating the first volume of working fluid contained within the chamber for a predetermined heating time while the first volume of working fluid is held at constant density within the chamber. Stated another way, at (406), heat is applied to the working fluid trapped in the working chamber b654. Accordingly, during heat application, no additional working fluid is allowed to flow into the working chamber b654 and working fluid is prevented from flowing out of the working chamber b654. In this way, not only is the temperature of the working fluid increased, the pressure of the working fluid is increased as well. Thus, the potential energy of the working fluid heated at constant density can be increased.

At (408), the method (400) includes (d) moving the inlet valve and the exit valve of the linear constant density heat exchanger b650 to the open position such that the heated first volume of working fluid flows out of the chamber. In some implementations, in moving the inlet valve and the exit valve of the linear constant density heat exchanger b650 to the open position at (d), the heated first volume of working fluid flows out of the chamber and a third volume of working fluid flows into the chamber. Furthermore, in some implementations, in moving the inlet valve and the exit valve of the linear constant density heat exchanger b650 to the open position such that the first volume of working fluid flows out of the chamber at (d), the inlet valve and the exit valve are moved to their respective open positions simultaneously.

In some implementations of method (400), moving the inlet valve and the exit valve of the linear constant density heat exchanger b650 to the open position at (a) or (402), moving the inlet valve and the exit valve of the linear constant density heat exchanger b650 to the closed position at (b) or (404), heating the first volume of working fluid contained within the chamber for the predetermined heating time while the first volume of working fluid is held at constant density within the chamber at (c) or (406), and moving the inlet valve and the exit valve of the linear constant density heat exchanger b650 to the open position such that the heated first volume of working fluid flows out of the chamber at (d) or (408) defines or constitutes a heating cycle for the first volume of working fluid. The heating cycle can be iterated for a plurality of subsequent volumes of working fluid. Further, in some implementations, the heating cycle is performed by the linear constant density heat exchanger b650 at a frequency of less than about 1.5 Hz. In some implementations, the heating cycle is performed by the linear constant density heat exchanger b650 at a frequency between 4 Hz and 10 Hz.

In addition, in some implementations, the method (400) further includes determining a steady state exit mass flow rate at the outlet of the chamber for a predetermined calibration time. For instance, the steady state exit mass flow can be determined by opening the inlet and exit valves for a predetermined calibration time to determine the steady state exit mass flow rate at the outlet of the chamber. For instance, a sensor can be positioned at or proximate the outlet of the working chamber b654. The sensor can be operable to sense characteristics of the working fluid mass flow at the outlet so that the steady state exit mass flow rate can be determined. In some implementations, the method (400) can further include setting a cycle time of the heating cycle based at least in part on the determined steady state exit mass flow rate.

In some implementations, setting the cycle time of the heating cycle based at least in part on the determined steady state exit mass flow rate includes: i) determining an average pulse exit mass flow rate at the outlet of the chamber for a predetermined averaging time; and setting the cycle time of the heating cycle such that the determined steady state exit mass flow rate and the average pulse exit mass flow rate are about equal. In yet other implementations, the method (400) includes setting a cycle time of the heating cycle about equal to a time in which a particle of the working fluid flows from the inlet to the outlet of the linear constant density heat exchanger b650.

### Chapter 2.2.5 - Rotary Constant Density HX

FIGS. 2.2.24 and 2.2.25 provide views of a rotary constant density heat exchanger b710 according to an example embodiment of the present disclosure. Particularly, FIGS. 2.2.24 provides a perspective view of the rotary constant density heat exchanger b710 and FIG. 2.2.25 provides a front view thereof. Generally, like the linear constant density heat exchangers b650 described herein, the rotary constant density heat exchanger b710 is operable to hold a volume of working fluid at constant density during heat application. The rotary constant density heat exchanger b710 can be implemented in any of the embodiments of the Notarnicola cycle system b500 and/or any of the systems described herein. For reference, the rotary constant density heat exchanger b710 defines an axial direction A, a radial direction R, a circumferential direction C, and an axial centerline AC extending along the axial direction A. The radial direction R extends to and from the axial centerline AC in a direction orthogonal to the actual direction A. The circumferential direction C extends 360° around the axial centerline AC.

The rotary constant density heat exchanger b710 includes a housing b712 extending between a first end b714 and a second end b716 along the axial direction A. The housing b712 is cylindrically shaped in the depicted embodiment of FIGS. 2.2.24 and 2.2.25. However, in alternative embodiments, the housing b712 can have another suitable shape or configuration. The housing b712 defines at least one working chamber b724 having an inlet b726 and an outlet. For this embodiment, the housing b712 defines a plurality of working chambers each having an inlet b726 and an outlet. The inlet b726 of each working chamber is defined at or proximate the first end b714 of the housing b712 and the outlet of each working chamber is defined at or proximate the second end b716 of the housing b712. Each working chamber extends along the axial direction A between the first end b714 and the second end b716 of the housing b712. Particularly, the housing b712 has a first axial face b730 (FIG. 2.2.26) at the first end b714 and a second axial face b732 (FIG. 2.2.26) at the second end b716. The first axial face b730 defines the respective inlets b726 of the working chambers and the second axial face b732 defines the respective outlets of the working chambers. Further, the working chambers are generally cylindrically shaped in this example embodiment, however, the working chambers can have other suitable shapes in alternative embodiments.

In addition, for this embodiment, the plurality of working chambers are arranged in a circular array along the outer periphery of the cylindrical housing b712 as shown best in FIG. 2.2.25. Specifically, the plurality of working chambers are spaced from one another along the circumferential direction C and are arranged in the positions of the hours of a clock face. For instance, for this embodiment, the plurality of working chambers include a first working chamber positioned at a one o'clock position (WC-1), a second working chamber positioned at a two o'clock position (WC-2), a third working chamber positioned at a three o'clock position (WC-3), a fourth working chamber positioned at a four o'clock position (WC-4), a fifth working chamber positioned at a five o'clock position (WC-5), a sixth working chamber positioned at a six o'clock position (WC-6), a seventh working chamber position at a seven o'clock position (WC-7), an eighth working chamber positioned at an eight o'clock position (WC-8), a ninth working chamber positioned at a nine o'clock position (WC-9), a tenth working chamber positioned at a ten o'clock position (WC-10), a eleventh working chamber positioned at a eleven o'clock position (WC-11), and finally, a twelfth working chamber positioned at a twelve o'clock or noon position (WC-12).

The rotary constant density heat exchanger b710 also includes a first plate b718 positioned at the first end b714 of the housing b712 and a second plate b720 positioned at the second end b716 of the housing b712. The first plate b718 is shown transparent in FIGS. 2.2.24 and 2.2.25 for illustrative purposes. The first and second plates b718, b720 are cylindrically shaped, however, the plates b718, b720 can have other configurations in other example embodiments. The first plate b718 is rotatable about an axis of rotation (e.g., the axial centerline AC) such that the first plate b718 selectively allows working fluid to flow into one of the working chambers. The second plate b720 is likewise rotatable about an axis of rotation (e.g., the axial centerline AC) such that the second plate b720 selectively allows working fluid to flow out of one of the working chambers. The first plate b718 and the second plate b720 can be rotatable about the axis of rotation in unison, for example.

The first plate b718 defines a port b722 at its outer periphery. The port b722 defined by the first plate b718 is sized complementary to axial cross section of one of the working chambers. When the port b722 of the first plate b718 is aligned with the inlet b726 of a given working chamber, the first plate b718 selectively allows working fluid to flow into that working chamber. For instance, as shown in FIGS. 2.2.24 and 2.2.25, the port b722 of the first plate b718 is shown aligned with the inlet b726 of the third working chamber WC-3. Accordingly, the first plate b718 and port b722 thereof selectively allow working fluid to flow into the third working chamber WC-3 (assuming the third working chamber can receive an additional volume of working fluid). In contrast, when the port b722 of the first plate b718 is not aligned with the inlet b726 of a given working chamber, the first plate b718 prevents working fluid from flowing into that particular chamber. For instance, as illustrated in FIGS. 2.2.24 and 2.2.25, the port b722 of the first plate b718 is shown aligned with the inlet b726 of the third working chamber WC-3. Accordingly, the first plate b718 prevents working fluid from flowing into any of the working chambers (e.g., WC-1, WC-2, WC-4, WC-5, WC-6, WC-7, WC-8, WC-9, WC-10, WC-11, and WC-12) that are not the third working chamber WC-3.

The second plate b720 likewise defines a port b723, e.g., in a similar manner as the first plate b718 defines the port b722. The port b723 defined by the second plate b720 is sized complementary to axial cross section of one of the working chambers. When the port b723 of the second plate b720 is aligned with the outlet of a given working chamber, the second plate b720 selectively allows working fluid to flow out of that given working chamber. For example, if the port b723 of the second plate b720 is aligned with the outlet of the third working chamber WC-3, the second plate b720 and port b723 thereof selectively allow working fluid to flow out of the third working chamber WC-3 (assuming the third working chamber contains working fluid). In contrast, when the port b723 of the second plate b720 is not aligned with the outlet of a given working chamber, the second plate b720 prevents working fluid from flowing out of that particular working chamber. For example, if the port b723 of the second plate b720 is aligned with the outlet of the third working chamber WC-3, the second plate b720 prevents working fluid from flowing out of any of the working chambers that are not the third working chamber WC-3.

FIGS. 2.2.26, 2.2.27, and 2.2.28 provide cross sectional views of the rotary constant density heat exchanger b710 of FIGS. 2.2.24 and 2.2.25. Particularly, FIGS. 2.2.26 provides a cross-sectional view of the rotary constant density heat exchanger b710 with the ports b722, b723 of the first plate b718 and second plate b720 positioned at a twelve o'clock position. FIG. 2.2.27 provides a cross-sectional view of the rotary constant density heat exchanger b710 with the ports b722, b723 of the first plate b718 and second plate b720 positioned not at the twelve o'clock position. FIG. 2.2.28 provides a cross-sectional view of the rotary constant density heat exchanger b710 with the ports b722, b723 of the first plate b718 and second plate b720 positioned at a twelve o'clock position after one revolution of the plates.

As depicted, a heat source b734 annularly surrounds the cylindrically shaped housing b712. The heat source b734 is operable to impart thermal energy to the housing b712, and in turn, the housing b712 imparts thermal energy to the working fluid contained within the working chambers. The heat source b734 can be any suitable heat source b734, such as e.g., exhaust gases from a closed cycle engine b110 described herein, an electric heater, etc. Further, although the heat source b734 is shown positioned annularly around the cylindrical housing b712, the heat source b734 can additionally or alternatively be positioned radially inward of the plurality of working chambers, e.g., as shown in FIG. 2.2.29. Moreover, the first plate b718 and the second plate b720 can be operatively coupled with one or more controllers b736. For instance, one or more controllers b736 can be communicatively coupled with an electric motor or drive mechanically coupled with the plates b718, b720, e.g., via a shaft. The electric motor or drive can drivingly rotate the plates about the axis of rotation. As will be explained more fully below, the first plate b718 and the second plate b720 are rotatable about the axis of rotation such that the heat source b734 imparts thermal energy to working fluid held at constant density within the working chambers for a predetermined heating time.

Generally, the rotary constant density heat exchanger b710 operates in a revolver-like fashion. Particularly, the plates b718, b720 are rotated to sequentially allow working fluid to enter/exit a given working chamber, and while a new volume of working fluid enters a given working chamber and a heated volume of working fluid exits that particular working chamber, the other volumes of working fluid contained within the other working chambers are heated at constant density. Thus, as the plates b718, b720 are rotated about, a high pressure, high temperature volume of working fluid exits one of the working chambers, and at the same time, a lower pressure, lower temperature volume of working fluid enters one of the working chambers. As this occurs, as noted above, heat is applied to the working fluid held at constant density within the other working chambers until released by alignment of the ports b722, b723 with the working chamber.

An example manner of operation of the rotary constant density heat exchanger b710 will now be provided. In some embodiments, the one or more controllers b736 are configured to cause the first plate b718 and the second plate b720 to rotate such that a first volume of the working fluid flows into a working chamber. More specifically, the first plate b718 and the second plate b720 are rotated about the axis of rotation in unison such that the port b722 defined by the first plate b718 is aligned with the port b723 defined by the second plate b720 along the circumferential direction C. For instance, as shown in FIG. 2.2.26, the one or more controllers b736 can cause the first and second plates b718, b720 to rotate such that their respective ports b722, b723 are positioned at the twelve o'clock position. When the ports b722, b723 are positioned at the twelve o'clock position, a first volume of working fluid V1 can flow into the twelfth working chamber WC-12 through the port of the first plate b718. In causing the first plate b718 and the second plate b720 to rotate such that the first volume V1 of working fluid flows into the working chamber, a second volume of working fluid is removed from the working chamber. For instance, as the first volume V1 of working fluid flows into the twelfth working chamber WC-12, a second volume of fluid V1- can flow out of the twelfth working chamber WC-12 through the port of the second plate b720 as shown in FIG. 2.2.26. Thus, when the ports b722, b723 are aligned with a particular working chamber, a new or unheated volume of working fluid flows into the working chamber and a heated volume of working fluid flows out of the working chamber.

After a predetermined open time, the one or more controllers b736 cause the first plate b718 and the second plate b720 to rotate such that the first volume of working fluid is contained or trapped within the working chamber. In this way, the working fluid can be held at constant density during heat application. For instance, as shown in FIG. 2.2.27, the first plate b718 and the second plate b720 can be rotated such that the port of the first plate b718 and the port of the second plate b720 are no longer positioned at the twelve o'clock position. For example, if the first and second plates b718, b720 are rotated clockwise, the ports b722, b723 of the first and second plates b718, b720 can be positioned at the one o'clock position (or some other position that is not the 12 o'clock position). If, on the other hand, the first and second plates b718, b720 are rotated counterclockwise, the ports b722, b723 of the first and second plates b718, b720 can be positioned at an 11 o'clock position (or some other position that is not the 12 o'clock position). Notably, when the ports b722, b723 of the first and second plates b718, b720 are no longer positioned at the twelve o'clock position, the first volume V1 of working fluid is held at constant density within the twelfth working chamber WC-12, e.g., as shown in FIG. 2.2.27. Similarly, the other volumes of working fluid held within all of the other working chambers not in aligned with the ports b722, b723 of the first and second plates b718, b720, and thus, the working fluid in these working chambers is heated at constant density as well. For instance, if the first and second plates b718, b720 are rotated clockwise after allowing the first volume V1 of working fluid into the twelfth working chamber WC-12 such that the ports b722, b723 of the first and second plates b718, b720 are positioned at the one o'clock position, working fluid is held at constant density and is heated within the second, third, fourth, fifth, sixth, seventh, eighth, ninth, tenth, eleventh, and as noted above, the twelfth working chambers WC-2, WC-3, WC-4, WC-5, WC-6, WC-7, WC-8, WC-9, WC-10, WC-11, and WC-12.

The one or more controllers b736 are further configured to cause the heat source b734 to impart thermal energy to the first volume of working fluid for a predetermined heating time as the first plate b718 and the second plate b720 hold the first volume of the working fluid at constant density within the working chamber. For instance, as the first volume V1 is held at constant density in the twelfth working chamber WC-12 as shown in FIG. 2.2.27, the heat source b734 imparts thermal energy (e.g., heats) to the first volume V1 of working fluid held therein as denoted by $Q_{IN}$. The first volume V1 is heated for the predetermined heating time. For example, the predetermined heating time can correspond to the time is takes the first and second plates b718, b720 to rotate one revolution. The one or more controllers b736 can cause or continue to cause the first plate b718 and the second plate b720 to rotate such that the heated first volume V1 of the working fluid flows out of the twelfth working chamber WC-12, e.g., as shown in FIG. 2.2.28. In causing the first plate b718 and the second plate b720 to rotate such that the heated first volume V1 of the working fluid flows out of the twelfth working chamber WC-12, a third volume V1+ of working fluid is permitted to flow into the twelfth working chamber WC-12.

As noted above, the process described above can be iterated such that working fluid is moved into and out of a given working chamber sequentially as the first and second plates b718, b720 rotate about the axis of rotation. Further, in some embodiments, the rotary constant density heat exchanger b710 is additively manufactured, e.g., by one or more of the methods described herein.

FIG. 2.2.30 provides a front view of another rotary constant density heat exchanger b710 according to an example embodiment of the present disclosure. The rotary constant density heat exchanger b710 of FIG. 2.2.30 is similarly configured as the rotary constant density heat exchanger b710 of FIGS. 2.2.24 through 2.2.28, expect as provided below. The housing b712 (hidden in FIG. 2.2.30) of the rotary constant density heat exchanger b710 can define any suitable number of working chambers. For instance, for this embodiment, the housing b712 defines four working chambers, including a first working chamber WC-1, a second working chamber WC-2, a third working chamber WC-3, and a fourth working chamber WC-4. As illustrated, the working chambers are spaced from one another along the circumferential direction C and are arranged in a circular array. Notably, in this embodiment, the housing b712 defines only four working chambers (as opposed to the twelve working chambers of the embodiment depicted in FIGS. 2.2.24 through 2.2.28. The rotary constant density heat exchanger b710 of FIG. 2.2.30 can heat working fluid held at constant density for a predetermined heating time in the same or similar manner described above, except that in this embodiment, the rotating first plate b718 and second plate b720 (hidden in FIG. 2.2.30) rotate between the four working chambers.

FIG. 2.2.31 and FIG. 2.2.32 provide front views of another rotary constant density heat exchanger b710 according to an example embodiment of the present disclosure. The rotary constant density heat exchanger b710 of FIG. 2.2.31 and 2.2.32 is similarly configured as the rotary constant density heat exchanger b710 of FIGS. 2.2.24 through 2.2.28, expect as provided below. For this embodiment, the housing b712 defines only a single working chamber, denoted as first working chamber WC-1. As illustrated in FIG. 2.2.31, the port defined by the first plate b718 is aligned with the first working chamber WC-1 along the circumferential direction C. The port defined by the second plate b720 is aligned with the first working chamber WC-1 along the circumferential direction C as well (not shown in FIG. 2.2.31). Thus, non-heated working fluid can flow into the first working chamber WC-1 and working fluid heated at constant density can flow out of the first working chamber WC-1. Once the non-heated volume of working fluid has moved into the first working chamber WC-1, one or more controllers b736 can cause the first and second plates b718, b720 to rotate about the circumferential direction C to trap the working fluid in the first working chamber WC-1. As the first and second plates b718, b720 are rotated about the circumferential direction C, the heat is applied to the working fluid held at constant density, e.g., as shown in FIG. 2.2.32. As noted previously, this can increase the temperature and pressure of the working fluid, thereby increasing the potential energy of the working fluid. After a predetermined heating time, which can be synchronized with the time associated with the plates making one or more revolutions, the ports b722, b723 of the plates can be realigned with the first working chamber along the circumferential direction C. In this way, the heating cycle is completed and a new heating cycle can commence.

FIGS. 2.2.33, 2.2.34, and 2.2.35 provide various views of another rotary constant density heat exchanger b710 according to an example embodiment of the present disclosure. For reference, the rotary constant density heat exchanger b710 defines an axial direction, a radial direction R, a circumferential direction C, and an axial centerline AC extending along the axial direction (into and out of the page in FIGS. 2.2.33). The radial direction R extends to and from the axial centerline AC in a direction orthogonal to the actual direction. The circumferential direction C extends 360° around the axial centerline AC.

For this embodiment, the rotary constant density heat exchanger b710 includes an annular stationary housing b740 and a rotating member b742 disposed within the stationary housing b740. The rotating member b742 is rotatable about an axis of rotation, which in this embodiment is an axial centerline, denoted as AC in FIGS. 2.2.33. Thus, the rotating member b742 is rotatable within the stationary housing b740. The rotating member b742 can have a cylindrical shape, for example. In some embodiments, the rotating member b742 can be rotated continuously at a predetermined rotational speed. In yet other embodiments, the rotating member b742 can be rotated in a noncontinuous manner. The stationary housing b740 defines an inlet port b744 and an outlet port b746. The inlet port b744 is spaced from the outlet port b746 along the circumferential direction C. The inlet port b744 of the stationary housing b740 is operable to receive a volume of working fluid. In contrast, the working fluid can exit the rotary constant density heat exchanger b710 via the outlet port b746. The rotating member b742, which has a cylindrical shape in this embodiment, defines one or more working chambers. For this example embodiment, the rotating member b742 defines a single working chamber at an outer periphery of the rotating member b742.

As shown in FIGS. 2.2.33, when the working chamber is in communication with or aligned with the inlet port b744 of the stationary housing b740 along the circumferential direction C, working fluid, denoted by WF, can be moved through the inlet port b744 and into the working chamber. As the rotating member b742 is rotated about the circumferential direction C, e.g., in a counterclockwise direction (CCW), the working fluid is held at constant density as heat is applied as denoted by $Q_{IN}$ in FIG. 2.2.34. Eventually, the working chamber becomes in communication with or aligned with the outlet port b746 along the circumferential direction C. As shown in FIG. 2.2.35, when the working chamber is aligned with the outlet port b746 of the stationary housing b740 along the circumferential direction C, the working fluid WF heated at constant density can be moved out of the working chamber and through the outlet port b746. The application of heat to the working fluid held at constant density increases the temperature and pressure of the working fluid, which ultimately increases the potential energy of the working fluid and thus more useful work can be produced therefrom.

To summarize, for this embodiment, the rotary constant density heat exchanger b710 has a stationary housing b740 defining an inlet port b744 and an outlet port b746. The rotary constant density heat exchanger b710 also has a rotating member b742 disposed within the stationary housing b740 and rotatable about an axis of rotation (e.g., the axial centerline). The rotating member b742 defines a working chamber b748. The working chamber b748 can have any suitable shape. Notably, a volume of working fluid is movable through the inlet port b744 and into the working chamber b748 when the working chamber b748 is in communication with the inlet port b744, e.g., as depicted in FIGS. 2.2.33. When the working chamber b748 is not in communication with the inlet port b744 or the outlet port b746 as the rotating member b742 rotates about the axis of rotation, the volume of working fluid is held at constant density within the working chamber b748 and is heated by a heat source b750, e.g., as shown in FIG. 2.2.34. The volume of working fluid heated at constant density is movable out of the working chamber b748 and through the outlet port b746 when the working chamber b748 is in communication with the outlet port b746, e.g., as shown in FIG. 2.2.35.

FIG. 2.2.36 provides a schematic view of another rotary constant density heat exchanger b710 according to an example embodiment of the present disclosure. The rotary constant density heat exchanger b710 of FIG. 2.2.36 is similarly configured as the rotary constant density heat exchanger b710 of FIGS. 2.2.33 through 2.2.25, expect as provided below. The rotating member b742 of the rotary constant density heat exchanger b710 can define any suitable number of working chambers. For instance, for this embodiment, the rotating member b742 defines a plurality of working chambers, including a first working chamber WC-1, a second working chamber WC-2, a third working chamber WC-3, and a fourth working chamber WC-4. The working chambers are spaced from one another along the circumferential direction C. Particularly, the working chambers are spaced evenly from one another along the circumferential direction C. The rotary constant density heat exchanger b710 of FIG. 2.2.36 can operate in substantially the same way as the rotary constant density heat exchanger b710 of FIGS. 2.2.33 through 2.2.25 except that heated working fluid is pulsed from the outlet port b746 of the stationary housing b740 at a higher frequency. Moreover, having a plurality of working chambers may allow for the rotating member b742 to rotate at a slower speed with no loss in heated working fluid output and the heat source b734 may require less energy to heat the working fluid as the working fluid can be heated for a longer period of time.

## Chapter 2.2.6 - CD HEX Utilizing A Positive Displacement Pump

In some example embodiments, the constant density heat exchanger can include a positive displacement pump. In some embodiments, for example, the constant density heat exchanger can be a positive displacement rotary pump. In other embodiments, the constant density heat exchanger can be a positive displacement reciprocating pump. Example positive displacement pumps include rotary lobe pumps, progressing cavity pumps, rotary gear pumps, piston pumps, diaphragm pumps, screw pumps, gear pumps, vane pumps, regenerative or peripheral pumps, and peristaltic pumps.

In one example embodiment, a constant density heat exchanger includes a positive displacement rotary pump defining a chamber. The chamber receives a working fluid and holds the working fluid at constant density while a heat source b508 applies heat to the working fluid for a predetermined heating time. In some embodiments, the heat source b508 is one or more electric heating elements. For instance, the one or more electric heating elements can include one or more electrical resistance heating elements. Further, in yet other embodiments, the heat source b508 is one or more flames.

In yet other embodiments, the heat source b508 is a cooling fluid CF having a temperature greater than a temperature of the working fluid held within the chamber of the positive displacement rotary pump at constant volume. The positive displacement rotary pump can include a wall defining one or more channels. The one or more channels can receive the cooling fluid CF. In this way, the cooling fluid CF can heat or impart thermal energy to the working fluid held within the chamber at constant density.

In another example embodiment, a constant density heat exchanger includes a positive displacement reciprocating pump defining a chamber. The chamber receives a working fluid and holds the working fluid at constant density while a heat source b508 applies heat to the working fluid for a predetermined heating time. In some embodiments, the heat source b508 is one or more electric heating elements. For instance, the one or more electric heating elements can include one or more electrical resistance heating elements. Further, in yet other embodiments, the heat source b508 is one or more flames.

In yet other embodiments, the heat source b508 is a cooling fluid CF having a temperature greater than a temperature of the working fluid held within the chamber of the positive displacement reciprocating pump at constant volume. The positive displacement reciprocating pump can include a wall defining one or more channels. The one or more channels can receive the cooling fluid CF. In this way, the cooling fluid CF can heat or impart thermal energy to the working fluid held within the chamber at constant density.

## Chapter 2.2.7 - Wrankel device

In some embodiments, the Notarnicola cycle systems b500 described herein can include a Wrankel device b800. By way of example, FIG. 2.2.15 and FIG. 2.2.16 provide schematic views of Notarnicola cycle systems b500 that include Wrankel devices b800. Generally, a Wrankel device b800, or constant density heat addition expansion device is operable to accomplish two primary tasks. First, the Wrankel device b800 holds a volume of working fluid at constant density during heat application for a predetermined heating time. Second, the Wrankel device b800 facilitates expansion of the high pressure, high temperature working fluid. Energy from the expansion of the high pressure, high temperature working fluid can be extracted and used to produce useful work. For instance, the work produced can be utilized to drive a compressor and/or other accessories of one or more of the closed cycle engines described herein.

FIGS. 2.2.37, 2.2.38, 2.2.39, and 2.2.40 provide various views of an example Wrankel device b800 and components thereof according to an aspect of the present disclosure. Particularly, FIG. 2.2.37 provides a schematic axial view of the Wrankel device b800 and depicts working fluid contained at constant density during heat application. FIG. 2.2.38 provides a perspective view of an example rotor b806 of the Wrankel device b800 of FIG. 2.3.37 operatively coupled with a shaft b802 having an eccentric portion b804. FIG. 2.2.39 provides an axial view of a housing b818 of the Wrankel device b800 of FIG. 2.2.37. FIG. 2.2.40 provides another schematic axial view of the Wrankel device b800 of FIG. 2.2.37 and depicts heated working fluid expanding to produce useful work.

As shown best in FIG. 2.2.37, the Wrankel device b800 includes a rotor b806 having *N* lobes, wherein *N* is an integer. The rotor b806 can have any suitable number of lobes. For this embodiment, the Wrankel device b800 includes two (2) lobes, including a first lobe b808 and an opposing second lobe b810. The rotor b806 has a generally oval shape in this example embodiment, but other shapes are possible. The rotor b806 is operatively coupled with a shaft b802 having an eccentric portion b804. Particularly, the rotor b806 is disposed on the eccentric portion b804 of the shaft b802 as shown best in FIG. 2.2.38. Thus, the rotor b806 can move in or along an eccentric motion or path. The shaft b802 can be geared to an output shaft, e.g., that can be used to drivingly rotate a pump, a compressor, an electric motor, etc. In addition, the rotor b806 defines an inlet port b812 operable to receive working fluid (e.g., a supercritical fluid, such as supercritical carbon dioxide) into a main chamber b816 defined by a housing b818 of the Wrankel device b800. The rotor b806 also defines an outlet port b814 operable to receive an expanding volume of working fluid as will be described below.

The Wrankel device b800 also includes a housing b818 defining a main chamber b816 as noted above. As shown best in FIG. 2.2.39, the main chamber b816 defined by the housing b818 has lobe receiving regions for receiving the lobes of the rotor b806 as the rotor b806 rotates within the main chamber b816, e.g., along an eccentric path. In some embodiments, the main chamber b816 defined by the housing b818 has *N*+1 lobe receiving regions, or stated differently, the main chamber b816 has one more lobe receiving region than the rotor b806 has lobes. As noted above, *N* is an integer. For this embodiment, the main chamber b816 has three (3) lobe receiving regions, including a first lobe receiving region 820, a second lobe receiving region b822, and a third lobe receiving region b824. Each of the lobe receiving regions b820, b822, b824 are sized complementary to the lobes of the rotor b806 such that the lobes can be received therein. For instance, as shown in FIG. 2.2.37, the first lobe b808 of the rotor b806 is received within the first lobe receiving region 820.

The housing b818 defines a plurality of constant density working chambers. Particularly, as shown best in FIG. 2.2.39, each lobe receiving region has an associated constant density working chamber. The first lobe receiving region 820 has an associated first constant density working chamber, or first CD working chamber b826. The second lobe receiving region b822 has an associated second constant density working chamber, or second CD working chamber b828. The third lobe receiving region b824 has an associated third constant density working chamber, or third CD working chamber b830. The CD working chambers b826, b828, b830 are defined by the housing b818 as noted above and are positioned at the apex of each lobe receiving region. The CD working chambers b826, b828, b830 are positioned outward of the lobe receiving regions b820, b822, b824 along the radial direction R with respect to an axial centerline AC, e.g., as shown in FIG. 2.2.39. In FIG. 2.2.39, the axial centerline extends into and out of the page.

During operation of the Wrankel device b800, the CD working chambers b826, b828, b830 are each operable to receive a volume of working fluid therein. In some embodiments, the CD working chambers b826, b828, b830 can receive working fluid in a sequential manner. Particularly, when a given lobe of the rotor b806 is received within one of the lobe receiving regions b820, b822, b824, a volume of working fluid is received within that CD working chamber. More specifically, a volume of working fluid is received within that CD working chamber and held at constant density during heat application. For instance, as shown best in FIG. 2.2.37, the first lobe b808 is received within the first lobe receiving region 820. Accordingly, a portion of working fluid, denoted as WF in FIG. 2.2.37, that has entered the main chamber b816 via the inlet port b812 becomes trapped or otherwise contained within the first CD working chamber b826. The first lobe b808 of the rotor b806 traps the working fluid within the first CD working chamber b826. The volume of working fluid held within the first CD working chamber b826 can be held at constant density for a predetermined heating time as will be explained further below.

As further shown in FIG. 2.2.37, the housing b818 defines one or more heating loops. In some embodiments, the housing b818 is additively manufactured. Accordingly, in such embodiments, the heating loops can be printed or otherwise defined during the additive manufacturing process. The heating loops can be any suitable type of loop. For instance, in some embodiments, the one or more heating loops are configured to receive a heat exchange fluid, such as e.g., hot combustion gases from a closed cycle engine b110. In yet other embodiments, the one or more heating loops are configured as electrical resistance wires operable to receive an electric current therethrough, e.g., for imparting thermal energy to surrounding structures and fluid. Accordingly, the heat source b832 can be a closed cycle engine b110 (e.g., such as one of the closed cycle engines described herein), an electric heating element, some combination thereof, or some other suitable heat source b832.

The one or more heating loops b834 extend around the perimeter of the housing b818 in this example embodiment. Notably, the one or more heating loops b834 extend proximate each of the CD working chambers b826, b828, b830. In this way, when a volume of working fluid is held at constant density within one of the CD working chambers b826, b828, b830, a heat exchange fluid or electric current passing through the one or more heating loops b834 can impart thermal energy to the volume of working fluid. Stated another way, the one or more heating loops are positioned at least in part in a heat exchange relationship with the CD working chambers b826, b828, b830. Although the one or more heating loops are shown in FIG. 2.2.37 as having only a single inlet and a single outlet, in other example embodiments the one or more heating loops b834 can have multiple inlets and/or outlets. For instance, each CV working chamber can have a dedicated heating loop. In this manner, the CD working chambers b826, b828, b830 and their contents can be heated more uniformly.

When a volume of working fluid is held at constant density within one of the CD working chambers b826, b828, b830, e.g., when one of the lobes of the rotor b806 is received within one of the lobe receiving regions b820, b822, b824, the heat source b832 imparts thermal energy to the volume of working fluid held at constant density for a predetermined heating time via the heating loops b834. For instance, as shown in FIG. 2.2.37, the first lobe b808 is received within the first lobe receiving region 820, and a volume of working fluid is held at constant density within the first CD working chamber b826. As the working fluid is held at constant density, the heat source b832, or more particularly the heat exchange fluid and/or electric current flowing through the one or more heating loops b834, imparts thermal energy to the volume of working fluid held at constant density for a predetermined heating time. Thermal energy or heat is shown being applied to the working fluid held at constant density in the first CD working chamber b826, as denoted by $Q_{IN}$. The predetermined heating time can be on the order of milliseconds or seconds, for example.

The application of heat to the working fluid held at constant density increases the temperature and pressure of the working fluid, which ultimately increases the potential energy of the working fluid. Thus, more useful work can be produced therefrom. Indeed, the temperature and pressure of the working fluid can increased such that after the heat source b832 imparts thermal energy to the volume of working fluid held at constant density within one of the CD working chambers b826, b828, b830 for the predetermined heating time, the now-heated volume of working fluid undergoes expansion. That is, the working fluid is heated to a temperature and pressure such that the working fluid rapidly expands. The rapid expansion of the working fluid causes the rotor b806 to rotate. The rotation or movement of the rotor b806 produces useful work that in turn causes the eccentric portion b804 and shaft b802 to rotate. Accordingly, the shaft b802 can drive one or more components, such as e.g., a compressor of one of the closed cycle engines described herein. As shown best in FIG. 2.2.40, the high pressure, high temperature working fluid heated at constant density expands outward from of the first CD working chamber b826, causing the rotor b806 to rotate. The now-expanded working fluid can exit the main chamber b816 through the outlet port b814 of the rotor b806 and can flow downstream, e.g., to a pump or cold side heat exchanger b116 of a regenerative engine. Notably, for this embodiment, the working fluid is heated at constant density to raise the temperature and pressure thereof, but the working fluid is not combusted. Advantageously, this may allow for the working fluid to be moved back through the Wrankel device b800, e.g., in a closed loop Notarnicola cycle system b500.

In some embodiments, as depicted in FIG. 2.2.39, the housing b818 has a peak disposed between each pair of adjacent lobe-receiving regions. The Wrankel device b800 includes a plurality of peak seals b838. As shown, each peak b836 has an associated peak seal b838. Notably, at least one of the plurality of peak seals b838 is configured to maintain contact with the rotor b806 throughout a period of rotation of the rotor b806. In this way, at least one of the peak seals b838 is in contact with the rotor b806 at all times. Furthermore, the peak seals b838 facilitate directing the working fluid from the inlet port b812 into the CD working chambers b826, b828, b830, e.g., for heating at constant density, and from the CD working chambers b826, b828, b830 to the outlet port b814, e.g., after expansion.

With reference to FIGS. 2.2.41 through 2.2.46, an example manner of operation of the Wrankel device b800 will now be provided. FIGS. 2.2.41 through 2.2.46 provide various schematic axial views of the Wrankel device b800 and show the rotor b806 in different positions through its rotation or eccentric path. In FIGS. 2.2.41 through 2.2.46 the rotor b806 rotates counterclockwise along an eccentric path, however, in other example embodiments, the rotor b806 can rotate clockwise along an eccentric path.

As shown in FIG. 2.2.41, the first lobe b808 of the rotor b806 is received within the third lobe receiving region b824 (FIG. 2.2.39), and accordingly, some or a portion of working fluid within the main chamber b816 becomes contained within the third CD working chamber b830. As the working fluid is held at constant density within the third CD working chamber b830 by the first lobe b808 of the rotor b806, the heat source b832 (FIG. 2.2.40) heats or imparts thermal energy to the working fluid held at constant density. This causes the pressure and temperature of the working fluid held within the third CD working chamber b830 to increase.

As shown in FIG. 2.2.42, after a predetermined heating time or upon the working fluid reaching a critical pressure within the third CD working chamber b830, the now-heated and pressurized working fluid expands, causing the rotor b806 to move, e.g., in a counterclockwise direction. That is, the expansion of the now-heated and pressurized working fluid causes the rotor b806 to rotate, which in turn causes the eccentric portion b804 and shaft b802 thereof to rotate, thereby producing useful work.

As shown in FIG. 2.2.43, the second lobe b810 of the rotor b806 is received within the second lobe receiving region b822 (FIG. 2.2.39), and accordingly, some working fluid within the main chamber b816 becomes contained or trapped within the second CD working chamber b828 (FIG. 2.2.39). As the working fluid is held at constant density within the second CD working chamber b828, the heat source b832 heats or imparts thermal energy to the working fluid held at constant density. This causes the pressure and temperature of the working fluid held within the second CD working chamber b828 to increase.

As shown in FIG. 2.2.44, after a predetermined heating time or upon the working fluid reaching a critical pressure within the second CD working chamber b828, the now-heated and pressurized working fluid expands, causing the rotor b806 to move, e.g., in a counterclockwise direction. That is, the expansion of the now-heated and pressurized working fluid causes the rotor b806 to rotate, which in turn causes the eccentric portion b804 and shaft b802 thereof to rotate, thereby producing useful work.

As shown in FIG. 2.2.45, the first lobe b808 of the rotor b806 is received within the first lobe receiving region 820 (FIG. 2.2.39), and accordingly, some working fluid within the main chamber b816 becomes contained or trapped within the first CD working chamber b826. As the working fluid is held at constant density within the first CD working chamber b826, the heat source b832 heats or imparts thermal energy to the working fluid held at constant density. This causes the pressure and temperature of the working fluid held within the first CD working chamber b826 to increase.

As shown in FIG. 2.2.46, after a predetermined heating time or upon the working fluid reaching a critical pressure within the first CD working chamber b826, the now-heated and pressurized working fluid expands, causing the rotor b806 to move, e.g., in a counterclockwise direction. That is, the expansion of the now-heated and pressurized working fluid causes the rotor b806 to rotate, which in turn causes the eccentric portion b804 and shaft b802 thereof to rotate, thereby producing useful work. After expansion, the rotor b806 can return to its position shown in FIG. 2.2.41 except that the second lobe b810 of the rotor b806 is received within the third lobe receiving region b824.

To summarize, as the rotor b806 rotates within the main chamber b816 defined by the housing b818, the rotor b806 holds working fluid at constant density within one of the CD working chambers b826, b828, b830 during heat application. The high temperature, high pressure working fluid then expands, driving the rotor b806 and shaft b802 operatively coupled thereto to rotate, thereby producing useful work. The rotor b806 rotates within the main chamber b816 and one of the lobes of the rotor b806 is received within a receiving lobe region in a sequential manner thereby also utilizing the momentum of the rotor b806 to garner improved efficiency.

FIG. 2.2.47 provides a schematic axial view of another Wrankel device b800 according to an example embodiment of the present disclosure. The Wrankel device b800 of FIG. 2.2.47 is configured in a similar manner as the Wrankel device b800 of FIGS. 2.2.37 through 2.2.46, except as provided below.

For this embodiment, each of the CD working chambers b826, b828, b830 have an associated heat exchange loop. For instance, the first CD working chamber b826 has an associated first heat exchange loop b840, the second CD working chamber b828 has an associated second heat exchange loop b842, and the third CD working chamber b830 has an associated third heat exchange loop b844. The heat exchange loops b840, b842, b844 are positioned in fluid communication with their respective CD working chambers b826, b828, b830 and are each in thermal communication with a heat source b832. That is, the heat exchange loops b840, b842, b844 are positioned at least in part in a heat exchange relationship with a heat source b832. Each heat exchange loop can be in thermal communication with the same heat source b832, e.g., combustion gases recovered from the hot side b112 of a closed cycle engine b110, or different heat sources b832. As depicted in FIG. 2.2.47, hot combustion gases can flow past or across the heat exchange loops b840, b842, b844. In this way, working fluid disposed within the heat exchange loops b840, b842, b844 can be heated by the combustion gases.

A valve b846 is positioned along each heat exchange loop b840, b842, b844. For instance, the valves b846 can be poppet valves b846. The valve b846 of each heat exchange loop b840, b842, b844 is operable to selectively allow working fluid to flow through its associated heat exchange loop b840, b842, b844. For instance, if the pressure of the working fluid within one of the CD working chambers reaches a predetermined pressure threshold, the valve b846 can be moved to an open position to selectively allow working fluid to flow through the heat exchange loop. On the other hand, if the pressure of the working fluid within the CD working chamber has not reached the predetermined pressure threshold, the valve b846 remains in the closed position and thus prevents working fluid from flowing through the heat exchange loop.

An example manner of operation of the Wrankel device b800 of FIG. 2.2.47 will now be provided. The first lobe b808 of the rotor b806 can first be received within the third lobe receiving region b824, and accordingly, some or a portion of working fluid within the main chamber b816 becomes contained or trapped within the third CD working chamber b830. As the working fluid is moved into the third CD working chamber b830 by the first lobe b808 of the rotor b806, the pressure of the working fluid within the third CD working chamber b830 reaches a predetermined pressure threshold. Accordingly, the valve b846 is moved to an open position and consequently working fluid flows into the first heat exchange loop b840. The heat source b832 applies heat to the working fluid held at constant density within the first heat exchange loop b840 and the third CD working chamber b830. For this example, the heat source b832 includes combustion gases recovered from a closed cycle engine b110, such as one of the closed cycle engines described herein. The combustion gases impart thermal energy to the working fluid flowing through the first heat exchange loop b840. As the working fluid is heated at constant density, the temperature and pressure of the working fluid increases. As the pressure of the working fluid increases, the force the working fluid places on the first lobe b808 of the rotor b806 increases as well. The force the working fluid places on the first lobe b808 of the rotor b806 eventually becomes sufficient to move the rotor b806. Particularly, the working fluid heated at constant density rapidly expands thereby causing the rotor b806 to move or rotate, which in turn causes the eccentric portion b804 and shaft b802 thereof to rotate, thereby producing useful work.

The rotor b806 can be moved along an eccentric path such that the second lobe b810 of the rotor b806 is received within the second lobe receiving region b822, and accordingly, some working fluid within the main chamber b816 becomes contained or trapped within the second CD working chamber b828. As the working fluid is moved into the second CD working chamber b828 by the second lobe b810 of the rotor b806, the pressure of the working fluid within the second CD working chamber b828 reaches a predetermined pressure threshold. Accordingly, the valve b846 is moved to an open position and consequently working fluid flows into the second heat exchange loop b842. The heat source b832 applies heat to the working fluid held at constant density within the second heat exchange loop b842 and the second CD working chamber b828. As noted above, for this example, the heat source b832 includes combustion gases recovered from a closed cycle engine b110, such as one of the closed cycle engines described herein. The combustion gases impart thermal energy to the working fluid flowing through the second heat exchange loop b842. As the working fluid is heated at constant density, the temperature and pressure of the working fluid increases. As the pressure of the working fluid increases, the force the working fluid places on the second lobe b810 of the rotor b806 increases as well. The force the working fluid places on the second lobe b810 of the rotor b806 eventually becomes sufficient to move the rotor b806. Particularly, the working fluid heated at constant density rapidly expands thereby causing the rotor b806 to move or rotate, which in turn causes the eccentric portion b804 and shaft b802 thereof to rotate, thereby producing useful work.

The rotor b806 can continue to move along the eccentric path such that the first lobe b808 of the rotor b806 is received within the first lobe receiving region 820, and accordingly, some working fluid within the main chamber b816 becomes contained or trapped within the first CD working chamber b826. As the working fluid is moved into the first CD working chamber b826 by the first lobe b808 of the rotor b806, the pressure of the working fluid within the first CD working chamber b826 reaches a predetermined pressure threshold. Accordingly, the valve b846 is moved to an open position and consequently working fluid flows into the first heat exchange loop b840. The heat source b832 applies heat to the working fluid held at constant density within the first heat exchange loop b840 and the first CD working chamber b826. For this embodiment, the heat source b832 includes combustion gases recovered from a closed cycle engine b110, such as one of the closed cycle engines described herein. The combustion gases impart thermal energy to the working fluid flowing through the first heat exchange loop b840. As the working fluid is heated at constant density, the temperature and pressure of the working fluid increases. As the pressure of the working fluid increases, the force the working fluid places on the first lobe b808 of the rotor b806 increases as well. The force the working fluid places on the first lobe b808 of the rotor b806 eventually becomes sufficient to move the rotor b806. Particularly, the working fluid heated at constant density rapidly expands thereby causing the rotor b806 to move or rotate, which in turn causes the eccentric portion b804 and shaft b802 thereof to rotate, thereby producing useful work. After expansion, the rotor b806 can continue along its eccentric path and can continue along its eccentric path in the sequential manner noted above.

## CHAPTER 3 - BALANCED PHASE AND/OR BALANCED PRESSURE CLOSED-CYCLE ENGINE ARRANGEMENTS

### Chapter 3.1 - Pressure Wave Disruption

Embodiments of a multi-piston engine apparatus A100 provided herein show and describe a balanced pressure piston engine containing an engine working fluid. Certain embodiments of the engine shown and described herein provide dynamic stability in amplitude, frequency, or both. Various embodiments of the apparatus further provide for power to be modulated by piston stroke via a free piston assembly arrangement as a passively balanced system during operation. As such, the engine provided herein may operate in balanced pressure or balanced phase arrangement without control systems or mechanical linkages between piston assemblies, such as camshafts, crankshafts, etc. Other embodiments provide for balanced pressure arrangement with force transmission linkages coupling piston assemblies with minimal power losses. Certain embodiments of the engine provided herein mitigate or disrupt propagation of pressure waves that may disrupt an intended motion (dynamic stability in amplitude, frequency, phase, center point of oscillation or all of these) of a plurality of pistons in a closed cycle engine arrangement such as a Stirling engine generally. The embodiments of the engine provided herein include a closed cycle piston engine arrangement including a plurality of chambers in particular fluid connection such as to provide pneumatic isolation or force cancellation at adjacent chambers when the engine working fluid is at a uniform temperature at the plurality of chambers.

Closed cycle engine arrangements generally include a plurality of pistons defining an expansion chamber and a compression chamber, or a hot chamber and a relatively cold chamber, defined by a piston within a cylinder. Such closed cycle engine arrangements may include, but are not limited to, a Stirling engine assembly, or variations thereof, such as, alpha, beta, or gamma Stirling configurations, or other variations, such as, but not limited to, a Vuilleumier, Franchot, or Rinian engine arrangement. Certain configurations, such as beta and gamma configurations, further include a displacer piston in contact with the hot chamber and the cold chamber and a power piston in contact with the cold chamber. Further configurations, such as a Vuilleumier arrangement, include a warm chamber in which one piston is in contact with the hot chamber and the warm chamber and another piston is in contact with the cold chamber and the warm chamber. However, configurations including the warm chamber are generally counter-productive to providing improved power density, as the warm chamber is used to improve operation of the engine but decreases power generation per unit volume of working fluid.

**In** other configurations including a hot chamber and a cold chamber, or in various configurations, additionally a warm chamber, undesired creation and propagation of pressure waves may occur across fluidly connected chambers. Such pressure propagation may inhibit operation of the engine at transient conditions, such as via undesired harmonics or vibrations that cause undesired operation or unacceptable power losses. Pressure propagation may further, or alternatively, cause undesired phase-shift, undesired changes in amplitude, or run-away behavior of the pistons relative to one another, such as to result in undesired operation of the engine.

For example, in certain free piston Stirling engine arrangements, serial or consecutive coupling of a compression chamber at one reciprocating piston to an adjacent or serially consecutive expansion chamber of another reciprocating piston, and further connected in a loop to the first reciprocating piston, provide a change in pressure in one chamber to induce movement of the piston in contact with the chamber. Such change in pressure in one chamber inducing movement of the piston in contact with the chamber may further occur even in the absence of a thermal load, such as a thermally-driven expansion and contraction of a volume of fluid. As such, a change in pressure results in the other chamber defined by the same piston (i.e., the chamber defined on an opposite side of the same piston). The change in pressure produces a pressure wave and corresponding force that is allowed to propagate to each adjacent or serially consecutive fluidly coupled chamber and the associated piston at the fluidly coupled chamber. The pressure wave propagation is allowed to repeat, or may repeat indefinitely, through the plurality of fluidly coupled chambers and associated pistons of the engine. The pressure wave and corresponding force may subsequently propagate through the serially coupled chambers back to the first reciprocating piston. The pressure wave propagation may therefore create harmonic waves and disrupt an intended motion (e.g., frequency, amplitude, and/or phase, or combinations thereof), or an intended center-point of motion in a multi-piston arrangement, or both.

Additionally, or alternatively, the pressure wave propagation means that movement of one reciprocating piston induces movement of each adjacent piston of the fluidly connected chambers. As such, pressure wave propagation may cause movement of adjacent pistons within the fluidly connected arrangement of chambers. The pressure wave propagation across fluidly connected chambers results in the pistons being articulated, at least in part, by mechanical forces (i.e., pressure waves and their corresponding forces) rather than via thermal differences between the hot chamber and the cold chamber.

Pressure wave propagations may further adversely affect double acting piston assemblies, or particularly double acting free piston assemblies. For example, the fluidly connected arrangement of chambers may be arranged such that pistons at one end of a piston assembly include one fluidly coupled arrangement of chambers and pistons at another end of the piston assembly include another fluidly coupled arrangement of chambers. However, the fluidly coupled arrangements may allow pressure wave propagations to cause movement of one piston assembly due to movement of another piston assembly even with uniform temperatures at the chambers. Stated differently, fluidly connected arrangements of piston assemblies allow mechanical forces (i.e., pressure propagation) to induce movement of adjacent piston assemblies rather than thermal differences between the chambers.

In certain instances, such pressure wave propagation may cause the affected piston to displace to an extreme position, such as top dead center (TDC) or bottom dead center (BDC). Displacement to the extreme position may cause the piston to contact or crash into the extreme end of the surrounding cylinder, such as to damage the piston or cylinder or otherwise adversely affect power output, stability, or operation of the engine. As another example, pressure wave propagation inducing movement of adjacent pistons via mechanical forces may result in unbalanced phase movement of the pistons relative to one another, which may result in undesired operation. Pressure wave propagation may generally result in undesired operation of the engine such as to cause undesired power losses, damage, vibrations, or other losses to power output or operability.

In still other examples, Stirling engines, or variations thereof, may include fluid coupling of expansion and compression chambers such as to result in a force acting on a piston along its direction of motion. Such examples promote self-starting, such as to reduce input power necessary for starting the engine. However, such self-starting behavior may result from or provide pressure wave propagation during operation of the engine, such as to result in undesired operation of the engine as described above.

Referring to FIGS. 3.1.1 - FIG. 3.1.2, embodiments of a balanced pressure engine are provided (hereinafter, "apparatus A100"). Embodiments of the apparatus A100 provided herein may provide pressure-balanced operation of a multi-piston closed cycle engine in which pressure wave propagation across the pistons is mitigated, eliminated, or otherwise disrupted from propagating beyond one or more piston assemblies. The embodiments of the apparatus A100 provided herein may further provide a phase-balanced arrangement in which the plurality of pistons may operate at an equal phase relationship relative to one another. The embodiments of the apparatus A100 provided herein may further reduce undesired instabilities, vibrations, harmonics, or other dynamics that may result in power losses, damage, or other losses to power output or operability. Still further, embodiments of the apparatus A100 provided herein provide improved performance, such as via stable operation of the multi-piston arrangement without a warm chamber or other intermediate chamber.

Additionally, or alternatively, embodiments of the apparatus A100 provided herein may beneficially provide balanced pressure arrangement of a plurality of piston assemblies A1010 during operation of the apparatus. The balanced pressure arrangement operation of the apparatus A100 may be identified by the stationary behavior of one piston assembly following articulation or actuation of another piston assembly when the engine working fluid is at a substantially uniform temperature in the apparatus A100. The apparatus A100 may provide the stationary behavior of the piston assembly via substantially equal and opposite forces produced at an adjacent piston assembly following articulation of another piston assembly.

Embodiments of the apparatus A100 may beneficially improve overall stability, balance, power output, and operability of the apparatus via the balanced pressure arrangements provided herein. Additionally, various embodiments of the apparatus A100 may beneficially improve overall operation of piston engine assemblies, such as closed cycle engine assemblies, despite detriments that may be associated with production of substantially equal and opposite forces at an adjacent piston assembly. For example, embodiments of the apparatus A100 provided herein may include beneficial improvements to overall operation greater than losses associated with starting the apparatus A100. As another example, the substantially equal and opposite forces at an adjacent piston assembly may increase a threshold input power required to initialize operation of the piston assemblies (i.e., articulation of the piston assemblies), such as to require a greater input torque or power at the piston assembly to overcome greater counteracting forces, inertia, etc. However, in contrast, operation of the piston assemblies thereafter may include improved stability, power output, reduced vibrations, mitigated risk of damage or other losses to power or operability.

Referring to FIGS. 3.1.1 - FIG. 3.1.2, the apparatus A100 includes a plurality of piston assemblies A1010 each fluidly coupled to one another in balanced pressure and/or balanced phase arrangement. The piston assembly A1010 includes a piston A1011. In various embodiments, the piston assembly A1010 includes a pair of pistons A1011 attached to one another via a connection member A1030. In still various embodiments, the piston assemblies A1010 can operate in balanced pressure and/or balanced phase relationship while being mechanically independent of one another. For example, the apparatus A100 may exclude camshafts, crankshafts, rocker arms, or other mechanical linkages coupling two or more of the piston assemblies. In other embodiments, the piston assembly A1010 may include a linkage coupling two or more piston assemblies in balanced pressure and/or balanced phase arrangement.

The piston A1011 of the piston assembly A1010 is surrounded by a piston body A1020. The piston body A1020 defines at least one of a first chamber A221 or a second chamber A222. In various embodiments, the piston body A1020 defines at one side (e.g., a first side A1025 depicted in FIG. 3.2.2) of the piston A1011 a first chamber A221, such as an expansion chamber, a hot chamber, or first localized fluid volume within the piston body A1020. The piston body A1020 further defines at another side (e.g., a second side A1029 of depicted in FIG. 3.2.2) of the piston A1011 a second chamber A222, such as a compression chamber, a cold chamber, or second localized fluid volume within the piston body A1020. A plurality of walled conduits A1050 fluidly connects the first chamber A221 of one piston assembly and the second chamber A222. A portion of the first chambers A221 and the second chambers A222 are contained within an interconnected volume A300. A first plurality of chambers, such as depicted within interconnected volume A300, includes a first plurality of the first chambers A221 and a first plurality of the second chambers A222 within the interconnected volume A300 fluidly separated and/or pneumatically separated from a second plurality of chambers including the first chamber A221 and the second chamber A222 outside of the interconnected volume A300. Stated differently, pressure waves or motive forces formed within the plurality of chambers forming the interconnected volume A300 by the movement of one piston assembly A1010 are mitigated from propagating to another piston assembly A1010. Stated still differently, pressure waves or motive forces formed outside of the plurality of chambers forming the interconnected volume A300 by the movement of one piston assembly A1010 are mitigated from propagating to another piston assembly A1010. In one embodiment, the interconnected volume A300 of the plurality of chambers may separate pressure wave propagation and motive forces developed outside of the interconnected volume A300 from acting upon the one or more pistons A1011 within the interconnected volume A300 of chambers. Additionally, or alternatively, the interconnected volume A300 may separate pressure wave propagation and motive forces developed within the interconnected volume A300 of first chambers A221 and second chambers A222 from acting upon the one or more pistons A1011 outside of the interconnected volume A300.

In various embodiments, the portion of the plurality of walled conduits A1050 fluidly connects the first chamber A221 of one piston assembly and the second chamber A222 of another piston assembly into an interconnected volume A300. The interconnected volume A300 defines a fluid interconnection of the first chamber A221 and the second chamber A222 at different piston assemblies A1010 such that a fluid communication or fluid leakage path between the first chamber A221 and the second chamber A222 of the same piston A1011 provides a single fluid loop separated from the fluidly connected chambers A221, A222 outside of the interconnected volume A300. In one embodiment, the balanced pressure arrangement and/or the balance phase arrangement of the piston assemblies A1010 is the fluid interconnection of the walled conduits A1050 and chambers A221, A222 such that the chambers A221, A222 within the interconnected volume A300 are substantially fluidly separated and/or pneumatically separated from those chambers A221, A222 outside of the interconnected volume A300 to provide a substantially equal and opposite force relative to one another to at least one piston assembly A1010 when the engine working fluid within the chambers A221, A222 is at a uniform temperature . In various embodiments, the apparatus A100 includes a plurality of interconnected volumes A300, such as a first interconnected volume A301 fluidly separated and pneumatically separated from a second interconnected volume A302.

In one embodiment, the plurality of piston assemblies A1010 includes a first piston assembly A1110 fluidly coupled to a second piston assembly A1210 via the walled conduit A1050. The first chamber A221 and the second chamber A222 each define a spring, such as a gas spring (i.e., a spring-mass system in which the gas spring is at least in part the engine working fluid, such as helium, hydrogen, or air, or another suitable working fluid). The first chamber A221 at the first piston assembly A1110 is fluidly coupled to the second chamber A222 at the second piston assembly A1210 in balanced pressure arrangement, i.e., at substantially uniform temperatures relative to the first chamber A221 and the second chamber A222, movement of the first piston assembly A1110 provides substantially equal and opposite force at the piston A1011 or connection member A1030 of another piston assembly (e.g., the second piston assembly A1210) such as to result in a substantially zero net force, such as depicted via signs + or - in FIG. 3.1.1 or 3.1.2. The substantially zero net force at the other piston assembly, such as the second piston assembly A1210, results in non-movement or stationary behavior of the second piston assembly A1210 despite movement of the first piston assembly A1110.

In various embodiments, the first chamber A221 and the second chamber A222 each define the spring as a gas spring based at least on the fluid coupling of the first chamber A221 of the first piston assembly A1110 to the second chamber A222 of the second piston assembly A1210 to include at least two interconnected volumes A301, A302 fluidly and/or pneumatically separated from one another (i.e., balanced pressure arrangement). In one embodiment, the at least two interconnected volumes includes the first interconnected volume A301 substantially fluidly isolated and pneumatically isolated from the second interconnected volume A302.

The arrangement of the interconnected volume A300, or plurality thereof, mitigates pressure propagation across the plurality of piston assemblies A1010 such that movement of adjacent piston assemblies is not driven by mechanical forces. Stated differently, the arrangement of the chambers A221, A222 within the interconnected volume A300 relative to chambers outside of the interconnected volume A300 provides for movement of one piston assembly of the interconnected volume A300 to induce an equal and opposite force at an adjacent piston assembly in fluid contact with the piston assembly A1010 outside of the interconnected volume A300. Alternatively, the arrangement of chambers A221, A222 within the first interconnected volume A301 relative to chambers within the second interconnected volume A302 provides for movement of one piston assembly at one interconnected volume to induce an equal and opposite force at an adjacent piston assembly at another interconnected volume.

In various embodiments, the adjacent or second piston assembly A1210 is in fluid contact with the interconnected volume A300 and outside thereof. In another embodiment, the second piston assembly A1210 is in fluid contact with the first interconnected volume A301 and the second interconnected volume, and the first piston assembly A1110 is in fluid contact with only the interconnected volume A300, such as either the first interconnected volume or the second interconnected volume A302. As such, when the first chamber A221 and the second chamber A222 are each at uniform temperature conditions, mechanical movement of one piston assembly will not induce movement of another piston assembly. Still further, when the first chamber A221 and the second chamber A222 are at a temperature differential or delta temperature relative to one another, such as to define a hot chamber and a cold chamber respectively, movement of the piston assemblies is substantially only via the temperature differential rather than mechanical forces such as pressure wave propagation.

In various embodiments, a method for operating a balanced pressure piston apparatus, such as the apparatus A100 provided herein, is provided. In still various embodiments, a method for balancing a piston apparatus is provided. In still various embodiments, a method for balanced pressure operation of the piston apparatus is provided. The method includes flowing a first portion of the engine working fluid through a first plurality of interconnected chambers including a first chamber on the first end of a first piston assembly and a second chamber on the second end of a second piston assembly. Flowing the first portion of engine working fluid may include flowing the first portion of engine working fluid within a fluidly interconnected volume (e.g., interconnected volume 301 in FIG. 3.1.1) of a first plurality of first chambers and a first plurality of second chambers in a single fluid loop. In various embodiments, the method may include generating an interconnected volume by fluidly interconnecting a portion of the plurality of first chambers of one piston assembly and the plurality of second chambers of another piston assembly into a single fluid loop when the first chamber and the second chamber of the same piston is in fluid communication. The first chamber and the second chamber within the interconnected volume are each fluidly separated from the first chamber and the second chamber outside of the interconnected volume. At least one first chamber of one end of one piston assembly is fluidly coupled to the second chamber of another end of another piston assembly.

In particular embodiments, the method further includes at flowing a second portion of the engine working fluid through a second plurality of chambers, in which the first portion of the engine working fluid is fluidly separated from the second portion of the engine working fluid. In various embodiments, the second portion of the engine working fluid may be defined in a second interconnected volume of chambers (e.g., interconnected volume 302 in FIG. 3.1.2) separated from the first interconnected volume of chambers.

In various embodiments, the method further includes receiving, at the engine working fluid at the first chamber A221 and the second chamber A222, a substantially uniform temperature. A first pressure is generated at the first chamber A221 of one assembly by moving or otherwise articulating one or more piston assemblies along a first direction while the engine working fluid is at a substantially uniform temperature at the first chamber A221 and the second chamber A222(e.g., a first lateral direction co-directional to extension of the piston within the piston body, or a first circumferential direction co-directional to extension of the piston within the piston body). In various embodiments, articulating the one or more piston assemblies includes moving, articulating, or actuating the first piston assembly A1110. A second pressure at the first chamber A221 of another piston assembly, such as the second piston assembly A1210, is also generated by articulating the one piston assembly (e.g., the first piston assembly A1110). The second pressure and the first pressure together generate a substantially zero net force at the other piston assembly (e.g., the second piston assembly A1210) such that the other piston assembly (e.g., the second piston assembly A1210) is stationary when the first piston assembly is articulated in the first direction.

Stated differently, forces induced at the second piston assembly via the second pressure are equal and opposite of the forces induced by the first piston assembly via the first pressure. As such, the second piston assembly remains stationary when the first piston assembly is articulated in the first direction when the engine working fluid at the first chamber and the second chamber is at a uniform temperature relative to one another. Generally, the second piston assembly remains stationary when the first piston assembly is articulated in the first direction when the engine working fluid within the apparatus A100 is at a uniform temperature.

In another embodiment, the method of operating the apparatus includes moving or otherwise articulating the piston assemblies A1010 in a balanced phase relationship relative to one another while the working fluid is at a temperature differential at the working fluid relative to the first chamber A221 and the second chamber A222. Articulating the piston assemblies A1010 may include starting one or more of the first piston assembly A1110 via a starter motor, mechanical power input, or other starter device. Articulating the piston assemblies in balanced phase relationship may further include articulating the plurality of piston assemblies in balanced phase relationship when the temperature differential is applied at the engine working fluid at the first chamber versus the second chamber.

In yet another embodiment, the method further includes applying a motive force at the piston assembly greater than a threshold necessary to overcome counteracting forces at the piston assembly. In various embodiments, the threshold corresponds to friction, inertia, or other forces preventing movement of the piston assembly via the temperature differential. For example, the other forces preventing movement may include, at least in part, equal and opposite forces resulting from the balanced pressure arrangement of the piston assemblies. As such, the arrangement of piston assemblies A1010 may provide the balanced pressure and/or balanced phase relationship of the apparatus A100 and may further require a greater motive force to articulate the piston assembly A1010 during start-up from rest or non-operation.

It should be appreciated that the phase angle of the balanced phase arrangement may depend at least in part on the quantity of the plurality of piston assemblies A1010 of the apparatus A100. In various embodiments, the phase angle between four piston assemblies, or factors thereof, A1010 is approximately 90 degrees, 180 degrees, or 270 degrees. In another embodiment, the phase angle between three piston assemblies A1010, or factors thereof, is approximately 30 degrees, 60 degrees or 120 degrees. In yet another embodiment, the phase angle between five piston assemblies A1010, or factors thereof, is approximately 72 degrees.

In still various embodiments, the apparatus A100 includes a plurality of piston assemblies A1010 in which each piston assembly A1010 defines a first end A101 separated from a second end A102 (e.g., separated along a lateral direction L co-directional to extension or displacement of a piston A1011 of the piston assembly A1010). A pair of pistons A1011 is each connected at the first end A101 and the second end A102. **In** various embodiments, the pair of pistons A1011 is each connected via the connection member A1030 extended to separate each piston A1011 such as to dispose one piston A1011 at the first end A101 and another piston A1011 at the second end A102. The piston body A1020 surrounds the piston A1011 and defines the first chamber A221 and the second chamber A222 each separated by the piston A1011 at each piston assembly A1010. The plurality of walled conduits A1050 fluidly connects the first chamber A221 at one piston assembly A1010 to the second chamber A222 at another piston assembly A1010. The plurality of walled conduits A1050 fluidly connects the chambers to define at least two interconnected volumes A300 of chambers A221, A222 and walled conduits A1050. Each interconnected volume A300, such as depicted at first interconnected volume A301 and second interconnected volume A302, is fluidly separated from one another. Each interconnected volume A301, A302 is further fluidly separated and/or pneumatically separated from one another. The plurality of piston assemblies A1010 are in balanced pressure arrangement via the plurality of interconnected volumes A300.

The fluidly separated and/or pneumatically separated or isolated interconnected volume A300 includes a pair of the first chamber A221 at the one end fluidly connected to a respective second chamber A222 at the other end. In one embodiment, each interconnected volume A300 includes the first chamber A221 at the first end A101 fluidly connected to a respective second chamber A222 at the second end A102. In another embodiment, the interconnected volume A300 includes the first chamber A221 at the second end A102 fluidly connected to a respective second chamber A222 at the first end A101. As such, the interconnected volume A300 further provides a substantially net zero force at the piston assembly A1010 such as described above.

The fluidly separated and/or pneumatically separated interconnected volume A300 further includes at least two pair of the first chamber A221 at the first end A101 or the second end A102 is each fluidly connected to a respective second chamber A222 at the same end. In one embodiment, at least two pair of the first chamber A221 at the first end A101 is each fluidly connected to a respective second chamber A222 at the first end A101. In another embodiment, at least two pair of the first chamber A221 at the second end A102 is each fluidly connected to a respective second chamber A222 at the second end A102. In still another embodiment, at least four pair of the first chamber A221 at one end is each fluidly connected to a respective second chamber A222 at the same end.

The interconnected volume A300 further includes the first piston assembly A1110 entirely within the interconnected volume. The interconnected volume A300 further includes the second piston assembly A1210 in which one end or pair of hot chamber and cold chamber (e.g., at the first end A101) is within one interconnected volume (e.g., the first interconnected volume A301) and the other end or pair of hot chamber and cold chamber (e.g., at the second end A102) is outside of the interconnected volume or within another interconnected volume (e.g., the second interconnected volume A302). As such, the balanced pressure arrangement mitigates pressure wave propagation at the second piston assembly, such as depicted at arrows A150, when an equal and opposite force is applied to the second piston assembly.

In one embodiment, the interconnected volume A300 fluidly and/or pneumatically separated from other chambers and walled conduits in balanced pressure arrangement each include a hot chamber (i.e., a first chamber) of one piston assembly fluidly connected to a respective cold chamber (i.e., a second chamber) of another piston assembly (i.e., each hot chamber is fluidly connected to the respective cold chamber at the piston assembly different from the hot chamber). The interconnected volume includes a first hot chamber (i.e., a first-first chamber) at the first end fluidly connected to a respective cold chamber (i.e., a second chamber) at the second end. The engine further includes a second hot chamber (i.e., a second-first chamber) at the second end fluidly connected to a respective cold chamber at the first end. Two or more other hot chambers (i.e., first chambers other than the first-first chamber and the second-first chamber) at one end are each fluidly connected to respective cold chambers at the same end.

In one embodiment, a third hot chamber (i.e., a third-first chamber) at the one end, such as the first end, is fluidly connected to a respective cold chamber at the same end, such as the first end. In another embodiment, the third hot chamber at one end, such as the second end, is fluidly connected to a respective cold chamber at the same end, such as the second end. In still another embodiment, a fourth hot chamber (i.e., a fourth-first chamber) at the same end as the third hot chamber, such as either the first end or the second end, is fluidly connected to a respective cold chamber at the same end. In another embodiment, the fourth hot chamber at the other end relative to the third chamber is fluidly connected to a respective cold chamber at the same end (i.e., the other end relative to the third chamber).

Referring now to FIG. 3.1.2, another exemplary embodiment of the apparatus A100 is provided. The apparatus A100 provided in FIG. 3.1.2 is configured such as described in regard to FIG. 3.1.1. In FIG. 3.1.2, the plurality of piston assemblies (such as described in regard to piston assembly A1010 of FIG. 3.1.1) includes four piston assemblies A110, A210, A310, A410. In various embodiments, the four piston assemblies A110, A210, A310, A410 are each mechanically separated from one another. Each piston A111, A112, 113, 114, 115, 116, 117, 118 of each respective piston assembly (such as described in regard to piston A1011 of FIG. 3.1.1) is surrounded by the piston body 120, 220, 320, A420, 520, 620, 720, 820 (such as described in regard to piston body A1020 of FIG. 3.1.1). The plurality of piston assemblies A110, A210, A310, A410 together define eight hot or expansion chambers A121, A123, A125, A127, A129, A131, A133, A135 (i.e., eight-first chambers A221 of FIG. 3.1.1). The apparatus A100 further includes eight cold or compression chambers A122, A124, A126, A128, A130, A132, A134, A136 (i.e., eight-second chambers A222 of FIG. 3.1.1). The expansion or hot chamber of one piston assembly is fluidly connected to the compression or cold chamber of another piston assembly different from the expansion or hot chamber. Additionally, the engine includes two interconnected volumes A301, A302 each fluidly separated and/or pneumatically separated or isolated from one another such as described above.

Referring still to FIG. 3.1.2, the first interconnected volume A301 includes a pair of the hot chambers at one end each fluidly connected to a respective cold chamber at the other end. For example, hot chamber A125 at the first end A101 is fluidly coupled to the cold chamber A132 at the second end A102. Additionally, the hot chamber A131 at the second end A102 is fluidly coupled to the cold chamber A134 at the first end A101. The first interconnected volume A301 further includes a piston assembly (i.e., first piston assembly A1110 of FIG. 3.1.1) entirely within the first interconnected volume A301, such as depicted at piston assembly A310.

The second interconnected volume A302 includes a pair of the hot chambers at one end each fluidly connected to a respective cold chamber at the other end. For example, hot chamber A121 at the first end A101 is fluidly coupled to the cold chamber A128 at the second end A102. Additionally, the hot chamber A127 at the second end A102 is fluidly coupled to the cold chamber A122 at the first end A101. The second interconnected volume A302 further includes a piston assembly entirely (i.e., first piston assembly A1110 of FIG. 3.1.1) within the second interconnected volume A302, such as depicted at piston assembly A110.

The apparatus A100 further includes a piston assembly in which the piston body at one end is pneumatically coupled to one interconnected volume and the piston body at the other end is pneumatically coupled to another interconnected volume (i.e., second piston assembly A1210 of FIG. 3.1.1). For example, referring to FIG. 3.1.2, the piston assembly A210 includes the piston body 320 within the first interconnected volume A301 and the piston body A420 within the second interconnected volume A302. The piston assembly A410 further includes the piston body 720 within the first interconnected volume A301 and the piston body 820 within the second interconnected volume A302.

Referring to FIGS. 3.1.1 - FIG. 3.1.2, when the first piston assembly A1110 at the first interconnected volume A301 or the second interconnected volume A302 is moved or otherwise articulated along the lateral direction L toward the first end A101 separated from the second end A102 along the lateral direction L, flows within the conduits and chambers are such as depicted via arrows A150. More particularly, the first piston assembly A1110 includes both pairs of hot chamber and cold chamber (i.e., both hot chambers and cold chambers at both of ends A101, A102) within either the first interconnected volume A301 or the second interconnected volume A302, such as depicted at piston assembly A110, A310 of FIG. 3.1.2).

At the second piston assembly A1210 at which one pair of hot chamber and cold chamber is included in the first interconnected volume A301 and another pair of hot chamber and cold chamber is included at the second interconnected volume A302 (such as depicted at piston assembly A210, A410 of FIG. 3.1.2), the forces exerted by the flows of engine working fluid are equal and opposite when the chambers are at uniform temperature conditions, such as depicted at piston body A420 of the second piston assembly A210. As such, movement or articulation of one piston assembly of one interconnected volume, such as the first piston assembly A1110, does not induce movement of another piston assembly of one or more interconnected volumes, such as the second piston assembly A1210. Stated differently, without thermal differences at the chambers, the piston assemblies are in balanced pressure arrangement such as to provide equal and opposite forces at adjacent piston assemblies when a first piston assembly is articulated.

Referring now to FIGS. 3.1.3 through 3.1.8, exemplary embodiments of apparatus A100 configured substantially similarly as shown and described in regard to FIGS. 3.1.1 - FIG. 3.1.2 are provided. In FIG. 3.1.3, the exemplary embodiment of the apparatus A100 includes three piston assemblies A110, A210, A310. The interconnected volume A300 includes the first piston assembly A1110 and a pair of the second piston assembly A1210. The interconnected volume A300 includes the first piston assembly A1110, such as depicted at piston assembly A210. The interconnected volume A300 further includes a pair of the second piston assembly A1210, such as depicted at piston assembly A110, A310. More particularly in the embodiment depicted in FIG. 3.1.3, the interconnected volume A300 includes at the second piston assembly A1210 the first chamber A221 and the second chamber A222 at one end (e.g., the first end A101). In other embodiments, the interconnected volume A300 includes at the second piston assembly A1210 the first chamber A221 and the second chamber A222 at the other end (e.g., the second end A102). During operation of the apparatus A100 including three piston assemblies such as depicted in regard to FIG. 3.1.3, the piston assembly A210 defining the first piston assembly A1110 receives an equal and opposite pressure at the piston A1011.

In FIG. 3.1.4, the exemplary embodiment of the apparatus A100 includes five piston assemblies A1010 and the interconnected volume A300, such as described in regard to FIGS. 3.1.1 -FIG. 3.1.2. The plurality of piston assemblies A1010 includes the first piston assembly A1110 of the interconnected volume A300. The plurality of piston assemblies A1010 further include the second piston assembly A1210 at which the expansion or first chamber A221 and the compression or second chamber A222 is positioned within the interconnected volume. The plurality of piston assemblies A1010 further include the second piston assembly A1210 at which the expansion or first chamber A221 and the compression or second chamber A222 is positioned outside of the interconnected volume A300. Referring to FIGS. 3.1.3 - FIG. 3.1.4, the second piston assembly A1210 includes a first piston body A1026 at which the first chamber A221 and the second chamber A222 is inside the interconnected volume A300. The second piston assembly A1210 further includes a second piston body A1027 at which the first chamber A221 and the second chamber A222 is outside of the interconnected volume A300.

In FIG. 3.1.5, the exemplary embodiment of the apparatus A100 includes six piston assemblies A110, A210, A310, A410, A510, A610 and a plurality of the interconnected volume A300, such as described in regard to FIGS. 3.1.1 - FIG. 3.1.2. The plurality of piston assemblies includes the first piston assembly A1110 of each interconnected volume A300, such as depicted at piston assembly A110, A310, A510. The plurality of piston assemblies further includes the second piston assembly A1210 at which the expansion or first chamber A221 and the compression or second chamber A222 is positioned within two interconnected volumes A300, such as depicted at piston assemblies A210, A410, A610.

In FIG. 3.1.6, the exemplary embodiment of the apparatus A100 includes seven piston assemblies A1010 and the interconnected volume A300, such as shown and described in regard to the three piston assembly embodiment of FIG. 3.1.3 and the five piston assembly embodiment of FIG. 3.1.4.

In FIGS. 3.1.7- FIG. 3.1.8, the exemplary embodiments of the apparatus A100 include eight piston assemblies A110, A210, A310, A410, A510, A610, A710, A810 and a plurality of the interconnected volumes A300. The plurality of piston assemblies includes the first piston assembly A1110 of each interconnected volume A300, such as depicted at piston assembly A110, A310, A510, 710. The plurality of piston assemblies further includes the second piston assembly A1210 at which the hot chamber A221 and the cold chamber A222 is positioned within two interconnected volumes A300, such as depicted at piston assemblies A210, A410, A610, A810.

In various embodiments, the apparatus A100 may be configured to operate a portion of the plurality of piston assemblies A1010 while another portion, such as the remainder of the piston assemblies, remain substantially stationary. In one embodiment, the apparatus A100 may be configured to receive and/or transfer thermal energy at a portion of the piston assemblies A1010 sufficient to articulate the piston assemblies A1010 while another portion of the piston assemblies receives and/or transfers an insufficient amount of thermal energy to sustain operation of another portion of the piston assemblies. For example, the other portion of piston assemblies may define zero thermal difference between the first chamber A221 and the second chamber A222. As another example, a thermal difference between the first chamber A221 and the second chamber A222 may be below a threshold temperature difference such as to be too low to sustain movement of the piston assembly. Operation of a portion of the plurality of piston assemblies A1010 may be provided by disruption of the pressure wave propagation via the interconnected volume A300. As such, a portion of the plurality of piston assemblies A1010 may be disabled from operation based on a desired output power to a load device A180 (FIG. 3.4.3), a capacitor A184 (FIG. 3.4.3), or both, or another control output.

Referring to FIGS. 3.1.1- FIG. 3.1.8, various embodiments of the apparatus A100 define a distal or outer end A103 and a proximal or inner end A104 each relative to the arrangement of piston bodies A1020. For example, the outer end A103 is the area at which the piston bodies A1020 are farthest from one another. As another example, the inner end A104 is the area at which the piston bodies A1020 are nearest to one another. In other embodiments, the outer end A103 is distal to a geometric center of the connection member A1030 and the inner end A104 is proximal to the geometric center of the connection member A1030.

Although the expansion chamber or first chamber A221 is generally depicted at the outer end A103 and the compression chamber or second chamber A222 is generally depicted at the inner end A104, it should be appreciated that in other embodiments the first chamber A221 may be positioned at the inner end A104 and the second chamber A222 may be positioned at the outer end A103. It should further be appreciated that a heater assembly, thermal energy input source, or hot side heat exchanger A160 may be positioned at the outer end A103 or the inner end A104 based at least on the positioning of the first chamber A221. It should also be appreciated that a chiller assembly, thermal energy removal source, or cold side heat exchanger A170 may be positioned at the inner end A104 or the outer end A103 based at least on the positioning of the second chamber A222.

In still further embodiments, although certain quantities of the piston assembly A1010 are depicted in FIGS. 3.1.1- FIG. 3.1.8, various embodiments of the apparatus A100 may include three or more piston assemblies with the interconnected volume configured such as shown and described herein. Additionally, or alternatively, the plurality of piston assemblies may be arranged in V-, W-, X-, inline, radial, circular, or horizontally opposed arrangements, or other suitable arrangements including the plurality of piston assemblies and interconnected volume such as shown and described herein.

## Chapter 3.2 - Piston, Valve Assembly, Fluid Bearing, and Flexible Diaphragm

Referring now to FIGS. 3.2.1- FIG. 3.2.2, close-up views of exemplary embodiments of portions of the apparatus A100 are depicted. The embodiments shown and described in regard to FIGS. 3.2.1- FIG. 3.2.2 may be included in the configurations shown and described in regard to FIGS. 3.1.1- FIG. 3.1.8. In FIG. 3.2.1, the piston A1011 is surrounded by the piston body A1020 to which the walled conduit A1050 is attached to provide fluid connection to another piston body A1020 at another piston assembly A1010. In various embodiments, the piston assembly A1010 defines at the piston body A1020 the first chamber A221 and the second chamber A222 each separated from one another by the piston A1011. The first chamber A221 may generally define a fluid volume receiving a thermal energy input, such as via a thermal energy input source or hot side heat exchanger A160. The second chamber A222 may generally define a fluid volume from which thermal energy is extracted, such as via a thermal energy removal source or cold side heat exchanger A170. As such, the first chamber A221 may generally define an expansion or hot volume of the engine working fluid defining a higher temperature than the second chamber A222 defining a compression or cold volume of the engine working fluid.

In various embodiments, the thermal energy input source or hot side heat exchanger A160 and the thermal energy removal source or cold side heat exchanger A170 may each define heat exchangers configured to provide (i.e., as the thermal energy input source A160) or extract (i.e., as the thermal energy removal source A170) thermal energy from the engine working fluid from the respective fluid volumes. In another embodiment, the thermal energy input source A160 may define, at least in part, any suitable device providing thermal energy to the first chamber A221, such as, but not limited to, a combustion chamber, an electric or induction heater, a heat engine, or other heater assembly or thermal energy input source. In still another embodiment, the thermal energy removal source A170 may define a cooler, refrigeration unit, bottoming cycle system, or cryogenic system. In various embodiments, the thermal energy input source A160 defines a system from which thermal energy is provided to the first chamber A221 (such as schematically depicted via arrows A161) and the thermal energy output source A170 defines a system to which thermal energy flows from the second chamber A222 (such as schematically depicted via arrows A171).

Referring now to FIGS. 3.2.1- FIG. 3.2.2, exemplary embodiments of a portion of the piston assembly A1010 are provided. In various embodiments, the piston body A1020 includes a barrier structure A1114 surrounding the piston A1011. The first chamber A221 is defined at one side (e.g., first side A1025 in FIG. 3.2.2) of the piston A1011 and a second chamber A222 is defined at an opposite side (e.g., second side A1029 in FIG. 3.2.2) of the piston A1011. In one embodiment, the barrier structure A1114 defines a substantially rigid structure enclosing the piston A1011. Expansion or contraction of the chamber A221, A222 may be dependent on one or more of the movement of the piston assembly A1010, thermal energy input (e.g., to the first chamber A221), or thermal energy output (e.g., from the second chamber A222).

In another embodiment, the barrier structure A1114 defines, at least in part, a flexible structure, such as a flexible membrane, allowing one or more of the localized fluid chambers A221, A222 within the piston body A1020 to expand and contract, or increase and decrease, at least partially as a function of a dimension of the barrier structure A1114. Started alternatively, the barrier structure A1114 defining, at least in part, a flexible membrane provides one or more of the localized fluid volumes to alter internal volume as a function of at least a change in dimension of the barrier structure, in addition to change in stroke of the piston A1011. The barrier structure A1114 defining, at least in part, the flexible membrane provides varying the internal volume of the chamber at the piston body A1020 at least partially unconstrained by rigidity of the barrier structure A1114, such as to improve sealing. Additionally, or alternatively, the flexible membrane of the barrier structure A1114 beneficially improves the pressure versus volume cycle of the engine. In various embodiments, the flexible structure includes a rolling diaphragm seal or sock seal.

In various embodiments, the chambers A221, A222 defined within the piston body A1020 are substantially fluidly isolated from one another. In one embodiment, the first chamber A221 may be fluidly isolated from the second chamber A222 via a seal assembly A1018 positioned at an interface A1015 between the barrier structure A1114 and the piston assembly A1010. In one embodiment, the seal assembly A1018 and interface A1015 are defined between the piston A1011 and the barrier structure A1114. In another embodiment, the seal assembly A1018 and interface A1015 are defined between the connection member A1030 and the barrier structure A1114. However, it should be appreciated that the seal assembly A1018 may still allow minimal levels of leakage to occur between the first and second chambers A221, A222 but may still render the respective chambers A221, A222 as substantially fluidly isolated from one another.

Referring now to FIG. 3.2.2, another exemplary embodiment of a portion of the apparatus A100 is further provided. The exemplary piston assembly A1010 provided is configured substantially similarly as shown and described in regard to FIG. 3.2.1. In FIG. 3.2.2, the piston A1011 may be at least partially hollow. The piston A1011 defining a hollow structure may reduce a thermal conduction path, such as to minimize heat exchange between the first chamber A221 and the second chamber A222. In various embodiments, the hollow structure of the piston A1011 may include a third chamber A223 within the piston A1011 into which a portion of fluid from each of the first chamber A221 and the second chamber A222 of the piston body A1020 may enter into and egress from the third chamber A223. The third chamber A223 may be fluidly connected to the seal assembly A1018.

In one embodiment, the piston A1011 may include a porous or cellular structure within the third chamber A223 such as to provide structural support while further reducing a thermal conduction path at which thermal energy may exchange between the chambers A221, A222 on each side of the piston A1011. The piston A1011 may further include a first material surrounding the third chamber A223 and a second material within the third chamber A223 different from the first material. The second material may define a thermally insulating material, such as a ceramic material.

In various embodiments, the seal assembly A1018 further includes a bearing assembly A1028 allowing load-bearing movement of the piston A1011 within the piston body A1020. The bearing assembly A1028 may define a fluid bearing, a rolling bearing element, a friction bearing, or another suitable type of bearing positioned at the interface A1015 between the barrier structure A1114 of the piston body A1020 and the piston A1011. In one embodiment, the bearing assembly A1028 may be integral to the seal assembly A1018 and the piston A1011 such as to provide fluid sealing between the first and second chambers A221, A222 and to further accept torsional loads, gravitational forces, or other loads not along a lateral direction L (e.g., loads oblique or perpendicular to the lateral direction L) along which the piston assembly A1010 may translate. The bearing assembly A1028 may beneficially provide sealing via the seal assembly A1018 and further configured to counteract vibrations, gravity, torque, or other non-lateral loads in contrast to non-load bearing piston seals that may be provided in internal combustion engines.

Referring still to FIG. 3.2.2, the piston A1011 may further include a valve assembly A1022 at the third chamber A223 such as to admit a portion of fluid from one or more of the localized fluid chambers A221, A222 based at least on pressure at each fluid chamber A221, A222. The piston A1011 may include a first chamber opening A1012 in selective fluid communication with the third chamber A223 and the first chamber A221. The piston A1011 may further include a second chamber opening A1014 in selective fluid communication with the third chamber A223 and the second chamber A222. In various embodiments, the valve assembly A1022 defines a one-way valve, a check valve, a butterfly valve, or another suitable type of valve configured to open or closed based on a pressure differential, such as between the third chamber A223 and one or more of the localized fluid chambers A221, A222. Stated differently, the valve assembly A1022 is configured to have an opening pressure corresponding to a threshold, above which a portion of engine working fluid is allowed to enter the third chamber A223.

During operation of the apparatus A100, a portion of fluid from the first chamber A221 or the second chamber A222 may enter the third chamber A223 via the respective first chamber opening A1012 or second chamber opening A1014, such as to provide pressure to operate the bearing assembly A1028. As one chamber A221, A222 expands or contracts, the other chamber (i.e., the other of chamber A221 or A222) may provide a portion of engine working fluid via the respective opening A1012, A1014 based on the change in pressure (e.g., via the stroke cycle of the piston assembly A1010) at the fluid chambers A221, A222. As such, in various embodiments, the interconnected volume A300 of the first chamber A221 and the second chamber A222 such as described herein may further include the third chamber A223. In still various embodiments, the third chamber A223 is in alternating fluid communication with the first chamber A221 and the second chamber A222 based at least on a stroke of the piston assembly A1010, such as described herein.

In still various embodiments, the apparatus A100 may position the bearing assembly A1028 generally along the lateral direction L at the piston assembly A1010. In various embodiments, the bearing assembly A1028 may be positioned at the connection member A1030 such as to counteract vibrations or loads generally oblique, torsional, or perpendicular to the lateral direction L. In one embodiment, the bearing assembly A1028 is positioned at the connection member A1030 at the piston body A1020.

In one embodiment, a fluid opening A1013 is positioned at the bearing assembly A1028 of the piston A1011. More particularly, the fluid opening A1013 is positioned at the piston A1011 next to the interface A1015 of the barrier structure A1114 interface A1015 and the piston A1011. The fluid opening A1013 provides fluid communication between the third chamber A223 and the bearing assembly A1028. More particularly, the fluid opening A1013 provides fluid communication between the third chamber A223 and an at least partially circumferential groove A1017 at the piston A1011. The groove A1017 provides a pressurized cavity A1019 between the outer wall of the piston A1011 and the barrier structure A1114. More particularly, the groove A1017 is positioned at the interface A1015 of the piston A1011 and the piston body A1020.

During operation of the apparatus A100, the fluid opening A1013 provides fluid to enter and egress from the third chamber A223 and to the cavity A1019 defined by the groove A1017 of the piston A1011 and the piston body A1020. The fluid opening A1013 and the cavity A1019 allow a film of fluid (e.g., engine working fluid, such as helium, hydrogen, air, etc.) to form between the piston A1011 and the piston body A1020. The piston A1011 may at least partially ride on the film of fluid within the cavity A1019, such as to keep the piston A1011 centered within the piston body A1020 or form a protective layer between the piston A1011 and the piston body A1020. The fluid within the cavity A1019 may further provide the bearing assembly A1028 to receive shear forces, or forces generally oblique or perpendicular to the direction of movement of the piston A1011 (e.g., oblique or perpendicular to the lateral direction L).

In another embodiment, a volume of the third chamber A223 is based at least on being large enough to store a portion of the engine working fluid corresponding to the stroke of the piston assembly A1010. In various embodiments, the volume of the third chamber A223 is sufficient to hold working fluid corresponding to the piston assembly A1010 going from full compression to full expansion relative to one volume (e.g., from full compression of the second chamber A222 to full expansion of the same second chamber A222, or from full expansion of the first chamber A221 to full compression of the same first chamber A221, etc.). As such, a sufficient volume or mass of working fluid is at the third chamber A223 and bearing assembly A1028 such as to provide support between the piston A1011 and the piston body A1020. In still another embodiment, the volume of the third chamber A223 is sufficient to hold working fluid corresponding to the piston assembly A1010 going from full compression to full expansion and back to full compression relative to one volume.

It should be appreciated that in still other embodiments the third chamber A223 of the piston A1011 may define a flexible or deformable membrane, similar to as shown and described in regard to the flexible membrane of the barrier structure A1114. In various embodiments, the piston A1011 defining a flexible membrane at the third chamber A223 is deformable such as to provide a substantially constant pressure within the third chamber A223 relative to stroke of the piston assembly A1010. For example, as working fluid exits the third chamber A223, the flexible membrane provides an adjustable volume of the third chamber A223 such as to maintain a substantially constant pressure within the third chamber A223 as working fluid enters and exits the piston A1011. Referring now to FIG. 3.2.3, certain embodiments of the piston assembly A1010 may include a folded cross-section member A1060 positioned in the third chamber A223 at the piston A1011. The folded cross-section member A1060 provides a tortious path for heat transfer from a relatively hot side proximate to the hot chamber A221 to a relatively cold side proximate to the cold chamber A222. The folded cross-section member A1060 providing the tortious flowpath allows for reduced heat flux between the first side A1025 of the piston A1011 facing the hot chamber A221 and the second side A1029 of the piston A1011 facing the cold chamber A222.

In various embodiments, the folded cross-section member A1060 provides at least two-times (2x) a flow path distance at the third chamber A223 relative to the length of the piston A1011 along the longitudinal direction L. In a particular embodiment, the folded cross-section member A1060 provides at least four-times (4x) a flow path distance at the third chamber A223 relative to the length of the piston A1011 along the longitudinal direction L. In still another embodiment, the folder cross-section member A1060 may provide ten-times (10x) or less a flow path distance at the third chamber A223 relative to the length of the piston A1011 along the longitudinal direction L.

In certain embodiments, the piston A1011 includes a first monolithic piece A1001 providing an outer shell or heat-shield of the piston A1011. The piston A1011 may further include a second monolithic piece A1002 providing an inner core at which the folded cross-section member A1060 is formed. The first monolithic piece A1011 may generally surround the second monolithic piece A1002. The first monolithic piece A1011 may generally surround the second monolithic piece A1002 such as to separate the second monolithic piece A1002 from the hot chamber A221. In particular embodiments, the first monolithic piece A1001 may define a different material than the second monolithic piece A1002. For instance, the first monolithic piece A1001 may define a material based on desired heat transfer properties relative to the working fluid, temperatures at the hot chamber A221, and/or temperatures at the cold chamber A222. In another instance, the second monolithic piece A1002 may define a material based on desired heat transfer properties of the folded cross-section member A1060, such as to reduce heat flux as described herein.

Referring still to FIG. 3.2.3, the piston A1011 may define a thermal break A224 between the first monolithic piece A1001 and the second monolithic piece A1002. The thermal break A224 may be configured to reduce heat flux between the first monolithic piece A1001 and the second monolithic piece A1002, such as by providing an insulative layer between the pieces.

It should be appreciated that although a first monolithic piece and a second monolithic piece are described herein, one or more additional pieces may be formed, such as to provide heat shielding and/or reduction in heat flux as described herein.

Referring now to FIG. 3.2.4, the piston A1011 may be formed as a substantially single monolithic piece defining the thermal break A224 between the first side A1025 of the piston A1011 and the third chamber A223. In certain embodiments, one or more support structures A1061 is extended through the thermal break A224 such as to support the first side A1025 providing an outer casing or heat shield relative to an inner core.

Chapter 3.3 - Fluid Conduit Heat Exchanger

Referring now to FIG. 3.3.1, another exemplary embodiment of the apparatus A100 is provided. The apparatus A100 is configured substantially similarly as shown and described in regard to FIGS. 3.1.1- FIG. 3.1.8. In FIG. 3.3.1, the apparatus A100 further includes a regenerative heat exchanger, regenerator, thermal capacitor, or generally a heat exchanger A190 at one or more of the walled conduits A1050.

In another embodiment, the heat exchanger A190 may further include or define a heat pipe in thermal communication with the engine working fluid within the walled conduit A1050. The heat exchanger A190 including a heat pipe may include a cavity between the walled conduit A1050 and an outer wall of the heat exchanger A190. The cavity may include an evaporator portion and a condenser portion. A capillary tube structure (e.g., a wick structure, a screen, channels, grooves, corrugated screen, arteries, tubes, etc.) may further be defined between the walled conduit A1050 and the surrounding outer wall of the heat exchanger A190.

A heat pipe working fluid may be disposed within the heat exchanger A190 defining a heat pipe such as to receive and transfer thermal energy between the engine working fluid within the walled conduit A1050 and the heat pipe working fluid within the heat exchanger A190. In various embodiments, the heat pipe working fluid is any suitable fluid for storing thermal energy within a heat pipe. In one embodiment, the heat pipe working fluid is a phase change fluid or two-phase fluid, such as, but not limited to, helium, nitrogen, ammonia, trichlorofluoromethane, dichlorofluoromethane, pentane, trichlorotrifluoroethane, acetone, methanol, perfluoromethylcyclohexane, ethanol, heptane, water, toluene, perfluoromethyldecalin, a diphenyl ether, mercury, cesium, potassium, sodium, lithium, silver, or combinations thereof. However, it should be appreciated that the heat pipe working fluid may be any suitable two-phase fluid. The suitability of the heat pipe fluid may be based on a desired range of temperature received at the heat pipe working fluid. The suitability of the heat pipe working fluid may additionally, or alternatively, be based on the material of one or more of the walled conduit A1050 or the heat exchanger A190 at which the heat pipe working fluid is contained.

Referring to FIG. 3.3.1, the heat exchanger A190 may extend through a plurality of the walled conduit A1050 such as to provide thermal communication of the engine working fluid at one walled conduit, such as depicted at a first walled conduit 1051 to the engine working fluid at another walled conduit, such as depicted at a second walled conduit A1052. In various embodiments, the heat exchanger A190 is extended through two or more walled conduits A1050 at which the flow of engine working fluid within the apparatus A100 is in opposing phase relationship. For example, the heat exchanger A190 may be extended through the first walled conduit 1051 at which the engine working fluid flows in a first direction A162. The heat exchanger A190 may further be extended through the second walled conduit A1052 at which the engine working fluid flows in a second direction A172 opposite of the first direction A162. The heat exchanger A190 positioned as such may improve retention of thermal energy at the engine working fluid generally within the apparatus A100 as the fluid flows to and from the hot chamber A221 and the cold chamber A222. As such, the improved thermal retention improves thermal efficiency, power output, and/or power density of the apparatus A100.

Chapter **3.4** - Piston Assembly Spring Assembly Arrangement

Referring now to FIGS. 3.4.1 - FIG. 3.4.2, exemplary embodiments of the piston assembly A1010 are provided. The embodiments of the piston assembly A1010 provided in regard to FIGS. 3.4.1 - FIG. 3.4.2 are configured substantially similarly as shown and described in regard to FIGS. 3.1.1- FIG. 3.3.1. In FIGS. 3.4.1 - FIG. 3.4.2, the piston assembly A1010 further includes a springing member A1042 coupled to one or more of the pistons A1011 and the connection member A1030. In various embodiments, the springing member A1042 is configured to be flexible along the lateral direction L along which the connection member A1030 is extended. In another embodiment, the springing member A1042 is configured to be flexible along the lateral direction L along which the pair of pistons A1011 is separated and attached together via the connection member A1030. In still various embodiments, the springing member A1042 includes one or more of a coil spring, a planar spring, a gas spring, or a flexure, or other appropriate spring, or combinations thereof. In yet various embodiments, the springing member A1042 is configured to be rigid along a direction oblique or orthogonal to the lateral direction L.

The springing member A1042 is positioned in serial arrangement with the connection member A1030 and the pistons A1011. In one embodiment, such as depicted in regard to FIG. 3.1.1, the connection member A1030 includes a first connection A1031 and a second connection A1032. The first connection A1031 is attached to a first piston A111 of the pair of pistons A1011. The second connection A1032 is attached to a second piston A112 of the pair of pistons A1011. The first connection A1031 and the second connection A1032 are each attached together via the springing member A1042. As such, the springing member A1042 provides a decrease in the frequency of a multi-piston engine assembly including a plurality of the piston assembly A1010 without increasing the mass of the pistons.

Referring to FIG. 3.4.2, in another embodiment, the plurality of springs defined by the chambers A221, A222 and the springing member are provided in serial arrangement in which the springing member A1042 is positioned between each piston A1011 (i.e., the first piston A111 and the second piston A112) and the respective ends of the connection member A1030. The serial arrangement of springs along the lateral direction L may particularly include the first chamber A221 at one piston body A1023, the springing member A1042 connected between the connection member A1030 and the first piston A111, the springing member A1042 connected between the connection member A1030 and the second piston A112, and the first chamber A221 at another piston body A1024 of the same piston assembly A1010.

In various embodiments, the springing member A1042 is positioned within the second chamber A222 at one or more of the piston bodies A1020. As such, the springing member A1042 may be defined in substantially parallel arrangement with the second chamber A222 defining a spring.

Referring now to FIG. 3.4.3, another exemplary embodiment of the piston assembly A1010 is provided. Various embodiments provided in regard to FIG. 3.4.3 are configured substantially similarly as shown and described in regard to FIGS. 3.4.1 - FIG. 3.4.2. In regard to FIG.3.4.3, the piston assembly A1010 further includes a load device A180 operably coupled to one or more piston assemblies A1010. In various embodiments, the load device A180 defines an electric machine, such as a motor and/or generator, electrically coupled to the piston assembly A1010. The load device A180 is operably positioned with the connection member A1030 so as to convert movement (e.g., movement along the lateral direction L) of the connection member A1030 into output power, such as electrical energy, mechanical energy or work, etc.

In one embodiment, each connection member A1030 of each piston assembly A1010 includes a dynamic member of the load device A180 defining an electric machine. The piston assembly A1010 including the dynamic member is in magnetic communication with the load device A180. In various embodiments, the load device A180 further includes a stator assembly A182 operably coupled with each connection member A1030 defining the dynamic member of the load device A180 (e.g., electrical coupling and magnetic communication between the stator assembly A182 and the connection member A1030 including the dynamic member). The load device A180 may include one or more of an inductor, permanent magnet, exciter, pump, etc. proximate to the connection member A1030 of the piston assembly A1010 to generate output power via lateral movement of the piston assembly A1010. In still various embodiments, the load device A180 is includes a battery or capacitor A184 such as to hold or discharge electric current.

Referring still to FIG. 3.4.3, in one embodiment, the load device A180 includes the springing member A1042 defining an inductor configured to act as a spring at the connection member A1030. In various embodiments, the springing member A1042 is particularly positioned at the stator assembly A182 of the load device A180.

Referring to FIGS. 3.4.1- FIG. 3.4.3, in various embodiments, the springing member A1042 defines a first spring constant $k_1$. The first chamber A221 and the second chamber A222 each define another spring constant different from the first spring constant $k_1$, such as a second spring constant $k_2$. The first chamber A221 and the second chamber A222 may each define the same or similar spring constant. In other embodiments, the first chamber A221 and the second chamber A222 may define different spring constants. In various embodiments, the first spring constant $k_1$ is defined less than the spring constant at either of the first chamber A221, the second chamber A222, or both. In still various embodiments, the assembly defines the spring constants of the plurality of springs as $k_1 < k_2$, in which the springing member A1042 defines a

spring constant less than those of each of the first chamber A221 and the second chamber A222. In regard to FIG. 3.1.3, the springing member A1042 may further define the inductor configured to generate the first spring constant $k_1$ less than the second spring constant $k_2$ such as described in regard to FIGS. 3.4.1 - FIG. 3.4.2.

Referring still to FIG. 3.4.3, in one embodiment, the load device A180 may particularly be disposed proximate to the inner end A104 of piston body A1020, in which the thermal energy removal source A170 is further disposed at the inner end A104 of the piston body A1020. As such, the thermal energy removal source A170 may be disposed in a thermally beneficial arrangement relative to the load device A180. For example, the arrangement of the load device A180 and the thermal energy removal source A170 each at or proximate to the inner end A104 of the piston body provides the thermal energy removal source A170 to remove thermal energy from the second chamber A222 and the load device A180. The thermal energy removal source A170 may improve performance and durability of the load device A180, or otherwise mitigate damage or deterioration to the load device A180. In still various embodiments, the load device A180 may be configured to beneficially control a magnitude of the amplitude of the piston assemblies A1010 such as via applying an electrical load to each piston assembly A1010.

It should further be appreciated that although various embodiments of the load device A180 provided herein may be configured to alter operation of the plurality of piston assemblies A1010, various embodiments of the apparatus A100 are configured to provide balanced pressure and balanced phase relationship of the plurality of piston assemblies A1010 during operation of the apparatus A100 without the use of the load device A180, or necessitation of the load device A180. As such, it should be appreciated that various embodiments of the apparatus A100 provide operation of the piston assemblies A1010 at substantially the same magnitude as one another without active or passive control from the load device A180.

During operation of the apparatus A100 shown and described in regard to FIGS. 3.1.1 -FIG. 3.4.3, thermal energy, such as shown schematically via arrows A161, is provided to the first chambers A221. Additionally, thermal energy, such as shown schematically via arrows A171, is removed from the second chambers A222. Providing thermal energy at the first chamber A221 and removing thermal energy at the second chamber A222 causes each piston A1011 to translate along the lateral direction L. The engine working fluid is contained within each interconnected volume such as described herein. The engine working fluid generally includes a compressible fluid. The engine working fluid may include an inert gas, such as helium. In other embodiments, the engine working fluid may include a gas generally, such as, but not limited to, hydrogen, air, or other suitable gases, mixtures, or fluids for operating a closed cycle engine.

As the chambers and walled conduits within the interconnected volume are pneumatically disconnected from the chambers and walled conduits outside of the interconnected volume, pressure changes and forces at the interconnected volume, or outside of the interconnected volume, do not propagate to the other chambers and walled conduits (i.e., pressure waves do not propagate from the interconnected volume outside of the interconnected volume, or from outside of the interconnected volume to within the interconnected volume, or from one interconnected volume to another interconnected volume). Additionally, or alternatively, each piston assembly A1010 translates at a substantially identical frequency relative to one another. In various embodiments, each piston assembly A1010 translates in balanced phase relationship relative to one another. In various embodiments, the piston assemblies translate in balanced phase relationship of 90 degrees, or 180 degrees, or 270 degrees relative to one another. In still various embodiments, the balanced phase relationship of the pistons is during operation of the engine when a temperature differential is applied at the first chamber A221 and the second chamber A222. In still yet various embodiments, the balanced phase relationship of the pistons may commence with articulation of at least one first piston assembly A1110 of the apparatus A100.

In various embodiments, the apparatus A100 defines a passively balanced multi-piston assembly apparatus A100 in which each piston assembly A1010 has dynamic motion of its respective connection member A1030. In one embodiment, the piston assembly A1010 has harmonic or oscillation motion respective of its connection member A1030. In another embodiment, the plurality of piston assemblies A1010 each translates at a substantially identical frequency relative to one another.

In still various embodiments, each of the interconnected volumes defines substantially equal internal volumes relative to one another. It should be appreciated that as the apparatus A100 includes the piston assemblies A1010 operating in dynamic motion, though the frequencies are substantially identical and each piston assembly A1010 is out of phase from one another, the internal volumes defining each interconnected volume (i.e., the internal volume at the chambers A221, A222 and the walled conduit A1050 connecting the chambers A221, A222, and any volumes therebetween), are substantially equal as the piston assembly A1010 operates. It should be appreciated that the apparatus A100 provides operation of the piston assemblies A1010 at substantially the same amplitude as one another.

## Chapter 3.5 - Toroidal Engine Arrangement

Referring now to FIG. 3.5.1, another exemplary embodiment of at least a portion of the apparatus A100 is provided. The embodiment provided in regard to FIG. 3.5.1 may be configured substantially similarly as shown and described to the embodiments in regard to FIGS. 3.1.1- FIG.3.4.3. In FIG. 3.5.1, the apparatus A100 may include a substantially the piston body A1020 defining a substantially toroid shape. Stated differently, the piston body A1020 may extend substantially circumferentially around a reference longitudinal axis C204. A plurality of the first chamber A221, the second chamber A222, or both is defined within the piston body A1020. The chambers A221, A222 are separated from one another at least by the piston A1011 of the piston assembly A1010 such as described in regard to FIGS. 3.1.1- FIG.3.4.3. Additionally, the piston body A1020 may further include a separating wall A1021 extended to fluidly separate adjacent chambers A221, A222 within the piston body A1020.

Referring still to FIG. 3.5.1, the piston assembly A1010 may include a curved or arcuate piston A1011 corresponding to an arc of the toroidally-shaped piston body A1020. The piston assembly A1010 further includes the connection member A1030 attached to the piston A1011. In one embodiment, such as depicted in FIG. 3.5.1, the connection member A1030 is mechanically coupled to two pistons A1011 separated along a radial direction R from the reference longitudinal axis C204. In other embodiments, the piston assembly A1010 may include two or more of the pistons A1011 and two or more of the connection member A1030 at the toroidally-shaped piston body A1020. The piston assembly A1010 is further configured to rotate or actuate at least partially along a circumferential direction C relative to the reference longitudinal axis C204. More particularly, in various embodiments the piston assembly A1010 is configured to rotate along a first circumferential direction and an opposite second circumferential direction similarly to movement of the piston assembly A1010 along the lateral direction L in regard to FIGS. 3.1.1- FIG. 3.4.3.

The chambers A221, A222 of each piston body A1020 are connected to respective chambers A221, A222 of another piston body A1020 via the plurality of walled conduits A1050 such as described in regard to FIGS. 3.1.1- FIG. 3.1.8. As such, although FIG. 3.5.1 depicts two toroidally-shaped piston bodies A1020, various embodiments of the apparatus A100 may include similar quantities of piston bodies A1020, or similar quantities of chambers A221, A222, or both, as shown and described in various embodiments of the apparatus A100 in regard to FIGS. 3.1.1- FIG. 3.4.3.

## Chapter 3.6 - Linked Piston Assembly Arrangements

Referring now to FIG. 3.6.1 - FIG. 3.6.3, further embodiments of the apparatus A100 are provided. The embodiments provided in regard to FIG. 3.6.1 - FIG. 3.6.3 are configured substantially similarly as shown and described in regard to FIGS. 15 such as to provide a substantially balanced pressure and/or balanced phase piston engine apparatus. Referring to FIG. 3.6.1 - FIG. 3.6.3, in various embodiments, the plurality of piston assemblies A1010 includes at least a first pair of piston assemblies, depicted at A1033, each connected together by a first linkage A1035. The plurality of piston assemblies further includes at least a second pair of piston assemblies, depicted at A1034, each connected together by a second linkage A1036. The first chamber A221 at the first pair A1033 of piston assemblies A1010 is fluidly connected to the second chamber A222 at the second pair A1034 of piston assemblies A1010. The second chamber A222 at the first pair A1033 of piston assemblies A1010 is fluidly connected to the first chamber A221 at the second pair A1034 of piston assemblies A1010. Articulation or motion of one piston assembly at one linkage (e.g., the first pair A1033 or the second pair A1034 of piston assemblies A1010) provides force balance at another piston assembly at another linkage (e.g., the other of the second pair A1034 or the first pair A1033 of the piston assemblies A1010. In various embodiments, force balance at the piston assemblies A1010 further includes moment balance at the piston assemblies A1010.

Referring to FIG. 3.6.1, in one embodiment, the piston assembly A1010 may define a single-ended, dual-action piston assembly including the connection member A1030 connected to a single piston A1011. The piston A1011 may define a pair of chambers, such as the first chamber A221 and the second chamber A222.

Referring to FIGS. 3.6.2 - FIG. 3.6.3, in another embodiment, the piston assembly A1010 may define a double-ended, single-action piston assembly in which the connection member A1030 is connected to a pair of pistons A1011. Referring to FIG. 3.6.2, in one embodiment, the piston assembly A1010 defines the first chamber A221 at one end (e.g., the first end A101) and further defines the second chamber A222 at the other end (e.g., the second end A102) along the lateral direction L. Referring to FIG. 3.6.3, in another embodiment, the piston assembly A1010 defines either the first chamber A221 at each pair of pistons A101 or the second chamber A222 at each pair of pistons A1011. Stated differently, one piston assembly A1010 of each pair A1033, A1034 defines the first chamber A221 at the first end A101 and the second end A102 and another piston assembly at each pair A1033, A1034 defines the second chamber A222 at the first end A101 and the second end A102.

Referring to FIG. 3.6.1 - FIG. 3.6.3, the linkage A1035, A1036 may include a pivoting linkage, such as depicted at a pivot member A1037. In various embodiments, the pivot member A1037 is positioned between each piston assembly A1010 of each pair A1033, A1034. The linkage A1035, A1036 may further define a substantially linear member connecting the plurality of piston assemblies A1010. The linkage A1035, A1036 may provide improvements over rotary linkages, such as camshafts, crankshafts, such as by mitigating or eliminating oscillatory affects that may limit the desired stroke of the piston assembly A1010. Additionally, or alternatively, the linkage A1035, A1036 may mitigate or eliminate undesired changes or limitations to the phase or cycle of the plurality of piston assemblies A1010 relative to one another. As such, the linkage A1035, A1036 may provide the plurality of piston assemblies A1010 to operate in desired balanced pressure and/or balanced phase arrangement.

Various embodiments of the apparatus A100 provided herein may include elements or features described or depicted in regard to one embodiment and applied to another embodiment to yield yet other embodiments. For example, embodiments of the fluid coupling of certain chambers A221, A222 to one another via the walled conduit A1050 may be applied to other embodiments of the piston assembly A1010 or apparatus A100 generally. As another example, the load device A180 depicted at the inner end A104 may in other embodiments be positioned at the outer end A103 or out of alignment from the piston assembly A1010. In still another embodiment, the hot side heat exchanger A160 may be positioned at either the outer end A103 or the inner end A104 and the first chamber A221 may be positioned correspondingly at the outer end A103 or the inner end A104. Alternatively, the cold side heat exchanger A170 may be positioned at either the inner end A104 or the outer end A103 and the second chamber A222 may be positioned correspondingly at the inner end A104 or the outer end A103.

In still various embodiments, a single hot side heat exchanger A160, or heater assembly generally, may be positioned to provide thermal energy to each of the plurality of first chambers A221. Similarly, a single cold side heat exchanger A170, or chiller assembly generally, may be positioned to remove or receive thermal energy from each of the plurality of second chambers A222. It should further be appreciated that certain embodiments may advantageously position the first chamber A221 and/or the second chamber A222 such as to improve overall packaging of the apparatus A100, such as to reduce overall size and dimension relative to power output (i.e., to improve power density). For example, referring to FIG. 3.6.1 - FIG. 3.6.3, the linkage A1035, A1036 may be utilized to provide a single-ended single-action piston assembly or a double-ended single-action piston assembly to be utilized to provide a balanced pressure and/or balanced phase closed cycle engine assembly such as described herein. The linkage A1035, A1036 may further, or alternatively, provide placing the hot side heat exchanger A160 and the cold side heat exchanger A170 at the outer ends A103 such as leave the inner end A104 substantially void except for the linkage A1035, A1036. The placement of the linkage A1035, A1036, may provide a relatively smaller packaging along the lateral direction L while further providing the balanced pressure and/or balanced phase embodiments shown and described herein.

Referring still to FIGS. 3.1.1 - FIG. 3.6.3, various embodiments of the apparatus A100 shown and described herein may alternatively include connection members A1030 that are at least partially non-linear. In various embodiments, the connection member A1030 may define substantially U-, V-, S-, or other geometries. As such, various embodiments of the apparatus A100 may include two or more of the pistons A1011 in non-coaxial or non-aligned arrangement relative to one another. In still various embodiments, the piston A1011 or piston assembly A1010 may define a stepped piston or other appropriate piston or piston assembly type.

In still various embodiments of the apparatus A100 and system A10 shown and described herein, a plurality of the connection member A1030 may be operably connected together to multiply power output at the load device C092. In one embodiment, a plurality of the apparatus A100 may be configured to operate in substantially similar phase arrangement as one another. For instance, the plurality of apparatuses A100 may each include a first connection member corresponding to a first piston assembly (e.g., A110 in FIG. 3.1.7), a second connection member corresponding to a second piston assembly (e.g., A210 in FIG. 3.1.7), a third connection member corresponding to a third piston assembly (e.g., A310 in FIG. 3.1.7), etc., to an Nth connection member corresponding to an Nth piston assembly. Each respective connection member at each respective piston assembly is operable in phase arrangement relative to one another within one apparatus A100. Each corresponding connection member relative to each apparatus A100 is operably connected to one another and operably connected to a respective load device C092. As such, each first connection member at each apparatus A100 is respectively connected to one another and to a first load device C092. Similarly, each second connection member at each apparatus A100 is respectively connected to one another and to second load device C092. Further, each Nth connection member at each apparatus A100 is respectively connected to one another and to an Nth load device C092. In one embodiment, the system A10 may include a plurality of four apparatuses A100 configured such as described herein such as to provide approximately four-times the power output to each respective load device C092.

Various embodiments of the apparatus A100 shown and described herein may be fabricated via one or more manufacturing methods known in the art, such as, but not limited to, additive manufacturing, binder jetting, or 3D printing processes generally, machining processes, material addition or removal processes, or joining or bonding processes. Manufacturing processes may include, but are not limited to, casting, welding, brazing, soldering, or bonding processes. Materials may include those suitable for piston assemblies and pressure vessels configured to receive thermal differentials and operate for desired cycles and power outputs, including rigid and flexible wall members, enclosures, and conduits. Although certain exemplary embodiments may preferably be produced via one or more additive manufacturing processes, it should be appreciated that other manufacturing processes, or combinations thereof, may be utilized. Still further, although certain elements or structures may be produced as substantially monolithic structures, certain elements may be attached or otherwise coupled via welding, brazing, or mechanical fasteners, such as, but not limited to, clamps, nuts, bolts, screws, tie rods, washers, etc.

**CHAPTER 4** - **HEATER BODIES AND METHODS OF HEATING A CLOSED-CYCLE ENGINE**

## Chapter 4.1 - Monolithic Heater Body

An exemplary engine c002 is shown in FIG. 4.1.1. The engine c002 may be a closed cycle engine, such as a regenerative heat engine and/or a Stirling engine; however other engines including other closed-cycle engines and/or regenerative heat engines are also contemplated and the scope of the present disclosure embraces any engine. A closed-cycle engine c002 may include a heater body c100 and an engine body c050. In the embodiment shown, a closed-cycle engine c002 may include an engine body c050 and a heater body c100 disposed on opposite sides of the engine body c050. For example, a first heater body c100 may be disposed at a first side of an engine body c050 and a second heater body c100 may be disposed at a second side of an engine body c050. In still other embodiments, a plurality of engine bodies c050 may be provided and/or a single heater body c100 or a multitude of heater bodies c100 may be provided. The closed-cycle engine c002 may include a piston assembly c090 and a load device c092 operably inserted within an engine body c050 and/or a heater body c100.

The closed-cycle engine c002 may be provided in the form of an engine assembly that includes one or more monolithic bodies or monolithic body-segments as described herein. A monolithic body and/or a monolithic body-segment may be fabricated using an additive manufacturing technology and may be void of any seams, joints, or the like characteristic of separately fabricated components. By way of example, an exemplary closed-cycle engine c002 may be assembled from an engine assembly that includes a first heater body c100 and a first engine body c050. The first heater body may define a first portion of a first monolithic body or a first monolithic body-segment, and the first engine body may define a second portion of the first monolithic body or a second monolithic body-segment operably coupled or operably couplable to the first heater body.

Now turning to e.g., FIGs. 4.1.2A and 4.1.2B, 4.1.3A through 4.1.3C, and 4.1.4, exemplary heater bodies c100 will be described. The presently disclosed heater bodies c100 may be used to supply heat to a closed-cycle engine c002 such as a regenerative heat engine and/or a Stirling engine. However, it will be appreciated that the presently disclosed heater bodies c100 may be used as a heating source in a number of other settings, all of which are within the scope of the present disclosure. In some embodiments, at least a portion of the heater body c100 may define at least a portion of a closed-cycle engine c002, such as a monolithic body or a monolithic body-segment of such a closed-cycle engine c002. For example, the monolithic body may be an additively manufactured monolithic body, or the monolithic body-segment may be an additively manufactured monolithic body-segment. However, in addition or as an alternative to additive manufacturing technology, it will be appreciated that the monolithic body or various monolithic body-segments of a closed-cycle engine c002 may be formed using any desired technology, all of which are within the scope of the present disclosure.

As shown, an exemplary heater body c100 may include a combustion chamber c102 and a recirculation pathway c104 configured to recirculate combustion gas through the combustion chamber c102. The recirculation pathway c104 may include a hot-side heat exchanger c106 configured to transfer heat from circulating combustion gas to a heat input source, such as a working-fluid body c108 defining a heat transfer region having a thermally conductive relationship with at least a portion of the hot-side heat exchanger c106. For example, heat from the combustion gas may be transferred to the heat transfer region via an engine-working fluid disposed within a working-fluid pathway c110. The working-fluid pathway c110 may be defined at least in part by the hot-side heat exchanger c106 and/or at least in part by the working-fluid body c108. The hot-side heat exchanger c106 may define a portion of the recirculation pathway c104. The heat transfer region may define a region having a have a thermally conductive relationship with the heating fluid pathway.

The heat transfer region defined by the working-fluid body c108 may include a solid body and/or a fluid pathway defined at least in part by the solid body. In an exemplary embodiment, the hot-side heat exchanger c106 may include a plurality of heating fluid pathways that have a heat transfer relationship with a plurality of heat transfer regions. For example, the plurality of heat transfer regions have a thermally conductive relationship with a corresponding portion of the plurality of heating fluid pathways. Additionally, or in the alternative, the heat transfer regions may have a thermally convective relationship with a heating fluid flowing through the heating fluid pathways. The heat transfer regions may be circumferentially spaced about the longitudinal axis of the heater body c100. Respective ones of the plurality of heat transfer regions may include a solid body and/or a fluid pathway defined at least in part by the solid body.

The working-fluid body c108 may include one or more portions of a closed-cycle engine c002, such as a piston chamber c112 (e.g., a hot piston chamber) and/or a regenerator body c114. A fluid pathway defined the working-fluid body c108 may fluidly communicate with the piston chamber and the regenerator body c114. The engine-working fluid disposed within the working-fluid pathway c110 may be an engine-working fluid, such as an inert gas, which may flow in an alternating fashion between the piston chamber c112 and the regenerator body c114. The hot-side heat exchanger c106 may be provided in the form of a heat exchanger body. The heat exchanger body may define a monolithic body portion of the heater body c100 or a monolithic body-segment operably coupled or operably couplable to a monolithic heater body c100 or to one or more other monolithic body-segments that make up the heater body c100.

The recirculation pathway c104 may additionally include a recirculation eductor c116 configured to utilize intake air flowing through an intake air pathway c118 to entrain and/or accelerate combustion gas and thereby provide a mixture of intake air and recirculating combustion gas to the combustion chamber c102. The recirculation eductor c116 may also include an exhaust pathway c120 configured to discharge a portion of the combustion gas as exhaust gas. The recirculation eductor c116 may fluidly communicate with a downstream portion of the hot-side heat exchanger c106. The recirculation eductor c116 may be provided in the form of an eductor body. The eductor body may define a monolithic body portion of the heater body c100 or a monolithic body-segment operably coupled or operably couplable to a monolithic heater body c100 or to one or more other monolithic body-segments that make up the heater body c100.

In some embodiments, the heater body c100 may include a conditioning conduit c122 fluidly communicating with a downstream portion of the recirculation eductor c116 and an upstream portion of the combustion chamber c102. The conditioning conduct c122 may be configured to guide combustion gas (e.g., a mixture of intake air and recirculating combustion gas) to the combustion chamber c102, and may be configured with a size and shape so as to condition one or more fluid dynamic properties of the combustion gas flowing to the combustion chamber c122. Exemplary fluid dynamics properties that may be conditioned by the conditioning conduit c122 include pressure, pressure gradient, flow velocity, velocity gradient, turbulence, vorticity, curl, and so forth. The conditioning conduit c122 may define a conduit volume selected to provide one or more desired fluid dynamics properties of combustion gas flowing therethrough, and/or to allow for mixing of intake air with recirculating combustion gas. In some embodiments, the conditioning conduit c122 may be configured to swirl combustion gas flowing therethrough. For example, the conditioning conduit c122 may establish or sustain a vortex, which may enhance combustion quality in the combustion chamber c102. Additionally, or in the alternative, combustion gas circulating through the conditioning conduit c122 may cool the combustion chamber c102, with heat from the combustion chamber c102 heating the combustion gas prior to entering the combustion chamber c102.

The combustion chamber c102 and the conditioning conduit c104 may be provided in the form of a combustor body. The combustor body may define a monolithic body portion of the heater body c100 or a monolithic body-segment operably coupled or operably couplable to a monolithic heater body c100 or to one or more other monolithic body-segments that make up the heater body c100.

The heater body c100 may additionally include a heat recuperator c124 configured to utilize exhaust gas flowing through the exhaust pathway c120 to preheat intake air flowing through the intake air pathway c118, thereby recuperating heat from the exhaust gas. The terms preheater and recuperator may be used interchangeably; however, in some instances, the term preheater may be used with reference to preheating intake air flowing through the intake air pathway c118, and the term recuperator may be used with reference to recuperating heat from exhaust gas flowing through the exhaust pathway c120. The heat recuperator c124 may be provided in the form of a heat recuperator body. The heat recuperator body may define a monolithic body portion of the heater body c100 or a monolithic body-segment operably coupled or operably couplable to a monolithic heater body c100 or to one or more other monolithic body-segments that make up the heater body c100. As shown in FIG. 4.1.2A, the heat recuperator c124 may be located downstream from the recirculation eductor c116 relative to the exhaust gas pathway c120 and upstream from the recirculation eductor c116 relative to the intake air pathway c118. The heat recuperator located as shown in FIG. 4.1.2A may exchange heat between exhaust gas flowing through the exhaust gas pathway c120 and intake air flowing through the intake air pathway c118. In another embodiment, as shown in Fig. 4.1.2B, the heat recuperator c124 may define a portion of the recirculation pathway c104. For example, the heat recuperator c124 may be located upstream from the recirculation eductor c116 relative to the recirculation pathway c120, while also being located upstream from the recirculation eductor c116 relative to the intake air pathway c118. The heat recuperator located as shown in Fig. 4.1.2B may exchange heat between exhaust gas flowing through the exhaust gas pathway c120 and intake air flowing through the intake air pathway c118, and/or between combustion gas flowing through the recirculating pathway c104 and intake air flowing through the intake air pathway c118.

One or more fuel nozzles c126 may be operably coupled to the heater body c100. Fuel may be supplied to the combustion chamber c102 by one or more fuel lines c103. For example, the one or more fuel nozzles c126 may be operably coupled to the combustion chamber c102. Fuel injected into the combustion chamber c102 may combine with circulating combustion gas to provide a suitable air-to-fuel ratio. The fuel and at least a portion of the circulating combustion gas may be combusted in the combustion chamber so as to generate hot combustion gas. The combustion chamber c102 may fluidly communicate with an upstream portion of the hot-side heat exchanger c106, thereby suppling the hot combustion gas to the hot-side heat exchanger c106 for heating the working-fluid body c108. One or more intake air pathways c118, one or more exhaust gas pathways c120, one or more recirculation pathways c104, and one or more fuel lines c103 may collectively define a primary flowpath c121.

FIGs. 4.1.3A, 4.1.3B, and 4.1.3C schematically depict cross-sectional perspective views of an exemplary heater bodies c100, while FIG. 4.1.4 schematically depicts a top view of the exemplary heater body c100 shown in FIG. 4.1.3A. As shown, an exemplary heater body c100 may have an annular configuration, however, other configurations are also contemplated. The heater body c100 may include a plurality of monolithic body portions that together may define a monolithic heater body c100. Alternatively, or in addition, the heater body c106 may include one or more monolithic body-segments operably coupled or operably couplable to a monolithic heater body c100. Further, a plurality of monolithic body-segments may be operably coupled or operably couplable to one another to define at least a portion of a heater body c100. In an exemplary embodiment, a heater body c100 may define a single monolithic body. In other embodiments, a plurality of monolithic body-segments may be operably coupled to one another, such as via welding, fusing, or the like, so as to provide an integrally formed heater body c100.

A heater body c100 and/or various featured thereof may include a proximal portion c200 and a distal portion c202 oriented relative to a longitudinal axis c204, with a medial portion c206 disposed between the proximal portion c200 and the distal portion c202. The proximal portion c200 of the heater body c100 or a feature thereof refers to a portion, relative to a longitudinal axis c204, adjacent or relatively proximate to a working-fluid body c108 such as one or more pistons of a closed-cycle engine c002. The distal portion c202 of the heater body c100 or a feature thereof refers to a portion, relative to the longitudinal axis c204, opposite from or relatively remote to the working-fluid body c108. A proximal, distal, or medial portion c200, c202, c206 need not refer to a finite point on the heater body c100 or a feature thereof; rather, it will be appreciated that the terms proximal, distal, and medial c200, c202, c206 may be used generally, such as to denote the location of a portion of the heater body c100 or a feature thereof relative to the working-fluid body c108 and/or to denote the location of various features of the heater body c100 relative to one another.

Referring still to FIGs. 4.1.3A, 4.1.3B, and 4.1.3C, a heater body c100 may include a combustion chamber c102 and a hot-side heat exchanger c106 circumferentially surrounding at least a portion of the combustion chamber c102. In some embodiments, a recirculation pathway c104 may circumferentially surround at least a portion of the combustion chamber c102. A heater body c100 may additionally or alternatively include a conditioning conduit c122 circumferentially surrounding at least a portion of the combustion chamber c102. For example, as shown, the hot-side heat exchanger c106 may circumferentially surround a proximal portion c200 of the combustion chamber c102 and the conditioning conduit c122 may circumferentially surround a medial portion c206 and/or a distal portion c202 of the combustion chamber c102. In some embodiments, the hot-side heat exchanger c106 may additionally circumferentially surround at least some of a medial portion c206 of the combustion chamber c102. In some embodiments, it may be advantageous for the combustion chamber c102 to be aligned with the longitudinal axis c204 and/or for a plurality of combustion chambers c102 to be circumferentially spaced (e.g., evenly distributed) about the longitudinal axis c204. For example, such alignment and/or even distribution may encourage relatively even heat distribution within the heater body c100 and/or the hot-side heat exchanger c106. Such relatively even heat distribution may, in turn, encourage relatively even heat transfer from the hot-side heat exchanger c106 (e.g., from a heating fluid flowing therethrough) to the plurality of heat transfer regions.

The heater body c100 may further include a recirculation eductor c116 circumferentially surrounding the combustion chamber c102. When the heater body c100 includes a conditioning conduit c122, the recirculation eductor c116 may be disposed radially or concentrically outward from the conditioning conduit c122, for example, such that the recirculation eductor c116 circumferentially surrounds at least a portion of the conditioning conduit c122. For example, the recirculation eductor c116 may circumferentially surround a distal portion c202 and/or a medial portion (e.g., a distally-medial portion) of the combustion chamber c102. Additionally, when the heater body c100 includes a conditioning conduit c122, the recirculation eductor c116 may circumferentially surround a distal portion c202 and/or a medial portion (e.g., a distally-medial portion) of the conditioning conduit c122. The recirculation eductor c116 may be disposed axially adjacent to the hot-side heat exchanger c106, such as adjacent to a distal portion c202 of the hot-side heat exchanger c106 relative to the longitudinal axis c204.

In some embodiments, a heater body c100 may include a heat recuperator c124 circumferentially surrounding the combustion chamber c102. When the heater body c100 includes a conditioning conduit c122, the heat recuperator c124 may be disposed radially or concentrically outward from the conditioning conduit c122, for example, such that the heat recuperator c124 circumferentially surrounds at least a portion of the conditioning conduit c122. For example, the heat recuperator c124 may circumferentially surround a distal portion c202 and/or a medial portion (e.g., a distally-medial portion) of the combustion chamber c102. Additionally, when the heater body c100 includes a conditioning conduit c122, the heat recuperator c124 may circumferentially surround a distal portion c202 and/or a medial portion (e.g., a distally-medial portion) of the conditioning conduit c122. The heat recuperator c124 may be disposed axially adjacent to the recirculation eductor c116, such as adjacent to a distal portion c202 of the recirculation eductor c116 relative to the longitudinal axis c204.

In some embodiments, as shown for example in FIG. 4.1.3B, a heater body c100 may include a heat shield c127. The heat shield c127 may be configured to insulate and/or shield one or more portions of the heater body c100 from a heat source within the heater body c100. For example, the heat source may include a combustion flame and/or combustion gas circulating through the recirculation pathway c104, and/or portions of the heater body c100 that become heated by the combustion flame and/or combustion gas. Additionally, or in the alternative, the heat shield c127 may provide a heat sink to absorb and/or dissipate heat, such as heat from a combustion flame and/or combustion gas circulating through the recirculation pathway c104. In some embodiments, the heat shield c127 may include a cooling jacket c128 defined by an inner wall c130 and an outer wall c132. The cooling jacket c128 may fluidly communicate with the intake air annulus c216, such that intake air may flow therethrough. Additionally, or in the alternative, the cooling jacket c128 may define a space with a vacuum or near vacuum. The cooling jacket c128 may define one or more pathways, such as an annular pathway or a plurality of semi-annular pathways. The cooling jacket may cool hot portions of the heater body c100, for example to maintain suitable operating temperatures and/or to shield users or surrounding equipment from hot portions of the heater body c100.

A heater body c100 may define a single monolithic body providing a recirculation pathway c104, an intake air pathway c118, and/or an exhaust pathway c120. For example, a plurality of monolithic body portions may together define a single monolithic body. Alternatively, a heater body c100 may include separate monolithic body-segments respectively defining a recirculation pathway c104, an intake air pathway c118, and/or an exhaust pathway c120. In some embodiments, a first monolithic body-segment may define a recirculation pathway c104, a second monolithic body-segment may define an intake air pathway c118, and a third monolithic body-segment may define an exhaust pathway c120. Such monolithic body-segments may be coupled to one another, such as via welding, fusing, or the like, so as to provide an integrally formed heater body c100.

A monolithic body defining a recirculation pathway c104 may include a combustion chamber c102 and a hot-side heat exchanger c106 fluidly communicating with a proximal portion c200 of the combustion chamber c102. Such a monolithic recirculation pathway c104 may additionally include a recirculation eductor c116 fluidly communicating with a radially or concentrically outward portion of the hot-side heat exchanger c106 and a conditioning conduit c122 having a proximal portion c200 fluidly communicating with a radially or concentrically inward portion of the recirculation eductor c116 and a distal portion c202 fluidly communicating with a distal portion c202 of the combustion chamber c102.

In some embodiments, a heater body c100 may include a recirculation annulus c208. The recirculation annulus c208 may be disposed radially or concentrically outward from at least a portion of the hot-side heat exchanger c106 and/or at least a portion of the recirculation eductor c116. Additionally, or in the alternative, the recirculation annulus c208 may circumferentially surround at least a portion of the hot-side heat exchanger c106 and/or at least a portion of the recirculation eductor c116. The recirculation annulus c208 may fluidly communicate with a radially or concentrically outward portion of the hot-side heat exchanger c106 and a radially or concentrically outward portion of the recirculation eductor c116 so as to define a pathway to direct at least a portion of the combustion gas discharging from the hot-side heat exchanger c106 into the recirculation annulus c208.

In some embodiments, a heater body c100 may include fuel injector body c401. The fuel injector body c401 may include a combustor cap c210 providing fluid communication between a distal portion c202 of the conditioning conduit c122 and a distal portion c202 of the combustion chamber c102. The fuel injector body c401 may additionally or alternatively include one or more fuel nozzles c214. The fuel injector body c401 and/or the combustor cap c210 and/or one or more fuel nozzles c214 may be a separate component operably coupled or operably couplable to the heater body c110, such as at a distal portion c202 of the conditioning conduit c122 as shown. Additionally, or in the alternative, the fuel injector body c401 and/or the combustor cap c210 and/or one or more fuel nozzles c214 may be a portion of a monolithic body defining at least a portion of the heater body c100.

In some embodiments, one or more fuel nozzles c214 may be operably coupled to the combustor cap c210. For example, the combustor cap c210 may include one or more nozzle ports c212 respectively configured to receive a fuel nozzle c214. One or more fuel nozzles c214 may be operably coupled to corresponding nozzle ports c212 such as by mating threads or the like. The one or more fuel nozzles c214 may include a glow plug c215 operable to ignite fuel and/or combustion gas in the combustion chamber c102. As shown, the fuel nozzle may be aligned with the longitudinal axis c204 of the heater body c100 and may be concentric with the combustion chamber c102. Additionally, or in the alternative, one or more fuel nozzles c214 may be circumferentially spaced about the distal portion c202 of the combustion chamber. In some embodiments, it may be advantageous for a fuel nozzle c214 to be aligned with the longitudinal axis c204 and/or for a plurality of fuel nozzles c214 to be circumferentially spaced (e.g., evenly distributed) about the longitudinal axis c204. For example, such alignment and/or even distribution may encourage flame stability within the combustion chamber c102 and/or relatively even heat distribution within the combustion chamber c102 and/or the hot-side heat exchanger c106.

A monolithic body defining an intake air pathway c118 may include an intake air body, such as an intake air annulus c216 and/or a monolithic body defining an exhaust pathway c120 may include an exhaust body, such as an exhaust annulus c218. The intake air annulus c216 and the exhaust annulus c218 may define portions of a single monolithic body or may be separate monolithic body-segments operably coupled or operably couplable to one another. The intake air annulus c216 and/or the exhaust annulus c218 may circumferentially surround at least a portion of the combustion chamber c102. As shown, the intake air annulus c216 may include one or more intake ports c220 and the exhaust annulus c218 may include one or more exhaust ports c222. As shown in FIGs. 4.1.3A and 4.1.3B, the intake air annulus c216 and the exhaust annulus c218 may be disposed axially adjacent to one another. For example, the intake air annulus c216 may be adjacent to a distal portion c202 of the exhaust annulus c218 and/or the exhaust annulus c218 may be adjacent to a proximal portion of the intake air annulus c216 relative to the longitudinal axis c204. As shown in FIG. 4.1.3C, the intake air annulus c216 and the exhaust annulus c218 may be disposed co-annularly relative to one another. For example, the intake air annulus c216 may be disposed radially or concentrically inward from the exhaust annulus c218, with the exhaust annulus c218 circumferentially surrounding the intake air annulus c216. Alternatively, the exhaust annulus c218 may be disposed radially or concentrically inward from the intake air annulus c216, with the intake air annulus c216 circumferentially surrounding the exhaust annulus c218.

The intake air annulus c216 may include a plurality of intake vanes c224 circumferentially spaced about the intake air annulus c216. The intake vanes c224 may define at least a portion of a pathway configured to direct intake air from the intake air annulus c216 to the recirculation pathway c104. The exhaust annulus c218 may include a plurality of exhaust vanes c226 circumferentially spaced about the exhaust annulus c218. The exhaust vanes c226 may define at least a portion of a pathway configured to direct exhaust gas into the exhaust pathway c218.

In some embodiments, the intake air annulus c216 and the exhaust annulus c218 may fluidly communicate with a heat recuperator c124. More particularly, a preheater portion of the heat recuperator c124 may define at least a portion of an intake air pathway c118 and a recuperator portion of the heat recuperator c124 may define at least a portion of an exhaust pathway c120. The heat recuperator c124 may be part of a monolithic body defining the intake air pathway c118 and/or the exhaust pathway c120. The exhaust annulus c218 and/or the intake air annulus c216 may circumferentially surround at least a portion of the heat recuperator c124. As shown in FIG. 4.1.2A, the exhaust annulus c218 may circumferentially surround the heat recuperator c124, and the intake air annulus c216 may be axially adjacent to the exhaust annulus c218, with the intake vanes c224 being axially adjacent to at least a portion of the heat recuperator c124. For example, the intake vanes c224 may be adjacent to a distal portion c202 of the heat recuperator c124.

The heat recuperator c124 may include a preheater portion and a recuperator body portion having a thermally conductive relationship with one another. The preheater portion may fluidly communicate with the intake air annulus c216 and the recirculation eductor c116 so as to define at least a portion of the intake air pathway c118. The recuperator body portion may fluidly communicate with the recirculation eductor c116 and the exhaust annulus c218 so as to define at least a portion of the exhaust pathway c120. In an exemplary embodiment, the exhaust pathway c120 from the recirculation eductor c116 may be upstream from the intake air pathway c118 to the recirculation eductor c116 so as to avoid intake air from the intake air pathway c118 flowing directly into the exhaust pathway c120 before combining with the recirculation pathway c104.

In some embodiments, a heater body c100 may include a motive annulus c228 providing fluid communication from the preheater portion of the recuperator c124 to the recirculation eductor c116. The heat recuperator c124 may circumferentially surround the motive annulus c228, and the motive annulus may circumferentially surround at least a portion of the combustion chamber c102. When the heater body c100 includes a conditioning conduit c122, the motive annulus c228 may be disposed radially or concentrically outward from the conditioning conduit c122, for example, such that the motive annulus c228 circumferentially surrounds at least a portion of the conditioning conduit c122. For example, the motive annulus c228 may circumferentially surround a medial portion of the combustion chamber c102 and/or a medial portion of the conditioning conduit c122. The motive annulus c228 may be disposed axially adjacent to the recirculation eductor c116, such as adjacent to a distal portion of the recirculation eductor c116 relative to the axial axis c204.

In exemplary embodiments, the recirculation pathway c104, the intake air pathway c118 and/or the exhaust pathway c120 may follow a generally spiral orientation. As shown in FIG. 4.1.2A, the recirculation pathway c104 and the intake air pathway c118 may spiral counterclockwise, and the exhaust pathway c120 may spiral clockwise. Alternative, the recirculation pathway c104 and the intake air pathway c118 may spiral clockwise, and the exhaust pathway c120 may spiral counterclockwise. Such flows through the heater body c100 may transition from counterclockwise flow to clockwise flow (or from clockwise flow to counterclockwise flow) at the exhaust pathway c120, where exhaust gas separates from combustion gas at the recirculation eductor c116. In this way, pressure loss from a change in flow direction may be minimized. Additionally, a pressure drop associated with a change in direction at the exhaust pathway c120 may at least partially favor recirculation of combustion gas through the recirculation eductor c116.

During operation, intake air is directed into the intake air annulus c216. In some embodiments, the intake air may be pressurized, such as via a compressor (not shown), to induce a flow of intake air into the intake air pathway c118. The intake air circulates counterclockwise through the intake air annulus c216, where a plurality of intake vanes c224 circumferentially spaced about the intake air annulus c216 direct the intake air in a radially or concentrically inward and axially proximal spiral having a counterclockwise orientation. The intake air flowing through the intake vanes c224 continues a radially or concentrically inward spiral flow through the heat recuperator c124 and into the motive annulus c228. The intake air in the motive annulus c228 enters the recirculation eductor c116 through a plurality of eductor slots configured to accelerate the intake air spirally into the conditioning conduit c122. The intake air passing through the eductor slots accelerates and entrains combustion gas flowing into the recirculation eductor c116 from the recirculation annulus c208. The intake air and the combustion gas mix to provide fresh combustion gas while flowing helically through the conditioning conduit c122 in an axially distal direction. The fresh combustion gas reaches the combustion cap c210, which directs the flow of fresh combustion gas into the combustion chamber while a fuel nozzle c214 introduces a flow of fuel, which may include a liquid, gaseous fuel.

In the combustion chamber c102, fuel combines with the fresh combustion gas and is ignited, for example, by a glow plug or a spark plug. The combustion chamber c102 provides a vortex combustion pattern with a counterclockwise flow. Centripetal force of the vortex combustion pattern draw the combustion flame radially or concentrically inward while propelling unburnt combustion gas radially or concentrically outward. The combustion gas continues with a spiral counterclockwise flow out of the combustion chamber c102 and into the hot-side heat exchanger c106. The combustion gas flows in a radially or concentrically outward counterclockwise spiral through the hot-side heat exchanger c106 and into the recirculation annulus c208.

The recirculation annulus c208 directs the combustion gas in an axially distal and radially or concentrically inward direction into the recirculation eductor c116, where a portion of the combustion gas is accelerated and entrained by intake air flowing through the eductor slots of the recirculation eductor c116. The remainder of the combustion gas flows in an axially distal direction through exhaust slots in the recirculation eductor c116. The exhaust slots in the recirculation eductor c116 reverse the direction of the exhaust gas flow, directing the exhaust gas in an axially distal and clockwise spiral direction into the recuperator body portion of the heat recuperator c124. The exhaust gas flow in a clockwise spiral into the exhaust annulus c218, where the exhaust gas discharges from the heater body c100 through one or more exhaust ports c222.

Referring still to e.g., FIGs. 4.1.2A and 4.1.2B, and 4.1.3A through 4.1.3C, an exemplary heater body c100 may include a combustion chamber c102 and a recirculation pathway c104 configured to recirculate combustion gas through the combustion chamber c102. The heater body c100 includes an intake air pathway c118 and an exhaust pathway c120 may fluidly communicate with the recirculation pathway c104. The recirculation pathway c104 may include a hot-side heat exchanger c106 and a recirculation eductor c116. However, in some embodiments, the recirculation eductor c116 may be omitted and the combustion chamber c102 may fluidly communicate with the intake air pathway c118 and the exhaust pathway c120 with combustion gas discharging from the heater body without recirculating. The exhaust pathway c120 may fluidly communicate with the recirculation pathway c104 upstream from the intake air pathway c118.

As shown in FIGs. 4.1.2A and 4.1.3A, the hot-side heat exchanger c106 may fluidly communicate with a proximal portion of the combustion chamber c102, and the recirculation eductor c116 may fluidly communicate with a downstream portion of the hot-side heat exchanger c106 and a distal portion c202 of the combustion chamber c102. The recirculation eductor c116 may be configured to entrain and/or accelerate combustion gas circulating through the recirculation pathway c104 using intake air, for example, from an intake air pathway c118 may fluidly communicate with the recirculation pathway c104.

In some embodiments, the recirculation eductor c116 may define at least a portion of the exhaust pathway c120. For example, the exhaust pathway c120 may fluidly communicate with the recirculation pathway c104 at the recirculation eductor c116, such that the exhaust pathway c120 discharges a portion of the combustion gas from the recirculation eductor c116 as exhaust gas. In another embodiment, as shown for example in FIG. 4.1.2B, the exhaust pathway c120 may discharge exhaust gas upstream from the recirculation eductor c116.

When the heater body c100 includes a recirculation pathway c104, the proportion of combustion gas may be recirculated may vary depending on the operating conditions of the heater body c100. The proportion of combustion gas may be recirculated to the proportion of fresh intake air may be utilized may be described by a recirculation ratio R, according to the following equation (1): $R = I/C$, where I is the flow rate if intake air flowing into the heater body c100 and T is C the flow rate of combustion gas flowing to the combustion chamber. The recirculation ratio may vary from 0% to 100% depending, for example, on the operating conditions of the heater body c100. For example, a greater proportion of intake air may be utilized during startup, with recirculation ratio increasing as the heater body c100 transitions from startup conditions to steady-state conditions. Additionally, the recirculation ratio may depend on desired combustion conditions, such as equivalence ratio. **In** some embodiments, the recirculation ratio may be from 0% to 90%, such as from 10% to 90%, such as from 0% to 60%, such as from about 30% to about 70%, such as from 40% to 60%. During startup conditions, the recirculation ratio may be from 0% to 50%, such as from 0% to 30% or from 0% to 10%. During steady-state conditions, the recirculation ratio may be from 10% to 90%, such as from 10% to 60%, or from 30% to 60%. The remainder of combustion gas may be discharged from the recirculation pathway c104 as exhaust gas.

In some embodiments, the exemplary heater body c100 may include a heat recuperator c124 defining at least a portion of an exhaust pathway c120 and at least a portion of an intake air pathway c118. The heat recuperator c124 may be located upstream from a recirculation eductor c116 as shown in FIGs. 4.1.2A, or the heat recuperator c124 may be located upstream from a recirculation eductor c116 as shown in FIG. 4.1.2B. As shown in FIGs. 4.1.2A, the heat recuperator c124 may utilize exhaust gas flowing through the exhaust pathway c120 to preheat intake air flowing through the intake air pathway c118, the exhaust pathway c120 having a thermally conductive relationship with the intake air pathway c118. The heat recuperator c124 may fluidly communicate with the recirculation pathway c104 indirectly, such as at the recirculation eductor c116 through the exhaust pathway c120 and the intake air pathway c118. Alternatively, the heat recuperator c124 may fluidly communicate with the recirculation pathway c104 directly, as shown in FIGs. 4.1.2A, such that the heat recuperator c124 may heat the intake using combustion gas recirculating through the recirculation pathway c104 to air, or a combination of exhaust gas and combustion gas. Regardless of whether the heat recuperator c124 utilizes exhaust gas and/or recirculating combustion gas to heat the intake air, the exhaust pathway c120 may be located upstream from the intake air pathway c118, such that exhaust gas may be removed from the recirculation pathway c104 prior to intake air being introduced to the recirculation pathway c104.

Now referring to FIG. 4.1.5 exemplary methods of heating a heat exchanger body c600 will be described. The exemplary methods of heating a heat exchanger body c600 may include, for example, methods of heating a closed-cycle engine c002. For example, exemplary methods may be performed in connection with operation of a heater body c100

and/or a closed-cycle engine c002 as described herein. As shown in FIG. 4.1.5, an exemplary method c150 may include, at block c152, circulating combustion gas through a combustion chamber c102 and a recirculation pathway c104 configured to recirculate combustion gas through the combustion chamber c102. The recirculation pathway c104 may include a hot-side heat exchanger c106 and a recirculation eductor c116. The hot-side heat exchanger c106 may fluidly communicate with a proximal portion of the combustion chamber c102. The recirculation eductor c116 may fluidly communicate with a downstream portion of the hot-side heat exchanger c106 and a proximal portion of the conditioning conduit c122 and/or and a distal portion of the combustion chamber c102. At block c154, an exemplary method c150 may include transferring heat from the combustion gas in the hot-side heat exchanger c106 to a plurality of heat transfer regions that respectively have a heat transfer relationship with a corresponding semiannular portion of the hot-side heat exchanger c106. The exemplary method c150 may include, at block c156, swirling combustion gas through a conditioning conduit c122 defining at least a portion of the recirculation pathway c104. The conditioning conduit c122 may fluidly communicate with a downstream portion of the recirculation eductor c116 and a distal portion of the combustion chamber c102. The exemplary method c150 may additionally include, at block c158, combusting a fuel and/or at least a portion of the combustion gas. The fuel and/or combustion gas may be combusted in the combustion chamber c102. In some embodiments, at least a portion of the combustion may take place within the hot-side heat exchanger c106.

In some embodiments, an exemplary method c150 may include, at block c160, injecting intake air into the recirculation pathway c104. The intake air may be injected through an intake air pathway c118 fluidly communicating with the recirculation pathway c104. For example, a recirculation eductor c116 may include a motive pathway defining at least a portion of the intake air pathway c118. The exemplary method may additionally include, at block c162, entraining and/or accelerating combustion gas circulating through the recirculation pathway c104 at least in part by injecting the intake air into the recirculation pathway c104, for example, through the motive pathway of the recirculation eductor c116. The exemplary method may further include, at block c164, discharging a portion of the combustion gas from the recirculation pathway c104 as exhaust gas. The exhaust gas may discharge through an exhaust pathway c120, and the exhaust gas pathway c120 may fluidly communicate with the recirculation pathway c104. In some embodiments, the exhaust gas pathway c120 may be defined at least in part by the recirculation eductor c116. The exhaust gas may be preferentially discharged from the recirculation pathway c104 upstream from a location where the intake air pathway c118 fluidly communicates with the recirculation pathway c104.

The exemplary method may additionally include, at block c166, preheating intake air flowing through the intake air pathway c118. The intake air may be preheated at least in part using exhaust gas flowing through an exhaust pathway c120 by the exhaust pathway c120 having a thermally conductive relationship with the intake air pathway c118. For example, in some embodiments, the intake air may be preheated at least in part using a heat recuperator c124. The heat recuperator c124 may define at least a portion of the intake air pathway c118 and at least a portion of the exhaust pathway c120, thereby providing a thermally conductive relationship between the exhaust gas pathway c120 and the intake air pathway c118. Additionally, or in the alternative, the intake air may be preheated at least in part using combustion gas flowing through a recirculation pathway c104 by the recirculation pathway c104 having a thermally conductive relationship with the intake air pathway c118. With the heat recuperator c124 fluidly communicating with the recirculation eductor c116, the exemplary method c150 may include flowing combustion gas from the recirculation pathway c104 into the heat recuperator c124 at the recirculation eductor c116 through the exhaust pathway c120, and flowing intake air from the intake air pathway c118 into the recirculation eductor c116 at the heat recuperator c124. The exhaust pathway c120 may preferably be located upstream from the intake air pathway c118.

In an exemplary embodiment, transferring heat from the combustion gas in the hot-side heat exchanger c106 at block c154 may include transferring heat to a working-fluid body c108. The working-fluid body c108 may include a solid body and/or fluid in a fluid pathway defined at least in part by the solid body. The heat transferring to the working-fluid body c108 may come from combustion gas flowing through a plurality of heating fluid pathways defined at least in part by the hot-side heat exchanger c106. The heat may be transferred to respective ones of a plurality of heat transfer regions that have a thermally conductive relationship with a corresponding portion of the plurality of heating fluid pathways. The working-fluid body c108 may include a plurality of working-fluid pathways, and the exemplary method c150 may include flowing fluid through the working-fluid pathways as heat transfers thereto from the hot-side heat exchanger c106. In some embodiments, the working-fluid pathways may fluidly communicate with a piston chamber and a regenerator of a closed-cycle engine c002, and the exemplary method may include flowing fluid through the working-fluid pathways alternatingly between the regenerator and the piston chamber.

In an exemplary embodiment, combusting a fuel and/or at least a portion of the combustion gas at block c158 may include combusting fuel and at least a portion of the combustion gas in the combustion chamber c102 and/or in the heating fluid pathways of the hot-side heat exchanger c106. The fuel may be supplied by a fuel nozzle fluidly communicating with the combustion chamber c102. The combustion gas circulating through the combustion chamber c102 and/or the recirculation pathway c104 at block c152 may be from 10% to 90% of the total combustion gas flowing into the combustion chamber c102, and the remainder of the combustion gas may be discharged from the recirculation pathway c104 as exhaust gas through the exhaust pathway c120. It will be appreciated that the proportion of combustion gas being recirculated may vary depending on operating conditions and/or configuration of the heater body c100. For example, the proportion of combustion gas being recirculated may vary as between startup and steady-state conditions. Also, in some embodiments, the heater body c100 may not have a recirculation pathway or the recirculation pathway may be closed so as to carry out combustion of the fuel utilizing 100% intake air.

Now referring to FIGs. 4.1.6A and 4.1.6B exemplary monolithic bodies defining at least a portion of a heater body c100 will be described. Exemplary monolithic bodies may be formed as one single monolithic body. Various portions of a monolithic body are sometimes referred to as monolithic body portions. Additionally, or in the alternative, exemplary monolithic bodies may include a plurality of segments combinable to form a monolithic body. Such segments are sometimes referred to herein as monolithic body-segments. As shown in FIGs. 4.1.6A and 4.1.6B, an exemplary heater body c100 may include a combustor body c400, a fuel injector body c401, a hot-side heat exchanger body c600, an eductor body c300, a heat recuperator body c500, and/or a working-fluid body c108. The combustor body c400, the fuel injector body c401, the hot-side heat exchanger body c600, the eductor body c300, the heat recuperator body c500, and/or the working-fluid body c108 may respectively define monolithic body portions of the heater body c100 and/or monolithic body-segments of the heater body c100.

An exemplary heater body c100 may include a combustor body c400. The combustor body c400 may include a combustion chamber body c402 defining at least a portion of a combustion chamber c102. The combustion chamber body c402 and/or the combustion chamber c102 may be disposed annularly about an axis c204. The combustor body c400 may additionally include a conditioning conduit body c404 defining at least a portion of a conditioning conduit c122 circumferentially surrounding the combustion chamber c102. The combustion chamber body c402 and the conditioning conduit body c404 may be monolithically integrated with the heater body c100 at a distal portion of the heater body c100 such that the conditioning conduit may fluidly communicate with the combustion chamber c102 at a distal portion of the combustion chamber c102. For example, the conditioning conduit body c404 may be monolithically integrated with the combustion chamber body c402. Alternatively, the combustion chamber body c402 and the conditioning conduit body c404 may define monolithic body-segments operably couplable to one another and/or to the heater body c100 or another monolithic body-segment thereof so as to provide an integrally formed combustor body c400.

An exemplary heater body c100 may additionally or alternatively include a fuel injector body c401. The fuel injector body c401 may be monolithically integrated with the heater body c100 at a distal portion c202 of the heater body c100, such as at a distal portion c202 of the combustion chamber c102. For example, the fuel injector body c401 may be monolithically integrated with the combustor body c400 (e.g., with the combustion chamber body c402 and/or the conditioning conduit body c404). Alternatively, the fuel injector body c401 and the combustor body c400 (e.g., the combustion chamber body c402 and/or the conditioning conduit body c404) may define monolithic body-segments operably couplable to one another and/or to the heater body c100 or another monolithic body-segment thereof.

An exemplary heater body c100 may additionally or alternatively include a hot-side heat exchanger body c600. The hot-side heat exchanger body c600 may include a plurality of heating fluid pathways and a plurality of heat transfer regions. The plurality of heating fluid pathways may be circumferentially spaced about an inlet plenum fluidly communicating with the plurality of heating fluid pathways. In some embodiments, respective ones of the plurality of heating fluid pathways may define a spiral pathway. Respective ones of the plurality of heat transfer regions may have a heat transfer relationship with a corresponding semiannular portion of the plurality of heating fluid pathways.

The hot-side heat exchanger body c600 may be monolithically integrated with the heater body c100 at a proximal portion c200 of the heater body c100 such that the combustion chamber c102 may fluidly communicate with the plurality of heating fluid pathways at a proximal portion c200 of the combustion chamber c102. For example, the hot-side heat exchanger body c600 may be monolithically integrated with the combustor body c400 (e.g., with the combustion chamber body c402 and/or the conditioning conduit body c404). Alternatively, the hot-side heat exchanger body c600 and the combustor body c400 (e.g., the combustion chamber body c402 and/or the conditioning conduit body c404) may define monolithic body-segments operably couplable to one another and/or to the heater body c100 or another monolithic body-segment thereof.

An exemplary heater body c100 may additionally or alternatively include an eductor body c300. The eductor body c300 may be monolithically integrated with the hot-side heat exchanger body c600 and/or the combustor body c400 (e.g., the conditioning conduit body c404) such that the plurality of heating fluid pathways may fluidly communicate with a radially or concentrically outward portion of the an eduction pathway defined by the eductor body c300. In some embodiments, the exemplary heater body c100 may include a recirculation annulus body c302 configured to provide fluid communication between the plurality of heating fluid pathways of the hot-side heat exchanger body c600 and the combustor body c400 (e.g., the conditioning conduit body c404).

An exemplary heater body c100 may additionally or alternatively include a heat recuperator body c500. The heat recuperator body c500 may be monolithically integrated with the eductor body c300. In some embodiments, the exemplary heater body c100 may include an intake annulus body c502, an exhaust annulus body c504, and/or a motive annulus body c506. The intake annulus body c502 may be monolithically integrated with the heat recuperator body c500 such that the intake annulus body c502 and the heat recuperator body c500 define at least a portion of an intake air pathway c118. The exhaust annulus body c504 may be monolithically integrated the heat recuperator body c500 such that the exhaust annulus body c504 and the heat recuperator body c500 define at least a portion of the exhaust pathway c120. The motive annulus body c502 may be monolithically integrated with the heat recuperator body c500 and the eductor body c300 such that the motive annulus body defines at least a portion of the intake air pathway c118 between the heat recuperator body c500 and the eductor body c300.

An exemplary heater body c100 may additionally or alternatively include a working-fluid body c108. A working-fluid body c108 may include any one or more bodies that receive a heat input from the hot-side heat exchanger body c600. An exemplary working-fluid body c108 may include one or more piston bodies c700 and/or one or more regenerator bodies c800. An exemplary working-fluid body c108 may additionally or alternatively include one or more working-fluid pathways c110, such as one or more working-fluid pathways c110 fluidly communicating with at least one piston body c700 and/or at least one regenerator body c800. A working-fluid body c108 may be monolithically integrated with the hot-side heat exchanger body c600. In some embodiments, the working-fluid body c108 may define at least a portion of a plurality of working-fluid pathways. Additionally, or in the alternative, in some embodiments the hot-side heat exchanger body c600 may define at least a portion of the plurality of working-fluid pathways.

As shown in FIG. 4.1.6B, an exemplary monolithic body may include a plurality of monolithic body-segments. A heater body c100 may include any one or more of the elements described with reference to FIG. 4.1.6A provided as a monolithic body portion or as a monolithic body-segment. An exemplary heater body c100 may include an arrangement of monolithic body-segments as shown in FIG. 4.1.6B; however, other combinations and arrangements are contemplated and any combination or arrangement of monolithic body-segments is within the scope of the present disclosure. As shown in FIG. 4.1.6B, a heater body c100 may include a first monolithic body-segment c056, a second monolithic body-segment c058, and a third monolithic body-segment c060.

The first monolithic body-segment c056 may include a combustor body c400. Additionally, or in the alternative, the first monolithic body-segment c056 may include a fuel injector body c401. The second monolithic body-segment c058 may include an eductor body c300 defining a first monolithic body portion of the second monolithic body-segment c058, a heat recuperator body c500 defining a second monolithic body portion of the second monolithic body-segment c058, a recirculation annulus body c302 defining a third monolithic body portion of the second monolithic body-segment c058, an intake annulus body c502 defining a fourth monolithic body portion of the second monolithic body-segment c058, an exhaust annulus body c506 defining a fifth monolithic body portion of the second monolithic body-segment c058, and/or a motive annulus body c506 defining a sixth monolithic body portion of the second monolithic body-segment c058, as well as subcombinations of these.

The third monolithic body-segment c060 may include a hot-side heat exchanger body c600 defining a second monolithic body portion of the third monolithic body-segment c060, and a working-fluid body c108 defining a second monolithic body portion of the third monolithic body-segment c060. In other embodiments, the first monolithic body-segment c056, the second monolithic body-segment c058, and/or the third monolithic body-segment c058 may respectively include any subcombination of the foregoing monolithic body portions, respectively provided as monolithic body portions of a respective monolithic body-segment or as separate monolithic body-segments.

Now referring to FIGs. 4.1.7, 4.1.8A-4.1.8G, 4.1.9, and 4.1.10, further exemplary embodiments will be described that pertain to a heater body c100, such as a monolithic heater body c100, and/or to one or more monolithic body-segments that make up the heater body c100. A heater body c100 and/or a monolithic body-segment may include one or more features that allow the heater body c100 to operate at a relatively elevated temperature. For example, such features may include one or more heat shields c127, one or more heat-capture pathways c133, and/or one or more thermal expansion joints c135, as respectively described herein. Such features may allow for a closed cycle engine such as a Sterling engine to operate at with an improved temperature ratio (THot,engine/TCold,ambient) and/or with an improved Carnot efficiency. For example, in some embodiments, a closed cycle engine that includes a heater body c100 configured in accordance with the present disclosure may exhibit a temperature ratio of from about 2 to about 4, such as at least about 2, such as at least about 3, or such as at least about 3.5. Additionally, or in the alternative, a closed cycle engine that includes a heater body c100 configured in accordance with the present disclosure may exhibit an improved Carnot efficiency, such as a Carnot efficiency 40% to about 60%, such as from about 50% to about 70%, such as from about 60% to about 70%, such as from about 60% to about 80%; such as at least about 50%, such as at least about 60%, such as at least about 65%. Such improved temperature ratio and/or improved Carnot efficiency may be attributable at least in part to the heater body c100 being configured according to the present disclosure. By way of example, the one or more heat shields c127, the one or more heat-capture pathways c133, and/or the one or more thermal expansion joints c135, may allow the heater body c100 to operate at an elevated temperature, thereby increasing the temperature difference between a hot side and a cold side of a heat engine, and corresponding conversation of heat energy to mechanical work, effective to impart such temperature ratio and/or such Carnot efficiency.

In some embodiments, a one or more portions of a monolithic heater body c100, and/or to one or more monolithic body-segments that make up the heater body c100, may include a heat shield c127. The heat shield c127 may be configured to insulate and/or shield one or more portions of the heater body c100 from a heat source within the heater body c100. For example, the heat source may include a combustion flame and/or combustion gas circulating through the recirculation pathway c104, and/or portions of the heater body c100 that become heated by the combustion flame and/or combustion gas. Additionally, or in the alternative, the heat shield c127 may provide a heat sink to absorb and/or dissipate heat, such as heat from a combustion flame and/or combustion gas circulating through the recirculation pathway c104. FIG. 4.1.7 shows a variety of exemplary locations for a heat shield c127.

As shown, in some embodiments, a heat shield c127 may be disposed about an exterior region of a heater body c100. For example, a first heat shield c127A may circumferentially surround at least a portion of a hot-side heat exchanger c106 and/or at least a portion of a working-fluid body c108, such as an outward portion of a hot-side heat exchanger c106 and/or an outward portion of a working-fluid body c108. The first heat shield c127A may be disposed about an annular or semi-annular portion of the hot-side heat exchanger c106, and/or an annular or semi-annular portion of the working-fluid body c108.

Additionally, or in the alternative, a second heat shield c127B may be disposed about an inward portion of a heater body c100, such as an inward annular portion of a heater body c100 or an inward semi-annular portion of a heater body c100. As shown, the second heat shield c127B may be disposed about an inward annular or semiannular portion of a hot-side heat exchanger c106 and/or working-fluid body c108. The second heat shield c127B may be additionally or alternatively disposed about a radial portion of the hot-side heat exchanger c106 and/or working-fluid body c108, such as an upper radial portion (as shown) and/or a lower radial portion. The second heat shield c127B may follow a contour or profile of the hot-side heat exchanger c106 and/or working-fluid body c108. The second heat shield c127C may be disposed between the hot-side heat exchanger c106 and a recirculation eductor c116.

In addition, or in the alternative, to the first heat shield c127A and the second heat shield C127B, a heater body c100 may include a third heat shield c127C disposed about at least a portion of a combustor body c400. For example, the third heat shield c127 may circumferentially surround at least a portion of the combustion chamber c102, such as a proximal portion c200 of the combustion chamber c102.

It will be appreciated that the locations of the heat shields c127 shown in FIG. 4.1.7 are provided by way of example and are not to be limiting. In fact, a heat shield c127 may be provided at any desirable location of a heater body c100. Other exemplary location for a heat shield c127 may include an exhaust body c504, a heat recuperation body c500, a motive annulus body c506, a conditioning conduit body c404, an eductor body c300, a regenerator body c800, a piston body c700, and/or a recirculation annulus body c302.

As discussed with reference to FIG. 4.1.3B, a heat shield may include a cooling jacket c128 through which air may flow, such as from an intake air annulus c216. Additionally, or in the alternative, in some embodiments a heat shield c127 may include an insulating material c129, such as shown in FIGs. 4.1.8A-4.1.8G. In an exemplary embodiment, the insulating material c129 may be formed of an additive manufacturing material, such as the same material as, or a different material from that, used to additively manufacture the heater body c100 or the monolithic body-segments that includes the insulating material c129. During operation of exemplary heater bodies c100, radiative heat may represent a significant source of heat transfer. An insulating material c129 may reduce the view factor of the heat shield c127, for example, as compared to an air gap between an inner wall c130 and an outer wall c132. However, in some embodiments, a heat shield c127 may include an insulating material c129 and an air jacket c128, which may also provide an improved view factor. For example, as shown in FIG. 4.1.7, the first heat shield c127A may include an insulating material c129 and an air jacket c128. Exemplary insulating materials c129 provide a view factor of zero as between opposite portions of the heater body c100, such as between an inner wall c130 and an outer wall c132.

In some embodiments, as shown in FIGs. 4.1.8A, and 4.1.8C-4.1.8G, an insulating material c129 of a heat shield c127 may include a radiative-heat shield c129A. The radiative-heat shield c129A may include any additively printed structure configured to shield the outer wall c132 from radiative heat from the inner wall c130, or vice versa. In some embodiments, as shown for example in FIG. 4.1.8A, three-dimensional unit cells, such as a three-dimensional array of unit cells. Such unit cells may have any desired shape, including polyhedral unit cells, conical unit cells, spherical unit cells, and/or cylindrical unit cells. The unit cells in a radiative-heat shield c129 may include open cells and/or closed cells. As shown in FIGs. 4.1.8D-4.1.8G, the radiant heat shield may include elongate shield elements that are formed as substantially independent additive structures, such as slanted elongate additive structures (FIG. 4.1.8D), horizontal elongate additive structures (FIG. 4.1.8E), and/or vertical additive structures (FIGs. 4.1.8F and 4.1.8G). As shown, a radiative-heat shield C129A may include one or more elongate shield elements, including less than five (5) elongate shield elements (FIGs. 4.1.8F) and/or less than two (2) elongate shield elements (FIG. 4.1.8G).

The radiative-heat shield c129A may be disposed within any portion of a heater body c100, such as between an inner wall c130 and an outer wall c132. The radiative-heat shield c129A may be an additively manufactured structure, which may be formed as part of the additive manufacturing process used to form a heater body c100 or a monolithic body-segment that defines a portion of the heater body c100. The radiative-heat shield c129A may be integrally formed with adjacent material of the heater body c100. **In** an exemplary embodiment, the radiative-heat shield c129 may provide a view factor of zero as between opposite portions of the heater body c100, such as between an inner wall c130 and an outer wall c132.

**In** some embodiments, the radiative-heat shield c129A may have a cross-sectional thickness of about 100 micrometers to about 5,000 micrometers, such as from about 750 micrometers to about 2,000 micrometers, such as from about 1,000 micrometers to about 1,500 micrometers. **In** some embodiments, the radiative-heat shield c129A may include unit cells with walls that have a thickness of from about 50 micrometers to about 500 micrometers, such as from about to about 125 micrometers to about 250 micrometers.

Heat conduction posts c131 may monolithically connect the radiative-heat shield c129A with an adjacent portion of the heater body c100, such as with an inner wall c130 and an outer wall c132 as shown. The conduction posts c131 may additionally or alternatively provide separation between the radiative-heat shield and adjacent portions of the heater body c100. The dimensions and/or quantity of the heat conduction posts c131 may be selected at least in part to augment a rate of conductive heat transfer between the radiative-heat shield c129A and an adjacent body c100. For example, relatively small, infrequently spaced, conduction posts c131 may be positioned on a hot-side of the radiative-heat shield c129A. Additionally, or in the alternative, relatively large, regularly spaced, conduction posts c131 may be positioned at least in part to conductively transport heat from the radiative-heat shield c129A to a desired portion of the heater body c100. For example, such conduction posts c131 may be configured and arranged so as to transport heat from a radiative-heat shield c129A to a recirculation eductor c116, where the heat may be advantageously utilized to preheat intake air and/or reheat combustion gas circulating through the recirculation pathway c104.

**In** some embodiments, as shown in FIG. 4.1.8B, an insulating material c129 may include a powder material c129B, such as an additive manufacturing powder material. The powder material c129B may be the same as that utilized to additively manufacture the heater body c100 and/or a monolithic body-segment thereof. The powder material c129B may be unsintered or partially sintered. The powder material c129B may exhibit a lower thermal conductivity relative to solidified material of the heater body c100. In some embodiments, as shown in FIG. 4.1.8C, an insulating material c129 may include a combined powder-radiative-heat shield c129C made up of a radiative-heat shield (e.g., a three-dimensional array of unit cells) c129A and a powder material (an additive manufacturing powder material) c129B disposed interstitially about the radiative-heat shield c129A. In some embodiments, closed cells of the radiative-heat shield c129 may include a powder material c129B, defining a powder-radiative-heat shield c129C. Additionally, or in the alternative, open cells of a radiative-heat shield c129A may include powder material c129B, defining a powder-radiative-heat shield c129C.

The powder-radiative-heat shield c129 may be configured and arranged at least in part to augment a rate of heat transfer between the powder-radiative-heat shield c129C and an adjacent body c100. For example, closed cells may be utilized to provide a conductive heat transfer modality, and/or open cells may be utilized to provide a radiative heat transfer modality. The powder-radiative-heat shield c129C may be configured and arranged at least in part to transport heat from the powder-radiative-heat shield c129C to a desired portion of the heater body c100. For example, a powder-radiative-heat shield c129C may be configured and arranged so as to transport heat from a hot-side heat exchanger c106 to a working-fluid body c108, or vice versa. Additionally, or in the alternative, a powder-radiative-heat shield c129C may be configured and arranged so as to transport heat from a hot-side heat exchanger c106 and/or a working-fluid body c108 to a recirculation eductor c116, where the heat may be advantageously utilized to preheat intake air and/or reheat combustion gas circulating through the recirculation pathway c104.

Referring now to FIGs. 4.1.7 and 4.1.9, in some embodiments, an heater body c100 may include one or more heat-capture pathways c133. The one or more heat-capture pathways c133 may be defined by the monolithic structure of the heater body c100 and/or by the monolithic structure of one or more monolithic body segments that make up the heater body c100. A heat-capture pathway c133 may be provided at any desired location of the heater body c100. The heat-capture pathway c133 may be configured to transport a heat-capture fluid. As used herein, the term "heat-capture fluid" includes any suitable fluid transported through a heat-capture pathway c133 that, during operation of the heater body c100, has a temperature that is lower than a portion of the heater body c100 intended to be cooled by the fluid in the heat-capture pathway c133.

A heat-capture pathway c133 may capture heat from one or more regions of a heater body c100. In some embodiments, a heat-capture pathway c133 may include a flowpath configured to flow a fluid disposed within the heat-capture pathway c133 to a relatively hotter region of the heater body c100, such as from a radially or concentrically outward portion of the heater body c100 to a radially or concentrically inward portion of the heater body c100, and/or from a distal portion of the heater body c100 to a proximal portion of the heater body c100. By way of example, a heat-capture pathway c133 may include a flowpath configured to flow a fluid to the combustion chamber c102 and/or an upstream portion of a hot-side heater body c106. Additionally, or in the alternative, a heat-capture pathway c133 may cool hot portions of the heater body c100, for example to maintain suitable operating temperatures and/or to shield users or surrounding equipment from hot portions of the heater body c100.

In an exemplary embodiment, the heat-capture fluid may include a process fluid derived from a fluid pathway located elsewhere in the heater body c100, such as a fluid extracted from a primary flowpath c121 of the heater body c100. For example, the heat-capture fluid may include a process gas, such as intake air, exhaust gas, combustion gas, and/or a fuel. Such combustion gas may include a combination of intake air, fuel, uncombusted or partially combusted combustion gas c428, and/or exhaust gas. Intake air may be supplied from an intake air pathway c118 to a heat-capture pathway c133 fluidly communicating with the intake air pathway c118. Exhaust gas may be supplied from an exhaust pathway c120 to a heat-capture pathway c133 fluidly communicating with the exhaust pathway c120. Combustion gas may be supplied from a recirculation pathway c104 to a heat-capture pathway c133 fluidly communicating with the recirculation pathway c104. Fuel may be supplied from a fuel supply line to a heat-capture pathway c133 fluidly communicating with the fuel supply line.

In some embodiments, the heat-capture pathway c133 may be configured to discharge a cooling fluid to a fluid pathway located elsewhere in the heater body c100 after having been utilized to provide cooling to a location of the heater body c100. For example, a heat-capture pathway c133 may be configured to discharge a cooling fluid to a location along a primary flowpath c121 of the heater body c100, such as to an intake air pathway c118, an exhaust gas pathway c120, a recirculation pathway c104, and/or a fuel line c103. The heat-capture pathway c133 may discharge cooling fluid to a fluid pathway of the primary flowpath c121 that is the same or different from the fluid pathway of the primary flowpath c121 from which the cooling fluid is obtained. For example, a heat-capture pathway c133 that utilizes intake air for cooling may discharge to an intake air pathway c118. Additionally, or in the alternative, a heat-capture pathway c133 that utilizes intake air for cooling may discharge to an exhaust gas pathway c120, to a recirculation pathway c104, and/or to a fuel line c103. A heat-capture pathway c133 that utilizes combustion gas, fuel, and/or exhaust gas, may discharge to an intake air pathway c118, an exhaust gas pathway c120, a recirculation pathway c104, and/or a fuel line c103. In some embodiments, a heat-capture pathway c133 may include a cooling jacket c128. Additionally, or in the alternative, a heat-capture pathway c133 may fluidly communicate with a cooling jacket c128.

As used herein, the term "heat-capture pathway" includes any fluid pathway configured to capture heat from a location of the heater body c100, and/or to provide cooling to a location of the heater body c100, apart from heat transfer that occurs along the primary flowpath c121. A heat-capture pathway c133 that utilizes a fluid from the primary flowpath c121 may be differentiated from the primary flowpath c121 by the heat-capture pathway c133 having an intended purpose of capturing heat from one or more portions of the heater body c100, and/or providing cooling to one or more portions of the heater body c100, separate and apart from a respective intended purpose of the primary flowpath c121, even though portions of the primary flowpath c121 inherently provide heat capture and/or cooling with respect to portions of the heater body c100. By way of example, a heat-capture pathway c133 that utilizes fluid from the primary flowpath c121 may transects a portion of the heater body c100 that differs from that of the primary flowpath c121, thereby capturing heat from a portion of the heater body c100 located elsewhere relative to the primary flowpath c121 and/or providing cooling to a portion of the heater body c100 located elsewhere relative to the primary flowpath c121. Additionally, or in the alternative, a heat-capture pathway c133 that utilizes fluid from the primary flowpath c121 may have an inlet and an outlet that fluidly communicate with respectively different portions of the primary flowpath c121. A heat-capture pathway c133 that utilizes fluid from the primary flowpath c121 may additionally or alternatively have a heat transfer relationship with a location of the heater body c100 where, during operation of the heater body c100, at least one location of the heater body c100 has a heat transfer relationship with respect to the fluid in the heat-capture pathway c133 that includes a temperature gradient that is greater than the temperature gradient of a heat transfer relationship between such location of the heater body c100 and the primary flowpath c121. By way of contrasting illustration, the respective flowpaths of the recirculation eductor c116 and/or of the heat recuperator c124 flow to their respective locations along the recirculation pathway c104 or the exhaust gas pathway c120, and are thereby differentiated from a heat-capture pathway c133.

In some embodiments, a heat-capture pathway c133 may utilize a cooling fluid that remains fluidly separate from the primary flowpath c131. For example, a heat-capture pathway c133 may utilize a chiller working fluid (e.g., a refrigerant), such as from a chiller assembly A40, as described herein. Additionally, or in the alternative, a heat-capture pathway c133 may utilize an engine-working fluid, such as from a working-fluid pathway c110, as described herein.

FIGs. 4.1.7 and 4.1.9 show an exemplary heat-capture pathway c133. As shown, a heat-capture pathway c133 may provide cooling to an interface between a heater body c100 and another portion an engine assembly 900. The heat-capture pathway c133 may provide cooling to a portion of the heater body c100 that includes a working-fluid body c108, a piston body c700, and/or a regenerator body c800. The heat-capture pathway c133 may additionally or alternatively provide cooling to a portion of the heater body c100 that interfaces with a working-fluid body c108, a piston body c700, and/or a regenerator body c800. The heat-capture pathway c133 may also return heat to the heater body c100, such as to an interior heater body-portion c100A of the heater body, such as a combustor body c400. As shown, the heat-capture pathway c133 may provide cooling to an interface between the heater body c100 and an engine body c050. In some embodiments, the heat-capture pathway c133 may provide cooling to a portion of the heater body c100 that interfaces with the engine body c050, such as to a working-fluid body c108, a piston body c700, and/or a regenerator body c800. As shown in FIG. 4.1.7, the heat-capture pathway c133 may fluidly communicate with an intake pathway c118, and may utilize intake air from the intake air pathway c118. Additionally, or in the alternative, the heat-capture pathway c133 may fluidly communicate with a cooling jacket c128 and may utilize a fluid such as intake air from the cooling jacket c128.

As shown in FIG. 4.1.9, a heat-capture pathway c133 may circumferentially surround at least a portion of a piston chamber c112. A first heat-capture pathway-portion c133A of the heat-capture pathway c133 may flow circumferentially around a first semiannular piston chamber-portion c112A of the piston chamber c112. A second heat-capture pathway-portion c133B may flow circumferentially around a second semiannular piston chamber-portion c112B. The first heat-capture pathway-portion c133A and the second heat-capture pathway-portion c133B may reunite and/or fluidly communicate at an inward perimeter piston chamber-portion c112C of the piston chamber c112. As shown, the first heat-capture pathway-portion c133A and the second heat-capture pathway-portion c133B first heat-capture pathway-portion c133A and the second heat-capture pathway-portion c133B reunite, without fluidly communicating, at the inward perimeter piston chamber-portion c112C. **In** some embodiments, the heat-capture pathway c133 (e.g., the first heat-capture pathway-portion c133A and/or the second heat-capture pathway-portion c133A) may have a heat transfer relationship with a thermal expansion joint c135. For example, as shown, the heat-capture pathway c133 may include a hairpin c133D that follows a perimeter of the thermal expansion joint c135.

**In** some embodiments, a fluid flowing through the heat-capture pathway c133 may fluidly communicate with the primary flowpath c121, and fluid flowing through the heat-capture pathway c133 may be discharged from the heat-capture pathway c133 to the primary flowpath c121. As shown, the heat-capture pathway c133 may fluidly communicate with the recirculation pathway c104, such as at the combustion chamber c104. **In** some embodiments, fluid in the heat-capture pathway c133 may discharge into the combustion chamber c104 through a distal portion of the combustion chamber c102. The distal portion of the combustion chamber c104 may include a plurality of openings providing fluid communication with the heat-capture pathway c133. The plurality of openings may include a plurality of pore-like openings c137A (FIG. 4.5.5D ) circumferentially surrounding the vortex conditioner c137 and/or disposed about the vortex conditioner c137. The heat-capture pathway c133 may transect at least some of the distal portion of the combustion chamber C102A, thereby providing cooling to the combustion chamber c102. **In** some embodiments, the heat-capture pathway c133 may include a plurality of spiral-heat-capture pathways c133E disposed about the distal portion of the combustion chamber C102A (FIG. 4.5.5D). **In** some embodiments, heat-capture fluid in the heat-capture pathway c133 may have a heat transfer relationship with a portion a heater body c100 that would be capable of exceeding a threshold temperature during operations, such as a threshold temperature determined in relation to a melting temperature, whereas the heat-capture fluid operates to maintain such portion of the heater body c100 below such threshold temperature during operations.

Now referring to FIG. 4.1.10, in some embodiments, an interface between a heater body c100 and an engine body c050 may include an engine-to-heater coupling c137. **In** some embodiments, the engine-to-heater coupling c139 may include a fitting c141, such as a tri-clamp fitting or any other suitable fitting, configured to couple a heater body-flange c143 and an engine body-flange c145 to one another. A gasket c147 may be disposed between the heater body-flange c143 and the engine body-flange c145. A heat-capture pathway c133 may capture heat from a region of the heater body c100 that includes the heater body-flange c143, and/or provide cooling to a region of the heater body c100 that includes the heater body-flange c143. Heat captured from such region of the heater body c100 may be returned to another portion of the heater body, thereby preventing the heat from being lost to the engine body c050, which may include a cold-side of a closed-cycle engine. While the embodiment shown in FIG. 4.1.10 depicts a fitting c141, other types of fittings are also contemplated. A fitting c141 may allow for thermal expansion as a result of heat from the heater body c100, as well as differences in temperature as between the heater body c100 and the engine body c050.

In some embodiments, an engine-to-heater coupling c137 may include a gasket c147 formed at least in part from a polymeric material, such as silicone, fluorosilicone, fluorocarbon, nitrile rubber, polytetrafluoroethylene (PTFE), ethylene propylene diene monomer rubber (EPDM), polyamides, aramid fiber-polymeric laminates, carbon fiber-polymeric laminates, graphite-polymeric laminates, or the like. Such gaskets formed of a polymeric material may advantageously have a relatively low thermal conductivity, which may reduce heat loss from the heater body c100 to the engine body c050. Additionally, or in the alternative, an engine-to-heater coupling c137 may utilize a gasket c147 that includes of a non-polymeric material, such as a ceramic or metallic material. For example, a gasket c147 may include metal alloys, ceramics, vermiculite, woven or compressed graphite, ceramic fiber, fiberglass, or the like.

In some embodiments, cooling provided by a heat-capture pathway c133 may allow for temperatures existing at the interface between the heater body c100 and the engine body c050 to remain within a range suitable for using a gasket c147 formed at least in part of a polymeric material. In some embodiments, at least a portion of the heater body c100 may exceed a maximum operating temperature of a gasket c147 while a region of the heater body c100 that includes the heater body-flange c143 may be within the maximum operating temperature of the gasket c147. The region of the heater body c100 that includes the heater body-flange c143 may be maintained below the maximum operating temperature of the gasket c147 at least in part by cooling provided by the heat-capture pathway c133. In some embodiments, such polymeric materials would be unsuitable for use at the engine-to-heater coupling c137, if not for the cooling provided by the heat-capture pathway c133, at least in part due to the temperature of the heater body c100 otherwise exceeding the maximum operating temperature of the gasket c147. Such maximum operating temperature may be specified by a manufacturer of the gasket and/or by an industry standards organization such as ASTM. Such polymeric materials may also provide for a degree of flexibility and vibration absorption at the interface between the heater body c100 and the engine body c050.

By way of example, in some embodiments at least a portion of a heater body c100 may exhibit an operating temperature in excess of about 400C, such as at least about 500C, such as at least about 600C, such as at least about 700C, or such as at least about 800C. Meanwhile, while at least a portion of the heater body exhibits an aforementioned operating temperature, in some embodiments, a region of the heater body c100 that includes the heater body-flange c143 may exhibit an operating temperature of at least less than 600C, such as at least less than 500C, such as at least less than 400C, such as at least less than 300C, or such as at least less than 200C.

In some embodiments a region of the heater body c100 that includes the heater body-flange c143 may exhibit an operating temperature of at least about 50C cooler than another region of the heater body c100, such as the working-fluid body c108. For example, the region of the heater body c100 that includes the heater body-flange c143 may be at least about 50C cooler than a portion of the heater body c100 that includes the working-fluid body c108, such as at least about 75C cooler, such as at least about 100C cooler, such as at least about 200C cooler, such as at least about 300C cooler, or such as at least about 400C cooler, than such region of the heater body c100 that includes the working-fluid body c108. Such temperature difference in operating temperature may be attributable at least in part to cooling provided by a cooling fluid in a heat-capture pathway c133.

Chapter 4.2 - Combustion Chamber

Now referring to FIGs. 4.2.1A and 4.2.1B, and 4.2.2A and 4.2.2B, exemplary combustor bodies c400 will be described. The presently disclosed combustor bodies c400 may define part of a heater body c100 and/or a closed-cycle engine c002. For example, a combustor body c400 may define at least a portion of a monolithic body or a monolithic body-segment. Such monolithic body or monolithic body-segment may define at least a portion of the heater body c100 and/or the closed-cycle engine c002. Additionally, or in the alternative, the presently disclosed combustor bodies c400 may be provided as a separate component, whether for use in connection with a heater body c100, a closed-cycle engine c002, or any other setting whether related or unrelated to a heater body c100 or a closed-cycle engine c002. At least a portion of the combustor body c400 may define a combustion chamber c102 and/or a conditioning conduit c122. While the heater bodies c100 depicted in the figures may show one combustor body c400 and/or one combustion chamber c102 and/or one conditioning conduit c122, it will be appreciated that a heater body c100 may include a plurality of combustor bodies c400 and/or a plurality of combustion chambers c102 and/or a plurality of conditioning conduits c122. For example, a heater body c100 may include one or more combustor bodies c400, and/or a combustor body c400 may include one or more combustion chambers c102 and/or one or more conditioning conduits c122. Exemplary heater bodies c100 and/or combustor bodies c400 may be configured for single-stage combustion and/or multi-stage combustion. A heater body c100 and/or a combustor body c400 configured for multi-stage combustion may include two, three, four, or more combustion zones.

As shown, an exemplary combustor body c400 may include a combustion chamber c102 and a conditioning conduit c122 circumferentially surrounding at least a portion of the combustion chamber c102. The combustion chamber c102 may be disposed annularly about an axis c204, or the combustion chamber may be off-center from the axis c204. In some embodiments, a plurality of combustion chambers c102 may be circumferentially spaced about the axis c204. The combustion chamber c102 may include an annular combustion chamber wall c406. An inward portion of the annular combustion chamber wall c406 may define at least a portion of the combustion chamber c102. The conditioning conduit c122 may include an outward annular conditioning conduit wall c408 circumferentially surrounding the combustion chamber c122, and an inward annular conditioning conduit wall c410 circumferentially surrounding the outward annular conditioning conduit wall c408. An outward portion of the annular combustion chamber wall c406 may define at least a portion of the inward annular conditioning conduit wall c410. The inward portion of the annular combustion chamber wall c406 and the outward portion of the annular combustion chamber wall c406 may adjoin one another at a distal end c202 of the combustion chamber c102.

The combustion chamber c102 may include a combustion chamber outlet c412 disposed about a proximal portion c202 of the combustion chamber c102. For example, the combustion chamber outlet c412 may be disposed about a proximal portion of an annular combustion chamber wall c406. A combustion chamber c102 may include a single combustion chamber outlet c412 or a plurality of combustion chamber outlets c412, and the combustion chamber outlet or outlets c412 may be oblique to the combustion chamber c102. For example, a plurality of combustion chamber outlets c412 may be circumferentially spaced about a proximal portion c202 of the combustion chamber c102, such as about a proximal portion c202 of the annular combustion chamber wall c406.

The conditioning conduit c122 may fluidly communicate with the combustion chamber c102 at a distal portion of the combustion chamber c102. The conditioning conduit c122 may include a conditioning conduit inlet c414 disposed about a proximal portion c202 of the conditioning conduit c122. For example, the conditioning conduit inlet c414 may be disposed about a proximal portion of the outward annular conditioning conduit wall c408. A conditioning conduit c122 may include a single conditioning conduit inlet c414 or a plurality of conditioning conduit inlets c414, and the conditioning conduit inlet or inlets c414 may be oblique to the conditioning conduit c120. For example, a plurality of conditioning conduit inlets c414 may be circumferentially spaced about a proximal portion c202 of the conditioning conduit c122, such as about a proximal portion c202 of the outward annular conditioning conduit wall c408.

The inward annular conditioning conduit wall c410 may be defined at least in part by the annular combustion chamber wall c406. In some embodiments, a portion of the inward annular conditioning conduit wall c410 may be separated from the annular combustion chamber wall c406, such that the inward annular conditioning conduit wall c410 and the annular combustion chamber wall c406 define an insulating space therebetween (not shown). For example, a medial portion of the inward annular conditioning conduit wall c410 may be separated from the annular combustion chamber wall c406 so as to define such an insulating space.

As shown in FIGs. 4.2.1A and 4.2.1B, the conditioning conduit c122 may define at least a portion of the recirculation pathway c104. The portion of the recirculation pathway c104 defined by the conditioning conduit c122 may sometimes be referred to as a conditioning conduit pathway c416. The conditioning conduit pathway c416 may be defined at least in part by the inward annular conditioning conduit wall c410 and the outward annular conditioning conduit wall c408.

In exemplary embodiments, the one or more conditioning conduit inlets c414 may be disposed about a proximal portion c200 of the conditioning conduit c122 and oriented oblique to the conditioning conduit c122. For example, the one or more conditioning conduit inlets c414 may be oblique to the outward annular conditioning conduit wall c408 and/or the inward annular conditioning conduit wall c410. The one or more conditioning conduit inlets c414 may respectively include a motive pathway c418 and an eduction pathway c420 fluidly communicating with the conditioning conduit c122. As shown in FIGs. 4.2.1A and 4.2.1B, a plurality of conditioning conduit inlets c412 may include a plurality of motive pathways c418 and a plurality of eduction pathways c420 circumferentially spaced about the conditioning conduit c122.

The motive pathway c418 (or plurality of motive pathways c418) and the eduction pathway c420 (or plurality of eduction pathway c420) may be defined at least in part by an eductor body c300. The motive pathway c418 or plurality of motive pathways define a portion of an intake air pathway and the eduction pathway or plurality of eduction pathways define a portion of a recirculation pathway. The eduction pathway c420 and the motive pathway c418 may be adjacent to one another, such that intake air flowing through the motive pathway c418 may accelerate and entrain combustion gas from the eduction pathway c420 so as to move circulating combustion gas into the conditioning conduit c122. The motive pathway c418 and the eduction pathway c420 are preferably oriented oblique to the conditioning conduit c122 (e.g., oblique to the outward annular conditioning conduit wall c408 and/or the inward annular conditioning conduit wall c410), such that intake air and combustion gas flowing into the conditioning conduit may readily establish a helical flow pattern through the conditioning conduit c122.

In exemplary embodiments, the one or more combustion chamber outlets c412 may be disposed about a proximal portion c200 of the combustion chamber c102 and oriented oblique to the combustion chamber c102. For example, the one or more combustion chamber outlets c412 may be oblique to the annular combustion chamber wall c406. The one or more combustion chamber outlets c412 may fluidly communicate with a corresponding plurality of combustion-gas pathways c422 circumferentially spaced about the combustion chamber c102. The plurality of combustion-gas pathways c422 may fluidly communicate with a respective portion of the combustion chamber c102. Respective combustion-gas pathways c422 may extend in a radial, circumferential, and/or tangential direction relative to the combustion chamber c102. For example, the respective combustion-gas pathways c422 may concentrically spiral radially or circumferentially outward from the combustion chamber. The respective combustion-gas pathways c422 may extend annularly or semi-annularly along a spiral or spiral arc relative to the combustion chamber and/or the longitudinal axis c204 thereof. As shown in FIGs. 4.2.1A and 4.2.1B, the plurality of combustion-gas pathways c422 define at least a portion of a hot-side heat exchanger body c600. The oblique orientation of the one or more conditioning conduit inlets c414 and/or of the one or more combustion chamber outlets c412 may cause combustion gas to swirl through the conditioning conduit c122, for example, from a proximal portion of the conditioning conduit c122 to a distal portion of the conditioning conduit c122 and through the combustion chamber c102 from a distal portion of the combustion chamber c102 to a proximal portion of the combustion chamber 102.

The swirling combustion gas may provide a bidirectional coaxial vortex flow field. When the combustor body c400 includes a conditioning conduit c122, the conditioning conduit c122 provides separation between an outward portion of the bidirectional coaxial vortex flow field and an inward portion of the bidirectional coaxial vortex flow field, the conditioning conduit defining a pathway for the outward portion of the bidirectional coaxial vortex flow field and the combustion chamber defining a pathway for the inward portion of the bidirectional coaxial vortex flow field. Such separation of the bidirectional coaxial vortex flow field provided by the conditioning conduit c122 may enhance combustion dynamics, for example, by reducing shear between the outward and inward portions of the bidirectional coaxial vortex flow field.

In some embodiments, the annular combustion chamber wall c406 may have a Coanda surface c424 disposed at a distal end thereof defining a transition between an inner annular portion and an outer annular portion of the annular combustion chamber wall c406. The Coanda surface c424 may be operable at least in part to draw combustion gas from the conditioning conduit c122 into the combustion chamber c102. A "Coanda surface" refers to a curved surface that creates a zone of reduced pressure in the immediate proximity of such curved surface. This pressure drop entrains and accelerates fluid along the contour of the surface, which is sometimes referred to as the "Coanda effect." The Coanda effect is the phenomena in which a flow attaches itself to a nearby surface and remains attached even though the surface curves away from the initial direction of flow. Characteristic of the Coanda effect, fluid tends to flow over the surface closely, seemingly "clinging to" or "hugging" the surface. As such, the Coanda effect can be used to change the direction of the combustion gas swirling through the conditioning conduit c122 and into the combustion chamber c122. In doing so, a combustion flame c426 may be surrounded by a flow of cooler, uncombusted or partially combusted combustion gas c428, thereby form a boundary layer separating the flame c426 from the annular combustion chamber wall c406.

In some embodiments, the combustor body c400 may include a combustor cap c210 disposed axially adjacent to a distal portion of the conditioning conduit c122. The combustor cap c210 may be operably coupled to the combustor body c400, for example, using bolts (not shown) insertable into bolt holes c430. Alternatively, the combustor cap c210 may define a portion of a monolithic body or a monolithic body-segment that includes at least a portion of the combustor body c400. As yet another alternative, the combustor cap c210 may be integrally formed with at least a portion of the combustor body c400. In an exemplary embodiment, the combustor cap c210 may be operably coupled to the conditioning conduit body c404, or the combustor cap c210 may define a portion of the conditioning conduit body c404 or may be integrally formed with the conditioning conduit body c404.

As shown in FIGs. 4.2.1A and 4.2.1B, the combustor cap c210 includes an inward combustor cap wall c432 defining a portion of the recirculation pathway c104. The portion of the recirculating pathway c104 including the inward combustor cap wall c432 may provide fluid communication between the conditioning conduit c122 and the combustion chamber c102 at a distal portion of the combustion chamber c102, and the combustor cap c210 may be operable at least in part to direct combustion gas from the conditioning conduit c122 to the combustion chamber c102. The combustor cap c210 may be disposed axially adjacent to a distal portion c202 of the conditioning conduit c122 and/or the combustion chamber c102.

The combustion chamber c102 and the conditioning conduit c122 may have any desired shape. In various embodiments, the combustion chamber c102 may have a shape including a cylinder and/or a frustum, and the conditioning conduit c122 may have a shape including a cylinder and/or a frustum. As shown in FIGs. 4.2.1A and 4.2.1B, the combustion chamber c102 and the conditioning conduit c122 respectively have a cylindrical shape. **In** other embodiments, a portion of the combustion chamber c102 having a cylinder shape may be circumferentially surrounded by a portion of the conditioning conduit c122 having a cylinder shape and/or a portion of the conditioning conduit c122 having a frustum shape. Additionally, or in the alternative, a portion of the combustion chamber c102 having a frustum shape may be circumferentially surrounded by a portion of the conditioning conduit c122 having a cylinder shape and/or a portion of the conditioning conduit c122 having a frustum shape. Such a frustum shape of the combustion chamber c102 and/or of the conditioning conduit c122 may converge proximally and/or diverge proximally.

By way of example, a first portion of a combustion chamber c102 may have a first shape that includes a cylinder, and the first portion of the combustion chamber c102 may be circumferentially surrounded by a second portion of the conditioning conduit c122 having a second shape that includes a cylinder and/or a frustum. Additionally, or in the alternative, a third portion of the combustion chamber c102 may have a third shape that includes a cylinder and/or a frustum, and the third portion of the combustion chamber c102 may be circumferentially surrounded by a fourth portion of the conditioning conduit c122 having a fourth shape that includes a cylinder. Further in addition or in the alternative, a fifth portion of the combustion chamber c102 may have a fifth shape that includes a frustum diverging proximally, and the fifth portion of the combustion chamber c102 may be circumferentially surrounded by a sixth portion of the conditioning conduit c122 having a sixth shape that includes a frustum converging proximally and/or a frustum diverging proximally. Still further in addition or in the alternative, a seventh portion of the combustion chamber c102 may have a seventh shape that includes a frustum diverging proximally, and the seventh portion of the combustion chamber c102 may be circumferentially surrounded by an eighth portion of the conditioning conduit having an eighth shape that includes a frustum converging proximally and/or a frustum diverging proximally.

Referring now to FIG. 4.2.1B, in some embodiments, a combustor body c400 may include one or more aerodynamic features c434. The one or more aerodynamic features c434 may be disposed about at least a portion of the combustion chamber c102 and/or at least a portion of the conditioning conduit c122, such as the annular combustion chamber wall c406 (e.g. an inward surface and/or an outward surface thereof), the outward annular conditioning conduit wall c408, and/or the inward annular conditioning conduit wall c410. The one or more aerodynamic features c434 may be configured to condition the flow of combustion gas c428 flowing through the conditioning conduit c122, such as by swirling the flow of combustion gas c428. Additionally, or in the alternative, the one or more aerodynamic features c434 may be configured to condition the flow of combustion gas c428 or the flame c426 flowing through the combustion chamber c102, such as by swirling the flow of combustion gas c428 and/or flame c426. For example, the one or more aerodynamic features c434 may include a fin, a ridge, a groove, a contour, and/or the like disposed about the combustion chamber c102 and/or the conditioning conduit c122.

The one or more aerodynamic features c434 may followed a helical orientation along the combustion chamber c102 and/or the conditioning conduit c122. The helical orientation of the one or more aerodynamic features c434 may help condition the flow of combustion gas c428 and/or the flame c426 in a helical path. For example, the combustion gas c428 and/or the flame c426 may follow a helical path that depends at least in part on the slope of the helical orientation of the one or more aerodynamic features c434. Additionally, or in the alternative, such helical path of the combustion gas c428 and/or the flame c426 may depend on the size, number, and/or spacing of the one or more aerodynamic features c434. In an exemplary embodiment, the one or more one or more aerodynamic features c434 may provide a bidirectional coaxial vortex flow field, which may enhance heat transfer of the flame c426 to the hot-side heater body c106 and/or may protect the combustion chamber wall c406 from receiving excessive heat from the flame c426.

As shown in FIG. 4.2.1B, the one or more aerodynamic features c434 may include a first helical conditioning ridge c436 be disposed about the annular combustion chamber wall c406 (e.g. an outward surface thereof). Additionally, or in the alternative, the one or more aerodynamic features c434 may include a second helical conditioning ridge c438 disposed about the inward annular conditioning conduit wall c410 and/or a third helical conditioning ridge c440 disposed about the outward annular conditioning conduit wall c408.

Still referring to FIGs. 4.2.1A and 4.2.1B, the combustor body c400 and/or the combustion chamber c102 may have an axial length selected based at least in part on a desired flame length and/or a corresponding combustion time. In some embodiments, the combustion time may be from 1 to 10 milliseconds, such as from 2 to 4 milliseconds. The combustion time may be at least 1 millisecond, at least 2 milliseconds, or at least 5 milliseconds. The combustion time may be less than 10 milliseconds, less than 7 milliseconds, or less than 3 milliseconds.

The flame c426 may have an axial length extending all or a portion of the combustion chamber c102. In some embodiments, the flame c426 may extend though one or more combustion chamber outlets c412 and into the hot-side heat exchanger c106. The hot-side heat exchanger c106 may include working-fluid pathways c110; however, in some embodiments, the working-fluid pathways c110 may be omitted from a radially or concentrically inward portion of the hot-side heat exchanger c106 so as to facilitate the flame c426 flowing into the hot-side heat exchanger c106. Such a radially-inward portion of the hot-side heat exchanger c106 may define a combustion zone where combustion may occur in the hot-side heat exchanger c106. The combustion that occurs in the hot-side heat exchanger may represent an extension of combustion that occurs in the combustion chamber c102, such as in the case of a flame that extends from the combustion chamber into the hot-side heat exchanger c106. The radially-inward portion of the hot-side heat exchanger c106 may additionally/or alternatively support stable combustion separate and distinct from the combustion that occurs in the combustion chamber c10. For example, a first flame c426 in the combustion chamber may quench upstream from the hot-side heat exchanger c106, and a second flame c426 may be established and stabilize in the radially-inward portion of the hot-side heat exchanger c106.

The radially-inward portion of the hot-side heat exchanger c106 may sometimes be referred to as a second combustion chamber c448, in which case, the combustion chamber c102 may be referred to as a first combustion chamber c102. In some embodiments, the flame c426 may extend into the combustion chamber c448. Additionally, or alternatively, a second flame c426 may exist in the second combustion chamber c448, defining a combustion zone that is separate from a combustion zone in the second combustion chamber c448 may include a plurality of combustion fins c450 circumferentially spaced about the combustion chamber c102. The combustion fins c450 may occupy a region of the hot-side heat exchanger c106 configured for stable combustion to occur. Combustion may occur in the region of the hot-side heat exchanger c106 where the combustion fins c450 are located at least in part by the combustion fins c450 being heated to a sufficiently high temperature during operation to prevent flame quenching and/or promote an extended flame length.

The plurality of combustion fins c450 may spiral concentrically relative to the combustion chamber c102 and/or the longitudinal axis c204 thereof. The plurality of combustion fins c450 may be configured and arranged as spirals or spiral arcs, disposed annularly or semi-annularly, relative to the combustion chamber c102 and/or the longitudinal axis c204 thereof. The combustion fins c450 may be concentrically nested with one another. Concentrically nested combustion fins c450 may be configured as an array of substantially concentric spirals and/or an array of substantially concentric spiral arcs. By way of example, a spiral or spiral arc, such as in an array of substantially concentric spirals or spiral arcs, may correspond to at least a portion of an Archimedean spiral, a Cornu spiral, a Fermat's spiral, a hyperbolic spiral, a logarithmic spiral, a Fibonacchi spiral, an involute, or a squircular spiral, as well as combinations of these.

Upstream portions of the respective combustion-gas pathways c422 may fluidly communicate with the combustion chamber c102 at respective circumferential locations about the perimeter of the combustion chamber c102. Downstream portion of the respective combustion-gas pathways c422 may fluidly communicating with corresponding heating fluid pathways c602 of the hot-side heat exchanger c106 (e.g. FIGs. 4.4.2A, 4.4.2B, 4.4.3A, and 4.4.3B). Such combustion fins c450 may concurrently define at least a portion of the second combustion chamber c448 and at least a portion of the hot-side heat exchanger c106. The combustion fins c450 may become red-hot, encouraging a sustained combustion flame within the second combustion chamber c448. The second combustion chamber c448 may allow combustion to take place at an air-to-fuel ratio closer to the stoichiometric air-to-fuel ratio.

The combustor body c400 may include one or more features of the combustion chamber c102 and/or one or more features of the conditioning conduit c122 configured to burn fuel in a lean combustion environment. For example, the conditioning conduit c122 may include one or more conditioning conduit inlets c414 dimensionally configured to provide sufficient combustion gas flow for a lean combustion environment. Additionally, or in the alternative, the one or more features of the combustion chamber c102 may include one or more combustion chamber outlets dimensionally configured to provide sufficient combustion gas flow for a lean combustion environment. The combustor body c400 may include one or more fuel nozzles, and the one or more fuel nozzles may be configured to provide a fuel flow sufficient for a lean combustion environment.

With respect to the one or more conditioning conduit inlets c414, the lean combustion environment may be provided by one or more motive pathways c418 and/or one or more eduction pathways c420. The one or more motive pathways c418 may be dimensionally configured to supply the conditioning conduit c122 and/or the combustion chamber c102 with sufficient intake air to from the intake air pathway c118 to provide a lean combustion environment. Additionally, or in the alternative, the one or more motive pathways c418 may be dimensionally configured to accelerate and entrain sufficient combustion gas from the recirculation pathway c104 to provide a lean combustion environment. The one or more eduction pathways c420 may be dimensionally configured to recirculate sufficient combustion gas from the recirculation pathway c104 to provide a lean combustion environment.

A lean combustion environment may be characterized by an equivalence ratio, which is the ratio of the actual fuel-to-air ratio to the stoichiometric fuel-to-air ratio. An exemplary lean combustion environment may include an equivalence ratio of 0.6 to 1.0, such as an equivalence ratio of 0.7 to 0.8. The equivalence ratio may be at least 0.6, such as at least 0.8. The equivalence ratio may be less than 1.0, such as less than 0.7. An exemplary lean combustion environment may include an air-to-fuel ratio of from 40:1 to 90:1 by mass, or from 55:1 to 75:1 by mass. The air-to-fuel ratio may be at least 40:1 by mass, such as at least 55:1 by mass. The air-to-fuel ratio may be less than 90:1 by mass, such as less than 75:1 by mass.

The combustor body c400 may include one or more features of the combustion chamber c102 and/or one or more features of the conditioning conduit c122 configured to circulate at least a portion of the combustion gas by volume and to introduce a balance of the combustion gas as intake air. For example, the conditioning conduit c122 may include one or more conditioning conduit inlets c414 dimensionally configured to circulate at least a portion of the combustion gas by volume and to introduce a balance of the combustion gas as intake air. Additionally, or in the alternative, the one or more features of the combustion chamber c102 may include one or more combustion chamber outlets dimensionally configured to circulate from at least a portion the combustion gas by volume and to introduce a balance of the combustion gas as intake air.

The volume of circulating combustion gas may be from about 10% to about 90% of the combustion gas, such as from about 30% to about 70% of the combustion gas, such as from about 40% to about 60% of the combustion, with the balance of the combustion gas as being intake air. The volume of intake air included in the combustion gas may be from about 10% to about 90% of the combustion gas, such as from about 30% to about 70% of the combustion gas, such as from about 40% to about 60% of the combustion, with the balance being circulated combustion gas. However, in some embodiments the combustor body c400 may utilize 100% intake air and/or 100% circulating combustion gas.

In some embodiments, a cooling jacket c442 disposed within the at least a portion of the combustor body c400. The cooling jacket may define a pathway for a cooling fluid to flow within the combustor body c400. The flow of fluid cooling fluid may provide cooling to the combustor body c400. The cooling jacket c442 may fluidly communicate with the intake air pathway c118, the recirculation pathway c104, and/or the working-fluid pathway c110. By way of example, as shown in FIG. 4.1.1A, a cooling jacket c442 may be disposed between at least a portion of the inward portion of the annular combustion chamber wall c406 and the outward portion of the annular combustion chamber wall c406, with the cooling jacket c442 fluidly communicating with at least one of the one or more motive pathways c418. Additionally, or in the alternative, the cooling jacket c442 shown in FIG. 4.1.1A may fluidly communicate with at least one of the one or more eduction pathways c420. When the cooling fluid for the cooling jacket includes intake air and/or combustion gas, the combustor body c400 may include one or more cooling-jacket outlets c444, allowing the cooling fluid to flow into the conditioning conduct c122 and/or the combustion chamber c102.

Referring again to FIG. 4.1.1B, in some embodiments, a combustor body c400 may include a plurality of conditioning pathways c446 traversing the annular combustion chamber wall c406. The conditioning pathways may be disposed about a proximal, medial, and/or axial portion of the combustion chamber c102, for example, traversing a proximal, medial, and/or axial portion of the annular combustion chamber wall c406 and providing fluid communication between the combustion chamber c102 and the conditioning conduit c122.

Now referring to FIGs. 4.2.2A and 4.2.2B, an exemplary heater body c100 and/or combustor body c400 configured for multi-stage combustion will be described. A combustor body c400 configured for multi-stage combustion may sometimes be referred to as a multi-stage combustor c403. As used herein, the term "multi-stage combustion" refers to a combustion regime that includes at least two combustion zones oriented in serial flow relationship. As used herein, the term "combustion zone" refers to a portion of a combustion gas and/or fuel flowpath configured to support a stable flame c426 under one or more operating conditions. In some embodiments, a combustion zone may include a fuel injection point. For example, a multi-stage combustor may include a plurality of fuel injection points in serial flow relationship that are respectively configured to support a stable flame c426. Additionally, or in the alternative, a multi-stage combustor may include a combustion zone that is configured to support a stable flame c426 by combusting a fuel and/or combustion gas c428 introduced into the flowpath at an upstream combustion zone. For example, a fuel-rich environment may allow for a reburn combustion regime in which fuel injected at a first combustion zone is partially combusted at the first combustion zone and then further combusted at a second combustion zone.

An exemplary multi-stage combustor c403 may include a primary combustion zone and a secondary combustion zone. In some embodiments, a multi-stage combustor may include a tertiary combustion zone. The primary combustion zone may be situated upstream and/or downstream from a secondary combustion zone. A tertiary combustion zone may be located upstream or downstream from a primary combustion zone, and/or upstream or downstream from a secondary combustion zone. As used herein, the term "primary combustion zone" refers to a combustion zone that generates a larger proportion of heat during steady-state operation relative to one or more other combustion zones, such as relative to a secondary combustion zone and/or relative to a secondary and tertiary combustion zone. As used herein, the term "secondary combustion zone" refers to a combustion zone that generates a lesser proportion of heat during steady-state operation relative to another combustion zone, such as relative to a primary combustion zone. The term "tertiary combustion zone" refers to a combustion zone that generates a lesser proportion of heat during steady-state operation relative to a plurality of other combustion zones, such as relative to a primary combustion zone and a secondary combustion zone.

In an exemplary embodiment, a heater body c100 that includes a multi-stage combustor c403 may include a first combustion zone c405 and a second combustion zone c407. The first combustion zone c405 may occupy a distal or medial position relative to the longitudinal axis c204 of the combustion chamber c102. The second combustion zone c407 may occupy a proximal position relative to the longitudinal axis c204 of the combustion chamber c102. The first combustion zone c405 may occupy a radially or concentrically inward position relative to the longitudinal axis c204 of the combustion chamber c102. The second combustion zone c407 may occupy a radially or concentrically outward position relative to the longitudinal axis c204 of the combustion chamber c102 and/or relative to the radially or concentrically inward position of the first combustion zone c405. In some embodiments, the first combustion zone c405 may occupy at least a portion of a vortex flow field, such as a bidirectional vortex flow field. For example, the first combustion zone c405 may occupy at least part of an inward portion of a bidirectional coaxial vortex flow field. The second combustion zone c407 may occupy at least part of a proximal region of the combustion chamber c102. Additionally, or in the alternative, the second combustion zone c407 may occupy at least part of a radially-inward portion of the hot-side heat exchanger c106. For example, the hot-side heat exchanger c106 may define a second combustion chamber c448, and the second combustion zone c407 may occupy at least a portion of the second combustion chamber c448.

The first combustion zone c405 may be located upstream from a heat sink c409 a sufficient distance to allow combustion in the first combustion zone c405 to start, warm up, and stabilize. For example, the heat sink c409 may include at least a portion of the working-fluid bodies c108 and/or at least a portion of the hot-side heat exchanger c106. The working-fluid bodies c108 may have a heat transfer relationship with the hot-side heat exchanger c106. The heat sink c409 may include a plurality of working-fluid pathways c110 that have a heat transfer relationship with the hot-side heat exchanger c108 and/or the plurality of combustion-gas pathways c422. The plurality of heating walls c616 may define at least a portion of the hot-side heat exchanger c106. The hot-side heat exchanger c106 may include a plurality of working-fluid pathways monolithically formed within the plurality of heating walls c616.

Combustion in the second combustion zone c407 may be initiated concurrently with and/or subsequently to initiation of combustion the first combustion zone c405. **In** some embodiments, combustion in the second combustion zone c407 may be initiated after combustion in the first combustion zone c405 has started, and/or after combustion in the first combustion zone c405 at least partially heated at least a portion of the combustor body c400 proximate to the second combustion zone c407. Additionally, or in the alternative, combustion in the second combustion zone c407 may be initiated after combustion in the first combustion zone c405 has stabilized.

Combustion in the first combustion zone c405 may be operated or sustained as a primary combustion zone. Additionally, or in the alternative, combustion in the first combustion zone c405 may be operated or sustained as a secondary combustion zone, or even as a tertiary combustion zone. In some embodiments, combustion in the first combustion zone c405 may be initially operated or sustained as a primary combustion zone, such as during a warm-up period. After an initial operating period, such as the warm-up period, combustion in the first combustion zone may transition to operation as a secondary combustion zone or a tertiary combustion zone. Combustion in the second combustion zone c407 may be operated or sustained as a primary combustion zone and/or a secondary combustion zone. For example, combustion in the second combustion zone c407 may be operated or sustained as a primary combustion zone after combustion in the first combustion zone c405 has sufficiently heated at least a portion of the combustor body c400 proximate to the second combustion zone c407. As combustion in the first combustion zone c405 transitions to operation as a secondary combustion zone, combustion in the second combustion zone c407 may transition to operation as a primary combustion zone. In some embodiments, combustion in the first combustion zone may be throttled back to a nominal proportion of combustion. For example, combustion in the first combustion zone c405 may operate at a nominal level sufficient to sustain steady combustion at the secondary combustion zone c407.

During operation, such as during steady state operation, combustion in the first combustion zone c405 may support combustion in the second combustion zone c407 by maintaining a supply of heat sufficient to sustain at least a portion of the combustor body c400 proximate to the second combustion zone c407 at a temperature that exceeds a threshold suitable for good combustion and flame characteristics at the second combustion zone c407. Such support from the first combustion zone c405 may advantageously allow the second combustion zone c407 to operate as a primary combustion zone, thereby introducing heat closer to a heat sink such as a working-fluid body c108 and/or a hot-side heat exchanger c106. In some embodiments, a hot-side heat exchanger c106 and/or a working-fluid body c108 may provide an improve heating efficiency with the second combustion zone c407 operating as the primary combustion zone.

As mentioned, in some embodiments, a combustor body c400 may include a plurality of combustion fins c450 circumferentially spaced about the perimeter of the combustion chamber c102 and/or the longitudinal axis c204. The plurality of combustion fins c450 may define a radially or concentrically inward portion of the plurality of combustion-gas pathways c422. The term "combustion-gas pathway" may refer to the portion of a heating fluid pathway c 602 defined by the combustion fins c450. The combustion-gas pathways c422 may be configured and arranged as spirals or spiral arcs, and may be oriented concentrically about the combustion chamber c102 and/or the longitudinal axis c204. The combustion-gas pathways c422 may fluidly communicating with a corresponding plurality of spiral pathways of the hot-side heat exchanger c106. The plurality of combustion fins c450 may respectively define a portion of a corresponding plurality of heating walls c616. Such combustion fins c450 may concurrently define at least a portion of the second combustion chamber c448 and at least a portion of the hot-side heat exchanger c106. The second combustion zone c407 may occupy at least part of the radially or concentrically inward portion of the plurality of combustion-gas pathways c422 defined by the plurality of combustion fins c450.

Regardless of whether the secondary combustion zone c407 includes combustion fins c450, at least a portion of the combustor body c400 proximate to the secondary combustion zone c407 may become red-hot, encouraging a sustained combustion flame within the secondary combustion zone c407. Combustion in the secondary combustion zone c407 may take place at an air-to-fuel ratio closer to the stoichiometric air-to-fuel ratio, with or without secondary combustion support from the first combustion zone c405.

A heater body c100 that includes a multi-stage combustor c403 may include a cool-zone fuel injector c411 and a hot-zone fuel injector c413. However, in some embodiments, a multi-stage combustor c403 may be configured to sustain combustion in a plurality of combustion zones with only a single fuel injector, such as a cool-zone fuel injector c411 or a hot-zone fuel injector c413. The cool-zone fuel injector c411 may occupy a distal position relative to the longitudinal axis c204 of the combustion chamber c102. The cool-zone fuel injector c411 may occupy a radially or concentrically inward position relative to the longitudinal axis c204 of the combustion chamber c102. In some embodiments, a hot-zone fuel injector c413 may occupy a proximal position relative to the longitudinal axis c204 of the combustion chamber c102. The hot-zone fuel injector c413 may occupy a radially or concentrically outward position relative to the longitudinal axis c204 of the combustion chamber c102 and/or relative to the radially or concentrically inward position of the cool-zone fuel injector c411. The cool-zone fuel injector c411 may coincide with the first combustion zone c405. Additionally, or in the alternative, the first fuel injector may be located upstream from the first combustion zone c405. For example, the cool-zone fuel injector c411 may be operably coupled to a combustor cap c210, such as at a nozzle port c212. The hot-zone fuel injector c413 may coincide with the second combustion zone c407. Additionally, or in the alternative, the hot-zone fuel injector c413 may be located upstream from the second combustion zone c407.

In some embodiments, a heater body c100 and/or a combustor body c400 may include one or more fuel injectors monolithically integrated with a distal portion of the combustor body c400 and/or a radially or concentrically inward portion of the combustor body c400. The one or more fuel injectors may be monolithically integrated with a radially or concentrically inward portion of the hot-side heat exchanger c106. For example, a plurality of a hot-zone fuel injectors c413 may be monolithically integrated with a distal portion of the combustor body c400 and/or a radially or concentrically inward portion of the plurality of combustion-gas pathways c616 of the hot-side heat exchanger c106. The one or more fuel injectors may be monolithically integrated with the plurality of heating walls c616 and/or the plurality of combustion fins c450. Such plurality of hot-zone fuel injectors c413 may operate as a collective unit and may be referred to collectively as a hot-zone fuel injector c413. Additionally, or in the alternative, such plurality of hot-zone fuel injectors c413 may operate independently from one another and may be referred to individually as a hot-zone fuel injector c413.

One or more hot-zone fuel pathways c415 may be monolithically integrated with at least part of a distal portion of the combustor body c400 and/or a radially or concentrically inward portion of the hot-side heat exchanger c106. The one or more hot-zone fuel pathways c415 may be configured to supply fuel for combustion at the second combustion zone c407. For example, as shown in FIGs. 4.2.2A and 4.2.2B, a plurality of hot-zone fuel pathways c415 may be defined within respective ones of a plurality of heating walls c616 of a hot-side heat exchanger c106. Additionally, or in the alternative, one or more hot-zone fuel pathways c415 may be defined within a distal portion of the combustor body c400.

As shown, a plurality of heating walls c616 may include a heat sink c409, such as a hot-side heat exchanger c106 and/or a working-fluid body c108. The plurality of heating walls c616 may occupy a radially concentrically outward position relative to the combustion chamber c102. The plurality of heating walls c616 may define a corresponding plurality of combustion-gas pathways c422, such as spiral pathway or a spiral arc pathway, fluidly communicating with the combustion chamber c402 at circumferentially spaced locations about the combustion chamber c402. The combustion-gas pathways c422 may fluidly communicate with a proximal portion c200 of the combustion chamber c102. The plurality of combustion-gas pathways c422 may follow an annular or semiannular spiral trajectory relative to the combustion chamber c102 and/or the longitudinal axis c204 thereof.

The hot-zone fuel pathways c415 may fluidly communicate with respective ones of a plurality of combustion-gas pathways c422 of the hot-side heat exchanger c106, such as at respective ones of a plurality of heating walls c616 and/or combustion fins c450. The plurality of heating walls c616 and/or combustion fins c450 may have a plurality of openings c451 (e.g., pore-like openings) that fluidly communicate with the plurality of combustion-gas pathways c422 of the hot-side heat exchanger c106 and define the hot-zone fuel injectors c413.

**In** some embodiments, at least a portion of the hot-zone fuel pathways c415 may define a vaporization heat exchanger c417 that provides a heat transfer relationship between a combustion flame c426 and fuel within the hot-zone fuel pathways c415, and or between hot combustion gas c426 fuel within the hot-zone fuel pathways c415. The vaporization heat exchanger c417 may be effective to vaporize fuel (e.g., liquid fuel), such as when the fuel is within the hot-zone fuel pathways c415 and/or the hot-zone fuel injectors c413, or as the fuel is discharged from the openings (e.g., the pore-like openings) of the hot-zone fuel injectors c413.

During operation, heat from the first combustion zone c405 may heat the hot-zone fuel injectors c413 and/or at least a portion of the second combustion zone c407 to a sufficiently high temperature to allow fuel flowing out of the hot-zone fuel injectors c413 to auto-ignite. For example, a distal portion of the combustion chamber c102, and/or a radially or concentrically inward portion of the hot-side heat exchanger c106 (e.g., the combustion fins c450 and/or a radially or concentrically inward portion of the heating walls c616) may operate at a sufficiently high temperature to allow fuel flowing out of the hot-zone fuel injectors c413 to auto-ignite. The flame c426 and/or hot combustion gas c428 may have a temperature of from about 300C to about 900C, such as from about 350C to about 800C, such as from about 425C to about 750C, such as from about 500C to 600C. Once the fuel flowing out of the hot-zone fuel injectors c413 auto-ignites, the flame provided by cool-zone fuel injector c411 may be reduced to a minimal length sufficient to support combustion at the second combustion zone c407. In this way, the flame from the cool-zone fuel injector c411 may operate as a pilot burner configured to provide a pilot flame, or ignition source, for combustion in the second combustion zone c407. The pilot flame, or ignition source, provided by the cool-zone fuel injector c411 may support auto-ignition and good combustion of combustion gas c428 and/or fuel c426 flowing from the first combustion zone c405 to the second combustion zone c407, for example, providing a reburn combustion regime. Additionally, or in the alternative, such pilot flame, or ignition source may support auto-ignition and good combustion of fuel supplied by the hot-zone fuel injectors c413.

In some embodiments, the first combustion zone c405 may exhibit a rich combustion environment attributable at least in part to the fuel-to-air ratio resulting from fuel from the cool-zone fuel injector c411. The second combustion zone c407 may exhibit a lean combustion environment attributable at least in part to the fuel-to-air ratio resulting from the rich combustion environment of the first combustion zone c405 and/or fuel from the hot-zone fuel injectors c413. In some embodiments, the first combustion zone c405 may exhibit a lean combustion environment prior to auto-ignition at the second combustion zone c407. Upon auto-ignition at the second combustion zone c407, the first combustion zone c405 may transition to a rich combustion environment. The second combustion zone c407 may thereafter exhibit a lean combustion environment while the first combustion zone c405 may exhibit a rich combustion environment.

As mentioned, a lean combustion environment may be characterized by an equivalence ratio, which is the ratio of the actual fuel-to-air ratio to the stoichiometric fuel-to-air ratio. A rich combustion environment may similarly be characterized by an equivalence ratio. An exemplary lean combustion environment may include an equivalence ratio of from about 0.5 to about 1.0, such as from about 0.6 to about 0.9, or from about 0.7 to about 0.8 An exemplary rich combustion environment may include an equivalence ratio of from less than about 0.1 to about 0.5, such as from less than about 0.1 to about 0.2. By way of example, the first combustion zone c405 may exhibit an aforementioned "lean" equivalence ratio prior to auto-ignition at the second combustion zone c407, such as from about 0.5 to about 1.0, or any other suitable lean equivalence ratio. Upon auto-ignition at the second combustion zone c407, the first combustion zone c405 may transition to a "rich" equivalence ratio, such as from less than about 0.1 to about 0.5, or any other suitable rich equivalence ratio. The second combustion zone, meanwhile, may exhibit a "lean" equivalence ratio, such as from about 0.5 to 1.0, or any other suitable lean equivalence ratio. In exemplary embodiments, fuel may be supplied to the cool-zone fuel injector without pre-mix air, for example, to provide a rich combustion environment.

As shown in FIG. 4.2.2B, in some embodiments, the second combustion zone c407 may occupy one or more regions of the plurality of combustion-gas pathways c422 of the hot-side heat exchanger c106. For example, respective combustion-gas pathways c422 may include a respective second combustion zone-segment c407A.

In some embodiments, the combustion-gas pathways c422 may include a burner zone c419 configured to support combustion and/or flame stabilization within the second combustion zone c407 and/or within the respective combustion zone-segments c407A. The burner zone c419 may be defined by a plurality of burner gap, GB, c421 defined in the respective heating walls c616 and oriented along the flowpath of the respective combustion-gas pathways c422. The burner gaps c421 may be located downstream from the hot-zone fuel injectors c413, such as between respective combustion fins c450 and corresponding downstream portions of the heating walls c616. A burner gap c421 may define a gap between a combustion fin c450 and a corresponding heating wall c616. The burner gaps c421 may include an open space, a mesh, a three-dimensional lattice, a porous medium, or the like. The burner zone c419 may coincide with at least a portion of the second combustion zone c407. Additionally, or in the alternative, the second combustion zone c407 may at least partially coincide with the plurality of burner gaps c421.

In some embodiments, a combustion chamber c104 may include a vortex conditioner c137, as shown, for example, in FIGs. 4.1.7, 4.2.2A, 4.5.5A, 4.5.5C, and 4.5.5D. The vortex conditioner c137 may be monolithically integrated with a proximal portion of the combustion chamber c102. The vortex conditioner c137 may be configured at least in part to establish and/or sustain a vortex flow field that includes the combustion gas c428 and/or the flame c426. For example, the vortex conditioner c137 may be configured at least in part to establish and/or sustain a bidirectional coaxial vortex flow field, which may enhance heat transfer of the flame c426 to the hot-side heater body c106 and/or may protect the combustion chamber wall c406 from receiving excessive heat from the flame c426. The second combustion zone c407 may occupy a radially or concentrically outward position relative to the vortex conditioner c137. As shown, the vortex conditioner c137 may have a conical or frustoconical shape projecting into the combustion chamber c102, such as along the longitudinal axis c204; however, other shapes are also envisioned. In some embodiments, a conical or frustoconical shape of the vortex conditioner c137, and/or the location and/or dimensions thereof, may at least partially contribute to the vortex flow field (e.g., the bidirectional coaxial vortex flow field) of the combustion gas c428 and/or the flame c426. A vortex conditioner c137 may be included with a heater body c100 and/or a combustor body c400 configured for single-stage and/or multi-stage combustion.

Now referring to FIGs. 4.2.3A-4.2.3C, further exemplary combustor bodies c400 will be described. As shown in FIG. 4.2.3A, an exemplary combustor body c400 may include a venturi c423 in the conditioning conduit pathway c416, such as at a distal portion c202 of the conditioning conduit c122. The combustor body c400 may have a frustoconical configuration. For example, the conditioning conduit c122 may have a frustoconical configuration. Additionally, or in the alternative, the combustion chamber c102 may have a frustoconical configuration. The venturi c423 may be effective to improve mixing and/or reduce pressure drop in fluid flow through the conditioning conduit pathway c416 as the flow transitions form the conditioning conduit pathway c416 to the combustion chamber c102. The venturi c423 may additionally or alternatively induce turbulence, providing a mixing zone for fuel entering the combustion chamber c102 from a fuel nozzle c126, such as a cool-zone fuel injector c111. The venturi c423 may additionally or alternatively accelerate flow into the combustion chamber, such as into the first combustion zone c405. Such improved mixing, reduced pressure drop, and/or flow acceleration may increase combustion efficiency and/or heating efficiency of the heater body c100.

As shown in FIG. 4.2.3B, the venturi provides an increase in velocity as the flow of combustion gas and/or intake air along the conditioning conduit pathway c416 transitions form zone "A" to zone "B" at the transition from the conditioning conduit c122 to the combustion chamber c102. The velocity of the flow decreases as the flow advances towards zone "C" within the combustion chamber c102. The venturi c423 may work in cooperation with a Coanda surface c424 to condition flow into the combustion chamber c102. A smoothly converging and diverging flowpath may be effective to reduce pressure drop across the venturi c423.

As shown in FIG. 4.2.3C, in some embodiments, the flow of combustion gas and/or intake air in the conditioning conduit pathway c416 may exhibit a tangential velocity gradient that increases from a radially or concentrically inward portion to a radially or concentrically outward portion of the conditioning conduit pathway c416. The tangential velocity gradient may increase as the radius of the conditioning conduit pathway c416 decreases, for example, as the conditioning conduit pathway c416 approaches the venturi c423. Such increase in velocity attributable to the tangential velocity gradient may further enhance mixing at zone "B," shown in FIG. 4.2.3A and 4.2.3B, such as at the venturi c423.

The frustoconical configuration and arrangement of the combustor body c400, including the configuration and arrangement of the conditioning conduit c122 and/or the combustion chamber c102, may be selected at least in part to provide a desired reduction in pressure drop, fluid flow rate, and/or size of the combustor body. For example, pressure drop may be reduced by providing a small convergence angle, $\theta$ c425. By contrast, a small convergence angle may correspond to a taller combustor body c400, increasing material cost. Conversely, a large convergence angle, $\theta$ c425 may allow for a shorter combustor body c400 but increased pressure drop. These factors may be balanced to determine a suitable frustoconical configuration and arrangement for the combustor body c400.

Now turning to FIGs. 4.2.4A-4.2.4E, in some embodiments, a combustor body c400 may include one or more combustor vanes c427. The combustor vanes c427 may be configured to condition a flow of combustion gas and/or intake air into the combustion chamber. In some embodiments, the combustor vanes c427 may be configured to induce a vortex or turbulent flow in combustion gas and/or intake air entering the combustion chamber. Such vortex or turbulent flow may improve mixing, for example, providing a mixing zone for fuel entering the combustion chamber 102 from a fuel nozzle c126, such as a cool-zone fuel injector c111. The combustor vanes c427 may be fixed to the combustor cap c210. For example, the combustor vanes c427 may define a monolithic portion of the combustor cap c210. Additionally, or in the alternative, a combustion chamber c102 may include one or more combustor vanes c427, for example, defining a monolithic portion of the combustion chamber c102.

In some embodiments, a plurality of vane rows may be provided. For example, as shown, a combustor body c400 and/or a combustor cap c210 may include three vane rows. As shown in FIG. 4.2.4A, a combustor cap c210 may include a first vane row c429A, a second vane row c429B, and/or a third vane row c429C. The respective vane rows may include one or more vanes. The vane rows may be oriented coannularly relative to a longitudinal axis of the combustor body c204.

The first vane row c429A may define a shield flowpath along the wall of the combustion chamber c102. The shield flowpath may provide cooling to the combustion chamber wall. The second vane row c429B may provide a main flowpath. The main flowpath may provide the bulk flow for combustion. The third vane row c429C may provide a premixing flowpath. The premixing flowpath may provide oxygen to mix with fuel prior to combustion.

The respective combustor vanes c427 may have any desired configuration. A combustor vane c427 may have any desired height extending from an inward combustor cap-surface c431. A combustor vane c427 may have a height that runs parallel to the inward combustor cap-surface c431. Additionally, or in the alternative, a combustor vane c427 may have a height that is sloped relative to the inward combustor cap-surface 431. By way of example, FIG. 4.2.4B shows an individual combustor vane c427 that has a sloped height relative to the inward combustor cap surface c431.

By way of example, FIGs. 4.2.4C-4.2.4E show exemplary configurations of combustor vanes c427. The configurations shown are provided by way of example and not to be limiting. As shown in FIG. 4.2.4C, a plurality of combustor vanes c427 may have an airfoil-type configuration. Additionally, or in the alternative, a plurality of combustor vanes c427 may have a baffle-type configuration. A plurality of rows of airfoil-type combustor vanes c427 and/or baffle-type combustor vanes c427 may be provided, such as three rows, as shown. A plurality of combustor vanes c427 may additionally or alternatively have a spiral configuration, as shown, for example, in FIG. 4.2.4E.

Now turning to FIG. 4.2.5A and 4.2.5B, exemplary methods of combusting a fuel will be described. Exemplary methods may be performed in connection with operation of a combustor body c400, a heater body c100, and/or a closed-cycle engine c002 as described herein. As shown in FIG. 4.2.5A, an exemplary method c470 may include, at block c472, swirling combustion gas through a conditioning conduit c122, with the combustion gas flowing from a proximal portion of the conditioning conduit c122 to a distal portion of the conditioning conduit c122 while swirling. At block c474, the exemplary method c470 may include swirling the combustion gas through a combustion chamber c102. In the exemplary method c470, the conditioning conduit c122 may circumferentially surround the combustion chamber c102 with the conditioning conduit c122 providing fluid communication with the combustion chamber c102 at a distal portion of the combustion chamber c102. The combustion gas may flow from the distal portion of the conditioning conduit c122 to the distal portion of the combustion chamber c102 and from the distal portion of the combustion chamber c102 to a proximal portion of the combustion chamber c102. At block c476, the exemplary method c470 may include combusting a fuel c426 in the combustion chamber c102. The fuel may be supplied at least in part from the combustion gas flowing from the conditioning conduit c122 to the combustion chamber c102.

The exemplary method c470 may additionally or alternatively include, at block 478, supplying at least a portion of the fuel to the combustion chamber c102 through a fuel nozzle c214 fluidly communicating with a distal portion of the combustion chamber c102. Additionally, or in the alternative, the exemplary method c470 may include supplying at least a portion of the fuel to the combustion chamber through the conditioning conduit. For example, the exemplary method c470 may include, circulating at least a portion of the combustion gas through one or more conditioning conduit inlets c414 disposed about a proximal portion of the conditioning conduit.

At block c480, the exemplary method c470 may include circulating at least a portion of the combustion gas through a recirculation pathway c104, with the recirculation pathway c104 providing fluid communication from a proximal portion of the combustion chamber c102 to a proximal portion of the conditioning conduit c122. The recirculation pathway c104 may include a hot-side heat exchanger c106 and a recirculation eductor c116. The hot-side heat exchanger c106 may fluidly communicate with a proximal portion of the combustion chamber c102 and the recirculation eductor c116 may fluidly communicate with a downstream portion of the hot-side heat exchanger c106 and a proximal portion of the conditioning conduit c122 and/or and a distal portion of the combustion chamber c102. The exemplary method may include combusting at least a portion of the combustion gas circulating through the recirculation pathway c104.

At least a portion of the fuel may be supplied to the combustion chamber c102 through one or more conditioning conduit inlets c414 disposed about a proximal portion of the conditioning conduit c122. Supplying fuel through the one or more conditioning conduit inlets c414 may include supplying fuel through one or more motive pathways c418 and/or one or more eduction pathways c420. The one or more conditioning conduit inlets c414 may be oblique to the conditioning conduit c122, for example, to facilitate swirling of the combustion gas and/or fuel.

Now referring to FIG. 4.2.5B, another exemplary method c471 of combusting a fuel will be described. As shown, an exemplary method c471 may include, at block c473, combusting a fuel at a first combustion zone c405; at a block c475, heating a second combustion zone c407; and, at block c477, combusting a fuel at the second combustion zone c407. In some embodiments, an exemplary method c471 may include, at block c479, auto-igniting fuel at the second combustion zone c407. Combusting the fuel at a first combustion zone c405 may include, at block c481, combusting fuel from a cool-zone fuel injector c411 at the first combustion zone c405. Auto-igniting fuel at the second combustion zone c407 may include, at block c483, auto-igniting fuel from the cool-zone fuel injector c411 from a hot-zone fuel injector c413 at the second combustion zone c407. Combusting the fuel at the second combustion zone c407 may include, at block c485, combusting fuel from the cool-zone fuel injector c411 and/or from the hot-zone fuel injector c413 at the second combustion zone c407. Heating the second combustion zone c407 may include, at block c487 vaporizing fuel in a vaporization heat exchanger c417.

In some embodiments, combusting fuel at the first combustion zone c405 may include, at block c489, combusting fuel at the first combustion zone c405 in a lean combustion environment and/or a rich combustion environment. At block c491, combusting fuel at the second combustion zone c407 may include combusting fuel at the second combustion zone c407 in a rich combustion environment. In some embodiments, an exemplary method c471 may include, at bock c493A, combusting fuel at the first combustion zone in a lean combustion environment, and, at block c493B, combusting fuel at the first combustion zone in a rich combustion environment upon having auto-ignited fuel at the second combustion zone. At block c491C, an exemplary method c471 may include combusting fuel at the second combustion zone in a lean combustion environment while combusting fuel at the first combustion zone in a rich combustion environment.

Any one or more parameters may be utilized to control one or more operations of a combustor body c400, a heater body c100, and/or a closed-cycle engine c002 as described herein, including one or more operations in connection with methods of combustion a fuel such as the exemplary methods described herein with reference to FIGs. 4.2.5A and 4.2.5B. By way of example, an exemplary method of combustion a fuel c470, c471 may include controlling one or more of: a fuel flow (e.g., a fuel flow to a cool-zone fuel injector c411 and/or a hot-zone fuel injector c413), an air flow (e.g., an intake airflow, an exhaust flow, and/or a combustion gas flow).

Chapter 4.3 - Fuel Nozzle

Referring now to FIGs. 4.3.1 through 4.3.18, fuel injectors for relatively small or compact apparatuses such as external or internal combustion engines for automotive vehicles, watercraft, or light aircraft, or power units, are limited in spaced such as to inhibit provision of dual-fuel systems. As such, there is a need for fuel injector assemblies that provide dual-fuel systems for relatively small or compact apparatuses.

Embodiments of a fuel injector assembly are provided that may improve atomization and ignition of two or more fuels flowed from the fuel injector assembly. The embodiments shown and described provide a second fuel circuit, through which a liquid or gaseous fuel flows, surrounded at a downstream end by one or more gaseous fluid circuits, such as to provide cooling at the second fuel circuit to mitigate coking and fuel injector deterioration. The fuel injector assembly provided herein provides a compact assembly that may provide dual-fuel combustion for automotive, marine, auxiliary power unit, rotary or fixed wing aircraft, or other vehicles necessitating smaller combustion assemblies.

Referring now to FIG. 4.3.1, a cross sectional view of an exemplary embodiment of a fuel injector assembly d100 ("fuel injector d100") is generally provided. The body d110 of the fuel injector d110 is extended along a lateral direction L between an upstream end d99 and a downstream end d98. A reference fuel injector centerline axis d13 is defined through a cylindrical portion d116 of the body d110. The cylindrical portion d116 of the body d110 is defined circumferentially relative to the reference centerline axis d13 and extended along the lateral direction L. The body d110 further includes a frustoconical portion d117 at the downstream end d98.

The fuel injector d100 includes a first fuel circuit d111 and a second fuel circuit d112 each defined within the body d110. The first fuel circuit d111 and the second fuel circuit d112 are each extended along the lateral direction L from the upstream end d99 to the downstream end d98. The first fuel circuit d111 and the second fuel circuit d112 are each separated circumferentially from one another, such as further depicted in regard to FIGS. 4.3.2 through 4.3.5.

Referring still to FIG. 4.3.1, in various embodiments, the first fuel circuit d111 and the second fuel circuit d112 each extend along a lateral distance d120 of the body d110. The lateral distance d120 of the body d110 is extended from the downstream end d98 (i.e., at a tip corresponding to an output port d105) to the upstream end d99 (i.e., corresponding to an inlet port d108). For a portion of the lateral distance d120, such as depicted at reference dimension d121 extended from the downstream end d98, the first fuel circuit d111 is extended annularly within the body d110. For another portion of the lateral distance d120, such as depicted at reference dimension d122 extended from the downstream end d98, the second fuel circuit d112 is extended annularly within the body d110. In various embodiments, the portion d121 of the lateral distance d120 for which the first fuel circuit d111 is extended circumferentially through the body d110 is greater than the portion d122 of the lateral distance d120 for which the second fuel circuit d112 is extended circumferentially through the body d110. In one embodiment, the portion d122 is 90% or less of the portion d121. In another embodiment, the portion d122 is 75% or less of the portion d121. In still another embodiment, the portion d122 is 50% or less of the portion d121. In various embodiments, the portion d122 is 33% or greater of the portion d121.

Referring now to FIGS. 4.3.2 through 4.3.5, exemplary embodiments of portions of the fuel injector d100 depicting fuel flows therethrough are provided. During operation of the fuel injector d100, a first flow of fuel d101 and a second flow of fuel d102 are each provided through the body d110 of the fuel injector d100. The first flow of fuel d101 is provided to the first fuel circuit d111 fluidly segregated from the second flow of fuel d102 provided to the second fuel circuit d112. For clarity, FIG. 4.3.2 shows only the first flow of fuel d101 through the first fuel circuit d111. Furthermore, for clarity, FIG. 4.3.3 shows only the second flow of fuel d102 through the second fuel circuit d112. FIGS. 4.3.4 and 4.3.5 each depict portions of the fuel injector d100 providing the first flow of fuel d101 and the second flow of fuel d102 each through the fuel injector d100. Referring to FIGS. 4.3.1 through 4.3.5, the first fuel circuit d111 and the second fuel circuit d112 are each spaced apart from one another along a radial direction R relative to the centerline axis d13. Additionally, the first fuel circuit d111 is extended partly annularly through the body d110 for the non-annular portion (i.e., the difference between portion d121 and the lateral distance d120) of the first fuel circuit d111. Furthermore, the second fuel circuit d112 is extended partly annularly through the body d110 for the non-annular portion (i.e., the difference between portion d122 and the lateral distance d120) of the second fuel circuit d112.

In various embodiments, the first fuel circuit d111 defines a single passage through the body d110 of the fuel injector d100 in which the passage is partly annular from the upstream end d99 (i.e., less than fully annular or otherwise not entirely circumferentially extended) until transitioning (at portion d126) to a full annular passage (at portion d121) at the downstream end d98 of the fuel injector d100. In still various embodiments, the second fuel circuit d112 defines a single passage through the body d110 of the fuel injector d100 in which the passage is partly annular until transitioning (at portion d127) to a full annular passage (at portion d122) at the downstream end d98 of the fuel injector d100, and downstream of where the first fuel circuit d111 transitions to the full annular passage (at portion d121). In one embodiment, the first flow of fuel d101 is particularly a gaseous fuel and the second flow of fuel d102 is a liquid or gaseous fuel. The gaseous first flow of fuel d101 extends circumferentially within portion d121 through the first fuel circuit d111 around the liquid (or gaseous) second flow of fuel d102 extended circumferentially within portion d122 through the second fuel circuit d112. The gaseous first flow of fuel d101 surrounding the liquid second flow of fuel d102 at the second fuel circuit d112 may provide thermal attenuation at the second fuel circuit d112 such as to prevent coking of the liquid second flow of fuel d102 at the relatively hotter downstream end d98 of the fuel injector d100.

Referring now to FIGS. 4.3.6 and 4.3.7, perspective views of exemplary embodiments of the fuel injector d100 are provided. FIGS. 4.3.6 provides a view from the downstream end d98 of the fuel injector d100 looking upstream. FIG. 4.3.7 provides a view from the upstream end d99 of the fuel injector d100 looking downstream. Referring to FIGS. 4.3.6, in conjunction with FIGS. 4.3.1 through 4.3.5, the fuel injector d100 defines a plurality of first fuel injection apertures d115 through the body d110. The plurality of first fuel injection apertures d115 are defined circumferential arrangement through the body d110 relative to the reference centerline axis d13. The plurality of first fuel injection apertures d115 provides a plurality of individual orifices through which the individual streams of the first flow of fuel d101 egress the body d110. In various embodiments, the plurality of first fuel injection apertures d115 defines a jet-in-crossflow (JICF) arrangement through the frusto-conical portion d117 of the body d110.

Referring still to FIGS. 4.3.6, in conjunction with FIGS. 4.3.1 through 4.3.5, the fuel injector d100 further defines an annular second fuel injection opening d125 through the body d110. The second fuel injection opening d125 is defined at the downstream end d98 of the fuel injector d100. In various embodiments, the second fuel injection opening d125 is a full annular or completely circumferential opening from which the second flow of fuel d102 egresses the second fuel circuit d112 at least partially as a conical flow of fuel to a combustion chamber.

Referring back to FIG. 4.3.3, in various embodiments the body d110 defines a converging-diverging flowpath at the downstream end d98 of the second fuel circuit d112. In one embodiment, the second fuel circuit d112 defines within the full annular portion d122 a converging portion d128 in which a wall converges toward the reference centerline axis d13. The second fuel circuit d112 further defines within the full annular portion d122 a diverging portion d129 in which a wall diverges away from the reference centerline axis d13. In one embodiment, the diverging portion d129 is defined downstream of the converging portion d128. The diverging portion d129 may provide the at least partially conical geometry of the second flow of fuel d102 egressing the second fuel injection opening d125. In various embodiments, the converging portion d128 may be defined at or otherwise corresponding to the frusto-conical portion d117 of the body d110, such as depicted in regard to FIGS. 4.3.1 and 4.3.5.

Referring still to FIG. 4.3.3, the body d110 may further define a vane structure d130 at the second fuel circuit d112. In one embodiment, the vane structure d130 is particularly defined at the downstream end d98 of the fuel injector d100 at the full annular portion d122 of the second fuel circuit d112. The vane structure d130 is configured to impart a circumferential velocity or swirl to the second flow of fuel d102 through the full annular portion d122 of the second fuel circuit d112. In another embodiment, the vane structure d130 may be defined upstream of the full annular portion d122. In a particular embodiment, the vane structure d130 may be defined at the transition portion d127 of the second fuel circuit d112 such as to impart a swirl to the second flow of fuel d102 entering the full annular portion d122 of the second fuel circuit d112 and egresses the second fuel injection opening d125. The vane structure d130 may promote circumferential acceleration of the second flow of fuel d102 through the second fuel circuit d112 such as to promote atomization of the fuel d102 when the fuel d102 egresses into the combustion chamber through the second fuel injection opening d125, thereby improving combustion performance, operability, and/or emissions outputs. In some embodiments, the vane structure d130 defines the swirl characteristic particularly for a flow of liquid fluid, such as liquid fuel, through the second circuit d112.

In one embodiment, the vane structure d130 includes two or more laterally separated rows of vanes through which fuel is provided. The plurality of vanes d130 in circumferential arrangement each define pin holes between each pair of vanes. In one embodiment, the vane structure d130 is configured to produce substantially no circumferential swirl of the fluid via the two or more laterally separated rows of vanes and pin holes. The vanes d130, and the pin holes defined therebetween, are circumferentially offset from one another, such that the openings between each pair of vanes d130 are laterally non-aligned between an upstream and downstream opening relative to the vane structure d130. In still various embodiments, the no-swirl vane structure d130 arrangement produces the no-swirl flow of the gaseous fluid, such as gaseous fuel, through the second circuit d112.

Referring now to FIG. 4.3.8, another cross sectional view of an exemplary embodiment of the fuel injector d100 is provided. Referring also to FIG. 4.3.9, a perspective view of the exemplary embodiment of the fuel injector d100 of FIG. 4.3.8 is provided. The embodiments depicted in regard to FIG. 4.3.8 and 4.3.9 are configured substantially similarly as shown and described in regard to FIGS. 4.3.1 through 4.3.7. In FIG. 4.3.8 and 4.3.9, the fuel injector d100 further includes an igniter d140 extended through an outlet port d105 through the downstream end d98 of the body d110. In various embodiments, the outlet port d105 is extended through the body d110 concentric to the reference centerline axis d13. The igniter d140 may be extended through a cavity d133 radially or concentrically inward of the fuel circuits d111, d112 and extended laterally within the body d110. In particular embodiments, the igniter d140 may extend through the cavity d133 from the upstream end d99 of the body d110 through an inlet port d108 to admit the igniter d140 into the cavity d133 and protrude from the downstream end d98 of the body d110 into a combustion chamber. The igniter d140 extends through the outlet port d105 such as to dispose the downstream end d98 of the igniter d140 to one or more of the flows of fuel d101, d102 egressed from their respective fuel circuits d111, d112.

In various embodiments, the igniter d140 provides an energy source to ignite and combust the flows of fuel d101, d102 egressed from their respective fuel circuits d111, d112. In one embodiment, the igniter d140 defines a glow plug such as to provide a source of thermal energy such that when one or more flows of fuel d101, d102 are exposed to heat generated from the igniter d140 causes the fuel d101, d102 to ignite. In particular embodiments, the second flow of fuel d102 defining a liquid fuel is exposed to heat generated from the igniter d140 to cause the fuel d102 to ignite.

A method for operation of the fuel injector d100 is provided herein in which a relatively low pressure second flow of fuel d102 is provided through a second fuel inlet opening d107 (FIGs. 4.3.1, 4.3.7, and 4.3.8) to the second fuel circuit d112. The relatively low pressure second flow of fuel d102 egresses from the body d110 of the fuel injector d100 via the second fuel injection opening d125. As the egressed fuel d102 flows closer to or touches the igniter d140, it is initially ignited (e.g., light-off) and may further ignite the first flow of fuel d101 egressed from the plurality of first fuel injection apertures d115. Following light-off, the pressure may increase such as to improve atomization and desirably alter combustion and heat release characteristics, such as to improve operability, performance, and reduce emissions output (e.g., smoke, unburned hydrocarbons, oxides of nitrogen, etc.).

The igniter d140 included through the body d110 of the fuel injector d100 may provide and/or improve providing dual fuel (i.e., the first and second flows of fuel d101, d102) operation of the fuel injector d100 at relatively small engine apparatuses, such as those for external or internal combustion engines, including those for automotive, personal or light water craft, or auxiliary power unit applications.

In still various embodiments, during operation of the fuel injector d100, the first flow of fuel d101 defining a gaseous fuel is provided through a first inlet opening d106 (FIGs. 4.3.1, 4.3.7, and 4.3.8) to the first fuel circuit d111. The fuel d101 egresses from the body d110 through the plurality of first fuel injection apertures d115 for combustion.

Referring now to FIG. 4.3.10, an exemplary embodiment of another portion of the fuel injector d100 is provided. The embodiment provided in regard to FIG. 4.3.10 is configured substantially similarly as shown and described in regard to FIGS. 4.3.1 through 4.3.9. In FIG. 4.3.10, the fuel injector d100 further includes a second plurality of apertures d115(a) disposed radially inward of the second fuel injection opening d125. In one embodiment, the second plurality of apertures d115(a) may be in fluid communication with the first fuel circuit d111 (FIG. 4.3.8) such as to allow another flow of gaseous fluid (depicted via arrows 101(a)) to egress through the second plurality of apertures d115(a). The first and second plurality of apertures d115, d115(a) may together provide flows of gaseous fuel d101 and fluid d101(a) radially inward and radially outward of the second flow of fuel d102. The combination of the flows of fuel d101 and fluid d101(a) radially surrounding the second flow of fuel d102 may desirably alter the projection, burn, and/or heat release characteristics of the second flow of fuel d102 in the combustion chamber. For example, during higher pressure operation of the second flow of fuel d102 , the first flow of fuel d101 and fluid d101(a) may prevent or mitigate undesired liquid fuel build-up at the igniter d140, such as to prevent carbon build-up, degradation, or undesirable burning and production of emissions. As another example, the flow of fluid d101(a) radially inward of the second flow of fuel d102 may provide thermal attenuation (i.e., cooling) at the body d110 of the fuel injector d100 such as to desirably attenuate heat transfer to the second flow of fuel d102 to mitigate coking within the second fuel circuit d112.

In various embodiments, the flow of fluid d101(a) may define a portion of the first flow of fuel d101 from the first fuel circuit d111. In other embodiments, such as further described in regard to FIG. 4.3.11, the flow of fluid d101(a) may define air or an inert gas provided from the cavity d133, such as to provide thermal attenuation to portions of the fuel injector d100.

Referring now to FIG. 4.3.11, a cross sectional view of another exemplary embodiment of the fuel injector d100 is provided. The embodiment provided in regard to FIG. 4.3.11 is configured substantially similarly as shown and described in regard to FIGS. 4.3.1 through 4.3.10. In FIG. 4.3.11, the fuel injector d100 further includes a fluid inlet opening d185 providing fluid communication from the cavity d133 to a third circuit d113. The third circuit d113 is defined radially inward of the first circuit d111 and the second circuit d112. In various embodiments, the third circuit d113 is defined radially inward of the second circuit d112 at the downstream end d98 of the fuel injector d100. In one embodiment, the third circuit d113 is defined at the frusto-conical portion d117 of the fuel injector d100. The third circuit d113 is in fluid communication with the second plurality of apertures d115(a), such as depicted in FIG. 4.3.10. The fluid inlet opening d185 provides a flow of oxidizer (e.g., air) or inert gas, shown schematically via arrows d103, to egress from the cavity d133 through the second plurality of apertures d115(a) via the third circuit d113.

In various embodiments, a flow of fuel d101(a) (FIG. 4.3.10) may be provided from the first fuel circuit d111 to the third circuit d113. The flow of fluid d103 from the cavity d133 through the second plurality of apertures d115(a) via the third circuit d113 may improve fuel atomization as the flow of fluid d103 mixes with the flow of fuel d101(a) (FIG. 4.3.10). In one embodiment, the flow of fuel d101(a) may be a pilot fuel source from the second circuit d112. In another embodiment, the flow of fuel d101(a) provides a thermal and/or fluid break or barrier between the igniter d140 and portions of the fuel injector d100 radially outward of the igniter d140.

In another embodiment, the flow of fluid d103 from the cavity d133 through the second plurality of apertures d115(a) may provide a protective curtain or cooling film of fluid to mitigate deterioration or damage to the igniter d140 due to heat and pressure from burning the one or more flows of fuel d101, d102. For example, the flow of fluid d103 may egress from the second plurality of apertures d115(a) radially inward of the second flow of fuel d102 (FIG. 4.3.10) egressing the second fuel injection opening d125. The flow of fluid d103, such as depicted via the flow of fluid 101(a) in FIG. 4.3.10, provides a barrier or cooling film between the igniter d140 and the flows of fuel d101, d102 along with their subsequent burning and heat release.

Referring now to FIG. 4.3.12, another exemplary embodiment of the fuel injector d100 according to aspects of the present disclosure is provided. Regarding FIG. 4.3.12, the cavity d133 within the body d110 of the fuel injector d100 further defines an upstream cavity d133(a) and a downstream cavity d133(b) relative to a flow of fluid therethrough. Particularly, the upstream cavity 133(a) is defined at or upstream of a fuel injection opening d115(b) positioned in flow communication at the cavity 133. The downstream cavity d133(b) is generally defined downstream of the fuel injection opening d115(b).

In various embodiments, downstream cavity 133(b) defines a fuel/oxidizer premixing plenum at which flow of fuel d102 is mixed with flow of fluid 103 (e.g., an oxidizer). The fuel injection opening d115(b) is fluidly connected to the first fuel circuit d111, such as described above. In certain embodiments, the fuel injection opening d115(b) is positioned in axial or co-directional flow arrangement in the cavity d133 such as to provide a substantially axial or co-directional flow of fuel d101 through the fuel injection opening d115(b) to the flow of fluid d103 through the downstream cavity d133(b). The flow of fuel d102 and the flow of fluid d103 (e.g., oxidizer) is mixed at the downstream cavity d133(b) prior to egressing a premixed fuel/oxidizer mixture d101(b) through the plurality of fuel apertures d115 and/or d115(a) such as described above.

Referring now to FIG. 4.3.13 and 4.3.14, cross-sectional views are provided of the fuel injector d100 at respective planes B-B and planes A-A, such as sectioned in FIG. 4.3.12, FIG. 4.3.15, FIG. 4.3.16, and FIG. 4.3.17. The fuel injection opening d115(b) includes a plurality of discrete fuel injection openings d115(b) positioned in circumferential arrangement relative to centerline axis d13. As further provided above, the first fuel circuit d111 upstream of the fuel injection openings d115(b) is extended substantially annularly relative to the centerline axis d13 and then egresses the fuel d101 through the plurality of fuel injection openings d115(b).

In various embodiments, an inner body d110(a) of the body d110 of the fuel injector d100 fluidly segregates the cavity d133 (including, at least in part, upstream cavity d133(a) and downstream cavity d133(b)) from the first fuel circuit d111. In certain embodiments, a second inner body d110(b) is positioned radially inward of the body d110 such as to fluidly segregate the first fuel circuit d111 and the igniter d140.

Referring now to FIG. 4.3.15, it should be appreciated that certain embodiments of the fuel injector d100 may include a substantially solid inner body d110(a). Additionally, the fuel injector d100 may include at least a portion of the first fuel circuit d111 extended through the inner body d110(a).

Referring to FIG. 4.3.12 and 4.3.15, it should be appreciated that although embodiments of the fuel injector d100 are depicted having the fuel injection opening d115(b) extended from the first fuel circuit d111 extended through the inner body d110(a), other embodiments may include the fuel injection opening d115(b) extended from the first fuel circuit d111 extended from the outer or external body d110 surrounding the inner body d110(a).

Embodiments of the fuel injector d100 provided in regard to FIG. 4.3.12 and 4.3.15 may reduce undesired pressure losses related to providing relatively large masses or flowrates of oxidizer (e.g., fluid 103) for premixing with fuel (e.g., fuel 101) in relatively small premixing passages (e.g., downstream cavity d133(b). The momentum or velocity arising from ejecting the flow of fuel d101 through the fuel injection openings d115(b) in substantially axial or co-directional flow with the flow of fluid d103 allows for reduction in local pressure and reduction in pressure loss for the fluid d103 at the downstream cavity d133(b). The improved premixing at downstream cavity d133(b) prior to egressing the fuel/oxidizer mixture d101(b) to a combustion chamber (e.g., at d98) may reduce undesired emissions or particulates (e.g., oxides of nitrogen, carbon monoxide, carbon dioxide, smoke, soot, unburned hydrocarbons, etc.).

Referring now to FIG. 4.3.16 and FIG. 4.3.17, embodiments of the fuel injector d100 depicted may be configured substantially similarly as one or more of the embodiments described herein in regard to FIG. 4.3.1 through FIG. 4.3.15. In the embodiments generally depicted in FIG. 4.3.16 and FIG. 4.3.17, the fuel injector d100 further includes a flow control structure d150 positioned at the downstream cavity d133(b). The flow control structure d150 is extended circumferentially through the annular downstream cavity d133(b), such as depicted at the cross-sectional view in Plane C-C depicted in FIG. 4.3.18. The flow control structure d150 is configured to mitigate or eliminate risks associated with premature ignition of a fuel/oxidizer mixture (i.e., flashback or auto-ignition), such as within a fuel injector.

In certain embodiments, the flow control structure d150 includes a plurality of enlargements, recesses, projections, baffles, protrusions, vanes, or other structures configured to mitigate or discourage flow from the downstream end d98 toward the upstream end d99. In various embodiments, the flow control structure d150 allows for desired residence time for mixing the fuel d101 and fluid d103 at the downstream cavity d133(b) to form the fuel/oxidizer mixture d101(b). In still various embodiments, the flow control structure d150 desirably increases residence time by increasing the cross-sectional flow area and reducing bulk flow velocity of the fuel d101 and fluid d103. In a particular embodiment, the flow control structure d150 is a fluidic diode, such as a Tesla valve. In another particular embodiment, such as depicted in FIG. 4.3.17, the flow control structure d150 is a porous mesh.

Referring back to FIG. 4.3.9, in another embodiment, the flow of fluid d103 may additionally, or alternatively, egress via the outlet port d105 through which the igniter d140 is extended. The flow of fluid d103 may provide a protective curtain or cooling film such as described in regard to FIGS. 4.3.10 and 4.3.11.

Referring back to FIGS. 4.3.1 and 4.3.6 through 4.3.9, the fuel injector d100 further includes a fastening port d109 extended along the lateral direction L and co-directional to the reference centerline axis d13. The fastening port d109 is extended through a portion of the body d110 such as to provide a mechanical fastener (e.g., bolt, screw, tie rod, rod, etc.) to extend therethrough to fix the fuel injector d100 in place. In various embodiments, the fastening port d109 is configured to dispose the reference centerline axis d13 of the fuel injector d100 co-axial to a reference centerline of a combustion chamber. As such, the fastening port d109 may dispose the first and second fuel circuits d111, d112 substantially co-directional to a flow of combustion gases through a combustion chamber. The generally co-axial and co-directional disposition of the fuel injector d100 relative to a combustion chamber may reduce or eliminate turns, pressure drops, or other impedances to providing the flows of fuel d101, d102 through the fuel circuits d111, d112 and egress to the combustion chamber via the respective plurality of fuel apertures d115 and fuel injection opening d125.

In various embodiments, such as further depicted in regard to FIGS. 4.3.6, 4.3.9, and 4.3.11, a plurality of threads may be defined at an outside surface of the cylindrical portion d116 of the body d110. The cylindrical portion d116 defining a plurality of threads provides threading the fuel injector d100 into an engine apparatus, or portion thereof (e.g., heater body c100), to dispose the downstream end d98 at a combustion chamber, such as combustion chamber c102. A fastener at the fastening port d109 may further act as a mechanism to retain the lateral position (i.e., along the lateral direction L) of the fuel injector d100 relative to a surrounding engine apparatus.

Embodiments of the fuel injector d100 shown and depicted herein in regard to FIGs. 4.3.1 through 4.3.18 may be constructed via one or more manufacturing processes known in the art. In various embodiments, the fuel injector d100 may be constructed as a single, unitary construction. In another embodiment, the body d110 may be constructed as a single, unitary construction separate from the igniter d140. Manufacturing processes for constructing the fuel injector d100 may include one or more processes generally referred to as additive manufacturing or 3D printing. Additionally, or alternatively, manufacturing processes for constructing the fuel injector d100 may include one or more machining processes or other material removal processes, material additive processes such as welding, brazing, soldering, or bonding processes generally, or one or more casting or forming processes.

In still various embodiments, the fuel injector d100 may include one or more materials appropriate for fuel injection to a combustion chamber, such as, but not limited to, iron or iron-based materials, aluminum, magnesium, nickel, titanium, ceramic or metal matrix composites, or alloys or combinations thereof, or other materials appropriate for combustion systems. Furthermore, the fuel injector d100 may include one or materials appropriate for heat engines generally, or external or internal combustion engines, closed-cycle engines, Stirling cycle, Rankine cycle, or Brayton cycle machines more specifically.

Embodiments of the fuel injector d100 provided herein may be configured to receive and desirably inject a plurality of types of fuels through the first circuit d111 and the second circuit d112. Exemplary fuels include, but are not limited to, propane, ethane, coke oven gas, natural gas, synthesis gas, liquid fuel such as diesel fuel, gasoline, synthetic fuel, or a plurality of specifications of kerosene or jet fuel (e.g., Jet A, JP-8, etc.), or mixtures of gaseous and/or liquid fuels thereof.

A method for operation of the fuel injector d100 provides for selectively relatively low pressure/flow output and high pressure/flow output of fuel through each circuit d111, d112, d113 of the fuel injector d100. The fuel injector d100 provides for a relatively low pressure/flow operation of the fuel injector d100 for a first flow of fuel to egress from the fuel injector d100 and touch the hot igniter d140, such as defining glow plug, to ignite the fuel. The fuel injector d100 further provides for a relatively high pressure/flow operation of the fuel injector d100 for the first flow of fuel, or additionally or alternatively, a second flow of fuel, to egress the fuel injector d100 such as to avoid touching the igniter d140. As such, the relatively high pressure/flow operation of the fuel injector d100 prevents undesired burn-up, wear, or other deterioration of the igniter d140. The high pressure/flow operation of the fuel injector d100 may additionally, or alternatively, provide the second flow of fuel (e.g., via the second circuit d112) to generate a buffer, such as a fluid and/or thermal break, between the first flow of fuel from the first circuit d111 and the igniter d140. In still various embodiments, the first flow of fuel from the first circuit d111 defines a liquid fuel. The second flow of fuel from the second circuit d112 may define a liquid and/or gaseous fuel. In still other embodiments, one or more other fluids, such as a non-fuel fluid, may be provided through the first circuit d111, the second circuit d112, and/or the third circuit d113. In one embodiment, the fluid provided through the fuel injector d100 includes an inert gas, urea, or other substance such as to desirably control emissions, provide a thermal or fluid barrier, or clean one or more circuits or passages of the fuel injector d100. For example, urea may be added to the fuel such as to decrease emissions associated with diesel fuels or similar.

In still various embodiments, the fuel injector d100 provides a structure and method for operation at which the vane structure d130 provides or generating a circumferential swirl to the fuel through second circuit d112, such as described herein. In one embodiment, the method for operation includes providing a circumferential swirl to a liquid fluid or fuel via the vane structure d130 within the second circuit d112. The liquid fuel then egresses the fuel injector d100 via the respective opening(s) with at least a partial circumferential velocity component, such as depicted in regard to FIG. 4.3.1.

In another embodiment, the structure and method for operation includes providing or generating a substantially no-swirl or axial flow of fuel through the second circuit d112 via the vane structure d130 such as described herein. In one embodiment, the method for operation includes providing the gaseous fluid or fuel through a first upstream vane structure d130 relative to a second downstream vane structure d130. The second downstream vane structure d130 defines at least one opening circumferentially offset from an opening defined at the first upstream vane structure d130. In one embodiment, the method may include providing a single opening at the first upstream vane structure d130 and a single opening at the second downstream vane structure d130. The vane structure d130 may further provide for retarding a circumferential flow component of the fluid via the circumferentially offset opening defined at each vane structure d130. The method may further include egressing the flow of fuel via respective opening(s) with a substantially no-swirl or non-circumferential flow component. The substantially non-swirl flow of gaseous fluid may provide improved thermal and/or fluid barrier between the igniter d140 and the combustion gases radially or concentrically outward or surrounding the igniter d140.

Embodiments of the fuel injector d100 provided herein may provide relatively low pressure supply of the fuels d101, d102 through the fuel injector d100 for egress through the plurality of first fuel injection apertures d115 and second fuel injection opening d125 and combustion at a combustion chamber. In one embodiment, the fuel injector d100 provided herein may provide the second flow of fuel d102 defining a liquid fuel to be provided through the fuel injector d100 without a fuel pump. For example, the fuel injector d100 may receive the second flow of fuel d102 via header pressure from a fuel tank providing the second flow of fuel d102. Generally, as the fuel injector d100 provided herein may operate with relatively low pressure fuel sources, dual-fuel fuel injectors d100 may be provided to apparatuses typically too small or compact for dual-fuel systems, such as, but not limited to, external or internal combustion engines for automotive vehicles, personal or commercial marine vehicles, personal watercraft, light aircraft, including short takeoff and vertical landing (STOVL) vehicles, rotary or fixed wing aircraft, or auxiliary power units.

## Chapter 4.4 - Hot-Side Heat Exchanger

Now referring to FIGs. 4.4.1A and 4.4.1B, 4.4.2A and 4.4.2B, and 4.4.3A and 4.4.3B, exemplary heat exchanger bodies c600 (e.g., hot-side heat exchanger bodies c600) will be described. The presently disclosed hot-side heat exchanger bodies c600 may define part of a heater body c100 and/or a closed-cycle engine c002. For example, a hot-side heat exchanger body c600 may define at least a portion of a monolithic body or a monolithic body-segment. Such monolithic body or monolithic body-segment may define at least a portion of the heater body c100 and/or the closed-cycle engine c002. Additionally, or in the alternative, the presently disclosed hot-side heat exchanger bodies c600 may be provided as a separate component, whether for use in connection with a heater body c100, a closed-cycle engine c002, or any other setting whether related or unrelated to a heater body c100 or a closed-cycle engine c002. At least a portion of the hot-side heat exchanger body c600 may define a hot-side heat exchanger c106. While the heater bodies c100 depicted in the figures may show one hot-side heat exchanger body c600 and/or one hot-side heat exchanger c106, it will be appreciated that a heater body c100 may include a plurality of hot-side heat exchanger bodies c600 and/or a plurality of hot-side heat exchangers c106. For example, a heater body c100 may include one or more hot-side heat exchanger bodies c600, and/or a hot-side heat exchanger body c600 may include one or more hot-side heat exchangers c106.

As shown, a hot-side heat exchanger body c600 and/or a hot-side heat exchanger c106 may include a plurality of heating walls c616. The plurality of heating wall c616 may be configured and arranged as an array of heating walls c616. The heating walls c616 may be radially or concentrically adjacent to one another. The heating walls c616 may be configured and arranged as a spiral or a spiral arc, and may be disposed annularly or semi-annularly relative to the combustion chamber c102 and/or the longitudinal axis c204 thereof. The heating wall c616 may be concentrically nested with one another. The heating wall c616 may be configured and arranged as an array of substantially concentric spirals and/or an array of substantially concentric spiral arcs. By way of example, a spiral or spiral arc, such as in an array of substantially concentric spirals or spiral arcs, may correspond to at least a portion of an Archimedean spiral, a Cornu spiral, a Fermat's spiral, a hyperbolic spiral, a logarithmic spiral, a Fibonacchi spiral, an involute, or a squircular spiral, as well as combinations of these.

The heating walls c616 define a plurality of heating fluid pathways c602. The heating fluid pathways c602 may make up a portion of the hot-side heat exchanger body c600 and/or a hot-side heat exchanger c106, defining a pathway through which a heating fluid such as circulating combustion gas may flow. The heating fluid pathways c602 may fluidly communicate with an inlet plenum c604. The inlet plenum may include a combustion chamber c602. The heating fluid pathways c602 may be configured and arranged as an array of heating fluid pathways c602. The heating fluid pathways c602 may be radially or concentrically adjacent to one another with a heating wall c616 disposed between respective adjacent heating fluid pathways c602. The heating walls c616 may be radially or concentrically adjacent to one another with a heating fluid pathway c602 disposed between respective adjacent heating walls c616. The heating walls c616 may be configured and arranged as a spiral or a spiral arc, and may be disposed annularly or semi-annularly relative to the combustion chamber c102 and/or the longitudinal axis c204 thereof. The heating fluid pathways c602 may be concentrically nested with one another. The heating fluid pathways c602 may be configured and arranged as an array of substantially concentric spirals and/or an array of substantially concentric spiral arcs. The hot-side heat exchanger body c600 may include an array of alternating heating walls c616 and heating fluid pathways c602.

Upstream ends of the heating walls c616 may be circumferentially spaced about an inlet plenum c604, such as a combustion chamber. Upstream ends of the heating fluid pathways c602 may respectively define an inlet c606, which may be circumferentially spaced about the inlet plenum c604, such as the combustion chamber c102. At least some of the inlets c606 may be oriented oblique to the inlet plenum c604. At least some of the plurality of heating fluid pathways c602 may define a spiral pathway.

The inlet plenum c604, such as the combustion chamber c102, may fluidly communicate with the plurality of heating fluid pathways c602. The plurality of heating fluid pathways c604 may respectively define an inlet c606 circumferentially spaced about the inlet plenum c604 (and/or disposed radially about the inlet plenum c604). Respective ones of the plurality of heating fluid pathways c604 may define respective ones of a plurality of inlets c606. The plurality of inlets c604 may be circumferentially spaced about the inlet plenum c604 (and/or disposed radially about the inlet plenum c604). For example, the plurality of inlets c604 may be circumferentially spaced about the combustion chamber c102 (and/or disposed radially about the combustion chamber c102). In some embodiments, respective ones of the plurality of inlets may define respective ones of a plurality of combustion chamber outlets c412. Additionally, or in the alternative, the inlet plenum c604 may define a plurality of inlets c606 fluidly communicating with respective ones of the plurality of heating fluid pathways c602. For example, the combustion chamber c102 may define a plurality of combustion chamber outlets c412 and/or a plurality of inlets c606 fluidly communicating with respective ones of the plurality of heating fluid pathways c602.

The plurality of heating fluid pathways c602 may additionally or alternatively fluidly communicate with one or more outlet plenum c608, such as a recirculation annulus c208. The fluid communication between the plurality of heating fluid pathways c602 and the one or more outlet plenum c608, such as a recirculation annulus c208 may be at a downstream portion of respective ones of the plurality of heating fluid pathways c602. The outlet plenum c608 or recirculation annulus c208 may circumferentially surround at least a portion of the hot-side heat exchanger body c600 and/or the hot-side heat exchanger c106. For example, the outlet plenum c608 or recirculation annulus c208 may circumferentially surround at least a portion of the plurality of heating fluid pathways c602.

As shown, for example, in FIGs. 4.4.1B and 4.4.2B, the hot-side heat exchanger body c600 and/or a working-fluid body c108 may define a plurality of heat transfer regions c612. The plurality of heat transfer regions c612 may correspond to respective portions of a working-fluid body c108. A respective heat transfer region c612 may encompass a portion of the hot-side heat exchanger body c600 and/or a portion of the working-fluid body c108. Respective ones of the plurality of heat transfer regions c612 have a thermally conductive relationship with a corresponding portion c614 of the plurality of heating fluid pathways c602, such as a semiannular portion c614 of the plurality of heating fluid pathways c602. Respective ones of the plurality of heat transfer regions c612 may include a heat input region, at least one heat extraction region, and a plurality of working-fluid pathways c110. The heat input region may include a piston body c700 and the heat extraction region may include a regenerator body c800.

In some embodiments, a heat transfer region c612 may include at last a portion of a working-fluid body c108. For example, a heat transfer region c612 may include at least a portion of a piston body c700 and/or at least a portion of a regenerator body c800. Additionally, or in the alternative, a heat transfer region c612 include one or more working-fluid pathways c110 that have a thermally conductive relationship with a corresponding portion c614 (e.g., a semiannular portion) of at least some of the plurality of heating fluid pathways c602. For example, the heat transfer region c612 may include one or more working-fluid pathways c110 defined at least in part within a corresponding one or more heating wall c616 of a hot-side heat exchanger c106. Such working-fluid pathways c110 may define a pathway for an engine-working fluid to flow through the hot-side heat exchanger c106, such as through the one or more heating walls c616 thereof. Where a working-fluid pathway c110 flows through a hot-side heat exchanger c106, the heat transfer region c612 may include a portion of the working-fluid pathway within or defined by the hot-side heat exchanger c106, such as within a region of one or more heating wall c616 of the hot-side heat exchanger c106 corresponding to the heat transfer region c612.

The hot-side heat exchanger body c600 may include a plurality of working-fluid pathways c110 monolithically formed within the plurality of heating walls c616. The plurality of working-fluid pathways may be grouped into an array of working-fluid pathways c110 and/or a plurality of arrays of working fluid-pathways c110. An array of working-fluid pathways c110 may define a heat transfer region c612. A plurality of arrays of working-fluid pathways c110 may define a corresponding plurality of heat transfer regions c612. Respective ones of the plurality of arrays of working-fluid pathways c110 may be circumferentially spaced about the hot-side heat exchanger body c600. Respective ones of the plurality of heat transfer regions c600 may be circumferentially spaced about the hot-side heat exchanger body c600.

As shown, for example, in FIGs. 4.4.2A and 4.4.2B, at least some of the working-fluid pathways c110 may be radially or concentrically adjacent to one another. Additionally, or in the alternative, as also shown, at least some of the working-fluid pathways c110 may be semiannular to one another. The working-fluid pathways c110 may fluidly communicate between the heat input region and the at least one heat extraction region. The plurality of heating fluid pathways c602 may be disposed radially or concentrically adjacent to corresponding respective ones of the plurality of working-fluid pathways c110, such as radially or concentrically adjacent to respective ones of a plurality of semiannular working-fluid pathways c110. Respective ones of the plurality of heating fluid pathways c602 may have a thermally conductive relationship with corresponding respective ones of the plurality of working-fluid pathways c110.

The plurality of heat transfer regions c612 may be circumferentially spaced about the hot-side heat exchanger body c600. The semiannular portion c614 of the plurality of heating fluid pathways c602 corresponding to a respective heat transfer region c612 may correspond to a radial position of the respective heat transfer region c612. For example, the plurality of heating fluid pathways c602 may define a spiral pathway, spiraling annularly or semi-annularly around a longitudinal axis, A, c214. The portion c614 of the plurality of heading fluid pathways c602 passing the radial position of a respective heat transfer region c612 may define the semiannular portion c614 of the plurality of heating fluid pathways c602 corresponding to the respective heat transfer region c612.

In some embodiments, the plurality of heating fluid pathways c602 may pass adjacent to at least some of the plurality of heat transfer regions c612 in circumferential series. For example, the plurality of heating fluid pathways c602 may have a thermally conductive relationship with the at least some of the plurality of heat transfer regions c612, and the particular heat transfer region c612 with which a respective portion c614 of the plurality of heating fluid pathways c604 has a thermally conductive relationship may transition radially from one heat transfer region c612 to and adjacent heat transfer region c612. The circumferential series of a respective one of the plurality of heating fluid pathways c602 may have a sequence depending at least in part on a circumferential location of an inlet c606 to the respective one of the plurality of heating fluid pathways c602.

By way of example, a first heating fluid pathway c618 may pass adjacent to at least some of the plurality of heat transfer regions c612 in a first circumferential series that includes a first heat transfer region c620 followed by a second heat transfer region c622. The first circumferential series may additionally or alternatively include the second heat transfer region c622 followed by a third heat transfer region c624 and/or a fourth heat transfer region c626. For example, the fourth heat transfer region c626 may be preceded by the third heat transfer region c624. A second heating fluid pathway c628 may pass adjacent to at least some of the plurality of heat transfer regions c612 in a second circumferential series. The second circumferential series may include the second heat transfer region c622 followed by the third heat transfer region c624. The second circumferential series may additionally or alternatively include the third heat transfer region c624 followed by the fourth heat transfer region c626 and/or the first heat transfer region c620. For example, the first heat transfer region c620 may be preceded by the fourth heat transfer region c626. A third heating fluid pathway c630 may pass adjacent to at least some of the plurality of heat transfer regions c612 in a third circumferential series. The third circumferential series may include the third heat transfer region c624 followed by the fourth heat transfer region c626. The third circumferential series may additionally or alternatively include the fourth heat transfer region c626 followed by the first heat transfer region c620 and/or the second heat transfer region c622. For example, the second heat transfer region c622 may be preceded by the first heat transfer region c620. A fourth heating fluid pathway c632 may pass adjacent to at least some of the plurality of heat transfer regions c612 in a fourth circumferential series. The fourth circumferential series may include the fourth heat transfer region c626 followed by the first heat transfer region c620. The fourth circumferential series may additionally or alternatively include the first heat transfer region c620 followed by the second heat transfer region c622 and/or the third heat transfer region c624. For example, the third heat transfer region c624 may be preceded by the second heat transfer region c622.

During operation, heating fluid such as combustion gas flowing through the plurality of heating fluid pathways c602 may transfer heat to any one or more of the plurality of heat transfer regions c612. The rate or quantity of heat transferring from the heating fluid to a heat transfer region c612 may vary as between respective ones of the heat transfer pathways c602 and/or as between respective ones of the heat transfer regions c612. For example, the rate or quantity of heat transferring from the heating fluid to a heat transfer region c612 may depend at least in part on a temperature gradient between the heating fluid and the heat transfer region, such as a temperature gradient between the heating fluid and the engine-working fluid. In some embodiments, however, the heating fluid within the plurality of heating fluid pathways c602 may exhibit a temperature that differs as between at least two portion c614 (e.g., at least two semiannular portion) corresponding to respective heat transfer regions c612 and/or as between at least two heating fluid pathways c602 within a given portion c614 (e.g., within a semiannular portion) corresponding to a given heat transfer regions c612. Additionally, or in the alternative, the plurality of heat transfer regions c612 may exhibit a temperature that differs as between at least two heat transfer regions c612. For example, the engine-working fluid within the plurality of working-fluid pathways c110 corresponding to respective ones of the heat transfer regions c612 may exhibit a temperature that differ as between at least two heat transfer regions c612 and/or as between at least two working-fluid pathways c110 within a given heat transfer region c612.

In some embodiments, the temperature of a heating fluid such as a combustion gas may decrease as the heating fluid flows through the plurality of heating fluid pathways c602 and heat transfers from the heating fluid to the heat transfer regions c612 of the working-fluid body c108, such as from the heating fluid to engine-working fluid in the working-fluid pathways c110. However, with the plurality of heating fluid pathways c602 defining a spiral pathway, as shown for example in FIGs. 4.4.1A through 4.4.2B, respective ones of the plurality of heating fluid pathways c602 may encounter the respective ones of the plurality of heat transfer regions c612 in a differing sequence, which may depend at least in part on a circumferential location of an inlet c606 to the respective one of the plurality of heating fluid pathways c602.

For example, a first heating fluid pathway c618 may initially encounter the first heat transfer region c620, such as according to a first circumferential series, while a second heating fluid pathway c628 may encounter the first heat transfer region c620 last, such as according to a second circumferential series. Additionally, or in the alternative, a third heating fluid pathway c630 may encounter the first heat transfer region c620 third in series, such as according to a third circumferential series, and/or a fourth heating fluid pathway c632 may encounter the first heat transfer region c620 second in series, such as according to a fourth circumferential series.

As another example, the second heat transfer region c622 may have a thermally conductive relationship with the first heating fluid pathway c618 occurring second, such as according to the first circumferential series. The second heat transfer region c622 may have a thermally conductive relationship with the second heating fluid pathway c628 occurring first, such as according to the second circumferential series. The second heat transfer region c622 may have a thermally conductive relationship with the third heating fluid pathway c630 occurring last, such as according to the third circumferential series. The second heat transfer region c622 may have a thermally conductive relationship with the fourth heating fluid pathway c632 occurring third, such as according to the third circumferential series.

In some embodiments, a heat transfer region c622 may include a piston body c700 and/or a regenerator body c800, and/or a plurality of working-fluid pathways c110 fluidly communicating between the piston body c700 and/or the regenerator body c800. When a closed-cycle engine c002 includes a plurality of piston bodies, the piston assemblies may have a staggered or offset stroke cycle, such that a first piston and a second piston may be located at different points in respective stroke cycles upon least one point of the stroke cycle. For example, the first piston may be at a top point of the stroke cycle and the second piston may be at a bottom point of the stroke cycle. As another example, the first piston may be at a midpoint of the stroke cycle and the second piston may be at the top point or the bottom point of the stroke cycle. In some embodiments, engine-working fluid flowing from a piston body c700 (e.g., from a piston chamber c112) to a regenerator body c800 may exhibit a temperature that differs from engine-working fluid flowing in the opposite direction, from the regenerator body c800 to the piston body c700 (e.g., to the piston chamber c112).

The engine-working fluid flowing through the working-fluid pathways c110 may exhibit a temperature that depends at least in part on whether the engine-working fluid is flowing towards the regenerator body c800 (e.g., from the piston body c700) or towards the piston body c700 (e.g., from the regenerator body c800). For example, the temperature of the engine-working fluid may exhibit a first temperature when flowing towards the regenerator body c800 (e.g., from the piston body c700) and a second temperature when flowing towards the piston body c700 (e.g., from the regenerator body c800). In some embodiments the first temperature may be greater than the second temperature.

In some embodiments, the heating fluid such as combustion gas and the engine-working fluid may exhibit a temperature gradient that depends at least in part on whether the engine-working fluid is flowing towards the regenerator body c800 (e.g., from the piston body c700) or towards the piston body c700 (e.g., from the regenerator body c800). For example, a first temperature gradient may correspond to engine-working fluid flowing towards the regenerator body c800 (e.g., from the piston body c700) and a second temperature gradient may correspond to engine-working fluid flowing towards the piston body c700 (e.g., from the regenerator body c800). In some embodiments the first temperature gradient may be smaller than the second temperature gradient. In some embodiments the second temperature gradient may be greater than the first temperature gradient. For example, the first temperature gradient may be smaller than the second temperature gradient at least in part because of the temperature of the engine-working fluid flowing towards the regenerator body c800 (e.g., from the piston body c700) being greater than the temperature of engine-working fluid flowing towards the piston body c700 (e.g., from the regenerator body c800).

In some embodiments, the rate and/or quantity of heat transfer from the heating fluid to the engine-working fluid may depend on whether the engine-working fluid is flowing towards the regenerator body c800 (e.g., from the piston body c700) or towards the piston body c700 (e.g., from the regenerator body c800). For example, a first rate and/or quantity of heat transfer from the heating fluid to the engine-working fluid may correspond to engine-working fluid flowing towards the regenerator body c800 (e.g., from the piston body c700) and a second rate and/or quantity of heat transfer from the heating fluid to the engine-working fluid may correspond to engine-working fluid flowing towards the piston body c700 (e.g., from the regenerator body c800). In some embodiments the first rate and/or quantity of heat transfer may be smaller than the second rate and/or quantity of heat transfer. In other words, the second rate and/or quantity of heat transfer may be greater than the first rate and/or quantity of heat transfer. For example, the first rate and/or quantity of heat transfer may be smaller than the second rate and/or quantity of heat transfer at least in part because of the first temperature gradient corresponding to engine-working fluid flowing towards the regenerator body c800 (e.g., from the piston body c700) being smaller than the second temperature gradient corresponding to engine-working fluid flowing towards the piston body c700 (e.g., from the regenerator body c800).

In some embodiments, the heating efficiency of the heater body c100 may be enhanced at least in part by the second rate and/or quantity of heat transfer corresponding to engine-working fluid flowing towards the piston body c700 (e.g., from the regenerator body c800) being greater than the first rate and/or quantity of heat transfer corresponding to engine-working fluid flowing towards the regenerator body c800 (e.g., from the piston body c700). For example, in this way, a relatively larger proportion of the heat input by the heater body c100 may be applied to the engine-working fluid as the engine-working fluid flows towards the piston body c700 and thereby drives the piston downward, performing the downstroke portion of a stroke cycle. The heat input to the engine-working fluid during the downstroke may contribute to the downstroke (e.g., directly) by further heating and thereby further expanding the engine-working fluid. During the upstroke portion of the stroke cycle, a relatively smaller proportion of the heat input by the heater body c100 may be applied to the engine-working fluid, which may reduce or mitigate a potential for heat input to the engine-working fluid to counteract the upstroke by further heating and thereby expanding the engine-working fluid, providing an additional or alternative efficiency enhancement. With a relatively smaller proportion of the heat input by the heater body c100 applied to the engine-working fluid during the upstroke, a smaller portion of the heat input may be transferred to the regenerator body c800. While the regenerator body c800 may be configured to retain heat, at least some heat transferring to the regenerator body c800 may be lost. By transferring a larger proportion of the heat input of the heater body c100 to the engine-working fluid when flowing towards the piston body c700 (e.g., from the regenerator body c800), less heat energy may be lost to the regenerator body c800, thereby providing yet another additional or alternative efficiency enhancement.

In some embodiments, at least a portion of the heater body c100 (e.g., the hot-side heat exchanger body c600 and/or the working-fluid body c108) may be configured such that the temperature gradient between the temperature gradient between the heating fluid and the engine-working fluid is relatively small when the engine-working fluid is flowing towards the regenerator body c800. For example, the temperature gradient between the heating fluid and the engine-working fluid may be minimal when the engine-working fluid is flowing towards the regenerator body c800. With a relatively small and/or minimal temperature gradient, the rate and/or quantity of heat transfer to the engine-working fluid when flowing towards the regenerator body c800 may be minimal or nominal. Additionally, or in the alternative, at least a portion of the heater body c100 (e.g., the hot-side heat exchanger body c600 and/or the working-fluid body c108) may be configured such that the temperature gradient between the temperature gradient between the heating fluid and the engine-working fluid is relatively large when the engine-working fluid is flowing towards the piston body c700. For example, the temperature gradient between the heating fluid and the engine-working fluid may be maximal when the engine-working fluid is flowing towards the piston body c700. With a relatively large and/or maximal temperature gradient, the rate and/or quantity of heat transfer to the engine-working fluid when flowing towards the regenerator body c800 may be maximized.

In some embodiments, the rate and/or quantity of heat transferred from the heating fluid to the engine-working fluid may exhibit a ratio of heat transfer when flowing towards the piston body c700 to heat transfer when flowing towards the regenerator body c800 of from about 1:1 to about 100:1, such as from about 2:1 to about 100:1. such as from about 2:1 to about 10:1, such as from about 10:1 to about 20:1, such as from about 20:1 to about 50:1, or such as from about 50:1 to about 100:1. The ratio may be at least 1:1, such as at least 2:1, such as at least 10:1, such as at least 20:1, such as at least 50:1, or such as at least 90:1. The ratio may be less than 100:1, such as less than 90:1, such as less than 50:1, such as less than 20:1, such as less than 10:1, or such as less than 2:1.

As the heating fluid flows through the plurality of heating fluid pathways c602, heat may preferentially transfer to heat transfer regions c612 where the temperature gradient is larger or largest, thereby preferentially providing heat to the heat transfer regions where heat is needed more or most, for example, in favor of other heat transfer regions c612 with a lower or lowest temperature gradient. In some embodiments, heat may preferentially transfer to heat transfer regions (e.g., to engine-working fluid flowing through working-fluid pathways c110 therein) corresponding to a piston during a downstroke portion of the stroke cycle relative to heat transfer regions corresponding to a piston during an upstroke portion of the stoke cycle. Such preferential heat transfer may be accomplished at least in part by providing a relatively greater temperature gradient during the downstroke portion of the stroke cycle as described. With the plurality of heating fluid pathways c602 defining a spiral pathway, as shown for example in FIGs. 4.4.1A through 4.4.2B, the plurality of heating fluid pathways c602 may encounter all or a portion of the heat transfer regions c612, thereby allowing for preferential heat transfer to the heat transfer regions c612 where the temperature gradient is larger or largest.

In some embodiments, a hot-side heat exchanger body c600 may include a combustion chamber c102 disposed annularly about an axis c204. A hot-side heat exchanger body c600 may additionally include a conditioning conduit c122 circumferentially surrounding the combustion chamber c102. The conditioning conduit c122 may fluidly communicate with the combustion chamber c102 at a distal portion c202 of the combustion chamber c102.

In some embodiments, as shown for example in FIGs. 4.4.2A and 4.4.2B, and 4.4.3A and 4.4.3B, a hot-side heat exchanger body c600 may include a plurality of combustion fins c450 circumferentially spaced about the perimeter of the combustion chamber c102 (and/or disposed radially about the perimeter of the combustion chamber c102). The plurality of combustion fins c450 may occupy a radially or concentrically inward portion of the hot-side heat exchanger body c600. In some embodiments, a portion of the hot-side heat exchanger body c600 may define a second combustion chamber c448. The second combustion chamber c448 may include a plurality of combustion fins c450 circumferentially spaced about the perimeter of the combustion chamber c102 (and/or disposed radially about the perimeter of the combustion chamber c102). The plurality of combustion fins c450 may define at least a portion of the plurality of heating fluid pathways c602. Additionally, or in the alternative, the plurality of combustion fins c450 may define a plurality of combustion-gas pathways c422 fluidly communicating upstream with the combustion chamber c102 and downstream with a corresponding plurality of heating fluid pathways c602. Such combustion-gas pathways c422 may concurrently define at least a portion of the second combustion chamber c448 and at least a portion of the plurality of heating fluid pathways c602. The second combustion chamber c448 may allow combustion to take place at an air-to-fuel ratio closer to the stoichiometric air-to-fuel ratio.

The plurality of combustion fins c450 may be monolithically integrated with corresponding ones of a plurality of heating walls c616 that respectively define the plurality of heating fluid pathways c602. Additionally, or in the alternative, the combustion fins c450 and the heating walls c616 may be spaced apart from one another, such as with a gap or pathway between an upstream end of the heating walls c602 and a downstream end of the combustion fins c450. The portion of a heating fluid pathways c602 defined by the combustion fins c450 may be referred to as combustion-gas pathways c422. The combustion-gas pathways c422 may at least partially occupy the region of the hot-side heat exchanger c106 where combustion is configured to occur. Combustion may occur in the combustion-gas pathways c42 at least in part by the combustion fins c450 being heated to a sufficiently high temperature during operation to prevent flame quenching.

The plurality of heating fluid pathways c602 may fluidly communicate with the outlet plenum c608 at a corresponding plurality of circumferential locations about the hot-side heat exchanger body c600. By way of example, a first heating fluid pathway c618 may fluidly communicate with an outlet plenum c608 at a first circumferential location c634 about a circumferential axis of the hot-side heat exchanger c106. The first circumferential location c634 may be from about 0 to 30 degrees about the circumferential axis , such as from about 0 to 15 degrees on the circumferential axis. A second heating fluid pathway c628 may fluidly communicate with an outlet plenum c608 at a second circumferential location c636 about the circumferential axis. The second circumferential location c636 may be from about 90 to 120 degrees about the circumferential axis, such as from about 90 to 105 degrees about the circumferential axis. A third heating fluid pathway c630 may fluidly communicate with an outlet plenum c608 at a third circumferential location c638 about the circumferential axis. The third circumferential location c638 may be from about 180 to 210 degrees about the circumferential axis, such as from about 180 to 195 degrees about the circumferential axis c205. A fourth heating fluid pathway c632 may fluidly communicate with an outlet plenum c608 at a fourth circumferential location c640 about the circumferential axis c205. The fourth circumferential location c640 may be from about 270 to 300 degrees about the circumferential axis c205, such as from about 270 to 285 degrees about the circumferential axis c205.

A hot-side heat exchanger body c600 and/or a working-fluid body c108 may define any number of heat transfer regions c612. For example, heat exchanger body c600 and/or a working-fluid body c108 may define from 1 to 10 heat transfer regions c612, such as from 2 to 8 heat transfer regions c612, such as from 3 to 5 heat transfer regions. A plurality of heat transfer regions c612 may be circumferentially spaced about the hot-side heat exchanger body, such as at respective circumferential regions about the circumferential axis c205. As shown, four heat transfer regions c612 may be circumferentially spaced about the hot-side heat exchanger body c600. By way of example, a first heat transfer region c620 may be disposed about a first circumferential segment or sector about the circumferential axis c205 of the hot-side heat exchanger c106. The first circumferential segment or sector may be from about 270 to about 360 degrees about the circumferential axis c205 . A second heat transfer region c622 may be disposed about a second circumferential segment or sector about the circumferential axis c205. The second circumferential segment or sector may be from about 180 to about 270 degrees about the circumferential axis c205. A third heat transfer region c624 may be disposed about a third circumferential segment or sector about the circumferential axis c205. The third heat transfer region c624 may be from about 90 to about 180 degrees about the circumferential axis c205. A fourth heat transfer region c626 may be disposed about a fourth circumferential segment or sector about the circumferential axis c205. The fourth circumferential segment or sector may be from about 0 to about 90 degrees about the circumferential axis c205.

A hot-side heat exchanger body c600 and/or a hot-side heat exchanger c106 may include any number of heating fluid pathways c602. For example, a hot-side heat exchanger body c600 and/or a hot-side heat exchanger c106 may include from 1 to 96 heating fluid pathways c602, such as from 1 to 48 heating fluid pathways c602, such as from 4 to 32 heating fluid pathways c602, such as from 8 to 24 heating fluid pathways c602, such as from 12 to 20 heating fluid pathways c602, such as from 4 to 16 heating fluid pathways c602, such as from 4 to 8 heating fluid pathways c602, such as at least 4, at least 8, at least 16, or at least 32 heating fluid pathways c602.

In some embodiments, at least some of the plurality of heating fluid pathways c602 may have a substantially uniform cross-sectional width and/or a substantially uniform cross-sectional area. The substantially uniform cross-sectional width and/or a substantially uniform cross-sectional area of a heating fluid pathway c602 may be present along at least a portion of a length of the heating fluid pathway c602.

At least some of the heating fluid pathways c602 may define a spiral pathway spiraling annularly or semi-annularly around a longitudinal axis A 214. A spiral pathway may follow a spiral arc having any desired curvature. The spiral arc may continue along all or a portion of the spiral pathway defined by the heating fluid pathway c602. By way of example, a spiral and/or a spiral arc, such as in a spiral pathway, may correspond to at least a portion of an Archimedean spiral, a Cornu spiral, a Fermat's spiral, a hyperbolic spiral, a logarithmic spiral, a Fibonacchi spiral, an involute, or a squircular spiral, as well as combinations of these. As shown, in some embodiments the plurality of heating fluid pathways c602 may define a squircular spiral. At least a portion of a squircular spiral may include an arc corresponding to a squircle. The plurality of heating fluid pathways c602 may have an arc length of from 180 degrees to 1260 degrees, such as from 180 degrees to 450 degrees, such as from 315 degrees to 765 degrees, such as from 675 degrees to 1260 degrees.

In some embodiments, the plurality of heating fluid pathways c602 may include radially or concentrically adjacent pathways. Additionally, or in the alternative, the plurality of heating fluid pathways c602 may include one or more inverse pairs. For example, an inverse pair may include a pair of heating fluid pathways c602 fluidly communicating with the inlet plenum c604 (e.g., the combustion chamber c102) at opposite sides thereof. Additionally, or in the alternative, an inverse pair may include a pair of heating fluid pathways c602 fluidly communicating with the outlet plenum c608 (e.g., the recirculation annulus c208) at opposite sides thereof. By way of example, a first heating fluid pathway c618 and a third heating fluid pathway c630 may define an inverse pair. As another example, a second heating fluid pathway c628 and a fourth heating fluid pathway c632 may define an inverse pair. The inverse pair may follow a spiral arc having any desired curvature, such as a spiral arc inverse pair. For example, the heating fluid pathways c602 may define a plurality of spiral arc inverse pairs. In some embodiments, an inverse pair may include a parabolic spiral.

Now referring to FIG. 4.4.3A and 4.4.3B, further exemplary embodiments of a hot-side heat exchanger body c600 will be described. As shown, in some embodiments, a hot-side heat exchanger body c600 may have a plurality of heating walls c616 and/or combustion fins c450 that respectively include a plurality of conduction breaks c605. The conduction breaks c605 may be disposed radially or concentrically outward relative to the plurality of combustion fins c450, and/or radially or concentrically inward relative to the plurality of heating walls c616. The conduction breaks c605 may at least partially inhibit heat conduction from the plurality of combustion fins c450 to the plurality of heating walls c616. The conduction breaks c605 may impart a decrease in thermal conductivity relative to the thermal conductivity of the plurality of heating walls c616 and/or the plurality of combustion fins c450. The plurality of heating walls c616 may be configured an arranged in a spiral array or spiral arc, such as an annular or semiannular spiral array or spiral arc. Additionally, or in the alternative, the plurality of combustion fins c450 may be configured an arranged in a spiral array or spiral arc, such as an annular or semiannular spiral array or spiral arc. A combustion fins c450 and a corresponding heating wall c616 may follow a common trajectory. Additionally, or in the alternative, one or more combustion fins c450 may be staggered or offset from one or more heating walls c616. The condition breaks c605 may be configured to reduce heat conduction along the plurality of heating walls c616, such as along a radial axis or a circumferential axis. For example, the conduction breaks c450 may reduce heat conduction from a downstream portion of the combustion fins c450 to an upstream portion of the heating walls c616, and/or from an upstream portion of the plurality of heating walls c616 to a downstream portion of the plurality of heating walls c616. During operation, the combustion fins c450 may operate at a relatively higher temperature at least in part because of the reduced heat conduction attributable to the conduction breaks.

In some embodiments, a portion of the heating wall c616 upstream from a conduction break c605 may define a combustion fin c450. Additionally, or in the alternative, at least a portion of the heating wall c616 downstream from a conduction break c605 may define a heat transfer fin c607. The plurality of heating walls c616 may be formed of one or more materials, and/or may exhibit one or more material properties and/or structures. For example, the heat transfer fins c607 and the combustion fins c450 may differ from one another in respect of material composition, material properties, and/or material structure. In some embodiments, the heat transfer fins c607 may exhibit a greater thermal conductivity relative to the combustion fins c450. Additionally, or in the alternative, the combustion fins c450 may exhibit a greater heat capacity relative to the heat transfer fins c607. A desired thermal conductivity and/or heat capacity may be imparted to the combustion fins c450 and/or the heat transfer fins c607 at least in part by augmenting the material properties and/or structure during additive manufacturing. For example, the density and/or porosity may be augmented by modifying additive manufacturing parameters to impart desired thermodynamic properties, such as heat capacity properties and/or thermal conductivity properties. Density and/or porosity may be augmented by modifying the degree of consolidation of powder material, and/or by providing regions of unsintered or partially sintered regions of powder material. Additionally, or in the alternative, material structure may be augmented to impart desired thermodynamic properties. For example, a lattice structure, a porous medium, a cellular structure, or the like may be provided to impart desired heat capacity properties and/or thermal conductivity properties to the combustion fins c450 and/or the heat transfer fins c607.

The plurality of condition breaks c605 may be disposed circumferentially adjacent to one another at the respective ones of the plurality of heating walls c616. The location of the conduction breaks c605 at the respective heating walls c616 may define a circumferential array of conduction breaks c605. A plurality of combustion fins c450 may occupy a radially or concentrically inward position of the hot-side heat exchanger body c600 relative to the circumferential array of conduction breaks c605. At least a portion of the plurality of heating walls c616 may define a corresponding plurality of heat transfer fins c607. The heat transfer fins c616 may occupy a radially or concentrically outward position of the hot-side heat exchanger body c600 relative to the circumferential array of conduction breaks c605. For example, the radially or concentrically outward portion of the heating walls c616 may define the heat transfer fins c607.

The plurality of combustion fins c450 may define a corresponding plurality of combustion-gas pathways c422. The plurality of combustion fins c450 and/or the plurality of combustion-gas pathways c422 may be configured an arranged in a spiral array, such as a semiannular spiral array. The plurality of combustion fins c450 may spiral concentrically outward from a combustion chamber outlet c412 towards the corresponding conduction break c605. The plurality of combustion fins c450 may be arranged in an array of annular or semiannular substantially concentric spirals and/or substantially concentric spiral arcs relative to the longitudinal axis c204. The circumferential array of conduction breaks c605 may define a radially or concentrically outward perimeter of the plurality of combustion fins c450.

The plurality of heat transfer fins c607 may define a corresponding plurality of heating fluid pathways c602. The plurality of heat transfer fins c607 and/or the plurality of heating fluid pathways c602 may be configured an arranged in a spiral array, such as an annular or semiannular spiral array. The plurality of heat transfer fins c607 may spiral concentrically outward from the corresponding conduction breaks, transecting respective ones of the plurality of heat transfer regions c612. The circumferential array of conduction breaks c605 may define a radially or concentrically inward perimeter of the plurality of heating walls c616. Additionally, or alternatively, the circumferential array of conduction breaks c605 may define a radially or concentrically inward perimeter of the plurality of heat transfer regions c612. For example, the plurality of working-fluid bodies c108 and/or the plurality of working-fluid pathways c110 may occupy a region of the hot-side heat exchanger body c600 disposed radially or concentrically outward from the circumferential array of conduction breaks c605. Additionally, or in the alternative, the portion of the heat transfer fins c607 and/or the heating walls c616 that include working-fluid pathways c110 monolithically defined therein may occupy a region of the hot-side heat exchanger body c600 disposed radially or concentrically outward from the circumferential array of conduction breaks c605.

The plurality of heat transfer regions c612 may respectively include an array of working-fluid pathways c110, such as a plurality of arrays of working fluid pathways c110. The array of working fluid pathways c110 may be monolithically defined within respective ones of the plurality of heating walls c616 (e.g., within respective ones of the plurality of heat transfer fins c607). The circumferential array of conduction breaks c605 may define a radially or concentrically inward perimeter of the plurality of working-fluid pathways c110. Respective ones of the plurality of arrays of working-fluid pathways c110 may be disposed circumferentially adjacent to one another about the hot-side heat exchanger body c600. Respective ones of the plurality of arrays of working-fluid pathways c110 may define at least a portion of a working-fluid body c108. A plurality of working-fluid bodies c108 may be disposed circumferentially adjacent to one another about the hot-side heat exchanger body c600. The circumferential array of conduction breaks c605 may define a radially or concentrically inward perimeter of the plurality of working-fluid bodies c108.

In some embodiments, at least a portion of fuel combustion may take place within the plurality of combustion-gas pathways c422. Combustion that takes place within the combustion-gas pathways c422 may be attributable at least in part to the reduced heat conduction along the heating walls c616 provided by the conduction breaks c605. In some embodiments, the conduction breaks c605 may prevent or reduce a possibility that combustion may quenching prematurely. During operation, the combustion fins c450 may reach a sufficiently high temperature for stable combustion to take place within the plurality of combustion-gas pathways c422 without being prematurely quenched, such as by conductive heat transfer along the heating walls c616 and into the working-fluid bodies c108. The reduction in heat conduction provided by the conduction breaks c605 may reduce the potential that heat transfer to the working fluid-pathways c610 may decrease the temperature of the heating walls c616 to a level that prematurely quenches combustion.

The conduction breaks c605 may allow the combustion fins to remain at a sufficiently high temperature to allow fuel combustion to approach complete combustion within the plurality of combustion-gas pathways c422. The circumferential array of conduction breaks c605 may be located at a distance along the combustion-gas pathways c422 selected to allow sufficient time for complete combustion upon the combustion gas having encountered the conduction breaks c605. In this way, the conduction breaks may provide for reduced emissions attributable to complete combustion and a corresponding reduction of unburnt combustion products in exhaust gas. The plurality of heat transfer regions c612 and/or the arrays of working-fluid pathways c110 may be located substantially immediately downstream from the circumferential array of conduction breaks c605, thereby allowing the hot combustion gas to begin heating the working fluid in the working-fluid pathways substantially immediately upon complete combustion.

As used herein, the term "complete combustion" refers to a state of fuel combustion that yields carbon dioxide and water as the combustion products with an absence of hydrocarbons. Complete combustion may yield carbon monoxide as a combustion product on the order of parts-per-million, such as single-digit parts-per-million (ppm). For example, with complete combustion, carbon monoxide may be present as a combustion product in an amount of less than 10 ppm, such as less than 5 ppm, or such as less than 1 ppm. In some embodiments, complete combustion may be qualitatively characterized by a blue flame, whereas incomplete combustion may be qualitatively characterized by an orange flame.

In some embodiments, a heater body c100 may be configured to burn fuel in a lean combustion environment. As mentioned, a lean combustion environment may be characterized by an equivalence ratio (i.e., the ratio of the actual fuel-to-air ratio to the stoichiometric fuel-to-air ratio), such as an equivalence ratio of from about 0.5 to about 1.0, such as from about 0.6 to about 0.9, or from about 0.7 to about 0.8. A lean combustion environment may generate a relatively longer flame length, which may otherwise point to a relatively larger combustion zone as an approach for reducing the potential for premature quenching and/or to allow for complete combustion.

In some embodiments, a heater body c100 configured to allow combustion to take place within the combustion-gas pathways c422 not only allows for complete combustion; but additionally, or in the alternative, a heater body c100 configured to allow fuel combustion within the plurality of combustion-gas pathways c422 may allow a heater body c100 to be operated at a higher equivalence ratio, thereby improving fuel efficiency and/or heating efficiency, while reducing emissions. Additionally, or in the alternative, the heater body c100 may be configured with a relatively smaller combustion chamber c102, thereby reducing material costs and weight.

In some embodiments, a combustion zone may occupy a position that includes the combustion-gas pathways c422. For example, the combustion-gas pathways c422 may define at least a portion of a second combustion zone c407 as described herein. The circumferential array of conduction breaks c605 may define a radially or concentrically outward perimeter of the second combustion zone c407. In some embodiments, the array of conduction breaks c605 may define an array of burner gaps c421. Such burner gaps may be configured as described herein. Additionally, or in the alternative, a hot-side heat exchanger body c600 may include both an array of conduction breaks c605 and an array of burner gaps c421.

The combustion fins c450 may be spatially separated from the heating walls c616 (e.g., the heat transfer fins c607), such that a conduction break c605 may include a physical gap or space defined by the spatial separation between a combustion fin c450 and heating wall c616 (e.g., a heat transfer fin c607). Additionally, or in the alternative, a conduction break c605 may include a change in a material property, a change in material composition, and/or a change in structure relative to the combustion fin c450 and/or the heat transfer fin c607 that provides a reduction in heat conduction relative to the combustion fin c450 and/or the heat transfer fin c607. For example, a conduction break c605 may include a structure such as a mesh, a three-dimensional lattice, a porous medium, or unsintered or partially sintered powder material, as well as combinations of these.

As shown in FIG. 4.4.3B, The plurality of heating walls c616 and/or combustion fins c450 may have a plurality of openings c451 (e.g., pore-like openings) that fluidly communicate with the plurality of combustion-gas pathways c422 of the hot-side heat exchanger c106 and define the hot-zone fuel injectors c413. In some embodiments, at least a portion of the hot-zone fuel pathways c415 may define a vaporization heat exchanger c417 that provides a heat transfer relationship between a combustion flame c426 and fuel within the hot-zone fuel pathways c415, and or between hot combustion gas c426 fuel within the hot-zone fuel pathways c415. The vaporization heat exchanger c417 may be effective to vaporize fuel (e.g., liquid fuel), such as when the fuel is within the hot-zone fuel pathways c415 and/or the hot-zone fuel injectors c413, or as the fuel is discharged from the openings (e.g., the pore-like openings) of the hot-zone fuel injectors c413.

Now referring to FIG. 4.4.4, exemplary methods of heating a plurality of heat transfer regions will be described. The exemplary methods of heating a plurality of heat transfer regions may include, for example, methods of heating one or more working-fluid bodies c108. For example, exemplary methods may be performed in connection with operation of a hot-side heat exchanger body c600, a working-fluid body c108, a heater body c100, and/or a closed-cycle engine c002 as described herein. As shown in FIG. 4.4.4, an exemplary method c650 may include, at block c652, flowing a first heat transfer fluid through a plurality of heating fluid pathways c602 fluidly communicating with an inlet plenum c604. Respective ones of the plurality of heating fluid pathways c602 may define a spiral pathway. The exemplary method c650 may include, at block c654, transferring heat from the first heat transfer fluid to a plurality of heat transfer regions c612. Respective ones of the plurality of heat transfer regions c612 may have a heat transfer relationship with a corresponding semiannular portion of the plurality of heating fluid pathways c602.

In some embodiments, transferring heat from the first heat transfer fluid to the plurality of heat transfer regions, at block 654, may include transferring heat from the plurality of heating fluid pathways c602 to at least some of the plurality of heat transfer regions c612 in circumferential series. The circumferential series of a respective one of the plurality of heating fluid pathways c612 may have a sequence depending at least in part on a circumferential location of an inlet c606 to the respective one of the plurality of heating fluid pathways c602.

## Chapter 4.5 - Working-Fluid Bodies

Now referring to FIGs. 4.5.1A through 4.5.1C, 4.5.2, 4.5.3, and 4.5.4A through 4.5.4E exemplary working-fluid bodies c108 will be described. The presently disclosed working-fluid bodies c108 may define part of a heater body c100 and/or a closed-cycle engine c002. For example, a working-fluid body c108 may define at least a portion of a monolithic body or a monolithic body-segment. Such monolithic body or monolithic body-segment may define at least a portion of the heater body c100 and/or the closed-cycle engine c002. Additionally, or in the alternative, the presently disclosed working-fluid bodies c108 may be provided as a separate component, whether for use in connection with a heater body c100, a closed-cycle engine c002, or any other setting whether related or unrelated to a heater body c100 or a closed-cycle engine c002. At least a portion of the working-fluid bodies c108 may define a one or more piston bodies c700, one or more regenerator bodies c800, and/or one or more working-fluid pathway c110. It will be appreciated that a heater body c100 may include any desired number of working-fluid bodies c108, including any desired number of piston bodies c700, regenerator bodies c800, and/or working-fluid pathways c110. For example, a heater body c100 may include one or more working-fluid bodies c108, and/or a working-fluid body c108 may include one or more piston bodies c700, regenerator bodies c800, and/or working-fluid pathways c110.

A working-fluid body c108 may define a first portion of a monolithic body and the piston body c700 may defines a second portion of the monolithic body. Alternatively, the piston body c700 may define a monolithic body-segment operably coupled or operably couplable to the working-fluid body c108. Additionally, or in the alternative, a regenerator body c800 may a second portion of the monolithic body, or the regenerator body c800 may define a second monolithic body-segment operably coupled or operably couplable to the piston body 700 and/or the working-fluid body c108.

An exemplary working-fluid body c108 is shown in FIGs. 4.5.1A through 4.5.1C. As shown, the working-fluid body c108 may include a plurality of piston bodies c700, a plurality of regenerator bodies c800, and/or a plurality of working-fluid pathways c110. The working-fluid body c108 shown depicts only a portion of the piston bodies c700 and only a portion of the regenerator bodies c800. The remaining portions of the piston bodies c700 and/or the remaining portions of the regenerator bodies c800 may be provided in other monolithic bodies and/or monolithic body-segments, which may be operably couplable to one another and/or to the working-fluid body c108 as shown. The perspective view shown in FIG. 4.5.1A and the top view shown in FIG. 4.5.1B depict the working-fluid body c108 with surrounding portions of the hot-side heat exchanger body c600 omitted so as to reveal details of the working-fluid body c108. For example, portions of the hot-side heat exchanger body c600 are omitted from these views to show the working-fluid pathways c110. However, as shown, for example, in FIG. 4.5.1C and FIG. 4.5.2, in some embodiments a hot-side heat exchanger body c600 may surround or overlap with the working-fluid body c108. For example, as shown in FIG. 4.5.2, the hot-side heat exchanger body c600 may include a plurality of heating fluid pathways c602 and the working-fluid body c108 may include a plurality of working-fluid pathways c110, and the plurality of heating fluid pathways c602 and working-fluid pathways c110 may be interleaved with one another, such as to provide a thermally conductive relationship therebetween.

As shown, an exemplary working-fluid body c108 may include a plurality of heat transfer regions c612. Respective ones of the plurality of heat transfer regions may include a plurality of working-fluid pathways c110 fluidly communicating between a heat input region and a heat extraction region. The heat input region may include a piston body c700 and the heat extraction region may include a regenerator body c800.

At least some of the plurality of working-fluid pathways c110 may be radially or concentrically adjacent and/or axially adjacent to one another. In some embodiments, a heating fluid pathway c602 may be disposed between radially or concentrically adjacent and/or axially adjacent working-fluid pathways c110. Additionally, or in the alternative, at least some of the working-fluid pathways c110 may be semiannular to one another. For example, a working-fluid body c108 may include a plurality of radially or concentrically adjacent semiannular spiral pathways and/or a plurality of axially adjacent semiannular spiral pathways.

The plurality of working-fluid pathways c110 may be disposed axially adjacent to corresponding respective ones of the plurality of heating fluid pathways c602, such as radially or concentrically adjacent spiral heating fluid pathways c602. Respective ones of the plurality of working-fluid pathways c110 may have a thermally conductive relationship with corresponding respective ones of the plurality of heating fluid pathways c602.

An exemplary working-fluid body c108 may include a first heat transfer region c620, a second heat transfer region c622, a third heat transfer region c624, and/or a fourth heat transfer region c626. The first heat transfer region c620 may include a first plurality of working-fluid pathways c701. The first plurality of working-fluid pathways c701 may include semiannular radially or concentrically adjacent and/or axially adjacent spiral pathways. The second heat transfer region c622 may include a second plurality of working-fluid pathways c702. The second plurality of working-fluid pathways c702 may include semiannular radially or concentrically adjacent and/or axially adjacent spiral pathways. The third heat transfer region c624 may include a third plurality of working-fluid pathways c703. The third plurality of working-fluid pathways c703 may include semiannular radially or concentrically adjacent and/or axially adjacent spiral pathways. The fourth heat transfer region c626 may include a fourth plurality of working-fluid pathways c704. The fourth plurality of working-fluid pathways c704 may include semiannular radially or concentrically adjacent and/or axially adjacent spiral pathways.

The first heat transfer region c620 may be circumferentially adjacent to the second heat transfer region c622. The second heat transfer region c622 may be circumferentially adjacent to the third heat transfer region c624. The third heat transfer region c624 may be circumferentially adjacent to the fourth heat transfer region c626. The fourth heat transfer region c626 may be circumferentially adjacent to the first heat transfer region c620.

The first plurality of working-fluid pathways c701 may be circumferentially adjacent to the second plurality of working-fluid pathways c702. The second plurality of working-fluid pathways c702 may be circumferentially adjacent to the third plurality of working-fluid pathways c703. The third plurality of working-fluid pathways c703 may be circumferentially adjacent to the fourth plurality of working-fluid pathways c704. The fourth plurality of working-fluid pathways c704 may be circumferentially adjacent to the first plurality of working-fluid pathways c701.

In some embodiments, respective ones of the plurality of working-fluid pathways c110 may include circumferentially adjacent working-fluid pathways c110. The circumferentially adjacent working-fluid pathways may circumferentially initiate and/or circumferentially terminate a spiral array c706 of working-fluid pathways c110. The spiral array c706 may diverge radially or concentrically outward. The spiral array c706 may transition from radially or concentrically inward to radially or concentrically midward and/or from radially or concentrically midward to radially or concentrically outward, as the spiral array c706 passes from one heat transfer region to the next.

For example, as shown in FIG. 4.5.1B, respective ones of the first plurality of working-fluid pathways c701 may be circumferentially adjacent to respective ones of the second plurality of working-fluid pathways c702. The first plurality of working-fluid pathways c701 may include a radially or concentrically inward working-fluid pathway c708 circumferentially adjacent to a radially midward working-fluid pathway c710 of the second plurality of working-fluid pathways c704. The radially or concentrically inward working-fluid pathway c708 may circumferentially initiate a spiral array c706 of working-fluid pathways. The first plurality of working-fluid pathways c701 may additionally or alternatively include a radially midward working-fluid pathway c712 circumferentially adjacent to a radially or concentrically outward working-fluid pathway c714 of the second plurality of working-fluid pathways c702. The first plurality of working-fluid pathways c701 may additionally or alternatively include a radially or concentrically outward working-fluid pathway c716. The radially or concentrically outward working-fluid pathway c716 may circumferentially terminate a spiral array c706 of working-fluid pathways c110 defined by at least some of the plurality of working-fluid pathways.

Referring again to FIG. 4.5.1A, in some embodiments, the plurality of working-fluid pathways c110 may include circumferentially adjacent working-fluid pathways with circumferentially adjacent counter-current pathways and/or circumferentially adjacent co-current pathways. For example, as shown, working-fluid flowing from the piston body c700 to the regenerator body c800 may flow clockwise through a first portion c718 of the working-fluid pathways c110 and counter-clockwise through a second portion c720 of the working-fluid pathways c110. Conversely, working-fluid flowing from the regenerator body c800 to the piston body c700 may flow counter-clockwise through the first portion c718 of the working-fluid pathways c110 and clockwise through the second portion c720 of the working-fluid pathways c110. As engine-working fluid alternatingly flows between the respective piston bodies c700 and regenerator bodies c800, the circumferentially adjacent working-fluid pathways may provide an array of alternating counter-current pathways and co-current pathways relative to the plurality of heating fluid pathways c602. The flow of engine-working fluid through the first plurality of working-fluid pathways c701 may define a plurality of counter-current working-fluid pathways and a plurality of co-current working-fluid pathways. Respective ones of the first plurality of counter-current working-fluid pathways may be circumferentially adjacent to respective ones of the first plurality of co-current working-fluid pathways. The co-current and counter-current flow of the engine-working fluid relative to the heating fluid pathway c602 may alternate as engine-working fluid alternatingly flows between the respective piston bodies c700 and the respective regenerator bodies c800.

Still referring to FIGs. 4.5.1A through 4.5.4.5.1C, a heat transfer region c612 may include one or more heat extraction regions, which may fluidly communicate with one or more corresponding regenerator bodies c800. A heat transfer region c612 may additionally or alternatively include one or more heat input regions, which may fluidly communicate with one or more corresponding piston bodies c700. A first regenerator body c722 may correspond to a first regenerator body c800 and a second heat extraction c724 may correspond to a second regenerator body. A first plurality of working-fluid pathways c701 may fluidly communicating between the heat input region c726 and the first heat extraction region c722. Additionally, or in the alternative, a second plurality of working-fluid pathways c702 may fluidly communicating between the heat input region c726 and the second heat extraction region c724. The heat extraction regions (e.g., the first heat extraction region c722 and/or the second heat extraction region c724) may be circumferentially adjacent to a corresponding heat input region. One or more heat extrication regions (e.g., a first heat extraction region c722 and/or a second heat extraction region c724) may circumferentially surround at least a portion of the heat input region c726.

In some embodiments, at least some of the plurality of working-fluid pathways c110 may have a substantially uniform cross-sectional width and/or a substantially uniform cross-sectional area. The substantially uniform cross-sectional width and/or a substantially uniform cross-sectional area of a working-fluid pathways c110 may be present along at least a portion of a length of the working-fluid pathways c110.

At least some of the working-fluid pathways c110 may define a spiral pathway spiraling annularly or semi-annularly around a longitudinal axis A 214. A spiral pathway may follow a spiral arc having any desired curvature. The spiral arc may continue along all or a portion of the spiral pathway defined by the working-fluid pathways c110. By way of example, the spiral or spiral arc may correspond to at least a portion of an Archimedean spiral, a Cornu spiral, a Fermat's spiral, a hyperbolic spiral, a logarithmic spiral, a Fibonacchi spiral, an involute, or a squircular spiral, as well as combinations of these. As shown, in some embodiments the plurality of working-fluid pathways c110 may define a squircular spiral. At least a portion of a squircular spiral may include an arc corresponding to a squircle. The plurality of working-fluid pathways c110 may have an arc length of from 180 degrees to 1260 degrees, such as from 180 degrees to 450 degrees, such as from 315 degrees to 765 degrees, such as from 675 degrees to 1260 degrees.

In some embodiments, the plurality of working-fluid pathways c110 may include radially or concentrically adjacent pathways. Additionally, or in the alternative, the plurality of working-fluid pathways c110 may include one or more inverse pairs. For example, an inverse pair may include a pair of working-fluid pathways c110 respectively fluidly communicating with a corresponding heat extraction region (e.g., a regenerator body c800) at opposite sides of the working-fluid body c108. Additionally, or in the alternative, an inverse pair may include a pair of working-fluid pathways c110 respectively fluidly communicating with a corresponding heat input region (e.g., a piston body c700) at opposite sides of the working-fluid body c108. The inverse pair may follow a spiral arc having any desired curvature, such as a spiral arc inverse pair. For example, the heating fluid pathways c602 may define a plurality of spiral arc inverse pairs. In some embodiments, an inverse pair may include a parabolic spiral.

Referring again to FIG. 4.5.2, a working-fluid body c108 may include a plurality of working-fluid pathways c110 interleaved with a plurality of heating fluid pathways c602 of a hot-side heat exchanger body c600, such as to provide a thermally conductive relationship therebetween. Respective ones of the plurality of working-fluid pathways c110 may be disposed alternatingly adjacent to respective ones of the plurality of heating fluid pathways c602. In some embodiments, a portion of the working-fluid body c108 defining at least some of the working-fluid pathways c110 may protrude into adjacent respective ones of the plurality of heating fluid pathways c602. Additionally, or in the alternative, at least a portion of the hot-side heat exchanger body c600 defining at least some of the heating fluid pathways c602 may protrude into adjacent respective ones of the plurality of working-fluid pathways c110. For example, a portion of the working-fluid body c108 and/or a portion of the hot-side heat exchanger body c600 defining alternatingly adjacent working-fluid pathways c110 and heating fluid pathways c602 may protrude into such working-fluid pathways c110 and/or heating fluid pathways c602. The protruding portion of the working-fluid body c108 and/or hot-side heat exchanger body c600 may protrude in any direction towards an adjacent working-fluid pathways c110 and/or heating fluid pathways c602. For example, the working-fluid body c108 and/or hot-side heat exchanger body c600 may protrude radially or concentrically inward and/or radially or concentrically outward.

The protruding portions of the working-fluid body c108 and/or a portion of the hot-side heat exchanger body c600 may define conduction-enhancing protuberances c728. The conduction-enhancing protuberances c728 may enhance conduction between the heating fluid and the engine-working fluid, for example, by disrupting a boundary layer between the heating fluid and the heating fluid pathways c602 and/or by a disrupting boundary layer between the engine-working fluid and the working-fluid pathways c110. Respective ones of the plurality of conduction-enhancing protuberances c728 may be defined at least in part by a portion of the working-fluid body c108 corresponding to respective ones of a plurality of working-fluid pathways c110 protruding into adjacent respective ones of a plurality of heating fluid pathways c602. Additionally, or in the alternative, respective ones of the plurality of conduction-enhancing protuberances c728 may be defined at least in part by a portion of the hot-side heat exchanger body c600 corresponding to respective ones of a plurality of heating fluid pathways c602 protruding into adjacent respective ones of the plurality of working-fluid pathways c110.

Exemplary conduction-enhancing protuberances may include any one or more of a combination of protuberant features having a variety of shapes and configurations, including nodules, loops, hooks, bumps, burls, clots, lumps, knobs, projections, protrusions, swells, enlargements, outgrowths, accretions, blisters, juts, and the like. These conduction-attenuating protuberances c728 occur in an ordered, semi-ordered, random, or semi-random fashion. However, the particular configuration, arrangement, or orientation of the conduction-enhancing protuberances c728 may be selectively controlled or modified by adjusting the configuration or arrangement of at least a portion of the working-fluid body c108 and/or hot-side heat exchanger body c600, such as the configuration or arrangement of at least a portion of the working-fluid pathways c110 and/or heating fluid pathways c602.

Now referring to FIG. 4.5.3, another exemplary cross-sectional view of a working-fluid body c108 will be described. In some embodiments, the cross-sectional view shown in FIG. 4.5.3 may correspond to an axially proximal position of a heater body c100 and/or closed-cycle engine c002 relative to the cross-sectional view shown in FIG. 4.5.1B. For example, FIG. 4.5.1B may represent a top cross-sectional view of an exemplary working-fluid body c108 and/or FIG. 4.5.3 may represent a bottom cross-sectional view of an exemplary working-fluid body c108. As shown in FIG. 4.5.3, a plurality of piston bodies c700 and a plurality of regenerator bodies c800 may be circumferentially spaced about a longitudinal axis c204 of the working-fluid body c108. The plurality of piston bodies c700 and regenerator bodies c800 may be paired with one another, for example, with a plurality of working-fluid pathways c110 fluidly communication between respective piston body c700 and regenerator body c800 pairs. For example, a first plurality of working-fluid pathways c701 may fluidly communicate between a first piston chamber c112 defined by a first piston body c700 and a first regenerator chamber c802 defined by a first regenerator body c800. A second plurality of working-fluid pathways c702 may fluidly communicate between a second piston chamber c112 defined by a second piston body c700 and a second regenerator chamber c802 defined by a second regenerator body c800. A third plurality of working-fluid pathways c703 may fluidly communicate between a third piston chamber c112 defined by a third piston body c700 and a third regenerator chamber c802 defined by a third regenerator body c800. A fourth plurality of working-fluid pathways c704 may fluidly communicate between a fourth piston chamber c112 defined by a fourth piston body c700 and a fourth regenerator chamber c802 defined by a fourth regenerator body c800.

A flow direction of engine-working fluid flowing through a plurality of working-fluid pathways c110 may be counter-current or co-current relative to a flow direction c732 of heating fluid flowing through the heating fluid pathways c602 adjacent to such working-fluid pathways c110. For example, as shown, engine-working fluid flowing from a piston chamber c112 towards a regenerator chamber c802 may be counter-current to the flow direction c732 of the heating fluid flowing through adjacent heating fluid pathways c602. Engine-working fluid flowing from a regenerator chamber c802 towards a piston chamber c112 may be co-current to the flow direction c732 of the heating fluid flowing through adjacent heating fluid pathways c602. Alternatively, in other embodiments, engine-working fluid may be counter-current to the flow direction c732 of the heating fluid when flowing from a piston chamber c112 towards a regenerator chamber c802 and co-current when flowing from a regenerator chamber c802 towards a piston chamber c112.

In a general sense, heat transfer from a hot fluid to a cold fluid may be greater during counter-current flow relative to co-current flow. For example, with co-current flow, the temperature of the cold fluid may be always less than the temperature of the hot fluid, and as such, heat transfer may be restricted by the discharge temperature of the cold fluid. Conversely, with counter-currently flow, heat transfer is not restricted by the discharge temperature of the cold fluid, which may allow for a greater quantity of heat transfer. On the other hand, with co-current flow, the temperature gradient between a hot fluid and a cold fluid may be greater at an initial zone of heat transfer prior to achieving thermal equilibrium, relative to the temperature gradient at an initial zone of heat transfer with counter-current flow. As such, faster heat transfer may be achieved during non-equilibrium conditions during co-current flow.

In some embodiments, it may be advantageous for heating fluid to flow co-currently relative to engine-working fluid when the engine-working fluid flows from the regenerator body c800 to the piston body c700. For example, the temperature gradient between the engine-working fluid and the heating fluid may be greater when the engine-working fluid flows from the regenerator body c800 towards the piston body c700 relative to engine-working fluid flowing in the opposite direction. Such temperature gradient may be greater, for example, because of heat losses as heat transfers from the engine-working fluid to the regenerator body c800 and back to the engine-working fluid. With a greater temperature gradient existing when engine-working fluid flows from the regenerator body c800 towards the piston body c700, such temperature gradient may facilitate a more rapid heat transfer from the heating fluid to the engine-working fluid. In particular, such temperature gradient may facilitate a more rapid heat transfer to the engine-working fluid as the engine-working fluid flows into the piston body c800, thereby further expanding the engine-working fluid and contributing to the downstroke (e.g., directly) of the piston within the piston chamber. Additionally, or in the alternative, with heating fluid flowing counter-current relative to engine-working fluid flowing from the piston body c700 to the regenerator body c800, the rate of heat transfer from the heating fluid to the engine-working fluid may be less than when the engine-working fluid flows in the opposite direction. As such, relatively less heat transfer may be imparted to the engine-working fluid when flowing into the regenerator body c800 the engine-working fluid flows from the regenerator body c800, further contributing to efficiency of the heater body c100, such as when inputting heat to the closed-cycle engine c002.

Now referring to FIGs. 4.5.4A through 4.5.4E, another exemplary embodiment of a working-fluid body c108 will be described. As shown, in some embodiments, at least a portion of the working-fluid body c108 may define at least a portion of a heating chamber body c998. Additionally, or in the alternative, at least a portion of the hot-side heat exchanger body c600 may define at least a portion of the heating chamber body c998. The heating chamber body c998 may surround at least a portion of the plurality of working-fluid pathways c110. For example, the heating chamber body c998 may define a working chamber c734. The plurality of working-fluid pathways c110 may be disposed within the working chamber c734. In some embodiments, the heating chamber body c998 may provide a working chamber c734 instead of or in place of at least a portion of the working-fluid pathways c602 described, for example, with reference to FIG. 4.4.1A. However, in some embodiments a plurality of working-fluid pathways c602 may be provided together with a heating chamber body c998 and/or working chamber c734.

In some embodiments, at least a portion of the plurality of working-fluid pathways c110 may define a tube array c736. One or more tube arrays may be disposed within the heating chamber body (e.g., within the working chamber c734), and the heating chamber body c998 may surround the one or more tube arrays c736. Exemplary tube arrays c736 are shown in FIGs. 4.5.4B through 4.5.4E.

The heating chamber body c998 may fluidly communicating with one or more heating fluid inlets c606 (e.g., FIG. 4.4.1A) and one or more heating fluid outlets c610 (e.g., FIG. 4.4.1A). The heating chamber body c998 may define at least a portion of a recirculation pathway c104. The one or more heating fluid inlets c606 may fluidly communicate with a combustion chamber c102 and the one or more heating fluid outlet c610 may fluidly communicate with a recirculation annulus c208.

Any suitable engine-working fluid may be utilized in accordance with the present disclosure. In exemplary embodiments, the engine-working fluid may include a gas, such as an inert gas. For example, a noble gas, such as helium may be utilized as an engine-working fluid. Exemplary engine-working fluids preferably are inert, such that they generally do not participate in chemical reactions such as oxidation within the environment of the working-fluid body c108. Exemplary noble gasses include monoatomic gases such as helium, neon, argon, krypton, or xenon, as well as combinations of these. In some embodiments, an engine-working fluid may include air, oxygen, nitrogen, or carbon dioxide, as well as combinations of these.

Now turning to FIGs. 4.5.5A-4.5.5D, exemplary thermal expansion joints c135 of a heater body c100 will be described. A heater body c100 may include one or more thermal expansion joints c135 at any one or more desired locations of the heater body c100. A thermal expansion joint c135 may include an expansion gap c149 configured to allow for thermal expansion, and/or a difference in thermal expansion, as between respective sides of the thermal expansion joint c135. In some embodiments, a thermal expansion joint c135 may include an expansion gap c149 that provides for a hairpin configuration, as shown, for example, in FIG. 4.5.5B. Such hairpin configuration may provide an extended thermal conduction pathway as between respective sides of the thermal expansion joint c135. In some embodiments, the expansion gap c147 may include an insulating material c129, such as a radiative-heat shield radiative-heat shield c129A (FIGs. 4.1.8A-4.1.8G), to provide an improved view factor and corresponding reduction in radiative heat transfer as between respective sides of the thermal expansion joint c135.

As shown, in some embodiments, a heater body c100 may include one or more combustor-thermal expansion joints c135A. A combustor-thermal expansion joint c135A may allow for thermal expansion, and/or a difference in thermal expansion, as between at least a portion of a combustor body c400 and one or more adjacent regions of the heater body c100. For example, a combustor-thermal expansion joint c135A may allow for thermal expansion, and/or a difference in thermal expansion, as between a combustor body c400 and a hot-side heat exchanger body c600 (such as between a combustion chamber c102 and a hot-side heat exchanger c106). Additionally, or in the alternative, a combustor-thermal expansion joint c135A may allow for thermal expansion, and/or a difference in thermal expansion, as between a combustor body c400 and a working-fluid body c108 (such as between a combustion chamber c102 and an array of working-fluid pathways c110).

A combustor-thermal expansion joint c135A may be oriented concentric with a combustion chamber c102 and/or a longitudinal axis c204 of the heater body c100, as shown, for example in FIGs. 4.5.5A, 4.5.5C and 4.5.5D. The combustor-thermal expansion joint c135A may circumferentially surround at least a portion of the combustor body c400. For example, as shown in FIGs. 4.5.5A and 4.5.5B, an expansion gap c149 may be disposed within at least a portion of a hot-side heater body c600. Additionally, or in the alternative, the combustor-thermal expansion joint c135A may be at least partially axially offset from the combustion chamber c102, as shown. Such axial offset may be configured to provide an extended thermal conductive pathway as between the combustor body c400 and the hot-side heat exchanger body c600.

In some embodiments, a heater body c100 may include one or more heat transfer region-thermal expansion joints c135B. A heat transfer region-thermal expansion joint c135B may allow for thermal expansion, and/or a difference in thermal expansion, as between respective heat transfer regions c612 of a heater body c100. For example, a heat transfer region-thermal expansion joint c135B may allow for thermal expansion, and/or a difference in thermal expansion, as between a working-fluid body c108 and a regenerator body c800, and/or as between a piston body c700 and a regenerator body c800. As shown in FIGs. 4.5.5C and 4.5.5D, a heat transfer region-thermal expansion joint c135B may be disposed between a regenerator body c800 of a first heat transfer region c620 and a working-fluid body c108 of a second heat transfer region c622 (and/or between a regenerator body c800 of a first heat transfer region c620 and a piston body c700 of a second heat transfer region c622).

Additionally, or in the alternative, a heat transfer region-thermal expansion joint c135B may be disposed between a heat input region c601 of a working-fluid body c108 and a heat extraction region c603 of a working fluid body c108, such as between a heat input region c601 of a first heat transfer region c620, and a heat extraction region c603 of a second heat transfer region c622. Such as heat input region c601 includes working-fluid pathways c110 on a side of the working-fluid body c108 proximal to the piston body c700, such as including a portion of the working-fluid pathways c110 proximal to corresponding piston chamber apertures c111. Such a heat extraction region c603 includes working-fluid pathways c110 on a side of the working-fluid body proximal to the regenerator body c800, such as including a portion of the working-fluid pathways c110 proximal to corresponding regenerator apertures c113.

Now referring to FIG. 4.5.6 exemplary methods of heating an engine-working fluid will be described. The exemplary methods of heating an engine-working fluid may include, for example, methods of heating one or more working-fluid bodies c108. For example, exemplary methods may be performed in connection with operation of a hot-side heat exchanger body c600, a working-fluid body c108, a heater body c100, and/or a closed-cycle engine c002 as described herein. As shown, an exemplary method c750 may include, at block c752 flowing an engine-working fluid across respective ones of a plurality of heat transfer regions c612. The plurality of heat transfer regions c612 may include a plurality of working-fluid pathways c110 fluidly communicating between a heat input region such as a piston body c700 and a heat extraction region such as a regenerator c800. The engine-working fluid may flow through the plurality of working-fluid pathways c110, such as alternatingly between the heat input region such as the piston body c700 and the heat extraction region such as the regenerator c800. At block c754, the exemplary method may include transferring heat from a heating source to the engine-working fluid. The plurality of working-fluid pathways c110 may have a heat transfer relationship with the heating source. The heating source may be a heating fluid, such as combustion gas, which may be heated using a heater body c100.

An exemplary method c750 may include alternatingly flowing the engine-working fluid from the heat input region to the heat extraction region, and from the heat extraction region to the heat input region. For example, the method c750 may include alternatingly flowing through a first plurality of working-fluid pathways c701, a first portion of the engine-working fluid from the heat input region to the heat extraction region and from the heat extraction region to the heat input region. In some embodiments, the first portion of the engine-working fluid may alternatingly flow from the heat input region to a first heat extraction region and from the first heat extraction region to the heat input region. Additionally, or in the alternative, the method c750 may include alternatingly flowing through a second plurality of working-fluid pathways c702, a second portion of the engine-working fluid from the heat input region to the heat extraction region and from the heat extraction region to the heat input region. In some embodiments, the second portion of the engine-working fluid may alternatingly flow from the heat input region to a second heat extraction region and from the second heat extraction region to the heat input region. In another embodiment, the first portion of the engine-working fluid may alternatingly flow between a first heat input region and a first heat extraction region and the second portion of the engine-working fluid may alternatingly flow between a second heat input region to a second heat extraction region.

Chapter 4.6 - Recirculation Eductor

Now referring to FIGs. 4.6.1A through 4.6.1C, 4.6.2A through 4.6.2C, and 4.6.3A and 4.6.3B, exemplary eductor bodies c300 will be described. The presently disclosed eductor bodies c300 may define part of a heater body c100 and/or a closed-cycle engine c002. For example, an eductor body c300 may define at least a portion of a monolithic body or a monolithic body-segment. Such monolithic body or monolithic body-segment may define at least a portion of the heater body c100 and/or the closed-cycle engine c002. Additionally, or in the alternative, the presently disclosed eductor bodies c300 may be provided as a separate component, whether for use in connection with a heater body c100, a closed-cycle engine c002, or any other setting whether related or unrelated to a heater body c100 or a closed-cycle engine c002.

FIGs. 4.6.1A through 4.6.1C show one embodiment of an eductor body c300. FIGs. 4.6.2A through 4.6.2C show another embodiment of an eductor body c300. FIGs. 4.6.3A and 4.6.3B show yet another embodiment of an eductor body c300. An exemplary eductor body c300 may be a recirculation eductor body, such as for use in a heater body c100 or a closed-cycle engine c002 as presently disclosed. However, it will be appreciated that the presently disclosed eductor bodies c300 may be utilized in other settings, all of which are within the scope of the present disclosure.

As shown, an eductor body c300 may include a motive pathway c302 and an eduction pathway c304 fluidly communicating with an annulus c306. The motive pathway c302 may be adjacent to the eduction pathway c304. The motive pathway c302 and/or the eduction pathway c304 may be oriented oblique to the annulus c306. The motive pathway c302 may define at least a portion of an intake air pathway c118. The eduction pathway c304 may define at least a portion of a recirculation pathway c104. The annulus c306 may define at least a portion of a combustor body c400. For example, the annulus c306 may include a conditioning conduit c122 and/or a combustion chamber c102.

A motive pathway c302 may provide a jet of motive fluid configured to entrain and/or accelerate eduction fluid in a nearby eduction pathway c304. For example, a motive pathway may provide a jet of intake air configured to entrain and/or accelerate nearby combustion gas in a recirculation pathway c104. Such entrainment and/or acceleration of combustion gas may contribution at least in part to the circulation of combustion gas through the recirculation pathway c104.

An eductor body c300 may include a plurality of motive pathways c302 and/or a plurality of eduction pathways c304, as shown, for example, in FIGs. 4.6.1A and 4.6.2A. Additionally, or in the alternative, an eductor body c300 may include one motive pathway c302 and/or one eduction pathway c304 as shown in FIG. 4.6.3A. In some embodiments, an eductor body c300 may include one motive pathway c302 and a plurality of eduction pathways c304. In other embodiments, an eductor body c300 may include a plurality of motive pathways c302 and one eduction pathway c304. The motive pathways c302 and eduction pathways c304 may have any desired geometry, configuration, and/or arrangement. As shown, slit-like motive pathways c302 and slit-like eduction pathways c304 are shown. The motive pathways c304 and/or eduction pathways c304 may have a polygonal cross-sectional configuration (e.g., trigonal, quadrilateral, pentagonal, etc.) and/or or a curvilinear cross-sectional configuration (e.g., circular, ellipses, etc.). The motive pathways c302 and eduction pathways c304 may be configured and arranged adjacent one another and/or coannularly to one another.

In some embodiments, a motive pathway c302 may have a cross-sectional width and/or area that converges approaching the annulus c306. The converging cross-sectional width and/or area may define a motive pathway nozzle c310. An axial height of a motive pathway may exceed a radial width of the motive pathway. Additionally, or in the alternative, an axial height of a motive pathway nozzle c310 may exceed a radial width of the motive pathway nozzle c310. Still further, an axial height of an eduction pathway may exceed a radial width of the eduction pathway.

As shown in FIGs. 4.6.1A and 4.6.2A, a plurality of motive pathways c302 and/or a plurality of eduction pathways c304 may be disposed radially and circumferentially spaced about an eductor body c300. The plurality of motive pathways c302 and/or the plurality of eduction pathways c304 may be oriented oblique to the annulus c306. A plurality of motive pathways c302 and a plurality of eduction pathways c304 may be configured and arranged as eductive pathway couplets. An eductive pathway couplet may include at least one motive pathway operably actable upon at least one eduction pathway. An eductive pathway couplet may additionally include one or more exhaust pathways and/or one or more eduction nozzles as described herein. A motive pathway and an adjacent eduction pathway may define an eductive pathway couplet. Additionally, or in the alternative, a motive pathway surrounded by one or more eduction pathways may define an eduction pathway couplet. By way of example, as shown in FIGs. 4.6.1B and 4.6.2B, a first motive pathway c302a and a first eduction pathway c304a may define an eductive pathway couplet. Additionally, or in the alternative, a second motive pathway c302b and the first eduction pathway c304a may define an eductive pathway couplet. Further, an eductive pathway couplet may be defined additionally or alternatively by the second motive pathway c302b, the first eduction pathway c304a and the second eduction pathway c304b. A plurality of eductive pathway couplets may be disposed radially and circumferentially spaced about an eductor body c300.

An eductor body c300 may additionally include one or more exhaust pathways c308. Respective ones of the one or more exhaust pathways c308 may fluidly communicating with at least one eduction pathway c306. For example, a plurality of exhaust pathways c308 may be disposed radially and circumferentially spaced about the eductor body c300. The plurality of exhaust pathways c308 may fluidly communicate with respective ones of the plurality of eduction pathways c306. Fluid communication between an eduction pathway c306 and an exhaust pathway c308 may be upstream from fluid communication between the eduction pathway c306 and a motive pathway c302. The one or more exhaust pathways c308 may allow combustion gas to exit a recirculation pathway c104. For example, the one or more exhaust pathways may fluidly communicate with an exhaust annulus c218 and/or a heat recuperator c124 of a heater body c100.

An eductive pathway couplet, or a plurality of eductive pathway couplets may be oriented oblique to the annulus c306. For example, a motive pathway c302 and/or an eductive pathway c302 may be oriented oblique to the annulus c306. In some embodiments, a plurality of obliquely oriented eductive pathway couplets may be oriented with respect to a tangent sweep. The oblique orientation may be with respect to an outward annular wall c312 of the annulus c306 and/or an inward annular wall c314 of the annulus c306. The outward annular wall c312 of the annulus c306 may be an outward annular conditioning conduit wall c408 and/or the inward annular wall c314 of the annulus c306 may be an inward annular conditioning conduit wall c410. In some embodiments, a radially leading motive pathway wall c316 may be oriented oblique to the annulus c306. Additionally, or in the alternative, a radially trailing motive pathway wall c318 may be oriented oblique to the annulus c306. In some embodiments, a radially leading eduction pathway wall c320 may be oriented oblique to the annulus c306. Additionally, or in the alternative, a radially trailing eduction pathway wall c322 may be oriented oblique to the annulus c306.

The oblique orientation of an eductive pathway couplet may be situated at an angle relative to tangent to the annulus c306, such as relative to tangent to an outward annular wall c312 and/or relative to tangent to an inward annular wall c314. The oblique orientation may include at least one aspect of an eductive pathway couplet oriented relative to tangent to the annulus c306, such as at an oblique angle corresponding to tangent and/or an oblique angle departing from tangent. The oblique orientation may be selected so as to allow motive fluid such as intake air jetted through the motive pathway nozzle c310 to entrain and/or accelerate eduction fluid such as combustion gas in a corresponding eduction pathway c304. Additionally, or in the alternative, the oblique orientation may be selected so as to induce swirling flow in the annulus c306. For example, motive fluid jetted into the annulus c306 and/or eduction fluid entrained or accelerated by the motive fluid may induce swirling flow in the annulus c306.

By way of example, the oblique orientation may include one or more aspects of an eductive pathway couplet oriented oblique to the annulus, such as from -60 degrees to 60 degrees of tangential to the annulus, such as from -45 degrees to 45 degrees of tangential to the annulus, such as from -20 degrees to 20 degrees of tangential to the annulus, such as from -10 degrees to 10 degrees of tangential to the annulus, such as from -5 degrees to 5 degrees of tangential to the annulus, or such as from -1 degrees to 1 degrees of tangential to the annulus. The one or more aspects of the eductive pathway couplet oriented oblique to the annulus may include one or more aspects of a motive pathway c302 (e.g., a radially leading motive pathway wall c316 and/or a radially trailing motive pathway wall c318) and/or one or more aspects of an eduction pathway c304 (e.g., a radially leading eduction pathway wall c320 and/or a radially trailing eduction pathway wall c322).

A plurality of eductive pathway couplets oriented with respect to a tangent sweep may include a radially leading edge (e.g., a radially leading motive pathway wall c316 and/or a radially leading eduction pathway wall c320) oriented tangent to the annulus. Additionally, or in the alternative, the tangent sweep may include a radially trailing edge (e.g., a radially trailing motive pathway wall c318 and/or a radially trailing eduction pathway wall c322) oriented tangent to the annulus. The radially leading edge (e.g., a radially leading motive pathway wall c316 and/or a radially leading eduction pathway wall c320) may be separated from the radially trailing edge (e.g., a radially trailing motive pathway wall c318 and/or a radially trailing eduction pathway wall c322) by an arc length. The arc length may be a quotient obtained by dividing a quantity of eductive pathway couplets by the circumferential degrees of the annulus encompassed by the plurality of eductive pathway couplets. For example, the arc length may be from 5 degrees to 45 degrees, such as from 15 to 35 degrees, or such as from 20 to 30 degrees.

Still referring, for example, to FIGs. 4.4.1B and 4.4.2B, in some embodiments, an eduction pathway c304 may be defined at least in part by a motive pathway body c324, and a motive pathway c302 may be disposed within at least a portion of the motive pathway body c324. For example, respective ones of a plurality of eduction pathways c304 may be defined at least in part by corresponding respective ones of a plurality of motive pathway bodies c324. Respective ones of a plurality of motive pathways c302 may be disposed within corresponding respective ones of the plurality of motive pathway bodies c324.

The one or more motive pathways c302 may fluidly communicate with corresponding eduction pathways c304 at the annulus c306 and/or upstream from the annulus c306. For example, as shown in FIG. 4.6.1B, an eductor body c300 may include a plurality of motive pathways c302 fluidly communicating at the annulus c306 with corresponding ones of a plurality of eduction pathways c304. Additionally, or in the alternative, as shown, for example in FIG. 4.6.2B, an eductor body c300 may include a plurality of motive pathways c302 fluidly communicating with corresponding ones of a plurality of eduction pathways c304 upstream from the annulus c306. In some embodiments, some of the motive pathways c302 may fluidly communicate with one or more corresponding eduction pathways c304 at the annulus c306 and some of the motive pathways c302 may fluidly communicate with one or more corresponding eduction pathways c304 upstream from the annulus c306.

As shown in FIG. 4.4.2B, in some embodiments, an eductive pathway couplet may include an eduction nozzle c326. The eduction nozzle c326 may be disposed downstream from the motive pathway nozzle c310, such as between the motive pathway nozzle c310 and the annulus c306. The eduction nozzle c326 may entrain and/or accelerate eduction fluid from the eduction pathway c304 and/or motive fluid from the motive pathway c302. The eduction nozzle c326 may include a throat c328 and an exit c330. The exit of the eduction nozzle c326 may include a radially leading exit wall c332 and/or a radially trailing exit wall c334. The eduction nozzle c326 (e.g., the radially leading exit wall c332 and/or a radially trailing exit wall c334) may be oriented oblique to the annulus c306. The oblique orientation of the eduction nozzle c326 may be situated at an angle relative to tangent to the annulus c306, such as relative to tangent to an outward annular wall c312 and/or relative to tangent to an inward annular wall c314. The oblique orientation may include at least one aspect of the eduction nozzle c326 oriented relative to tangent to the annulus c306, such as at an oblique angle corresponding to tangent and/or an oblique angle departing from tangent. The oblique orientation may be selected so as to allow motive fluid (e.g., intake air) jetted through the eduction nozzle c326 to entrain and/or accelerate eduction fluid (e.g., combustion gas). Additionally, or in the alternative, the oblique orientation may be selected so as to induce swirling flow in the annulus c306. For example, motive fluid jetted into the annulus c306 and/or eduction fluid entrained or accelerated by the motive fluid may induce swirling flow in the annulus c306.

By way of example, the oblique orientation may include one or more aspects of an eduction nozzle c326 oriented oblique to the annulus c306, such as from -60 degrees to 60 degrees of tangential to the annulus, such as from -45 degrees to 45 degrees of tangential to the annulus, such as from -20 degrees to 20 degrees of tangential to the annulus, such as from -10 degrees to 10 degrees of tangential to the annulus, such as from -5 degrees to 5 degrees of tangential to the annulus, or such as from -1 degrees to 1 degrees of tangential to the annulus. The one or more aspects of the eduction nozzle c326 oriented oblique to the annulus may include the radially leading exit wall c332 and/or a radially trailing exit wall c334.

In some embodiments, as shown for example in FIG. 4.6.1B, an eductor body c300 may include an exhaust pathway c308 having a spiral configuration. The spiral configuration of the exhaust pathway c308 may diverge radially or concentrically outward relative to the annulus c306. A plurality of exhaust pathways c308 may be disposed radially and circumferentially spaced about the eductor body c300. The plurality of exhaust pathways c308 may fluidly communicate with at least one of a plurality of eduction pathways c304.

One or more exhaust pathways c308 and/or one or more eduction pathways c304 may be configured and arranged such that from 0% to 100% of the eduction fluid flowing through the eduction pathway may flow into the annulus c306. For example, from about 10% to about 90% of the eduction fluid flowing through the eduction pathway c304 may flow into the annulus c306, and a remainder of the eduction fluid flowing through the eduction pathway c304 may flow into the exhaust pathway c308. The eduction fluid flowing from the eduction pathway into the annulus may be from about 30% to about 70% of the eduction fluid, or such as about 40% to about 60% of the eduction fluid. The eduction fluid flowing from the eduction pathway c304 into the exhaust pathway c308 may be from about 10% to about 90% of the eduction fluid, such as from about 30% to about 70% of the eduction fluid, or such as from about 40% to about 60% of the eduction fluid.

In some embodiments, a plurality of exhaust pathways c308 may respectively traverse one or more the motive pathway bodies c324. For example, an exhaust pathway may traverse a radially leading eduction pathway wall c320 and/or a radially trailing eduction pathway wall c322. An exhaust pathway c308 may traverse an axially distal portion of the motive pathway body c324.

Now referring to FIGs. 4.6.4A and 4.6.4B, in some embodiments, the open area of one or more portions of an eductor body c300 may be adjustable. As shown, an eductor body c300 may include an aperture mechanism c336 configured to adjust a cross-sectional dimension of an open area of one or more eduction pathways c304 and/or a cross-sectional dimension of an open area of one or more exhaust pathways c308. Adjustments to such open area or areas may vary the amount of exhaust gas being discharged from the heater body c100 (e.g. through an exhaust pathway c120) and/or the amount of combustion gas circulating through the heater body (e.g., through the recirculation pathway c104).

The open area of the one or more eduction pathways c304 and/or the open area of one or more exhaust pathways c308 may be varied based at least in part on one or more operating parameters of the heater body c100 and/or the closed-cycle engine c002. For example, the open area of one or more one or more eduction pathways c304 and/or exhaust pathways c308 may be varied as between startup conditions and steady-state operating conditions. Additionally, or in the alternative, the open area of one or more one or more eduction pathways c304 and/or exhaust pathways c308 may be varied based at least in part on heat output by the heater body c100 and/or power output by the close-cycle engine c002.

The aperture mechanism c336 may include one or more apertures c338. The aperture mechanism c336 may be rotatably pivotable so as to move the one or more apertures c338 across one or more corresponding eduction pathways c304 and/or exhaust pathways c308 so as to modulate the open area of such one or more pathways. For example, the aperture mechanism c336 may be rotatably pivotable by operation of an actuator c340 operably configured to actuate the aperture mechanism c336. Suitable actuators c340 may include a servomotor, a piezoelectric actuator, a shape-memory actuator, or the like.

In some embodiments, the aperture mechanism c336 may be operable based at least in part on a temperature of at least a portion of the heater body c100 (e.g., at least a portion of the eductor body c300) and/or combustion gas flowing through at least a portion of the heater body c100 (e.g., through at least a portion of the eductor body c300). Such a temperature may be determined at least in part using a temperature sensor c342. A controller 344 may be operably configured to provide a control command to the actuator c340. One or more control commands may be based at least in part on any one or more operating parameters associated with a heater body c100 and/or a closed-cycle engine c002. For example, the controller c344 may be operably configured to provide a control command based at least in part on a temperature having been determined by the temperature sensor c342. Exemplary controllers c344, including the structure and operation thereof are further described herein, for example with reference to FIG. 5.1.3.

In some embodiments, the actuator c340 may be thermally sensitive, such as a piezoelectric actuator or a shape-memory actuator. Such a thermally sensitive actuator c340 may have a heat transfer relationship with at least a portion of the eductor body c300 and/or combustion gas flowing therethrough, and the thermally sensitive actuator c340 may be configured and arranged to rotatably pivot the aperture mechanism c336 responsive to a change in temperature of the actuator as a result of such heat transfer relationship.

Additionally, or in the alternative, in some embodiments the aperture mechanism c336 may at least in part define an actuator c340. For example, as shown in FIGs. 4.6.4C and 4.6.4D, a thermally sensitive actuator c340 may be configured and arranged to open an aperture c338 responsive a first temperature resulting from a first heat input (e.g., Q1) and/or to close an aperture c338 responsive to a second temperature resulting from a second heat input (e.g., Q2). The thermally sensitive actuator c340 may modulate between an open position and a closed position responsive to changing temperatures, such as from the first temperature to the second temperature. Additionally, or in the alternative, as show in FIGs. 4.6.4E and 4.6.4F, a thermally sensitive actuator may be configured to close an aperture c338 responsive a first temperature resulting from a first heat input (e.g., Q1) and/or to open an aperture c338 responsive to a second temperature resulting from a second heat input (e.g., Q2). The actuator may be configured to modulate between a closed position and an open position responsive to changing temperatures, such as from the first temperature to the second temperature. In some embodiments, the thermally sensitive actuator c340 may be integrated into the aperture mechanism c336. Additionally, or in the alternative, the aperture mechanism c336 may be formed at least in part from a shape-memory material that has thermally sensitive properties, such as a shape-memory alloy.

The aperture mechanism c336 may be operable to modulate the open area of the eduction pathways c304 and/or the exhaust pathways c308 from 0% to 100%, such as from 20% to 80%, such as from 40% to 60%, such as from 40% to 100%, or such as from 60% to 100%.

Now turning to FIG. 4.6.5, exemplary methods of circulating fluid such as combustion gas will be described. The exemplary methods of circulating fluid may include, for example, methods of recirculating combustion gas. For example, exemplary methods may be performed in connection with operation of a recirculation eductor c116, a heater body c100, and/or a closed-cycle engine c002 as described herein. As shown, an exemplary method c350 may include, at block c352, jetting a motive fluid into an annulus c306 through a motive pathway c302 defined at least in part by an eductor body c300. The motive pathway c302 and/or the eduction pathway c304 may fluidly communicate with the annulus c306 and oriented oblique to the annulus. The exemplary method c350 may include, at block c354, accelerating an entraining an eductor fluid using the motive fluid, the eductor fluid flowing into the annulus c306 from an eduction pathway c304 defined at least in part by the eductor body c300. The eduction pathway c304 may be adjacent to the motive pathway c302.

**Chapter 4.7 - Heat Recuperator**

Now referring to FIGs. 4.7.1A through 4.7.1C, exemplary heat recuperator bodies c500 will be described. The presently disclosed heat recuperator bodies c500 may define part of a heater body c100 and/or a closed-cycle engine c002. For example, a heat recuperator body c500 may define at least a portion of a monolithic body or a monolithic body-segment. Such monolithic body or monolithic body-segment may define at least a portion of the heater body c100 and/or the closed-cycle engine c002. Additionally, or in the alternative, the presently disclosed heat recuperator bodies c500 may be provided as a separate component, whether for use in connection with a heater body c100, a closed-cycle engine c002, or any other setting whether related or unrelated to a heater body c100 or a closed-cycle engine c002.

An exemplary heat recuperator body c500 may define a heat exchanger, such as a heat recuperator c124. It will be appreciated that the term recuperator is used by way of example, and not to be limiting, and that the presently disclosed heat recuperator bodies c500 may be utilized or implemented in connection with any heat exchange system, all of which are within the scope of the present disclosure. As shown in FIGs. 4.7.1A through 4.7.1C, an exemplary heat recuperator body c500 may be disposed annularly about an axis c204. The heat recuperator body c500 may include a plurality of first pathways c502 spiraling annularly about the axis c204 and/or a plurality of second pathways c504 spiraling annularly about the axis c204. The plurality of first pathways c502 may include intake air pathways c118 and/or may collectively define at least a portion of an intake air pathway c118. For example, the intake air pathway or pathways c118 may define at least a portion of a pathway for supplying intake air to a heater body c100. The plurality of second pathways c504 may include exhaust pathways c120 and/or may collectively define at least a portion of an exhaust pathway c120. For example, the exhaust pathway or pathways c120 may define at least a portion of a pathway for exhausting exhaust gas from a heater body c100. Respective ones of the plurality of second pathways c504 may be alternatingly adjacent to respective ones of the plurality of first pathways c502. Respective ones of the plurality of first pathways c502 may have a thermally conductive relationship with corresponding respective ones of the plurality of second pathways c504. By way of example, heat may transfer from a second fluid such as exhaust gas flowing through the plurality of second pathways c504 to a first fluid such as intake air flowing through the plurality of first pathways c502.

The plurality of first pathways c502 may fluidly communicate with a first intake annulus c508, such as an intake air annulus c216 as shown for example in FIGs. 4.1.3A through 4.1.3C. The fluid communication between the first intake annulus c508 and the plurality of first pathways c502 may be provided at an upstream portion of the plurality of first pathways c502, such as a radially or concentrically outward portion of the plurality of first pathways c502. The plurality of first pathways c502 may additionally or alternatively fluidly communicate with a first discharge annulus c510, such as a motive annulus c228 as shown for example in FIGs. 4.1.3A through 4.1.3C. The fluid communication between the first discharge annulus c510 and the plurality of first pathways c502 may be provided at a downstream portion of the plurality of first pathways c502, such as a radially or concentrically inward portion of the plurality of first pathways c502. The plurality of first pathways c502 may include a plurality of first pathway-inlets c512 fluidly communicating annularly about the first intake annulus, and a plurality of first pathway-outlets c514 fluidly communicating annularly about the first discharge annulus c510.

In some embodiments, a heat recuperator body c500 may include a first intake annulus c508 (e.g., an intake air annulus c216) disposed annularly about an axis c204 and/or a first discharge annulus c510 (e.g., a motive annulus c228) disposed annularly about an axis c204. For example, the first intake annulus c508 and/or the first discharge annulus c510 may define at least a portion of the heat recuperator body c500. Additionally, or in the alternative, the first intake annulus c508 and/or the first discharge annulus c510 may define at least a portion of a monolithic body or a monolithic body-segment operably couplable or operably coupled to the heat recuperator body c500.

The plurality of second pathways c504 may fluidly communicate with a second intake annulus c516, such as a recirculation annulus c208 and/or a recirculation eductor c116 as shown for example in FIGs. 4.1.3A through 4.1.3C. The fluid communication between the second intake annulus c516 and the plurality of second pathways c504 may be provided at an upstream portion of the plurality of second pathways c504, such as a radially or concentrically inward portion of the plurality of second pathways c504. The plurality of second pathways c502 may additionally or alternatively fluidly communicate with a second discharge annulus c518, such as an exhaust annulus c218 as shown for example in FIGs. 4.1.3A through 4.1.3C. The fluid communication between the second discharge annulus c518 and the plurality of second pathways c504 may be provided at a downstream portion of the plurality of second pathways c504, such as a radially or concentrically outward portion of the plurality of second pathways c504. The plurality of second pathways c504 may include a plurality of second pathway-inlets c520 fluidly communicating annularly about the second intake annulus c516, and a plurality of second pathway-outlets c522 fluidly communicating annularly about the second discharge annulus c518.

In some embodiments, a heat recuperator body c500 may include a second intake annulus c516 (e.g., a recirculation annulus c208 and/or a recirculation eductor c116) disposed annularly about an axis c204 and/or a second discharge annulus c518 (e.g., an exhaust annulus c218) disposed annularly about an axis c204. For example, the second intake annulus c516 and/or the second discharge annulus c518 may define at least a portion of the heat recuperator body c500. Additionally, or in the alternative, the second intake annulus c516 and/or the second discharge annulus c518 may define at least a portion of a monolithic body or a monolithic body-segment operably couplable or operably coupled to the heat recuperator body c500.

At least a portion of the first intake annulus c508 may be located axially adjacent to at least a portion of the second discharge annulus c518. For example, as shown in FIG. 4.7.1C, an axially proximal portion of the first intake annulus c508 may be adjacent to an axially distal a portion of the second discharge annulus c518. At least a portion of the first intake annulus c508 may circumferentially surround at least a portion of the plurality of first pathways c502. Additionally, or in the alternative, at least a portion of the first intake annulus c508 may be located axially adjacent to at least a portion of the plurality of first pathways c502. For example, an axially proximal portion of the first intake annulus c508 may be adjacent to an axially distal a portion of the plurality of first pathways c502. Further additionally, or in the alternative, as shown for example in FIG. 4.1.3C, at least a portion of the plurality of first pathways c502 may circumferentially surround at least a portion of the first discharge annulus c518.

At least a portion of the plurality of first pathways c502 may spiral radially or concentrically inward from the first intake annulus c508 to the first discharge annulus c510. Additionally, or in the alternative, at least a portion of the plurality of first pathways c502 may traverse axially proximally, such as from an axially distal region of the heat recuperator body c500 to an axially medial or axially proximal region of the heat recuperator body c500, or from an axially medial region of the heat recuperator body c500 to an axially proximal region of the heat recuperator body c500.

The plurality of first pathway-inlets c512 may be disposed axially adjacent to at least a portion of the plurality of first pathways c502. The plurality of first pathway-inlets c512 may fluidly communicate radially and/or axially about the first intake annulus c508. For example, the plurality of first pathway-inlets c512 may traverse in an axially proximal direction and/or in a radially or concentrically inward direction from the first intake annulus c508. In some embodiments, the plurality of first pathway-inlets c512 may include a plurality of intake vanes c513.

The plurality of first pathway-outlets c514 may be disposed axially adjacent to at least a portion of the plurality of first pathways c502. The plurality of first pathway-outlets c514 may fluidly communicate radially and/or axially about the first discharge annulus c510. For example, the plurality of first pathway-outlets c514 may traverse in an axially proximal direction and/or in a radially or concentrically inward direction towards first discharge annulus c510. In some embodiments, the plurality of first pathway-outlets c514 may include a plurality of outlet vanes c511.

At least a portion of the second intake annulus c516 may be located axially adjacent to at least a portion of the second discharge annulus c518. For example, as shown in FIG. 4.7.1C, an axially distal a portion of the second intake annulus c516 may be adjacent to an axially proximal portion of the second discharge annulus c518. At least a portion of the second discharge annulus c518 may circumferentially surround at least a portion of the plurality of second pathways c504. Additionally, or in the alternative, at least a portion of the second intake annulus c516 may be located axially adjacent to at least a portion of the plurality of second pathways c504. For example, an axially proximal portion of the plurality of second pathways c504 may be adjacent to an axially distal a portion of the second intake annulus c516. Further additionally, or in the alternative, at least a portion of the plurality of second pathways c504 may circumferentially surround at least a portion of the second intake annulus c516.

At least a portion of the plurality of second pathways c504 may spiral radially or concentrically outward from the second intake annulus c516 to the second discharge annulus c518. Additionally, or in the alternative, at least a portion of the plurality of second pathways c504 may traverse axially distally, such as from an axially proximal region of the heat recuperator body c500 to an axially medial or axially distal region of the heat recuperator body c500, or from an axially medial region of the heat recuperator body c500 to an axially distal region of the heat recuperator body c500.

The plurality of second pathway-inlets c520 may be disposed axially adjacent to at least a portion of the plurality of second pathways c504. The plurality of second pathway-inlets c520 may fluidly communicate radially and/or axially about the second intake annulus c516. For example, the plurality of second pathway-inlets may traverse in an axially distal direction and/or in a radially or concentrically outward direction from the second intake annulus c516. In some embodiments, the plurality of second pathway-inlets c520 may include a plurality of intake vanes c521.

The plurality of second pathway-outlets c522 may be disposed radially or concentrically adjacent to at least a portion of the plurality of second pathways c502. For example, the plurality of second pathway-outlets c522 the plurality of second pathways c512 may be arranged in an alternating sequence of substantially concentric spirals or substantially concentric spiral arcs. The plurality of second pathway-outlets c522 may fluidly communicate radially and/or axially about the second discharge annulus c518. For example, the plurality of second pathway-outlets c522 may traverse in an axially distal direction and/or in a radially or concentrically outward direction towards second discharge annulus c518. In some embodiments, the plurality of second pathway-outlets c522 may include a plurality of outlet vanes c523.

In some embodiments, as shown for example in FIG. 4.1.3C, at least a portion of the first intake annulus c508 may circumferentially surround at least a portion of the second discharge annulus c518. Alternatively, or in addition, at least a portion of the second discharge annulus c518 may circumferentially surround at least a portion of the first intake annulus c508. The plurality of first pathways may spiral radially or concentrically outward from the first intake annulus c508 to the first discharge annulus c510. The plurality second pathways c504 may spiral radially or concentrically inward from the second intake annulus c516 to the second discharge annulus c518. At least a portion of the second intake annulus c516 may circumferentially surround at least a portion of the first discharge annulus c510. At least a portion of the first discharge annulus c510 may circumferentially surround at least a portion of the second intake annulus c516.

In some embodiments, a heat recuperator body c500 may be configured and arranged such that the plurality of first pathways c502 may receive a first fluid flow that in a counter-current flow direction relative to a second fluid flowing through the plurality of second pathways c504. The plurality of second pathways c504 may receive a second fluid flow in a counter-current flow direction relative to the first fluid flowing through the plurality of first pathways c502. Alternatively, a heat recuperator body c500 may be configured and arranged such that the plurality of first pathways c502 may receive a first fluid flow that in a co-current flow direction relative to a second fluid flowing through the plurality of second pathways c504. The plurality of second pathways c504 may receive a second fluid flow in a co-current flow direction relative to the first fluid flowing through the plurality of first pathways c502.

At a portion of the plurality of first pathways c502 and/or at least a portion of the plurality of second pathways c504 may define a spiral pathway spiraling annularly or semi-annularly around a longitudinal axis A 214. A spiral pathway may follow a spiral arc having any desired curvature. The spiral arc may continue along all or a portion of the spiral pathway defined by the plurality of first pathways c502 and/or the plurality of second pathways c504. By way of example, the spiral or spiral arc may correspond to at least a portion of an Archimedean spiral, a Cornu spiral, a Fermat's spiral, a hyperbolic spiral, a logarithmic spiral, a Fibonacchi spiral, an involute, or a squircular spiral, as well as combinations of these. As shown, in some embodiments the plurality of first pathways c502 and/or the plurality of second pathways c504 may define a squircular spiral. At least a portion of a squircular spiral may include an arc corresponding to a squircle. The plurality of first pathways c502 and/or the plurality of second pathways c504 may have an arc length of from 60 degrees to 1260 degrees, such as from 60 degrees to 750 degrees, such as from 80 degrees to 190 degrees, such as from 170 degrees to 370 degrees, such as from 350 degrees to 730 degrees, such as from 180 degrees to 450 degrees, such as from 315 degrees to 765 degrees, or such as from 675 degrees to 1260 degrees.

In some embodiments, the plurality of first pathways c502 and the plurality of second pathways c504 may include circumferentially adjacent pathways. For example, respective ones of the plurality of first pathways c502 may be circumferentially adjacent to corresponding respective ones of the plurality of second pathways c504.

In some embodiments, the plurality of first pathways c502 and/or the plurality of second pathways c504 may include a cross-sectional profile defining a narrow slit. The narrow slit may have a height to width ratio of from 10:1 to 100:1, such as from 25:1 to 75:1, or such as from 40:1 to 60:1.

Now turning to FIG. 4.7.2, exemplary methods of transferring heat between fluid streams will be described. The exemplary methods of transferring heat between fluid streams may include, for example, methods of recuperating heat from a fluid stream such as an exhaust gas stream. For example, exemplary methods may be performed in connection with operation of a heat recuperator body c500, a heater body c100, and/or a closed-cycle engine c002 as described herein. As shown in FIG. 4.7.2, an exemplary method c550 may include, at block c552, flowing a first heat transfer fluid from a first intake annulus c508 to a first discharge annulus c510. The first intake annulus c508 and/or the first discharge annulus c510 may be disposed annularly about an axis c204. The first heat transfer fluid may flow through a plurality of first pathways c502 spiraling annularly about the axis c204 to the first discharge annulus c510. The plurality of first pathways c502 may include a plurality of first pathway-inlets c512 fluidly communicating annularly about the first intake annulus c508. The plurality of first pathways c502 may additionally or alternatively include a plurality of first pathway-outlets c514 fluidly communicating annularly about the first discharge annulus c510.

An exemplary method c550 may include, at block c554, flowing a second heat transfer fluid from a second intake annulus c516 to a second discharge annulus c518. The second intake annulus c516 and/or the second discharge annulus c518 may be disposed annularly about the axis c204. The second heat transfer fluid may flow through a plurality of second pathways c504 spiraling annularly about the axis c204 to the second discharge annulus c518. Respective ones of the plurality of second pathways c504 may be disposed alternatingly adjacent to respective ones of the plurality of first pathways c502. The plurality of second pathways c504 may include a plurality of second pathway-inlets c520 fluidly communicating annularly about the second intake annulus c516. The plurality of second pathways c504 may additionally or alternatively include a plurality of second pathway-outlets c522 fluidly communicating annularly about the second discharge annulus c518.

An exemplary method c550 may further include, at block c556, transferring heat from the second heat transfer fluid flowing through the plurality of second pathways c504 to the first heat transfer fluid flowing through the plurality of first pathways c502. The plurality of first pathways c502 may have a thermally conductive relationship with the plurality of second pathways c504.

In some embodiments, an exemplary method c550 may include swirling the first heat transfer fluid through the first discharge annulus c510. The plurality of first pathways c502 may spiral radially or concentrically inward from the first intake annulus c508 to the first discharge annulus c510. The first heat transfer fluid may be swirled through the first discharge annulus c510 at least in part by flowing the first heat transfer fluid through the plurality of first pathways c502 into the first discharge annulus c510.

In some embodiments, an exemplary method c550 may include swirling the second heat transfer fluid through the second discharge annulus c518. The plurality of second pathways c504 may spiral radially or concentrically outward from the second intake annulus to the second discharge annulus. The second heat transfer fluid may be swirled through the second discharge annulus c518 at least in part by flowing the second heat transfer fluid through the plurality of second pathways c504 into the second discharge annulus c518.

## CHAPTER 5 - SYSTEMS AND METHODS OF CONTROL

### Chapter 5.1.1 - Overview

Control systems and methods of controlling various systems disclosed herein will now be provided. In one aspect, a control system for a power generation system is provided. The power generation system includes one or more closed cycle engines, one or more electric machines operatively coupled thereto, and one or more energy storage devices in communication with the electric machines. The control system can control the closed cycle engine and its associated balance of plant to generate a temperature differential. Thus, the engine defines a hot side and a cold side. The temperature differential causes free piston assemblies to move within their respective piston chambers. The movement of the pistons causes the electric machines to generate electrical power. The generated electrical power can be provided to the energy storage devices for charging thereof. The control system monitors one or more operating parameters associated with the closed cycle engine, such as piston movement (e.g., amplitude and position), as well as one or more operating parameters associated with the electric machine, such as voltage or electric current. Based on such parameters, the control system generates control commands that are provided to one or more controllable devices of the system. The controllable devices execute control actions in accordance with the control commands. Accordingly, the desired output of the system can be achieved. Furthermore, the control system can monitor and anticipate load changes on the electric machines and can control the closed cycle engine to anticipate such load changes to better maintain steady state operation despite dynamic and sometimes significant electrical load changes on the electric machines. A method of controlling the power generation system is also provided. In another aspect, a control system for a heat pump system is provided. The heat pump system includes one or more of the closed cycle engines described herein. A method of controlling the heat pump system is also provided. The power generation and heat pump systems as well as control methods therefore are provided in detail below.

### Chapter 5.1.2 - Power Generation System Overview

FIG. 5.1.1 provides a schematic block diagram of a power generation system b1000 according to an aspect of the present disclosure. Generally, the power generation system b1000 is configured to generate electrical power. The generated electrical power can be used in any suitable manner. For instance, the generated electrical power can be used to charge a battery system, fed to a power grid, or used in some other suitable manner.

The power generation system b1000 includes a closed cycle engine b1110, e.g., such as any one of the closed cycle engines described herein. The closed cycle engine b1110 defines a hot side b1112 and a cold side b1114. Accordingly, the closed cycle engine b1110 defines a temperature differential $\Delta T$. Generally, during operation, the hot side b1112 is hotter than or at a higher temperature than the cold side b1114. In some embodiments, the hot side b1112 can be hotter than an ambient temperature. For instance, a heat source can heat or impart thermal energy to the hot side b1112, as denoted by $Q_{IN}$ in FIG. 5.1.1. In yet other embodiments, the hot side b1112 can be an ambient temperature and the cold side b1114 can be colder than the ambient temperature. For instance, heat or thermal energy can be removed from the cold side b1114, as denoted by $Q_{OUT}$ in FIG. 5.1.1. In some embodiments, the hot side b1112 can be actively heated and the cold side b1114 can be actively cooled or heat can be removed or extracted therefrom. The temperature differential $\Delta T$ between the hot side b1112 and the cold side b1114 causes one or more piston assemblies b1120 to move within their respective piston bodies b1116, e.g., between the hot side b1112 and the cold side b1114 of the engine. As the one or more piston assemblies b1120 are moved within their respective piston bodies b1116, one or more electric machines b1310 operatively coupled thereto generate electrical power.

As further depicted in FIG. 5.1.1, the power generation system b1000 includes a control system b1500 for controlling various aspects of the power generation system b1000, including controlling the closed cycle engine b1110 and the one or more electric machines b1310 operatively coupled thereto. The control system b1500 can include one or more control devices, such as sensors, controllers, processors, controllable devices b1534, etc. that can monitor and control various aspects of the power generation system b1000. An example manner in which the control system b1500 controls the power generation system b1000 will be described herein.

FIG. 5.1.2 provides a detailed schematic view of the power generation system b1000 of FIG. 5.1.1. As shown, the power generation system b1000 includes a closed cycle engine b1110, a balance of plant b1200 for creating or generating the temperature differential $\Delta T$ between the hot side b1112 and the cold side b1114 of the engine b1110, and an electrical system b1300 for generating electrical power utilizing the useful work produced by the closed cycle engine b1110. The closed cycle engine b1110 and its associated balance of plant b1200 are configured to produce useful work such that one or more electric machines b1310 of the electrical system b1300 can generate electrical power. As noted above, the generated electrical power can be utilized in any suitable way. For instance, for this embodiment, the generated electrical power can be used to charge one or more energy storage devices b1312 in communication with the one or more electric machines b1310.

The closed cycle engine b1110 can be any of the closed cycle engines b1110 described herein. For instance, in some embodiments, the closed cycle engine b1110 is a Stirling engine, such as e.g., any of the Stirling engines described herein. The closed cycle engine b1110 can include an engine block that has one or more piston bodies b1116. For instance, for the depicted embodiment of FIG. 5.1.2, the engine block includes four (4) piston bodies b1116. Each piston body b1116 can receive a piston assembly b1120 therein. The piston assemblies b1120 are each movable within their respective piston bodies b1116, e.g., between the hot side b1112 and the cold side b1114 of the engine. When the piston assemblies b1120 move or travel within their respective piston bodies b1116, the closed cycle engine b1110 produces useful work. Each piston assembly b1120 includes a pair of opposing pistons b1122, b1124 operatively coupled by a connection member b1126, e.g., a shaft.

The balance of plant b1200 shown schematically in FIG. 5.1.2 can be any of the balance of plant systems described herein, such as e.g., any of the balance of plant b1200 embodiments described in Chapter 2. For this embodiment, the balance of plant b1200 includes a heater loop b1210 for imparting thermal energy or heat to the hot side b1112 of the closed cycle engine b1110 and a chiller loop b1212 for removing or extracted thermal energy or heat from the cold side b1114. Accordingly, the heater loop b1210 and the chiller loop b1212 can generate the temperature differential ΔT. The temperature differential ΔT between the hot side b1112 and the cold side b1114 causes, at least in part, the piston assemblies b1120 to move or travel within their respective piston bodies b1116. Furthermore, the heater loop b1210 and chiller loop b1212 can be in fluid communication as shown in FIG. 5.1.2, e.g., for heat recovery purposes. The heater loop b1210 and the chiller loop b1212 can each have one or more controllable devices b1534 associated therewith.

The one or more electric machines b1310 are operatively coupled with the one or more piston assemblies b1120. The one or more electric machines b1310 can be operatively coupled with the one or more piston assemblies b1120 in any suitable manner, such as in any way described in Chapter 1. In some embodiments, for example, one or more electric machines b1310 can be operatively coupled with each piston assembly b1120. In other embodiments, each piston assembly b1120 need not have an electric machine b1310 operatively coupled thereto. The one or more electric machines b1310 can be operatively coupled with the one or more piston assemblies b1120 in any suitable manner. As one example, a piston body b1116 can serve as the stator b1324 and its associated piston assembly b1120 can serve as the dynamic member b1322 or mover of an electric machine b1310. Particularly, stator windings can be disposed along the piston body b1116 between the hot side b1112 and the cold side b1114 and the piston assembly b1120 can have one or more magnetic devices or permanent magnets connected thereto, e.g., connected to the connection member b1126 and/or to the pistons b1122, b1124 themselves. As the piston assemblies b1120 are moved between the hot side b1112 and the cold side b1114 of the closed cycle engine b1110, the stator windings of the piston body b1116 and the permanent magnets of the piston assembly b1120 are in magnetic communication along at least a portion of travel of the piston assembly b1120. Consequently, the permanent magnets excite the stator windings as the magnets travel thereby. In this way, the one or more electric machines b1310 are operable to generate electrical power when the one or more piston assemblies b1120 are moved between the hot side b1112 and the cold side b1114. Thus, in such instances, the electric machines b1310 operate in an electric generator state. That is, the electric machines b1310 function as generators at least in some instances of operation. Although the described above as having a linear configuration, the one or more electric machines b1310 can be any suitable type of electric machines b1310, including for example, rotary electric machines b1310.

As further depicted in FIG. 5.1.2, one or more electric machines b1326 can be operatively coupled with one or more devices of the chiller loop b1212. For instance, one or more electric machines b1326 can be operatively coupled with an expansion device or turbine of the chiller loop b1212. The one or more electric machines b1326 operatively coupled with the chiller loop b1212 can generate electrical power that can be used in some useful way and/or can be used to provide electrical power to drive some component of the chiller loop b1212, such as e.g., an expansion device or turbine of the chiller loop b1212.

For this embodiment, the electrical system b1300 of the power generation system b1000 includes one or more energy storage devices b1312 in communication with the one or more electric machines b1310, b1326. For instance, the one or more energy storage devices b1312 can be in electrical communication with the one or more electric machines b1310, e.g., by one or more suitable wired or wireless communication links. Particularly, the one or more energy storage devices b1312 can be in communication with the one or more electric machines b1310 operatively coupled with the closed cycle engine b1110 and/or the one or more electric machines b1326 operatively coupled with the chiller loop b1212. The one or more energy storage devices b1312 can include any suitable type or combination of energy storage devices b1312. For instance, in some embodiments, the one or more energy storage devices b1312 include one or more batteries. For example, as depicted in FIG. 5.1.2, the one or more energy storage devices b1312 are configured as a battery system. In some other embodiments, the one or more energy storage devices b1312 include one or more super capacitors. The one or more energy storage devices b1312 can include other suitable energy storage devices b1312 as well.

The one or more energy storage devices b1312 in communication with the one or more electric machines b1310 are operable to receive electrical power therefrom. That is, the electrical power generated by the one or more electric machines b1310 can be provided to the one or more energy storage devices b1312. Further, in some instances during operation, the one or more energy storage devices b1312 in communication with the one or more electric machines b1310 are operable to provide electrical power thereto. For example, during startup or initialization of the closed cycle engine b1110, the one or more energy storage devices b1312 can provide electrical power to the one or more electric machines b1310. The provided electrical power can cause the one or more electric machines b1310 to drive the one or more piston assemblies b1120 within their respective piston bodies b1116, e.g., between the hot side b1112 and cold side b1114. Accordingly, in some instances, the one or more electric machines b1310 are operable in an electric motor state. Thus, for the depicted embodiment of FIG. 5.1.2, the one or more electric machines b1310 operatively coupled with the closed cycle engine b1110 are operable in an electric motor state and in an electric generator state.

As further shown in FIG. 5.1.2, the electrical system b1300 can include an inverter b1314 for converting direct electrical current to alternating electrical current and one or more electrical loads b1316. The one or more electrical loads b1316 can be in communication with the one or more energy storage devices b1312 in any suitable manner, such as e.g., any suitable wired or wireless communication link. The one or more electrical loads are operable to receive electrical power from the one or more energy storage devices b1312. In some other embodiments, the one or more electric machines b1310 operatively coupled with the closed cycle engine b1110 and/or the one or more electric machines b1310 operatively coupled with some component of the chiller loop b1212 can provide direct electrical power to the one or more electrical loads b1316. The one or more electrical loads b1316 can include any suitable electrical load, such as e.g., a power grid, a fuel cell, an air conditioning unit of a vehicle, etc. A thermal management system b1330 is communicatively coupled with the various electrical components of the electrical system b1300 and is configured to management the thermal loads thereon, e.g., to maintain satisfactory operating temperatures thereof.

The power generation system b1000 also includes a control system b1500 for controlling various aspects thereof, as noted above. Particularly, the control system b1500 can initialize and control the power generation system b1000 during operation in accordance with various control schemes. As one example, the power generation system b1000 can be controlled in such a way that the efficiency of the overall power generation system b1000 is optimized. As another example, the power generation system b1000 can be controlled in such a way that the cost of operating the power generation system b1000 is optimized. For instance, the power generation system b1000 can be controlled in such a way that the cost of operating the system is minimized. In yet other embodiments, the power generation system b1000 can be controlled in such a way that a cost to power generation ratio is minimized. As yet another example, the power generation system b1000 can be controlled in such a way that a set amount of electrical power is generated by the electric machines b1310 of the system. Other control schemes are also possible.

With reference now to FIG. 5.1.2 and 5.1.3, FIG. 5.1.3 provides a block diagram depicting the control system b1500 of the power generation system b1000 of FIGS. 5.1.1 and 5.1.2. As noted above, the control system b1500 can include one or more control devices, such as sensors, controllers b1510, processors, controllable devices b1534, etc. that can monitor and control various aspects of the power generation system b1000. For instance, the control system b1500 can monitor one or more operating parameters of the closed cycle engine b1110, the one or more electric machines b1310, and/or the one or more energy storage devices b1312 using one or more sensors. For instance, the control system b1500 can monitor one or more piston movement characteristics using one or more piston movement sensors b1520. Example piston movement characteristics can include piston position, speed, amplitude, frequency, and/or phase. The piston movement sensors b1520 can be position encoders, for example. The control system b1500 can also monitor the pressure within the closed cycle engine b1110 at various positions or stations (e.g., within the piston bodies b1116 or along fluid pathways fluidly connecting the piston bodies b1116) using one or more pressure sensors b1522. Further, the control system b1500 can monitor the temperature within the closed cycle engine b1110 at various positions or stations (e.g., within the piston bodies b1116 or along fluid pathways fluidly connecting the piston bodies b1116) using one or more temperature sensors b1524.

In addition, the control system b1500 can monitor various operating parameters associated with components of the electrical system b1300. For instance, the control system b1500 can monitor one or more operating parameters associated with the one or more electric machines b1310 using one or more electric machine sensors b1526. For example, the control system b1500 can monitor the electric current generated or passing through the electric machines b1310 using one or more electric machine sensors b1526, including the amplitude, phase, and/or frequency of the electric current. As another example, the control system b1500 can monitor the voltage at the electric machines b1310 using one or more electric machine sensors b1526, including the amplitude, phase, and/or frequency of the voltage. The control system b1500 can monitor other operating parameters associated with the one or more electric machines b1310 using one or more electric machine sensors b1526, such as e.g., the magnetic field at the electric machines b1310.

Further, the control system b1500 can monitor various operating parameters associated with the one or more energy storage devices b1312 in communication with the one or more electric machines b1310 using one or more energy storage device sensors b1528. In this way, the operating state of the one or more energy storage devices b1312 can be determined. For example, the control system b1500 can monitor the load state of the one or more energy storage devices b1312 using the one or more energy storage device sensors b1528. In some embodiments, the load state of the one or more energy storage devices b1312 is descriptive of at least one of a state of charge and a charge acceptance rate of the one or more energy storage devices b1312 in communication with the one or more electric machines b1310. In some embodiments, the load state of the one or more energy storage devices b1312 is descriptive of both the state of charge and the charge acceptance rate of the one or more energy storage devices b1312. In monitoring the load state of the energy storage devices b1312, the control system b1500 can advantageously control the closed cycle engine b1110 and the one or more electric machines b1310 to meet the charging needs of the one or more energy storage devices b1312.

The state of charge is indicative of the available capacity of the one or more energy storage devices b1312. The state of charge can be expressed as a percentage of the rated capacity of the one or more energy storage devices b1312, e.g., 0-100% with 0% being empty and 100% being full or no available capacity. The state of charge of the one or more energy storage devices b1312 can be determined in any suitable manner, e.g., by a voltage method, coulomb counting method, Kalman filter method, etc. The charge acceptance rate of the one or more energy storage devices b1312 is indicative of the ability of the energy storage devices b1312 to accept and store energy under given conditions, such as e.g., temperature, state of charge, charging rate, charging method, and/or health of the energy storage devices b1312. The charge acceptance rate can be determined in any suitable manner.

The control system b1500 includes one or more controllers b1510. For instance, the control system b1500 can include one or more controllers b1510 that function as the main or primary control devices of the power generation system b1000. The control system b1500 can include other controllers b1510 as well. As shown best in FIG. 5.1.3, the controllers b1510 can include one or more processor(s) b1512 and associated memory device(s) b1514 configured to perform a variety of computer-implemented functions and/or instructions (e.g., performing the methods, steps, calculations and the like and storing relevant data as disclosed herein). The instructions, when executed by the one or more processors, can cause the one or more processors to perform operations, including providing control commands b1532 to various controllable devices b1534 of the power generation system b1000.

Additionally, the controllers b1510 can also include a communications module b1516 to facilitate communications between the controllers b1510 and various components of the power generation system b1000. Further, the communications module b1516 can include a sensor interface b1518 (e.g., one or more analog-to-digital converters) to permit signals transmitted from one or more sensors to be converted into signals that can be understood and processed by the one or more processors. It should be appreciated that the sensors can be communicatively coupled to the communications module b1516 using any suitable means. For example, the sensors can be coupled to the sensor interface b1518 via a wired connection. However, in other embodiments, the sensors may be coupled to the sensor interface b1518 via a wireless connection, such as by using any suitable wireless communications protocol. As such, the processor(s) b1512 can be configured to receive one or more signals from the sensors.

As used herein, the term "processor" refers not only to integrated circuits referred to in the art as being included in a computing device, but also refers to a controller, a microcontroller, a microcomputer, a programmable logic controller (PLC), an application specific integrated circuit, and other programmable circuits. The one or more processors can also be configured to compute advanced control algorithms. Additionally, the memory device(s) b1514 can generally include memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) b1514 can generally be configured to store suitable computer-readable instructions that, when implemented by the processor(s) b1512, configure the controllers b1510 to perform the various functions described herein.

The control system b1500 also includes one or more controllable devices b1534. The controllable devices b1534 are communicatively coupled with the one or more controllers b1510, e.g., as shown in FIGS. 5.1.2 and 5.1.3. The controllable devices b1534 of the power generation system b1000 include any device communicatively coupled with the one or more controllers b1510 that, when commanded by the one or more controllers b1510, can cause a change in output of the power generation system b1000. As one example, the one or more controllers b1510 can control the one or more controllable devices b1534 to cause a change in the temperature differential $\Delta T$ between the hot side b1112 and the cold side b1114 of the closed cycle engine b1110. By changing the temperature differential $\Delta T$ between the hot side b1112 and the cold side b1114, the work output of the closed cycle engine b1110 can be changed, which can ultimately change the amount of electrical power generated by the one or more electric machines b1310 operatively coupled with the one or more piston assemblies b1120 of the closed cycle engine b1110. To cause a change in the temperature differential $\Delta T$ between the hot side b1112 and the cold side b1114, one or more controllers b1510 can command the one or more controllable devices b1534 to apply more or less heat to the hot side b1112 of the closed cycle engine b1110, remove more or less heat from the cold side b1114 of the closed cycle engine b1110, or some combination thereof. As yet another example, the one or more controllers b1510 can control the one or more control devices to cause the load on the one or more electric machines b1310 to change, which causes a change in the amount of electrical power generated by the one or more electric machines b1310.

One example controllable device b1534 includes a charge controller b1318 in communication with the one or more electric machines b1310 and the one or more energy storage devices b1312, e.g., as shown in FIG. 5.1.2. The charge controller b1318 are operatively configured to control or regulate the electrical power flowing between the one or more electric machines b1310 and the one or more energy storage devices b1312. The charge controller b1318 can allow all, some, or none of the electrical power generated by the one or more electric machines b1310 to flow to the one or more energy storage devices b1312. For instance, the charge controller b1318 can some of the electrical power to an electrical braking system b1320. The electrical braking system b1320 can include one or more resistor banks for dissipating the electrical power. In this way, the charge controller b1318 can control the flow of electrical power to the one or more energy storage devices b1312, e.g., to prevent overcharging of the one or more energy storage devices b1312.

Another example controllable device b1534 includes a mechanical braking system b1400 in communication with the one or more electric machines b1310, e.g., as shown in FIG. 5.1.2. The mechanical braking system b1400 is operatively configured to mechanically apply a counter torque or load on the one or more electric machines b1310 to change the electrical power output of the one or more electric machines b1310 and/or the movement of the piston assemblies b1120. For instance, the one or more controllers b1510 can command the mechanical braking system b1400 to apply a load on the one or more electric machines b1310 to synchronize one or more of the amplitude, phase, and frequency of the electric machine b1310 with one or more of the amplitude, phase, and frequency of the piston assemblies b1120 moving within their respective piston bodies b1116.

Another example controllable device b1534 can be any of the controllable devices b1534 associated with the heater loop b1210. For instance, one controllable device can include a fuel control device b1214 positioned along an intake line b1232 of the heater loop b1210, e.g., as shown in FIG. 5.1.21. The one or more controllers b1510 can command the fuel control device b1214 to allow a desired flow rate of fuel to flow to a combustor b1224 positioned along the heater loop b1210 (e.g., as described herein). Changing the amount of fuel provided to the combustor b1224 can change the heat input to the hot side b1112 of the closed cycle engine b1110, which consequently changes the temperature differential $\Delta T$ and thus the work output of the closed cycle engine b1110. Yet another example controllable device b1534 includes a compressor b1222 of the heater loop b1210. The compressor b1222 is operatively configured to compress or pressurize air flowing from an air source b1220 to the combustor b1224. The one or more controllers b1510 can control the compressor speed, e.g., by one or more control commands b1532, and thus can control the air/fuel mixture entering or at the combustor b1224. By changing the air/fuel mixture entering the combustor b1224, the heat input to the hot side b1112 of the closed cycle engine b1110 can be changed. As noted above, changing the heat input to the hot side b1112 can change the temperature differential $\Delta T$ between the hot side b1112 and the cold side b1114, which ultimately changes the work output of the closed cycle engine b1110.

Another example controllable device b1534 can be any of the controllable devices b1534 associated with the chiller loop b1212. For instance, the one or more controllable devices b1534 can include a compressor and/or pump positioned along the chiller loop b1212. The one or more controllers b1510 can control the speed of the compressor and/or pump and thus the amount of heat removed or extracted from the cold side b1114 of the closed cycle engine b1110. By removing less heat from the cold side b1114 of the engine, the temperature differential $\Delta T$ between the hot and cold side b1114 of the engine is changed, and consequently, the work output of the engine is also changed. Further, a braking system or the like can be used to change the counter torque or load on the one or more electric machines b1310 operatively coupled with one or more components of the chiller loop b1212, such as e.g., an expansion device.

To summarize, as shown best in FIG. 5.1.3, the one or more controllers b1510 can receive, from the one or more sensors, data b1530 indicative of one or more operating parameters associated with at least one of the closed cycle engine b1110 and the one or more electric machines b1310. For instance, data b1530 can be received from the piston movement sensors b1520, the pressure sensors b1522, the temperature sensors b1524, the electric machine sensors b1526, etc. The data b1530 can be indicative of operating parameters associated with one or both of the closed cycle engine b1110 and the electric machines b1310. For instance, the data b1530 can be indicative of one or more piston movement characteristics, the pressure within the closed cycle engine b1110 at various positions or stations, the temperature within the closed cycle engine b1110 at various positions or stations, the electric current generated or passing through the electric machines b1310, the voltage at the electric machines b1310 using one or more electric machine sensors b1526, the magnetic field at the electric machines b1310, etc. Additionally, in some embodiments, the one or more controllers b1510 can receive, from the one or more sensors, data b1530 indicative of one or more operating parameters associated with the one or more energy storage devices b1312, such as e.g., the load state of the devices.

Based on the received data b1530, the one or more controllers b1510 can control the power generation system b1000 in accordance with various control schemes. During normal operation, for example, the control system b1500 can monitor various operating parameters and can determine control commands b1532 to drive the operating parameters to an operating setpoint or target value. The control commands b1532 can then be provided to controllable device b1534(s). The controllable device b1534(s) can then perform control actions to execute the control commands b1532. When the controllable devices b1534 execute the control commands b1532, an output of the power generation is changed. For example, in performing the control action, the controllable device b1534 can cause a change to the amount of work done on the piston by the working fluid within the piston body b1116 and/or the amount of work done by the piston on the working fluid within the piston body b1116 (e.g., depending on whether the working fluid is expanding or contracting). By changing the work done by or on the piston, the piston speed of the piston assembly b1120 is changed, which changes the electrical power output of the electric machines b1310. Accordingly, the output of the power generation system b1000 is changed.

In addition, in the event the one or more of the piston assemblies b1120 are out of sync with their associated electric machines b1310 with respect to amplitude, phase, and/or frequency during charging of the energy storage devices b1312, the one or more controllers b1510 can provide a control command to one or more of the controllable devices b1534 to cause an adjustment to at least one of the electric machine b1310 and its associated piston assembly b1120 such that the electric machine b1310 and its associated piston assembly b1120 are synchronized in amplitude, phase, and frequency. Further, the control system b1500 can monitor for and prevent failure modes. In addition, as will be explained below, data b1530 can be received to initialize the power generation system b1000.

## Chapter 5.1.3 - Power Generation System Modes of Operation

An example manner in which the power generation system b1000 can be operated will now be provided. FIG. 5.1.4 provides a block diagram depicting various modes of operation of the power generation system b1000 of FIGS. 5.1.1 and 5.1.2. As shown in FIG. 5.1.4, to commence operation, the power generation system b1000 can be operated in an initialization mode in which the closed cycle engine b1110 and its associated balance of plant b1200 is started up, e.g., from a non-operational state. Once the system is initialized, the power generation system b1000 can be operated in a normal mode, including an idle mode or a charging mode. In the idle mode, the piston assemblies b1120 move within their respective piston bodies b1116 between the hot side b1112 and the cold side b1114 under their own thermal power (e.g., without need for the electric machines b1310 to motor the piston assemblies b1120) and without or with a negligible load applied to the one or more electric machines b1310. As shown in FIG. 5.1.4, the power generation system b1000 can transition from the initialization mode to the idle mode. In the charging mode, the piston assemblies b1120 are moved within their respective piston bodies b1116 and a load is applied to the one or more electric machines b1310 operatively coupled with the piston assemblies b1120 of the closed cycle engine b1110, wherein the applied load is more than a negligible load. For instance, the load can be the one or more energy storage devices b1312. In the normal mode, the power generation system b1000 can transition between the idle mode and the charging mode. As one example, the power generation system b1000 can transition from the idle mode to the charging mode automatically based at least in part on a load state of the one or more energy storage devices b1312 or some other trigger criteria. Additionally or alternatively, the power generation system b1000 can be manually transitioned between operating modes, e.g., by a user input. When operation is no longer desired and/or required, operation of the power generation system b1000 can be ceased. To cease operation, as one example, the one or more controllers b1510 can cause the heat source to cease applying heat to the hot side b1112 of the closed cycle engine b1110 and/or cause one or more components to cease removing heat from or cooling the cold side b1114 of the engine. Eventually, the pistons b1122, b1124 will cease moving within their respective piston bodies b1116.

## Chapter 5.1.4 - Power Generation System Initialization

The power generation system b1000 can be initialized in the following example manner. FIG. 5.1.5 provides a flow diagram depicting an example method (b1700) of initializing the power generation system b1000 of FIGS. 1 and 2. Some or all of the method (b1700) can be implemented by the control system b1500 described herein. In addition, it will be appreciated that the method (b1700) can be modified, adapted, expanded, rearranged and/or omitted in various ways without deviating from the scope of the present subject matter.

At (b1702), the method (b1700) includes determining whether to initialize the power generation based at least in part on received data b1530 indicative of a load state of the one or more energy storage devices b1312 in communication with the one or more electric machines b1310. As one example, the one or more controllers b1510 can receive data b1530 indicative of a load state of the one or more energy storage devices b1312. For instance, the data b1530 can be received from the one or more energy storage device sensors b1528 communicatively coupled with the one or more controllers b1510, e.g., as shown in FIGS. 5.1.2 and 5.1.3. In some embodiments, the load state is indicative of at least one of a state of charge and a charge acceptance rate of the one or more energy storage devices b1312. In some other embodiments, the load state is indicative of both the state of charge and the charge acceptance rate of the one or more energy storage devices b1312.

After receiving the data b1530 indicative of at least one of the state of charge and the charge acceptance rate of the one or more energy storage devices b1312, the one or more controllers b1510 can determine the load state of the one or more energy storage devices b1312. In some embodiments, the received sensor data b1530 includes the actual state of charge percentage and charge acceptance rate, and thus, the one or more controllers b1510 need not determine or calculate the load state of the energy storage devices b1312.

The one or more controllers b1510 can determine whether to initialize the power generation system b1000 based at least in part on the received data b1530 indicative of the load state of the one or more energy storage devices b1312. For instance, in determining whether to initialize the power generation system b1000 based at least in part on the received data b1530 indicative of the load state, the one or more controllers b1510 are configured to ascertain whether the state of charge of the one or more energy storage devices b1312 is within a predetermined range. On one hand, if the state of charge of the one or more energy storage devices b1312 is within the predetermined range, the one or more controllers b1510 initialize the power generation system b1000, e.g., to ultimately charge the energy storage devices b1312. On the other hand, if the state of charge of the one or more energy storage devices b1312 is not within the predetermined range, the one or more controllers b1510 do not initialize the power generation system b1000.

For instance, the predetermined range can be set having any suitable lower limit and upper limit. For example, the lower limit can be set at 0% and the upper limit can be set at 85% of full capacity. In such an example, if the one or more energy storage devices b1312 have a state of charge between 0% and 85% of full capacity (e.g., 20%), the one or more controllers b1510 determine that the state of charge of the one or more energy storage devices b1312 is within the predetermined range, and thus, the one or more controllers b1510 initialize the power generation system b1000. In contrast, if the one or more energy storage devices b1312 have a state of charge greater than 85% of full capacity (e.g., 95%) the one or more controllers b1510 determine that the state of charge of the one or more energy storage devices b1312 is not within the predetermined range, and thus, the one or more controllers b1510 do not initialize the power generation system b1000. Accordingly, in some embodiments, the state of charge must be within the predetermined range for the power generation system b1000 to initialize.

Further, in some embodiments, in determining whether to initialize the power generation system b1000 based at least in part on the received data b1530 indicative of the load state, the one or more controllers b1510 are configured to ascertain whether the charge acceptance rate of the one or more energy storage devices b1312 is within a predetermined rate range. On one hand, if the charge acceptance rate of the one or more energy storage devices b1312 is within the predetermined rate range, the one or more controllers b1510 initialize the power generation system b1000, e.g., to ultimately charge the energy storage devices b1312. On the other hand, if the charge acceptance rate of the one or more energy storage devices b1312 is not within the predetermined rate range, the one or more controllers b1510 do not initialize the power generation system b1000.

For instance, the predetermined rate rage can be set having any suitable lower limit and upper limit. For example, the lower limit can be set at some predetermined rate threshold and the upper limit can be as any rate above the predetermined rate threshold. In such an example, if the one or more energy storage devices b1312 have a charge acceptance rate between or above the predetermined rate threshold and the upper limit, the one or more controllers b1510 determine that the state of charge of the one or more energy storage devices b1312 is within the predetermined rate range, and thus, the one or more controllers b1510 initialize the power generation system b1000. In contrast, if the one or more energy storage devices b1312 have a charge acceptance rate below the lower limit or predetermined charge threshold, the one or more controllers b1510 determine that the charge acceptance rate of the one or more energy storage devices b1312 is not within the predetermined rate range, and thus, the one or more controllers b1510 do not initialize the power generation system b1000. Accordingly, in some embodiments, the charge acceptance rate must be within the predetermined rate range for the power generation system b1000 to initialize.

In some embodiments, in determining whether to initialize the power generation system b1000 based at least in part on the received data b1530 indicative of the load state of the one or more energy storage devices b1312, the one or more controllers b1510 are configured to determine whether to initialize the power generation system b1000 based at least in part on both of the state of charge and the charge acceptance rate of the one or more energy storage devices b1312. Accordingly, in some embodiments, the state of charge and the charge acceptance rate must be within the predetermined range and the predetermined rate range, respectively, for the power generation system b1000 to initialize.

In some embodiments, in determining whether to initialize the power generation system b1000 based at least in part on the received data b1530 indicative of the load state of the one or more energy storage devices b1312, the one or more controllers b1510 are configured to determine whether to initialize the power generation system b1000 based at least in part on an objective function associated with operating the closed cycle engine b1110. For instance, the objective function can take into account certain parameters, such as the cost associated with operating the closed cycle engine b1110, the other power sources available to charge or power the one or more energy storage devices b1312, electrical loads b1316, and/or power grid b1332, the startup time, the state of charge and charge acceptance rate of the energy storage devices b1312, the power demanded by the one or more energy storage devices b1312, electrical loads b1316, and/or power grid b1332, the planned time for charging and/or powering the energy storage devices b1312, electrical loads b1316, and/or power grid b1332 (e.g., at peak hours or off-hours), etc. If the objective function exceeds a predetermined operation threshold, the one or more controllers b1510 can initialize the system. On the other hand, if the objective function does not exceed the predetermined operation threshold, the one or more controllers b1510 can determined not to initialize the system.

In some embodiments, the power generation system b1000 that includes the closed cycle engine b1110 is one of a plurality of power generation systems operable to provide electrical power to the one or more energy storage devices b1312 and/or power grid. For instance, as shown in FIG. 5.1.6, the power generation system b1000 of FIG. 5.1.2 is shown as one of a plurality of power generation systems operable to provide electrical power to the one or more energy storage devices b1312 and/or power grid. As depicted, a first power generation system, a second power generation system, and an Nth power generation system are shown in communication with the one or more energy storage devices b1312 and/or power grid. N is an integer. The other power generation systems can be any suitable type of power generation systems, including without limitation, a wind energy power generation system, a solar energy power generation system, a fuel cell system, the grid, etc.

In this example, the one or more controllers b1510 of the control system b1500 can determine an objective function associated with each of the power generation systems b1000 associated with or in communication with the energy storage devices b1312 and/or power grid. The one or more controllers b1510 can assign or determine an objective function for each power generation system. Based on the determined objective functions, the one or more controllers b1510 can determine whether to initialize the power generation system b1000 associated with the closed cycle engine b1110. The determined objective function assigned or determined for the power generation system b1000 associated with the closed cycle engine b1110 can be based at least in part on a thermal demand from one or more thermal applications b1150 in thermal communication with the closed cycle engine b1110. The thermal demand can be indicative of the heating and/or cooling requirements of the thermal application(s) b1150. The one or more thermal applications b1150 can be any of the thermal applications provided herein, such as any of the thermal applications b140 provided in Chapter 2. In some embodiments, if the power generation system b1000 associated with the closed cycle engine b1110 has the most desirable objective function, the one or more controllers b1510 can initialize the system. If the power generation system b1000 associated with the closed cycle engine b1110 does not have the most desirable objective function, the one or more controllers b1510 can decline or postpone initialization of the system b1000.

At (b1704), returning to FIG. 5.1.5, the method (b1700) includes causing at least one of the one or more piston assemblies b1120 to move to a preselected starting position. For instance, in initializing the power generation system b1000, the one or more controllers b1510 are configured to cause at least one of the one or more piston assemblies b1120 to move to a preselected starting position. In some embodiments, all of the piston assemblies b1120 can be moved to their respective preselected starting positions. By moving one, some, or all of the piston assemblies b1120 to their respective starting positions, e.g., prior to motoring or kickstarting the piston assemblies b1120 as will be described below, the closed cycle engine b1110 can more quickly obtain more efficient operation, undesired vibrations can be minimized or eliminated during start up, and drifting of the piston assemblies b1120 within their respective piston bodies b1116 can be accounted for or corrected.

The preselected starting position can be any suitable position. For instance, FIG. 5.1.7 provides a schematic view of an example piston assembly b1120 disposed within one of the piston bodies b1116 of the closed cycle engine b1110 of the power generation system b1000 of FIGS. 5.1.1 and 5.1.2. As shown, the piston assembly b1120 has a preselected stroke that extends between a first end or top dead center position (TDC) and an opposing second end or bottom dead center position (BDC). A midpoint (M) is defined midway between the first end and the second end, or stated differently, midway between the top dead center position and the bottom dead center position. As the piston assembly b1120 is a free piston, the top dead center and the bottom dead center positions are selected to provide a predetermined margin between the piston and the end walls b1128, b1130 of the piston body b1116 when the piston assembly b1120 is at one of the top and bottom dead center positions. In this way, the pistons b1122, b1124 of the piston assembly b1120 do not engage or hit the end walls b1128, b1130. In some embodiments, the preselected starting position is substantially a top dead center position of the preselected stroke of the piston assembly b1120, e.g., as shown in FIG. 5.1.7. That is, at least one of the pistons b1122, b1124 of the piston assembly b1120 is positioned at the top dead center position. In yet other embodiments, the preselected starting position is substantially a bottom dead center position of the preselected stroke of the piston assembly b1120, e.g., as shown in FIG. 5.1.8. That is, at least one of the pistons b1122, b1124 of the piston assembly b1120 is positioned at the bottom dead center position. In some further embodiments, the preselected starting position is substantially a midpoint of the preselected stroke of the piston assembly b1120, e.g., as shown in FIG. 5.1.9. That is, the pistons b1122, b1124 of the piston assembly b1120 are spaced evenly from the midpoint.

In some embodiments, the preselected starting positions of the piston assemblies of the closed cycle engine can be selected as different starting positions, and consequently, the piston assemblies can be moved to different preselected positions. For instance, FIG. 5.1.10 provides a schematic view of two fluidly coupled piston bodies b1132, b1134 with piston assemblies b1136, 1138 disposed therein. As shown, for the first piston body b1132, the preselected starting position of the first piston assembly b1136 is substantially at the midpoint of the preselected stroke of the piston assembly b1136. For the second piston body b1134, the preselected starting position of the second piston assembly b1138 is substantially at a top dead center position of the preselected stroke of the piston assembly b1138. In other example embodiments, the piston assemblies b1136, 1138 can be moved to other suitable preselected starting positions relative to one another.

In yet other embodiments, the preselected starting position of one or more of the piston assemblies can be trimmed or adjusted over time, e.g., to account for drifting or degradation of the piston sealing elements over time. For instance, as shown in FIG. 5.1.11, two fluidly coupled piston bodies b1132, b1134 are shown with piston assemblies b1136, b1138 disposed therein. As shown, for the first piston body b1132, the preselected starting position of the first piston assembly b1136 is substantially a midpoint of the preselected stroke of the piston assembly b1136. For the second piston body b1134, the preselected starting position of the second piston assembly b1138 disposed therein is offset from the midpoint of the preselected stroke of the piston assembly b1138 by an offset trim. As one example, the determined offset trim can be determined based at least in part on data b1530 collected from previous operations of the power generation system b1000. For instance, the one or more controllers b1510 can receive data b1530 indicative of the movement of the second piston assembly b1138 during past operations (e.g., amplitude, phase, frequency, speed, etc.), and can determine that the second piston assembly b1138 drifts out of sync with respect to the first piston assembly b1136 and thus causes unwanted vibration, reduced work output of the closed cycle engine b1110, etc. By starting the second piston assemblies b1136, b1138 at the preselected starting position and in accordance with the offset trim, initially moving the piston assemblies b1136, b1138 into synchronization may be achieved more easily.

The piston assemblies can be moved to their respective positions in any suitable manner. As one example, the one or more controllers b1510 are configured to receive data b1530 indicative of one or more operating parameters associated with one or more of the piston assemblies b1120. More particularly, the one or more controllers b1510 can receive data b1530 indicative of a current position of the piston assemblies b1120 of the closed cycle engine b1110. For instance, the one or more controllers b1510 can receive data b1530 indicative of the current position of the piston assemblies b1120 from the piston movement sensors b1520, e.g., as shown in FIG. 5.1.3. Once the current position of the piston assemblies b1120 are known or obtained, the one or more controllers b1510 can determine one or more repositioning commands indicative of instructions for moving the piston assemblies b1120 to their respective preselected starting positions. The repositioning commands can each include instructions for moving a given piston assembly b1120 a repositioning distance and direction. Once the repositioning commands are determined, the one or more controllers b1510 can provide the repositioning commands to one or more controllable devices b1534 operable to reposition the piston assemblies b1120 within their respective piston bodies b1116.

In some embodiments, for example, the one or more controllable devices b1534 operable to reposition the piston assemblies b1120 within their respective piston bodies b1116 can be the one or more electric machines b1310. For instance, the one or more electric machines b1310 can be used to electrically cam the piston assemblies b1120 into their respective preselected starting positions. Particularly, the one or more controllers b1510 can cause electrical power to be provided to the one or more electric machines b1310. For example, the one or more controllers b1510 can cause the one or more energy storage devices b1312 in communication with the one or more electric machines b1310 to provide electrical power thereto. The electrical power provided to the electric machine b1310 can cause the electric machine b1310, functioning as an electric motor or actuator, to drive or electrically cam the piston assembly b1120 to the preselected starting position. That is, the piston assembly b1120 can be moved via electronics in accordance with a cam profile function or motion profile. In some alternative embodiments, the electrical cam can be some other electric machine b1310 operable to move an associated piston assembly b1120 to a preselected starting position.

In yet other embodiments, the one or more controllable devices b1534 operable to reposition the piston assemblies b1120 within the respective piston bodies b1116 can be an electric motor configured to drive a mechanical cam that in turn is operable to move the one or more piston assemblies b1120 to the respective preselected starting positions. In some other embodiments, as noted above, the closed cycle engine b1110 has a plurality of piston bodies b1116 in which piston assemblies b1120 are movable between their respective hot side b1112 and cold side b1114. The hot side b1112 of each piston body b1116 is in fluid communication with a cold side b1114 of another piston body b1116. Further, in such embodiments, in causing the at least one of the one or more piston assemblies b1120 to move to the preselected starting position, the one or more controllers b1510 are configured to cause one or more valves to move to an open position such that fluid flows between the piston bodies b1116. In this way, the pressure change within the piston bodies b1116 causes the piston assemblies b1120 to move to their respective preselected starting positions. Stated another way, one or more valves can be controlled to cross bleed the fluid between the piston bodies b1116 such that the pistons b1122, b1124 are moved to their respective preselected starting positions.

At (b1706), the method (b1700) includes assigning a motion profile to at least one of the one or more electric machines b1310. For instance, in initializing the power generation system b1000, the one or more controllers b1510 are configured to assign a motion profile to at least one of the one or more electric machines b1310. Particularly, the one or more controllers b1510 are configured to assign a motion profile to at least one electric machine b1310 that is operatively coupled with a piston assembly b1120 of the closed cycle engine b1110. The assigned motion profile can be selected from a motion profile table or database, e.g., stored in a memory device of the one or more controllers b1510. For instance, the motion profiles stored in the motion profile table can be defined as a set of X-Y points that define the position of the dynamic member b1322 of a given electric machine b1310 at a point in time, e.g., during motoring or kickstarting the engine.

The motion profile assigned to the electric machine b1310 includes instructions for controlling the electric machine b1310 to drivingly move at least one piston assembly b1120 during startup or initialization of the power generation system b1000. More specifically, the motion profile assigned to the electric machine b1310 includes instructions for controlling an output of the electric machine b1310 during startup of the power generation system b1000 such that the piston assembly b1120 operatively coupled thereto is drivingly moved by the electric machine b1310 within its piston body b1116. Stated another way, the assigned motion profile provides actuation instructions for the electric machine b1310 operatively coupled with one of the piston assemblies b1120. The motion profile can include various setpoints over time for achieving certain motion characteristics, such as e.g., velocity, acceleration, deceleration, jerk, frequency, phase, amplitude, etc. The motion profile can be based on one, some, or all of the motion characteristics. Accordingly, when electrical power is provided to the electric machine b131 0, the electric machine b1310 can actuate the piston assembly b1120 in accordance with the motion characteristics of the assigned motion profile. The one or more controllers b1510 can cause the one or more energy storage devices b1312 to provide electrical power to the electric machine b1310. The provided electrical power can cause the electric machine b1310 to actuate the piston assembly b1120.

In some embodiments, the method (b1700) further includes designating, by the one or more controllers b1510, a master piston assembly b1120 selected from one of the one or more piston assemblies b1120 of the closed cycle engine b1110. For instance, for the depicted embodiment of FIG. 5.1.2, the closed cycle engine b1110 includes four (4) piston bodies b1116 with four (4) piston assemblies b1120. Each piston body b1116 has an associated piston assembly b1120 movable therein. One of the piston assemblies b1120 can be designated as the master piston assembly b1120. In such embodiments, the designated master piston assembly b1120 is the sole piston assembly b1120 actuated by its associated electric machine b1310 in accordance with the assigned motion profile. However, when the master piston assembly b1120 is moved by the electric machine b1310 in accordance with the assigned motion profile, the other piston assemblies b1120 are also moved, e.g., based at least in part on the arrangement and configuration of the piston assemblies b1120 as well as the arrangement and configuration of the fluidly connected volumes or piston chambers b1118 defined by the piston bodies b1116. In some embodiments, particularly in embodiments in which some piston assemblies b1120 of the engine are movable independently of one another (e.g., in a Tetris engine configuration as described in Chapter 3), more than one piston assembly b1120 can be designated as a master piston assembly b1120. For instance, at least one piston assembly b1120 of each independent group or tetra piece can be designated as a master piston. In such embodiments, the dependent or follower piston assemblies b1120 associated with the master piston assemblies b1120 need not have designated motion profiles as they operable to follow their respective master pistons b1122, b1124.

In yet other embodiments, in assigning the motion profile to the electric machines b1310, each of the of the one or more electric machines b1310 are assigned a motion profile. That is, each electric machine b1310 operatively coupled with a piston assembly b1120 is assigned a motion profile. Accordingly, during startup, the electric machines b1310 actuate their respective piston assemblies b1120 in accordance with their assigned profiles. In some embodiments, for each piston assembly b1120 of the closed cycle engine b1110, at least one electric machine b1310 operatively coupled thereto is assigned a motion profile. Thus, if more than one electric machine b1310 is operatively coupled with a given piston assembly b1120, only one of the electric machines b1310 need be assigned a motion profile.

At (b1708), with reference again to FIG. 5.1.5, the method (b1700) includes commencing motion of the piston assemblies b1120 of the closed cycle engine b1110. In some implementations, in initializing the power generation system b1000, the one or more controllers b1510 are configured to cause an electric machine b1310 to drivingly motor or electrically cam the piston assembly b1120 operatively coupled thereto based at least in part on the assigned motion profile. For instance, to cause the electric machine b1310 to drivingly motor the piston assembly b1120 operatively coupled thereto, the one or more controllers b1510 can cause the one or more energy storage devices b1312 to provide electrical power to the electric machine b1310 to drivingly motor the piston assembly b1120. Additionally or alternatively, electrical power can be provided by an alternative power supply. The amount of electrical power, the phase, and the frequency of the provided electrical power can be provided based at least in part on the assigned motion profile. When electrical power is provided to the electric machine b1310, the electric machine b1310 drives or motors the piston assembly b1120 operatively coupled thereto such that the piston assembly b1120 is driven or moved between the cold side b1114 and the hot side b1112 of the closed cycle engine b1110, e.g., as shown in FIG. 5.1.12. Specifically, as depicted in FIG. 5.1.12, the electric machine b1310 operatively coupled with the piston assembly b1120 can drivingly motor the piston assembly b1120 such that the piston assembly b1120 translates (denoted by the arrow labeled "T") between the hot side b1112 and the cold side b1114 of the closed cycle engine b1110.

In some embodiments, the one or more controllers b1510 cause the electric machine b1310 to drivingly motor the piston assembly b1120 operatively coupled thereto for a predetermined initialization time. After the electric machine b1310 drivingly motors the piston assembly b1120 operatively coupled thereto for the predetermined initialization time, the one or more controllers b1510 are further configured to command the electric machine b1310 to cease drivingly motoring the piston assembly b1120 operatively thereto. That is, after the predetermined initialization time elapses, the electric machine b1310 ceases motoring the piston assembly b1120. The predetermined initialization time can be a set or fixed amount of time that corresponds with a time period in which the piston assemblies b1120 can achieve predetermined motion characteristics without need for motoring or actuating by the electric machine b1310.

In yet other embodiments, the one or more controllers b1510 cause the electric machine b1310 to drivingly motor the piston assembly b1120 operatively coupled thereto until the electric machine b1310 completes or substantially completes the assigned motion profile. For instance, the motion profile can designate certain motion characteristics of the electric machine b1310 over time, and when the motion profile has been substantially completed, e.g., greater than ninety percent (90%), then the one or more controllers b1510 are further configured to command the electric machine b1310 to cease motoring the piston assembly b1120 operatively coupled thereto.

In some further embodiments, the one or more controllers b1510 cause the electric machine b1310 to drivingly motor the piston assembly b1120 operatively coupled thereto until the electric machine b1310 and/or the piston assembly b1120 operatively coupled thereto achieves or substantially achieves one or more motion characteristics, e.g., a predetermined speed, acceleration, amplitude, etc. For instance, when the one or more motion characteristics are achieved or substantially achieved, e.g., greater than ninety percent (90%), then the one or more controllers b1510 are further configured to command the electric machine b1310 to cease motoring the piston assembly b1120 operatively coupled thereto. Stated yet another way, once the one or more motion characteristics of the electric machine b1310 and/or piston assembly b1120 are achieved or substantially achieved, the electric machine b1310 ceases motoring the piston assemblies b1120 and the piston assembly b1120 from that point relies on the temperature differential $\Delta T$ between the hot side b1112 and the cold side b1114 to move the piston within the piston body b1116. In some further embodiments, the more controllers b1510 can cause the electric machine b1310 to drivingly motor the piston assembly b1120 operatively coupled thereto when the closed cycle engine b1110 "catches". Particularly, the control devices of the control system b1500 can monitor the motion characteristics noted above, and upon determining a discontinuity in the motion or behavior of the piston assembly b1120 and/or the dynamic member b1322 of the electric machine b1310 has occurred, the controllers b1510 can cause the electric machine b1310 to cease motoring the piston assembly b1120. This determined discontinuity can be associated with the engine catching, or stated differently, the discontinuity can be associated with an event in which the thermal power of the engine takes over to move the piston assemblies b1120 within their respective piston chambers b1118.

Although only one electric machine b1310 was described above as motoring a piston assembly b1120 operatively coupled thereto, it will be appreciated that one, some, or all of the piston assemblies b1120 of the closed cycle engine b1110 can be motored or drivingly moved during initialization, e.g., in the manner described above.

In some implementations, commencing motion of the piston assemblies b1120 of the closed cycle engine b1110 at (b1708) includes kick starting at least one piston assembly b1120 of the closed cycle engine b1110. For instance, in initializing the power generation system b1000, the one or more controllers b1510 are configured to cause one or more of the electric machines b1310 operatively coupled with the piston assemblies b1120 to drivingly kickstart their respective piston assemblies b1120. In some implementations, all of the piston assemblies b1120 of the closed cycle engine b1110 can be kickstarted by their respective electric machines b1310. In yet other implementations, some but not all of the piston assemblies b1120 of the closed cycle engine b1110 can be kickstarted by their respective electric machines b1310. For instance, for closed cycle engines b1110 having four (4) piston assemblies b1120, e.g., such as the closed cycle engine b1110 shown in FIG. 5.1.2, two of the four piston assemblies b1120 can be kickstarted. In some further embodiments, only a single piston assembly b1120 of the closed cycle engine b1110 is kickstarted by its associated electric machine b1310.

To cause an electric machine b1310 to drivingly kickstart the piston assembly b1120 operatively coupled thereto, the one or more controllers b1510 can cause the one or more energy storage devices b1312 to provide electrical power to the electric machine b1310. Additionally or alternatively, electrical power can be provided by an alternative power supply. The amount of electrical power, the phase, and the frequency of the provided electrical power can be provided based at least in part on the assigned motion profile. When electrical power is provided to the electric machine b1310, the electric machine b1310 kickstarts the piston assembly b1120 operatively coupled thereto such that the piston assembly b1120 is driven or moved between the cold side b1114 and the hot side b1112 of the closed cycle engine b1110.

In drivingly kickstarting the piston assembly b1120, the electric machine b1310 kickstarts the piston assembly b1120 operatively coupled thereto along a predetermined number of strokes. For instance, in some embodiments, the predetermined number of strokes is no more than one stroke of the piston assembly b1120. In such embodiments, the electric machine b1310 kickstarts the piston assembly b1120 operatively coupled thereto along the predetermined number of strokes and such that the piston assembly b1120 continues moving (e.g., translating) after the electric machine b1310 kickstarts the piston assembly b1120. In yet other embodiments, the predetermined number of strokes is between one and five strokes of the piston assembly b1120.

In initializing the power generation system b1000, the one or more controllers b1510 are configured to create a temperature differential $\Delta T$ between the hot side b1112 and the cold side b1114 of the closed cycle engine b1110. Prior to start up or initialization of the closed cycle engine b1110, the hot side b1112 may not be hotter or at a higher temperature than the cold side b1114, and consequently, the cold side b1114 may not be colder or at a lower temperature than the hot side b1112. Accordingly, the balance of plant b1200 associated with the closed cycle engine b1110 can create a temperature differential $\Delta T$ between the two opposing sides. For instance, in some implementations, the balance of plant b1200 can heat the hot side b1112 of the engine to create the temperature differential $\Delta T$ between the opposing sides. In some implementations, the balance of plant b1200 can cool or remove heat from the cold side b1114 of the engine to create the temperature differential ΔT between the opposing sides. In yet other implementations, the balance of plant b1200 can heat the hot side b1112 of the engine and cool or remove heat from the cold side b1114 of the engine to create the temperature differential ΔT between the opposing sides. The balance of plant b1200 can include any suitable heat source to impart thermal energy or heat the hot side b1112 of the closed cycle engine b1110, such as e.g., a combustor b1224 as will be described below. Furthermore, the balance of plant b1200 can include any suitable heat removal system for removing or extracting heat from the cold side b1114 of the closed cycle engine b1110. Additionally or alternatively, the balance of plant b1200 can include any suitable cooling system for cooling the cold side b1114 of the engine.

At (b1710), for instance, the method (b1700) includes causing a heat source to apply heat to the hot side b1112 of the closed cycle engine b1110. In this way, a temperature differential ΔT between the hot side b1112 and the cold side b1114 of the closed cycle engine b1110 can be created. The one or more controllers b1510 can cause the heat source to apply heat to the hot side b1112 of the closed cycle engine b1110. Particularly, the one or more controllers b1510 can cause the heat source to apply heat to the hot side b1112 before, at the same time, or after commencing motion of the piston assemblies b1120 at (b1708).

The heat source can be any controllable heat source. As one example, for the depicted embodiment of FIG. 5.1.2, the balance of plant b1200 includes a heater loop b1210. The heater loop b1210 includes a combustor b1224 operable to generate heat. Thus, in this embodiment, the heat source is the combustor b1224. Heat generated by the combustor b1224 can be exchanged with the hot side b1112 of the engine, e.g. to impart thermal energy thereto. In causing the combustor b1224 to apply heat to the hot side b1112 of the closed cycle engine b1110, the one or more controllers b1510 are configured to cause a compressor b1222 to move pressurized air along an intake line b1232 of the heater loop b1210 to the combustor b1224. Particularly, the one or more controllers b1510 can cause the rotary components of the compressor b1222 to rotate such that air is moved from an ambient environment into the compressor b1222. The compressor b1222 can pressurize the air, and the pressurized air can flow downstream to the combustor b1224. In addition, the one or more controllers b1510 can cause a fuel control device b1214 to selectively allow a fuel to flow to the combustor b1224 such that the fuel and air can mix and combust in the combustor b1224 to generate heat. The combustor b1224 can be in fluid communication with a hot side b1112 heat exchanger positioned along the heater loop b1210 downstream of the combustor b1224 and in a heat exchange relationship with the hot side b1112 for imparting heat thereto.

At (b1712), the method (b1700) includes removing heat from and/or cooling the cold side b1114 of the closed cycle engine b1110. In this manner, a temperature differential ΔT between the hot side b1112 the cold side b1114 of the closed cycle engine b1110 can be created. As noted above, heat can be removed from and/or the cold side b1114 can be cooled in addition to heat being applied to the hot side b1112 of the closed cycle engine b1110 at (b1710). In some implementations, the one or more controllers b1510 can cause a heat removal system to remove or extract heat from the cold side b1114 of the engine. Particularly, the one or more controllers b1510 can cause the heat removal system to remove/extract heat from the cold side b1114 before, at the same time, or after commencing motion of the piston assemblies b1120 at (b1708). Additionally or alternatively, the one or more controllers b1510 can cause a cooling system to cool the cold side b1114 of the engine. Specifically, the one or more controllers b1510 can cause the cooling system to cool the cold side b1114 before, at the same time, or after commencing motion of the piston assemblies b1120 at (b1708).

The heat removal system can be any suitable system, such as e.g., a system that implements a Rankine, Notamicola, or other suitable cycle. As described herein, a system implementing a Notarnicola cycle operates on a constant density heat addition principle. For instance, a Notarnicola cycle system can include a constant density heat exchanger operable to hold a volume of working fluid at constant density during heat application. By applying heat to a working fluid held at constant density, the temperature and pressure of the working fluid can be increased and thus its potential energy can be increased as well. Advantageously, the increased potential energy of the working fluid can allow for an expansion device or the like to extract more useful work therefrom. In some embodiments, the Notarnicola cycle can include a Wrankel device, or constant density heat exchanger/expansion device, for producing and extracting useful work.

For the depicted embodiment of FIG. 5.1.2, the balance of plant b1200 includes a chiller loop b1212, such as e.g., one of the chiller loops described herein. The chiller loop b1212 can include a cold side b1114 heat exchanger positioned along the chiller loop b1212 and in a heat exchange relationship with the cold side b1114. In initializing the power generation system b1000, the one or more controllers b1510 are configured to cause the cold side b1114 heat exchanger to remove heat from the cold side b1114 of the closed cycle engine b1110. For instance, the cold side b1114 heat exchanger can remove or extract heat from the cold side b1114 of the engine and can use the thermal energy in some useful way. For example, as depicted embodiment of FIG. 5.1.2, the chiller loop b1212 is positioned at least in part in a heat exchange relationship with the heater loop b1210. Accordingly, heat removed from the cold side b1114 of the engine can be exchanged with the heater loop b1210, e.g., to provide for more efficient heating of the hot side b1112 of the engine.

The cooling system can be any suitable system, such as e.g., a system that implements a refrigeration or other cooling cycle. As one example, the balance of plant b1200 can include a refrigeration loop. A cold side b1114 heat exchanger (e.g., an evaporator) can be positioned along the refrigeration loop in a heat exchange relationship with the cold side b1114 of the closed cycle engine b1110. In initializing the power generation system b1000, the one or more controllers b1510 are configured to cause the cold side b1114 heat exchanger to cool the cold side b1114 of the closed cycle engine b1110. Accordingly, the temperature differential ΔT between the cold side b1114 and the hot side b1112 can be increased.

In summary, to initialize the power generation system b1000, at (b1702), the one or more controllers b1510 of the control system b1500 can determine whether to initialize the system based at least in part on data b1530 of indicative of the load state of the one or more energy storage devices b1312 in communication with the electric machines b1310. If the state of charge and charge acceptance rate of the one or more energy storage devices b1312 are within predetermined ranges, e.g., the energy storage devices b1312 have the capacity and the ability to accept electrical power, the one or more controllers b1510 can proceed with initializing the system. On the other hand, if the energy storage devices b1312 do not have the capacity and/or the ability to accept logical power, the one or more controllers b1510 can determine not to initialize the system. At (b1704) and (b1706), the one or more controllers b1510 can cause the one or more piston assemblies b1120 to move to their respective preselected starting positions (e.g., via electrical camming) and one or more motion profiles can be assigned to the electric machines b1310, respectively. At (b1708), the one or more controllers b1510 can commence motion of the piston assemblies b1120. For instance, the one or more controllers b1510 can cause the one or more electric machines b1310 to drivingly motor their respective piston assemblies b1120. That is, when electrical power is provided to the electric machines b1310, the dynamic members b1322 of the electric machines b1310 move in accordance with their assigned motion profiles, and as a result, the piston assemblies b1120 operatively coupled with the electric machines b1310 are moved within their respective piston bodies b1116, e.g., between the hot and cold side b1114 of the engine. In some embodiments, the one or more controllers b1510 can cause the one or more electric machines b1310 to drivingly kickstart their respective piston assemblies b1120. Particularly, electrical power can be supplied to the electric machine b1310 such that the dynamic member b1322 of the electric machine b1310 operatively coupled with the piston assembly b1120 is kickstarted in accordance with assigned motion profile. At (b1710), the one or more controllers b1510 cause a heat source to apply heat to the hot side b1112 of the engine. At (b1712), the one or more controllers b1510 cause a heat removal system and/or a cooling system to remove or cool the cold side b1114 of the engine. Stated differently, at (b1710) and (b1712), a temperature differential ΔT is created between the hot side b1112 and the cold side b1114 of the engine. The created temperature differential ΔT causes the working fluid within the piston bodies b1116 to expand/contract, which causes movement of the piston assemblies b1120 therein. Particularly, the expansion/contraction of the working fluid causes the piston assemblies b1120 to move within their respective piston bodies b1116 between the hot side b1112 and cold side b1114 of the engine. Once the temperature differential ΔT has reached a preselected difference, the piston assemblies b1120 are movable within their respective piston bodies b1116 without assistance from the electric machines b1310 drivingly motoring or kickstarting the pistons b1122, b1124. When the temperature differential ΔT has reached the preselected difference, the system can "let go" or cease motoring/kickstarting the pistons b1122, b1124 and the system can commence normal operation, e.g., in an idle mode or charging mode.

Chapter 5.1.5 - Power Generation System Normal Operation

Once the power generation system b1000 is initialized, the system can operate in a normal mode. That is, the power generation system b1000 can be operated in the idle mode or the charging mode, e.g., as shown in FIG. 5.1.4. As noted above, in the charging mode, the piston assemblies b1120 are moved under their own thermal power (e.g., without need for the electric machines b1310 to motor the piston assemblies b1120) and an electrical load is applied to the one or more electric machines b1310 operatively coupled with the piston assemblies b1120 of the closed cycle engine b1110. In the idle mode, the piston assemblies b1120 are moved under their own thermal power but without or with a negligible electrical load applied on the electric machines b1310.

An example manner in which the power generation system b1000 can be controlled in the normal mode will now be provided. FIG. 5.1.13 provides a flow diagram depicting an example method (b1720) of controlling the power generation system b1000 of FIGS. 1 and 2 in normal mode. Some or all of the method (b1720) can be implemented by the control system b1500 described herein. In addition, it will be appreciated that exemplary method (b1720) can be modified, adapted, expanded, rearranged and/or omitted in various ways without deviating from the scope of the present subject matter.

At (b1722), the method (b1700) includes setting an operating parameter setpoint. For instance, the one or more controllers b1510 can set the operating parameter setpoint. The operating parameter setpoint is indicative of a desired or target value of some variable operating parameter of the power generation system b1000. In some embodiments, for instance, the operating parameter setpoint can be indicative of an operating parameter associated with the electric machines b1310 operatively coupled with the closed cycle engine b1110. For example, the operating parameter setpoint can be indicative of a target electrical current generated by or at the electric machines b1310. As another example, the operating parameter setpoint can be indicative of a target voltage at the electric machines b1310. In other embodiments, the operating parameter setpoint can be indicative of an operating parameter associated with the closed cycle engine b1110. For example, the operating parameter setpoint can be indicative of a target pressure at some station or position within or fluidly connected with one of the piston bodies b1116. As another example, the operating parameter setpoint can be indicative of a target temperature at some station or position within or fluidly connected with one of the piston bodies b1116. In still other embodiments, the operating parameter setpoint can be indicative of an operating parameter associated with the movement of one or more of the piston assemblies b1120 of the closed cycle engine b1110. For example, the operating parameter setpoint can be indicative of a target speed of one or more of the piston assemblies b1120 of the closed cycle engine b1110. As another example, the operating parameter setpoint can be indicative of a target amplitude of one or more of the piston assemblies b1120 of the closed cycle engine b1110.

The operating parameter setpoint can be set by the one or more controllers b1510 based at least in part on a selected control scheme. The control scheme can be selected from one of a plurality of control schemes. As one example, in some embodiments, the power generation system b1000 can be controlled in accordance with an efficiency control scheme. Utilizing the efficiency control scheme, the power generation system b1000 can be controlled in such a way that the efficiency of the overall power generation system b1000 is optimized. In such embodiments, the operating parameter setpoint can be set as an objection function that seeks to maximize the efficiency of the power generation system b1000. As another example, in some embodiments, the power generation system b1000 can be controlled in accordance with a cost control scheme. Utilizing the cost control scheme, the power generation system b1000 can be controlled in such a way that the cost of operating the overall power generation system b1000 is optimized. In such embodiments, the operating parameter setpoint can be set as an objection function that seeks to minimize the cost of operating the power generation system b1000. As a further example, in some other embodiments, the power generation system b1000 can be controlled in accordance with a cost to power ratio control scheme. Utilizing the cost to power ratio control scheme, the power generation system b1000 can be controlled in such a way that the cost to power ratio is minimized during operation. In such embodiments, the operating parameter setpoint can be set as an objection function that seeks to minimize the cost to power ratio of operating the power generation system b1000.

As yet another example, in some embodiments, the power generation system b1000 can be controlled in accordance with a power output control scheme. Utilizing the power output control scheme, the power generation system b1000 can be controlled in such a way that a set amount of electrical power is generated by the electric machines b1310 of the system. **In** such embodiments, the operating parameter setpoint can be set as a target electrical power output of the system. **In** some embodiments, to achieve a particular electrical power output from the electric machines b1310, the operating parameter setpoint can be set as a target piston movement characteristic, such as e.g., the amplitude, speed (i.e., the amplitude of the piston at constant frequency), frequency, etc. The speed of the piston can be the max linear piston speed, for example. Advantageously, as will be explained further below, in some embodiments the operating parameter setpoint can be set as a target piston speed that corresponds to or is associated with a desired or target electrical power output of the electric machines b1310. By setting the operating parameter setpoint as a target piston speed, a one-to-one relationship can be maintained between the piston speed and the electrical power output of the electric machine b1310. Based on the piston speed set point, the fuel input required to heat the hot side b1112 of the closed cycle engine b1110 to achieve the set piston speed can be determined.

For instance, FIG. 5.1.14 provides a table of an example control law. The control law can be stored in one or more of the memory devices of the one or more controllers b1510, for example. The control law can be accessed by the one or more processors. As shown, the control law associates or corresponds various piston speeds with electrical power outputs of the electric machines b1310. Then, as noted above, the fuel input (i.e., an amount of fuel to input into the combustor b1224 for combustion) can be determined. Notably, the piston speed has a one-to-one relationship with the power output of the electric machines b1310. For instance, as depicted in FIG. 5.1.14, a piston speed A2 is associated with a power output A1 in a one-to-one relationship. The piston speeds B2, C2, and so on to N2 are associated with their respective power outputs B1, C1, and N1 in one-to-one relationships as well. Based on the selected piston speed and/or power output, the fuel input is determined to achieve the desired piston speed and/or power output.

Further, in some example embodiments, the operating parameter setpoint can be varied by the one or more controllers b1510 during operation of the power generation system b1000. For instance, in some embodiments, the operating parameter setpoint can be automatically varied based at least in part on the load state of the one or more energy storage devices b1312 in communication with the one or more electric machines b1310. The one or more controllers b1510 can receive data b1530 from one or more sensors associated with the one or more energy storage devices b1312. Based at least in part on the received data b1530, the one or more controllers b1510 can then determine the load state of the one or more energy storage devices b1312 in communication with the electric machines b1310. As noted previously, the load state can be descriptive of a state of charge or charge capacity of the one or more energy storage devices b1312. **In** some implementations, the operating parameter setpoint can be varied based at least in part on the state of charge or charge capacity of the one or more energy storage devices b1312.

By way of example, FIG. 5.1.15 provides a graph depicting an operating parameter setpoint as well as a charge capacity of the one or more energy storage devices b1312 as a function of charge time. As shown, when the charge capacity or state of charge of the one or more energy storage devices b1312 reaches a predetermined charge or predetermined percentage of full charge, the operating parameter setpoint can be varied, e.g., decreased. For instance, in embodiments in which the operating parameter setpoint is indicative of a target piston speed, when the charge capacity of the one or more energy storage devices b1312 reaches the predetermined charge, the operating parameter setpoint of the piston speed can be decreased. In this way, the closed cycle engine b1110 will ultimately produce less useful work, and consequently, the electric machines b1310 operatively coupled thereto will generate less electrical power. Accordingly, the electric machines b1310 can charge the energy storage devices b1312 at a slower charge rate, e.g., to top off or trickle charge the one or more energy storage devices b1312. Moreover, as further shown in FIG. 5.1.15, the operating parameter setpoint can be varied multiple times over the charge time, e.g., when the charge capacity of the one or more energy storage devices b1312 reaches a given predetermined charge. Particularly, when the charge capacity of the one or energy storage devices b1312 reaches a given predetermined charge, the operating parameter setpoint can be varied in a step-like manner as shown in FIG. 5.1.15. In some embodiments, the operating parameter setpoint can be varied in a gradual or ramp-like manner.

In some embodiments, the closed cycle engine b1110 and its associated electric machines b1310 are one of a plurality of closed cycle engines and electric machines b1310 of a power generation system b1000. For instance, FIG. 5.1.16A provides a schematic view of a power generation system b1000 that includes a plurality of closed cycle engines each having one or more associated electric machines b1310. Each of the electric machines b1310 of the system are in communication with a charge controller b1318. A plurality of energy storage devices b1312 are in communication with the charge controller b1318 as shown. A switching device can be positioned between the energy storage devices b1312 and the charge controller b1318. Moreover, each closed cycle engine b1110, electric machine b1310, and energy storage devices b1312 are communicatively coupled with the one or more controllers b1510 of the control system b1500. In such embodiments, instead of varying the operating parameter setpoint of a particular engine, the one or more controllers b1510 can control the engines, e.g., to on and off positions. In this way, when the charge capacity of the energy storage devices b1312 reach a predetermined charge (e.g., as shown in FIG. 5.1.15), the one or more controllers b1510 can cause one or more of the closed cycle engines b1110 to turn off. Moreover, in embodiments where one or more energy storage devices b1312 come on line or require electrical power, the one or more controllers b1510 can cause one or more of the closed cycle engines to turn on. In addition, as noted herein, some closed cycle engine b1110 configurations can include piston assemblies b1120 that are movable independently of one another. In such embodiments, the one or more controllers b1510 can cause one or more of the piston assemblies b1120 to cease movement or startup based at least in part on the charge capacity of the one or more energy storage devices b1312.

Further, the one or more controllers b1510 can activate the one or more switching devices, e.g., for better maintaining the health of the energy storage devices b1312. For instance, the one or more controllers b1510 can activate a switching device to an open position based at least in part on a sensed temperature of the energy storage device. In this way, the one or more controllers b1510 can prevent the energy storage devices b1312 from overheating, among other benefits.

FIG. 5.1.16B provides a schematic view of a distributed power generation network that includes a plurality of closed cycle engines each having one or more associated electric machines according to an example aspect of the present disclosure. For this embodiment, the closed cycle engine b1110 and its associated electric machines b1310 are one of a plurality of closed cycle engines b1110 and electric machines b1310 of a distributed power generation network b1900. For instance, FIG. 5.1.16B provides a schematic view of a distributed power generation network b1900 that includes a plurality of closed cycle engines each having one or more associated electric machines b1310. Each of the electric machines b1310 of the system are in communication with an energy management controller b1334. A switching device can be positioned between each electric machine b1310 and the energy management controller b1334. A power grid b1332 provides communication between the energy management controller b1334 and one or more energy storage devices b1312 and one or more electrical loads b1316. In such embodiments, instead of varying the operating parameter setpoint of a particular engine to control the electrical power output of the distributed network b1900, the one or more controllers b1510 can control the engines b1110, e.g., to on and off positions. In this way, when the charge capacity of the energy storage devices b1312 reach a predetermined charge (e.g., as shown in FIG. 5.1.15), the one or more controllers b1510 can cause one or more of the closed cycle engines b1110 to turn off and/or the switching device can be selectively controlled to control the electrical power to the power grid b1332 and ultimately to the energy storage devices b1312 and electrical loads b1316. Moreover, in embodiments where one or more energy storage devices b1312 and/or electrical loads b1316 come on line or demand additional electrical power, the one or more controllers b1510 can cause one or more of the closed cycle engines b1110 to turn on and/or cause the switching devices to close the circuit to allow electrical power to flow from a given electric machine b1310 to the power grid b1332.

In addition, in some example embodiments, the operating parameter setpoint can be varied by the one or more controllers b1510 based at least in part on the charge acceptance rate of the energy storage devices b1312 in communication with the electric machines b1310. Particularly, the one or more controllers b1510 can receive data b1530 from one or more sensors associated with the one or more energy storage devices b1312. Based at least in part on the received data b1530, the one or more controllers b1510 can then determine the charge acceptance rate of the one or more energy storage devices b1312 in communication with the electric machines b1310. Moreover, the one or more controllers b1510 can determine a charging rate of the energy storage devices b1312, e.g., based at least in part on one or more operating parameters associated with the electric machines b1310 (e.g., electric current and/or voltage at the electric machines b1310). Thereafter, the one or more controllers b1510 can determine whether the charging rate exceeds the charge acceptance rate of the energy storage devices b1312. If the charging rate exceeds the charge acceptance rate of the energy storage devices b1312, the operating parameter setpoint can be changed or varied such that the charging rate is adjusted towards the charge acceptance rate of the energy storage devices b1312. On the other hand, if the charging rate does not exceed the charge acceptance rate of energy storage devices b1312, the operating parameter setpoint can be changed or varied such that the charging rate is adjusted closer to the determined charge acceptance rate of the energy storage devices b1312, e.g., for more efficient charging. Accordingly, in some implementations, the operating parameter setpoint can be varied based at least in part on the charge acceptance rate of the one or more energy storage devices b1312.

In yet other embodiments, the operating parameter setpoint can be varied by the one or more controllers b1510 based at least in part on an anticipated load change on the electric machines b1310. The anticipated load change can be determined by the one or more controllers b1510 based at least in part on the received load state of electrical device(s) in communication with the electric machines b1310, such as energy storage devices b1312, the power grid b1332, electrical loads b1316, etc. For instance, the load state data b1530 can be indicative of an anticipated change in electrical power demanded by the electrical device(s) on the electric machine(s) b1310 and an anticipated time at which the anticipated change in electrical power demanded by the electrical device on the electric machine is to occur. Thus, the magnitude and timing of the load change can be considered by the one or more controllers b1510 and the operating parameter set point can be varied accordingly. In some embodiments, the load state data includes a runtime indicator indicative of a time period or time at which one or more of the electrical devices or elements anticipate coming on line or are scheduled to drop offline. Stated differently, the runtime indicator is indicative of a time period or time at which one or more electrical devices (e.g., electrical loads b1316, energy storage devices b1312, the power grid b1332, etc.) anticipate or are scheduled to receive electrical power from the electric machine b1310. In some embodiments, in addition to the runtime indicator, the load state data includes a power demand schedule indicative of the electrical power demand that each electrical device places on the electric machine(s) b1310 over a given period or runtime. In some embodiments, the power demanded by the electrical devices on the electric machine(s) b1310 are monitored by the one or more controller(s) b1510 so that dynamic load changes can be anticipated. Thus, in some embodiments, the electrical devices are in communication with or communicatively coupled with the one or more controller(s) b1510.

In some embodiments, particularly where there are multiple electrical devices in communication with the electric machine b1310, the load state of the electrical device is indicative of a total anticipated change in electrical power demanded by the plurality of electrical devices on the electric machine for a predetermined time period. For instance, the predetermined time period can be five seconds (5 s). The load state data can be used to anticipate the total anticipated load change over the predetermined time period. Thus, instead of making changes in response to every load change, the system varies the output of the engine and/or electric machine in response to a cumulative anticipated load over the predetermined time period, e.g., (5 seconds). This may, for example, prevent excessive ramping of the closed cycle engine and/or excessive varying of the operating parameter setpoint. Further, in some embodiments, the load state data b1530 can be indicative of the number of electrical devices (e.g., energy storage devices b1312) that are electrically connected with the electric machines b1310 and the electrical power demanded by the electrical devices on the electric machine(s) b1310.

Generally, by anticipating load changes on the electric machine b1310, the output of the closed cycle engine b1110 can more closely balance with the load on the electric machine b1310 when the anticipated load change actually occurs. In this manner, the piston assemblies b1120 are able to better maintain their respective amplitudes during a load change and amplitude spike increases and decreases can be prevented. The operating parameter setpoint can be varied to account for such anticipated loads so as to allow the closed cycle engine b1110 to better maintain steady-state operation despite dynamic load changes on the electric machines b1310.

By way of example, FIG. 5.1.17 provides a graph depicting an applied load on the electric machines b1310 as a function of time as well as a fuel input to the combustor b1224 of a closed cycle engine b1110 as a function of time according to an example aspect of the present disclosure. As shown, the applied load on the electric machines b1310 is initially stable during a charging mode. Then, at time T1, the one or more controllers b1510 receive data indicative of one or more operating parameters associated with the energy storage devices b1312 and/or the electric machine b1310. The data can be received by the one or more controllers b1510 from the charge controller b1318 and/or one or more sensors associated with the electric machines b1310 and/or the energy storage devices b1312. The received data can be indicative of a load state of the one or more energy storage devices b1312. Based on the received data, and particularly on the load state of the one or more energy storage devices b1312, the one or more controllers b1510 can determine whether a load change on the one or more electric machines b1310 is anticipated. In this example, the one or more controllers b1510 determine that a load change is in fact anticipated based at least in part on the received data indicative of the load state of the one or more energy storage devices b1312. Thus, at time T1, the one or more controllers b1510 determine that a load change is anticipated. Particularly, the one or more controllers b1510 determined that a load change is anticipated at time T2. The anticipated load change on the electric machines b1310 at time T2 can correspond with one or more energy storage devices b1312 scheduled to go off line (i.e., no longer receive electrical power from the electric machines b1310).

As further shown in FIG. 5.1.17, the operating parameter setpoint can be varied to account for the anticipated load change on the electric machines b1310. Specifically, the operating parameter setpoint can be varied in such a way that the fuel input to the combustor b1224 is ramped in anticipation of the load change at time T2. In this example, as the anticipated load change is a load decrease, the operating parameter setpoint is varied in such a way that the fuel input to the combustor b1224 is ramped down. However, as will be appreciated, if the anticipated load change is a load increase, the operating parameter setpoint is varied in such a way that the fuel input to the combustor b1224 is ramped up or increased over time. As depicted in FIG. 5.1.17, the one or more controllers b1510 vary the operating parameter setpoint such that the fuel input ramps down and stabilizes at a preselected fuel input known to maintain the amplitude of the pistons b1122, b1124 for the anticipated load change. Advantageously, by ramping the fuel input in anticipation of a load change, the closed cycle engine b1110 may operate more efficiently and better maintain its steady-state operation despite the dynamic drop in electrical load on the electric machines b1310. Furthermore, gradually ramping the closed cycle engine b1110 can reduce vibration of the engine and extend the useful service life of the components of the power generation system b1000, among other benefits.

As another example, FIG. 5.1.17B provides a graph depicting a plurality of applied loads on the electric machines b1310 as a function of time as well as a fuel input to the combustor b1224 of a closed cycle engine b1110 as a function of time according to an example aspect of the present disclosure. As shown, the applied loads on the electric machines b1310 include a first load L1 and a second load L2, which are both stable or steady state at a current time TC during a charging mode. The first load L1 corresponds to a first electrical device in communication with the electric machines b1310 and the second load L2 corresponds to a second electrical device in communication with the electric machines b1310. At the current time TC, the one or more controllers b1510 can receive data indicative of a load state of the electrical devices in communication with the electric machines b1310. Based on the received data, and particularly on the load state of the electrical devices, the one or more controllers b1510 can determine whether any of the electrical devices in communication with the electric machines b1310 anticipate causing a load change on the one or more electric machines b1310, e.g., by dropping offline, demanding more electric power, or demanding less electrical power. In some embodiments, the load state data is indicative of one or more electrical devices coming on line, or transitioning from not demanding electrical power from the electric machines b1510 to demanding electrical power from the electric machines b1510. By considering the load state of the plurality of electrical devices in communication with the electric machines b1510, for this embodiment, the load state of the electrical devices is indicative of a total anticipated change in electrical power demanded by the plurality of electrical devices on the electric machine. Stated differently, based on the received load state data, the one or more controllers b1510 can determine a total anticipated change in electrical power demanded by the plurality of electrical devices on the electric machine within a predetermined time period occurring in the future with respect to the current time TC. The predetermined future time period can be a rolling time period set ahead from the current time by predetermined anticipation period, for example.

As depicted in FIG. 5.1.17B, based on the received load state data, the one or more controllers b1510 determine that the first load L1 corresponding to the first electrical device in communication with the electric machines b1310 anticipates decreasing its demanded power on the electric machines b1310 by -P within a predetermined future time period spanning from T1 to T2. Furthermore, based on the received load state data, the one or more controllers b1510 determine that the second load L2 corresponding to the second electrical device in communication with the electric machines b1310 anticipates increasing its demanded power on the electric machines b1310 by +2P within the predetermined future time period spanning from T1 to T2. Accordingly, the one or more controllers b1510 can determine the net or total anticipated load change on the electric machines b1310 within the predetermined future time period, e.g., by summing all of the anticipated load changes. In this example, the one or more controllers b1510 determine the total anticipated load change on the electric machines b1310 within the predetermined future time period is +P (+2P + -P = +P).

Based on the determined total anticipated load change on the electric machines b1310 within the predetermined future time period, the operating parameter setpoint can be varied to account for the total anticipated load change on the electric machines b1310. Specifically, the operating parameter setpoint can be varied in such a way that the fuel input to the combustor b1224 is ramped in anticipation of the total load change within the predetermined future time period. In this example, as the total anticipated load change is a load increase of +P, the operating parameter setpoint is varied in such a way that the fuel input to the combustor b1224 is ramped up or increased over time as shown in FIG. 5.1.17B. However, as will be appreciated, if the total anticipated load change was a load decrease, the operating parameter setpoint can be varied in such a way that the fuel input to the combustor b1224 is ramped down or decreased over time.

As depicted in FIG. 5.1.17B, in this example, the one or more controllers b1510 vary the operating parameter setpoint such that the fuel input ramps up and stabilizes at a preselected fuel input known to maintain the amplitude of the pistons b1122, b1124 at a predetermined amplitude range despite the anticipated load change. The fuel input can be ramped up such that the preselected fuel input stabilizes at a time TZ, which corresponds with the timing of when the second load L2 increases by +2P, or more broadly, when the load change on the electric machines b1510 is greatest within the predetermined future time window. Advantageously, by considering the total anticipated load on the electric machines b1310 over a predetermined future time period (e.g., 5 seconds), the closed cycle engine b1110 may operate more efficiently and better maintain its steady-state operation despite the dynamic load changes on the electric machines b1310. Further, excessive ramping of the closed cycle engine and/or excessive varying of the operating parameter setpoint can be prevented. For instance, instead of ramping down the fuel input in anticipation of the first load L1 decreasing by -P, the fuel input is ramped up to account for the cumulative anticipated load change occurring within the predetermined future time period, which is anticipated as a load increase due to the second load L2 scheduled or anticipated to increase by +2P. Thus, by ramping the closed cycle engine based on the total anticipated load change within a predetermined future time period, the closed cycle engine and its associated balance of plant may achieve greater overall efficiency and the service lives of the various components of the system may be increased.

At (b1724), returning to FIG. 5.1.13, the method (b1720) includes receiving, from the one or more sensors, data indicative of one or more operating parameters associated with at least one of the closed cycle engine b1110 and the one or more electric machines b1310. For instance, the one or more controllers b1510 can receive data from the one or more of the sensors, e.g., as shown in FIG. 5.1.3. In some embodiments, as noted above, the one or more controllers b1510 can also receive data indicative of a load state of the one or more energy storage devices b1312 in communication with the electric machines b1310. The one or more controllers b1510 can receive the sensor data from the sensors continuously, at a predetermined interval, and/or upon request.

As one example, the one or more controllers b1510 can receive, from the one or more piston sensors, data indicative of one or more piston movement characteristics. As noted previously, example piston movement characteristics can include piston position, speed, amplitude, frequency, and/or phase. Data indicative of the one or more piston movement characteristics can be received for one, some, or all of the piston assemblies b1120. As another example, the one or more controllers b1510 can receive, from the one or more pressure sensors b1522, data indicative of the pressure within the closed cycle engine b1110 at one or more positions or stations (e.g., within the piston bodies b1116 or along fluid pathways fluidly connecting the piston bodies b1116). As yet another example, the one or more controllers b1510 can receive, from the one or more temperature sensors b1524, data indicative of the temperature within the closed cycle engine b1110 at one or more positions or stations (e.g., within the piston bodies b1116 or along fluid pathways fluidly connecting the piston bodies b1116). Further, the one or more controllers b1510 can receive, from the one or more temperature sensors b1524, data indicative of the temperature at the combustor b1224 or heat source operable to provide thermal energy to the hot side b1112 of the closed cycle engine b1110.

In addition, as another example, the one or more controllers b1510 can receive, from the one or more electric machine sensors b1526, data indicative of one or more operating parameters associated with the one or more electric machines b1310. For instance, the one or more controllers b1510 can receive, from the one or more electric machine sensors b1526, data indicative of the electric current generated or passing through the electric machines b1310, including the amplitude, phase, and/or frequency of the electric current. Moreover, the one or more controllers b1510 can receive, from the one or more electric machine sensors b1526, data indicative of the voltage at the electric machines b1310, including the amplitude, phase, and/or frequency of the voltage. Furthermore, the one or more controllers b1510 can receive, from the one or more electric machine sensors b1526, data indicative of the magnetic field at the electric machines b1310.

As yet another example, the one or more controllers b1510 can receive, from the one or more energy storage device sensors b1528, data b1530 indicative of one or more operating parameters associated with the one or more energy storage devices b1312 in communication with the electric machines b1310. For instance, the one or more controllers b1510 can receive, from the one or more electric machine sensors b1526, data b1530 indicative of the load state of the energy storage devices b1312. In some embodiments, as noted above, the load state of the one or more energy storage devices b1312 is descriptive of at least one of a state of charge and a charge acceptance rate of the one or more energy storage devices b1312 in communication with the one or more electric machines b1310.

At (b1726), the method (b1700) includes determining a control command based at least in part on the received data indicative of the one or more operating parameters associated with at least one of the closed cycle engine and the one or more electric machines, wherein the control command is selected based at least in part to cause a change in output of the power generation system. For instance, the one or more controllers b1510 can receive the data at (b1724), and based at least in part on the received data, the one or more controllers b1510 can determine one or more control commands b1532 indicative of instructions for causing a change in an output of the power generation system b1000. Further, in some embodiments, the control command is determined by the one or more controllers b1510 based at least in part on the operating parameter setpoint set at (b1722).

As one example, the determined control command can be indicative of instructions for causing a change in an output of the one or more electric machines b1310, e.g., by adjusting the electrical load on the electric machines b1310, causing the electric machines b1310 to operate in a more or less efficient manner, etc. As another example, the determined control command can be indicative of instructions for causing a change in an output of the closed cycle engine b1110, which in turn causes a change in the output of the electric machines b1310 operatively coupled thereto. For instance, the control command can be indicative of instructions for causing a change to the pressure of the working fluid within or at some station or position within the engine, the temperature differential ΔT between the hot side b1112 and the cold side b1114, the volume of the working fluid within the closed cycle engine b1110, the number of moles of the working fluid within the closed cycle engine b1110, etc.

In some embodiments, the one or more controllers b1510 can determine the control command based on only a single operating parameter, such as e.g., piston speed, electric current at the electric machines b1310, the pressure at some station or position within the closed cycle engine b1110, etc. In yet other embodiments, the one or more controllers b1510 can determine the control command based on only two operating parameters, such as e.g., piston speed and the electric current at the electric machines b1310. In some further embodiments, the one or more controllers b1510 can determine the control command based on two or more operating parameters.

In some embodiments, determining the control command based at least in part on the received data indicative of the one or more operating parameters associated with at least one of the closed cycle engine b1110 and the one or more electric machines b1310 includes determining an error or difference between the operating parameter setpoint set at (b1722) and the received operating parameter at (b1724). The one or more controllers b1510 can then determine the control command based at least in part on the determined difference.

For instance, FIG. 5.1.18 provides a table of an example control law that associates various differences with various control commands b1532. The control law can be stored in one or more of the memory devices of the one or more controllers b1510, for example. The control law can be accessed by the one or more processors. As noted, the control law associates or corresponds various differences with various control commands b1532. Particularly, as depicted, a difference A corresponds to or is associated with a control command D. For instance, if the difference between the operating parameter setpoint and the received operating parameter yields an error or difference A, the control command D associated with the difference A is determined or selected as the control command. The control command D can be indicative of instructions for adjusting a controllable device b1534, such as e.g., a fuel control device b1214, such that an output of the power generation system b1000 is changed. More specifically, the control command D can be indicative of instructions for adjusting the controllable device b1534 such that the difference between the operating parameter setpoint and the sensed operating parameter received as part of the data is driven toward zero (0). In this way, the control command determined or selected based at least in part on data received from the one or more sensors, when provided to a controllable device, can cause the electric machine operatively coupled with the piston assembly to generate a preselected electrical power output.

As further shown in FIG. 5.1.18, a difference B corresponds to or is associated with a control command E, a difference C corresponds to or is associated with a control command F, and so on as the Nth difference corresponds with the Nth control command. In some embodiments, the determined difference and the control command can be associated with one another in a one-to-one relationship. In other embodiments, the determined difference and the control command can be associated with one another based at least in part on some mathematical relationship, such as via derivatives or integrals.

FIG. 5.1.19 provides an example feedback control loop for controlling the power generation system b1000 in accordance with an embodiment of the present disclosure. As shown in FIG. 5.1.19, an operating parameter setpoint b1536 is input into a summation block. For instance, the operating parameter setpoint b1536 input into the summation block can be the operating parameter setpoint set at (b1722). For this example, the operating parameter setpoint b1536 is a target piston speed of a piston assembly b1120 of the closed cycle engine b1110. The piston speed target can be selected to achieve a particular power output of the electric machines b1310. For instance, the one or more controllers b1510 can access the control law of FIG. 5.1.14 and select the piston speed that corresponds with the desired power output of the electric machines b1310. However, the operating parameter setpoint b1536 can be a target value for some other operating parameter associated with at least one of the electric machines b1310 and the closed cycle engine b1110. As further depicted, one or more sensed/calculated operating parameters b1538 received as part of the data at (b1724) are input into the summation block as well. For this example, the sensed/calculated operating parameter b1538 is the piston speed of the piston assembly b1120 of the closed cycle engine b1110. The piston speed of the piston assembly b1120 can be sensed by one of the piston movement sensors b1520.

The operating parameter setpoint b1536 (e.g., the target piston speed) and the sensed/calculated operating parameter b1538 (e.g., the actual piston speed of the piston assembly b1120) are input into the summation block and the one or more controllers b1510 then determine the error or difference b1540 therebetween. The one or more controllers b1510 can then make an adjustment to drive the difference b1540 toward zero (0). For instance, the one or more controllers b1510 can access the control law of FIG. 5.1.18, and can determine a control command that corresponds or is associated with the determined difference b1540. The control command is indicative of instructions for causing a change in an output of the power generation system b1000. As one example, the control command b1532 can be provided to a controllable device b1534 that is operable to control an input (e.g., a thermal input) to a working fluid disposed within the piston body b1116 in which the piston assembly b1120 is disposed. In this way, ultimately, the piston speed of the piston assembly b1120 is changed and the difference b1540 between the operating parameter setpoint b1536 and the sensed/calculated operating parameter b1538 is driven towards zero (0), and consequently, the amount of electrical power generated by the electric machine b1310 operatively coupled thereto is changed.

FIG. 5.1.20 provides another example feedback control loop for controlling the power generation system b1000 in accordance with an embodiment of the present disclosure. As shown in FIG. 5.1.20, in some embodiments, a plurality of differences can be determined and the one or more controllers b1510 can output one or more control commands b1532 based at least in part on the determined differences. Particularly, a first operating parameter setpoint and a first sensed operating parameter are input into a first summation block. Once the first operating parameter setpoint (e.g., the target piston speed) and the first sensed operating parameter (e.g., the actual piston speed of the piston assembly b1120) are input into the first summation block, the one or more controllers b1510 then determine a first difference therebetween. The one or more controllers b1510 can then make an adjustment to drive the first difference toward zero (0), e.g., in a manner noted above. Further, a second operating parameter setpoint and a second sensed operating parameter are input into a second summation block. Once the second operating parameter setpoint (e.g., the target pressure of the working fluid at a station within the engine) and the second sensed operating parameter (e.g., the actual pressure of the working fluid at the station) are input into the second summation block, the one or more controllers b1510 then determine a second difference therebetween. The one or more controllers b1510 can then make an adjustment to drive the second difference toward zero (0), e.g., in a manner noted above. Moreover, a third operating parameter setpoint and a third sensed operating parameter are input into a third summation block. Once the third operating parameter setpoint (e.g., the voltage or current at the electric machines b1310) and the third sensed operating parameter (e.g., the actual voltage or electrical current at the electric machines b 1310) are input into the third summation block, the one or more controllers b1510 then determine a third difference therebetween. The one or more controllers b1510 can then make an adjustment to drive the third difference toward zero (0), e.g., in a manner noted above. In such embodiments, the one or more controllers b1510 can determine each of the differences and determine one or more control commands b1532 that drive the differences toward zero (0). In some instances, the one or more controllers b1510 can assign weights to the differences, e.g., based on some preselected criteria, and determine the control commands b1532 in accordance with the determined differences and applied weights. The applied weights can be selected based at least in part on the selected control scheme and/or the importance of driving a particular difference toward zero (0). Further, the applied weights can be selected based at least in part on an optimization function that seeks to minimize or maximize a certain aspect of the power generation system b1000.

At (b1728), with reference again to FIG. 5.1.13, the method (b1700) includes providing the control command to a controllable device b1534. In this way, the controllable device b1534 can execute the control command (e.g., perform a control action) to change an output of the power generation system b1000. For instance, as shown in FIG. 5.1.19, the determined control command can be provided to the controllable device b1534. The controllable device b1534 can perform a control action b1542 based at least in part on the control command. For instance, if the controllable device b1534 is a valve and the control command is indicative of instructions for opening the valve to a set position or angle, the controllable device b1534 can actuate the valve to the set position based at least in part on the provided control command. When the controllable device b1534 performs the control action b1542 in accordance with the control command, the output of the power generation system b1000 is changed. For example, in performing the control action b1542, the controllable device b1534 can cause a change to the amount of work done on the piston by the working fluid within the piston body b1116 and/or the amount of work done by the piston on the working fluid within the piston body b1116 (e.g., depending on whether the working fluid is expanding or contracting). By changing the work done by or on the piston, the piston speed of the piston assembly b1120 is changed, which ultimately changes the output of the power generation system b1000. As noted herein, the controllable device b1534 can be any device communicatively coupled with the one or more controllers b1510 that, when commanded by the one or more controllers b1510 via a control command, causes a change in output of the power generation system b1000.

FIG. 5.1.21 provides a schematic view of an example heater loop b1210 of the balance of plant b1200 of the power generation system b1000 of FIGS. 5.1 and 5.1.2. As shown, in some example embodiments, the controllable device b1534 is a device operable to change the temperature differential ΔT between the hot side b1112 and the cold side b1114 of the closed cycle engine b1110. As one example, the controllable device b1534 is a fuel control device b1214 positioned along an intake line b1232 of the heater loop b1210. The one or more controllers b1510 can provide the control command to the fuel control device b1214, e.g., to change the amount of fuel flowing to the combustor b1224 positioned downstream of the fuel control device b1214 along the heater loop b1210. The fuel control device b1214 can perform a control action b1542 based at least in part on the provided control command. For instance, the fuel control device b1214 can modulate the amount of fuel provided to the combustor b1224, e.g., to change the fuel/air mixture thereof and consequently the heat input to the hot side b1112 of the closed cycle engine b1110.

As another example, with reference still to FIG. 5.1.21, the controllable device b1534 can be an actuator b1226 operable to move or control an aperture mechanism b1228 of a recirculation eductor b1230 positioned along the heater loop b1210. The actuator b1226 is operatively coupled with the aperture mechanism b1228. For instance, the actuator b1226 and aperture mechanism b1228 of the recirculation eductor b1230 can be the actuator, aperture mechanism, and recirculation eductor described herein, e.g., in Chapter 4. The one or more controllers b1510 can provide the control command to the actuator b1226, e.g., to change the amount of combustion gasses or heating working fluid HWF recirculated to the combustor b1224. In this way, the equivalence ratio (i.e., the ratio of the actual fuel/air ratio to the stoichiometric fuel/air ratio) can be changed, and thus ultimately the heat input to the hot side b1112 of the closed cycle engine b1110 can be changed, which in turn changes the output of the power generation system b1000. In some example embodiments, the aperture mechanism b1228 is a geometry-based control device. For instance, e.g. the geometry-based control device can be built into some portion of the heater body. Based upon one or more flowrates through the passages of the heater body, the geometry-based control device can direct a preselected amount of recirculated heating working fluid HWF to the combustor b1224 with the remaining portion being exhausted from the system and/or used as a heat recovery source for imparting thermal energy to components of the heater loop b1210 and/or the chiller loop b1212 and/or some other thermal system or application in fluid communication with the balance of plant b1200 of the cycle engine.

As yet another example, the controllable device b1534 can be the compressor b1222 of the heater loop b1210. The one or more controllers b1510 can provide the control command to the compressor b1222, e.g., to change the speed of the compressor b1222. In this way, the mass flow and/or the pressure of the air flowing downstream to the combustor b1224 can be changed, and thus ultimately the heat input to the hot side b1112 of the closed cycle engine b1110 can be changed, which in turn changes the output of the power generation system b1000.

As another example, the controllable device b1534 is a device operable to change the temperature differential $\Delta T$ between the hot side b1112 and the cold side b1114 of the closed cycle engine b1110, and particularly, the device is operable to remove more or less heat from the cold side b1114 of the closed cycle engine b1110. For instance, the controllable device b1534 can be a compressor, pump, turbine, or some other controllable device b1534 positioned along the chiller loop b1212 of the balance of plant b1200 of the closed cycle engine b1110.

FIG. 5.1.22 provides a schematic view of two fluidly coupled piston bodies b1116 of the closed cycle engine b1110 of FIG. 5.1.2. As shown, in some example embodiments, the controllable device b1534 is a device operable to change the pressure and/or the number of molecules of the fluid within the closed cycle engine b1110, e.g., at a particular station of the engine. As one example, the controllable device b1534 can be one or more pressure control devices positioned along a fluid pathway fluidly connecting the piston bodies b1116. The controllable device b1534 can include multiple pressure control devices b1140, b1142, e.g., as depicted in FIG. 5.1.22. The pressure control devices b1140, b1142 are communicatively coupled with the one or more controllers b1510. The one or more controllers b1510 can provide the control command to the pressure control devices b1140, b1142, e.g., to change the pressure of the engine working fluid EWF within the closed cycle engine b1110. The pressure control devices b1140, b1142 can perform a control action based at least in part on the provided control command. For instance, the pressure control devices b1140, b1142 can modulate the pressure of the engine working fluid EWF. In this way, the work done by the piston assembly b1120 on the engine working fluid EWF (e.g., during a compression stroke) or the work done on the piston assembly b1120 by the engine working fluid EWF (e.g., during an expansion stroke) can be changed, and thus the output of the power generation system b1000 can be changed.

In yet other embodiments, the pressure control devices b1140, b1142 can add or remove engine working fluid EWF (e.g., the pressure control devices b1140, b1142 can release engine working fluid EWF to an ambient environment) such that the number of molecules of working fluid is changed, which ultimately changes the work done on or by the piston assemblies b1120, which in turn causes the electric machines b1310 to generate more or less electrical power, or more generally, the output of the power generation system b1000 is changed. In yet further embodiments, the closed cycle engine b1110 can include an accumulator b1144 that can change the pressure of the working fluid within the closed cycle engine b1110 or can change the number of molecules of the working fluid. A valve b1146 or the like can be controlled by the one or more controllers b1510 to selectively allow an amount of working fluid to flow into or out of the accumulator b1144.

With reference again to FIG. 5.1.2, in some example embodiments, the controllable device b1534 is a device operable to change the load on the electric machines b1310 (i.e., the torque load thereon), which causes a change in the amount of electrical power generated by the one or more electric machines b1310. Changing the electrical load on the electric machines b1310 may also change the motion characteristics of the piston assemblies b1120 of the closed cycle engine b1110. As one example, the controllable device b1534 is a charge controller b1318 in communication with the electric machines b1310. The charge controller b1318 can include one or more switching devices operable to selectively apply a load on the electric machines b1310. The switching devices of the flow control device can be controlled by the one or more controllers b1510 to selectively apply a predetermined load on the electric machines b1310. For instance, based at least in part on a provided control command, the switching devices can allow the energy storage devices b1312 to apply an electric load on the electric machines b1310, or in some instances, the switching devices can prevent the energy storage devices b1312 from applying an electric load on the electric machines b1310. Further, in some embodiments, based at least in part on one or more control commands b1532, the switching devices of the charge controller b1318 can selectively allow one or more resistor banks of the electrical braking system b1320 to apply an electric load on the electric machines b1310, or in some instances, the switching devices can prevent the resistor banks of the electrical braking system b1320 from applying an electric load on the electric machines b1310.

As another example, the controllable device b1534 can be a mechanical braking system b1400 operatively coupled with the electric machines b1310. The one or more controllers b1510 can control the mechanical braking system b1400 to selectively apply a predetermined load on the electric machines b1310. Particularly, the one or more controllers b1510 can provide the control command to the mechanical braking system b1400 and the mechanical braking system b1400 can perform a control action to execute the control command. For instance, the mechanical braking system b1400, when commanded to do so, can apply a predetermined load on the electric machines b1310. Further, the control command can be indicative of instructions to apply more or less of a predetermined load on the electric machines b1310, e.g., to change an output of the power generation system b1000.

As yet another example, the one or more controllers b1510 can cause the one or more electric machines b1310 to operate in a less efficient manner. For instance, the one or more controllers b1510 can provide a control command indicative of instructions for the electric machines b1310 to operate in a less efficient manner, e.g., to apply a predetermined load or torque on the closed cycle engine b1110, which ultimately changes the output of the power generation system b1000. By way of example, the phase or current advance angle, the amplitude of phase current, or some other operating parameter known to affect the efficiency of electric machines b1310 can be controlled to operate one or more of the electric machines b1310 in a reduced-efficiency mode. In some embodiments, the one or more controllers b1510 can cause the one or more electric machines b1310 operate in a more efficient manner, e.g., to change the applied predetermined torque load on the closed cycle engine b1110.

In some implementations, as noted above, the system can anticipate dynamic load changes on the electric machine and make adjustments to the output of the closed cycle engine in anticipation of such load changes. FIG. 5.1.22A provides a flow diagram for a method (b1800) of controlling a system according to an example aspect of the present disclosure. For instance, the method (b1800) can be implemented to control any of the energy conversion or power generation systems described herein, such as any of the systems of FIGS. 5.1.1, 5.1.2, 5.1.6, 5.1.16A, 5.1.16B, etc. In addition, it will be appreciated that exemplary method (b1800) can be modified, adapted, expanded, rearranged and/or omitted in various ways without deviating from the scope of the present subject matter.

At (b1802), the method (b1800) includes operating a closed cycle engine having a piston assembly movable within a piston chamber defined by a piston body of the closed cycle engine. For instance, the closed cycle engine can be any of the closed cycle engines provided herein. In some implementations, the closed cycle engine is a Stirling engine. In some implementations, the closed cycle engine is a regenerative heat engine. Further, in some implementations, in operating the closed cycle engine b1110 at (b1802), a computer readable medium that includes computer-executable instructions, which, when executed by one or more processors of the controller b1510, cause the controller b1510 to: cause or create a temperature differential between the hot side b1112 and the cold side b1114 of the closed cycle engine b1110 having a piston assembly b1120 movable within a piston chamber b1118 defined by a piston body b1116 of the closed cycle engine b1110, the piston assembly b1120 moved based at least in part on the temperature differential. For instance, the controller b1510 can cause the heater loop b1210 to impart thermal energy to the hot side b1112 and can cause the chiller loop b1212 to remove or extract heat from the cold side b1214. In this way, the engine working fluid EWF to expand and contract, thereby moving the piston assembly b1120 within the piston chamber b1118.

At (b1804), the method (b1800) includes receiving data indicative of a load state of an electrical device in communication with an electric machine operatively coupled with the piston assembly. For instance, the data can be received from various sensors described herein. The controller b1510 can receive data b1530 indicative of a load state of the electrical device in communication with the electric machine b1310 operatively coupled with the piston assembly b1120, the electric machine b1310 being operable to generate electrical power when the piston assembly b1120 is moved within the piston chamber b1118. In some implementations, the electrical device is a power grid. In some implementations, the electrical device is an energy storage device, such as a battery. In some implementations, the electrical device is an electrical device or system of a vehicle. Further, in some implementations, the load state of the electrical device is indicative of the electrical power demanded by the electrical device on the electric machine. In other implementations, the load state of the electrical device includes a runtime indicator indicative of a time period in which the electrical device anticipates coming on line or dropping offline.

In some implementations, the load state of the electrical device received as part of the data can account for a power generation state of one or more other power generation systems. For instance, with reference to FIG. 5.1.6, the load state data associated the electrical device received by the controller b1510 can be indicative of a power generation state of other power generation systems in communication with the electrical device (e.g., the energy storage devices b1312 and/or the electrical loads b1316 via the power grid b1332). Particularly, the load state data associated with the electrical device received by the controller b1510 can be indicative of a power generation state of the first power generation system, the second power generation system, and so on to the Nth power generation system. The power generation state data can be received as part of the load state data of the electrical device as noted above, or in some implementations, directly from the power generation system itself. The power generation state data can include how much and when other power generation systems anticipate providing electrical power to the energy storage devices b1312 and/or the electrical loads b1316 via the power grid b1332. Accordingly, the controller b1510 can receive data b1530 indicative of the power generation state of each power generation system in communication with the electrical device, which can include when and how much the other power generation systems anticipate providing electrical power thereto, which ultimately affects the load state of the electrical device (e.g., the power demanded from the electric machine b1310 by the electrical device). In this way, the closed cycle engine b1110 can ramp up or down to anticipate load changes on the electric machine b1310, e.g., in a similar manner as shown in FIG. 5.1.17.

With reference again to FIGS. 5.1.16A and 5.1.16B, in some implementations, the load state of the electrical device received as part of the data can account for a power generation state of one or more other power generation systems that include a closed cycle engine and one or more associated electric machines. In addition, the load state of the electrical device can take into account a plurality of electrical device load states, such as the load state of each energy storage device b1312 shown in FIG. 5.1.16A. The controller b1510 can utilize the collective load state data of the electrical devices to anticipate power demand changes, or stated differently, load changes on the electric machine b1310. Further, with reference to FIG. 5.1.16B, the load state of the electrical device received as part of the data can account for a load state of one or more other electrical loads b1316 and/or energy storage devices b1312 in communication with the energy management system b1334. In this way, certain closed cycle engines b1110 of the distributed power network b1900 can be ramped up or down or turned on or off to meet anticipated power demand changes, which as noted above, can ultimately cause load changes on the electric machine b1310.

At (b1806), with reference again to FIG. 5.1.22A, the method (b1800) includes determining a load change is anticipated on the electric machine based at least in part on the load state of the electrical device. In some implementations, the load change is a load decrease on the electric machine. In other implementations, the load change is a load increase on the electric machine. In some implementations, the method (b1800) further includes determining whether the anticipated load change is a load increase or a load decrease. The controller b1510 can determine whether a load change is anticipated, e.g., based on the load state data. As noted above, the load state data can be based at least in part on the power generation state of one or more other power generation systems in communication with the electrical device, including the power generation system state of other closed cycle engines and associated electric machines, a plurality of load states or a collective load state of electrical devices in communication with the electric machine, including via a power grid, and/or some combination thereof.

At (b1808), the method (b1800) includes determining a control command indicative of instructions for adjusting an output of at least one of the closed cycle engine and the electric machine prior to the anticipated load change on the electric machine. The one or more controllers b1510 can determine the control command and can provide the control command to a controllable device, such as any of the controllable devices provided herein. In some implementations, the controller b1510 can determine a control command indicative of instructions for adjusting an output of at least one of the closed cycle engine and the electric machine prior to or at the same time as the anticipated load change on the electric machine. In this way, the closed cycle engine can be ramped up or down in anticipation of the load change, or at the very least, immediately upon the load change. Accordingly, in such implementation, the controller b1510 controls the system in a proactive manner.

At (b1810), the method (b1800) includes causing a controllable device to adjust the output of at least one of the closed cycle engine and the electric machine prior to the anticipated load change on the electric machine based at least in part on the determined control command. In some implementations, the controllable device is a fuel control device. In some implementations, the controllable device is a fuel pump. As noted above, in some implementations, the method (b1800) includes determining whether the anticipated load change is a load increase or a load decrease. In such implementations, on one hand, if the anticipated load change is a load decrease, the control command is determined such that a fuel input to the combustor is ramped down to anticipate the load decrease. On the other hand, if the anticipated load change is a load increase, the control command is determined such that a fuel input to the combustor is ramped up to anticipate the load increase. The controller b1510 can cause a controllable device to adjust the output of at least one of the closed cycle engine and the electric machine prior to or at the same time as the anticipated load change on the electric machine based at least in part on the determined control command.

## Power Generation System - Out-of-Sync Condition

Furthermore, in the event the one or more of the piston assemblies b1120 are out of sync with their associated electric machines b1310 with respect to amplitude, phase, and/or frequency, the one or more controllers b1510 can provide a control command to one or more of the controllable devices b1534 noted above to cause an adjustment to at least one of the electric machine b1310 and its associated piston assembly b1120 such that the electric machine b1310 and its associated piston assembly b1120 are synchronized in amplitude, phase, and frequency. For instance, the operating parameters associated with at least one of the one or more electric machines b1310 and the piston assemblies b1120 received as part of the data at (b1724) can include an electric machine b1310 characteristic (e.g., an electric current or voltage at the electric machines b1310) and a piston motion characteristic (e.g., a piston position, speed, amplitude, frequency, phase). Based at least in part on the electric machine b1310 characteristic and the piston motion characteristic, the one or more controllers b1510 can determine whether the electric machine b1310 is out-of-sync (i.e., not synchronous with) or in-sync (i.e., synchronous with) with its associated piston assembly b1120, e.g., in amplitude, phase, and/or frequency. That is, the one or more controllers b1510 can determine whether the electric machine b1310 is synchronous with or not synchronous with its associated piston assembly b1120 in amplitude, phase, and/or frequency.

In response to whether the electric machine b1310 is synchronous or not synchronous with its associated piston assembly b1120, the one or more controllers b1510 can determine a control command. Particularly, if one or more controllers b1510 determine that the electric machines b1310 are in-sync with their respective associated piston assemblies b1120, the one or more controllers b1510 determine a control command indicative of instructions for maintaining synchronization of the amplitude, phase, and frequency of the electric machines b1310 and their associated piston assemblies b1120 and continue forward with driving the difference between an operating parameter setpoint and sensed or calculated parameters. However, if the one or more controllers b1510 determine that an electric machine b1310 is out-of-sync with its associated piston assembly b1120, the one or more controllers b1510 can determine a control command indicative of instructions for adjusting an amplitude, phase, and/or frequency of one of the electric machine b1310 and its associated piston assembly b1120, e.g., so that the electric machine b1310 and its associated piston assembly b1120 are synchronous in amplitude, phase, and frequency.

As one example, in the event an electric machine b1310 is determined as out-of-sync with its associated piston assembly b1120, the one or more controllers b1510 can cause the electrical braking system b1320 to adjust at least one of the amplitude, phase, and/or frequency of at least one of the electric machine b1310 and the piston assembly b1120 such that they become synchronous. Particularly, the control command can be indicative of instructions for applying an electrical load on the one or more electric machines b1310, e.g., to synchronize the amplitude, phase, and frequency of the electric machine b1310 with the amplitude, phase, and frequency of its associated piston assembly b1120. As another example, in the event an electric machine b1310 is determined as out-of-sync with its associated piston assembly b1120, the one or more controllers b1510 can cause the mechanical braking system b1400 to adjust at least one of the amplitude, phase, and/or frequency of at least one of the electric machine b1310 and the piston assembly b1120 such that they become synchronous. As yet another example, in the event an electric machine b1310 is determined as out-of-sync with its associated piston assembly b1120, the one or more controllers b1510 can cause the electric machine b1310 to operate in a more or less efficient way to adjust at least one of the amplitude, phase, and/or frequency of at least one of the electric machine b1310 and the piston assembly b1120 such that they become synchronous. In further examples, some other controllable device b1534 mentioned herein can adjust at least one of the amplitude, phase, and/or frequency of at least one of the electric machine b1310 and the piston assembly b1120 such that they become synchronous.

## Chapter 5.1.6 - Power Generation System Failure Event Prevention

The power generation system b1000 can include features and control logic for preventing various failure events. For instance, the one or more controllers b1510 can include control logic for preventing the piston assemblies b1120 from hitting, impacting, or otherwise engaging the walls of the piston body b1116 in which they are disposed. By way of example, if the load on the electric machines b1310 unexpectedly and rapidly decreases, the one or more controllers b1510 can include control logic for controlling the system such that the piston assemblies b1120 are prevented from slamming against or engaging the walls of their respective piston bodies b1116. The one or more controllers b1510 can include control logic for preventing other failure events of the power generation system b1000 as well.

Generally, to prevent failure events from occurring during operation of the power generation system b1000, the one or more controllers b1510 can monitor operating parameters associated with the electric machines b1310, operating parameters associated with the closed cycle engine b1110, and/or operating parameters associated with the energy storage devices b1312 in communication with the electric machines b1310. Particularly, the one or more controllers b1510 can determine whether the operating parameters received as part of the data are within a preselected operating range. For instance, the one or more controllers b1510 can determine whether an operating parameter received as part of the data exceeds (i.e., go above or below) a predetermined threshold or predetermined rate of change. If the one or more controllers b1510 determine that the operating parameter exceeds the predetermined threshold or predetermined rate of change, the one or more controllers b1510 can determine a control command indicative of instructions for returning the operating parameter within the preselected operating range. The control command can then be provided to one or more controllable devices b1534 of the system, such as e.g., any of the controllable devices b1534 noted herein. The controllable devices b1534 can then perform a control action to execute the control command, e.g., to drive or return the operating parameter within the preselected operating range.

In some embodiments, the control system b1500 of the power generation system b1000 is operatively configured to prevent the piston assemblies b1120 of the closed cycle engine b1110 from impacting (i.e., physically contacting) the walls of the piston body b1116 in which the piston assemblies b1120 are disposed. As noted above, the one or more controllers b1510 can include control logic for preventing the piston assemblies b1120 from impacting the walls of the piston body b1116 in which they are disposed.

As one example, during operation of the power generation system b1000 in charging mode, the one or more controllers b1510 can monitor the piston position and the amplitude of the piston assemblies b1120 (i.e., the stroke of the pistons b1122, b1124). For instance, the one or more controllers b1510 can receive data indicative of one or more operating parameters associated with the closed cycle engine b1110. The operating parameters received as part of the data can include the position and amplitude of the piston assemblies b1120. In such embodiments, if the piston amplitude is outside of a preselected operating range or the position is such that the piston is in danger of striking the piston body b1116 or some other component, the one or more controllers b1510 can determine a control command indicative of instructions for returning or moving the piston amplitude toward the preselected operating range. The control command can be provided to a controllable device b1534 by the one or more controllers b1510. The controllable device b1534 can be any of the controllable devices b1534 described herein. The controllable device b1534 can perform a control action to execute the control command. Accordingly, the one or more piston assemblies b1120 can be prevented from impacting the walls of the piston bodies b1116 in which they are disposed.

As another example, during operation of the power generation system b1000 in charging mode, the one or more controllers b1510 can monitor the electrical load on the electric machines b1310. The electric current and/or the voltage at the electric machine b1310 can be used to monitor the electrical load on the electric machine b1310. Other operating parameters can be used as well to monitor the electrical load on the electric machines b1310. In such embodiments, if the operating parameter associated with the electric machine b1310 is outside of a preselected operating range, the one or more controllers b1510 can determine a control command indicative of instructions for returning or moving the operating parameter associated with the electric machine b1310 toward the preselected operating range. The control command can be provided to a controllable device b1534 by the one or more controllers b1510. The controllable device b1534 can be any of the controllable devices b1534 described herein. The controllable device b1534 can perform a control action to execute the control command. Accordingly, the one or more piston assemblies b1120 can be prevented from impacting the walls of the piston bodies b1116 in which they are disposed.

By way of example, FIG. 5.1.23 provides a graph depicting an applied load on the electric machines b1310 as a function of time as well as piston amplitude as a function of time according to an example aspect of the present disclosure. As shown, the applied load on the electric machines b1310 is initially stable during a charging mode. Then, after some time, the applied load on the electric machines b1310 unexpectedly and rapidly decreases. The one or more controllers b1510 can receive the electric current at the electric machines b1310 as the operating parameter. The one or more controllers b1510 can determine that the electric current is outside of the preselected operating range. Particularly, the one or more controllers b1510 can determine that the electric current has exceeded (e.g., gone below) a predetermined threshold, e.g., as shown in FIG. 5.1.23.

Notably, when the electrical load on the electric machines b1310 unexpectedly and rapidly decreases, the amplitude of the piston assemblies b1120 rapidly increases or spikes. When the amplitude of the piston assemblies b1120 spikes, the piston assemblies b1120 are at risk of impacting the walls of their respective piston bodies b1116. Accordingly, the one or more controllers b1510 determine a control command indicative of instructions for returning the applied electrical load on the electric machines b1310 within the preselected operating range, or for this example, applying an electrical load on the electric machines b1310 such that the pistons b1122, b1124 are prevented from impacting the walls of the piston bodies b1116. The determine control command can be provided to one or more controllable devices b1534, such as e.g., any of the control devices described herein. The controllable device b1534 can then perform a control action to execute the control command.

As one example, the controllable device b1534 can be the charge controller b1318. The switching devices of the charge controller b1318 can cause the electrical braking system b1320 to apply a near instantaneous electrical load on the electric machines b1310 such that the applied load on the electric machines b1310 rapidly increases at or near its load prior to the unexpected and rapid decrease, e.g. as shown in FIG. 5.1.23. In this way, the piston assemblies b1120 can be prevented from impacting their respective piston bodies b1116. As another example, the controllable device b1534 can be the mechanical braking system b1400. The one or more controllers b1510 can cause the mechanical braking system b1400 to apply a load or counter torque on the electric machines b1310 such that the applied load on the electric machines b1310 rapidly increases at or near its load prior to the unexpected and rapid decrease.

As further shown in FIG. 5.1.23, after the controllable device b1534 performs the control action to execute the control command, the applied electrical load returns to near its load or value prior to the unexpected and rapid decrease. Accordingly, the piston amplitude decreases relatively rapidly based on the applied load. In some embodiments, to prevent damage to one or more components of the power generation system b1000. the power generation system b1000 can be ramped down. To ramp down the system, the one or more controllers b1510 of the control system b1500 can cause the applied load on the electric machines b1310 to decrease in a stepwise manner, e.g., as shown in FIG. 5.1.23. By stepping down the applied load on the electric machines b1310, the closed cycle engine b1110 can gradually ramp down thus allowing the piston assemblies b1120 to gradually decrease in amplitude. For instance, each time the applied load on the electric machines b1310 is stepped down, the fuel input to the system can be ramped down or decreased gradually. When the applied load on the electric machines b1310 reaches at or near zero (0), the piston amplitude can stabilize in the idle mode and the power generation system b1000 can thereafter cease operation. As shown in FIG. 5.1.23, the applied load can be stepped down first and the piston amplitude can ramped down. In other embodiments, however, the piston amplitude can first be ramped down and then the applied load can be stepped down.

Stepping down the applied load on the electric machines b1310 after an unexpected and rapid decrease and subsequent increase allows for the closed cycle engine b1110 to gradually ramp down. Advantageously, this allows a smooth transition for the relatively slow transient response closed cycle engine b1110 to gradually cease operation. Moreover, gradually ramping down the closed cycle engine b1110 can reduce vibration of the system and extend the useful service life of the components of the power generation system b1000, among other benefits.

Further, additionally or alternatively to the braking systems, the power generation system b1000 can include a system that prevents the piston assemblies b1120 from impacting the walls of the piston bodies b1116. For instance, FIG. 5.1.24 provides a schematic view of an example impact prevention system b1550. For this embodiment, the piston assembly b1120 has two opposing pistons b1122, b1124 operatively coupled via a connection member b1126. The opposing pistons b1122, b1124 are disposed within respective piston bodies b1116. An electric machine b1310 is operatively coupled with the piston assembly b1120. Specifically, the electric machine b1310 includes a stator b1324, which is stationary, and a dynamic member b1322 operatively coupled with the connection member b1126 of the piston assembly b1120. The dynamic member b1322 is movable in unison with the piston assembly b1120. As further depicted in FIG. 5.1.24, the impact prevention system b1550 includes bumpers b1552 mechanically coupled with the piston bodies b1116. A plurality of springs b1554 can mechanically couple the bumpers b1552 with their respective piston bodies b1116. If the amplitude of the piston assembly b1120 moves outside of the preselected operating range, the dynamic member b1322 of the electric machine b1310 can impact or engage a pair of bumpers b1552, thereby preventing the piston assembly b1120 from impacting one of the walls of one of the piston bodies b1116. Accordingly, the impact prevention system b1550 acts as a failsafe and prevents damage to the piston assembly b1120, the piston bodies b1116, and/or the electric machine b1310. In other embodiment, the bumpers b1552 can be a magnetic bumper positioned within the piston body b1116 adjacent to or positioned along the piston chamber.

In some embodiments, the control system b1500 of the power generation system b1000 is operatively configured to prevent the electric machines b1310 from overheating. In such embodiments, with reference again to FIG. 5.1.2, during operation of the power generation system b1000, particularly in charging mode, the one or more controllers b1510 can monitor the temperature of the electric machines b1310. Particularly, the one or more controllers b1510 can receive data indicative of one or more operating parameters associated with the electric machines b1310. For instance, the one or more operating parameters received as part of the data can include a temperature of the electric machines b1310. The data can be received from an electric machine b1310 sensor operable to detect or measure temperature at the electric machine b1310.

Next, the one or more controllers b1510 can determine whether the electric machine b1310 temperature is within a preselected operating range. For example, the one or more controllers b1510 can determine whether the electric machine b1310 temperature exceeds (e.g., goes above) a predetermined temperature threshold. If the one or more controllers b1510 determine that the electric machine b1310 temperature exceeds the predetermined temperature threshold, the one or more controllers b1510 can determine a control command indicative of instructions for returning the electric machine b1310 temperature below the predetermined temperature threshold. The control command can then be provided to one or more controllable devices b1534 of the system, such as e.g., any of the controllable devices b1534 noted herein. The controllable devices b1534 can then perform a control action to execute the control command, e.g., to drive or return the electric machine b1310 temperature below the predetermined temperature threshold. As one example, when the controllable device b1534 performs the control action to execute the control command, the control action performed by the controllable device b1534 can cause the piston assemblies b1120 to reduce in speed or amplitude for a predetermined time, e.g., until the electric machine b1310 temperature falls below the predetermined temperature threshold. As yet another example, when the controllable device b1534 performs the control action to execute the control command, the control action performed by the controllable device b1534 can cause the load on the electric machine b1310 to decrease for a predetermined time, e.g., until the electric machine b1310 temperature falls below the predetermined temperature threshold.

In some embodiments, the control system b1500 of the power generation system b1000 is operatively configured to prevent overcharging of the one or more energy storage devices b1312 in communication with the electric machines b1310. In such embodiments, during operation of the power generation system b1000, particularly in charging mode, the one or more controllers b1510 can monitor the load state of the one or more energy storage devices b1312 in communication with the electric machines b1310. Particularly, the one or more controllers b1510 can receive data indicative of state of charge and/or the charge acceptance rate of the one or more energy storage devices b1312. The data can be received from one or more sensors associated with the one or more energy storage devices b1312. The load state of the energy storage devices can be continuously monitored or monitored at a predetermined intervals, for example.

In some embodiments, the one or more controllers b1510 can then determine whether the state of charge of the energy storage devices b1312 is within a preselected operating range. For example, the one or more controllers b1510 can determine whether the state of charge of the energy storage devices b1312 exceeds (e.g., goes above) a predetermined charge threshold or capacity. If the one or more controllers b1510 determine that the state of charge exceeds the predetermined charge threshold, the one or more controllers b1510 can determine a control command indicative of instructions for ceasing charging operations. The control command can then be provided to one or more controllable devices b1534 of the system, such as e.g., any of the controllable devices b1534 noted herein. The controllable devices b1534 can then perform a control action to execute the control command, e.g., to cease charging operation.

In some embodiments, after receiving the data, the one or more controllers b1510 can determine whether the charge acceptance rate of the energy storage devices b1312 is within a preselected operating range. For example, the one or more controllers b1510 can determine whether the charge acceptance rate of the energy storage devices b1312 exceeds (e.g., falls below) a predetermined minimum charge rate threshold. If the one or more controllers b1510 determine that the charge acceptance rate exceeds the predetermined minimum charge rate threshold, the one or more controllers b1510 can determine a control command indicative of instructions for ceasing charging operations. The control command can then be provided to one or more controllable devices b1534 of the system, such as e.g., any of the controllable devices b1534 noted herein. The controllable devices b1534 can then perform a control action to execute the control command, e.g., to cease charging operation.

**Chapter 5.1.7 - Power Generation System Transition Between Modes**

The power generation system b1000 can be transitioned from the idle mode to the charging mode in the following example manner. FIG. 5.1.25 provides a graph depicting an applied load on the electric machines b1310 as well as a fuel input as a function of time as the system transitions from an idle mode to a charging mode according to an example aspect of the present disclosure. As shown, the power generation system b1000 initially is operating in an idle mode. To transition from the idle mode to the charging mode, the one or more controllers b1510 of the control system b1500 can cause the applied load on the electric machines b1310 to increase in a stepwise manner, e.g., as shown in FIG. 5.1.25. By stepping up the applied load on the electric machine b1310, the closed cycle engine b1110 can gradually ramp up. Particularly, for each step up of the applied load, the fuel input is gradually ramped up or increased linearly until the rise of the applied load step is met. Once the rise of the applied load step is met, the fuel input levels off or becomes constant for a time. When the fuel input matches the rise of the applied load step, the one or more controllers b1510 cause the applied load to step up once again, and the fuel input is once again gradually ramped up or increased in a linear manner until the rise of the applied load step is met once again. When the applied load on the electric machines b1310 reaches a preselected charging mode load, the fuel input ramps up to meet the preselected charging mode load and levels off thereafter during the charging mode. As shown in FIG. 5.1.25, the applied load can be stepped up first and the fuel input can then be ramped up. In other embodiments, however, the fuel input can first be ramped up and then the applied load can be stepped up.

When transitioning from the idle mode to the charging mode, stepping up the applied load on the electric machines b1310 allows for the closed cycle engine b1110 to gradually ramp up. Advantageously, this allows a smooth transition for the relatively slow transient response closed cycle engine b1110 to synchronize with the relatively fast transient response electric machines b1310. Moreover, gradually ramping up the heat input to the hot side b1112 of the closed cycle engine b1110 allows for the piston assemblies b1120 to more closely match the amplitude, phase, and frequency of their associated electric machines b1310 when transitioning from the idle mode to the charging mode, which can reduce vibration of the system and extend the useful service life of the components of the power generation system b1000, among other benefits.

The power generation system b1000 can be transitioned from the charging mode to the idle mode in the following example manner. FIG. 5.1.26 provides a graph depicting an applied load on the electric machines b1310 as well as a fuel input as a function of time as the system transitions from a charging mode to an idle mode according to an example aspect of the present disclosure. As shown, the power generation system b1000 initially is operating in a charging mode. To transition from the charging mode to the idle mode, the one or more controllers b1510 of the control system b1500 can cause the applied load on the electric machines b1310 to decrease in a stepwise manner, e.g., as shown in FIG. 5.1.26. By stepping down the applied load on the electric machine b1310, the closed cycle engine b1110 can gradually ramp down. Particularly, for each step down of the applied load, the fuel input is gradually ramped down or decreased linearly until the decrease in rise of the applied load step is met. Once the decrease in rise of the applied load step is met, the fuel input levels off or becomes constant for a time. When the fuel input matches the decrease in rise of the applied load step, the one or more controllers b1510 cause the applied load to step down once again, and the fuel input is once again gradually ramped down or decreased in a linear manner until the decrease in rise of the applied load step is met once again. When the applied load on the electric machines b1310 reaches a preselected idle mode load (i.e., a load of zero (0) or substantially zero (0)), the fuel input ramps down to meet the preselected idle mode load and levels off thereafter during the idle mode. As shown in FIG. 5.1.26, the applied load can be stepped down first and the fuel input can then be ramped down. In other embodiments, however, the fuel input can first be ramped down and then the applied load can be stepped down.

When transitioning from the charging mode to the idle mode, stepping down the applied load on the electric machines b1310 allows for the closed cycle engine b1110 to gradually ramp down. Advantageously, this allows a smooth transition for the relatively slow transient response closed cycle engine b1110 to synchronize with the relatively fast transient response electric machines b1310 during the transition phase between the charging mode and the idle mode. Moreover, gradually ramping down the heat input to the hot side b1112 of the closed cycle engine b1110 allows for the piston assemblies b1120 to more closely match the amplitude, phase, and frequency of their associated electric machines b1310 when transitioning from the charging mode to the idle mode, which can reduce vibration of the system and extend the useful service life of the components of the power generation system b1000, among other benefits.

Chapter 5.1.8 - Heat pump system Overview

FIG. 5.1.27 provides a schematic view of a heat pump system b1600 according to an aspect of the present disclosure. Generally, the heat pump system b1600 is configured to heat and/or cool an environment, a sealed volume, another system, other devices, some combination thereof, etc. For instance, in some example embodiments, the heat pump system b1600 can used as a cryocooler. The heat pump system b1600 can be used for other suitable applications as well.

As shown the heat pump system b1600 includes one or more electric machines b1310 and one or more closed cycle engines b1110. Each electric machine b1310 can be operatively coupled with a piston assembly b1120 of one of the closed cycle engines b1110. For instance, as depicted in FIG. 5.1.27, an electric machine b1310 is shown operatively coupled with a piston assembly b1120 of the closed cycle engine b1110. The one or more closed cycle engines b1110 can be any one of the closed cycle engines b1110 described herein. The electric machines b1310 can function as electric motors to drivingly move the piston assemblies b1120 within their respective piston bodies b1116. Particularly, electrical power can be provided to the electric machines b1310 (e.g., from any suitable power supply). When electrical power is provided to the electric machines b1310, the electric machines b1310 can drivingly move the piston assemblies b1120 within their respective piston bodies b1116.

In drivingly moving the piston assemblies b1120, a temperature differential $\Delta T$ is created. Specifically, by drivingly moving the piston assemblies b1120, a temperature differential $\Delta T$ is created between a hot side b1112 and a cold side b1114 of the engine. During operation, the hot side b1112 is hotter than or at a higher temperature than the cold side b1114. In some embodiments, the hot side b1112 can be hotter than an ambient temperature. In yet other embodiments, the hot side b1112 can be an ambient temperature and the cold side b1114 can be colder than the ambient temperature. The hot side b1112 can give off heat, which can be used for heating applications. As depicted in FIG. 5.1.27, the hot side b1112 is in fluid communication with a thermal system b1610. Relatively cool fluid can exit the thermal system b1610 and can be heated by the hot side b1112 of the closed cycle engine b1110, or more broadly, by heat generated by the engine b1110. The relatively warm fluid can then be passed through the thermal system b1610 to provide heating thereto. Accordingly, heat can be removed from the hot side b1112 and provided to a thermal system b1610. The thermal system b1610 can be any suitable system operable to receive heat or thermal energy. The cold side b1114, on the other hand, can take in or receive heat, which can be useful for cooling applications, such as e.g., cryogenic cooling applications. For instance, as illustrated in FIG. 5.1.27, the cold side b1114 is in fluid communication with a thermal system b1612. Relatively warm fluid can exit the thermal system b1612 and can be cooled by the cold side b1114 of the closed cycle engine b1110. The relatively cool fluid can then be passed through the thermal system b1612 to provide cooling thereto.

As further depicted in FIG. 5.1.27, the heat pump system b1600 includes a control system b1500 for controlling various aspects of the heat pump system b1600, including controlling the closed cycle engine b1110 and the one or more electric machines b1310 operatively coupled thereto. The control system b1500 can include one or more control devices, such as sensors, controllers, processors, controllable devices, etc. that can monitor and control various aspects of the heat pump system b1600. For instance, the control system b1500 of the heat pump system b1600 can include any of the control devices described above with reference to the power generation system b1000.

The heat pump system b1600 can be controlled by the control system b1500 in the same or similar manner as power generation system b1000 is controlled by its associated control system b1500. Particularly, the control system b1500 of the heat pump system b1600 can be controlled as summarized below.

The control system b1500 can initialize the heat pump system b1600 in the following example manner. The control system b1500 can first determine whether a thermal system in fluid communication with the closed cycle engine b1110 requires heating and/or cooling. For instance, one or more thermal systems b1610, can be in fluid communication with the hot side b1112 of the closed cycle engine b1110 and/or one or more thermal systems b1612 can be in fluid communication with the cold side b1114 of the closed cycle engine b1110, e.g., as shown in FIG. 5.1.27. More particularly, the thermal systems b1610, b1612 described above can be in a heat exchange relationship with the hot side b1112 and/or the cold side b1114, e.g., so that fluid can be warmed by the hot side b1112 and provided to the thermal system b1610 or systems in fluid communication with the hot side b1112 and/or so that fluid can be cooled by the cold side b1114 and provided to the thermal system b1612 or systems in fluid communication with the cold side b1114 of the closed cycle engine b1110. If one, some, or all of the thermal systems require heating/cooling, the control system b1500, or more particularly one or more controllers b1510 of the control system b1500, can initialize the heat pump system b1600. In some embodiments, in response to the thermal demand, the controller b1510 is configured to cause the electric machine to change an amplitude of the piston assembly, which ultimately changes the thermal output of the closed cycle engine b1110.

In some implementations, in initializing the heat pump system b1600, the control system b1500 can move the one or more piston assemblies b1120 of the closed cycle engine b1110 to their respective preselected starting positions, e.g. in a manner described above. For instance, the electric machines b1310 operatively coupled with the piston assemblies b1120 can electrically cam or move the piston assemblies b1120 to their respective preselected starting positions. Further, in initializing the heat pump system b1600, the one or more controllers b1510 of the control system b1500 can assign a motion profile to the one or more electric machines b1310. In this way, when electrical power is provided to the one or more electric machines b1310, the electric machines b1310 can move in accordance with the assigned motion profiles. The one or more controllers b1510 can assign motion profiles to the one or more electric machines b1310 in any suitable manner, e.g., such as in any of the manners described herein.

With the piston assemblies b1120 in their respective preselected starting positions and the motion profiles assigned to the electric machines b1310, the control system b1500 can commence motion of the piston assemblies b1120. For instance, electrical power can be provided to the electric machines b1310. The power supplied or provided to the electric machines b1310 can be based at least in part on the assigned motion profiles. When the electric machines b1310 are provided with electric power, the electric machines b1310 drivingly motor the piston assemblies b1120 such that the piston assemblies b1120 are moved within their respective piston bodies b1116 of the closed cycle engine b1110. As the piston assemblies b1120 are moved within their respective piston bodies b1116, a temperature differential $\Delta T$ is created, e.g., due to the expansion and compression of the working fluid within the piston bodies b1116. Once a predetermined temperature differential $\Delta T$ is created, the heat pump system b1600 is initialized.

During normal operation of the heat pump system b1600, the electric machines b1310 continue motoring the piston assemblies b1120, in contrast to the power generation system b1000 in which the electric machines b1310 cease motoring and switch to electric generators to generate electrical power. In normal mode, the control system b1500 can control the heat pump system b1600 in the same or similar manner as the power generation system b1000 is controlled by its associated control system b1500. For instance, the one or more controllers b1510 of the control system b1500 of the heat pump system b1600 can set an operating parameter setpoint. For instance, the operating parameter setpoint can be indicative of a target value for a piston motion characteristic associated with the piston assemblies b1120. For example, the piston motion characteristic can be a piston position, speed, amplitude, phase, and/or frequency. In other embodiments, the operating parameter setpoint can be indicative of a target value of a characteristic associated with the electric machines b1310. For instance, the characteristic associated with the electric machines b1310 can be an electric current through the electric machines b1310, a voltage at the electric machines b1310, and/or some other characteristic associated with the electric machines b1310. Furthermore, in some embodiments, the operating parameter setpoint can be indicative of a target value associated with a temperature input or output of the closed cycle engine b1110. For example, the target value can be a target temperature at the hot side b1112 and/or a target value at the cold side b1114 of the closed cycle engine b1110.

In addition, during normal operation of the heat pump system b1600, the one or more controllers b1510 can receive data indicative of one or more operating parameters associated with at least one of the closed cycle engine b1110 and the electric machines b1310. The operating parameters can be any of the operating parameters described herein. The one or more controllers b1510 can receive the data from any of the sensors described herein.

With the data received, the one or more controllers b1510 of the control system b1500 determine a control command based at least in part on the received data. The control command can be indicative of instructions for adjusting an output of the heat pump system b1600. Particularly, the control command can be indicative instructions for a controllable device b1534 to perform a control action that ultimately changes an output of the heat pump system b1600, such as e.g., a change in the temperature differential $\Delta T$ between the hot side b1112 and the cold side b1114. Accordingly, once the one or more controllers b1510 determine the control command, the control command can be provided to one or more controllable devices b1534 of the heat pump system b1600. In this way, the controllable devices b1534 can perform a control action to execute the control command. As one example, the control command can be indicative of instructions for changing the amount of electric power provided to electric machines b1310. A controllable device b1534 operable to change the amount of electrical power to the electric machines b1310 can cause the amount of power provided to the electric machines b1310 to change. By changing the amount of electrical power to the electric machines b1310, the amount of electrical energy that can be converted to mechanical energy by the electric machines b1310 is changed, and consequently, the temperature differential $\Delta T$ between the hot side b1112 and the cold side b1114 of the closed cycle engine b1110 is also changed. Thus, ultimately the heat input or output of the heat pump system b1600 is changed.

In addition, the heat pump system b1600 can include one or more failure event systems and/or control logic for preventing failure events of the system. For example, in some embodiments, the alleged machines are in communication with an electrical braking system b1320 operatively configured to protect the electric machines b1310 during operation, e.g., from electrical transients, including current and voltage spikes. The electrical braking system b1320 can also be configured to apply a load on the electric machine b1310 in the event electrical power is rapidly and unexpectedly decreased. In this way, the closed cycle engine b1110 does not overspeed. That is, the electrical braking system b1320 can apply a load on the electric machine b1310 nearly instantaneous in the event of electric power loss such that the piston assemblies b1120 of the closed cycle engine b1110 do not increase in amplitude such that the piston assemblies b1120 impact the walls of the piston bodies b1116. In other embodiments, the heat pump system b1600 can include a mechanical braking system b1400 operable to apply a counter torque or load on the electric machines b1310 in the event of electrical power loss or some other rapid change in electrical power. The electrical braking system b1320 and/or the mechanical braking system b1400 can apply loads on the electric machines b1310 in the event of a rapid and unexpected power change in a step-like manner so as to allow the piston assemblies b1120 to ramp down. Furthermore, the closed cycle engine b1110 can include mechanical impact prevention systems for preventing the piston assemblies b1120 and/or the dynamic member b1322 of the electric machine b1310 from impacting one or more walls of the piston bodies b1116.

Chapter 5.1.9 - Computing System

FIG. 5.1.28 provides an example computing system in accordance with an example embodiment of the present disclosure. The one or more controllers, computing devices, or other control devices described herein can include various components and perform various functions of the one or more computing devices of the computing system b2000 described below.

As shown in FIG. 5.1.28, the computing system b2000 can include one or more computing device(s) b2002. The computing device(s) b2002 can include one or more processor(s) b2004 and one or more memory device(s) b2006. The one or more processor(s) b2004 can include any suitable processing device, such as a microprocessor, microcontroller, integrated circuit, logic device, and/or other suitable processing device. The one or more memory device(s) b2006 can include one or more computer-readable media, including, but not limited to, non-transitory computer-readable media, RAM, ROM, hard drives, flash drives, and/or other memory devices.

The one or more memory device(s) b2006 can store information accessible by the one or more processor(s) b2004, including computer-readable instructions b2008 that can be executed by the one or more processor(s) b2004. The instructions b2008 can be any set of instructions that when executed by the one or more processor(s) b2004, cause the one or more processor(s) b2004 to perform operations. In some embodiments, the instructions b2008 can be executed by the one or more processor(s) b2004 to cause the one or more processor(s) b2004 to perform operations, such as any of the operations and functions for which the computing system b2000 and/or the computing device(s) b2002 are configured, such as e.g., operations for controlling certain aspects of power generation systems and/or controlling one or more closed cycle engines as described herein. For instance, the methods described herein can be implemented in whole or in part by the computing system b2000. Accordingly, the method can be at least partially a computer-implemented method such that at least some of the steps of the method are performed by one or more computing devices, such as the exemplary computing device(s) b2002 of the computing system b2000. The instructions b2008 can be software written in any suitable programming language or can be implemented in hardware. Additionally, and/or alternatively, the instructions b2008 can be executed in logically and/or virtually separate threads on processor(s) b2004. The memory device(s) b2006 can further store data b2010 that can be accessed by the processor(s) b2004. For example, the data b2010 can include models, databases, etc.

The computing device(s) b2002 can also include a network interface b2012 used to communicate, for example, with the other components of system (e.g., via a network). The network interface b2012 can include any suitable components for interfacing with one or more network(s), including for example, transmitters, receivers, ports, controllers b1510, antennas, and/or other suitable components. One or more controllable devices b1534 and other controllers b1510 can be configured to receive one or more commands or data from the computing device(s) b2002 or provide one or more commands or data to the computing device(s) b2002.

The technology discussed herein makes reference to computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to describe the presently disclosed subject matter, including the best mode, and also to provide any person skilled in the art to practice the subject matter, including making and using any devices or systems and performing any incorporated methods. The patentable scope of the presently disclosed subject matter is defined by the claims, and may include other examples that occur to those skilled in the art. Such other examples

## EP 3 973 168 B1

are intended to be within the scope of the claims if they include structural elements that do not differ from the literal language of the claims, or if they include equivalent structural elements with insubstantial differences from the literal languages of the claims. The scope of the invention(s) described herein is defined by one or more of the claims, including combinations of two or more claims or clauses (as set forth below) and may include other examples that occur to those skilled in the art. For example, aspects of the invention(s) are provided by the subject matter of the following clauses, which are intended to cover all suitable combinations unless dictated otherwise based on logic or the context of the clauses and/or associated figures and description:

**Claims**

1. A system (b1000) for energy conversion, comprising:

   a closed cycle engine (b110) having a piston body (b1116) defining a hot side (b1112) and a cold side (b1114) and having a piston assembly (b1120) movable within the piston body (b1116);
   an electric machine (b154) operatively coupled with the piston assembly (b1120), wherein the electric machine (b154) is operable to generate electrical power when the piston assembly (b1120) is moved within a piston chamber (b1118); and
   a control system (b1500), comprising:

      one or more sensors (b1520) operable to detect a piston movement characteristic of the piston assembly (b1120) movable within the piston body (b1116);
      a controllable device (b1534) operable to control an input to an engine working fluid disposed within the piston body (b1116); and
      a controller (b1510) communicatively coupled with the one or more sensors (b1520) and the controllable device (b1534), the controller being configured to:

         determine a control command based at least in part on data received from the one or more sensors (b1520), the control command selected based at least in part to cause the electric machine (b154) operatively coupled with the piston assembly (b1120) to generate a preselected electrical power output, and wherein the control command is selected based at least in part to generate a Beale number greater than or equal to 0.10; and
         provide the determined control command to the controllable device (b1534), the controllable device (b1534) operable to control an input to the engine working fluid disposed within the piston body (b1116), wherein expansion and contraction of the engine working fluid causes the piston assembly (b1120) to move within the piston body (b1116).

2. The system (b1000) of claim 1, wherein the electric machine (b154) comprises:

   a dynamic member (b1322) operably connected to the piston assembly (b1120), and
   a stator assembly (b1324) surrounding the dynamic member (b1322), wherein the electric machine (b154) is operatively coupled to the piston assembly (b1120) to generate electrical power when the piston assembly (b1120) is moved within the piston chamber (b1118).

3. The system (b1000) of claim 2, wherein the piston assembly (b1120) has two opposing pistons (b1122) operatively coupled via a connection member (b1126), and wherein the dynamic member (b1322) is connected to the connection member (b1126) of the piston assembly (b1120).

4. The system (b1000) of any of claims 1-3, wherein the piston assembly (b1120) has two opposing pistons (b1122) operatively coupled via a connection member (b1126), and wherein the system (b1000) defines an outer end (a103) and an inner end (a104) each relative to a lateral extension of the piston assembly (b1120), wherein the outer end (a103) defines laterally distal ends of the system and the inner end (a104) defines a laterally inward position of the system, and wherein the electric machine (c092) is positioned at the inner end (a104) between the pistons (a1011) of the piston assembly (a1010).

5. The system (b1000) of claim 4, wherein the hot side (a221) of the closed cycle engine (a10) is at or proximate to the outer end (a103), and wherein the cold side (a222) of the closed cycle engine (a10) is at or proximate to the inner end (a104).

**6.** The system (b1000) of claim 4 or 5, the system comprising:

a heater body (c100) configured to produce a heating working fluid, wherein the heater body (c100) is positioned at or proximate to the hot side (a221) of the closed cycle engine (a10), and wherein the electric machine (c092) is positioned at or proximate to the cold side (a222) of the closed cycle engine (a10).

**7.** The system (b1000) of any of claims 4-6, the system comprising:
a cold side heat exchanger (a42) positioned in heat exchanger relationship with the cold side (a222) of the closed cycle engine (a10) and configured to remove heat from the cold side (a222).

**8.** The system (b1000) of claim 7, wherein the cold side heat exchanger (a42) is positioned at or proximate to the inner end (a104) of the closed cycle engine (a10).

**9.** The system (b1000) of any of claims 4-8, wherein the system comprises two heater bodies (c100) each positioned next to four hot chambers at the hot side (a221) of the closed cycle engine (a10), and wherein the hot chambers are positioned in circumferential arrangement relative to a reference longitudinal axis (c204) of the closed cycle engine (a10).

**10.** The system (b1000) of any of claims 1-9, the system comprising:
a chiller loop (b240) positioned in a heat transfer relationship with the cold side (b1114) of the closed cycle engine (b110).

**11.** The system (b1000) of claim 10, wherein the controllable device is operable to remove more or less heat from the cold side of the closed cycle engine (b110), and wherein the controllable device is a compressor, pump, and/or turbine positioned along the chiller loop.

**12.** The system (b1000) of any of claims 1-11, the system comprising:
a heater loop (b210) operable to generate heat and positioned in heat exchanger relationship with the hot side of the closed cycle engine (b110).

**13.** The system (b1000) of claim 12, wherein the controllable device (b1534) is a fuel control device (b330) operable to selectively allow a fuel to flow to a combustor (b132) positioned in fluid communication with a hot side heat exchanger (b118) positioned along the heater loop (b210) in heat exchanger relationship with the hot side (b1112) of the closed cycle engine (b110).

**14.** The system (b1000) of claim 12 or 13, wherein the controllable device (b1534) is a compressor (b220) positioned along an intake line (b212) of the heater loop (b210), the compressor (b220) operable to change an amount of air received by a combustor (b132) positioned along the intake line (b212) downstream of the compressor (b220).

**15.** The system (b1000) of any of claims 1-14, the system comprising:

an energy storage device (b1312) in communication with the electric machine (b154),
wherein the energy storage device (b1312) in communication with the electric machine (b154) is operable to receive electrical power therefrom or provide electrical power thereto.

**16.** The system (b1000) of claim 15, wherein the data received from the one or more sensors (b1520) is indicative of a load state of the energy storage device (b1312), and wherein the control command is determined based at least in part on the load state of the energy storage device (b1312), and wherein the load state of the energy storage device (b1312) is indicative of at least one of a state of charge or a charge acceptance rate of the energy storage device (b1312).

**17.** The system (b1000) of any of claims 1-16, wherein the controller (b1510) is configured to:

set an operating parameter setpoint;
receive data indicative of one or more operating parameters associated with at least one of the closed cycle engine (b110) and the electric machine (b154); and
determine the control command based at least in part on the received data indicative of the one or more operating parameters and the operating parameter setpoint, the control command being indicative of instructions for causing a change in an output of the system.

18. The system (b1000) of claim 17, wherein the operating parameter setpoint is indicative of an operating parameter associated with the electric machine (b154), and wherein the operating parameter is indicative of a target electrical current, a target voltage, or both, generated by or at the electric machine (b154).

19. The system (b1000) of claim 17 or 18, wherein the operating parameter setpoint is indicative of an operating parameter associated with the closed cycle engine (b110), and wherein the operating parameter setpoint associated with the closed cycle engine (b110) is indicative of one or more of a target pressure at a position within or fluidly connected with the piston body (b1116) or a target temperature at a position within or fluidly connected with the piston body (b1116).

20. The system (b1000) of any of claims 17-19, wherein the operating parameter setpoint is indicative of an operating parameter associated with the closed cycle engine (b110), and wherein the operating parameter setpoint associated with the closed cycle engine (b110) is indicative of an operating parameter associated with movement of the piston assembly (b1120), and wherein the operating parameter associated with movement of the piston assembly (b1120) is one or more of a target speed of the piston assembly (b1120), a target amplitude of the piston assembly (b1120), or a target position of the piston assembly (b1120) at some point along a stroke of the piston assembly (b1120).

## Patentansprüche

1. Ein System (b1000) zur Energieumwandlung, bestehend aus:

   einen Motor mit geschlossenem Zyklus (b110) mit einem Kolbenkörper (b1116), der eine heiße Seite (b1112) und eine kalte Seite (b1114) definiert, und mit einer Kolbenanordnung (b1120), die innerhalb des Kolbenkörpers (b1116) beweglich ist;
   eine elektrische Maschine (b154), die operativ mit der Kolbenanordnung (b1120) gekoppelt ist, wobei die elektrische Maschine (b154) bedienbar ist, um elektrische Energie zu erzeugen, wenn die Kolbenanordnung (b1120) innerhalb einer Kolbenkammer (b1118) bewegt wird, und
   einem Kontrollsystem (b1500), bestehend aus:

   eine oder mehrere Sensoren (b1520), die zur Erfassung einer Kolbenbewegung, die für die Kolbenanordnung (b1120) charakteristisch ist und innerhalb des Kolbenkörpers (b1116) beweglich ist, bedienbar sind;
   eine steuerbare Einrichtung (b1534), die zur Steuerung eines Eingangs zu einer im Kolbenkörper angeordneten Motorarbeitsflüssigkeit (b1116) bedienbar ist, und
   eine Steuerung (b1510), die kommunikativ mit einem oder mehreren Sensoren (b1520) und der steuerbaren Einrichtung (b1534) gekoppelt ist, wobei die Steuerung so konfiguriert ist, dass
   einen Steuerbefehl zu bestimmen, der zumindest teilweise auf Daten basiert, die von einem oder mehreren Sensoren (b1520) empfangen werden, wobei der ausgewählte Steuerbefehl zumindest teilweise dazu führt, dass die elektrische Maschine (b154), die operativ mit der Kolbenanordnung (b1120) gekoppelt ist, eine vorgewählte elektrische Leistung erzeugt, und wobei der Steuerbefehl zumindest teilweise ausgewählt ist, um eine Beale-Zahl größer oder gleich 0,10 zu erzeugen, und
   Bereitstellung des ermittelten Steuerbefehls an die steuerbare Einrichtung (b1534), die steuerbare Einrichtung (b1534), die bedienbar ist, um einen Eingang in das Motorarbeitsfluid zu steuern, das innerhalb des Kolbenkörpers (b1116) angeordnet ist, wobei die Expansion und Kontraktion des Motorarbeitsfluids bewirkt, dass sich die Kolbenanordnung (b1120) innerhalb des Kolbenkörpers (b1116) bewegt.

2. Das System (b1000) nach Anspruch 1, wobei die elektrische Maschine (b154) Folgendes umfasst:

   ein dynamisches Element (b1322), das betriebsbereit mit der Kolbenanordnung (b1120) verbunden ist, und
   eine Statoranordnung (b1324), die das dynamische Element (b1322) umgibt, wobei die elektrische Maschine (b154) operativ mit der Kolbenanordnung (b1120) gekoppelt ist, um elektrische Energie zu erzeugen, wenn die Kolbenanordnung (b1120) innerhalb der Kolbenkammer (b1118) bewegt wird.

3. Das System (b1000) nach Anspruch 2, wobei die Kolbenanordnung (b1120) zwei gegenüberliegende Kolben (b1122) aufweist, die über ein Verbindungselement (b1126) operativ gekoppelt sind, und wobei das dynamische Element (b1322) mit dem Verbindungselement (b1126) der Kolbenanordnung (b1120) verbunden ist.

4. Das System (b1000) nach einem der Ansprüche 1-3, wobei die Kolbenanordnung (b1120) zwei gegenüberliegende Kolben (b1122) aufweist, die über ein Verbindungselement (b1126) operativ gekoppelt sind, und wobei das System (b1000) ein äußeres Ende (a103) und ein inneres Ende (a104) jeweils relativ zu einer seitlichen Verlängerung der Kolbenanordnung (b1120) definiert, wobei das äußere Ende (a103) seitlich distale Enden des Systems definiert und das innere Ende (a104) eine seitlich nach innen gerichtete Position des Systems definiert und wobei die elektrische Maschine (c092) am inneren Ende (a104) zwischen den Kolben (a1011) der Kolbenanordnung (a1010) positioniert ist.

5. Das System (b1000) nach Anspruch 4, wobei die heiße Seite (a221) des Motors mit geschlossenem Zyklus (a10) am äußeren Ende (a103) oder nahe daran ist und wobei die kalte Seite (a222) des Motors mit geschlossenem Zyklus (a10) am inneren Ende (a104) oder nahe daran ist.

6. Das System (b1000) nach Anspruch 4 oder 5, das System umfasst:
ein Heizkörper (c100), der so konfiguriert ist, dass er ein Heizarbeitsfluid erzeugt, wobei der Heizkörper (c100) an oder nahe der heißen Seite (a221) des Motors mit geschlossenem Zyklus (a10) positioniert ist und wobei die elektrische Maschine (c092) an oder nahe der kalten Seite (a222) des Motors mit geschlossenem Zyklus (a10) positioniert ist.

7. Das System (b1000) nach einem der Ansprüche 4-6, das System umfasst:
einen kaltseitigen Wärmetauscher (a42), der in Wärmetauscherbeziehung mit der kaltseitigen Seite (a222) des Motors mit geschlossenem Kreislauf (a10) positioniert und so konfiguriert ist, dass er Wärme von der kalten Seite (a222) ableitet.

8. Das System (b1000) nach Anspruch 7, wobei der Kaltseitenwärmetauscher (a42) am oder nahe dem inneren Ende (a104) des geschlossenen Zyklusmotors (a10) positioniert ist.

9. Das System (b1000) nach einem der Ansprüche 4-8, wobei das System zwei Heizkörper (c100) umfasst, die jeweils neben vier heißen Kammern an der heißen Seite (a221) des Motors mit geschlossenem Zyklus (a10) positioniert sind, und wobei die heißen Kammern in umlaufender Anordnung relativ zu einer Bezugslängsachse (c204) des Motors mit geschlossenem Zyklus (a10) positioniert sind.

10. Das System (b1000) nach einem der Ansprüche 1-9, das System umfasst:
einer Kühlerschlaufe (b240), die in einem Wärmeübertragungsverhältnis zur kalten Seite (b1114) des Motors mit geschlossenem Kreislauf (b110) positioniert ist.

11. Das System (b1000) nach Anspruch 10, wobei die steuerbare Einrichtung bedienbar ist, um mehr oder weniger Wärme von der kalten Seite des Motors mit geschlossenem Zyklus (b110) zu entfernen, und wobei die steuerbare Einrichtung ein Kompressor, eine Pumpe und/oder eine Turbine ist, die entlang der Kühlerschleife positioniert sind.

12. Das System (b1000) nach einem der Ansprüche 1-11, das System umfasst:
ein Heizkreis (b210), der zur Erzeugung von Wärme bedienbar ist und in Wärmetauscher-Beziehung mit der heißen Seite des Motors mit geschlossenem Kreislauf (b110) positioniert ist.

13. Das System (b1000) nach Anspruch 12, wobei die steuerbare Einrichtung (b1534) eine Kraftstoffsteuereinrichtung (b330) ist, die bedienbar ist, um einen Brennstoff selektiv zu einem Brenner (b132) fließen zu lassen, der in Fluidkommunikation mit einem Heißseitenwärmetauscher (b118) positioniert ist, der entlang der Heizerschleife (b210) in Wärmetauscherbeziehung mit der Heißseite (b1112) des Motors mit geschlossenem Kreislauf (b110) positioniert ist.

14. Das System (b1000) nach Anspruch 12 oder 13, wobei die steuerbare Einrichtung (b1534) ein Kompressor (b220) ist, der entlang einer Ansaugleitung (b212) des Heizkreises (b210) positioniert ist, wobei der Kompressor (b220) bedienbar ist, um eine Luftmenge zu ändern, die von einer Brennkammer (b132) empfangen wird, die entlang der Ansaugleitung (b212) hinter dem Kompressor (b220) positioniert ist.

15. Das System (b1000) nach einem der Ansprüche 1-14, das System umfasst:
eine Energiespeichervorrichtung (b1312) in Kommunikation mit der elektrischen Maschine (b154), wobei die Energiespeichervorrichtung (b1312) in Kommunikation mit der elektrischen Maschine (b154) bedienbar ist, um elektrische Energie davon zu empfangen oder elektrische Energie dafür bereitzustellen.

**16.** Das System (b1000) nach Anspruch 15, wobei die von einem oder mehreren Sensoren (b1520) empfangenen Daten auf einen Lastzustand des Energiespeichers (b1312) hinweisen und wobei der Steuerbefehl zumindest teilweise auf der Grundlage des Lastzustands des Energiespeichers (b1312) bestimmt wird und wobei der Lastzustand des Energiespeichers (b1312) auf mindestens einen Ladezustand oder eine Ladungsannahmerate des Energiespeichers (b1312) hinweist.

**17.** Das System (b1000) nach einem der Ansprüche 1-16, wobei die Steuerung (b1510) konfiguriert ist, um:

einen Sollwert für den Betriebsparameter festlegen;
Daten erhalten, die auf einen oder mehrere Betriebsparameter hinweisen, die mit mindestens einem Motor mit geschlossenem Zyklus (b110) und der elektrischen Maschine (b154) verbunden sind, und
den Steuerbefehl zumindest teilweise auf der Grundlage der empfangenen Daten bestimmen, die auf einen oder mehrere Betriebsparameter und den Sollwert des Betriebsparameters hinweisen, wobei der Steuerbefehl auf Anweisungen zum Verursachen einer Änderung einer Ausgabe des Systems hinweist.

**18.** Das System (b1000) nach Anspruch 17, wobei der Sollwert des Betriebsparameters auf einen Betriebsparameter hinweist, der mit der elektrischen Maschine (b154) verbunden ist, und wobei der Betriebsparameter auf einen elektrischen Zielstrom, eine Zielspannung oder beides hinweist, der von oder an der elektrischen Maschine (b154) erzeugt wird.

**19.** Das System (b1000) nach Anspruch 17 oder 18, wobei der Betriebsparameter-Sollwert auf einen Betriebsparameter hinweist, der mit dem Motor mit geschlossenem Zyklus (b110) verbunden ist, und wobei der Betriebsparameter-Sollwert, der mit dem Motor mit geschlossenem Zyklus (b110) verbunden ist, auf einen oder mehrere eines Solldrucks in einer Position innerhalb oder flüssig mit dem Kolbenkörper (b1116) oder einer Solltemperatur in einer Position innerhalb oder flüssig mit dem Kolbenkörper (b1116) verbunden ist.

**20.** Das System (b1000) nach einem der Ansprüche 17-19, wobei der Betriebsparameter-Sollwert einen Betriebsparameter anzeigt, der mit dem Motor mit geschlossenem Zyklus (b110) verbunden ist, und wobei der Betriebsparameter-Sollwert, der mit dem Motor mit geschlossenem Zyklus (b110) verbunden ist, einen Betriebsparameter anzeigt, der mit der Bewegung der Kolbenanordnung (b1120) verbunden ist, und wobei der Betriebsparameter, der mit der Bewegung der Kolbenanordnung (b1120) verbunden ist, eine oder mehrere einer Zielgeschwindigkeit der Kolbenanordnung (b1120), einer Zielamplitude der Kolbenanordnung (b1120) oder einer Zielposition der Kolbenanordnung (b1120) an einem Punkt entlang eines Hubs der Kolbenanordnung (b1120) ist.

**Revendications**

**1.** Un système (b1000) de conversion d'énergie comprenant:

un moteur à cycle fermé (b110) ayant un corps de piston (b1116) définissant un côté chaud (b1112) et un côté froid (b1114) et ayant un ensemble de piston (b1120) mobile dans le corps du piston (b1116);
une machine électrique (b154) couplée en fonctionnement à l'ensemble piston (b1120), dans laquelle la machine électrique (b154) peut produire de l'énergie électrique lorsque l'ensemble piston (b1120) est déplacé à l'intérieur d'une chambre piston (b1118); et
un système de contrôle (b1500), comprenant:

un ou plusieurs capteurs (b1520) utilisables pour détecter un mouvement du piston caractéristique de l'ensemble du piston (b1120) mobile à l'intérieur du corps du piston (b1116);
un dispositif contrôlable (b1534) permettant de commander une entrée dans un fluide de fonctionnement du moteur disposé dans la carrosserie du piston (b1116); et
un contrôleur (b1510) couplé de manière communicative à un ou plusieurs capteurs (b1520) et au dispositif contrôlable (b1534), le contrôleur étant configuré pour:

déterminer une commande de commande basée au moins en partie sur les données reçues d'un ou de plusieurs capteurs (b1520), la commande de commande sélectionnée basée au moins en partie pour faire en sorte que la machine électrique (b154) couplée au piston (b1120) génère une sortie de puissance électrique présélectionnée, et dans laquelle la commande de commande est sélectionnée basée au moins en partie pour générer un nombre Beale supérieur ou égal à 0,10; et

fournir la commande de commande déterminée au dispositif contrôlable (b1534), le dispositif contrôlable (b1534) pouvant commander une entrée dans le fluide de fonctionnement du moteur disposé à l'intérieur du corps du piston (b1116), dans lequel l'expansion et la contraction du fluide de fonctionnement du moteur provoquent le déplacement de l'ensemble piston (b1120) à l'intérieur du corps du piston (b1116).

2. Le système (b1000) de la revendication 1, dans lequel la machine électrique (b154) comprend:

un élément dynamique (b1322) relié de façon opérative à l'ensemble piston (b1120), et
un ensemble stator (b1324) entourant l'élément dynamique (b1322), dans lequel la machine électrique (b154) est couplée en fonctionnement à l'ensemble piston (b1120) pour générer de l'énergie électrique lorsque l'ensemble piston (b1120) est déplacé à l'intérieur de la chambre piston (b1118).

3. Le système (b1000) de la revendication 2, dans lequel l'ensemble piston (b1120) a deux pistons opposés (b1122) couplés par un élément de connexion (b1126), et dans lequel l'élément dynamique (b1322) est connecté à l'élément de connexion (b1126) de l'ensemble piston (b1120).

4. Le système (b1000) de l'une des revendications 1 à 3, dans lequel l'ensemble piston (b1120) a deux pistons opposés (b1122) couplés par un élément de connexion (b1126), et dans lequel le système (b1000) définit une extrémité extérieure (a103) et une extrémité intérieure (a104) chacune par rapport à une extension latérale de l'ensemble piston (b1120), dans lequel l'extrémité extérieure (a103) définit les extrémités latéralement distales du système et l'extrémité intérieure (a104) définit une position latéralement vers l'intérieur du système, et dans lequel la machine électrique (c092) est positionnée à l'extrémité intérieure (a104) entre les pistons (a1011) de l'ensemble piston (a1010).

5. Le système (b1000) de la revendication 4, dans lequel le côté chaud (a221) du moteur à cycle fermé (a10) se trouve à l'extrémité extérieure (a103) ou à proximité de celle-ci, et dans lequel le côté froid (a222) du moteur à cycle fermé (a10) se trouve à l'extrémité intérieure (a104) ou à proximité de celle-ci.

6. Le système (b1000) de la revendication 4 ou 5, le système comprenant:
un corps chauffant (c100) configuré pour produire un fluide de travail chauffant, dans lequel le corps chauffant (c100) est positionné à ou à proximité du côté chaud (a221) du moteur à cycle fermé (a10), et dans lequel la machine électrique (c092) est positionnée à ou à proximité du côté froid (a222) du moteur à cycle fermé (a10).

7. Le système (b1000) de l'une des revendications 4-6, le système comprenant:
un échangeur de chaleur côté froid (a42) placé en relation échangeur de chaleur avec le côté froid (a222) du moteur à cycle fermé (a10) et configuré pour éliminer la chaleur du côté froid (a222).

8. Le système (b1000) de la revendication 7, dans lequel l'échangeur de chaleur côté froid (a42) est positionné à l'extrémité interne (a104) du moteur à cycle fermé (a10) ou à proximité de celle-ci.

9. Le système (b1000) de l'une quelconque des revendications 4 à 8, dans lequel le système comprend deux corps chauffants (c100) placés chacun à côté de quatre chambres chaudes du côté chaud (a221) du moteur à cycle fermé (a10), et dans lequel les chambres chaudes sont placées dans une disposition circonférentielle par rapport à un axe longitudinal de référence (c204) du moteur à cycle fermé (a10).

10. Le système (b1000) de l'une des revendications 1 à 9, le système comprenant:
une boucle de refroidissement (b240) placée dans une relation de transfert de chaleur avec le côté froid (b1114) du moteur à cycle fermé (b110).

11. Le système (b1000) de la revendication 10, dans lequel le dispositif contrôlable permet d'éliminer plus ou moins de chaleur du côté froid du moteur à cycle fermé (b110), et dans lequel le dispositif contrôlable est un compresseur, une pompe et/ou une turbine positionnés le long de la boucle du refroidisseur.

12. Le système (b1000) de l'une quelconque des revendications 1 à 11, le système comprenant:
une boucle chauffante (b210) utilisable pour générer de la chaleur et positionnée en relation échangeur de chaleur avec le côté chaud du moteur à cycle fermé (b110).

13. Le système (b1000) de la revendication 12, dans lequel le dispositif contrôlable (b1534) est un dispositif de commande du carburant (b330) pouvant être actionné de manière sélective pour permettre à un carburant de s'écouler vers une chambre de combustion (b132) positionnée en communication fluide avec un échangeur de chaleur côté chaud (b118) positionné le long de la boucle du réchauffeur (b210) en relation avec le côté chaud (b1112) du moteur à cycle fermé (b110).

14. Le système (b1000) de la revendication 12 ou 13, dans lequel le dispositif contrôlable (b1534) est un compresseur (b220) positionné le long d'une ligne d'admission (b212) de la boucle du réchauffeur (b210), le compresseur (b220) pouvant changer une quantité d'air reçue par une chambre de combustion (b132) positionnée le long de la ligne d'admission (b212) en aval du compresseur (b220).

15. Le système (b1000) de l'une des revendications 1-14, le système comprenant:
un dispositif de stockage d'énergie (b1312) en communication avec la machine électrique (b154), dans lequel le dispositif de stockage d'énergie (b1312) en communication avec la machine électrique (b154) peut être utilisé pour recevoir de l'énergie électrique ou fournir de l'énergie électrique à partir de celle-ci.

16. Le système (b1000) de la revendication 15, dans lequel les données reçues d'un ou de plusieurs capteurs (b1520) indiquent un état de charge du dispositif de stockage d'énergie (b1312), et dans lequel la commande de commande est déterminée sur la base au moins en partie de l'état de charge du dispositif de stockage d'énergie (b1312), et dans lequel l'état de charge du dispositif de stockage d'énergie (b1312) indique au moins un état de charge ou un taux d'acceptation de charge du dispositif de stockage d'énergie (b1312).

17. Le système (b1000) de l'une des revendications 1-16, dans lequel le contrôleur (b1510) est configuré pour:

fixer un paramètre de consigne de fonctionnement;
recevoir des données indiquant un ou plusieurs paramètres de fonctionnement associés à au moins un des moteurs à cycle fermé (b110) et à la machine électrique (b154); et
détermine la commande de contrôle sur la base, au moins en partie, des données reçues indiquant un ou plusieurs paramètres de fonctionnement et le point de consigne du paramètre de fonctionnement, la commande de contrôle indiquant des instructions pour provoquer une modification d'une sortie du système.

18. Le système (b1000) de la revendication 17, dans lequel le point de consigne du paramètre de fonctionnement est indicatif d'un paramètre de fonctionnement associé à la machine électrique (b154), et dans lequel le paramètre de fonctionnement est indicatif d'un courant électrique cible, d'une tension cible, ou des deux, générés par ou sur la machine électrique (b154).

19. Le système (b1000) de la revendication 17 ou 18, dans lequel le point de consigne du paramètre de fonctionnement est indicatif d'un paramètre de fonctionnement associé au moteur à cycle fermé (b110), et dans lequel le point de consigne du paramètre de fonctionnement associé au moteur à cycle fermé (b110) est indicatif d'une ou de plusieurs pressions cibles à une position à l'intérieur du corps du piston ou en liaison fluide avec celui-ci (b1116) ou d'une température cible à une position à l'intérieur du corps du piston ou en liaison fluide avec celui-ci (b1116).

20. Le système (b1000) de l'une quelconque des revendications 17-19, dans lequel le point de consigne du paramètre de fonctionnement est indicatif d'un paramètre de fonctionnement associé au moteur à cycle fermé (b110), et dans lequel le point de consigne du paramètre de fonctionnement associé au moteur à cycle fermé (b110) est indicatif d'un paramètre de fonctionnement associé au mouvement de l'ensemble piston (b1120), et dans lequel le paramètre de fonctionnement associé au mouvement de l'ensemble piston (b1120) est une ou plusieurs vitesses cibles de l'ensemble piston (b1120), une amplitude cible de l'ensemble piston (b1120), ou une position cible de l'ensemble piston (b1120) en un point quelconque le long d'une course de l'ensemble piston (b1120).

FIG. 1.1.2

FIG. 1.1.1

Carnot Efficiency vs. Temperature Ratio (Th/Tc)

Typical operating range

Carnot Efficiency (%)

Temperature Ratio, Th/Tc

FIG. 1.1.3

200

FIG. 1.1.4

Table ES-1  Nominal Heat Balances of Prime-Movers as a Percentage of
Fuel Input

| Engine Type | Work | Recoverable Heat | Rejected Heat |
|---|---|---|---|
| Diesel | 36 | 42 | 22 |
| Adiabatic Turbo-compound Diesel | 47 | 36 | 17 |
| Gas Turbine (Simple) | 25 | 45 | 30 |
| Gas Turbine (Regenerative) | 38 | 22 | 40 |
| Stirling (Current) | 34 | 54 | 12 |

FIG. 1.1.5

FIG. 1.2.1

FIG. 1.3.1

FIG. 1.3.2

FIG. 1.4.1

FIG. 1.4.2

FIG.1.4.1

FIG. 1.4.4

FIG. 1.4.5

FIG. 1.4.6

FIG. 1.4.7

A12

C204

A12

A66

A54

A68

A74

A78

A76

A76

A78

A76

A68

A70

A12

A78

A74

A76

A74

A12

A78

A70

A68

A72

A80

A70

212

EP 3 973 168 B1

FIG. 1.4.8

FIG. 1.5.1

FIG. 1.6.1A

C110 — C110

C112

C800 — C800

2B↓ PISTON 1 ↓2B
C090

C700 C700

FIG. 1.6.1B

C1014,C1016

C800
C700

C112
2C↓ ↓2C

FIG. 1.6.1C

C1014,1016
C1000 C1000
C800 C800

FIG. 1.6.1D

FIG. 1.6.2A

FIG. 1.6.2B

EP 3 973 168 B1

FIG. 1.6.3

C1014,C1016

C1006

C1048

C1008

FIG. 1.6.4A

C1016

FIG. 1.6.4B

FIG. 1.6.5

C1016

C1048

C1050

C1028

C1056

C1054

C1026

**FIG. 1.6.6A**

C1054

C1016

C1048

C1056

C1054

C1056

C1054

C1028

C1034

C1026

C1036

**FIG. 1.6.6B**

C1048  C1054  C1058  C1056  C1060  C1058

C1054

C1058

C1056  C1060  C1056  C1054

**FIG. 1.6.6C**

C1058  C1054

C1056  C1060  C1048

**FIG. 1.6.6D**

FIG. 1.6.7A

FIG. 1.6.7B

FIG. 1.6.7C

FIG. 1.6.7D

EP 3 973 168 B1

FIG. 1.6.7F

FIG. 1.6.7E

FIG. 1.6.8

FIG. 1.7.1

EP 3 973 168 B1

FIG. 1.7.2

FIG. 1.7.3

A221 A1050 A102

A103

C092

A222

C100

A42

C100

A1030

A101

A104

A42

A103

EP 3 973 168 B1

FIG. 1.7.4

FIG. 1.7.5

EP 3 973 168 B1

FIG. 1.7.6

FIG. 1.7.7

EP 3 973 168 B1

FIG. 1.7.8

FIG.1.8.1A

FIG.1.8.1B

FIG. 1.8.1C

FIG. 1.8.1D

FIG. 1.8.1E

FIG. 1.8.1F

EP 3 973 168 B1

FIG. 1.8.1G

FIG. 1.8.1H

C401 C214 C900

C100

C902

C912

C208

C102

C208

C908

C994 C990 C992 C412 C992 C990 C994

C988

C110 C110

C926

C914 C112 C112

C904

C910

C926 C090 C926

FIG. 1.8.2

C4000

COUPLING A FIRST MONOLITHIC BODY OR A FIRST MONOLITHIC BODY-SEGMENT TO A SECOND MONOLITHIC BODY OR A SECOND MONOLITHIC BODY SEGMENT, THE FIRST MONOLITHIC BODY OR THE FIRST MONOLITHIC BODY-SEGMANT HAVING BEEN ADDITIVELY MANUFACTURED AND COMPRISING A FIRST HEATER BODY AND/OR A FIRST ENGINE BODY, THE SECOND MONOLITHIC BODY OR THE SECOND MONOLITHIC BODY-SEGMENT HAVING BEEN ADDITIVELY MANUFACTURED AND COMPRISING A SECOND HEATER BODY AND/OR A SECOND ENGINE BODY; WHEREIN THE FIRST MONOLITHIC BODY OR THE FIRST MONOLITHIC BODY-SEGMENT COMPRISES AT LEAST A FIRST PORTION OF A FIRST PISTON ASSEMBLY AND/OR AT LEAST A FIRST PORTION OF A FIRST LOAD DEVICE INSTALLED THEREIN, AND/OR THE SECOND MONOLITHIC BODY OR THE SECOND MONOLITHIC BODY-SEGMENT COMPRISES AT LEAST A SECOND PORTION OF THE FIRST PISTON ASSEMBLY AND/OR AT LEAST A SECOND PORTION OF THE FIRST LOAD DEVICE INSTALLED THEREIN

C4002

C1004

ADDITIVELY MANUFACTURING THE FIRST MONOLITHIC BODY OR THE FIRST MONOLITHIC BODY-SEGMENT, WHEREIN ADDITIVELY MANUFACTURING THE FIRST MONOLITHIC BODY OR THE FIRST MONOLITHIC BODY-SEGMENT COMPRISES ADDITIVELY MANUFACTURING THE FIRST HEATER BODY AND/ OR THE FIRST ENGINE BODY

C4006

INSTALLING AT LEAST THE FIRST PORTION OF THE FIRST PISTON ASSEMBLY AND/OR AT LEAST THE FIRST PORTION OF THE FIRST LOAD DEVICE IN THE FIRSTMONOLITHIC BODY OR THE FIRST MONOLITHIC BODY-SEGMENT

C4008

ADDITIVELY MANUFACTURING THE SECOND MONOLITHIC BODY OR THE SECOND MONOLITHIC BODY-SEGMENT, WHEREIN ADDITIVELY MANUFACTURING THE SECOND MONOLITHIC BODY OR THE SECOND MONOLITHIC BODY-SEGMENT COMPRISES ADDITIVELY MANUFACTURING THE SECOND HEATER BODY AND/OR THE SECOND ENGINE BODY

C4010

INSTALLING AT LEAST THE SECOND PORTION OF THE FIRST PISTON ASSEMBLY AND/OR AT LEAST THE SECOND PORTION OF THE FIRST LOAD DEVICE IN THE SECOND MONOLITHIC BODY OR THE SECOND MONOLITHIC BODY-SEGMENT

C4012

ADDITIVELY MANUFACTURING A FIRST PISTON BODY, THE FIRST PISTON BODY DEFINING AT LEAST A PORTION OF THE FIRST MONOLITHIC BODY OR THE FIRST MONOLITHIC BODY-SEGMENT, OR THE FIRST PISTON BODY DEFINING AT LEAST A PORTION OF THE SECOND MONOLITHIC BODY OR THE SECOND MONOLITHIC BODY-SEGMENT

C4014

ADDITIVELY MANUFACTURING A FIRST MACHINE BODY, THE FIRST MACHINE BODY DEFINING AT LEAST A PORTION OF THE FIRST MONOLITHIC BODY OR THE FIRST MONOLITHIC BODY-SEGMENT, OR THE FIRST MACHINE BODY DEFINING AT LEAST A PORTION OF THE SECOND MONOLITHIC BODY OR THE SECOND MONOLITHIC BODY-SEGMENT

C4016

ADDITIVELY MANUFACTURING A FIRST REGENERATOR BODY, THE FIRST REGENERATOR BODY DEFINING AT LEAST A PORTION OF THE FIRST MONOLITHIC BODY OR THE FIRST MONOLITHIC BODY-SEGMENT, OR THE FIRST REGENERATOR BODY DEFINING AT LEAST A PORTION OF THE SECOND MONOLITHIC BODY OR THE SECOND MONOLITHIC BODY-SEGMENT

C4018

ADDITIVELY MANUFACTURING A FIRST CHILLER BODY, THE FIRST CHILLER BODY DEFINING AT LEAST A PORTION OF THE FIRST MONOLITHIC BODY OR THE FIRST MONOLITHIC BODY-SEGMENT, OR THE FIRST CHILLER BODY DEFINING AT LEAST A PORTION OF THE SECOND MONOLITHIC BODY OR THE SECOND MONOLITHIC BODY-SEGMENT

FIG. 1.8.3

FIG. 2.1.1

FIG. 2.1.2

FIG. 2.1.3

EP 3 973 168 B1

FIG. 2.1.4

FIG. 2.1.5

FIG. 2.1.6

FIG. 2.1.7

FIG. 2.1.8

EP 3 973 168 B1

FIG. 2.1.9

EP 3 973 168 B1

FIG. 2.1.10

EP 3 973 168 B1

FIG. 2.1.11

EP 3 973 168 B1

FIG. 2.1.12

FIG. 2.1.13

FIG. 2.1.14

EP 3 973 168 B1

FIG. 2.1.15

FIG. 2.1.16

FIG. 2.1.17

FIG. 2.1.18

FIG. 2.1.19

FIG. 2.1.20

FIG. 2.1.21

FIG. 2.1.22

EP 3 973 168 B1

**FIG. 2.1.23**

FIG. 2.1.24

b400

b402

b404

Fuel Source b430

Fuel

Reformer b428

Synthesized Gas

b406

Prime Power Generator
*Solid Oxide Fuel Cell*

Electrical Power

b408

Heat

Bottoming-Cycle System
*Closed Cycle Engine*

b412

Electrical Power

Heat

Second Bottoming-Cycle System

b412

Electrical Power

b400

70% + Electrical
Efficiency

Electricity

Natural Gas → Reformer → Reformate → SOFC → Total Gas → Closed Cycle Engine → Low Emissions

Net Water Produced

90% CHP Efficiency

Heat

FIG. 2.1.25

EP 3 973 168 B1

FIG. 2.1.26

FIG. 2.1.27

FIG. 2.2.1

**FIG. 2.2.2**

**FIG. 2.2.3**

EP 3 973 168 B1

EP 3 973 168 B1

FIG. 2.2.4

FIG. 2.2.6a

FIG. 2.2.6b

FIG. 2.2.5

Mass Flow Rate

Time

FIG. 2.2.7

EP 3 973 168 B1

FIG. 2.2.8

FIG. 2.2.9

FIG. 2.2.10

FIG. 2.2.11

FIG. 2.2.12

FIG. 2.2.13

EP 3 973 168 B1

FIG. 2.2.14

b500

Heat Source
b508

$Q_{IN}$

b802

Wrankel Device
b800

$W_{OUT}$

WF

b502

FIG. 2.2.15

FIG. 2.2.16

FIG. 2.2.18

EP 3 973 168 B1

FIG.2.2.19

FIG. 2.2.20

FIG. 2.2.21

FIG. 2.2.22

b400

b402

(a) Moving an inlet valve and an exit valve of the linear constant density heat exchanger to an open position such that a first volume of working fluid flows into a chamber defined by a housing of the linear constant density heat exchanger

b404

(b) moving the inlet valve and the exit valve of the linear constant density heat exchanger to a closed position such that the first volume of working fluid is contained within the chamber at constant density

b406

(c) heating the first volume of working fluid contained within the chamber for a predetermined heating time while the first volume of working fluid is held at constant density within the chamber

b408

(d) moving the inlet valve and the exit valve of the linear constant density heat exchanger to the open position such that the heated first volume of working fluid flows out of the chamber

FIG. 2.2.23

FIG. 2.2.24

FIG. 2.2.25

FIG. 2.2.26

FIG. 2.2.27

FIG. 2.2.28

FIG. 2.2.29

FIG. 2.2.30

FIG. 2.2.31

FIG. 2.2.32

EP 3 973 168 B1

FIG. 2.2.34

FIG. 2.2.35

FIG. 2.2.33

FIG. 2.2.36

FIG. 2.2.37

EP 3 973 168 B1

FIG. 2.2.39

FIG. 2.2.38

EP 3 973 168 B1

FIG. 2.2.40

298

FIG. 2.2.41

FIG. 2.2.42

FIG. 2.2.43

FIG. 2.2.44

FIG. 2.2.45

FIG. 2.2.46

EP 3 973 168 B1

FIG. 2.2.47

FIG. 3.1.1

EP 3 973 168 B1

FIG. 3.1.2

EP 3 973 168 B1

FIG. 3.1.3

FIG. 3.1.4

FIG. 3.1.5

FIG. 3.1.6

EP 3 973 168 B1

FIG. 3.1.7

FIG. 3.1.8

EP 3 973 168 B1

FIG. 3.2.1

FIG. 3.2.2

FIG. **3.2.3**

FIG. 3.2.4

FIG. 3.3.1

FIG. 3.4.1

FIG. 3.4.2

FIG. 3.4.3

FIG. 3.5.1

EP 3 973 168 B1

FIG. 3.6.1

FIG. 3.6.2

EP 3 973 168 B1

FIG. 3.6.3

FIG. 4.1.1

C100

C126
FUEL NOZZLE
C103

C121

C124
HEAT RECUPERATOR

C122

C120    C118

C121

RECIRCULATION EDUCTOR

C116

CONDITIONING CONDUIT

COMBUSTION CHAMBER    C102

C106
HOT-SIDE HEAT EXCHANGER    C104

C110

C114    C112
C108

REGENERATOR    PISTON CHAMBER

FIG. 4.1.2A

FIG. 4.1.2B

FIG. 4.1.3A

FIG. 4.1.3B

FIG. 4.1.3C

FIG. 4.1.4

C150 ↴                                                                                          ┌C152

CIRCULATING COMBUSTION GAS THROUGH A COMBUSTION CHAMBER AND A RECIRCULATION PATHWAY CONFIGURED TO RECIRCULATE
COMBUSTION GAS THROUGH THE COMBUSTION CHAMBER, THE RECIRCULATION PATHWAY COMPRISING A HOT-SIDE HEAT
EXCHANGER AND A RECIRCULATION EDUCTOR, THE HOT-SIDE HEAT EXCHANGER FLUIDLY COMMUNICATING WITH A
PROXIMAL PORTION OF THE COMBUSTION CHAMBER AND THE RECIRCULATION EDUCTOR FLUIDLY COMMUNICATING WITH A
DOWNSTREAM PORTION OF THE HOT-SIDE HEAT EXCHANGER AND A DISTAL PORTION OF THE COMBUSTION CHAMBER

C154                                                                                            ┌C160

TRANSFERRING HEAT FROM THE COMBUSTION GAS IN THE HOT-SIDE HEAT          INJECTING INTO THE RECIRCULATION PATHWAY
EXCHANGER TO A PLURALITY OF HEAT TRANSFER REGIONS, WHEREIN              INTAKE AIR THROUGH AN INTAKE AIR PATHWAY
RESPECTIVE ONES OF THE PLURALITY OF THE HEAT TRANSFER REGIONS           FLUIDLY COMMUNICATING WITH THE RECIRCULATION      Ⓒ
HAVE A HEAT TRANSFER RELATIONSHIP WITH A CORRESPONDING                  PATHWAY, THE INTAKE AIR PATHWAY DEFINED AT
SEMIANNULAR PORTION OF THE HOT-SIDE HEAT EXCHANGER                      LEAST IN PART BY THE RECIRCULATION EDUCTOR

Ⓑ

C156                                                                                            ┌C162

SWIRLING COMBUSTION GAS THROUGH A CONDITIONING CONDUIT                  ENTRAINING AND/OR ACCELERATING COMBUSTION GAS
DEFINING AT LEAST A PORTION OF THE RECIRCULATION PATHWAY,               CIRCULATING THOUGH THE RECIRCULATION            Ⓒ
THE CONDITIONING CONDUIT FLUIDLY COMMUNICATING                          PATHWAY AT LEAST IN PART BY INJECTING THE INTAKE
WITH A DOWNSTREAM PORTION OF THE RECIRCULATION                          AIR INTO THE RECIRCULATION PATHWAY
EDUCTOR AND A DISTAL PORTION OF THE COMBUSTION CHAMBER

Ⓐ

C158                                                                                            ┌C164

COMBUSTING FUEL AND AT LEAST A PORTION OF THE COMBUSTION                DISCHARGING FROM THE RECIRCULATION PATHWAY A
GAS IN THE COMBUSTION CHAMBER, THE FUEL SUPPLIED BY A FUEL              PORTION OF THE COMBUSTION GAS AS EXHAUST GAS,
NOZZLE FLUIDLY COMMUNICATING WITH THE COMBUSTION CHAMBER                THE EXHAUST GAS DISCHARGING THROUGH AN          Ⓒ
                                                                       EXHAUST PATHWAY FLUIDLY COMMUNICATING WITH
Ⓐ                                                                      THE RECIRCULATION PATHWAY, THE EXHAUST GAS
                                                                       PATHWAY DEFINED AT LEAST IN PART BY THE
                                                                       RECIRCULATION EDUCTOR

                                                                                                ┌C166

Ⓓ      PREHEATING INTAKE AIR FLOWING THROUGH AN INTAKE AIR PATHWAY AT LEAST IN PART USING
       EXHAUST GAS FLOWING THROUGH AN EXHAUST PATHWAY, THE EXHAUST PATHWAY HAVING A
       HEAT TRANSFER RELATIONSHIP WITH THE INTAKE AIR PATHWAY

FIG. 4.1.5

EP 3 973 168 B1

FIG. 4.1.6A

EP 3 973 168 B1

FIG. 4.1.6B

FIG. 4.1.7

FIG. 4.1.8A       FIG. 4.1.8B       FIG. 4.1.8C

FIG. 4.1.8D  FIG. 4.1.8E  FIG. 4.1.8F  FIG. 4.1.8G

EP 3 973 168 B1

SECTION A—A

FIG. 4.1.9

FIG. 4.1.10

FIG. 4.2.1A

FIG. 4.2.1B

FIG. 4.2.2A

FIG. 4.2.2B

FIG. 4.2.3A

VELOCITY/
MIXING

A          B          C

PATH OF FLOW STREAM

## FIG. 4.2.3B

V_TANGENTIAL

$$\frac{\partial v_t}{\partial R}$$

RADIUS

## FIG. 4.2.3C

FIG. 4.2.4A

FIG. 4.2.4B

FIG. 4.2.4D

FIG. 4.2.4E

FIG. 4.2.4C

(470

| SUPPLYING AT LEAST A PORTION OF THE FUEL TO THE COMBUSTION CHAMBER THROUGH A FUEL NOZZLE FLUIDLY COMMUNICATING WITH A DISTAL PORTION OF THE COMBUSTION CHAMBER | (478 |

(A) | SWIRLING COMBUSTION GAS THROUGH A CONDITIONING CONDUIT, THE COMBUSTION GAS FLOWING FROM A PROXIMAL PORTION OF THE CONDITIONING CONDUIT TO A DISTAL PORTION OF THE CONDITIONING CONDUIT WHILE SWIRLING | (472

(A) | SWIRLING THE COMBUSTION GAS THROUGH A COMBUSTION CHAMBER, THE CONDITIONING CONDUIT CIRCUMFERENTIALLY SURROUNDING THE COMBUSTION CHAMBER AND THE CONDITIONING CONDUIT PROVIDING FLUID COMMUNICATION WITH THE COMBUSTION CHAMBER AT A DISTAL PORTION OF THE COMBUSTION CHAMBER, THE COMBUSTION GAS FLOWING FROM THE DISTAL PORTION OF THE CONDITIONING CONDUIT TO THE DISTAL PORTION OF THE COMBUSTION CHAMBER AND FROM THE DISTAL PORTION OF THE COMBUSTION CHAMBER TO A PROXIMAL PORTION OF THE COMBUSTION CHAMBER | (474

(A) | COMBUSTING A FUEL IN THE COMBUSTION CHAMBER, THE COMBUSTION GAS COMPRISING AT LEAST A PORTION OF THE FUEL | (476

(480 | CIRCULATING AT LEAST A PORTION OF THE COMBUSTION GAS THROUGH A RECIRCULATION PATHWAY, THE RECIRCULATION PATHWAY PROVIDING FLUID COMMUNICATION FROM A PROXIMAL PORTION OF THE COMBUSTION CHAMBER TO A PROXIMAL PORTION OF THE CONDITIONING CONDUIT

(482 | COMBUSTING AT LEAST A PORTION OF THE COMBUSTION GAS CIRCULATING THROUGH THE RECIRCULATION PATHWAY

FIG. 4.2.5A

C471

C473

**COMBUSTING A FUEL AT A FIRST COMBUSTION ZONE**

C481

COMBUSTING FUEL FROM A COOL-ZONE FUEL INJECTOR AT THE FIRST COMBUSTION ZONE

C489

COMBUSTING FUEL AT THE FIRST COMBUSTION ZONE IN A LEAN COMBUSTION ENVIRONMENT AND/OR A RICH COMBUSTION ENVIRONMENT

C493A

COMBUSTING FUEL AT THE FIRST COMBUSTION ZONE IN A LEAN COMBUSTION ENVIRONMENT

C475

**HEATING A SECOND COMBUSTION ZONE**

C487

VAPORIZING FUEL IN A VAPORIZATION HEAT EXCHANGER

C479

AUTO-IGNITING FUEL AT THE SECOND COMBUSTION ZONE

C483

AUTO-IGNITING FUEL FROM THE COOL-ZONE FUEL INJECTOR FROM A HOT-ZONE FUEL INJECTOR AT THE SECOND COMBUSTION ZONE

C493B

COMBUSTING FUEL AT THE FIRST COMBUSTION ZONE IN A RICH COMBUSTION ENVIRONMENT UPON HAVING AUTO-IGNITED FUEL AT THE SECOND COMBUSTION ZONE

C477

**COMBUSTING A FUEL AT A SECOND COMBUSTION ZONE**

C485

COMBUSTING FUEL FROM THE COOL-ZONE FUEL INJECTOR AND/OR FROM THE HOT-ZONE FUEL INJECTOR AT THE SECOND COMBUSTION ZONE

C491

COMBUSTING FUEL AT THE SECOND COMBUSTION ZONE IN A RICH COMBUSTION ENVIRONMENT

C493C

COMBUSTING FUEL AT THE SECOND COMBUSTION ZONE IN A LEAN COMBUSTION ENVIRONMENT WHILE COMBUSTING FUEL AT THE FIRST COMBUSTION ZONE IN A RICH COMBUSTION ENVIRONMENT

FIG. 4.2.5B

FIG. 4.3.1

FIG. 4.3.2          FIG. 4.3.3          FIG. 4.3.4

EP 3 973 168 B1

FIG. 4.3.5

FIG. 4.3.6

d98

d100

d110

d116

d109    d107    d108

d106

d99

FIG. 4.3.7

FIG. 4.3.8

<u>d98</u>

d100

d140

d105

d125

d110

d117

C

d116

d115

d109

FIG. 4.3.9

FIG. 4.3.10

FIG. 4.3.11

FIG. 4.3.12

d100

d110(b)

d111

d110

d140

d133(a)

d110(a)

PLANE B—B

FIG. 4.3.13

d100

d110

d140

d115(b)

d110(a)

d133(a)

PLANE A—A

FIG. 4.3.14

FIG. 4.3.15

FIG. 4.3.16

FIG. 4.3.17

PLANE C—C

FIG. 4.3.18

FIG. 4.4.1A

FIG. 4.4.1B

FIG. 4.4.2A

FIG. 4.4.2B

FIG. 4.4.3A

FIG. 4.4.3B

B

C650

C652

FLOWING A FIRST HEAT TRANSFER FLUID THROUGH A PLURALITY OF HEATING FLUID PATHWAYS FLUIDLY COMMUNICATING WITH AN INLET PLENUM, RESPECTIVE ONES OF THE PLURALITY OF HEATING FLUID PATHWAYS DEFINING A SPIRAL PATHWAY

C654

TRANSFERRING HEAT FROM THE FIRST HEAT TRANSFER FLUID TO A PLURALITY OF HEAT TRANSFER REGIONS, WHEREIN RESPECTIVE ONES OF THE PLURALITY OF HEAT TRANSFER REGIONS HAVE A HEAT TRANSFER RELATIONSHIP WITH A CORRESPONDING SEMIANNULAR PORTION OF THE PLURALITY OF SPIRAL PATHWAYS

FIG. 4.4.4

FIG. 4.5.1A

FIG. 4.5.1B

FIG. 4.5.1C

FIG. 4.5.2

FIG. 4.5.3

FIG. 4.5.4A

FIG. 4.5.4B

FIG. 4.5.4C

FIG. 4.5.4D

FIG. 4.5.5A

EP 3 973 168 B1

FIG. 4.5.5B

FIG. 4.5.5C

FIG. 4.5.5D

C750

B

C752

FLOWING AN ENGINE-WORKING FLUID ACROSS RESPECTIVE ONES OF A PLURALITY OF HEAT TRANSFER REGIONS, RESPECTIVE ONES OF THE PLURALITY OF HEAT TRANSFER REGIONS COMPRISING A PLURALITY OF WORKING-FLUID PATHWAYS FLUIDLY COMMUNICATING BETWEEN A HEAT INPUT REGION AND A HEAT EXTRACTION REGION, THE ENGINE-WORKING FLUID FLOWING THROUGH THE PLURALITY OF WORKING-FLUID PATHWAYS

C754

TRANSFERRING HEAT FROM A HEATING SOURCE TO THE ENGINE-WORKING FLUID, THE PLURALITY OF WORKING-FLUID PATHWAYS HAVING A HEAT TRANSFER RELATIONSHIP WITH THE HEATING SOURCE

FIG. 4.5.6

FIG. 4.6.1A

FIG. 4.6.1B

EP 3 973 168 B1

C102

C122

C306

C308

C302

C302

FIG. 4.6.1C

FIG. 4.6.2A

FIG. 4.6.2B

EP 3 973 168 B1

FIG. 4.6.2C

EP 3 973 168 B1

FIG. 4.6.3A

FIG. 4.6.3B

FIG. 4.6.4B

FIG. 4.6.4A

FIG. 4.6.4E

FIG. 4.6.4F

FIG. 4.6.4C

FIG. 4.6.4D

C350

( C )

C352

JETTING A MOTIVE FLUID INTO AN ANNULUS THROUGH A MOTIVE PATHWAY DEFINED AT LEAST IN PART BY AN EDUCTOR BODY, THE MOTIVE PATHWAY FLUIDLY COMMUNICATING WITH THE ANNULUS AND ORIENTED OBLIQUE TO THE ANNULUS

C354

ACCELERATING AN ENTRAINING AN EDUCTOR FLUID USING THE MOTIVE FLUID, THE EDUCTOR FLUID FLOWING INTO THE ANNULUS FROM AN EDUCTION PATHWAY DEFINED AT LEAST IN PART BY THE EDUCTOR BODY, THE EDUCTION PATHWAY BEING ADJACENT TO THE MOTIVE PATHWAY AND THE EDUCTION PATHWAY FLUIDLY COMMUNICATING WITH THE ANNULUS AND ORIENTED OBLIQUE TO THE ANNULUS

FIG. 4.6.5

FIG. 4.7.1A

FIG. 4.7.1B

FIG. 4.7.1C

(D)        C550

C552

FLOWING A FIRST HEAT TRANSFER FLUID FROM A FIRST INTAKE ANNULUS DISPOSED ANNULARLY ABOUT AN AXIS THROUGH A PLURALITY OF FIRST PATHWAYS SPIRALING ANNULARLY ABOUT THE AXIS TO A FIRST DISCHARGE ANNULUS DISPOSED ANNULARLY ABOUT THE AXIS, THE PLURALITY OF FIRST PATHWAYS COMPRISING: A PLURALITY OF FIRST PATHWAY-INLETS FLUIDLY COMMUNICATING ANNULARLY ABOUT THE FIRST INTAKE ANNULUS, AND A PLURALITY OF FIRST PATHWAY-OUTLETS FLUIDLY COMMUNICATING ANNULARLY ABOUT THE FIRST DISCHARGE ANNULUS

C554

FLOWING A SECOND HEAT TRANSFER FLUID FROM A SECOND INTAKE ANNULUS DISPOSED ANNULARLY ABOUT THE AXIS THROUGH A PLURALITY OF SECOND PATHWAYS SPIRALING ANNULARLY ABOUT THE AXIS TO A SECOND DISCHARGE ANNULUS DISPOSED ANNULARLY ABOUT THE AXIS, RESPECTIVE ONES OF THE PLURALITY OF SECOND PATHWAYS ALTERNATINGLY ADJACENT TO RESPECTIVE ONES OF THE PLURALITY OF FIRST PATHWAYS, THE PLURALITY OF SECOND PATHWAYS COMPRISING: A PLURALITY OF SECOND PATHWAY-INLETS FLUIDLY COMMUNICATING ANNULARLY ABOUT THE SECOND INTAKE ANNULUS, AND A PLURALITY OF SECOND PATHWAY-OUTLETS FLUIDLY COMMUNICATING ANNULARLY ABOUT THE SECOND DISCHARGE ANNULUS

C556

TRANSFERRING HEAT FROM THE SECOND HEAT TRANSFER FLUID FLOWING THROUGH THE PLURALITY OF SECOND PATHWAYS TO THE FIRST HEAT TRANSFER FLUID FLOWING THROUGH THE PLURALITY OF FIRST PATHWAYS, THE PLURALITY OF FIRST PATHWAYS HAVING A HEAT TRANSFER RELATIONSHIP WITH THE PLURALITY OF SECOND PATHWAYS

FIG. 4.7.2

FIG. 5.1.1

FIG. 5.1.2

FIG. 5.1.3

FIG. 5.1.4

b1700

Initialize Power Generation System

b1702

Determine whether to initialize system based at least in part on data indicative of a load state of the energy storage devices

b1704

Move one or more piston assemblies to preselected starting positions

b1706

Assign motion profile to one or more of the electric machines

b1708

Commence motion of piston assemblies

b1710

Apply heat to hot side of the engine

b1712

Remove heat from the cold side of the engine

FIG. 5.1.5

FIG. 5.1.6

b1120    1116b

b1114    TDC    M    BDC    b1112

b1128    b1130

Preselected Stroke

FIG. 5.1.7

b1114    TDC    M    BDC    b1112

b1120

b116

FIG. 5.1.8

b1114    TDC    M    BDC    b1112

b1120    b1116

b1122    b1124

FIG. 5.1.9

FIG. 5.1.10

FIG. 5.1.11

b1110

b1120          b1116

b1114                              b1112

b1128                              b1130

T

Electric Machine(s)
b1310

FIG. 5.1.12

b1720

Operate Power Generation System

b1722

Set an operating parameter setpoint

b1724

Receive data indicative of one or more operating parameters associated with at least one of the engine and the electric machines operatively coupled with the piston assemblies of the engine

b1726

Determine a control command based at least in part on the received data indicative of the one or more operating parameters

b1728

Provide the control command to a controllable device

FIG. 5.1.13

Control Law

| Power Output | Piston Speed | Fuel Input |
|---|---|---|
| A1 | A2 | A3 |
| B1 | B2 | B3 |
| C1 | C2 | C3 |
| ... | ... | ... |
| N1 | N2 | N3 |

FIG. 5.1.14

FIG. 5.1.15

FIG. 5.1.16A

FIG. 5.1.16B

Applied Load on Electric
Machines by Energy
Storage Devices

Anticipate Load
Change

Load Change

Time

T1

T2

Fuel Input

Ramp Down Fuel Input to
Anticipate Load Change at T2

FIG. 5.1.17

FIG. 5.1.17B

**Control Law**

| Difference | Control Command |
|---|---|
| A | ⟷ D |
| B | E |
| C | F |
| • • • | • • • |
| N | N |

**FIG. 5.1.18**

Operating Parameter Setpoint b1536

Difference b1540

Controller(s) b1510

Control Command b1532

Controllable Device(s) 1534

Control Action b1542

Sensor(s)

Sensed/Calculated Operating Parameter b1538

**FIG. 5.1.19**

FIG. 5.1.20

EP 3 973 168 B1

FIG. 5.1.21

FIG. 5.1.22

b1800

b1802

Operating a closed cycle engine having a piston assembly movable within a piston chamber defined by a piston body of the closed cycle engine

b1804

Receiving data indicative of a load state of an electrical device in communication with an electric machine operatively coupled with the piston assembly

b1806

Determining a load change is anticipated on the electric machine based at least in part on the load state of the electrical device

b1808

Determining a control command indicative of instructions for adjusting an output of at least one of the closed cycle engine and the electric machine prior to the anticipated load change on the electric machine

b1810

Causing a controllable device to adjust the output of at least one of the closed cycle engine and the electric machine prior to the anticipated load change on the electric machine based at least in part on the determined control command

FIG. 5.1.22A

FIG. 5.1.23

FIG. 5.1.24

FIG. 5.1.25

FIG. 5.1.26

FIG. 5.1.27

EP 3 973 168 B1

COMPUTING SYSTEM b2000

COMPUTING DEVICE(S) b2002

PROCESSOR(S) b2004

MEMORY b2006

INSTRUCTIONS b2008

DATA b2010

COMMUNICATIONS INTERFACE b2012

FIG. 5.1.28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005028520 A1
- US 2015280628 A1
- DE 102006056348 A1
- US 5065579 A
- US 7171811 B1